Europäisches Patentamt

European Patent Office

Office européen des brevets

(19)

(11) **EP 1 071 974 B1**

(12) **FASCICULE DE BREVET EUROPEEN**

(45) Date de publication et mention
de la délivrance du brevet:
**28.01.2004 Bulletin 2004/05**

(21) Numéro de dépôt: **99913394.5**

(22) Date de dépôt: **13.04.1999**

(51) Int Cl.[7]: **G02B 21/00**, G03H 1/00

(86) Numéro de dépôt international:
**PCT/FR1999/000854**

(87) Numéro de publication internationale:
**WO 1999/053355 (21.10.1999 Gazette 1999/42)**

(54) **MICROSCOPE GENERANT UNE REPRESENTATION TRIDIMENSIONNELLE D'UN OBJET ET IMAGES GENEREES PAR CE MICROSCOPE**

MIKROSKOP FÜR DIE ERZEUGUNG EINER DREIDIMENSIONALEN DARSTELLUNG VON EINEM OBJEKT UND BILDER, DIE MITTELS DIESES MIKROSKOPS ERZEUGT SIND

MICROSCOPE GENERATING A THREE-DIMENSIONAL REPRESENTATION OF AN OBJECT AND IMAGES GENERATED BY SUCH A MICROSCOPE

(84) Etats contractants désignés:
**DE ES FR GB IT NL**

(30) Priorité: **15.04.1998 FR 9804654**
**06.08.1998 FR 9810136**
**06.01.1999 FR 9900042**
**12.04.1999 FR 9904536**

(43) Date de publication de la demande:
**31.01.2001 Bulletin 2001/05**

(73) Titulaire: **Lauer, Vincent**
**94130 Nogent sur Marne (FR)**

(72) Inventeur: **Lauer, Vincent**
**94130 Nogent sur Marne (FR)**

(56) Documents cités:
WO-A-98/13715            US-A- 5 283 672
US-A- 5 736 958

- WOODFORD P ET AL: "The Synthetic Aperture Microscope, Experimental Results" PROCEEDINGS OF THE SPIE, vol. 2751, 8 avril 1996 (1996-04-08), pages 230-240, XP002109571 cité dans la demande
- WOLF E: "THREE-DIMENSIONAL STRUCTURE DETERMINATION OF SEMI-TRANSPARENT OBJECTS FROM HOLOGRAPHIC DATA" OPTICS COMMUNICATIONS, vol. 1, no. 4, 1 septembre 1969 (1969-09-01), pages 153-156, XP000564817 cité dans la demande
- PATENT ABSTRACTS OF JAPAN vol. 096, no. 004, 30 avril 1996 (1996-04-30) & JP 07 318806 A (SONY CORP), 8 décembre 1995 (1995-12-08)

## Description

### 1.Domaine technique:

La présente invention concerne un microscope générant une représentation en trois dimensions de l'objet observé, fonctionnant sur un principe dérivé de la « formation d'image par inversion du champ diffracté », de la tomographie et des systèmes à ouverture synthétique.

### 2.Technique antérieure:

### 2.1. Références

[Wolf]: *Three-dimensional structure determination of semi-transparent objects from holographic data*, Emil Wolf, Optics communications volume 1 numéro 4 p.153, octobre 1969.
[Dändliker]: *Reconstruction of the three-dimensional refractive index from scattered waves*, R. Dändliker, K.Weiss, Optics communications volume 1 numéro 7 p.323, février 1970.
[Fercher]: *Image formation by inversion of scattered field data: experiments and computational simulation.* A.F.Fercher, H.Bartelt, H.Becker, E.Wiltschko, Applied optics vol.18 no 14 p.2427, juillet 1979
[Kawata]: *Optical microscope tomography. 1. Support constraint* , S.Kawata,O.Nakamura & S.Minami, Journal of the Optical Society of America A, vol.4, No.1, p.292, janvier 1987
[Noda]: *Three-dimensional phase-contrast imaging by a computed-tomography microscope,* Tomoya Noda, Satoshi Kawata & Shigeo Minami, Applied Optics vol.31 no 5 p.670, 10 février 1992
[Devaney]: *The Coherent Optical Tomographic Microscope,* A.J.Devaney and A.Schatzberg, SPIE vol. 1767 p.62, 1992
[Wedberg]: *Experimental simulation of the quantitative imaging properties of optical diffraction tomography*, Torolf A. Wedberg et Jacob J. Stamnes, Journal of the Optical Society of America A vol. 12 no 3 p.493, mars 1995.
[Vishnyakov]:*Interferometric computed-microtomography of 3D phase objects,* Gennady N. Vishnyakov & Gennady G. Levin, SPIE proceedings vol.2984 p.64, 1997
[Ausherman]: *Developments in Radar Imaging,* D.A.Ausherman, A.Kozma, J.L.Walker, H.M.Jones, E.C.Poggio, IEEE transactions on aerospace and electronic systems vol.20 no 4 p.363, juillet 1984.
[Goodman]: *Synthetic Aperture Optics,* Progress in Optics volume VIII, 1970, North Holland Publishing Company.
[Walker]: *Range-Doppler Imaging of Rotating Objects,* Jack L.Walker, IEEE transactions on aerospace and electronic systems vol.16 no 1 p.23, janvier 1980.
[Brown]: *Walker model for Radar Sensing of Rigid Target Fields,* William M.Brown, IEEE transactions on aerospace and electronic systems vol.16 no 1 p.104, janvier 1980.
[Turpin 1]: brevet US 5,384,573
[Turpin 2]: *Theory of the Synthetic Aperture Microscope,* Terry Turpin, Leslie Gesell, Jeffrey Lapides, Craig Price, SPIE proceedings vol.2566 p.230, 1995
[Turpin 3]: *The Synthetic Aperture Microscope, Experimental results, P*. Woodford, T.Turpin, M. Rubin, J.Lapides, C. Price, SPIE proceedings vol.2751 p.230, 1996
[Lauer 1]: brevet WO 98/13715

### 2.2. Description de la technique antérieure.

Un objet tridimensionnel peut être caractérisé optiquement par un certain nombre de paramètres locaux, par exemple son indice et son absorptivité en chaque point. Mathématiquement, ceci peut se traduire par la donnée en chaque point d'un nombre complexe qui est fonction des paramètres locaux au point considéré. Une représentation spatiale tridimensionnelle de l'objet pourra alors être exprimée sous la forme d'un tableau à trois dimensions de nombres complexes.
En effectuant la transformation de Fourier tridimensionnelle de cette représentation spatiale tridimensionnelle on obtient une représentation fréquentielle tridimensionnelle de l'objet.
[Wolf] a montré qu'une représentation tridimensionnelle d'un objet faiblement diffractant peut être obtenue à partir de l'acquisition de l'onde diffractée par cet objet lorsqu'il est éclairé successivement par une série d'ondes planes de direction variable. [Wolf] a également déterminé la résolution maximale pouvant être ainsi obtenue, exprimée en fonction de la longueur d'onde d'éclairage. Cette résolution correspond à une période maximale de $\frac{\lambda}{2}$ pour les composantes sinusoïdales de la représentation de l'objet, soit une période d'échantillonnage au sens de Nyquist de $\frac{\lambda}{4}$, ce qui est une résolution deux fois plus fine que celle des microscopes classiques. [Dändliker] a amélioré le formalisme de [Wolf] et en a donné une interprétation géométrique. A partir de l'onde diffracté par l'objet sous un éclairage donné, on obtient une partie de la représentation fréquentielle tridimensionnelle de l'objet. Cette partie est une sphère dans un espace fréquentiel tridimensionnel. En combinant les sphères ainsi obtenues pour diverses ondes d'éclairage, on peut remplir l'espace des fréquences, obtenant la représentation fréquentielle tridimensionnelle de l'objet. Celle-ci peut alors être inversée pour obtenir une représentation spatiale.

[Fercher] a réalisé un microscope constituant la première application pratique des principes définis par [Wolf] et [Dändliker]. Dans ce microscope, l'onde diffractée par l'objet est captée sur une surface de réception, sur laquelle elle interfère avec une onde de référence n'ayant pas traversé l'objet et dont la phase peut être modifiée. A partir de plusieurs figures d'interférence différant entre elles par la phase de l'onde de référence, [Fercher] obtient. en chaque point de la surface de réception, l'amplitude et la phase de l'onde diffractée par l'objet.

[Fercher] n'utilise pas plusieurs ondes d'éclairage successives mais plusieurs ondes d'éclairages générées simultanément au moyen d'un réseau de diffraction, ce qui limite le nombre de directions d'éclairage possibles, alors même que l'utilisation de plusieurs ondes d'éclairage successives ne présente aucune difficulté technique particulière. La raison de ce choix n'est pas clairement explicitée. Toutefois, il semble que cette technique soit adoptée pour obtenir des ondes d'éclairage ayant toutes la même phase en un point donné de l'image. En effet. l'équation (1) du document [Wolf] suppose que chaque onde d'éclairage ait une phase nulle au point origine des vecteurs position.

La méthode définie par [Wolf], [Dändliker] et [Fercher] est généralement appelée « formation d'image par inversion du champ diffracté ». Une autre approche classique de l'obtention d'images tridimensionnelles est constituée par la tomographie. La tomographie, utilisée par exemple en rayons X, consiste à reconstruire une image à partir d'un ensemble de projections de cette image selon différentes directions. Chaque projection dépend linéairement d'une fonction de densité à trois dimensions caractérisant l'objet, et à partir d'un nombre suffisant de projections on peut reconstituer l'objet, en inversant cette correspondance linéaire.

La tomographie a été adaptée à la microscopie optique par [Kawata]. Dans son microscope tomographique, une onde d'éclairage plane et non cohérente, de direction variable, est utilisée. Cette onde d'éclairage traverse un échantillon puis un objectif de microscope focalisé dans le plan de l'échantillon. Elle est reçue sur une surface de réception placée dans le plan ou l'objectif forme l'image de l'échantillon. Du fait que l'éclairage est non cohérent, les intensités provenant de chaque point de l'objet s'additionnent et l'image en intensité produite sur la surface de réception dépend donc linéairement de la fonction de densité à trois dimensions caractérisant l'absorptivité de l'objet. A partir d'un nombre suffisant d'images on peut reconstituer l'objet, en inversant cette correspondance linéaire. Ce microscope diffère des systèmes usuels de tomographie en ce que la correspondance linéaire entre la fonction de densité de l'objet et une image donnée n'est pas une projection, mais est caractérisée par une fonction de transfert optique tridimensionnelle.

Ce microscope est peu adapté à l'obtention d'images prenant en compte l'indice de l'échantillon. [Noda] a réalisé un microscope modifié permettant de prendre en compte cette phase. L'idée de départ du microscope de [Noda] est d'utiliser le contraste de phase pour obtenir une image dépendant de l'indice de l'échantillon et d'adapter à cette configuration le principe d'inversion de la correspondance linéaire déjà mis en oeuvre par [Kawata]. L'utilisation du microscope de [Noda] est cependant limitée à l'étude d'objets non absorbants et dont les variations d'indice sont extrêmement faibles.

Le texte de [Noda] ne se réfère pas à l'holographie ni à la « formation d'image par inversion du champ diffracté », cependant son fonctionnement peut s'interpréter dans ce cadre. En effet, la technique adoptée par [Noda] revient à utiliser sur la surface de réception une onde de référence constituée par l'onde d'éclairage seule. A partir des images reçues pour un ensemble d'ondes d'éclairage de direction variable, une représentation fréquentielle tridimensionnelle est obtenue. L'onde complexe détectée sur la surface de réception est içi remplacée par une valeur imaginaire pure obtenue en multipliant par $j$ la valeur réelle obtenue en utilisant l'onde de référence unique constituée par l'onde d'éclairage décalée en phase de $\frac{\pi}{2}$. Si l'onde de référence est suffisamment supérieure, en chaque point de la surface de réception, à l'onde diffractée, alors la quantité ainsi obtenue est la partie imaginaire de l'onde complexe réellement reçue sur la surface de réception, la référence de phase étant la phase de l'onde d'éclairage. L'objet générant sur la surface de réception une onde imaginaire pure équivalente à celle détectée par [Nodal est constitué par la superposition de l'objet réel observé et d'un objet virtuel dont la représentation spatiale complexe est obtenue à partir de celle de l'objet réel par symétrie par rapport au plan de l'objet correspondant à la surface de réception, et par inversion du signe de la partie réelle. En utilisant la partie imaginaire ainsi détectée d'une manière analogue à celle dont [Fercher] utilise l'onde complexe détectée, on génère donc en représentation fréquentielle une fonction représentant la superposition de l'objet réel et de l'objet virtuel. Lors de chaque acquisition, la représentation fréquentielle bidimensionnelle obtenue par transformation de Fourier de la valeur détecté sur la surface de réception comporte une partie correspondant à l'objet réel et une partie correspondant à l'objet virtuel, qui ne se recoupent qu'au point correspondant à la fréquence d'éclairage. Il est donc possible de ne sélectionner que la partie correspondant à l'objet réel, de manière à obtenir une représentation de celui-ci. [Noda] utilise en fait la superposition de l'objet réel avec l'objet virtuel qu'il symétrise par rapport au plan de l'objet correspondant à la surface de réception, obtenant ainsi une représentation imaginaire pure représentant la partie imaginaire de la représentation qui serait obtenue par la méthode de [Wolf].

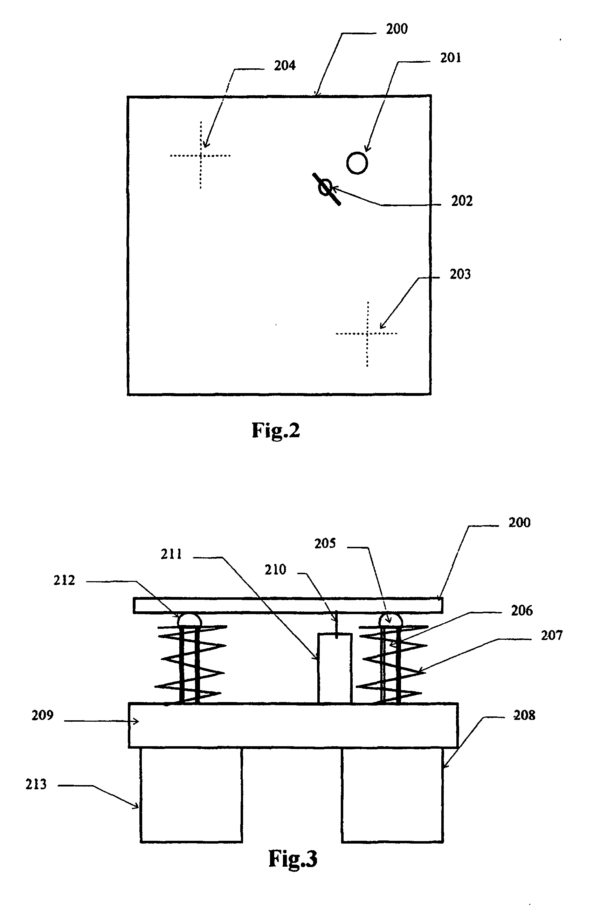

Les explications théoriques données dans le document [Nodal sont très différentes de celles présentées içi et sont parfaitement valables. Le principe consistant à inverser un filtre par multiplication dans le domaine fréquentiel, tel qu'il est appliqué par [Noda], se trouve être équivalent aux explications données ci-dessus, bien qu'étant obtenu par un raisonnement différent. On peut considérer que les Fig. 2 et 3 du document [Noda] illustrent la manière dont la représentation fréquentielle tridimensionnelle de l'objet est générée à partir des représentations fréquentielles bidimensionnelles.

[Devaney] a proposé un microscope tomographique dont le mode de fonctionnement est essentiellement inspiré de la méthode de [Wolf]. Dans le microscope de [Devaney] l'onde de référence est confondue avec l'onde d'éclairage. De ce fait, ce microscope ne comporte pas de moyens pour faire varier la phase de l'onde de référence. Comme dans le cas de [Noda], l'onde détectée correspond donc à celle qui serait formée par la superposition d'un objet réel et d'un objet virtuel. [Devaney] résout le problème en plaçant la surface de réception hors de l'objet, de manière à ce que l'objet réel et l'objet virtuel ne se recouvrent pas. Lorsque la direction de l'onde d'éclairage varie, seul un des deux objets est reconstitué. Deux versions du microscope sont proposées: une première version dans laquelle l'objet est fixe et la direction de l'onde d'éclairage est variable, et une seconde version dans laquelle l'objet est en rotation autour d'un point fixe, l'onde d'éclairage étant alors de direction fixe par rapport au récepteur. La première version du microscope de [Devaney] a été réalisée par [Wedberg].

Une autre approche permettant d'adapter la tomographie à la réalisation d'images de phase est celle de [Vishnyakov]. [Vishnyakov] introduit une onde de référence distincte de l'onde d'éclairage et effectue une détection de l'onde reçue sur une surface de réception selon une méthode analogue à celle utilisée par [Fercher]. Il génère ensuite un profil caractéristique de la différence de phase entre l'onde reçue et l'onde d'éclairage. Cette différence de phase étant considérée comme la projection de l'indice selon la direction de l'onde d'éclairage, il régénère la distribution de l'indice dans l'objet selon la méthode tomographique classiquement utilisée en rayons X. Cette méthode peut être comparée à une méthode du type [Wolf], mais dans laquelle la portion de sphère acquise dans l'espace fréquentiel serait assimilée à une portion de plan, ce qui est largement injustifié dans le cas d'un objectif à forte ouverture comme celui utilisé içi.

La technique du radar à ouverture synthétique est une méthode d'imagerie utilisée dans le domaine des ondes radar et que l'on a envisagé très tôt d'appliquer au domaine de l'optique. [Ausherman] présente un historique de cette technique. L'application de la technique du radar à ouverture synthétique dans le domaine des longueurs d'onde optiques permettrait en principe d'obtenir des images d'un objet observé. Toutefois, pour que la technique soit réalisable, il est nécessaire de disposer-en permanence des valeurs de position, dans un repère lié à l'objet, de chaque élément de l'ensemble émetteur-récepteur. Ces valeurs doivent être connues à une fraction de longueur d'onde près. Ceci est réalisable dans le domaine des fréquences radar, ou les longueurs d'ondes sont macroscopiques et peuvent être par exemple de quelques dizaines de centimètres. Dans le domaine de l'optique, ou les longueurs d'onde sont sub-microméiriques, ceci est difficilement réalisable. Ce problème est la raison essentielle pour laquelle le système est difficilement adaptable à l'optique, comme indiqué dans [Goodman], pages 36 à 39.

[Walker] *et* [Brown] ont formalisé la méthode du radar a ouverture synthétique sous une forme analogue à celle déjà obtenue par [Wolf] pour les systèmes optiques. Ce formalisme a été à l'origine utilisé par [Walker] à une méthode d'imagerie radar dans laquelle l'ensemble émetteur-récepteur est fixe et dans laquelle l'objet est en rotation autour d'un point fixe. Ceci permet de s'affranchir du problème consistant à déterminer à chaque instant la position de l'objet.

[Turpin] a récemment décrit plusieurs microscopes constituant une adaptation dans le domaine de l'optique des principes du radar à ouverture synthétique.

Dans le microscope mis en oeuvre dans [Turpin 3], la configuration physique employée est conforme au principe utilisé dans [Walker] pour s'affranchir du problème consistant à déterminer à chaque instant la position de l'objet, c'est-à-dire que l'émetteur et le récepteur sont fixes et l'objet est en rotation autour d'un axe fixe. Ce microscope est également analogue à la deuxième version du microscope de [Devaney]. Du fait que l'axe de rotation, l'émetteur et le récepteur sont fixes, la position de l'ensemble émetteur-récepteur dans un repère lié à l'objet peut être connue avec la précision nécessaire.

Toutefois une résolution effective suppose non seulement un système mécanique permettant la connaissance du mouvement de l'objet, mais également dans la prise en compte de ce mouvement dans la définition des algorithmes et/ou un réglage approprié du système. En l'abscence de précautions particulières, le point d'origine de l'onde de référence se déplace par rapport à l'objet sur un cercle centré sur l'axe de rotation de l'objet. Si ce déplacement est important, cet effet détruit l'image. Si ce déplacement est faible, la résolution dans le plan de ce cercle est affectée en proportion de l'amplitude du déplacement.

Pour résoudre ce problème en l'abscence d'algorithme de compensation spécifique, le point d'origine de l'onde de référence doit être sur l'axe de rotation de l'objet. Cette condition est à priori difficile à réaliser. [Turpin] ne mentionne pas ce problème et ne précise aucun moyen de réglage approprié.

Ce problème peut cependant être résolu, lorsque on utilise par exemple un échantillon plan, en effectuant un réglage destiné à vérifier les conditions suivantes:

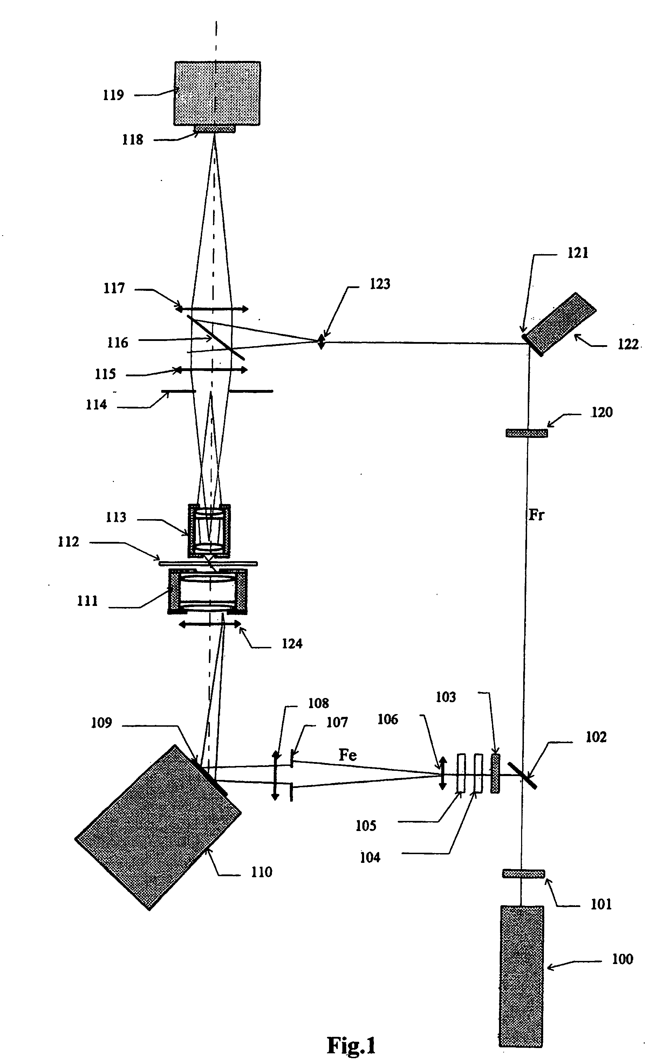

(i)- L'image de l'onde de référence sur le « image CCD array » de la Fig. 1 du document [Turpin 3] doit être ponctuelle.

(ii)- Lorsque l'objet effectue une rotation de 180 degrés, l'image obtenue doit être symétrisée par rapport à un axe passant par le point image de l'onde de référence.

La position du « image CCD array » doit être ajustée pour vérifier (i).

La position de l'ensemble du récepteur doit être ajustée pour vérifier (ü).

Cette solution est toutefois assez imparfaite, dépendant essentiellement d'une appréciation visuelle. Elle ne peut raisonnablement être utilisée que pour des objets très simples.

Le microscope décrit dans [Turpin 3] est un cas particulier du système généralisé décrit dans [Turpin 1] et [Turpin 2]. Le système généralisé spécifie que l'onde d'éclairage et/ou la position du récepteur peuvent varier. Mais les configurations physiques proposées ne permettent pas la résolution du problème consistant à connaître, à une fraction de longueur d'onde près, la position de l'émetteur et du récepteur par rapport à l'objet. En effet, l'onde d'éclairage de direction variable est produite par des dispositif mécaniques qui ne peuvent pas être contrôlés avec une précision sub-micrométrique.

Le microscope décrit dans [Lauer 1] permet la génération de la représentation fréquentielle d'une onde issue de l'objet et la reconstitution de l'objet à partir de plusieurs de ces représentations. La méthode utilisée dans [Lauer 1] n'a pas de rapport direct avec celle décrite par [Wolf]. En effet, dans le cas ou il recombine plusieurs représentations fréquentielles pour obtenir la représentation de l'objet:

- il utilise un éclairage spatialement incohérent et non des ondes d'éclairage planes
- il combine les représentations fréquentielles des ondes reçues par sommation en intensité dans le domaine spatial

L'image obtenue par [Lauer 1] est affectée par un effet de granularité résiduelle, ne permet pas une différentiation de l'indice et de l'absorptivité, et ne permet pas d'atteindre la précision théorique indiquée par [Wolf].

### 3.Exposé de l'invention

### 3.1. Problème à résoudre par l'invention

Les systèmes dits « à formation d'image par inversion du champ diffracté », « tomographiques », ou « à ouverture synthétique » apparaissent comme équivalents les uns aux autres, du moins lorsqu'on se limite au domaine de l'optique cohérente. Deux classes de systèmes peuvent être distinguées selon le mode de génération de l'onde de référence:

- les microscopes de [Noda] et [Devaney] utilisent une onde de référence confondue avec l'onde d'éclairage.
- les microscopes de [Fercher],[Vishnyakov] et [Turpin] utilisent une onde de référence distincte de l'onde d'éclairage.

Les microscopes de la première catégorie présentent des limitations en termes de taille d'image observée, de caractéristiques imposées à l'objet, ou de paramètres pouvant être visualisés. Ces limitations sont dûes au fait qu'en l'absence d'une onde de référence distincte de l'onde d'éclairage, il n'est pas possible d'acquérir dans de bonnes conditions la valeur complexe de l'onde reçue sur la surface de réception. Il est donc nécessaire de recourir à divers artifices pour éliminer les images parasites et les perturbations diverses engendrées par l'imperfection de la méthode d'acquisition.

Les microscopes du second groupe permettent de régler ce problème. En principe, les microscopes du second groupe devraient permettre la représentation de l'indice et de l'absorbtivité de l'objet en trois dimensions avec une précision d'un quart de longueur d'onde, selon la théorie élaborée par [Wolf] et [Dändliker]. De telles performances sont nettement supérieures à celles de l'ensemble des microscopes optiques existants y compris le microscope confocal, et ces microscopes devraient en toutes logique avoir donné lieu à des applications industrielles. Toutefois, aucun de ces microscopes n'a jusqu'à présent permis l'obtention d'images de qualité comparables à celles produites par exemple par le microscope de [Noda], et par conséquence ces microscopes n'ont pas dépassé le stade expérimental. La raison pour laquelle ces microscopes n'ont jamais permis l'obtention d'images de qualité élevée, malgré leurs possibilités théoriques, n'a jamais été clairement identifiée.

Une première approche du problème est contenue de manière implicite dans l'équation (1) du document [Wolf]: toutes les ondes d'éclairage doivent avoir la même phase au point origine de la représentation. Toutefois, dans un système optique, les seules grandeurs accessibles à la mesure sont les différences de phase entre une onde de référence et une onde à analyser. Le fait qu'en un point donné les ondes d'éclairage aient toutes la même phase en un point donné de l'objet, comme implicitement indiqué par l'équation (1) du document [Wolf], ne suffit donc pas à assurer le bon fonctionnement du système: il est également nécessaire que l'onde de référence vérifie des conditions appropriées, de manière à ce que les différences de phase accessibles à la mesure mènent à des résultats corrects.

Une seconde approche du problème est donnée par [Goodman], pages 36 à 39, dans les termes des radars à ouverture numérique: il est nécessaire de connaître avec une précision inférieure à la longueur d'onde la position de l'émetteur et du récepteur, et ceci est irréalisable dans le domaine de l'optique.

Dans le cas ou l'onde d'éclairage a une direction variable, ces deux approches sont similaires: en effet, une indétermination sur la position de l'émetteur se traduit, entre autres effets, par un décalage de phase de l'onde d'éclairage au point origine de la représentation. On se limitera içi à ces systèmes, c'est-à-dire aux microscopes de [Fercher], de [Vishnyakov], et aux versions du microscope de [Turpin] qui comportent une onde d'éclairage de direction variable.

Par exemple, dans les microscopes de [Turpin], l'onde d'éclairage est générée par un dispositif mécanique. Ce dispositif ne permet pas de contrôler la phase de l'onde d'éclairage. Lors de deux prises d'image tridimensionnelle successives, une onde d'éclairage donnée, caractérisée par sa direction, n'aura pas à chaque fois la même différence de phase avec l'onde de référence. Il s'ensuit que l'onde détectée sur la surface de réception n'aura pas non plus la même phase, et donc finalement que deux prises d'image tridimensionnelle successives ne mèneront pas au même résultat, ce même en l'absence de tout bruit. Cet exemple met en relief le problème essentiel qui a jusqu'à présent limité les performances des microscopes du second groupe: la non-maîtrise de la différence de phase entre l'onde d'éclairage et l'onde de référence entraîne une non-reproductibilité des résultats obtenus, et en règle générale des résultats qui ne correspondent pas à ce que l'on attend compte tenu de l'approche théorique de [Wolf].

### 3.2. Résolution du problème selon l'invention

L'ensemble de la représentation fréquentielle tridimensionnelle d'un objet peut être multiplié par un nombre complexe $Ae^{j\alpha}$. On dira alors que la représentation fréquentielle de l'objet est affectée d'un décalage de phase $\alpha$ et d'un coefficient multiplicatif $A$. Si un objet est caractérisé par sa représentation fréquentielle tridimensionnelle, sa représentation spatiale peut être obtenue par transformation de Fourier inverse de cette représentation fréquentielle. Si la représentation fréquentielle de l'objet est affectée d'un décalage de phase $\alpha$ et d'un coefficient multiplicatif $A$, sa représentation spatiale sera affectée du même décalage de phase et du même coefficient multiplicatif, ce qui correspond à une modification de la fonction donnant le nombre complexe associé à un point en fonction des paramètres locaux en ce point.

Il est également possible de multiplier chaque point de la représentation tridimensionnelle par un nombre complexe $Ae^{j\alpha}$ dépendant du point. Deux points différents de la représentation fréquentielle tridimensionnelle peuvent alors être affectés par un décalage de phase et un coefficient multiplicatif différents. En effectuant la transformation de Fourier inverse d'une représentation fréquentielle dans laquelle le décalage de phase et/ou le coefficient multiplicatif dépendent du point considéré, on obtient une représentation modifiée de l'objet, dans laquelle le nombre complexe associé à un point dépend non seulement des paramètres locaux au point considéré, mais également des paramètres locaux en un ensemble d'autres points. Cette représentation modifiée de l'objet est une représentation spatiale filtrée, le filtre ayant une représentation fréquentielle constituée par les nombres $Ae^{j\alpha}$ définis en chaque point. Selon les caractéristiques de ce filtre, on obtiendra des représentations fréquentielles plus ou moins correctes.

Dans les microscopes de [Turpin], l'onde d'éclairage est générée par un dispositif mécanique. A chaque changement de direction de l'onde d'éclairage, il se produit un déphasage aléatoire de cette onde, et donc un décalage de phase aléatoire de la partie correspondante de la représentation fréquentielle tridimensionnelle.

Dans le document de [Vishnyakov], et pour les mêmes raisons, la phase de l'onde d'éclairage varie aléatoirement à chaque changement de la direction d'éclairage. L'équation (2) de la page 67 du document [Vishnyakov] devrait être remplacée par $\Psi(x, y) = \Phi(x, y) + x \sin \alpha + \varphi$ ou $\varphi$ est la phase de l'onde d'éclairage au point origine de la représentation tridimensionnelle obtenue. Lorsque la direction de l'onde d'éclairage varie, la valeur de $\varphi$ varie. La non-détermination de la valeur correcte de $\varphi$ se traduit par l'ajout d'une constante à chaque projection obtenue, cette constante variant aléatoirement entre deux projections. Ceci rend donc non-exacte l'assimilation du profil de phase obtenu à la projection de l'indice. La méthode de [Vishnyakov] équivaut à peu près à la méthode de [Wolf] dans laquelle on aurait assimilé une portion de sphère de l'espace fréquentiel, obtenue à partir d'une onde d'éclairage donnée, à un plan. La non-détermination de $\varphi$ équivaut à un décalage de phase aléatoire de l'ensemble de la partie de la représentation fréquentielle bidimensionnelle générée à partir d'une onde d'éclairage donnée. Toutefois, d'autres sources d'erreurs s'ajoutent içi à cet effet, en particulier le fait qu'une reconstruction tomographique classique est utilisée.

Dans le document de [Fercher], du fait de l'utilisation d'un réseau de diffraction pour générer simultanément les trois ondes d'éclairage, il n'y a pas de déphasage aléatoire des ondes d'éclairage. Toutefois, une analyse détaillée du système montre que pour obtenir le même décalage de phase dans les parties de la représentation fréquentielle obtenues à partir de chaque onde d'éclairage, il est nécessaire que l'image virtuelle, dans l'objet, du point de focalisation de l'onde de référence, soit confondue avec un point en lequel les ondes d'éclairage ont toutes la même phase. Ceci implique un réglage très précis de la position du point d'origine de l'onde de référence. Le document de [Fercher] ne contenant pas de mention d'un tel réglage, il est vraisemblable que celui-ci n'a pas été effectué. En tout état de cause, la solution retenue par [Fercher] limite fortement le nombre d'ondes d'éclairage pouvant être utilisé et l'ouverture sous laquelle l'onde issue de l'objet peut être acquise.

Dans les microscopes existants utilisant des ondes d'éclairage de direction variable et une onde de référence distincte de l'onde d'éclairage, les parties de la représentation fréquentielle qui sont obtenues à partir d'ondes d'éclairage différentes, sont donc affectées par des décalages de phase différents. Par conséquence, l'inversion de la représentation fréquentielle globale obtenue génère une représentation filtrée qui est en règle générale d'assez mauvaise qualité et qui est de plus non reproductible, en raison du caractère aléatoire du décalage de phase.

L'invention consiste à réaliser un microscope dans lequel la direction de l'onde d'éclairage est variable, mais comportant des moyens pour générer une représentation tridimensionnelle de l'objet dans laquelle la distribution du décalage de phase affectant chaque point obtenu, en représentation fréquentielle, est concentrée autour d'une valeur constante. Idéalement, ce décalage de phase devrait être constant, cependant l'existence de perturbations comme le bruit gaussien, une aberration sphérique résiduelle, ou une faible imprécision dans le contrôle de la différence de phase entre onde de référence et onde d'éclairage, crée un certain étalement de la distribution autour de la valeur constante.

Dans les microscopes existants existants utilisant des ondes d'éclairage de direction variable et une onde de référence distincte de l'onde d'éclairage, et dans le cas ou un grand nombre d'ondes d'éclairages distinctes sont utilisées comme dans [Turpin], ce décalage de phase tend à être aléatoire et sa distribution est donc à peu près homogène sur l'intervalle $[0,2\pi]$. Dans le cas ou un nombre limité d'ondes d'éclairage est utilisé, comme dans [Fercher], la distribution du décalage de phase comporte des pics de niveau comparable centrés sur plusieurs valeurs distinctes correspondant aux décalages de phase affectant les sous-représentations obtenues à partir de chaque onde d'éclairage.

Le fait que le décalage de phase affectant chaque point, en représentation fréquentielle, soit à peu près constant, constitue une nouvelle fonctionnalité du microscope qui permet par exemple l'obtention d'une représentation spatiale de meilleure qualité. Toutefois, la génération d'une représentation tridimensionnelle de l'objet observé ne constitue pas nécessairement le but final recherché par l'utilisateur du microscope. Par exemple le microscope peut être utilisé pour la lecture de mémoires optiques tridimensionnelles. Dans ce cas, les données peuvent être codées avant d'être stockées sur la mémoire optique. Le microscope permet ensuite d'obtenir une représentation tridimensionnelle de cette mémoire optique à partir de laquelle les données peuvent être décodées. La représentation tridimensionnelle de l'objet est alors un intermédiaire de calcul permettant finalement l'obtention de données décodées.

### 3.3. Vocabulaire employé et considérations générales

Un objet tridimensionnel peut être caractérisé optiquement par un certain nombre de paramètres locaux. Ces paramètres locaux peuvent par exemple être son indice et son absorptivité en chaque point, ou encore son absorptivité et un de ses indices dans le cas d'un matériau non isotrope. On peut définir en chaque point un nombre complexe qui est fonction de certains de ces paramètres locaux, cette fonction étant en général définie de manière unique dans l'ensemble de la représentation spatiale et ne dépendant donc pas du point considéré. Une représentation spatiale tridimensionnelle de l'objet pourra alors être exprimée sous la forme d'un tableau à trois dimensions de nombres complexes. La dépendance entre le nombre complexe et les paramètres locaux peut être définie de diverses manières. Par exemple, ce nombre complexe peut se réduire à un nombre réel caractérisant l'indice, comme dans le microscope de [Noda]. La définition qui sera utilisée le plus souvent sera toutefois du type donné par [Wolf], mais avec un « indice complexe » représentant à la fois l'indice et l'absorptivité. Par exemple. la partie réelle du nombre complexe peut être proportionnelle à l'absorptivité et sa partie imaginaire à l'indice. On peut aussi utiliser un nombre complexe obtenu par rotation du précédent dans le plan complexe, correspondant à un décalage de phase. Dans tous les cas, la représentation spatiale tridimensionnelle de l'objet est unique à partir du moment ou la correspondance entre le nombre complexe et les paramètres locaux a été définie et ou le point central de la représentation a été défini.

En effectuant la transformation de Fourier tridimensionnelle de cette représentation spatiale tridimensionnelle on obtient une représentation fréquentielle tridimensionnelle de l'objet.

Le décalage de phase affectant un point de la représentation fréquentielle tridimensionnelle de l'objet est défini à partir du moment ou la représentation de l'objet a été définie de manière unique, c'est-à-dire lorsque la fonction complexe des paramètres locaux et le point d'origine, caractérisant la représentation spatiale, ont été définis.

Lorsque ces paramètres ne sont pas précisés, on peut considérer que le décalage de phase est défini par rapport à la représentation spatiale qui coïncide au mieux avec la représentation tridimensionnelle de l'objet qui a été obtenue.

Le terme « représentation tridimensionnelle d'un objet » désignera l'ensemble des données numériques caractérisant la représentation spatiale ou fréquentielle de l'objet, indépendamment de la manière dont ces données sont combinées ou stockées, par exemple dans une mémoire d'ordinateur. Cette représentation pourra par exemple être exprimée:

- dans le domaine spatial, sous la forme d'un nombre complexe dépendant des coordonnées spatiales
- dans le domaine fréquentiel, sous la forme d'un nombre complexe dépendant de la fréquence spatiale
- de toute autre manière à partir du moment ou la « représentation tridimensionnelle de l'objet » permet d'obtenir la représentation spatiale ou fréquentielle de l'objet par un algorithme connu.

Une partie de la représentation fréquentielle tridimensionnelle de l'objet sera appelée sous-représentation fréquentielle de l'objet, et le terme sous-représentation désignera l'ensemble des données correspondantes, indépendamment de la manière dont elles sont combinées ou stockées.

Une onde parvenant sur une surface de réception est entièrement caractérisée par la donnée de son amplitude et de sa phase selon chaque direction de polarisation et en tout point de la surface de réception. On peut également adopter une représentation scalaire de l'onde en se limitant par exemple à une seule direction de polarisation, l'onde étant alors caractérisée par une seule phase et une seule intensité en tout point de la surface de réception. A partir de l'onde mesurée sur une surface de réception, on peut générer une sous-représentation fréquentielle de l'objet observé. Cette sous-représentation est bidimensionnelle en ce qu'elle constitue une portion de sphère dans l'espace des fréquences, comme indiqué par [Dändliker]. Un intermédiaire de calcul pourra être constitué par une représentation fréquentielle de l'onde, définie par la donnée de la phase et de l'intensité de l'onde sur chaque vecteur d'onde, une représentation scalaire ayant été adoptée.

La représentation fréquentielle de l'onde est bidimensionnelle et peut être projetée sur un plan sans perte d'information. Une telle projection donne une image plane que l'on appellera « image plane en fréquence ». Dans un système comme celui de [Turpin] ou celui de [Fercher], une telle image plane en fréquence est obtenue directement sur la surface de réception. Dans d'autres systèmes comme le deuxième mode de réalisation de la présente invention, une telle image plane en fréquence est obtenue par transformation de Fourier bidimensionnelle de la représentation scalaire obtenue directement sur la surface de réception. Une image plane en fréquence modifiée peut également être obtenue à partir de plusieurs images planes en fréquence différant entre elles par la polarisation de l'onde d'éclairage et la direction d'analyse de l'onde reçue sur la surface de réception. L'image plane en fréquence peut constituer un intermédiaire de calcul permettant d'obtenir la représentation fréquentielle de l'onde puis une sous-représentation correspondante de l'objet.

Le terme « représentation fréquentielle bidimensionnelle » désignera soit une représentation fréquentielle bidimensionnelle soit une partie bidimensionnelle d'une représentation fréquentielle tridimensionnelle. En particulier il pourra désigner indifféremment une image plane en fréquence, une représentation fréquentielle d'une onde, ou une sous-représentation bidimensionnelle de l'objet.

Le terme « lentille » désignera, dans l'ensemble du texte, aussi bien des lentilles simples que des lentilles composées ou des achromats, généralement dimensionnés pour limiter les aberration optiques.

Dans la suite du texte, cinq modes de réalisation sont décrits. On s'y référera comme modes de réalisation 1,2,3,4 et 5.

### 3.4. Obtention directe de la représentation fréquentielle tridimensionnelle

Pour chaque direction de l'onde d'éclairage, on obtient une sous-représentation fréquentielle de l'objet en appliquant directement les méthodes définies dans [Fercher] et [Turpin]. Dans les systèmes de [Fercher] et [Turpin], le microscope est construit de telle manière que les différentes sous-représentations obtenues sont affectées par des décalages de phase différents. Selon une version de l'invention le microscope est construit de manière à ce que ces décalages de phase soient constants. Cette version de l'invention implique:

(i)- que le microscope soit construit de manière à ce que la différence de phase entre une onde d'éclairage et l'onde de référence avec laquelle elle interfère soit reproductible. Cette condition implique une construction appropriée du microscope. Elle est vérifiée, en l'abscence de vibrations, dans les modes de réalisation 3,4 et 5. Les modes de réalisation 1 et 2 sont affectés par les mêmes problèmes que le microscope de [Turpin]: la différence de phase entre onde de référence et onde d'éclairage varie aléatoirement du fait de la conception mécanique de l'ensemble. Les modes de réalisation 1 et 2 ne permettent donc pas le respect de cette première condition. Les modes de réalisation 3 à 5 permettent le respect de cette condition du fait d'une conception différente du système de génération des ondes d'éclairage et de référence.

(ii)- que le microscope soit construit de manière à ce que, moyennant un réglage approprié, la différence de phase entre l'onde d'éclairage et l'onde de référence puisse être rendue constante. Le mode de réalisation 3 ne permet pas le respect de cette condition car il n'existe aucun point particulier en lequel toutes les ondes d'éclairage auraient la même phase, ce qui serait nécessaire pour vérifier cette condition car l'onde de référence utilisée est sphérique et constante. Le mode de réalisation 4, assez similaire par ailleurs au mode de réalisation 3, permet le respect de cette condition car, moyennant une commande appropriée du système de déviation du faisceau, on peut générer des ondes d'éclairage dont la phase en un point donné est constante. Le mode de réalisation 5 permet également le respect de cette condition.

(iii)- que la position des éléments optiques soit réglée de manière appropriée pour que la différence de phase entre l'onde d'éclairage et l'onde de référence soit effectivement constante. Ce réglage est décrit en 8.6. pour le mode de réalisation 4 et en 9.20. pour le mode de réalisation 5.

Les conditions (ii) et (iii) impliquent que la différence de phase entre l'onde d'éclairage et l'onde de référence soit constante. On peut définir une onde virtuelle présente dans l'objet et telle que son image, par le dispositif optique modifiant l'onde issue de l'objet entre l'objet et la surface de réception, soit l'onde de référence. La différence de phase entre l'onde d'éclairage et l'onde de référence signifie içi la différence de phase entre l'onde d'éclairage et la composante de cette onde virtuelle sur le vecteur d'onde de l'onde d'éclairage.

### 3.5. Méthode de recalage en phase

Lorsque le microscope n'est pas construit de manière à ce que le décalage de phase affectant chaque sous-représentation fréquentielle soit constant, les différences entre les décalages de phase affectant chaque sous-représentation doivent être déterminées et éventuellement compensées.

### 3.5.1. Méthode générale de recalage en phase

On considère une partie de la représentation tridimensionnelle de l'objet:

-    constituée par un sous-ensemble $A$ de la représentation tridimensionnelle.
-    caractérisée par une fonction $a(f)$ définie sur $A$ et conventionellement nulle hors de $A$, ou $f$ est le vecteur fréquence spatiale et $a(f)$ la valeur de la représentation sur cette fréquence spatiale.
-    affectée par un bruit gaussien, l'écart-type du bruit sur une fréquence donnée $f$ étant $\sigma_a(f)$.

On désignera cette sous-représentation par l'expression « sous-représentation $RA$ ». On dira que $A$ est le support de $RA$.
On considère une seconde partie de la représentation tridimensionnelle de l'objet, constituée par un sous-ensemble $B$ de la représentation tridimensionnelle, caractérisée par une fonction $b(f)$ définie sur $B$, affectée par un bruit gaussien $\sigma_b(f)$, désignée par l'expression « sous-représentation $RB$ »
Ces deux parties de la représentation sont décalées en phase l'une par rapport à l'autre et sont supposées avoir une intersection non vide. A partir de ces deux parties, on va générer une sous-représentation $RC$ définie sur un ensemble $C = A \cup B$ ($C$ est la réunion de $A$ et $B$) et définie par une fonction $c(f)$ affectée par un bruit gaussien $\sigma_c(f)$.
On peut procéder en deux temps:

-    un rapport complexe entre les deux représentations peut par exemple être obtenu par la formule:

$$r = \frac{\displaystyle\sum_{f \in E} \frac{a(f)\overline{b(f)}}{\sigma_a^2(f)+\sigma_b^2(f)}}{\displaystyle\sum_{f \in E} \frac{|b(f)|^2}{\sigma_a^2(f)+\sigma_b^2(f)}}$$

ou les sommes sont sur un ensemble $E$ de vecteurs fréquences inclus dans l'intersection des deux ensembles $A$ et $B$, soit $E \subset (A \cap B)$ , l'ensemble E étant si nécessaire limité à des points pour lesquels le rapport signal sur bruit est suffisamment élevé. La différence de phase entre les deux représentations est l'argument de $r$. La différence de phase ainsi calculée est une bonne approximation de la différence de phase la plus probable connaissant les valeurs des représentations $RA$ et $RB$ sur l'ensemble $E$.

-    la représentation $RB$ peut être « recalée en phase » par rapport à $RA$ en la multipliant par le rapport $r$: $b(f) \leftarrow r.b$

(*f*) ou le signe ← désigne l'affectation.

- la fonction *c* peut être obtenue par exemple par la formule:

$$c(f) = \frac{\dfrac{a(f)}{\sigma_a^2(f)} + \dfrac{b(f)}{\sigma_b^2(f)}}{\dfrac{1}{\sigma_a^2(f)} + \dfrac{1}{\sigma_b^2(f)}}$$

Les valeurs ainsi affectées à la représentation *RC* sont les valeurs les plus probables connaissant les représentations *RA* et *RB* recalées en phase.

- la fonction $\sigma_c(f)$ peut être obtenue par exemple par la formule:

$$\frac{1}{\sigma_c^2(f)} = \frac{1}{\sigma_a^2(f)} + \frac{1}{\sigma_b^2(f)}$$

L'ensemble des deux opérations précédentes constitue le regroupement de *RA* et *RB*

Des explications plus détaillées sur le calcul de ces fonctions sous forme de tableaux sont données au paragraphe 7.17.1. Les formules indiquées ci-dessus pour le recalage de phase effectuent simultanément une normalisation en intensité, qui toutefois n'est pas indispensable.

Cette méthode permet, à partir de deux sous-représentations *RA* et *RB* dont les supports *A* et *B* ont une intersection non vide, d'obtenir une sous-représentation *RC* correspondant à la superposition de *RA* et *RB*.

Si la représentation fréquentielle tridimensionnelle de l'objet doit être reconstituée à partir de nombreuses sous-représentations dont les phases ne sont pas connues, la méthode ci-dessus, appliquée itérativement, permet de grouper toutes ces sous-représentations. Par exemple, on peut partir d'une sous-représentation donnée, la grouper avec une seconde sous-représentation. On peut ensuite partir de la sous-représentation générée par ce groupement, et la grouper avec une sous-représentation supplémentaire. En répétant cette opération de groupement jusqu'à ce que toutes les sous-représentations aient été intégrées dans une représentation globale, on obtient finalement la représentation fréquentielle tridimensionnelle de l'objet. Les seules conditions devant être vérifiées pour que cette méthode aboutisse sont:

- qu'aucune sous-représentation ou groupe de sous-représentations n'ait une intersection vide avec l'ensemble des autres sous-représentations.
- que l'objet n'ait pas une représentation fréquentielle trop singulière, qui serait par exemple nulle sur un ensemble de points séparant en deux sa représentation fréquentielle tridimensionnelle.

Ces conditions sont facilement satisfaites pour la plupart des objets biologiques dès lors qu'un nombre élevé de représentations est acquis.

Par exemple:

- un mode de réalisation peut être dérivé du système de [Fercher] dans lequel on a remplacé les trois ondes d'éclairage simultanées produites par le réseau de diffraction, par une onde d'éclairage unique de direction variable. Dans ce cas, une sous-représentation est constituée par une représentation fréquentielle bidimensionnelle obtenue pour une onde d'éclairage donnée.
- un mode de réalisation peut être dérivé du microscope mis en oeuvre dans [Turpin 3] dans lequel on a autorisé, en plus de la rotation de l'objet, des variations de direction de l'onde d'éclairage. Dans ce cas, une sous-représentation est constituée par l'ensemble des représentations fréquentielles bidimensionnelles obtenues pour une onde d'éclairage donnée lorsque l'objet est déplacé en rotation.
- dans le cas du mode de réalisation 5, paragraphe 9.19., une sous-représentation est constituée par une représentation fréquentielle bidimensionnelle obtenues pour une onde d'éclairage donnée. Un nombre réduit de sous-représentations est d'abord regroupé en une représentation de base ayant une intersection non nulle avec toutes les autres sous-représentation obtenues dans des conditions similaires. L'ensemble des représentation est alors recalé en phase par rapport à la représentation de base, puis une représentation globale est générée.
- dans les modes de réalisation 3,4,5, quatre sous-représentations intermédiaires sont à chaque fois générées, comme expliqué en 7.17.1.1. Ces quatre représentations sont réunies en une seule par application de cette méthode générale.

Selon une version de l'invention, le microscope comporte donc des moyens pour:

- déterminer, pour chaque sous-représentation *RB*, un coefficient caractérisant l'écart de phase entre cette sous-représentation et une autre sous-représentation, partie de sous-représentation ou groupe de sous-représentations *RA*, ce coefficient étant calculé à partir des valeurs de *RA* et *RB* sur un ensemble inclus dans l'intersection des supports de *RA* et de *RB*.
- corriger la phase de *RB* de manière à obtenir pour *RB* la même référence de phase que pour *RA*.

La manière la plus simple de corriger la phase de *RB* est d'effectuer une multiplication par le coefficient *r* comme indiqué plus haut. Toutefois, cette correction peut également être effectuée par des moyens physiques, auquel cas la phase n'a pas à être corrigée pendant la phase de calcul. Un exemple d'une telle réalisation est décrit en 7.18.7.

L'écart de phase affectant chaque sous-représentation peut être recalculé à chaque acquisition. Ceci est nécessaire dans les modes de réalisation 1 et 2, pour lesquels ces écarts ne sont pas reproductibles. Dans le cas des modes de réalisation 3,4 et 5, cet écart de phase est reproductible et peut donc être mesuré au cours d'une phase préparatoire à l'acquisition. Un exemple d'une telle réalisation est décrit en 7.18.1.

Selon une version de l'invention, le microscope comporte des moyens pour:

- déterminer, pour une sous-représentation *RB* donnée, la représentation fréquentielle *RC* résultant du regroupement de *RB* avec une autre sous-représentations *RA*.
- déterminer un coefficient caractéristique du bruit affectant *RC* défini sur l'ensemble du support de *RC*, obtenu à partir d'un coefficient caractéristique du bruit affectant *RA* et défini sur le support de *RA*, et à partir d'un coefficient caractéristique du bruit affectant *RB* et défini sur le support de *RB*.

Les méthodes utilisées peuvent différer du formalisme exposé plus haut. Par exemple dans le mode de réalisation 1 la quantité $\dfrac{1}{\sigma^2(f)}$ est assimilée aux nombre *N* de représentations fréquentielles atteignant un point donné.

Les calculs peuvent être groupés: après recalage en phase de chaque sous-représentation, celles-ci peuvent être réunies en une représentation globale, sans calculer chaque sous-représentation intermédiaire. C'est ce qui est fait dans l'ensemble des modes de réalisation pour grouper des sous-représentations bidimensionnelles en sous-représentations tridimensionnelles complètes ou partielles.

Il est possible de calculer des représentations de l'objet sans passer formellement par sa représentation fréquentielle tridimensionnelle. Par exemple en 7.17.3.3. une représentation confocale de l'objet est générée en utilisant pour la représentation fréquentielle finale une valeur en chaque point qui est la somme des valeurs obtenues pour chaque représentation atteignant ce point. La représentation ainsi obtenue n'est pas à proprement parler une représentation fréquentielle de l'objet mais est tout de même porteuse d'informations sur cet objet. Il est également possible de générer des représentations réelles de l'indice ou de l'absorptivité. Ces représentations peuvent être générées de manière simple en passant par l'intermédiaire de la représentation fréquentielle de l'objet, toutefois il est également possible de modifier les algorithmes pour ne pas utiliser formellement cet intermédiaire.

### 3.5.2. Recalage en phase absolu

La méthode explicitée en 3.5.1. permet d'obtenir une représentation tridimensionnelle de l'objet. Toutefois, la phase globale de cette représentation tridimensionnelle reste arbitraire.

Dans la représentation tridimensionnelle spatiale de l'objet, obtenue à partir de la représentation fréquentielle tridimensionnelle par transformation de Fourier inverse, le nombre complexe associé à chaque point caractérise l'absorptivité et l'indice de l'objet au point considéré. Si la phase globale de la représentation tridimensionnelle est choisie de manière appropriée, la partie réelle dudit nombre complexe caractérise l'absorptivité locale de l'objet et la partie imaginaire dudit nombre complexe caractérise l'indice local de l'objet. La phase globale est choisie de manière appropriée lorsque le point origine de la représentation fréquentielle tridimensionnelle a une valeur réelle.

Selon une version de l'invention, et dans les cas ou le point origine de la représentation fréquentielle tridimensionnelle fait partie des points qui ont été acquis, le microscope comporte des moyens pour diviser, par sa valeur au point origine, la représentation fréquentielle tridimensionnelle obtenue par la méthode détaillée en 3.5.1. Ceci permet d'obtenir une représentation spatiale dans laquelle la partie réelle et la partie imaginaire des nombres complexes représentent respectivement l'absorptivité locale et l'indice local. Ceci permet également de normaliser l'ensemble de la représentation.

Lorsque le point origine de la représentation fréquentielle tridimensionnelle ne fait pas partie des points qui ont été acquis, cette opération est impossible. L'opérateur qui visualise une image visualise alors par exemple la partie réelle du nombre complexe, et doit choisir intuitivement la phase globale de la représentation de manière à obtenir l'image la plus contrastée possible.

### 3.5.3. Recalage en phase par rapport à l'onde d'éclairage

Les algorithmes généraux de recalage en phase définis plus haut présentent le défaut d'être d'une mise en oeuvre relativement complexe. Une version simplifiée peut être obtenue lorsque le système d'acquisition permet l'acquisition de la partie non diffractée de l'onde d'éclairage. Celle-ci correspond au point origine de la représentation fréquentielle tridimensionnelle de l'objet. Ce point est commun à toutes les représentations fréquentielles bidimensionnelles.

Le recalage en phase décrit en 3.5.1. peut alors s'effectuer par rapport à la partie de sous-représentation constituée par ce point unique. Ce recalage peut être groupé avec le recalage absolu décrit en 3.5.2. L'ensemble des deux recalages revient alors à diviser l'ensemble de la sous-représentation de l'objet obtenue à partir d'une onde d'éclairage donnée, par sa valeur au point origine. Lorsqu'une image plane en fréquence est générée comme intermédiaire de calcul, ceci revient à diviser l'ensemble de l'image plane en fréquence par sa valeur au point correspondant à la partie non diffractée de l'onde d'éclairage. Selon une version de l'invention, le recalage en phase des représentations fréquentielles bidimensionnelles est donc effectué en divisant chaque sous-représentation de l'objet par sa valeur au point origine de la représentation fréquentielle tridimensionnelle de l'objet. Cette méthode est utilisée par exemple dans les modes de réalisation 1,2,3 et 4.

### 3.5.4. Recalage en phase par rapport à des valeurs de phase préenregistrées

Une représentation fréquentielle tridimensionnelle de l'objet est obtenue à partir d'une série de représentations fréquentielles bidimensionnelles correspondant chacune à un faisceau d'éclairage différent.

Chacune de ces représentations fréquentielles bidimensionnelles peut être recalée en phase par rapport à la sous-représentation constituée par le point origine seul, comme indiqué en 3.5.4. Toutefois, l'intensité élevée du point correspondant sur chaque représentation fréquentielle bidimensionnelle rend difficile l'acquisition simultanée du reste de la représentation. Selon une version de l'invention, l'acquisition des images planes en fréquence est effectuée en deux temps:

- une phase préliminaire, aucours de laquelle sont enregistrées les valeurs obtenues au point image de l'onde d'éclairage, pour chaque onde d'éclairage.
- une phase d'acquisition proprement dite, aucours de laquelle le faisceau direct peut être occulté et aucours de laquelle les valeurs des images planes en fréquence sont enregistrées.

Une représentation fréquentielle bidimensionnelle peut alors être obtenue pour chaque onde d'éclairage à partir de ces deux enregistrements, la valeur au point image de l'onde d'éclairage étant obtenue à partir du premier enregistrement et la valeur en tout autre point étant obtenue à partir du deuxième enregistrement. La méthode décrite en 3.5.4. peut alors être appliquée à chaque représentation fréquentielle bidimensionnelle obtenue.

Lorsque une série de représentations fréquentielles bidimensionnelles est réalisée, par exemple pour 'filmer' le mouvement de cellules, la phase préliminaire ne doit pas être répétée. Il suffit de l'effectuer une fois avant le début des acquisitions.

Pour que cette méthode soit fonctionnelle, la différence de phase entre le faisceau d'éclairage et le faisceau de référence, au niveau de la surface de réception, doit être reproductible. Les systèmes de génération du faisceau d'éclairage utilisés dans les modes de réalisation 3,4 et 5 vérifient cette condition. Cette méthode de recalage en phase est décrite par exemple en 7.18.1. et en 9.18.2.

### 3.6. Compensation des vibrations

La méthode décrite en 3.5.4. suppose la reproductibilité des faisceaux d'éclairage. La méthode décrite en 3.5.3., dans le cas ou plusieurs objectifs sont utilisés, suppose un décalage de phase constant entre les ondes reçues sur chacun de ces objectifs. Toutefois, dans les modes de réalisation 3,4 et 5, les vibrations peuvent rendre ces méthodes inopérantes ou peu robustes. Pour que les résultats soient fiables, il est nécessaire de compenser ces vibrations.

A cette fin, le système peut acquérir périodiquement une image de référence. L'image de référence consiste par exemple en une image obtenue sur la surface de réception pour une onde d'éclairage fixe, qui n'est pas modifiée quand l'onde d'éclairage servant à obtenir les images planes en fréquence 'utiles' varie. A chaque acquisition correspond alors une image de référence acquise à un instant proche. Une image de référence acquise à un instant initial est choisie comme référence absolue. On entend par image 'utile' une image obtenue sur la surface de réception et à partir de laquelle on calculera une représentation fréquentielle bidimensionnelle utilisée pour générer la représentation de l'objet.

Le vecteur *v* parcourant l'ensemble du support d'une image, on note *m*(*v*) une image 'utile'obtenue sur cette surface de réception et *h*(*v*) l'image de référence correspondante. On note $h_o$(*v*) l'image de référence choisie comme référence absolue, obtenue sur la même surface de réception. *v* représente la projection plane de la fréquence et est donc un vecteur à deux dimensions variant sur l'ensemble de la surface de réception. On note σ(*v*) l'écart-type du bruit gaussien affectant la fonction *h*(*v*) en chaque point.
La variation de phase d'origine vibratoire peut par exemple être caractérisée par le coefficient

$$ r = \frac{\sum_f \frac{h_o(v)\overline{h(v)}}{\sigma^2(v)}}{\sum_f \frac{|h(v)|^2}{\sigma^2(v)}} $$

qui représente l'écart de phase le plus probable entre les images de référence *h*(*v*) et $h_o$(*v*).

L'image *m*(*v*) peut alors être recalée en phase comme suit:

*m*(*v*) ← *r*.*m*(*v*) ou le signe ← désigne l'affectation.

Lorsque ce recalage préliminaire a été effectué les images ainsi recalées en phase peuvent être utilisées dans les algorithmes définis en 3.5.3. et 3.5.4.

Si le système est totalement exempt de vibrations ce recalage préliminaire n'est pas nécessaire.

Si les vibrations sont de basse fréquence, l'image de référence peut n'être acquise qu'à une fréquence peu élevée, supérieure toutefois à la fréquence des vibrations du système.

Si les vibrations sont fortes, il est possible d'acquérir une image de référence à chaque image utile.

En présence de vibrations,

- ce recalage préliminaire est indispensable à l'application de l'algorithme défini en 3.5.4.
- ce recalage préliminaire n'est pas indispensable à l'application de l'algorithme défini en 3.5.3. dans le cas ou un seul objectif est utilisé. Cependant, dans le cas ou plusieurs objectifs sont utilisés, il permet de fixer la différence de phase entre les images planes en fréquence générées à partir de chaque objectif. Dans ce cas, il est donc également indispensable.

Cette technique est utilisée dans les modes de réalisation 3 et 4 et décrite en 7.17. Elle est également utilisée dans le mode de réalisation 5 lorsque le recalage en phase est effectué conformément au paragraphe 9.18.

Une version de l'invention consiste donc à acquérir périodiquement des images de référence correspondant à une direction d'éclairage fixe, et à utiliser ces images pour compenser les écarts de phase d'origine vibratoire affectant les images planes en fréquence.

## 3.7. Caractérisation du vecteur d'onde de l'onde d'éclairage

Il est nécessaire de contrôler la direction de l'onde d'éclairage, c'est-à-dire son vecteur d'onde $f_e$, par exemple avec des moyens mécaniques comme par exemple dans [Turpin]. Néanmoins, ces moyens mécaniques doivent être d'une grande précision et sont d'une mise en oeuvre coûteuse.

Dans les conditions définies en 3.5.3., c'est-à-dire si le système d'acquisition permet l'acquisition de la partie non diffractée de l'onde d'éclairage, la partie non diffractée de l'onde d'éclairage correspond à un maximum du module sur la représentation fréquentielle de l'onde issue de l'objet. Selon une version de l'invention, le microscope comporte des moyens pour déterminer les coordonnées de ce maximum et pour calculer, à partir de ces coordonnées, le vecteur d'onde $f_e$ de l'onde d'éclairage. Cette méthode est utilisée par exemple dans les modes de réalisation 1 et 2.

Toutefois, la présence de l'objet peut fausser légèrement la valeur du vecteur d'onde ainsi obtenu. Selon une version de l'invention, les vecteurs d'onde $f_e$ de chaque onde d'éclairage sont obtenus dans une phase préliminaire ou l'objet est supprimé ou remplacé par une lame transparente. Les vecteurs d'onde ainsi obtenus ne sont donc pas faussés par la présence de l'objet. Cette méthode suppose que les vecteurs d'onde soient reproductibles d'une acquisition à l'autre. Par contre, elle évite de devoir calculer ces vecteurs d'onde en fonction de paramètres mécaniques. Cette méthode est utilisée dans les modes de réalisation 3,4 et 5.

### 3.8. Caractéristiques du récepteur

### 3.8.1. utilisation d'un objectif de microscope

Selon une version de l'invention, le récepteur comporte un objectif de microscope de forte ouverture qui transforme les rayons issus de l'objet sous une forte ouverture en rayons paraxiaux pouvant être dirigés vers une surface de réception. Cette configuration permet des performances meilleures que les configurations définies dans [Fercher] (abscence d'objectif) ou [Turpin] (objectif de faible ouverture). Alors que [Vishnyakov] utilise une telle configuration sans pouvoir en tirer parti, du fait de l'utilisation de méthodes tomographiques mal adaptées, les algorithmes définis dans la présente invention permettent de tirer le meilleur partie de cette configuration.

### 3.8.2. Utilisation d'une surface de réception dans un plan de fréquence

Il est avantageux d'acquérir directement l'image dans le domaine fréquentiel, comme dans [Turpin 3]. Ceci peut être fait par exemple à l'aide du récepteur décrit dans [Lauer 1] qui permet d'améliorer les performances du récepteur de [Turpin 3].

### 3.8.3. Utilisation d'une surface de réception dans un plan d'espace

En dehors de l'objectif de microscope lui-même, le système de réception défini en 3.8.2. présente une partie paraxiale permettant de modifier le signal optique capté par l'objectif, pour obtenir une représentation fréquentielle. Le signal issu de l'objectif passe d'abord par le plan ou l'objectif forme normalement l'image de l'échantillon observé. Ce plan sera appelé plan d'espace. Il est ensuite transformé par un système paraxial de sorte que dans le plan ou est placée la surface de réception, une onde plane issue de l'objet ait une image ponctuelle. Ce plan, ou est placée la surface de réception, sera appelé plan de fréquence. La partie paraxiale du système optique utilisé peut comporter des plans d'espace ou de fréquence intermédiaires. La surface de réception peut être placée dans un plan d'espace, dans un plan de fréquence, ou dans un plan intermédiaire. Toutefois, pour simplifier les calculs, elle sera toujours placée soit dans un plan d'espace, soit dans un plan de fréquence. Pour que l'image reçue soit correcte, les conditions suivantes doivent en outre être respectées:

- si la surface de réception est dans un plan de fréquence, l'onde de référence doit être centrée virtuellement en un point central de l'objet observé.
- si la surface de réception est dans un plan d'espace, l'onde de référence doit être l'image d'une onde virtuelle qui est plane à la traversée de l'objet observé.

Dans ces conditions, le signal détecté sur une surface réception placée dans un plan de fréquence est la transformée de Fourier optique du signal qui serait détecté dans un plan d'espace. Une version de l'invention constituant une alternative au récepteur défini en 3.8.2. est donc d'utiliser une surface de réception positionnée dans un plan d'espace et une onde de référence qui est l'image d'une onde virtuelle plane à la traversée de l'objet observé. Une transformée de Fourier numérique remplace alors la transformée de Fourier optique.

Les modes de réalisation numéro 1,3,4 utilisent une réception dans un plan de fréquence et les modes de réalisation numéro 2 et 5 utilisent une réception dans un plan d'espace. Une image plane en fréquence peut donc être obtenue soit directement sur une surface de réception placée dans un plan de fréquence, soit par transformation de Fourier d'une image reçue sur une surface de réception placée dans un plan d'espace.

### 3.9. Atténuation de faisceau

Dans le cas ou le capteur est placé dans un plan d'espace, l'onde d'éclairage directe a comme représentation sur le capteur une valeur de module constant qui se superpose à l'onde diffractée par l'objet. Une onde diffractée trop faible par rapport à ce niveau de base constant ne peut pas être détectée correctement. Par contre, ce niveau de base est peu élevé car l'intensité du faisceau de référence est répartie sur tout le capteur, ce qui permet en général l'obtention de bonnes images. Dans le cas ou le capteur est placé dans un plan de fréquence, l'onde d'éclairage se concentre en un point et comme précédemment, une onde diffractée trop faible par rapport à ce niveau de base constant ne peut pas être détectée correctement. L'onde étant concentrée en un point, ce niveau de base est élevé et cette limitation est gênante.

Selon une version avantageuse de l'invention, un dispositif d'atténuation contrôlée du faisceau, ayant un ou plusieurs niveaux d'atténuation, est introduit pour résoudre ce problème. Le dispositif d'atténuation permet d'obtenir successivement plusieurs enregistrements différant par l'intensité de l'onde d'éclairage. Une valeur moins bruitée de l'onde diffractée est alors obtenue en combinant ces enregistrements. La valeur définitive de l'onde diffractée est par exemple calculée en chaque point à partir de l'enregistrement pour lequel l'intensité de l'onde reçue au point considéré est la plus élevée, mais pour lequel le capteur reste non-saturé au point considéré et en ses voisins immédiats pour l'ensemble des figures d'interférences permettant d'obtenir ledit enregistrement.

Compte tenu de l'utilisation d'un dispositif d'atténuation du faisceau, la version de l'invention dans laquelle une onde plane a une image ponctuelle permet la détection d'ondes diffractées plus faibles. En effet celles-ci ne sont superposées sur le capteur à aucune autre onde et des niveaux très faibles peuvent être détectés lorsque l'intensité du faisceau d'éclairage est élevée.

Un tel dispositif est utilisé dans les modes de réalisation 1,3 et 4.

## 3.10. Système de génération du faisceau d'éclairage

Quel que soit le mode de réalisation, il est nécessaire de concevoir une méthode de génération des faisceaux d'éclairage. Les méthodes proposées par [Turpin] présentent le défaut de nécessiter des déplacements mécaniques importants et donc de ralentir fortement le système.

Un système optique, par exemple celui décrit en 8.1.1., peut transformer un faisceau parallèle d'extension spatiale donnée et de direction variable en un faisceau parallèle dont l'extension spatiale a été diminuée et dont les variations de direction ont été amplifiées. D'une manière générale, des variations de direction faibles appliquées à un faisceau de forte étendue spatiale peuvent être amplifiées par un système optique moyennant une diminution de l'étendue spatiale du faisceau. L'étendue spatiale du faisceau d'éclairage nécessaire pour un microscope étant faible, ce principe peut servir à amplifier optiquement des mouvements mécaniques faibles.

Un faisceau de direction variable peut être transformé par une lentille en un faisceau de position variable dans le plan focal image de cette lentille. Une variation de direction du faisceau dans une partie de son trajet optique équivaut donc à une variation de position dans une autre partie de son trajet optique et vice-versa. Dans des plans intermédiaires, la variation est une variation conjointe de position et de direction. Il n'y a donc pas lieu de différencier un système générant des variations de position de l'onde d'éclairage d'un système générant des variations de direction, ces systèmes étant équivalents.

Selon une version de l'invention, le système de génération des faisceaux d'éclairage comprend:

- un déviateur de faisceau générant des variations d'un faisceau paraxial.
- un élément optique de forte ouverture ( par exemple un objectif de microscope ou un condenseur) transformant lesdites variations du faisceau paraxial incident en variations de direction importantes du faisceau sortant.

Il peut également comprendre un système de lentilles dimensionné de manière à ce que le faisceau soit parallèle en sortie dudit élément optique de forte ouverture.

Le déviateur de faisceau peut être par exemple un miroir monté sur un positionneur permettant d'en commander l'orientation. Cette solution est mise en oeuvre dans les modes de réalisation 1 et 2. Cependant, cette solution présente deux défauts:

- le mouvement du miroir engendre des vibrations qui perturbent le système. Après chaque mouvement du miroir il est nécessaire d'attendre l'absorption des vibrations avant de procéder à l'acquisition.
- la différence de phase entre le faisceau de référence et le faisceau d'éclairage n'est pas reproductible, ce qui interdit d'utiliser certains algorithmes comme ceux définis en 3.5.4.

Chacun des déviateurs de faisceau décrits en 3.10.1. , 3.10.2 et 3.10.3. permet de résoudre ces deux problèmes.

## 3.10.1. Déviateur de faisceau basé sur une série de déviateurs binaires

Un système pouvant renvoyer le faisceau dans deux directions peut être construit à l'aide d'un prisme biréfringent qui transmet le faisceau ordinaire et le faisceau extraordinaire dans deux directions différentes. Le faisceau laser utilisé doit alors être polarisé. Un rotateur de polarisation placé en avant du prisme permet d'orienter sa polarisation dans le sens ordinaire ou le sens extraordinaire, ce qui implique un angle de déviation différent par le prisme. Cependant, les rotateurs de polarisation ferroélectriques disponibles, qui ont l'avantage d'être rapides, ne permettent pas une rotation de 90 degrés mais une rotation d'environ 80 degrés. Ceci empêche d'avoir à la fois un faisceau polarisé exactement dans le sens ordinaire, pour une des positions du rotateur de polarisation, et un faisceau polarisé exactement dans le sens extraordinaire pour l'autre position. Il se crée donc, dans une des positions, un faisceau parasite dévié dans une direction non voulue. Afin de supprimer ce faisceau parasite, il est nécessaire d'utiliser en sortie du prisme biréfringent un polariseur sélectionnant uniquement le rayon voulu. Afin que ce polariseur ne supprime pas le rayon dans l'autre position du rotateur, il est nécessaire d'introduire entre ce polariseur et le prisme un second rotateur, utilisé pour ramener le vecteur champ électrique du faisceau dans le sens passant du polariseur, lorsque il n'y est pas directement en sortie du prisme.

Un système pouvant renvoyer un faisceau dans des directions nombreuses peut être constitué en associant en série plusieurs de ces systèmes élémentaires. En en associant deux, qui produisent une déviation de même amplitude mais dans deux directions orthogonales, on forme un doublet. En associant en série $N$ doublets, chaque doublet étant caractérisé par des prismes biréfringents de caractéristiques telles que l'angle de déviation du doublet numéro $i$ soit proportionnel à $2^i$, on obtient $2^N$ valeurs de déviation possibles dans chaque direction. Par exemple avec $N$=8 on a un total de 256 x 256 directions de déviation du faisceau.

Selon une version de l'invention, le système de déviation du faisceau est donc constitué par l'association en série de déviateurs élémentaires, chacun de ces déviateurs élémentaires comportant un prisme biréfringent déviant différemment le rayon ordinaire et le rayon extraordinaire, précédé d'un rotateur de polarisation contrôlé électroniquement et permettant d'orienter le vecteur champ électrique du faisceau selon l'axe ordinaire ou l'axe extraordinaire dudit prisme, et suivi d'un second rotateur et d'un polariseur permettant d'éliminer les faisceaux parasites.

Un tel dispositif est utilisé dans le mode de réalisation 3.

### 3.10.2. Déviateur de faisceau basé sur des modulateurs spatiaux

Un modulateur spatial est une matrice bidimensionnelle de pixels permettant de moduler la phase ou l'intensité d'une onde dans un plan. La plupart des modulateurs spatiaux sont à base de cristaux liquides. Les écrans LCD courants constituent un exemple de modulateur spatial d'intensité.

Un plan d'espace, sur la trajectoire du faisceau d'éclairage, sera défini comme un plan dans lequel ce faisceau est parallèle et est centré sur l'axe optique. Un plan de fréquence sera défini comme un plan dans lequel ce faisceau a une image ponctuelle.

Un faisceau parallèle parvenant dans un plan d'espace a dans ce plan une représentation complexe de la forme

$$\exp\left\{j2\pi\left(f_x x + f_y y\right)\right\}$$

ou $(x,y)$ sont les coordonnées d'un point du plan et ou

$$\left(f_x, f_y\right)$$

sont les coordonnées de la projection du vecteur d'onde dans ce plan. Si un dispositif de modulation de phase est placé dans ce plan et si un décalage de phase de la forme

$$\theta = 2\pi\left(g_x x + g_y y + c\right)$$

est appliqué à l'aide de ce dispositif, l'onde a, après traversée dudit dispositif, une représentation complexe

$$\exp\left\{j2\pi\left(\left(f_x + g_x\right)x + \left(f_y + g_y\right)y + c\right)\right\}.$$

. Le dispositif de de modulation spatiale a donc modifié la direction de l'onde incidente. Les vecteurs d'onde que peut générer un tel dispositif de modulation spatiale sont compris dans un cône dont l'ouverture dépend des valeurs maximales de $g_x$ et $g_y$ permises par le modulateur. Ce cône sera appelé 'cône de déviation'.

Si un dispositif de modulation d'intensité est utilisé au lieu du dispositif de modulation de phase, il est possible d'appliquer une fonction d'atténuation du type

$$\cos\left\{2\pi\left(g_x x + g_y y + c\right)\right\}.$$

Après traversée du dispositif, l'onde a alors une forme du type

$$\exp\left\{j2\pi\left(\left(f_x + g_x\right)x + \left(f_y + g_y\right)y + c\right)\right\} + \exp\left\{j2\pi\left(\left(f_x - g_x\right)x + \left(f_y - g_y\right)y - c\right)\right\}$$

qui correspond à la superposition de deux ondes planes dont les vecteurs d'onde sont symétriques par rapport à un axe orienté suivant le vecteur d'onde de l'onde qui sortirait du dispositif en l'abscence de modulation. Une des deux ondes peut être arrêtée par un diaphragme, moyennant quoi le dispositif constitue un déviateur de faisceau comparable au précèdent.

Des dispositifs de modulation intermédiaires, réalisant une modulation conjointe de phase et d'intensité. peuvent également être utilisés.

Une version de l'invention consiste donc à utiliser comme déviateur de faisceau un modulateur spatial commandé de manière appropriée.

Une version de l'invention consiste à ce que ledit modulateur soit un modulateur de phase , commandé de manière à générer un décalage de phase d'une forme aussi proche que possible de $\theta = 2\pi(g_x x + g_y y)$.

Les dispositifs de modulation existants fonctionnent pixel par pixel. Cette discrétisation entraîne la génération de fréquences parasites hors du cône de déviation. Une version de l'invention consiste à supprimer ces fréquences parasites à l'aide d'un diaphragme placé dans un plan de fréquence sur le trajet de l'onde issue du modulateur de phase.

Les dispositifs de modulation permettant une modulation rapide sont binaires, c'est-à-dire qu'à un pixel donné ne correspondent que deux valeurs possibles de phase ou d'intensité. L'utilisation d'un dispositif de modulation binaire entraîne la présence d'une onde plane parasite, symétrique de l'onde que l'on cherche à obtenir par rapport à un axe constitué par la direction d'un faisceau non dévié. Dans le cas des modulateurs binaires, ceci est vrai même lorsque il s'agit d'un modulateur de phase, alors que dans le cas des modulateurs générant une modulation continue, ce problème peut être évité en utilisant un modulateur de phase. Selon une version de l'invention, le diaphragme filtrant les fréquences parasites est dimensionné de manière à filtrer non seulement les fréquences situées hors du cône de déviation, mais également une partie des fréquences situées dans le cône de déviation, de manière à arrêter l'onde plane parasite.

Les dispositifs de modulation binaires présentent également l'inconvénient de générer des fréquences parasites inclues dans le cône de déviation et constituant un 'bruit' en fréquence. Selon une version de l'invention, ces fréquences sont arrêtées par un modulateur d'intensité placé dans un plan de fréquence sur le trajet du faisceau issu du modulateur de phase, et commandé pour ne laisser passer que la fréquence recherchée.

Un tel dispositif est utilisé dans le mode de réalisation 4.

### 3.10.3. Déviateur de faisceau constitué par un miroir mobile dont les vibrations sont rendues non gênantes

Les déviateurs de faisceau décrits en 3.10.1. et 3.10.2. sont basés sur l'utilisation de dispositifs à cristaux liquides et de polariseurs. Ces dispositifs ne sont pas disponibles dans le domaine des rayonnements ultraviolets. Pour utiliser les rayonnements ultraviolets, il est donc nécessaire d'utiliser d'autres moyens.

Dans les dispositifs précédents, l'ensemble du système était placé sur une table optique.

Selon une version de l'invention, le dispositif de déviation de faisceau est constitué par un miroir placé hors de la table optique, la séparation entre le faisceau d'éclairage et le faisceau de référence étant effectuée par un séparateur fixé sur la table optique et positionné après ledit miroir sur la trajectoire du faisceau.

Le miroir étant placé hors de la table optique, il n'engendre pas de vibrations de cette table. La séparation des faisceaux ayant lieu après le miroir, ses vibrations n'engendrent pas non plus de décalages de phase entre faisceau d'éclairage et faisceau de référence. Ceci résout donc le problème des vibrations.

Par contre, le fait que la séparation des faisceaux ait lieu après le miroir mobile implique que le faisceau de référence varie en même temps que le faisceau d'éclairage. Cette variation doit être prise en compte dans la conception du système et compensée. Par exemple, si la surface de réception est placée dans un plan d'espace, les variations de direction de l'onde de référence se traduisent par des translations de l'image plane en fréquence. Selon une version de l'invention, cet effet est compensé en effectuant une translation en sens inverse des images planes en fréquence obtenues.

Cette technique est utilisée par exemple dans le mode de réalisation 5.

### 3.11. Compensation des erreurs dûes à la polarisation

La méthode de génération d'images décrite par [Wolf] est basée sur une théorie scalaire de la diffraction et suppose que l'onde traversant l'objet est diffractée de manière isotrope dans toutes les directions par chaque point de l'objet. Ce n'est que moyennant cette hypothèse que la résolution théorique de $\frac{\lambda}{4}$ peut être obtenue. La théorie scalaire de la diffraction n'est cependant pas valable pour les angles de diffraction élevés. L'intensité diffractée par un point de l'objet dépend de la direction de l'onde diffractée, de la direction de l'onde d'éclairage, de la direction de polarisation de l'onde d'éclairage et de la direction de polarisation de l'onde diffractée.

### 3.11.1. Compensation par multiplication par un coefficient réel

L'onde diffractée par l'objet diffère de l'onde qui serait diffractée si la diffraction était isotrope par un facteur multiplicatif réel dépendant:

- de la direction de propagation de l'onde d'éclairage
- de la polarisation de l'onde d'éclairage
- de la direction de propagation de l'onde diffractée
- de la polarisation de l'onde diffractée

Selon une version de l'invention, le microscope comporte des moyens pour déterminer ce facteur multiplicatif et le compenser en multipliant les ondes reçues par l'inverse dudit facteur. Une telle version de l'invention est décrite en 7.18.8.

### 3.11.2. Compensation dans le cas d'un matériau anisotrope

Si l'objet observé est constitué essentiellement d'un matériau anisotrope, les effets de la diffraction diffèrent de ce qu'ils sont dans un matériau isotrope. Le matériau est alors caractérisé en chaque point par 6 paramètres cristallins plus l'absorptivité.

Dans le cas particulier ou l'objet observé est un cristal uniaxe, l'indice de diffraction du rayon ordinaire a une valeur constante. Selon une version de l'invention, une représentation tridimensionnelle dans laquelle les nombres complexes obtenus caractérisent l'absorptivité et l'indice ordinaire peut être calculée. Selon cette version de l'invention, cette représentation est calculée à partir d'images planes en fréquence obtenues pour une onde d'éclairage polarisée de sorte qu'elle constitue un rayon ordinaire.

La direction de polarisation ordinaire variant avec la direction de propagation de l'onde, il est nécessaire de pouvoir modifier la direction de polarisation de l'onde d'éclairage. Cependant, les phénomènes étant linéaires, il suffit d'enregistrer l'onde reçue en tout point pour deux directions de polarisation de l'onde d'éclairage pour pouvoir en déduire l'onde diffractée par par l'objet pour une onde d'éclairage de direction quelconque. Selon une version de l'invention, le microscope comprend des moyens pour générer deux directions de polarisation de l'onde d'éclairage. Selon une version de l'invention, le microscope comprend également des moyens pour analyser l'onde diffractée suivant deux directions de polarisation, ce qui permet de distinguer l'onde diffractée ordinaire de l'onde diffractée extraordinaire. Selon cette version de l'invention, les images planes en fréquence sont alors obtenues à partir de quatre images élémentaires correspondant à chaque combinaison des deux directions de polarisation et des deux directions d'analyse.

Une telle version de l'invention est décrite en 7.18.9. Dans la version décrite en 7.18.9. seule la direction d'analyse correspondant au rayon ordinaire est utilisée, cependant il est également possible de prendre en compte la direction d'analyse correspondant au rayon extraordinaire. Deux images planes en fréquence sont alors obtenues pour chaque direction de propagation de l'onde d'éclairage, correspondant l'une à l'indice ordinaire et l'autre à l'indice extraordinaire. La représentation fréquentielle finale est obtenue à partir de cet ensemble d'images en prenant en compte les variations de l'indice extraordinaire en chaque point des images planes en fréquence correspondant à l'indice extraordinaire.

### 3.11.3. Compensation par combinaison de plusieurs directions de polarisation et d'analyse

Dans le cas du matériau isotrope, la méthode décrite en 3.11.1. a le défaut de faire remonter considérablement le niveau de bruit. Une méthode évitant ce problème est d'acquérir au moins quatre images planes en fréquence correspondant à chaque combinaison de deux polarisations distinctes de l'onde d'éclairage et de deux directions de polarisation distinctes de l'onde diffractée. Un algorithme approprié permet alors, à partir de ces quatre images, de calculer une image unique correspondant à la grandeur scalaire recherchée. Selon une version de l'invention, le microscope comporte donc un moyen pour générer deux polarisations distinctes de l'onde d'éclairage, et un moyen pour analyser l'onde diffractée selon deux directions de polarisation distinctes. Selon une version de l'invention, le microscope comporte des moyens pour calculer, à partir des images planes en fréquence correspondant à chaque combinaison des deux directions de polarisation et des deux directions d'analyse, une image plane en fréquence unique représentant une grandeur scalaire complexe vérifiant la condition de diffraction homogène dans toutes les directions. Ce principe est utilisé dans les modes de réalisation 3,4, et 5. Le principe de calcul de ladite grandeur scalaire est détaillé en 7.12.1.

Dans le cas des longueurs d'ondes du visible, ledit moyen de variation de la polarisation de l'onde d'éclairage peut être constitué d'un rotateur de polarisation à cristaux liquides. Ledit moyen de variation de la direction d'analyse de l'onde diffractée peut être composé d'un rotateur de polarisation associé à un polariseur. Dans le cas de l'ultraviolet, ces dispositifs ne sont pas disponibles.

### 3.11.4. Variation de la direction de polarisation de l'onde d'éclairage dans le domaine UV

Dans le domaine UV, les rotateurs de polarisation peuvent être remplacés par une lame d'onde en quartz tournant autour d'un axe par des moyens mécaniques. Cependant, ces mouvements mécaniques ralentissent considérablement le système. C'est pourquoi on utilise un système ou les seuls mouvements mécaniques sont ceux d'obturateurs et ou le faisceau à obturer a une extension spatiale aussi réduite que possible, de manière à ce que le mouvement de l'obturateur soit aussi faible que possible. Il est alors possible d'utiliser un obturateur rapide ou une obturation par roue tournante crénelée.

Selon une version de l'invention, un tel système comprend:

- un séparateur de faisceau séparant le faisceau en un faisceau *A* et un faisceau *B*.
- des lentilles placées sur chaque faisceau *A* et *B* et focalisant ces faisceaux sur des points de focalisation ou sont placés les obturateurs.
- un dispositif permettant de superposer à nouveau les faisceaux *A* et *B* ayant traversé leurs obturateurs respectifs.
- un dispositif placé sur la trajectoire de l'un des faisceaux *A* ou *B*, dans la partie de la trajectoire ou les deux faisceaux sont distincts, et modifiant la polarisation de ce faisceau.

Un tel système peut également comprendre des lentilles supplémentaires destinées à reformer des faisceaux parallèles après traversée des obturateurs. Il peut également comprendre un second dispositif de modification de la polarisation. Le dispositif de modification de la polarisation du faisceau peut être une lame d'onde. Les dispositifs de séparation de faisceau et de superposition de faisceau peuvent être des miroirs semi-transparents. Un tel dispositif est utilisé dans le mode de réalisation 5.

### 3.11.5. Variation de la direction d'analyse dans le domaine UV.

L'onde issue de l'objet peut être décomposée en une onde dont le vecteur champ électrique est parallèle à celui de l'onde de référence et une onde dont le vecteur champ électrique est orthogonal à celui de l'onde de référence. L'intensité reçue sur la surface de réception est la somme de l'intensité de l'onde de champ électrique orthogonal à l'onde de référence et de l'intensité produite par l'interférence de l'onde de référence et de l'onde de champ électrique parallèle à l'onde de référence. La première de ces intensités ne dépend pas de la phase de l'onde de référence et ne modifie donc pas la valeur complexe de l'onde issue de l'objet mesurée par combinaison de figures d'interférences correspondant à des phases différentes de l'onde de référence. C'est donc uniquement l'onde de vecteur champ électrique parallèle à celui de l'onde de référence qui est obtenue sur la surface de réception.

La direction d'analyse d'une onde peut donc être modifiée simplement en modifiant la direction de polarisation de l'onde de référence ou de manière symétrique en modifiant la direction de polarisation de l'onde issue de l'objet.

Selon une version de l'invention, la direction d'analyse est modifiée par variation de la direction de polarisation de l'onde de référence ou de l'onde issue de l'objet.

Selon une version de l'invention, la polarisation de l'onde de référence ou de l'onde issue de l'objet est modifiée par un dispositif comportant:

- un séparateur de faisceau séparant le faisceau en deux faisceaux *A* et *B*
- une lame d'onde *LA* disposée sur le trajet du faisceau *A* et une lame d'onde *LB* disposée sur le trajet du faisceau *B*, l'angle entre les axes neutres de ces deux lames d'onde étant de 45 degrés.

La direction de polarisation du faisceau ayant traversé de la lame d'onde *LA* se déduit alors de la direction de polarisation du faisceau ayant traversé la lame d'onde *LB* par une rotation dont l'angle est l'angle entre les axes neutres des lames d'onde *LA* et *LB*. Si cet angle est de 45 degrés, les faisceaux issus des lames *LA* et *LB* auront toujours des polarisations orthogonales, quelque soit la direction de polarisation du faisceau incident.

Les deux faisceaux *A* et *B* peuvent ensuite être réunis par un dispositif de superposition après avoir traversé des obturateurs, comme dans le cas du dispositif décrit en 3.11.4. Ceci présente le désavantage de nécessiter l'utilisation d'obturateurs en un point de la trajectoire du faisceau ou la direction du faisceau est variable et ou le faisceau ne peut donc pas être focalisé sur un point fixe.

Selon une version de l'invention, les deux faisceaux *A* et *B* sont séparément superposés au faisceau issu de l'objet (s'ils constituent l'onde de référence) ou à l'onde de référence (s'ils sont issus de l'objet). Les figures d'interférence correspondant à chaque direction de polarisation sont alors formées sur deux surfaces de réception distinctes.

Que les images planes en fréquences correspondant à chaque polarisation soient obtenues sur des surfaces de réception distinctes ou sur la même surface de réception, il se crée alors un déphasage entre ces images qui doit être compensé. Selon une version de l'invention, les lames d'onde sont positionnées de manière à ce que les faisceaux de référence et d'éclairage parvenant à une surface de réception aient des directions de polarisation différentes, de préférence à 45 degrés l'une de l'autre. Dans ces conditions, la partie de l'onde issue de l'objet qui comprend des fréquences voisines de l'onde d'éclairage est détecté sur les deux surfaces de réception et peut être utilisée pour calculer ladite différence de phase.

### 3.12. Système de suppression de l'éclairage direct

L'onde d'éclairage est généralement beaucoup plus intense que l'onde diffractée. Elle peut saturer les capteurs ou réduire considérablement le rapport signal sur bruit du système en rendant nécessaire une acquisition à un niveau élevé. La suppression de la partie non diffractée de l'onde d'éclairage pendant la phase d'acquisition ou pendant une partie de la phase d'acquisition améliore nettement les performances du système. Dans un plan de fréquence, la partie non diffractée de l'onde d'éclairage a une image ponctuelle et peut être supprimée en plaçant sur ce point un élément absorbant. Selon une version de l'invention, le système comprend donc un dispositif de suppression dela partie non diffractée de l'onde d'éclairage, placé dans un plan de fréquence, et absorbant le faisceau sur une zone réduite autour du point correspondant à cette onde d'éclairage.

Selon une version de l'invention, ce dispositif est constitué par un modulateur spatial d'intensité commandé pour être passant en tout point sauf sur une zone limitée autour du point d'impact de la partie non diffractée de l'onde d'éclairage. Cette version est mise en oeuvre dans le mode de réalisation 4.

Selon une autre version de l'invention, ce dispositif est constitué d'une vitre mobile en translation dans un plan de fréquence, un point noir absorbant placé sur la vitre ayant pour rôle d'arrêter le faisceau direct, la position de la vitre étant commandée pour faire coïncider ce point noir avec le point d'impact de la partie non diffractée de l'onde d'éclairage. Cette version est mise en oeuvre dans le mode de réalisation 5.

### 3.13. Dispositif d'utilisation des modulateurs spatiaux.

Les modulateurs spatiaux utilisés en 3.10.2. ou en 3.12. peuvent être en particulier des modulateurs binaires rapides fonctionnant par réflexion. Ils sont en général utilisés à l'aide d'un miroir semi-transparent polarisant, qui est un dispositif de forme cubique renvoyant les faisceaux incidents dans deux directions différentes en fonction de leur polarisation. Ce dispositif, de part son épaisseur, engendre une légère aberration qui élargit le point correspondant à une fréquence donnée, ce qui est préjudiciable à la qualité des images obtenues.

Pour éviter l'utilisation de ce dispositif, on peut utiliser des faisceaux parvenant au modulateur sous un angle oblique. Les faisceaux incident et réfléchi sont alors séparés. Cependant, cette méthode déforme la répartition des fréquences générées. Pour éviter cette déformation, ledit angle oblique doit être faible.

Selon une version de l'invention, ce problème est résolu en utilisant un dispositif constitué d'un miroir à deux faces réfléchissantes orthogonales et d'une lentille traversée dans un sens par le faisceau dirigé vers le modulateur et dans l'autre sens par le faisceau réfléchi par le modulateur. Le faisceau incident est réfléchi par une face du miroir, traverse la lentille, est réfléchi par le modulateur, retraverse la lentille en sens inverse et est réfléchi par la seconde face du miroir, reprenant sa direction initiale. Les faisceaux incident et réfléchi peuvent se superposer partiellement sur la lentille mais sont séparés sur le miroir à deux faces. Afin d'obtenir cette séparation sur le miroir, tout en ayant un angle oblique aussi faible que possible, le miroir à deux faces doit être à peu près positionné dans un plan focal de la lentille et le modulateur doit être positionné dans l'autre plan focal de la lentille.

### 3.14. Utilisation d'objectifs traversés dans les deux sens et/ou de plusieurs objectifs

L'objet peut être éclairé par un coté et l'onde issue de l'objet peut être captée du coté opposé par un objectif, ce qui permet de reconstituer une partie de la représentation fréquentielle de l'objet. Toutefois, d'autres parties de la représentation fréquentielle de l'objet ne peuvent être reconstituées qu'à partir de l'onde se dirigeant vers le coté de l'objet d'ou proviennent les ondes d'éclairage. Selon une version de l'invention, un objectif est associé à un système optique permettant d'une part la mesure sur un capteur de l'onde provenant de l'échantillon et ayant traversé l'objectif, et d'autre part la formation d'une onde d'éclairage qui après traversée de l'objectif devient dans l'échantillon une onde d'éclairage plane de direction variable. Cet objectif est alors traversé dans un sens par l'onde d'éclairage se dirigeant vers l'objet, et dans l'autre sens par l'onde diffractée issue de l'objet. Il joue à la fois le rôle d'objectif recevant l'onde issue de l'objet, et le rôle de système à forte ouverture transformant les variations de direction faibles de l'onde issue du déviateur de faisceau, en variations de direction élevées de l'onde dans l'objet. Ceci peut être réalisé par exemple à l'aide d'un miroir semi-transparent placé sur le trajet du faisceau issu de l'objet et superposant le faisceau issu de l'objet et dirigé dans un sens donné au faisceau d'éclairage se dirigeant en sens opposé. Cette version de l'invention est mise en oeuvre dans les modes de réalisation 3,4 et 5 qui comportent plusieurs objectifs. Une version n'utilisant qu'un objectif est décrite en 7.18.10.

Les éventuelles limitations portant sur la direction de l'onde d'éclairage, caractérisée par son vecteur fréquence, influent sur les performances du système. Le maximum de précision est obtenu lorsque toutes les directions possibles sont utilisées. De même, il est souhaitable d'enregistrer l'onde diffractée par l'objet dans toutes les directions. Lorsqu'un seul objectif de microscope est utilisé, son ouverture limite les directions dans lesquelles on peut enregistrer l'onde diffractée par l'objet. Selon une version avantageuse de l'invention on utilise plusieurs objectifs focalisés sur l'échantillon, qui permettent d'enregistrer l'onde issue de l'échantillon suivant d'avantage de directions. Les objectifs couvrent alors la quasi-totalité de l'espace autour de l'échantillon, et les ondes d'éclairages doivent nécessairement traverser ces objectifs pour atteindre l'échantillon. Selon une version de l'invention, chaque objectif est associé à un système optique permettant d'une part la mesure sur un capteur de l'onde provenant de l'échantillon et ayant traversé l'objectif, et d'autre part la formation d'une onde d'éclairage qui après traversée de l'objectif devient dans l'échantillon une onde d'éclairage plane de direction variable. Les ondes d'éclairage peuvent alors être générées dans toutes les directions couvertes par l'ouverture des objectifs, et de même les ondes issues de l'objet peuvent être mesurées dans toutes ces directions. Selon une version de l'invention, le système d'acquisition et de calcul prend en compte l'ensemble des ondes mesurées sur l'ensemble des capteurs pour l'ensemble des éclairages utilisés et génère à partir de ces données la représentation fréquentielle tridimensionnelle de l'objet. Chaque couple (direction de l'onde d'éclairage-direction de l'onde issue de l'objet) correspond à un point de la représentation fréquentielle de l'objet, et la représentation fréquentielle ainsi générée comprend donc tous les points pouvant être obtenus à partir des ondes d'éclairage et des ondes diffractées respectivement produites et reçues par l'ensemble des objectifs.

Il est possible d'utiliser un nombre élevé d'objectifs afin de recevoir la totalité des ondes issues de l'échantillon, ou afin d'augmenter la distance de travail en utilisant des objectifs de faible ouverture. Cependant, la plupart des échantillons observés en pratique sont plans et peuvent de manière commode être placés entre deux lamelles. Une version de l'invention constituant le meilleur compromis entre la difficulté de mise en oeuvre et la performance est d'utiliser deux objectifs de microscope de large ouverture positionnés en vis-à-vis, l'échantillon plan étant introduit entre ces deux objectifs. Cette solution est utilisée dans les modes de réalisation 3,4, et 5. Dans les modes de réalisation 1 et 2, de performance inférieure mais de réalisation plus aisée, un seul objectif de microscope est utilisé.

### 3.15. Génération de faisceaux inverses

Lorsque deux objectifs de microscope ou plus sont utilisés, une image plane en fréquence est générée à partir de l'onde reçue par chaque objectif. Chaque point d'une image plane en fréquence correspond à un vecteur d'onde donné de l'onde diffractée. Il est nécessaire, pour pouvoir calculer la représentation fréquentielle tridimensionnelle de l'objet, de déterminer correctement ces vecteurs d'onde, et ce dans un repère commun aux vecteurs d'ondes reçus par chaque objectif.

La connaissance du facteur $K$ et du centre optique, définis dans [Lauer 1], permet la détermination des vecteurs d'onde correspondant à chaque point d'une image en fréquence. Cependant le repère utilisé pour les représentations bidimensionnelles $RA$ ( avant translation de vecteur $-f_e$) reconstituées à partir de l'image plane en fréquence obtenue à partir d'un objectif donné est différent de celui utilisé pour les représentations RB obtenues à partir de l'objectif en vis-à-vis. Pour établir une correspondance entre ces deux repères il est nécessaire de déterminer les coordonnées de certains points à la fois dans le repère utilisé pour $RA$ et dans le repère utilisé pour $RB$.

Chaque point $PA$ de la représentation $RA$ est l'image d'un vecteur d'onde $f_e$ de l'onde d'éclairage qui parvient à ce point en l'abscence d'objet, et a pour coordonnées celles de ce vecteur d'onde. A ce vecteur correspond un vecteur d'onde $-f_e$ de direction opposée dont l'image est un point $PB$ de la représentation $RB$. Les coordonnées du point $PB$ dans le repère utilisé pour $RA$ sont l'opposé des coordonnées du point $PA$ dans ce repère.

La correspondance entre les deux repères peut donc être établie si les coordonnées du point PB sont également déterminées dans le repère $RB$. Ceci peut être fait en générant par des moyens optiques un faisceau de vecteur d'onde opposé au faisceau d'éclairage et en déterminant les coordonnées du point image de ce faiscau dans le repère utilisé pour *RB.* Si cette correspondance est établie en un nombre suffisant de points, la relation entre les repères utilisés pour *RB* et *RA* peut être facilement déterminée et ces représentations peuvent être modifiées pour utiliser un repère commun.

De manière similaire, on peut obtenir par des moyens optiques une correspondance directe entre les repères *RB* et *RA.* Ceci nécessite le réglage d'un certain nombre d'éléments optiques. Pour effectuer ce réglage, on peut vérifier en continu la correspondance entre les coordonnées du point *PB* obtenues dans chacun des repères utilisés, et ce pour un certain nombre de points *PB* (trois points en principe).

Dans les deux cas, il est nécessaire de générer un faisceau de mêmes caractéristiques que le faisceau d'éclairage, mais se propageant en sens inverse. D'une manière générale, étant donné un faisceau utilisé dans le système, le terme « faisceau indicateur inverse » désignera un faisceau de mêmes caractéristiques mais se propageant en sens opposé.

Selon une version de l'invention, le microscope comporte donc, pendant la phase de réglage, des moyens pour générer un faisceau indicateur inverse de l'onde d'éclairage. Ces moyens peuvent éventuellement être supprimés après la phase de réglage correspondant à la détermination, par des moyens de calcul ou par des moyens optiques, des correspondances entre les repères *RB* et *RA.*

Selon une version de l'invention, le microscope comporte également des moyens pour générer, pendant une phase de réglage, un faisceau indicateur inverse de l'onde de référence. Ce faisceau sera également utilisé dans certaines phases de réglage. Par exemple, si la surface de réception est dans un plan de fréquence, l'onde de référence est centrée virtuellement en un point central de l'objet. Le faisceau indicateur inverse de l'onde de référence permet de régler la position des objectifs de manière à ce que ces objectifs soient focalisés sur le même point.

Selon une version de l'invention, lorsque la surface de réception est dans un plan d'espace, un faisceau supplémentaire centré sur ce plan d'espace est également utilisé pendant une phase de réglage, ainsi que son faisceau indicateur inverse. Ce faisceau facilite par exemple le réglage de position des objectifs en l'abscence d'une onde de référence centrée sur un point de l'objet.

Dans les modes de réalisation 3,4, et 5, chaque faisceau utilisé a un faisceau indicateur inverse, et les moyens de génération de ces indicateurs inverses sont décrits comme faisant partie du microscope et ne sont pas supprimés après que les réglages aient été terminés: des obturateurs sont simplement utilisés pour arrêter ces faisceaux.

Selon une version de l'invention, le dispositif générant un faisceau indicateur inverse à partir d'un faisceau d'origine comprend:

- un miroir semi-transparent séparant le faisceau d'origine en un faisceau non modifié et un faisceau secondaire.
- une lentille focalisant le faisceau secondaire dans un plan de focalisation.
- un miroir placé au point de focalisation qui renvoie le faisceau inversé vers ladite lentille.

Le fait que le miroir soit placé au point de focalisation garantit que le faisceau réfléchi a exactement la direction inverse du faisceau incident.Le faisceau réfléchi retraverse la lentille en sens inverse. La partie de ce faisceau qui est ensuite réfléchie à nouveau par le miroir semi-transparent a les mêmes caractéristiques que le faisceau non modifié mais est dirigée en sens inverse.

### 3.16. Détermination des écarts de position des objectifs.

A partir des ondes issue de l'objet et traversant un objectif donné, on peut générer une représentation tridimensionnelle de l'objet observé. En représentation spatiale, cette représentation est relative à un point origine donné, que l'on appellera point caractéristique de l'objectif. En général, les points caractéristiques des objectifs utilisés ne coïncident pas. Il s'ensuit que la partie de la représentation fréquentielle générée à partir d'un objectif est translatée par rapport à celle obtenue à partir d'un autre objectif. Cette translation se traduit par une modulation en fréquence, les points dans l'espace fréquentiel obtenus à partir d'un objectif donné étant donc affectés d'un décalage de phase variable correspondant à cette modulation. Selon une version de l'invention, le microscope comporte des moyens pour compenser compenser cette translation et générer une représentation de l'objet dans laquelle le décalage de phase affectant chaque point de la représentation est constant. Pour pouvoir superposer les représentations obtenues à partir de chaque objectif, et selon une version de l'invention, le microscope comporte des moyens pour déterminer les coordonnées des points caractéristiques de chaque objectif de microscope, dans un repère commun. Il est alors possible de translater de manière appropriée chaque représentation avant de les superposer. Cette translation dans le domaine spatial équivaut à une démodulation dans le domaine fréquentiel, qui peut être effectuée directement sur les images planes en fréquence.

### 3.16.1. détermination des coordonnées des points caractéristiques de chaque objectif.

Selon une version de l'invention, ceci peut être obtenu en utilisant un faisceau centré sur un point central de l'objet observé et son faisceau indicateur inverse. Ce faisceau est reçu sur un capteur après avoir traversé les objectifs, et son indicateur inverse est reçu sur un autre capteur. A partir du faisceau reçu sur un capteur, la représentation fréquentielle bidimensionnelle de ce faisceau peut être obtenue et les coordonnées de son point de focalisation peuvent être déterminées. Le point de focalisation du faisceau est le même que celui de son faisceau indicateur inverse. La différence entre les coordonnées du point de focalisation du faisceau obtenues à partir d'un objectif et celles de son indicateur inverse obtenue à partir d'un autre objectif est égale à la différence entre les coordonnées des points caractéristiques de ces objectifs dans un repère commun.

Cette méthode peut être mise en oeuvre avec un nombre quelconque d'objectifs, à la condition que la configuration soit telle qu'aucun groupe d'objectifs ne soit isolé optiquement, c'est-à-dire qu'un tel groupe d'objectif, s'il ne rassemble pas tous les objectifs utilisés, puisse toujours être atteint par un faisceau issu d'un objectif extérieur au groupe. Par exemple si 6 objectifs sont utilisés, ils ne doivent pas être groupés deux par deux: chaque objectif doit recevoir des faisceaux provenant de deux autres objectifs.

Cet aspect de l'invention est mis en oeuvre en 7.9.1. et en 9.12.

### 3.16.2.Détermination des déplacements de chaque objectif

Il est généralement nécessaire de déplacer les objectifs pour introduire l'objet observé. Cette opération modifie les coordonnées obtenues et rend nécessaire la répétition de l'opération précédente. Cependant, la présence de l'objet perturbe le faisceau qui le traverse et empêche l'obtention d'un résultat précis. Selon une version de l'invention, ce problème est résolu en utilisant des faisceaux parallèles de direction variable. Un faisceau parallèle a une image plane en fréquence ponctuelle et la valeur obtenue en ce point est peu affectée par les irrégularités locales de l'échantillon observé.

La différence entre la phase d'un tel faisceau reçu sur un capteur avant déplacement des objectifs et la phase du même faisceau après déplacement des objectifs dépend du vecteur caractérisant le déplacement du point caractéristique de l'objectif recevant le faisceau par rapport au point caractéristique de l'objectif d'ou provient le faisceau. A partir de ces différences de phase établies pour un nombre suffisant de faisceaux il est possible, par un algorithme approprié, de déterminer ce déplacement. Selon cette version de l'invention, la phase d'un ensemble de faisceaux parallèles parvenant à un capteur donné est donc mesurée une première fois en l'abscence de l'objet et une deuxième fois en présence de l'objet. A partir des différences de phase et éventuellement des rapports d'intensité ainsi mesurés, un algorithme approprié peut recalculer le déplacement des points caractéristiques de chaque objectif. Ces différences de phase et d'intensité peuvent être caractérisés, pour chaque faisceau parallèle, par une valeur complexe obtenue comme quotient de la valeur obtenue en présence de l'objet par la valeur obtenue en l'abscence de l'objet en un point correspondant de l'image plane en fréquence. Cette valeur sera appelée le rapport de phase et d'intensité sur un faisceau parallèle donné.

Connaissant les coordonnées initiales du point d'origine de chaque représentation et ses déplacements, ses coordonnées courantes peuvent en être déduites et l'écart de position peut être compensé. Cette méthode peut être mise en oeuvre avec un nombre quelconque d'objectifs, à la même condition qu'en 3.16.1.

La première mesure en l'abscence de l'objet est réalisée par exemple en 7.9.2. et en 9.13. Dans ces deux cas, la correction liée aux valeurs de position déterminées comme indiqué en 3.16.1. est décrite dans le même paragraphe que cette mesure.

La deuxième mesure en présence de l'objet et le calcul des déplacements sont par exemple effectués en 7.11. et en 9.15. Dans les deux cas les positions absolues sont directement calculées, sans passer par les déplacements, la correction liée aux valeurs de position ayant déjà été effectuée comme indiqué plus haut. Cette détermination est couplée avec le calcul de l'indice moyen de l'objet dont le principe est donné au paragraphe suivant.

### 3.17. Détermination de l'indice et de l'épaisseur de l'objet

### 3.17.1. Principe

Lorsque deux objectifs de microscope en vis-à-vis sont utilisés et lorsque l'objet observé forme une couche comprises entre deux lamelles planes, l'indice moyen de l'objet, s'il diffère de l'indice nominal de l'objectif (indice du liquide optique prévu pour être utilisé avec l'objectif), crée une aberration sphérique qui fausse les représentations tridimensionnelles obtenues. Cette aberration sphérique se traduit par des variations de phase et d'intensité des faisceaux mesurés en 3.16.2., ces variations dépendant de l'indice et de l'épaisseur de l'objet. Selon une version de l'invention, un programme utilise les valeurs mesurées en 3.16.2. pour déterminer simultanément les déplacements des objectifs, l'indice et l'épaisseur de l'objet.

Le calcul effectué en 7.11. ou en 9.15. est une réalisation de cet aspect de l'invention.

### 3.17.2. Algorithme de minimisation

Pour des valeurs données des déplacements et de l'indice et l'épaisseur de l'objet il est possible de calculer les rapports de phase et d'intensité sur chaque faisceau parallèle. Selon une version de l'invention, l'algorithme de calcul détermine les valeurs des déplacements et de l'indice et l'épaisseur de l'objet qui minimisent l'écart quadratique moyen entre les valeurs théoriques ainsi calculées et les valeurs effectivement mesurées.

Cet algorithme doit déterminer un minimum absolu sur un ensemble de cinq paramètres d'une fonction bruitée, la fonction écart quadratique présentant même en l'abscence de bruit des minima locaux autres que le maximum absolu. Ce problème se prête donc assez mal à des méthodes classiques de minimisation.

Lorsque les valeurs des paramètres sont connues d'une manière approximative, l'algorithme peut maximiser dans un premier temps la valeur au point origine obtenue en compensant les écarts de phase dûs à ces paramètre. Une maximisation d'une fonction étant équivalente à une minimisation de son opposé, on utilisera uniquement le terme maximisation pour définir l'algorithme, mais on pourrait aussi bien parler de minimisation.

Selon une version de l'invention, l'algorithme comporte des phases itératives aucours desquels il détermine à chaque itération un maximum absolu sur un ensemble de valeurs des paramètres variant de manière discrète, la fonction à maximiser ayant été préalablement filtrée pour supprimer les fréquences qui causeraient un repliement de spectre dans un échantillonnage au pas de variation des paramètres. Selon cette version de l'invention, le pas est réduit à chaque itération et le point central de l'ensemble sur lequel varient les paramètres aucours d'une itération est le maximum déterminé à l'itération précédente.

Un tel algorithme permet en général de converger vers la solution malgré les maxima locaux et le nombre élevé de paramètres.

Un tel algorithme est décrit en 7.8.2.

### 3.18. Détermination de la position de l'objet.

La position exacte de l'objet n'a pas d'influence sur les valeurs mesurées en 3.16.2. et ne peut donc pas être obtenue à partir de ces valeurs. Par contre elle peut modifier les représentations tridimensionnelles obtenues: l'aberration sphérique affectant une représentation tridimensionnelle donnée dépend de la position de l'objet. Dans le cas ou l'indice de l'objet diffère de l'indice nominal des objectifs, cette position doit donc être déterminée.

La position de l'objet par rapport aux objectifs affecte la bonne superposition des représentations bidimensionnelles recalées en phase. Si elle n'est pas correctement évaluée et prise en compte comme facteur de correction, des différences de phase anormales apparaissent entre des couples de représentations bidimensionnelles recalées en phase, sur la partie de l'espace des fréquences qui correspond à l'intersection de ces représentations.

Selon une version de l'invention, la mesure de la position de l'objet par rapport aux objectifs comporte une phase d'acquisition, aucours de laquelle une série d'images planes en fréquence sont acquises, correspondant à une série de faisceaux d'éclairage d'orientation variable. Connaissant les paramètres de position, l'indice et l'épaisseur de l'objet, préalablement calculés par l'algorithme de maximisation décrit en 3.17., et connaissant la position recherchée, un programme peut déterminer les représentations bidimensionnelles correspondant à chaque image plane en fréquence. Selon cette version de l'invention, le programme de détermination de la position de l'objet par rapport aux objectifs est donc un programme de minimisation qui détermine la valeur du paramètre de position qui minimise les écarts de phase anormaux. Un tel programme est détaillé au paragraphe 17.15.

### 3.19. Utilisation d'objectifs présentant des aberrations.

La conception d'un objectif dépourvu d'aberrations est difficile. Les aberrations augmentant en proportion de la taille des éléments optiques utilisés, il est difficile d'obtenir une distance de travail élevée. Il est également difficile d'obtenir une ouverture numérique élevée.

Dans le présent microscope, la valeur complexe de l'onde reçue sur une surface de réception est enregistrée. La représentation fréquentielle d'une partie de l'onde issue de l'objet peut être reconstituée dès lors que cette partie de l'onde issue de l'objet parvient à la surface de réception. La représentation fréquentielle de l'onde issue de l'objet est obtenue, dans tous les cas, par une relation linéaire à partir de l'onde parvenant à la surface de réception. La seule propriété « indispensable » de l'objectif est donc de capter une partie notable de l'onde issue de l'objet, et de la transformer en un faisceau paraxial parvenant à la surface de réception. Un objectif ayant cette seule propriété peut facilement être conçu et avoir une ouverture numérique et une distance de travail élevés. Selon une version de l'invention, un objectif affecté par des aberrations supérieures à la limite imposée par la diffraction est utilisé, et le programme de calcul inverse la relation linéaire entre l'onde issue de l'objet et l'onde captée sur la surface de réception de manière à compenser ces aberrations.

Selon une version de l'invention, l'objectif de microscope est conçu de manière à vérifier la propriété suivante:

(1)- L'aberration affectant l'image formée dans le plan image de l'objectif doit rester inférieure à une fraction du diamètre de la partie observée de cette image.

La contrainte (1) permet de s'assurer que pour la majeure partie de l'objet étudié, l'ensemble du faisceau provenant d'un point donné parvienne à la surface de réception. En effet, l'étendue spatiale de l'échantillon observé est limitée, selon les systèmes, par un diaphragme ou par la taille du capteur utilisé. En présence d'aberration sphérique, lorsque la distance entre un point et la limite de la zone d'observation est inférieure à la distance caractéristique de l'aberration sphérique, alors une partie des rayons issus de ce point ne parvient pas à la surface de réception et l'image de ce point ne peut donc pas être reconstituée avec précision. Si la zone concernée reste de petite taille, cet inconvénient est peu gênant: c'est ce qui est garanti par le respect de la condition (1). Si la zone concernée était trop importante, la précision serait affectée sur l'ensemble de l'image.

La contrainte (1) est similaire à la contrainte usuelle concernant l'aberration sphérique, mais est considérablement allégée. En effet des résultats de bonne qualité peuvent être obtenus avec une aberration sphérique de l'ordre d'une dizaine de longueurs d'onde, alors qu'en microscopie classique l'aberration sphérique doit être d'une fraction de longueur d'onde.

Toutefois, un objectif n'ayant pas certaines propriétés supplémentaires peut être difficile à utiliser. En effet, la relation linéaire liant l'onde reçue sur la surface de réception à la représentation fréquentielle de l'onde issue de l'objet peut être relativement complexe. La compensation algorithmique des aberrations peut alors nécessiter des volumes de calcul élevés. Selon une version de l'invention, ce problème est résolu en utilisant un objectif ayant en plus la propriété suivante:

(2)- L'image, dans le plan focal image, d'un faisceau qui est parallèle dans l'objet observé, doit être ponctuelle.

L'image plane en fréquence utilisée dans l'ensemble des modes de réalisation est équivalente à l'image formée directement dans le plan focal image. La contrainte (2) signifie que chaque point d'une image plane en fréquence correspond à une fréquence donnée de l'onde dans l'objet. Si la contrainte (2) n'était pas respectée, il serait nécessaire d'utiliser un algorithme généralisé consistant à obtenir la valeur associée à un point donné comme combinaison linéaire des valeurs détectées sur un ensemble de points voisins. La contrainte (2) est relativement simple à respecter. L'utilisation d'un objectif ne respectant pas la condition (2) ne présenterait qu'un intérêt limité, mais compliquerait considérablement les calculs nécessaires à l'obtention d'une image. Un exemple d'utilisation d'un objectif vérifiant les contraintes (1) et (2) est décrit au paragraphe 7.21.

Dans le cas d'un objectif respectant uniquement les conditions (1) et (2), l'algorithme de reconstitution d'image doit prendre en compte la relation entre les coordonnées d'un point sur l'image plane en fréquence et la fréquence correspondante de l'onde dans l'objet.

On note $B(\alpha)$ le point image, dans le plan focal image, d'un faisceau parallèle dans l'objet et faisant dans l'objet un angle $\alpha$ avec l'axe optique.

Selon une version de l'invention, les algorithmes sont simplifiés en utilisant un objectif vérifiant en plus la contrainte suivante:

(3)- La distance entre le point $B(\alpha)$ et le point $B(0)$ doit être proportionnelle à $\sin\alpha$.

Le respect de la contrainte (3) implique que les coordonnées d'un point sur l'image plane en fréquence sont directement proportionnelles aux composantes suivant deux axes correspondants du vecteur d'onde de l'onde dans l'objet, ce qui simplifie considérablement les calculs. Si un objectif respecte les contraintes (1)(2)(3), l'aberration sphérique se traduit uniquement par un déphasage de chaque point d'une représentation fréquentielle donnée, déphasage qui peut alors aisément être compensé. Un exemple d'utilisation d'un objectif vérifiant les contraintes (1)(2)(3) est décrit en 7.20. La condition (3) est à peu près équivalente à la condition des sinus d'Abbe.

Dans un objectif vérifiant uniquement les contraintes (1)(2)(3), l'image est perturbée à proximité du diaphragme sur une distance équivalente à la distance caractéristique de l'aberration sphérique. Cette perturbation est supprimée par l'utilisation d'un objectif classique dépourvu d'aberration sphérique, qui permet donc à priori d'obtenir les meilleures images. Cependant, l'utilisation d'un objectif vérifiant uniquement (1)(2)(3) permet d'alléger considérablement les contraintes de conception de l'objectif. Ceci permet d'obtenir un objectif à distance de travail plus élevée, un objectif moins cher, ou un objectif d'ouverture numérique plus élevée. Cette solution technique peut donc dans certains cas être préférable.

L'utilisation d'un tel objectif de microscope nécessite la compensation algorithmique des écarts de phase affectant l'image plane en fréquence et qui sont la conséquence de l'aberration sphérique. Ceci implique la détermination de la fonction caractérisant l'aberration sphérique induite par le microscope. Du fait que l'objectif présente une symétrie de révolution, le décalage de phase affectant un point d'une image plane en fréquence dépend uniquement de la distance entre ce point et le centre optique. L'aberration sphérique peut donc être

caractérisée par une fonction à une dimension représentant le décalage de phase en fonction de cette distance.

Selon une version de l'invention, cette fonction peut être obtenue par le programme de calcul optique utilisé pour la conception de l'objectif. En effet, ce programme permet d'effectuer des tracés de rayons et peut être facilement amélioré pour permettre également les calculs de chemin optique. Les déphasages étant proportionnels aux écarts de chemin optique affectant des rayons issus d'un même point, ils peuvent être déduits de ce type de considérations géométriques.

Selon une autre version de l'invention, cette fonction peut être mesurée par des moyens optiques. Selon cette version de l'invention:

- on utilise deux objectifs de microscope identiques en vis-à-vis
- on utilise une onde d'éclairage centrée sur un point du plan ou un premier objectif forme normalement l'image de l'échantillon observé.
- on détecte l'onde reçue dans le plan ou le second objectif forme l'image de l'échantillon observé.

En l'abscence d'aberration sphérique, la phase de l'onde détectée doit être constante. En présence d'aberration sphérique, l'écart de phase dû à l'aberration est le double de l'écart dû à un seul objectif de microscope. Ceci permet d'obtenir la fonction recherchée.

### 3.20. Compensation de l'aberration sphérique et des écarts de position.

L'aberration sphérique dûe à l'indice de l'objet, l'aberration sphérique dûe aux propriétés de l'objectif, et les erreurs de positionnement des objectifs, se traduisent tous par des déphasages appliqués à l'image plane en fréquence. Ces déphasages doivent être corrigés pour obtenir une image de bonne qualité.

Selon une version de l'invention, cette correction est effectuée en multipliant chaque image plane en fréquence par une fonction de correction tenant compte des divers paramètres déterminés plus haut. Le calcul d'une telle fonction est exposé en 7.16. et l'opération de multiplication est effectuée par exemple dans l'étape 2 de l'algorithme décrit en 7.17. Dans le cas ou un objectif présentant de l'aberration sphérique est utilisée, le calcul décrit en 7.16. doit être modifié comme indiqué en 7.20.

### 3.21. Echantillonnage régulier

Lorsque deux objectifs de microscope sont utilisés, le pas d'échantillonnage sur l'image plane en fréquence générée à partir d'une des surfaces de réception peut être pris comme base du pas d'échantillonnage de la représentation tridimensionnelle de l'objet suivant deux axes correspondants. Si aucune précaution n'est prise:

- Les points images des ondes d'éclairage sur cette image plane en fréquence ne correspondent pas à des valeurs entières des coordonnées en pixels.
- Dans le cas ou deux objectifs sont utilisés, le pas d'échantillonnage et les axes sur l'image plane en fréquence générée à partir d'une surface de réception associée à l'objectif en vis-à-vis ne correspondent pas au pas d'échantillonnage et aux axes de la représentation tridimensionnelle de l'objet.

Il s'ensuit que l'échantillonnage de la représentation tridimensionnelle de l'objet n'est pas régulier. Selon une version de l'invention, cet échantillonnage est rendu régulier suivant deux axes correspondant aux axes des représentations planes en fréquence. La qualité de la représentation tridimensionnelle de l'objet est alors nettement améliorée.

L'image plane en fréquence peut en particulier être modifiée, du fait des imperfections du système optique, par rotation ou par homothétie. Pour obtenir un échantillonnage régulier, il est nécessaire d'annuler ou de compenser ces imperfections.

Par ailleurs, dans le mode de réalisation 4, il doit exister des correspondances point à point entre les différents SLM utilisés et les CCD. La réalisation de ces correspondances nécessite le même type de réglages.

Selon une version de l'invention, le microscope comporte donc un ou plusieurs dispositifs optiques permettant un réglage en rotation des images générées dans les plans de fréquence, et/ou un ou plusieurs dispositifs permettant le réglage en grandissement des images générées dans les plans de fréquence.

### 3.21.1. Réglage de l'échelle de la représentation (homothétie)

Ce réglage est en fait un réglage de grandissement. Selon une version de l'invention, le grandissement d'une image est ajusté à l'aide d'un système optique de distance focale variable. Un tel système peut par exemple être composé de deux lentilles, une variation de la distance entre lesdites lentilles se traduisant par une variation de la distance focale de l'ensemble. Un tel dispositif est utilisé dans les modes de réalisation 4 et 5 et est décrit en 8.1.4.1.

### 3.21.2. Réglage en rotation d'une image

Selon une version de l'invention, ce réglage est effectué à l'aide d'un dispositif constitué d'un premier groupe de miroirs fixes et d'un second groupe de miroirs, vérifiant les conditions suivantes:

- le premier groupe de miroirs symétrise le vecteur d'onde du faisceau incident par rapport à un axe donné.
- le second groupe de miroirs symétrise le vecteur d'onde du faisceau incident par rapport à un second axe.
- le second groupe de miroirs est mobile en rotation autour d'un axe orthogonal au plan de ces deux axes.

L'ensemble des deux groupes de miroirs a alors l'effet de faire effectuer une rotation au faisceau représenté dans un plan de fréquence, l'angle de rotation étant le double de l'angle entre les deux axes de symétrie. Un tel dispositif est utilisé dans les modes de réalisation 4 et 5 et est décrit en 8.1.4.2.

### 3.22. Système de décalage de phase

Le système de décalage de phase utilisé peut être un miroir piézoélectrique, ce qui constitue la solution la plus usuelle. Cependant, utilisé à vitesse élevée, un tel miroir génère des vibrations. Selon une version avantageuse de l'invention, on utilise comme système de décalage de phase une lame biréfringente induisant un décalage de phase de 120 degrés entre ses deux axes neutres, précédée d'un rotateur de polarisation permettant d'orienter le vecteur champ électrique du faisceau suivant l'un ou l'autre desdits axes neutres, et suivie d'un second rotateur de polarisation permettant de ramener la direction de polarisation du faisceau en sortie du dispositif à sa direction en entrée du dispositif. Ce système ne permettant qu'un décalage de 120 degrés, il est nécessaire d'en associer deux en série pour obtenir un décalage de -120, 0, ou +120 degrés.

### 3.23. Méthode de traitement des données dans le cas d'une mémoire vive limitée

Les calculs de représentation fréquentielle tridimensionnelle mettent en oeuvre des quantités importantes de données. Ces données étant normalement accédées dans un ordre aléatoire, elles ne peuvent pas être stockées pendant les calculs sur un support à accès séquentiel comme un disque dur et doivent être stockées sur un support à accès aléatoire comme une mémoire interne d'ordinateur (RAM).

Selon une version avantageuse de l'invention, adaptée au cas ou le système ne dispose pas de suffisamment de mémoire vive pour pouvoir stocker l'ensemble des données, l'algorithme de calcul est modifié de manière à traiter les données bloc par bloc, un bloc correspondant à une quantité importante de données qui peuvent alors être stockées séquentiellement sur un support à accès séquentiel et chargées en mémoire centrale uniquement pendant le temps de traitement dudit bloc. A cette fin:

- L'algorithme modifié effectue dans un espace tridimensionnel des traitements plan horizontal par plan horizontal, chaque plan horizontal étant stocké sur le support à accès séquentiel en un seul bloc.
- Afin de pouvoir effectuer également des traitements suivant la dimension verticale, l'algorithme intègre des phases d'échange d'axes qui permettent de ramener provisoirement l'axe vertical dans un plan horizontal.
- La procédure d'échange d'axes opère bloc par bloc, les blocs ayant généralement des dimensions égales ou proches selon les deux axes à échanger et ayant pour taille en octets la taille maximale qui puisse être stockée en mémoire centrale du système (mémoire RAM à accès aléatoire).

Cette méthode est mise en oeuvre dans le mode de réalisation 1 et décrite au paragraphe 5.21.

### 3.24. Images générées par le microscope.

Les représentations tridimensionnelles générées par le présent microscope peuvent être stockées et transmises sous forme d'un tableau à trois dimensions de nombres complexes. Selon une version de l'invention, il est possible de générer à partir de ce tableau des coupes ou des projections bidimensionnelles représentant soit l'indice soit l'absorbtivité dans l'objet.

Dans le cas d'une projection, on génère une projection de l'image tridimensionnelle sur un plan de projection et suivant une direction de projection orthogonale au plan de projection. Chaque point du plan de projection est obtenu à partir de l'ensemble des valeurs de la représentation tridimensionnelle spatiale qui se trouvent sur une droite passant par ce point et dirigée selon la direction de projection.

Selon une version de l'invention, la valeur associée à chaque point du plan de projection est obtenue en extrayant la valeur maximale de la partie réelle ou imaginaire ou du module des points de la représentation spatiale tridimensionnelle situés sur la droite correspondante.

Selon une version de l'invention, la valeur associée à chaque point du plan de projection est obtenue en intégrant la valeur complexe des points de la représentation spatiale tridimensionnelle situés sur la droite correspondante. Il est alors possible de visualiser soit la partie réelle soit la partie imaginaire de la projection ainsi réalisée. Selon cette version de l'invention, la projection peut être obtenue plus rapidement de la manière suivante, en deux étapes:

*étape 1:* extraction, en représentation fréquentielle, d'un plan passant par l'origine et orthogonal à la direction de projection.

*étape 2*: transformation de Fourier inverse de ce plan.

Le tableau bidimensionnel ainsi obtenu constitue une projection suivant la direction ayant servi à extraire le plan de fréquence.

### 3.25. Système de positionnement des éléments optiques.

Les modes de réalisation décrits nécessitent l'utilisation de nombreux positionneurs de bonne précision. Ces positionneurs sont des éléments coûteux peu adaptés à une fabrication en série et susceptibles de se dérégler avec le temps.

Selon une version de l'invention, ce problème est réglé en utilisant lors de la fabrication du microscope des positionneurs amovibles, chaque élément étant positionné puis fixé par un liant, par exemple une colle, et le positionneur étant retiré après solidification définitive du liant.

### 3.26. Système de protection contre les chocs, les vibrations et la poussière.

Les microscopes décrits sont constitués d'un ensemble d'éléments fixés à une table optique. Lors d'un éventuel transport, des chocs même légers peuvent entraîner un déréglement du système. Lors d'une utilisation prolongée, la poussière peut se déposer sur les différents éléments optiques.

Selon une version de l'invention, la plus grande partie du dispositif optique est inclus dans une boîte hermétiquement fermée qui est elle-même incluse dans une boîte plus grande, la liaison entre les deux boîtes se faisant par l'intermédiaire d'amortisseurs disposés sur chaque coté de ladite boîte hermétiquement fermée. Ce système protège le microscope des chocs et de la poussière tout en permettant une bonne suspension de la table optique.

### 4.Description sommaire des dessins:

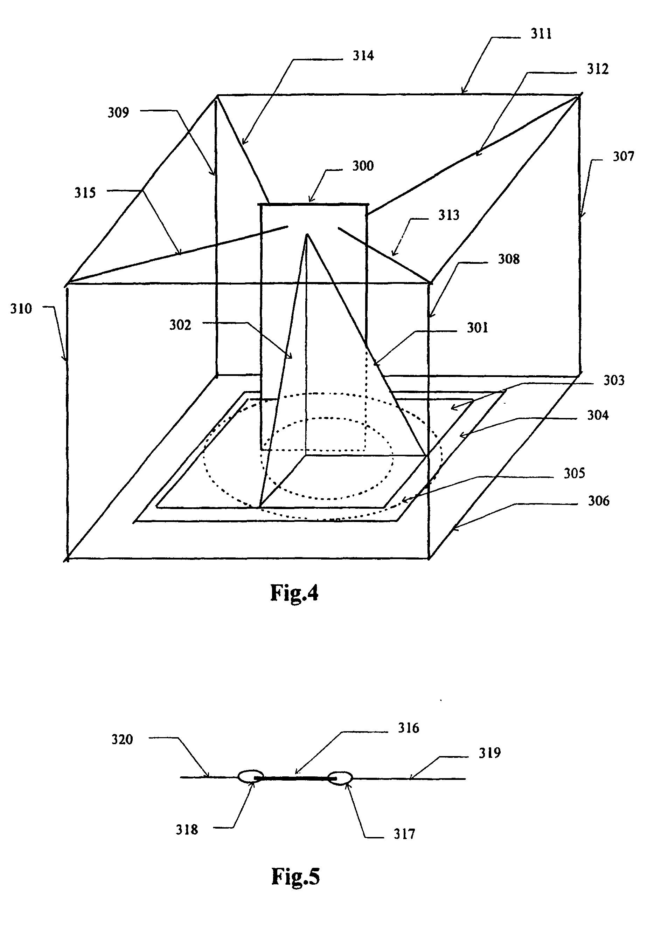

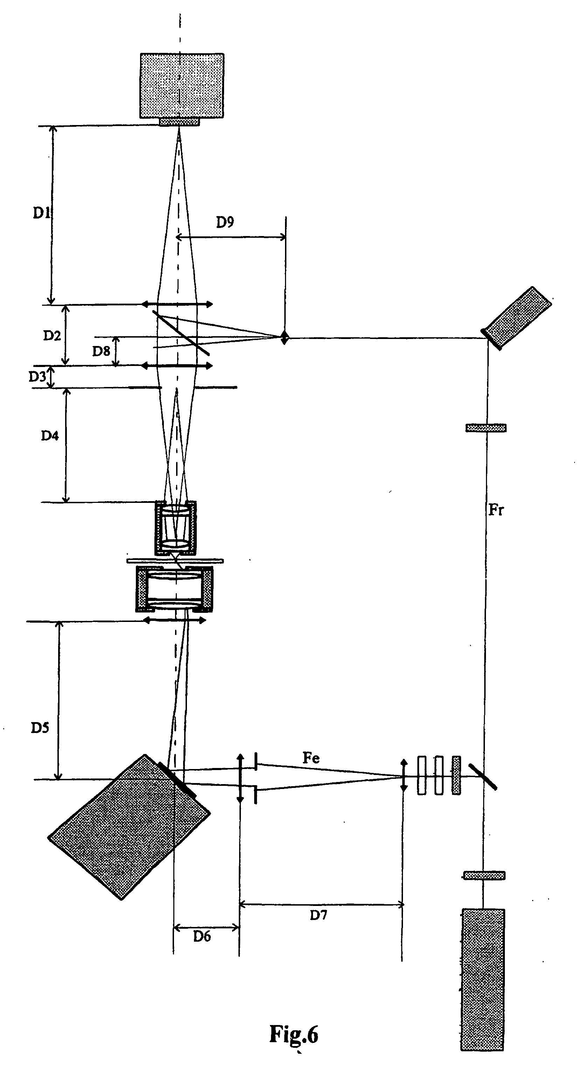

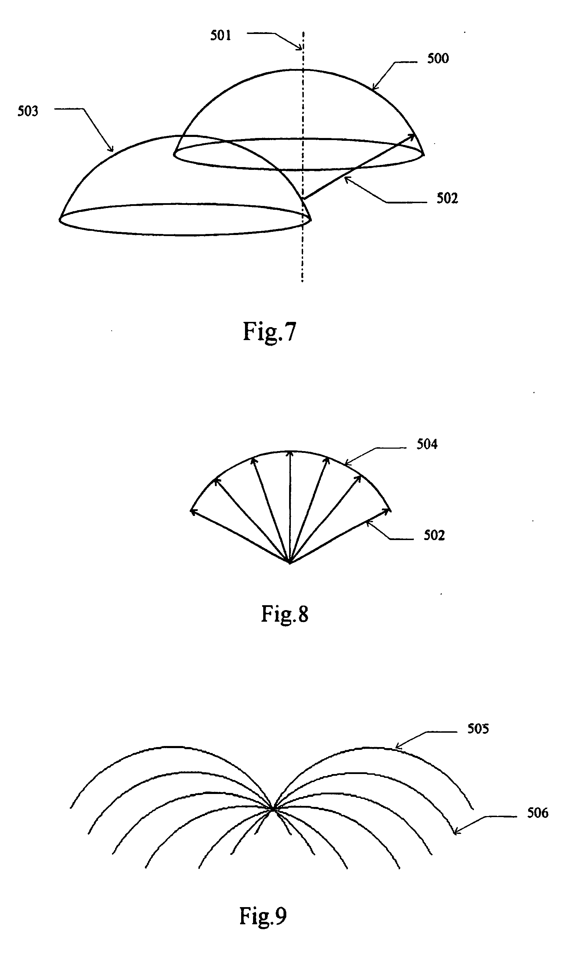

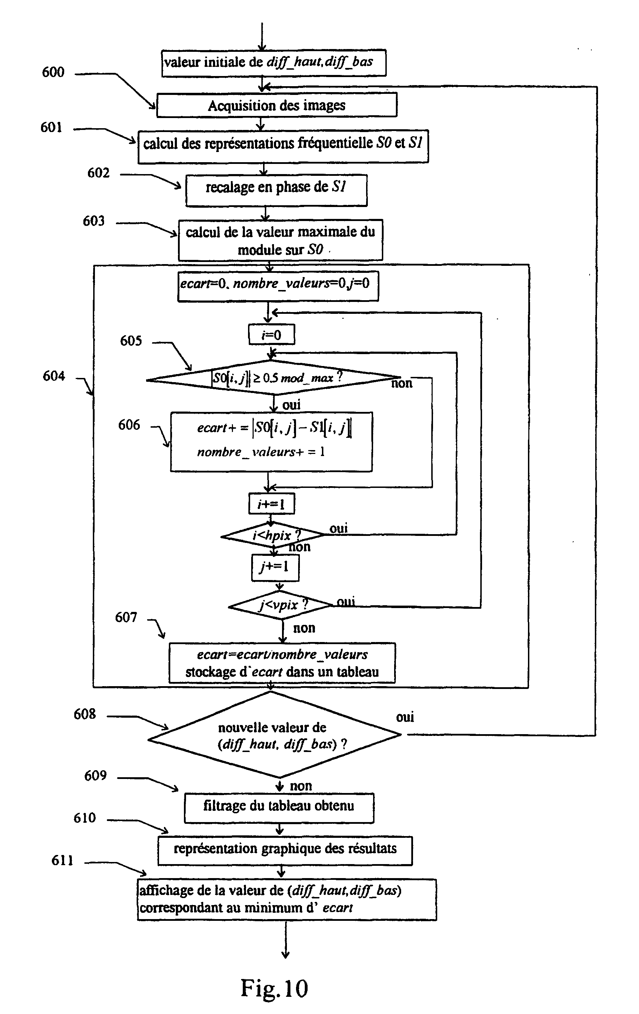

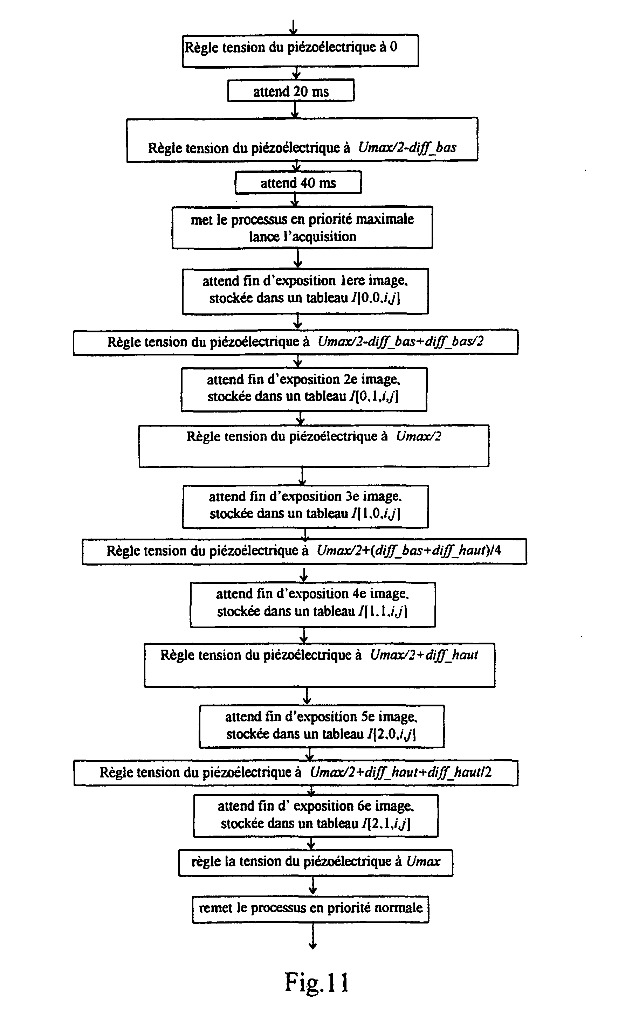

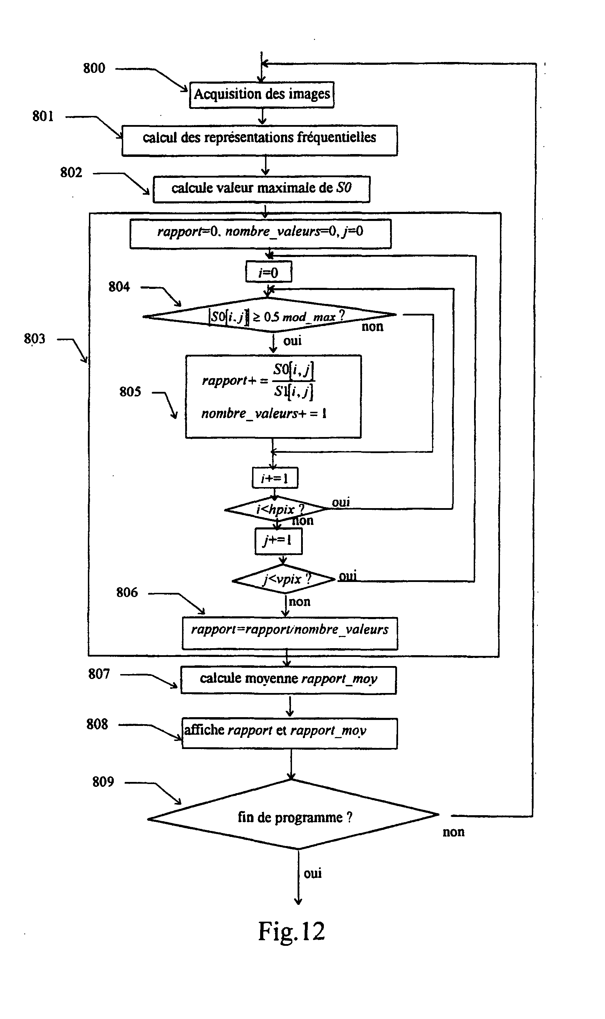

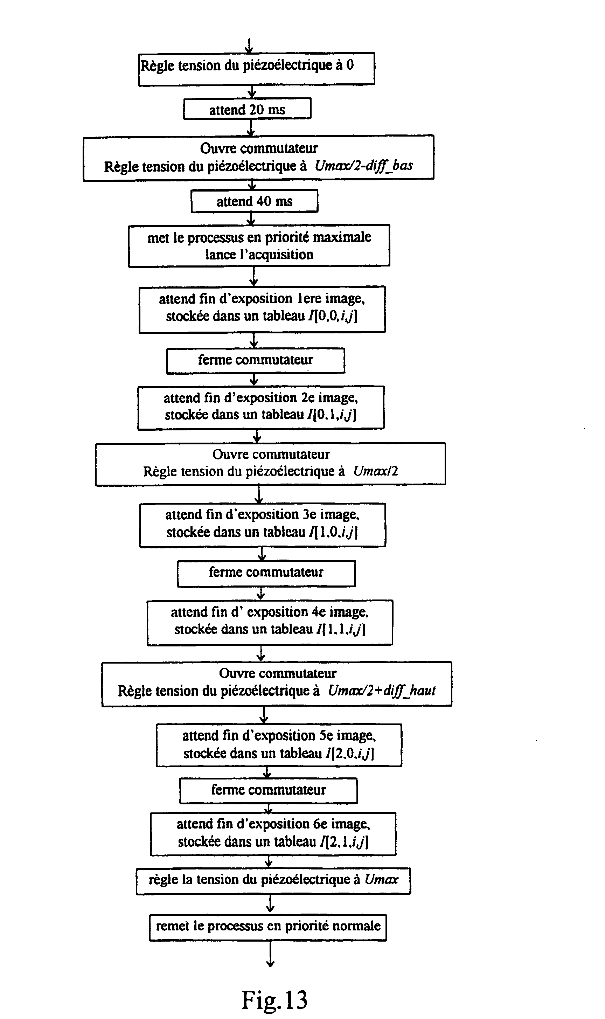

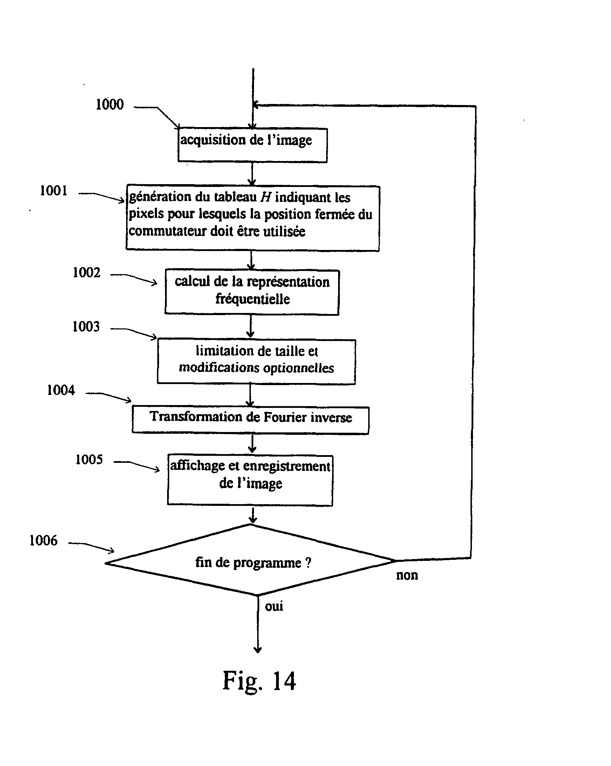

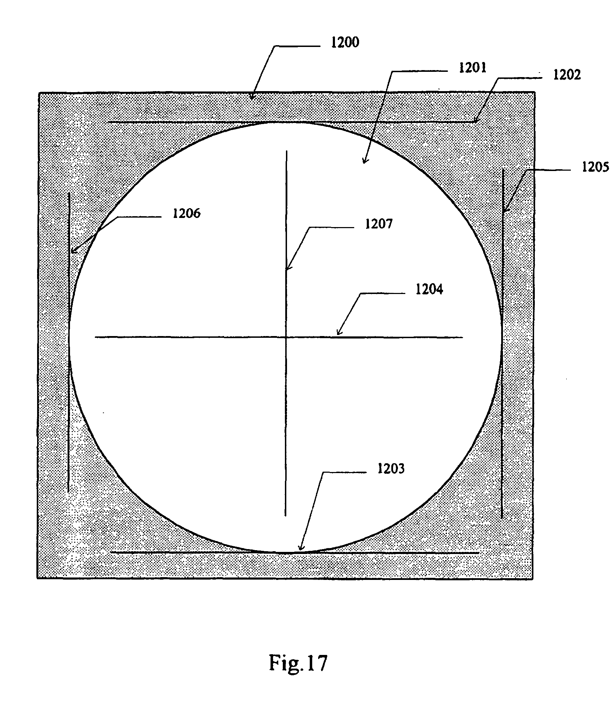

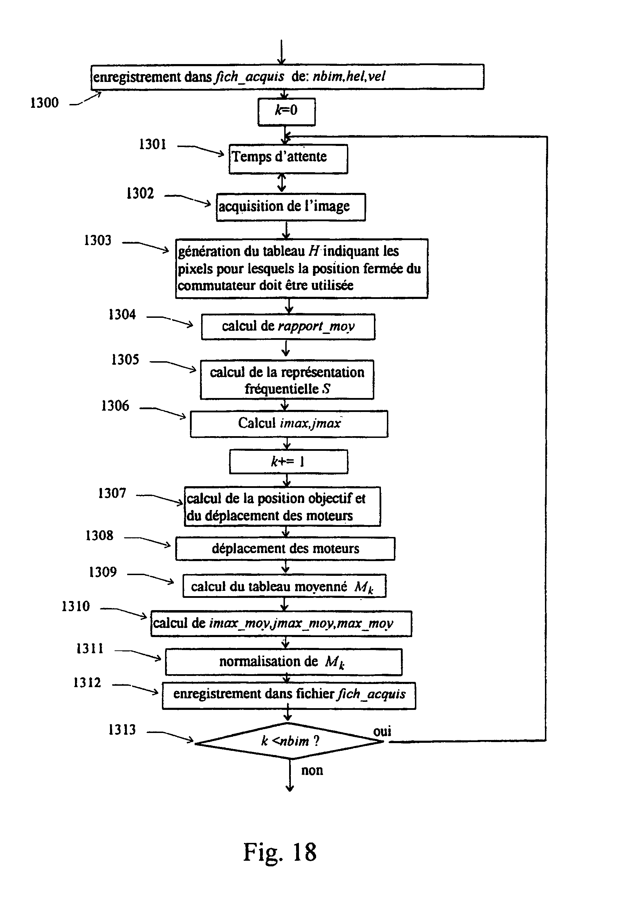

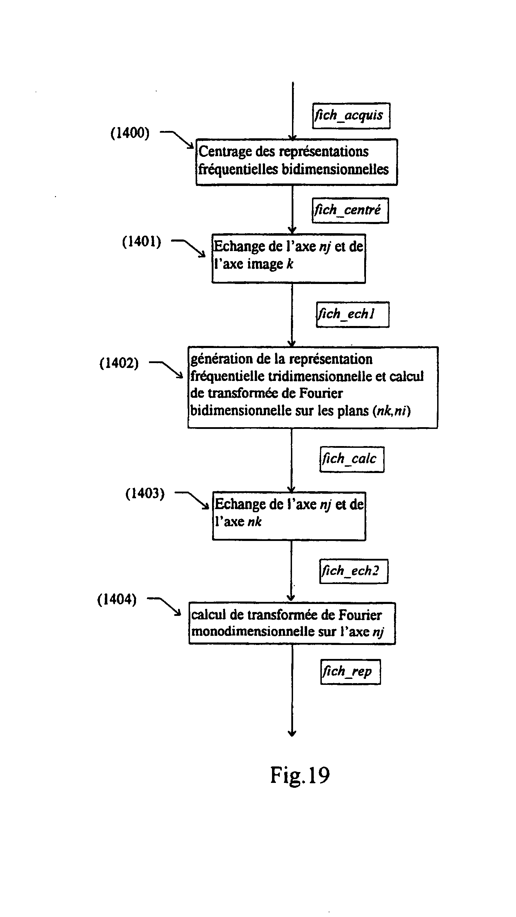

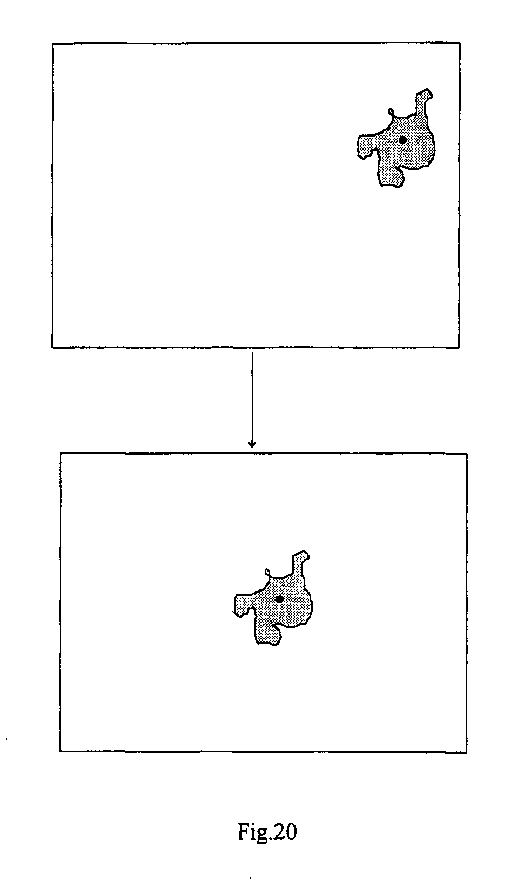

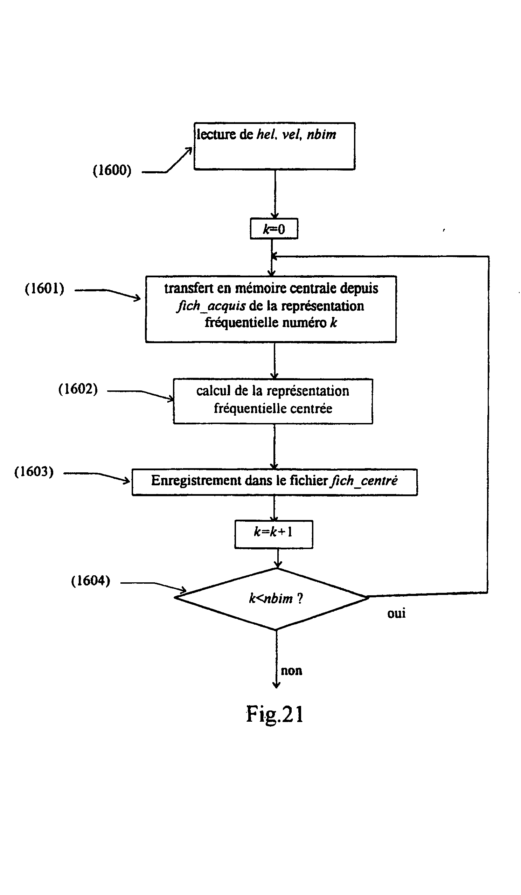

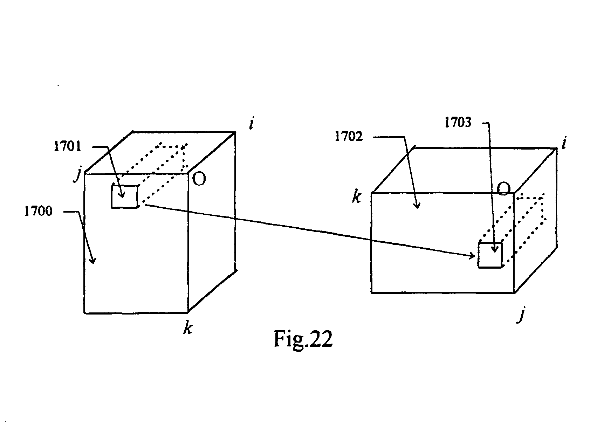

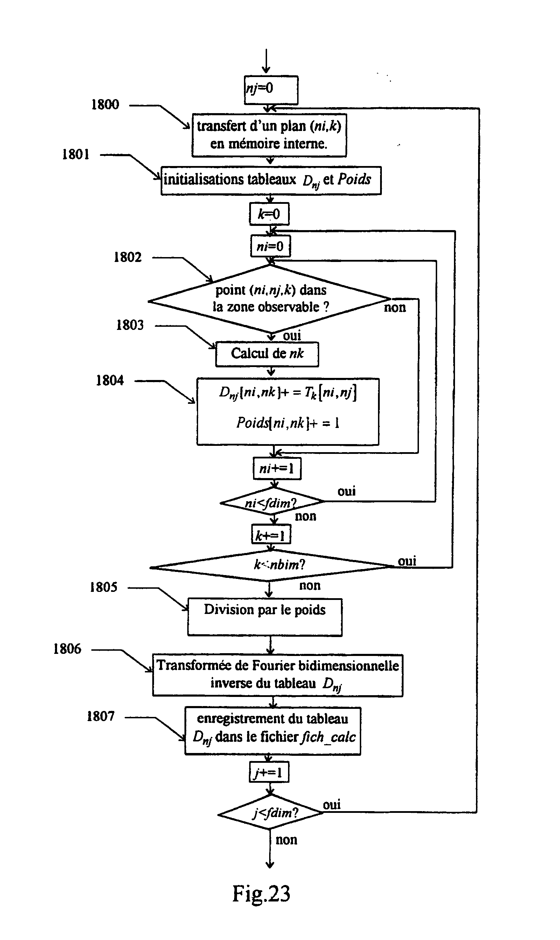

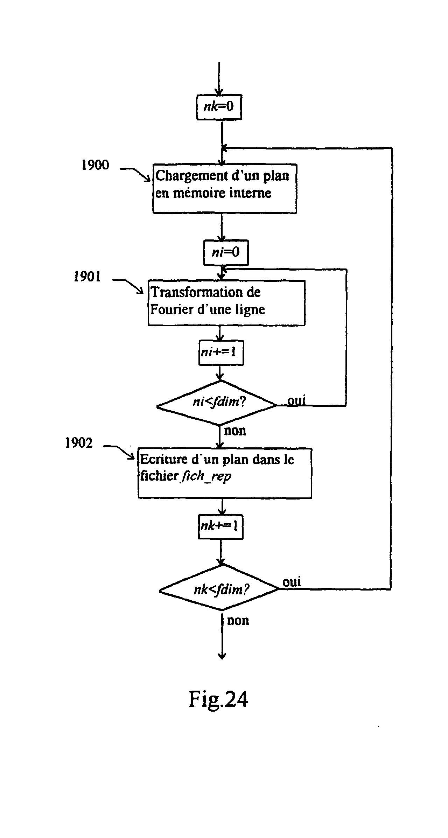

Les Fig. 1 à 24 se rapportent à un premier mode de réalisation. La Fig. 1 est un schéma d'ensemble de l'optique du microscope. Les Fig.2 et 3 représentent le détail du positionneur angulaire (110) déjà représenté sur la Fig. 1. La Fig.4 est un schéma d'ensemble du support mécanique vertical et antivibratoire du microscope. La Fig.5 représente le détail d'un tendeur de la Fig.4. La Fig.6 représente un exemple de dimensionnement de la partie optique. Les Fig.7 à 9 et 15 et 16 sont des représentations graphiques servant de support à l'explication du principe de fonctionnement du microscope. La Fig. 10 représente l'algorithme d'un programme permettant de régler les tensions de commande du piézoélectrique (122). La Fig.11 représente l'algorithme détaillé d'une procédure de prise d'images utilisée dans le programme précédent. La Fig.12 représente l'algorithme d'un programme permettant de régler l'atténuateur d'intensité constitué du polariseur (105) et du rotateur de polarisation (104) et d'obtenir ses caractéristiques. La Fig.13 représente l'algorithme détaillé d'une procédure 'bas niveau' de prise d'images utilisée dans le programme précédent et dans les programmes d'acquisition d'image 2D ou 3D. La Fig.14 représente l'algorithme d'un programme de focalisation permettant d'obtenir une image 2D et de focaliser l'objectif de microscope (113). La fig.17 sert de support aux explications concernant le réglage du condenseur. La Fig.18 représente l'algorithme du programme d'acquisition d'image tridimensionnelle. La Fig.19 représente l'algorithme d'un programme de calcul générant à partir des résultats de l'acquisition une représentation tridimensionnelle de l'objet. La Fig.20 représente schématiquement une opération effectuée par la première partie de ce programme. La Fig.21 représente le détail de l'algorithme de cette première partie. La Fig.22 représente schématiquement une opération effectuée par la deuxième partie de ce programme. La Fig.23 représente l'algorithme d'une troisième partie de ce programme. La Fig.24 représente l'algorithme d'une dernière partie de ce programme.

Les Fig. 25 et 26 se rapportent à un second mode de réalisation. La Fig. 25 est un schéma d'ensemble de la partie optique du microscope. La Fig.26 représente l'algorithme de la procédure 'bas niveau' d'acquisition d'images utilisée.

La Fig. 71 illustre un appareil spécifique utilisé dans les opérations de réglage pour les modes de réalisation 3 à 5.

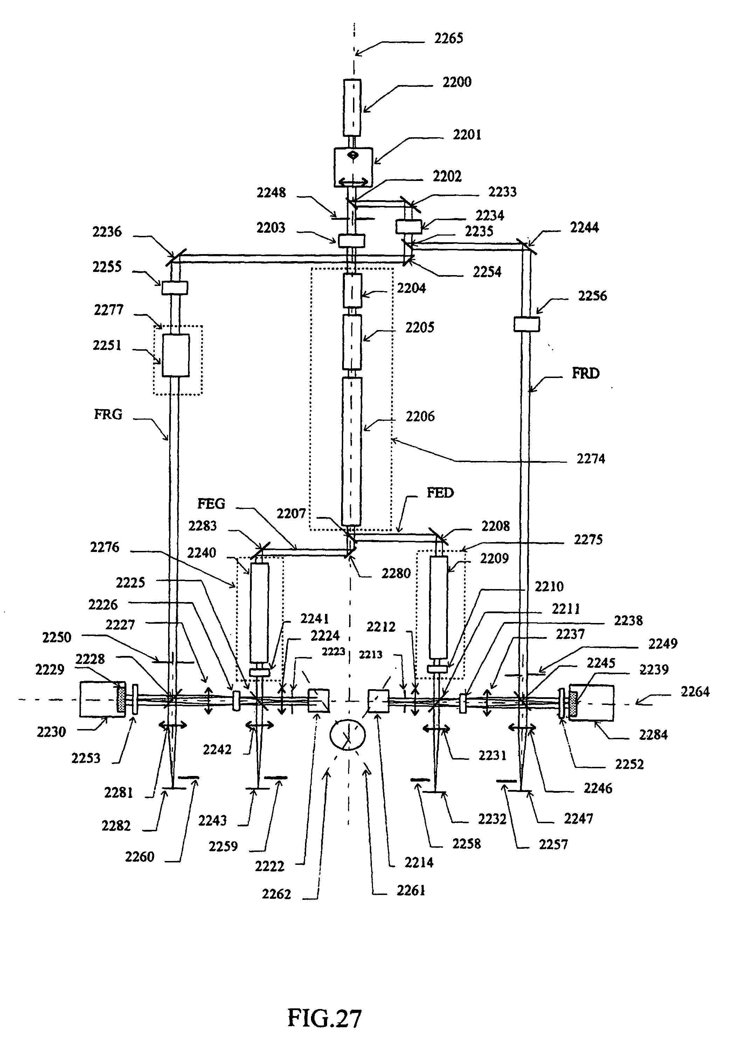

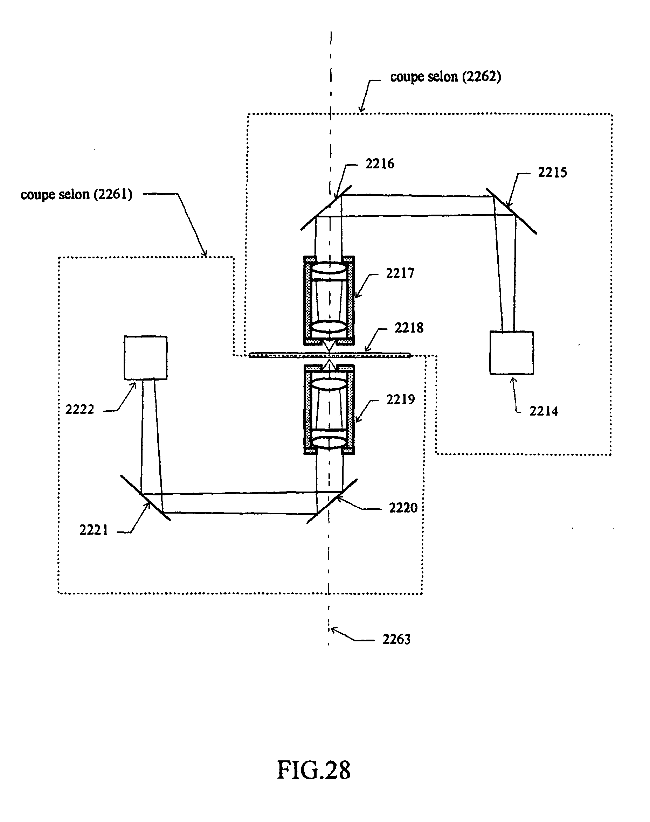

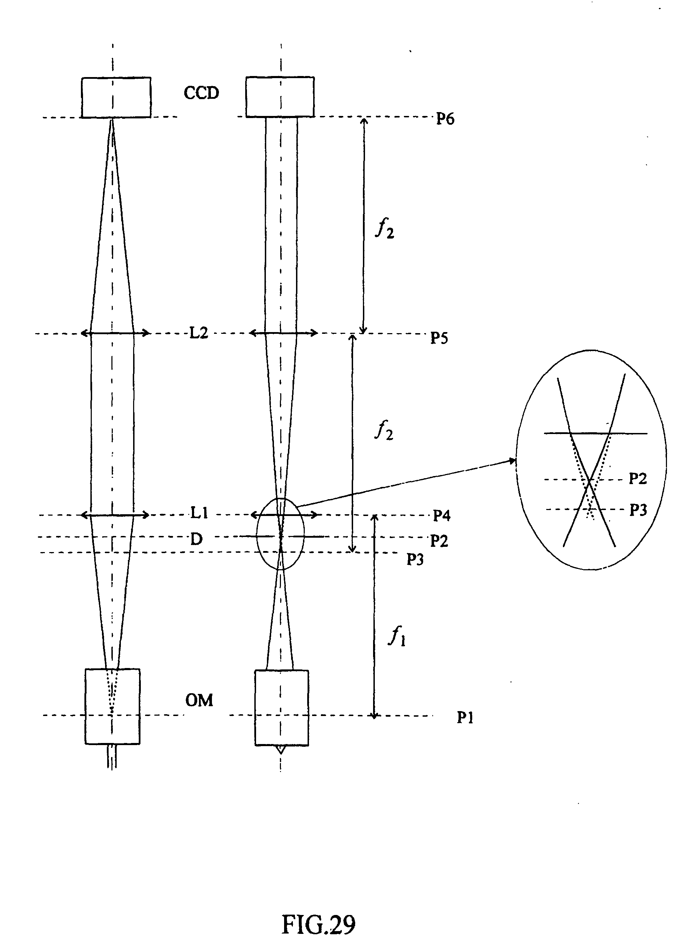

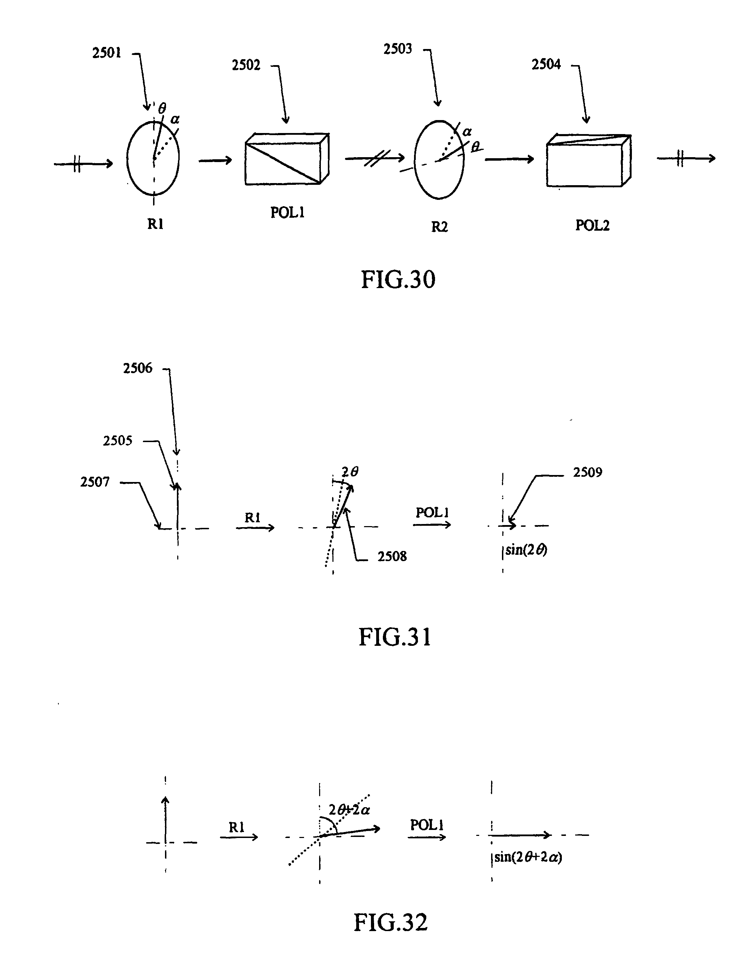

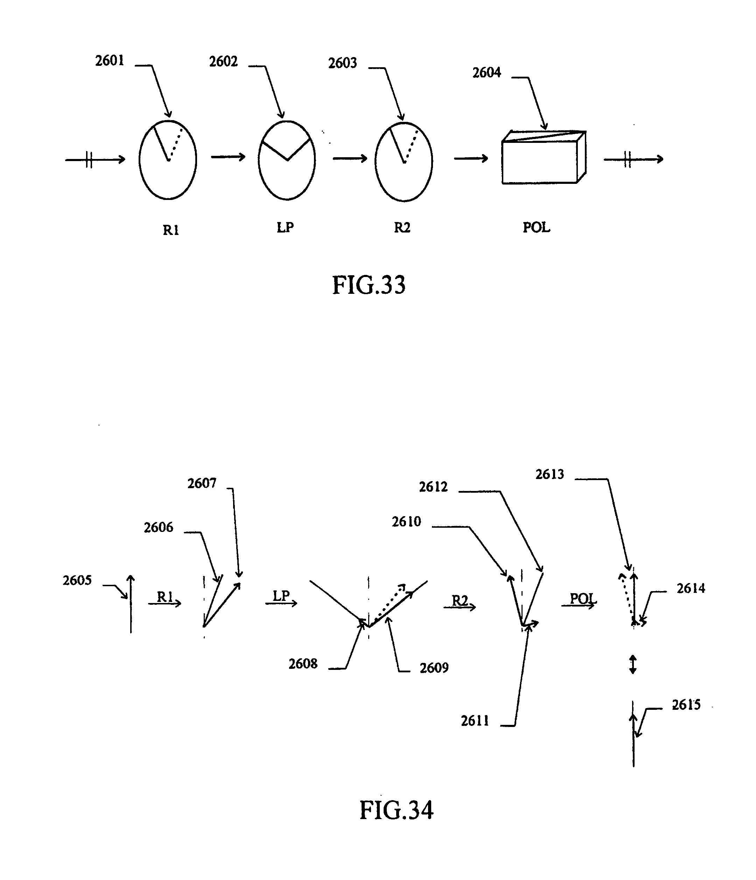

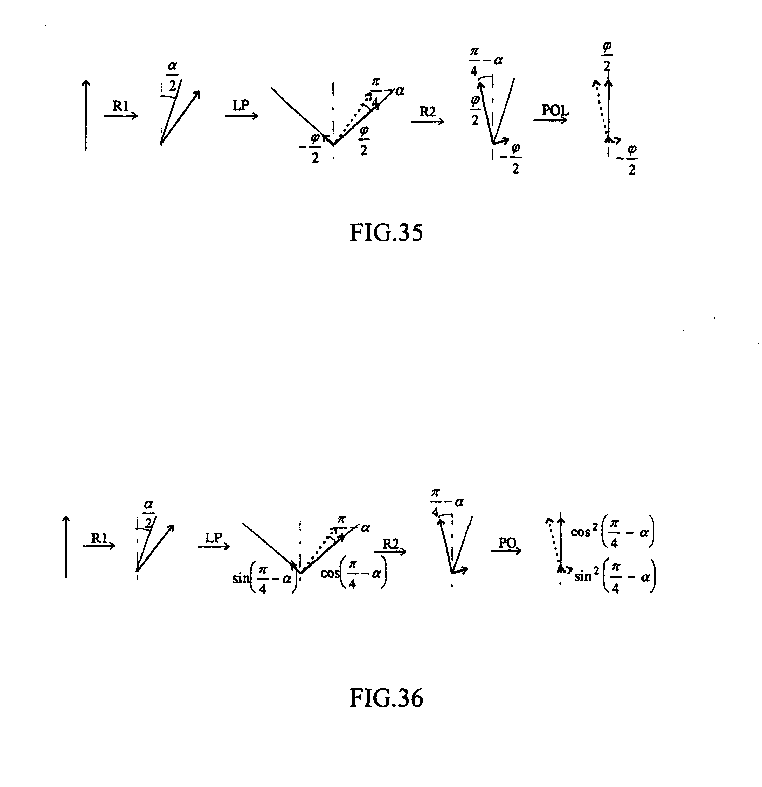

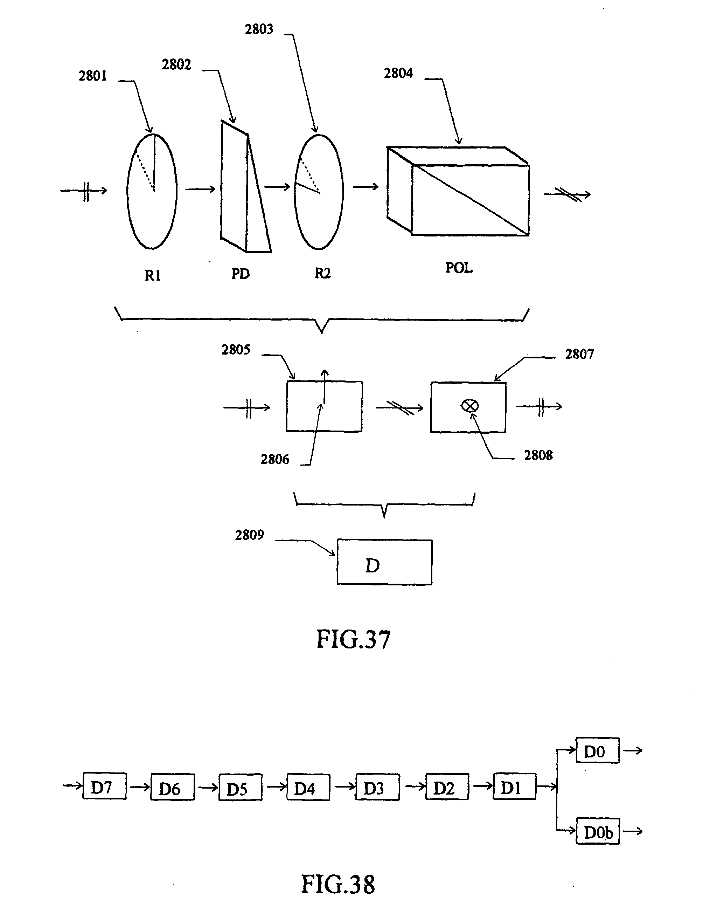

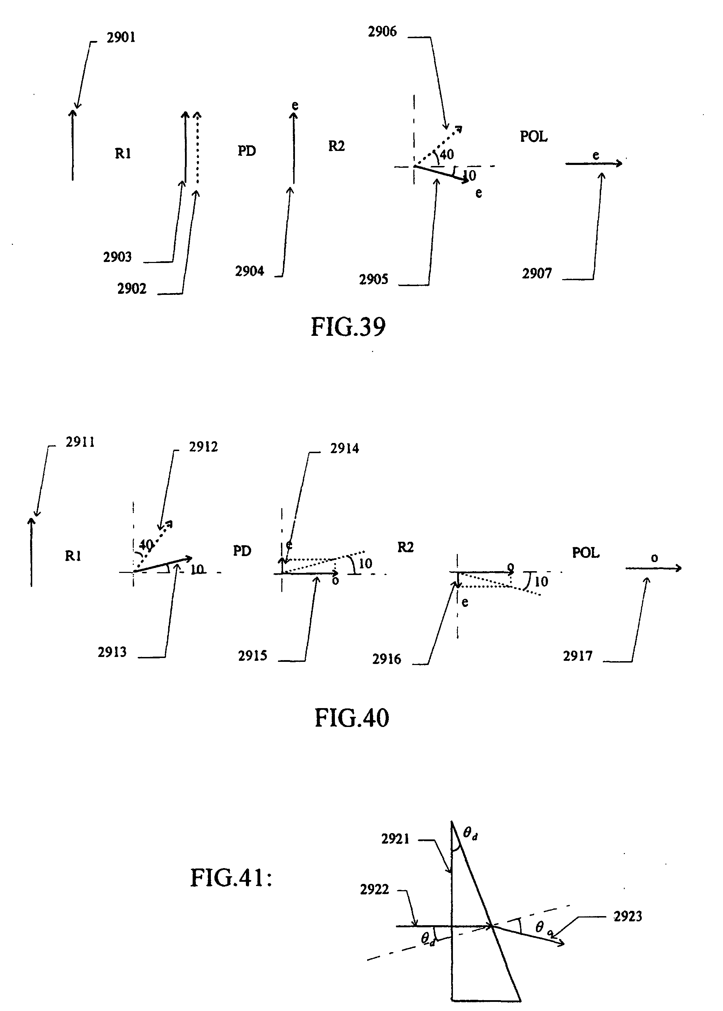

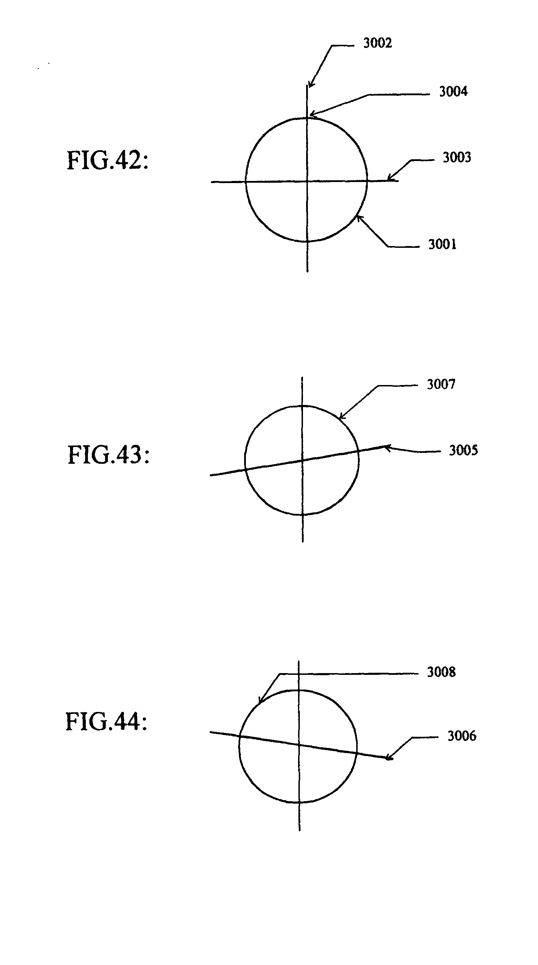

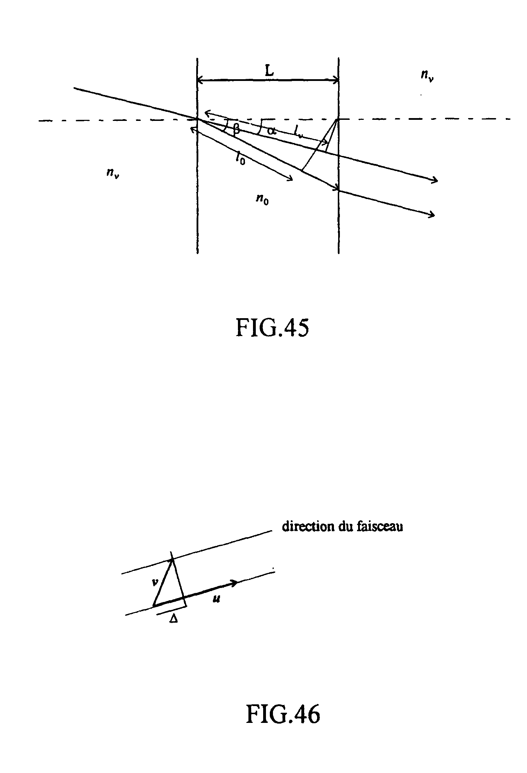

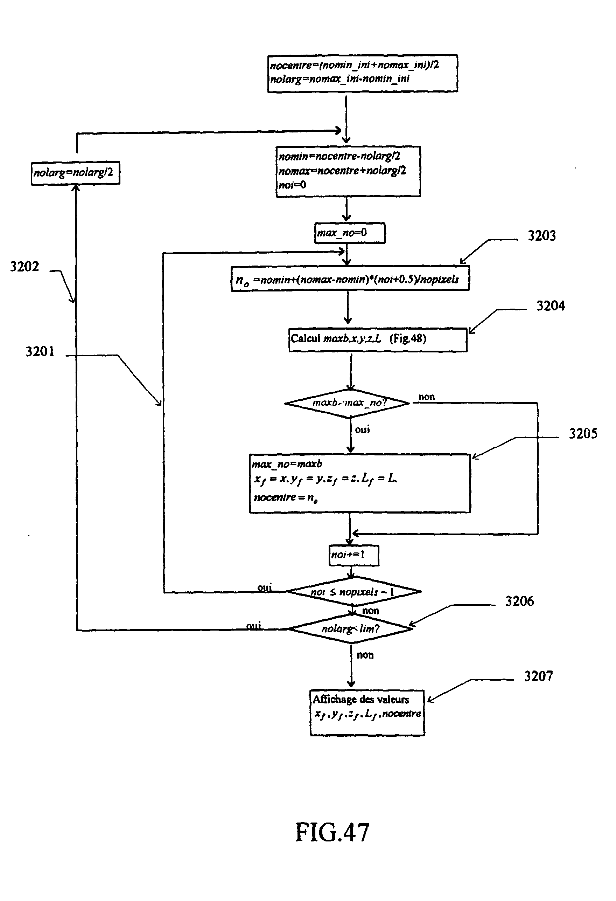

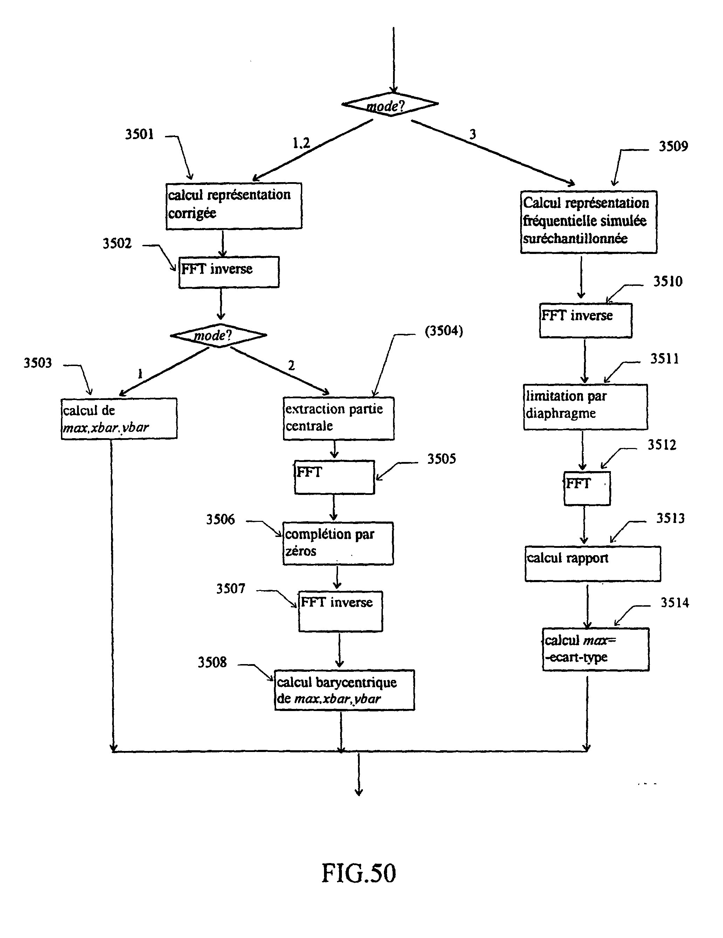

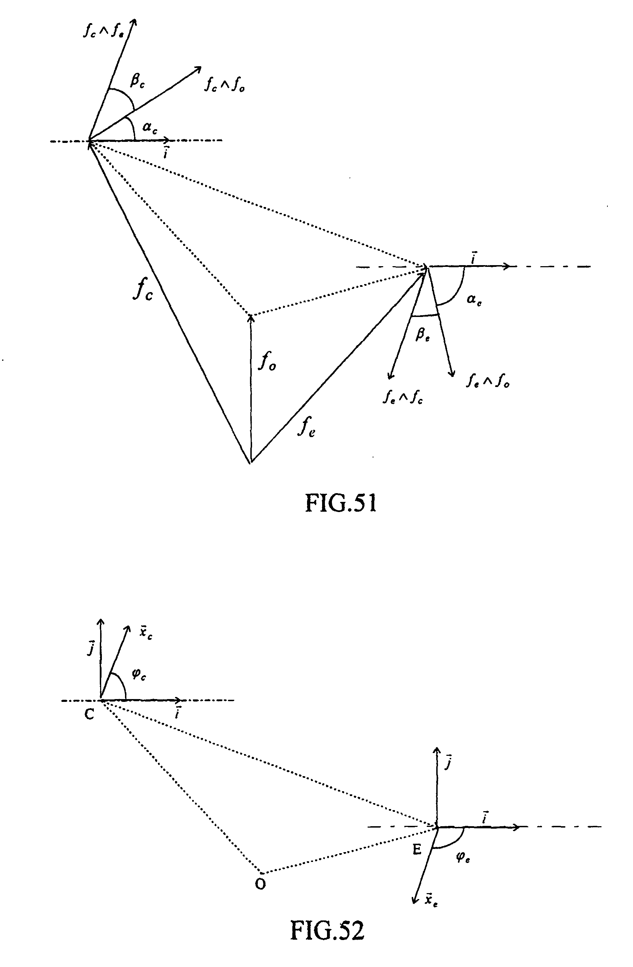

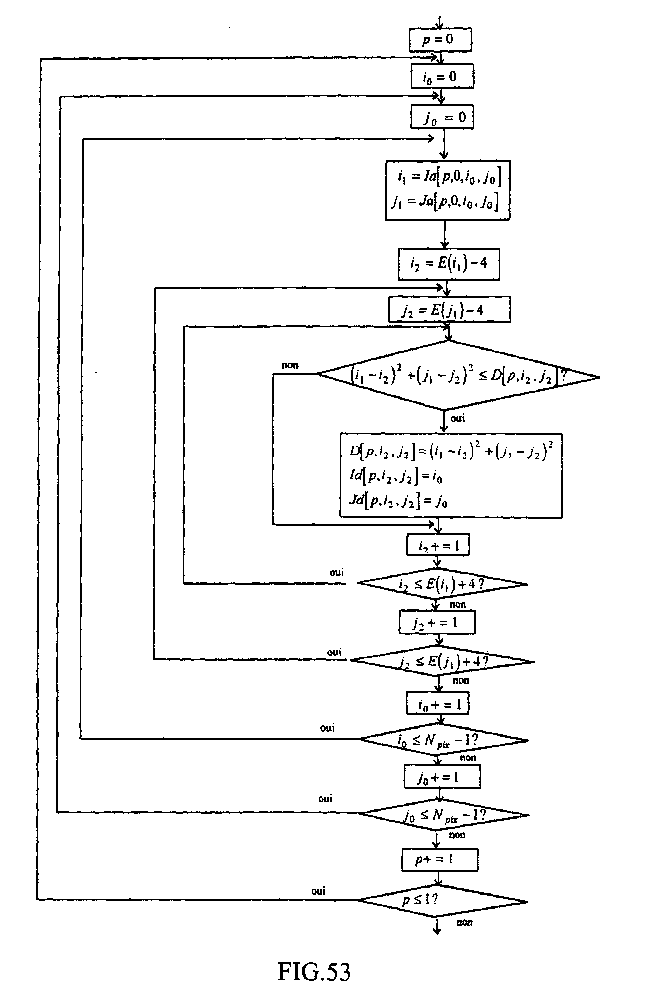

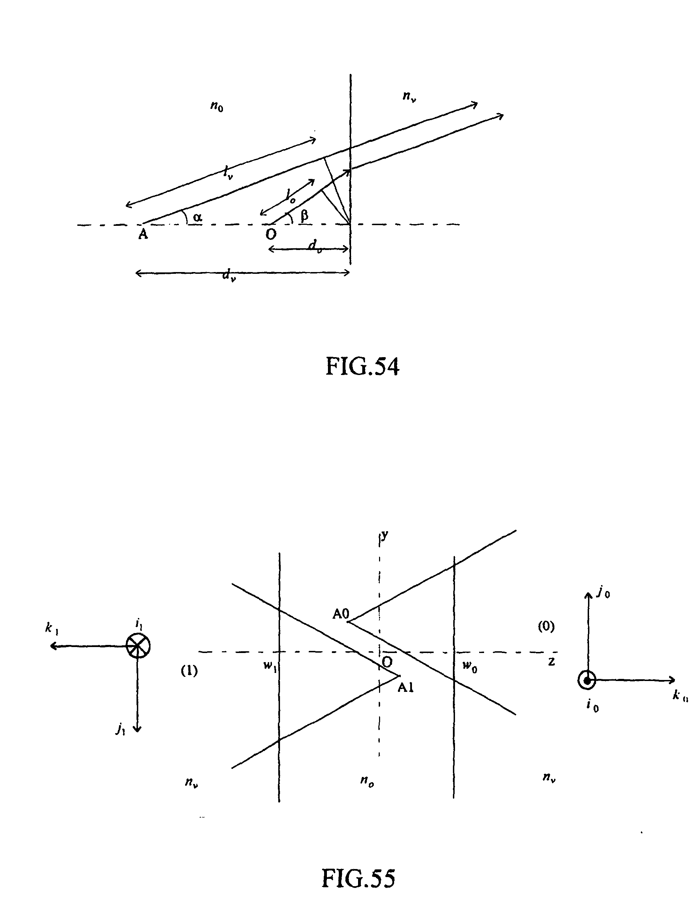

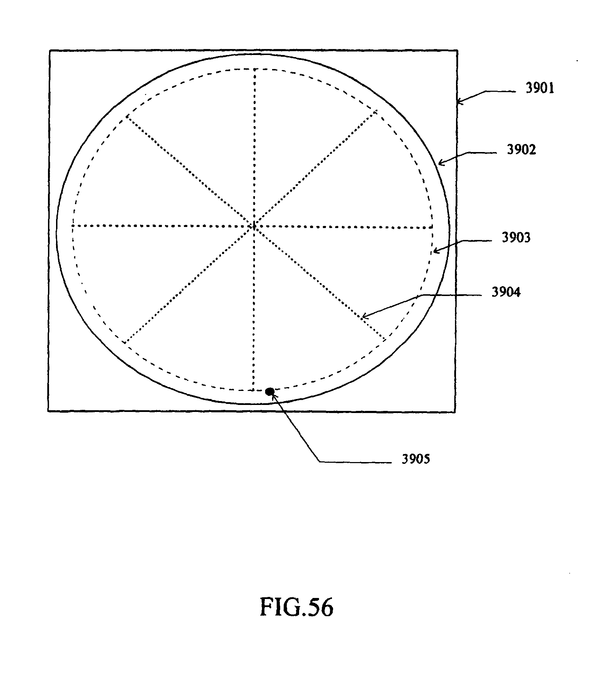

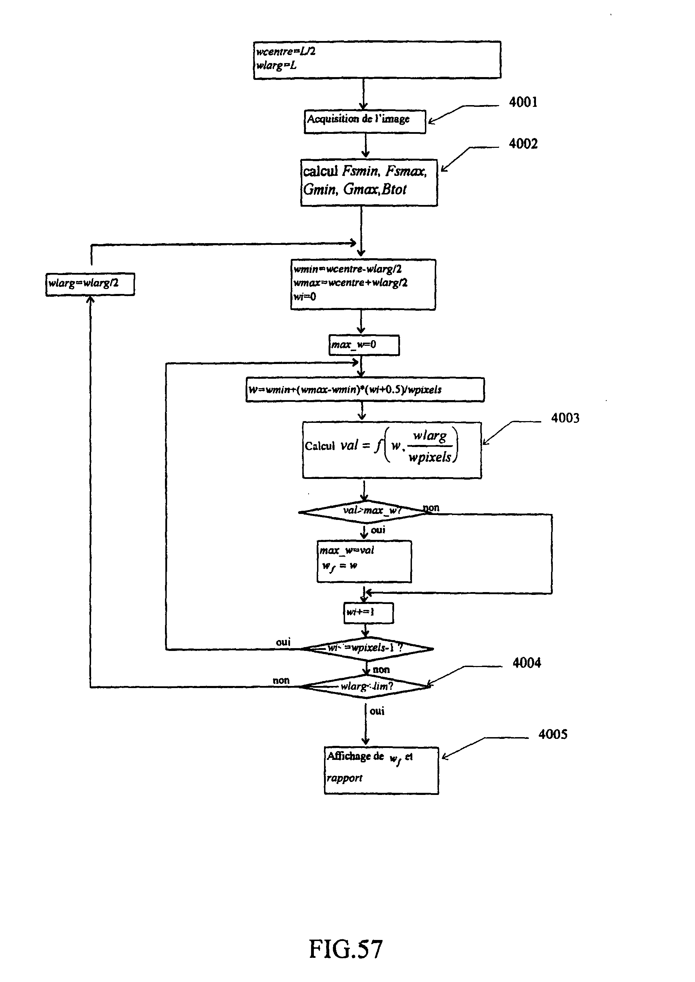

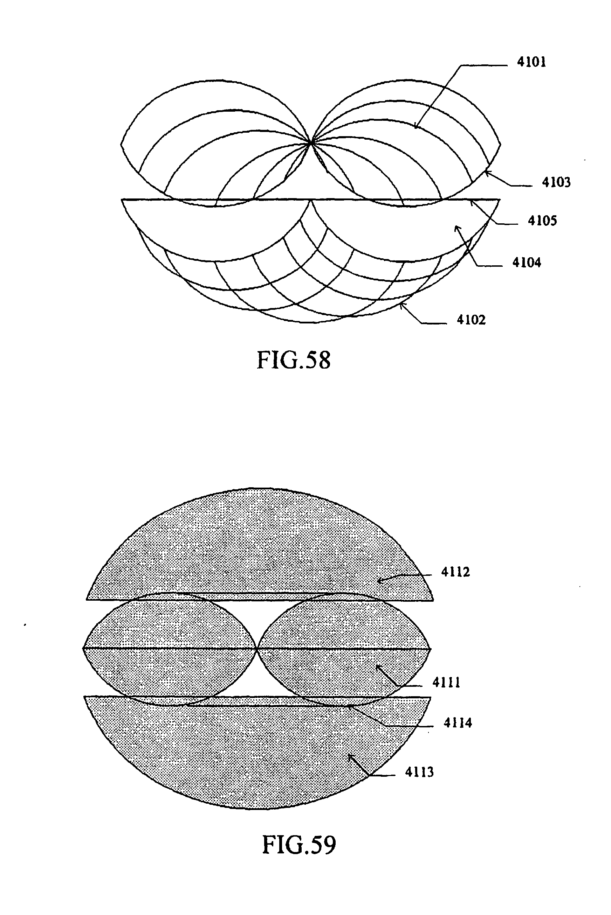

Les Fig.27 à 59 se rapportent à un troisième mode de réalisation. Les Fig.27 et 28 constituent un schéma d'ensemble de la partie optique du microscope. La Fig.29 schématise le trajet optique des rayons entre l'objectif et le capteur. La Fig.30 représente le dispositif d'atténuation de faisceau utilisé. La Fig. 31 est un schéma de principe illustrant son fonctionnement dans le cas ou il y a effectivement atténuation. La Fig.32 est un schéma de principe illustrant son fonctionnement dans le cas ou il n'y a pas d'atténuation. La Fig.33 représente le dispositif de décalage de phase utilisé. La Fig.34 est un schéma de principe illustrant son fonctionnement. La Fig. 35 reprend la Fig.34 en indiquant les déphasages des différents vecteurs. La Fig. 36 reprend la Fig.34 en indiquant le module des différents vecteurs. La Fig.37 représente une unité élémentaire du dispositif de déviation de faisceau utilisé. La Fig. 38 représente le dispositif de déviation du faisceau et de commutation, formé par association de ces unités élémentaires. Les Fig.39 et 40 sont des schémas de principe permettant de comprendre le fonctionnement d'une unité élémentaire. La Fig.39 correspond à une direction de déviation et la Fig.40 à l'autre direction de déviation possible. La Fig.41 illustre le calcul de la déviation du faisceau par un prisme. Les Fig.42 à 44 illustrent des étapes d'une procédure de marquage des rotateurs de phase. La Fig.42 illustre la première étape et les Fig. 43 et 44 illustrent une deuxième étape, dans deux cas différents. La Fig.45 illustre le calcul de la différence de marche produite sur un faisceau parallèle par un objet d'indice et d'épaisseur donnés. La Fig.46 illustre le calcul de la différence de marche produite sur un faisceau parallèle par un déplacement du point d'origine de l'onde de référence, par rapport auquel le trajet optique est calculé. Les Fig. 47 à 50 et la Fig.60 illustrent un algorithme de calcul des valeurs d'indice et d'épaisseur de l'échantillon ainsi que du déplacement du point d'origine de l'onde de référence. La Fig. 47 correspond au niveau le plus élevé de cet algorithme et la Fig.50 au niveau le plus bas. La Fig. 51 représente dans un espace tridimensionnel différents vecteurs utilisés pour évaluer l'effet sur l'onde diffractée de la polarisation du faisceau d'éclairage. La Fig.52 représente dans le plan d'un capteur des vecteurs déduits des précédents. La Fig.53 représente un algorithme permettant d'obtenir des indices de commande du déviateur de faisceau à partir des coordonnées du point d'impact direct recherché pour le faisceau d'éclairage. La Fig.54 illustre le calcul de la différence de marche d'une onde issue d'un point de l'objet par rapport à une onde de référence. La Fig.55 illustre le calcul de la différence de marche entre une onde issue d'un point de l'objet et les ondes de référence utilisées sur les deux capteurs du système. La Fig. 56 illustre la trajectoire, sur un des capteurs. du point d'impact direct de l'onde d'éclairage, pendant une procédure de prise d'image. La Fig. 57 représente un algorithme déterminant la position de l'objet par rapport aux objectifs. La Fig.58 illustre la manière dont la représentation fréquentielle tridimensionnelle de l'objet est obtenue par superposition de représentations bidimensionnelles. La Fig. 59 représente en coupe la représentation fréquentielle tridimensionnelle de l'objet.

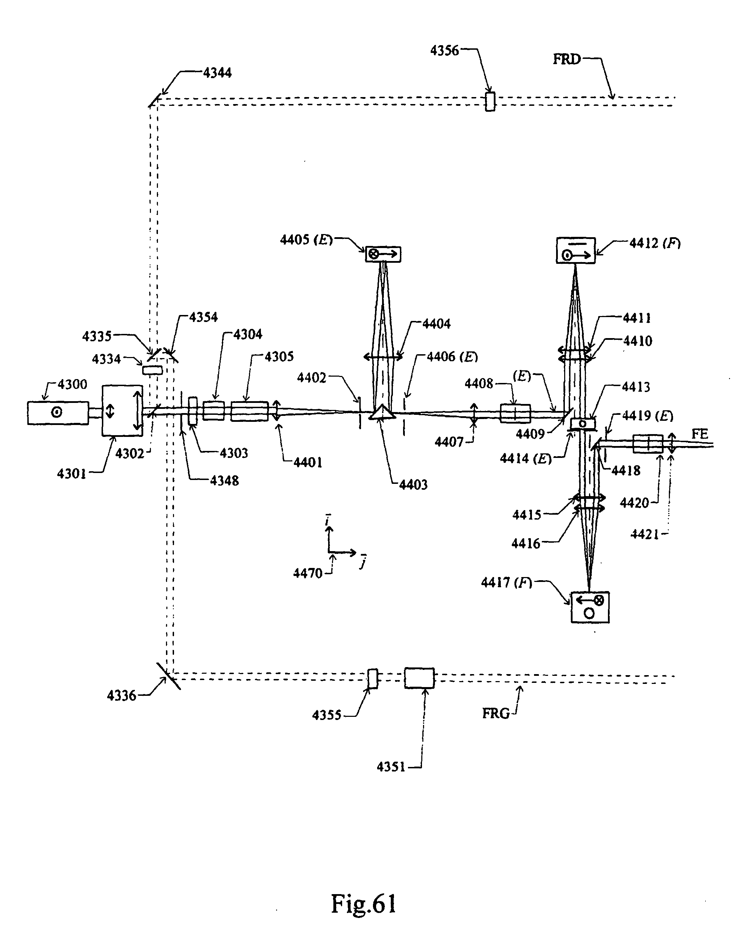

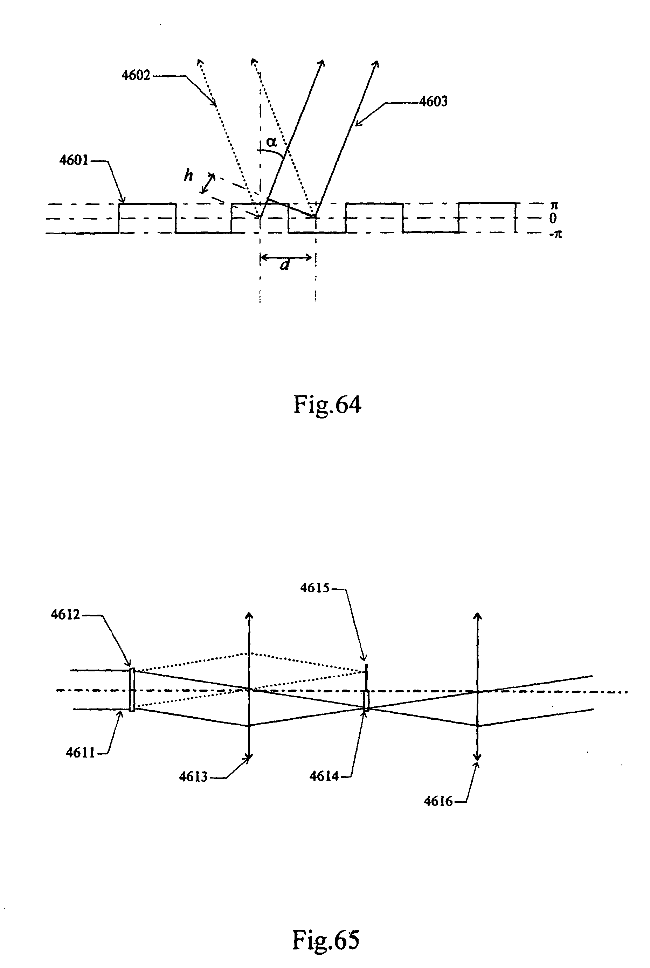

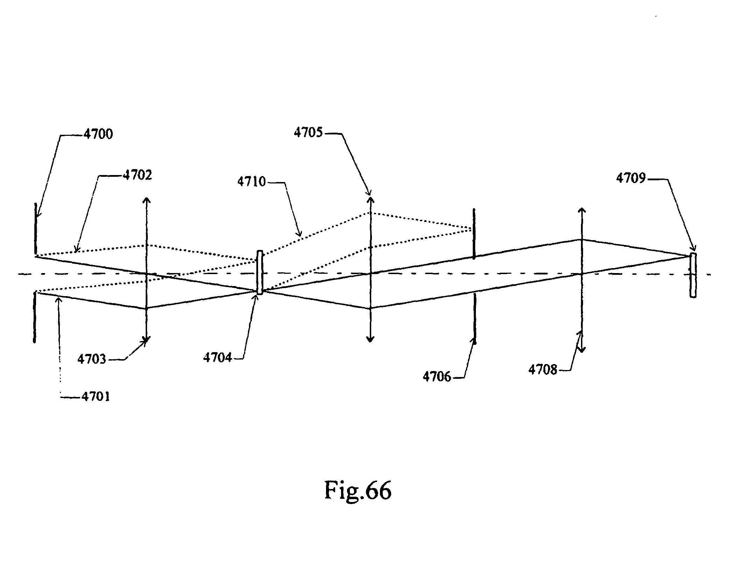

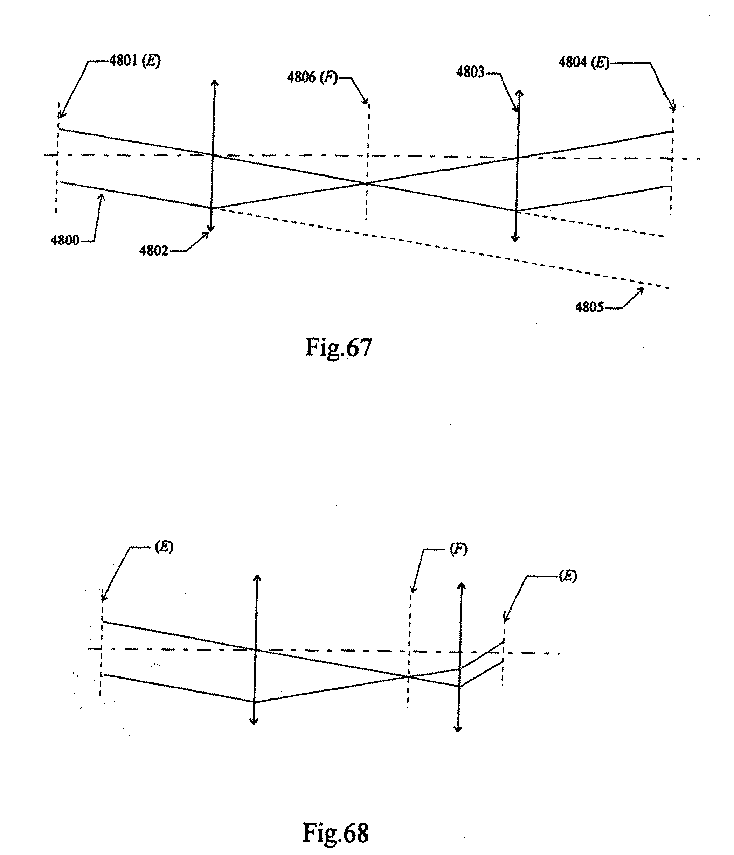

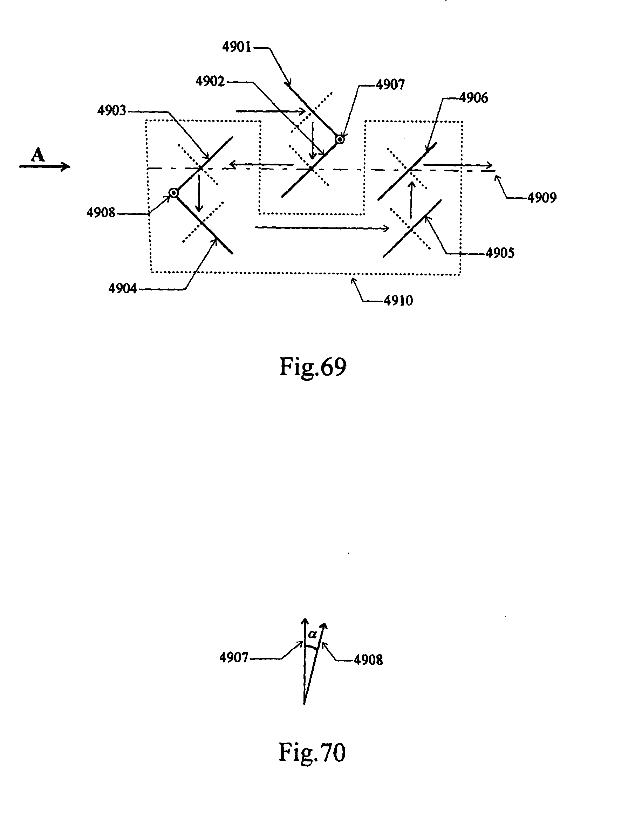

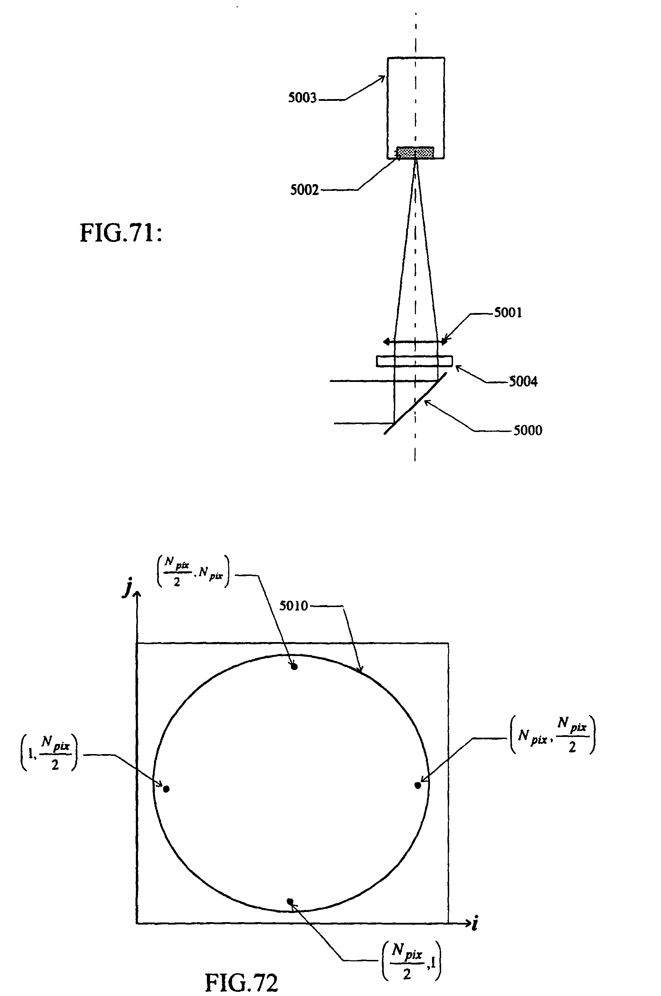

Les Fig.61 à 70 et 72 se rapportent à un quatrième mode de réalisation de l'invention, constituant le mode de réalisation préféré. Les Fig.61,62,63 constituent un schéma d'ensemble de la partie optique du microscope. Les Fig.64 et 65 illustrent le fonctionnement du déviateur de faisceau utilisé dans ce mode de réalisation. La Fig.66 illustre le fonctionnement d'un système de suppression de l'onde d'éclairage directe. Les Fig.67 et 68 illustrent le principe utilisé pour contrôler la trajectoirs du faisceau. Les Fig. 69 et 70 illustrent un système utilisé pour effectuer une rotation contrôlée d'un faisceau. La Fig.72 illustre l'image devant être obtenue dans une des opérations de réglage.

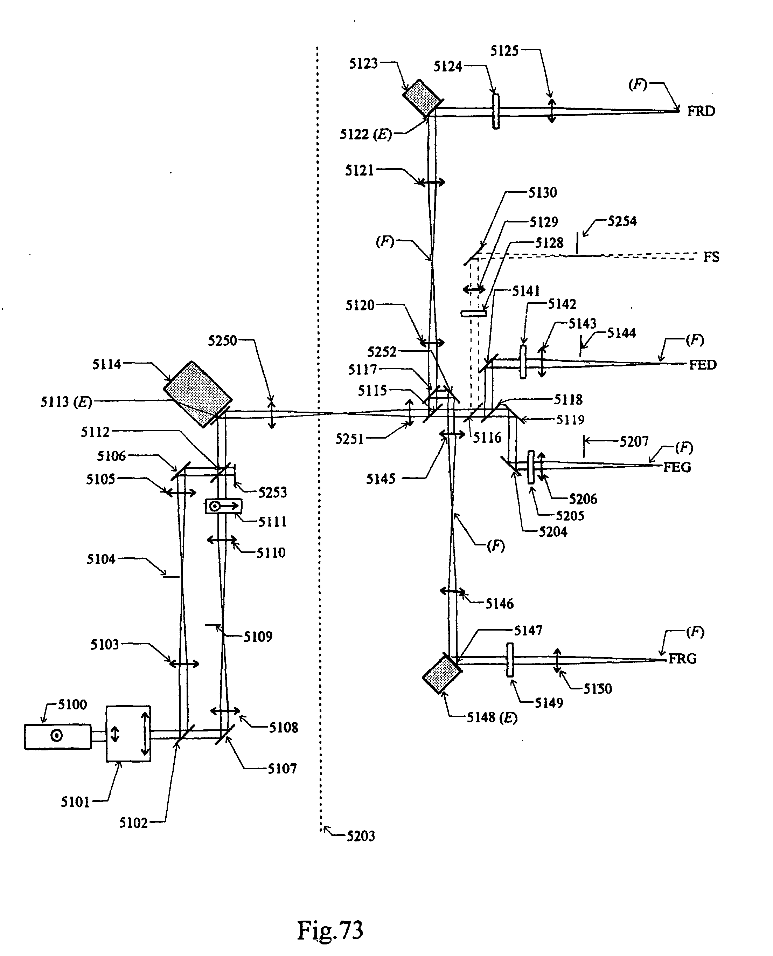

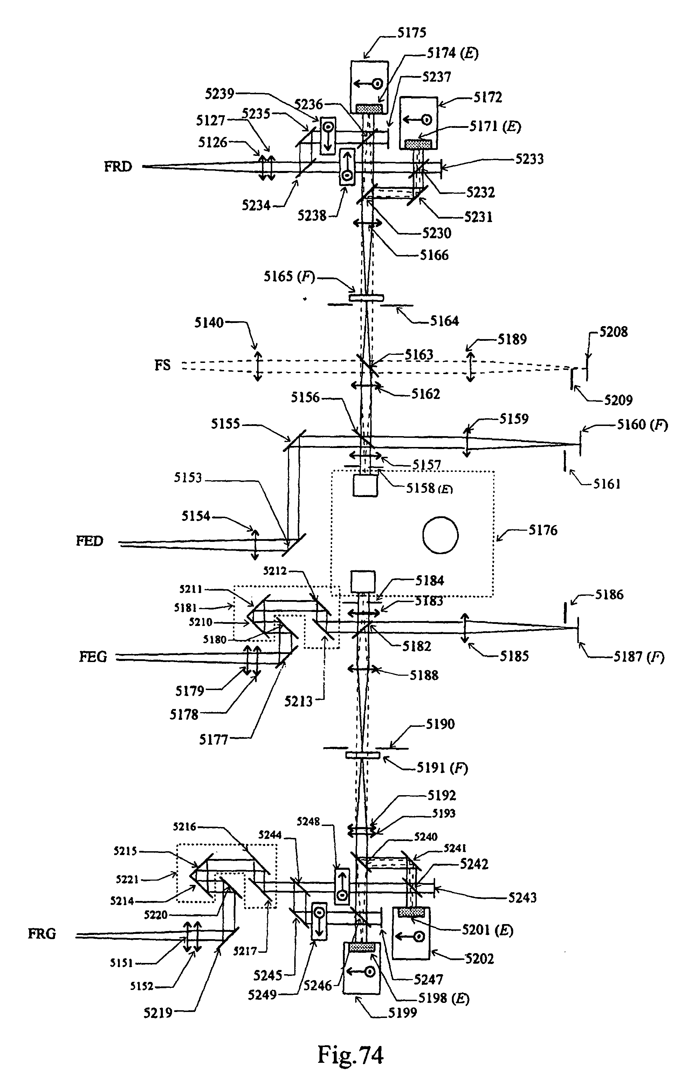

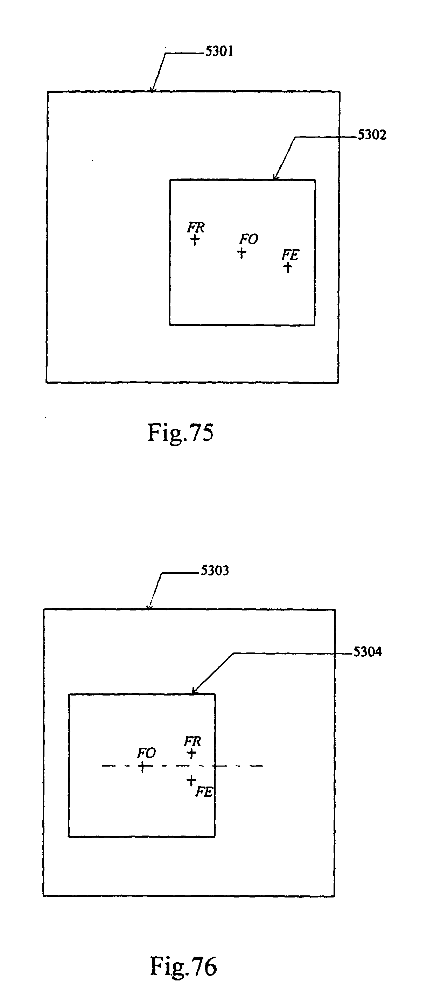

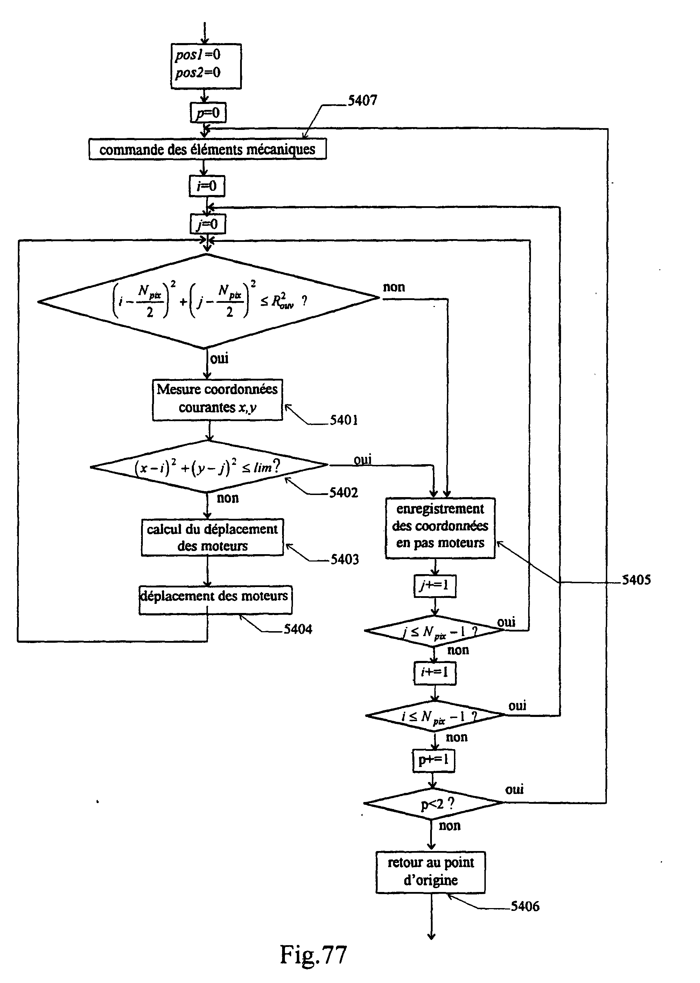

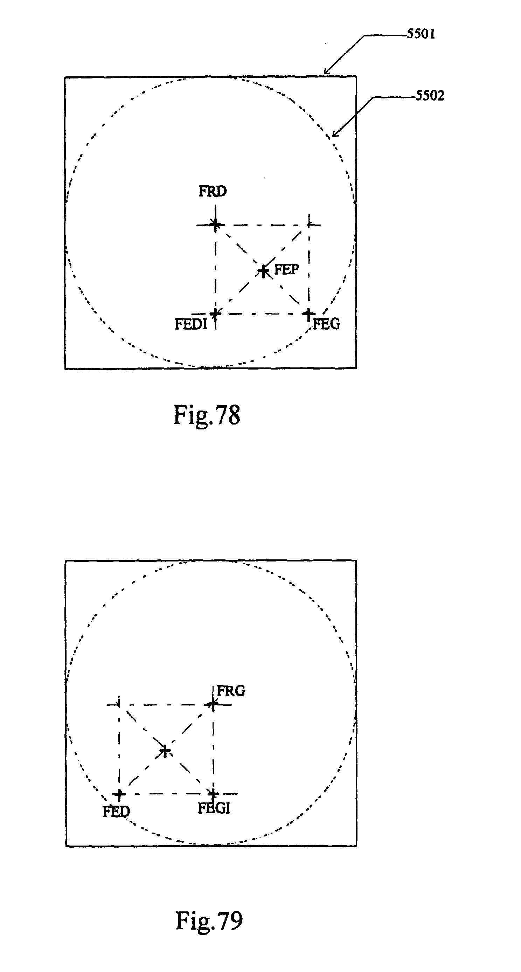

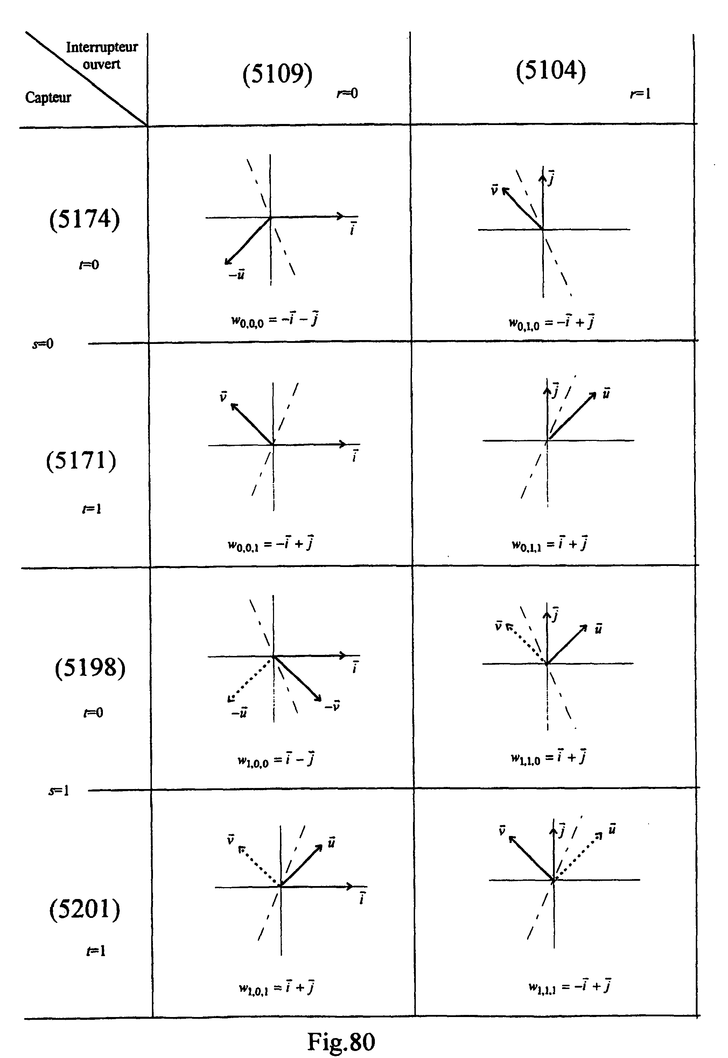

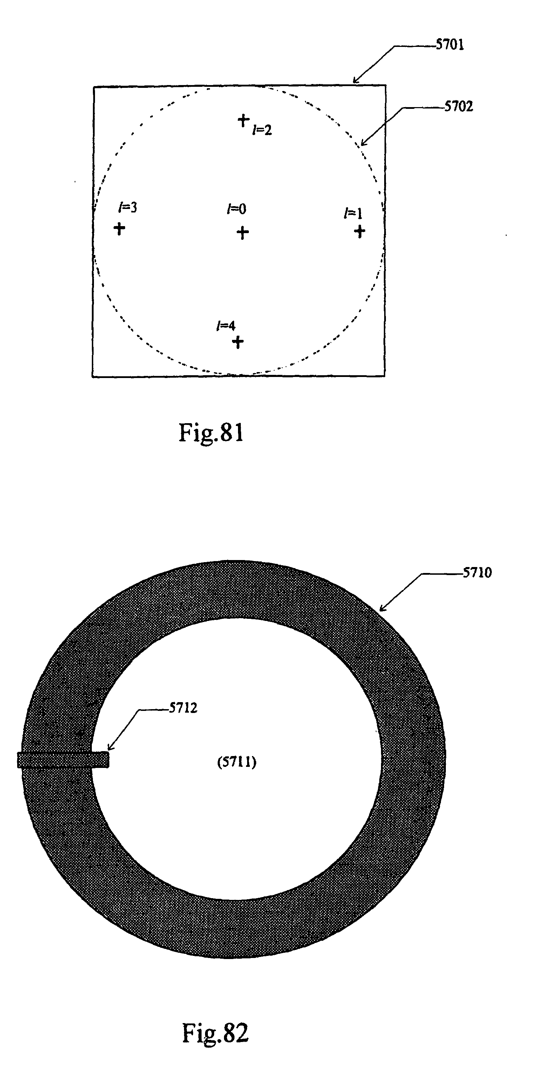

Les Fig.73 à 82 se rapportent à un cinquième mode de réalisation. Les Fig. 73 et 74 constituent un schéma d'ensemble de la partie optique du système. Les Fig. 75 et 76 illustrent des images obtenues lors d'une étape intermédiaire de calcul. La Fig.77 illustre un algorithme utilisé pour déterminer la séquence de commande d'un miroir déviant le faisceau et pour déterminer la séquence de commande d'une vitre arrêtant l'onde d'éclairage directe. Les Fig. 78 et 79 représentent des images obtenues lors d'une étape de réglage. La Fig.80 illustre le principe utilisé pour faire varier la polarisation de l'onde d'éclairage et la direction d'analyse. La Fig. 81 représente les points correspondant à diverses ondes d'éclairage utilisées dans un algorithme de recalage en phase. La Fig.82 représente un diaphragme utilisé dans ce mode de réalisation.

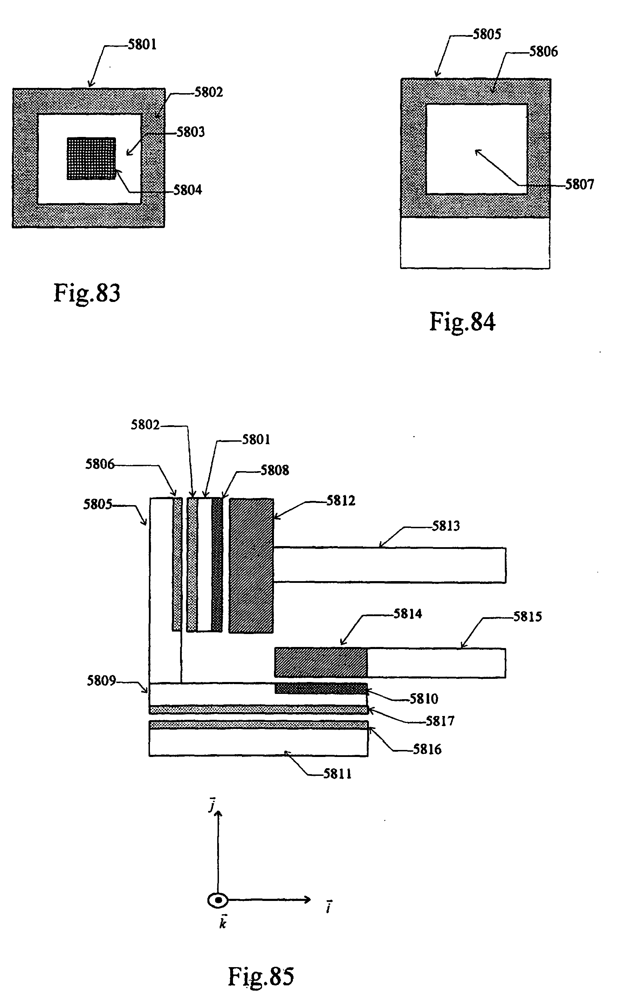

Les Fig.83 à 85 se rapportent à un dispositif pour positionner et fixer de manière définitive des éléments optiques. La Fig. 83 et la Fig.84 représentent des pièces de ce dispositif et la Fig.85 représente l'ensemble de ce dispositif.

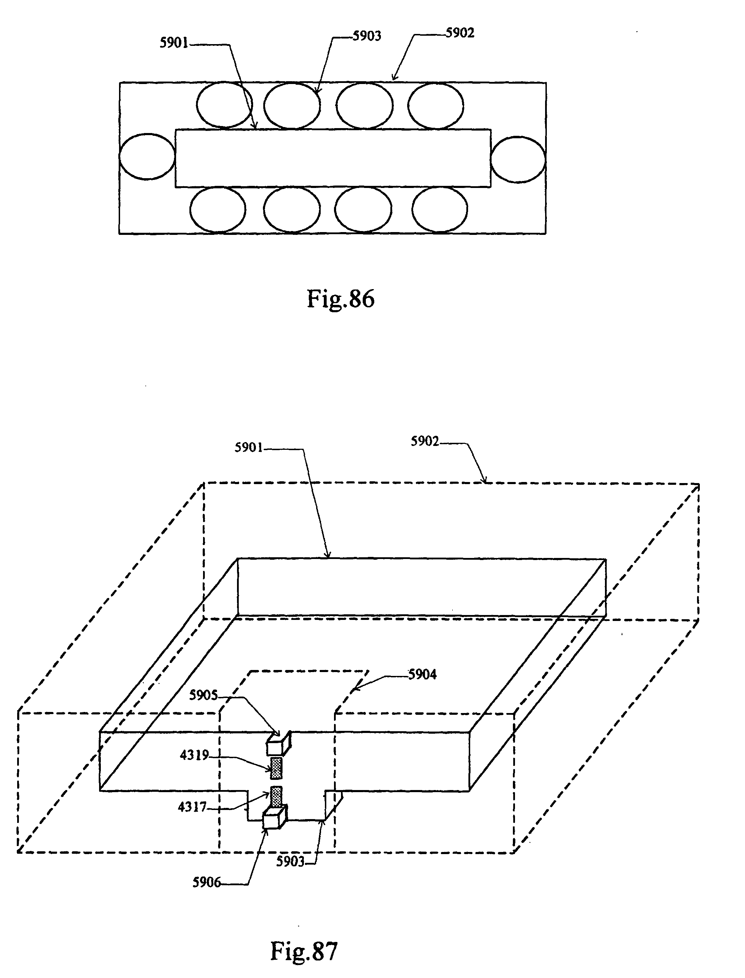

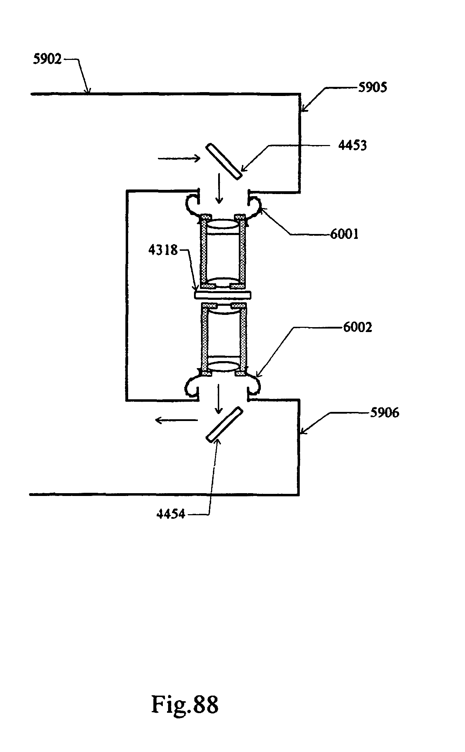

Les Fig. 86 à 88 se rapportent à un dispositif pour protéger le microscope des chocs et de la poussière. La Fig. 86 représente un schéma de principe du dispositif. Les Fig.87 et 88 représentent une configuration spécifique adaptée au cas du modes de réalisation 4.

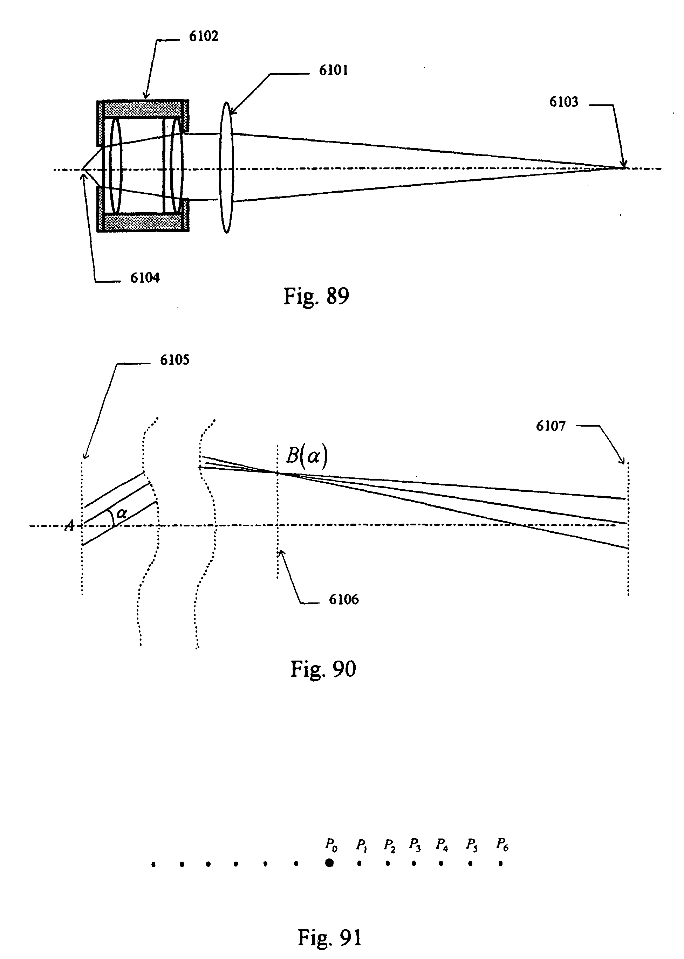

Les Fig.89, 90 et 91 se rapportent à l'utilisation d'objectifs non stigmatiques. La Fig.89 représente un exemple de réalisation d'un tel objectif. La Fig.90 sert de support à l'énoncé des contraintes devant être vérifiées par cet objectif. La Fig.91 montre une image plane en fréquence obtenue à l'aide de cet objectif.

**5.Description d'un premier mode de réalisation:**

Ce mode de réalisation est le plus simple et il est peu coûteux.

**5.1.caractéristiques matérielles:**

Un faisceau laser de longueur d'onde 633 nm polarisé dans le sens orthogonal à la figure est émis par le laser hélium-néon (100) et traverse le filtre (101) constitué de zéro, un ou plusieurs filtres empilés, en verre teinté Schott. Il est ensuite séparé en un faisceau d'éclairage Fe et un faisceau de référence Fr par le miroir semi-transparent (102). Le faisceau d'éclairage traverse ensuite un filtre (103) du même type que (101), puis un rotateur de polarisation (104) à base de cristaux liquides ferroélectriques et commercialisé par la société Displaytech Inc., 2602 Clover Basin Dr., Longmont, CO 80503, Etats-Unis. Il traverseensuite un polariseur (105). Le faisceau traverse ensuite un achromat (106) puis un diaphragme (107) et un achromat (108). Il est réfléchi par un miroir (109) fixé sur un positionneur angulaire (110) commandé par deux moteurs pas à pas. Il traverse ensuite un achromat (124) puis un condenseur (111) et atteint l'objet (112). Le condenseur est par exemple un condenseur aplanétique/achromatique Nikon d'ouverture 1,4, prévu pour une source de lumière située à l'infini. L'objet (112) est un échantillon placé entre lame et lamelle, dont l'absorptivité et les variations d'indice sont relativement faibles, et dont on veut obtenir une image tridimensionnelle. L'achromat (124) est placé aussi près que possible de la lentille la plus basse du condenseur (111), éventuellement dans le corps du condenseur. Le point focal objet de l'achromat (124) est confondu avec le centre de rotation du miroir (109). Les lentilles (106) et (108) doivent être telles que le faisceau laser focalise dans le plan focal objet de l'ensemble constitué du condenseur (111) et de l'achromat (124), et ait une ouverture suffisante à son arrivée dans ce plan focal. Le faisceau est donc à nouveau parallèle lorsqu'il atteint l'objet (112). Le plan de l'objet doit être horizontal pour que l'huile optique nécessaire pour utiliser l'objectif et le condenseur à immersion ne coule pas. L'axe optique est donc vertical et les éléments de la Fig.1 sont fixés sur une plaque verticale (300) représentée sur la Fig.4.

Le positionneur angulaire (110) est détaillé sur les Fig.2 et 3. La Fig 2 représente une plaque sur laquelle le miroir (109) est collé, en vue de dessous. La Fig.3 représente l'ensemble du dispositif vu de coté. La plaque (200) est posée sur des plots de contact mobiles (205) et (212) dont les points de contact avec la plaque sont en (203) et (204), et sur un plot de contact fixe dont le point de contact est en (201), la plaque (200) étant légèrement creusée en ce point. Elle est maintenue par un ressort (210) fixé à la plaque en (202) et à un plot fixe (211). Le plot de contact mobile (205) se déplace verticalement en translation et est intégré à un actuateur un axe de type classique: il est bloqué en rotation par un flexible (207) et est entraîné en translation par la rotation de la tige (206) sortant du moteur pas à pas (208) qui est par exemple un moteur pas à pas 400 pas/tour. L'entraînement se fait par exemple par l'intermédiaire d'un pas de vis. Le plot de contact (212) est de même entraîné par la rotation du moteur (213). Le point de contact fixe (201) doit être dans l'axe optique de l'objectif (113) et le centre du miroir doit être sur ce point de contact. Les moteurs (208) et (213) sont fixés sur une plaque (209) elle-même fixée sur la plaque support (300). Le centre de rotation du miroir, qui doit être positionné sur l'axe optique, est un point de la surface réfléchissante du miroir, situé sur une droite orthogonale au plan du miroir et passant par le centre de (201).

L'onde issue de l'objet (112) traverse l'objectif de microscope (113). Cet objectif est un objectif plan (qui donne une image plane d'un plan), à grande ouverture (par exemple 1,25), à immersion, et formant une image aggrandie de l'objet à une distance finie.

Dans le plan ou l'objectif forme normalement l'image de l'objet à observer, on interpose un diaphragme (114) permettant un filtrage spatial de l'image. En arrière de ce plan on positionne un achromat (115) dont le plan focal objet doit être confondu avec le plan focal image de l'objectif (113). Un second achromat (117) dont le plan focal image est dans le plan d'un capteur CCD (118) forme dans le plan de ce CCD l'image du plan focal image de l'objectif (113). Le CCD (118) est intégré à une caméra (119) sortant un signal vidéo analogique et une horloge pixel.

Le faisceau de référence traverse d'abord un filtre (120) de même type que (101) puis est réfléchi par un miroir (121) monté sur l'extrémité mobile d'un translateur piézoélectrique (122). Il traverse ensuite une lentille (123) qui focalise le faisceau en un point. Le faisceau divergent issu de ce point est réfléchi partiellement par le miroir semi-réfléchissant (116), ce qui le superpose au faisceau issu de l'objet et permet d'enregistrer leurs interférences sur le CCD (118). Le point de focalisation du faisceau issu de la lentille (123) doit avoir son image virtuelle après réflexion sur le miroir semi-transparent (116) au centre de l'image du diaphragme (114) par l 'achromat (115). Le translateur piézoélectrique (122) permet de moduler la phase du faisceau de référence.

Les positionneurs manuels utilisés dans le système ne sont pas représentés sur la figure. L'objectif de microscope (113) est monté sur un dispositif de focalisation. Le laser (100) est monté sur un positionneur deux axes permettant d'en régler la direction. La partie fixe de la pile piézoélectrique (122) est montée sur un positionneur deux axes permettant une rotation par rapport à un axe orthogonal au plan de la figure et passant par le centre du miroir (121), et par rapport à un second axe situé dans le plan du miroir (121), orthogonal au premier axe et passant par le centre du miroir (121). Le condenseur est monté sur un positionneur trois axes en translation. La caméra (119) est montée sur un positionneur trois axes en translation. La position angulaire des miroirs semi-transparents (102) et (116) peut être ajustée manuellement. La lentille (106) peut être translatée suivant son axe. L'objet (112) est fixé sur un positionneur à deux dimensions permettant de le déplacer dans un plan horizontal. Le diaphragme (114) peut être déplacé dans un plan horizontal.

L'ensemble est fixé sur la plaque support (300), du coté de la plaque opposé au point de vue de la Fig.4. Cette plaque est fixée à deux plaques triangulaires (301) et (302) elles-mêmes fixées à une base carrée (303). La plaque (300) est également fixée directement à la base carrée (303). Les plaques (300)(301)(302)(303) sont en alliage d'aluminium rigide AU4G, par exemple d'épaisseur 20 mm. La fixation des plaques peut se faire par des vis et des trous taraudés, et doit être faite en un nombre de points suffisant pour assurer une rigidité parfaite de l'ensemble. Ceci permet de maintenir le système à la verticale en assurant une rigidité suffisante. L'ensemble est posé sur un support antivibratoire constitué d'une plaque en granit (304) d'épaisseur 30 mm posée sur une chambre à air de camionette gonflée à faible pression (305) qui amortit les vibrations et qui est elle-même posée sur une table rigide en bois (306). Un cadre rigide en bois (311) est fixé en hauteur par l'intermédiaire de montants (307) (308)(309)(310) à la table (306). L'ensemble de la construction en bois est renforcé de manière à être parfaitement rigide. Le haut de la plaque (300) est relié par des tendeurs (312)(313)(314)(315) aux coins du cadre rigide. Chaque tendeur, détaillé sur la Fig.5, est constitué d'un ensemble de bracelets élastiques (316) tendus entre deux anneaux (318)(317), ces anneaux étant eux-mêmes fixés à la plaque (300) et au cadre (311) par des cordelettes (320)(319), l'ensemble étant mis sous tension. La chambre à air (305) permet d'avoir pour l'ensemble suspendu en AU4G de faibles fréquences de résonnance pour les mouvements de translation, de l'ordre de 2 Hz. Les tendeurs (312) à (315) permettent de limiter le balancement de l'ensemble. La fréquence de balancement peut être évaluée simplement en imprimant un léger mouvement de balancier à l'ensemble et en mesurant le temps nécessaire pour avoir, par exempte, dix balancements. La fréquence de balancement se règle en modifiant le nombre de bracelets élastiques utilisés pour chaque tendeur. Plus il est élevé, plus la fréquence de balancement augmente. Il doit être réglé pour que la fréquence de balancement soit du même ordre que la fréquence de résonnance pour les mouvements de translation, soit environ 2Hz.

Le montage des divers éléments sur la plaque (300), et en particulier des miroirs et miroirs semi-transparents, doit être effectué de manière à assurer une rigidité maximale de l'ensemble. Toutes les précautions usuelles doivent être prises de manière à limiter les vibrations.

Les précisions suivantes concernent un exemple particulier de dimensionnement pratique du dispositif. Les distances citées sont représentées sur la Fig.6. Les dimensions données sont approximatives et certaines d'entre elles doivent être corrigées dans une phase de réglage. La lentille (106) est un achromat de distance focale 10 mm. La lentille (108) est un achromat de diamètre 24 mm et de distance focale 120 mm. La distance D7 entre (106) et (108) est de 250 mm. La distance D6 entre la lentille (108) et le centre du miroir (109) est d'environ 100 mm. La distance D5 entre le centre de rotation du miroir (109) et l'achromat (124) est de 120 mm. L'achromat (124) est placé à environ 5 mm de la lentille la plus basse du condenseur, dans le corps du condenseur. Le condenseur est un condenseur fond clair achromatique/aplanétique à immersion d'ouverture 1,4, par exemple le modèle Nikon. L'objectif de microscope est un objectif planachromatique x100 d'ouverture 1,25, à distance finie, formant l'image à 160 mm du col de l'objectif, de distance focale environ 1,8 mm, par exemple le modèle Zeiss. La distance D4 entre le col de l'objectif et le diaphragme (114) est de 160 mm. La distance D3 entre le diaphragme (114) et l'achromat (115) est de 20 mm. L'achromat (115) a une distance focale de 200 mm et un diamètre de 30 mm et sa face la plus bombée est orientée vers le miroir semi-transparent (116). L'achromat (117) a les mêmes caractéristiques et sa face la plus bombée est également orientée vers le miroir (116). La distance D2 entre les deux achromats est de 85 mm, permettant d'insérer un miroir semi-transparent (116) de dimensions suffisantes. La distance entre l'achromat (117) et le CCD (118) est de 200 mm. La lentille (123) a un diamètre de 4mm et une distance focale de 6mm. La distance D9 entre cette lentille et l'axe optique est d'environ 70 mm. La distance D8 entre l'achromat (115) et le centre du miroir semi-transparent (116), situé sur l'axe optique, est d'environ 45 mm. Le laser (100) est un laser hélium-néon de longueur d'onde dans le vide $\lambda = 633$ nm polarisé dans le sens orthogonal à la figure, de puissance environ 0,5 mW, de diamètre de faisceau 0,5 mm. Le capteur CCD est un capteur à pixels carrés, la surface du pixel étant d'environ 8,5 x 8,5 micromètres, et la surface utile en pixels étant de dimension au moins égale à 512x512 pixels. La caméra sort un signal vidéo CCIR et une horloge pixel, et son temps d'exposition est égal à la moitié de la durée d'un champ, soit 1/50e de seconde pour une caméra CCIR non entrelacée dont les champs durent 1/25e de seconde. Ceci permet d'avoir un délai entre la fin d'un champ et le début de la période d'exposition suivante, délai qui peut être utilisé pour modifier les conditions d'éclairage sans que la transition influe sur l'image. Le positionneur piézoélectrique (122) est une 'pile' piézoélectrique précontrainte en forme de cylindre dont le corps est fixe et l'extrémité se déplace de 15 micromètres pour une tension appliquée de 100 Volts.

Le système de calcul est par exemple un ordinateur type 'PC', doté de cartes d'acquisition et de commande appropriées et éventuellement de moyens de calcul supplémentaires, fonctionnant par exemple sous le système d'exploitation Windows 95. La carte d'acquisition du signal vidéo, fonctionnant en temps réel, échantillonne le signal sur 8 bits et acquiert des images de taille *hpix* x *vpix* ou *hpix* et *vpix* sont supérieurs à 512 et multiples de 4. Les pixels sont échantillonnés suivant l'horloge pixel, donc correspondent exactement aux pixels du CCD. Le positionneur piézoélectrique est piloté directement par une carte de conversion digitale/analogique sortant un signal compris par exemple entre zéro et $U_{max}$, avec par exemple $U_{max}$ =10 volts. Une résistance est interposée entre la sortie de la carte de conversion et les bornes de l'actionneur piézoélectrique de manière à limiter le courant. Sa valeur est réglée de sorte que le temps de montée de la tension aux bornes de l'actionneur (122) soit d'environ 1 ms. Le rotateur de polarisation (104) est équivalent à une lame demi-onde dont l'axe peut tourner et a deux positions d'équilibre séparées par un angle de 45 degrés. S'il est positionné de manière à ce que le faisceau polarisé soit parallèle à cet axe dans une des positions d'équilibre, il fera tourner le faisceau de 90 degrés dans l'autre position. Le rotateur de polarisation est piloté par application d'une tension bipolaire, -5V correspondant à une position d'équilibre et +5V à l'autre. Chaque borne du rotateur de polarisation est reliée à une sortie 0/5V d'une carte de sortie numérique, et ses deux positions sont commandées en appliquant dans un cas 0V à une sortie et 5V à l'autre, et en inversant pour l'autre position. Les moteurs pas à pas (208) et (212) sont également pilotés depuis l'ordinateur, via une carte de commande et une électronique appropriées. L'ordinateur est doté d'une mémoire interne suffisante (au moins 32 Mo) et d'un disque dur de taille suffisante (au moins 4 Go).

### 5.2. Conventions diverses

Les conventions suivantes seront utilisées dans la suite de cette description, y compris dans les autres modes de réalisation:

- La lettre $j$ représente tantôt un indice, tantôt le nombre complexe imaginaire pur de module 1. Dans le cas ou il peut y avoir ambiguité le nombre complexe $j$ sera noté $\tilde{j}$.
- le signe = symbolise suivant les cas l'opération d'affectation ou l'égalité
- l'expression $a+=b$ signifie $a=a+b$
- $a$ multiplié par $b$ est écrit $ab$, $a.b$ ou $a*b$
- le module d'un nombre complexe $z$ est noté $|z|$ et son conjugué est noté $\bar{z}$.
- l'expression $a\%b$ signifiera « $a$ modulo $b$ »
- si $a$ est un entier booléen, $\bar{a}$ est son complémentaire, soit $\bar{0} = 1$ et $\bar{1} = 0$
- La transformée de Fourier discrète, dans sa forme la plus usuelle, transforme un Dirac situé à l'origine en une constante et transforme une constante en un point situé à l'origine. La transformée de Fourier discrète utilisée dans l'ensemble de ce brevet transforme une constante en un Dirac situé au milieu du tableau transformé et transforme un Dirac situé en ce point en une constante. Ceci signifie que le 'zéro' en fréquence ou en position est placé au milieu du tableau et non à l'origine du tableau. Cette transformée modifiée s'obtient à partir de la forme usuelle en effectuant avant et après la transformation une permutation d'indices. Un tableau $E$ de dimension $fdim$ est transformé comme suit:

    1-première permutation: $E[i]=E[(i+fdim/2)\%fdim]$
    2- transformation de Fourier usuelle du tableau E
    3- permutation inverse: $E[i]=E[(i+fdim/2)\%fdim]$

ou le signe % désigne le modulo.

- La transformée de Fourier bidimensionnelle d'un tableau de lignes et colonnes est obtenue en effectuant la transformation de Fourier monodimensionnelle définie ci-dessus sur chaque ligne du tableau, ce qui génère un tableau intermédiaire, puis en effectuant cette transformation sur chaque colonne du tableau intermédiaire pour obtenir le tableau transformé.
- De même, la transformée de Fourier tridimensionnelle consiste à effectuer successivement selon chaque axe des transformées monodimensionnelles étendues à l'ensemble du tableau.

### 5.3. Principes de fonctionnement

La valeur de l'onde lumineuse issue de l'objet sous un éclairage donné en un point du capteur CCD est obtenue à partir de l'enregistrement de trois figures d'interférences reçues sur le capteur, la phase de l'onde de référence étant décalée de 120 degrés entre chacune de ces figures.

Si $s$ est la vibration lumineuse issue de l'objet et $r$ est la vibration lumineuse constituant l'onde de référence lors du premier enregistrement, les vibrations lumineuses totales parvenant au capteur lors des trois enregistrement successifs sont:

$$s_0 = s + r$$

,

$$s_1 = s + re^{j\frac{2\pi}{3}},$$

$$s_2 = s + re^{-j\frac{2\pi}{3}}.$$

Les intensités enregistrées successivement sont donc:

$$|s_0|^2 = |s|^2 + |r|^2 + (s\bar{r} + \bar{s}r)$$

$$|s_1|^2 = |s|^2 + |r|^2 + \left( s\bar{r}e^{-j\frac{2\pi}{3}} + \bar{s}re^{j\frac{2\pi}{3}} \right)$$

$$|s_2|^2 = |s|^2 + |r|^2 + \left( s\bar{r}e^{j\frac{2\pi}{3}} + \bar{s}re^{-j\frac{2\pi}{3}} \right)$$

On peut inverser ces formules et on obtient:

$$s\frac{\bar{r}}{|r|} = \frac{1}{6|r|}\left( 2|s_0|^2 - |s_1|^2 - |s_2|^2 \right) + j\frac{1}{2\sqrt{3}|r|}\left( |s_1|^2 - |s_2|^2 \right)$$

La valeur ci-dessus est la vibration lumineuse provenant de l'objet seul, la référence de phase étant conventionnellement égale à zéro pour une vibration en phase avec l'onde de référence. Ce calcul permet donc de reconstituer la valeur complexe de l'onde à partir des enregistrements d'intensité.

Par construction, chaque point du capteur CCD correspond à une fréquence pure $f_C$ de l'onde provenant de l'échantillon. On appelle centre optique du capteur le point du capteur illuminé par un rayon entrant dans l'objectif avec une direction strictement parallèle à l'axe de symétrie de ce dernier et on note $C_x, C_y$ ses coordonnées en pixels. L'objectif vérifiant la condition des sinus, la déviation en sortie d'objectif d'un rayon originaire d'un point central de l'objet est proportionnelle au sinus de son angle d'entrée dans l'objectif , qui vaut

$$\sin\varphi = \frac{\sqrt{f_x^2 + f_y^2}}{\sqrt{f_x^2 + f_y^2 + f_z^2}},$$

ou

$$\left( f_x, f_y, f_z \right)$$

sont les coordonnées du vecteur fréquence spatiale du faisceau en entrée de l'objectif, de norme $\frac{1}{\lambda}$ ou $\lambda$ est la longueur d'onde dans le milieu observé, et de direction la direction du faisceau. Le reste du système optique étant paraxial, la déviation du point d'arrivée du rayon sur le capteur par rapport au centre optique du capteur est également proportionnelle à cette grandeur, et donc les coordonnées

$$\left(i - C_x, j - C_y\right)$$

de ce point par rapport au centre optique sont proportionnelles à

$$\left(f_x, f_y\right).$$

Dans le cas ou le capteur a des pixels carrés, le vecteur fréquence en entrée de l'objectif du rayon qui illumine le point du capteur de coordonnées (*i,j*) vaut donc:

$$f_c(i,j) = \frac{1}{K\lambda}\left(i - C_x, j - C_y, \sqrt{K^2 - (i - C_x)^2 - (j - C_y)^2}\right)$$

ou K est une constante à déterminer. On appellera 'fréquence caractéristique' du point ce vecteur fréquence.

Connaissant la fréquence caractéristique de chaque point du capteur et la vibration lumineuse issue de l'objet et reçue en ce point, on obtient donc, pour un éclairage donné de l'échantillon, la représentation fréquentielle de l'onde issue de cet échantillon.

Lorsqu'un échantillon suffisamment fin, peu absorbant et de faibles variations d'indice est traversé par un faisceau laser parallèle, chaque point de l'échantillon est soumis à une vibration lumineuse $Ae^{j2\pi f_e \cdot r}$ ou $f_e$ est le vecteur fréquence spatiale du faisceau d'éclairage et $r$ le rayon-vecteur au point considéré de l'objet, l'origine étant prise au point d'origine virtuel de l'onde de référence. L'absorbtivité et les variations d'indice de l'échantillon se traduisent par l'apparition d'une onde secondaire qui se superpose à l'onde d'éclairage. Un petit volume $dV$ crée une onde secondaire $Ae^{j2\pi f_e \cdot r}u(r)dV$ ou $u(r)$ est un coefficient complexe dont la partie réelle est liée à l'absorptivité locale de l'échantillon et la partie imaginaire à son indice. L'image tridimensionnelle de l'échantillon que ce microscope génère est l'ensemble des valeurs $u(r)$ en chaque point de l'échantillon.

Lorsqu'un point de l'échantillon, de rayon-vecteur $r$, émet localement une vibration lumineuse $s(r)$, la vibration lumineuse reçue sur le capteur en un point de fréquence caractéristique $f_c$ vaut alors $s(r)e^{-j2\pi f_c \cdot r}$. Un petit volume $dV$ de l'objet, de rayon-vecteur $r$, éclairé par une onde plane de fréquence $f_e$, crée donc au point du capteur de fréquence caractéristique $f_c$ une vibration $Ae^{j2\pi(f_e - f_c) \cdot r}u(r)dV$ qui se superpose à la vibration principale. Intégrée sur l'ensemble de l'objet, la vibration reçue en un point du capteur vaut donc $s(P) = \int\int\int Ae^{j2\pi(f_e - f_c) \cdot r}u(r)dV$. Cette vibration est donc un élément de la transformée de Fourier de la fonction $u(r)$, correspondant à la fréquence de Fourier $f_t = f_e - f_c$. Le principe de ce microscope est d'enregistrer cette vibration pour un ensemble de fréquences $f_e$ et $f_c$, puis de reconstituer la représentation fréquentielle de $u(r)$ et finalement $u(r)$ en inversant la transformée de Fourier.

Les échantillons étudiés sont peu absorbants et ont de faibles variations de l'indice de réfraction. Par conséquence l'onde d'éclairage reste très intense et illumine un point du CCD, que l'on appellera point d'impact de l'onde d'éclairage, et qui est le point du CCD ou la vibration lumineuse reçue est la plus élevée. Si ce point a pour coordonnées (*imax,jmax*) alors la fréquence de l'onde d'éclairage est:

$$f_e = \frac{1}{K\lambda}\left(imax - C_x, jmax - C_y, \sqrt{K^2 - (imax - C_x)^2 - (jmax - C_y)^2}\right)$$

La figure 7 montre l'ensemble (500) des fréquences caractéristiques correspondant aux points du capteur. Il s'agit d'une portion de sphère de rayon $\frac{1}{\lambda}$, limitée par l'ouverture de l'objectif, centrée sur l'axe optique (501) du système. Un exemple de vecteur fréquence d'éclairage (502) est superposé à cet ensemble. Enfin, l'ensemble(503) des fréquences $f_t = f_c - f_e$ correspondantes en est déduit. Lorsque l'on fait varier les fréquences d'éclairage (502) selon un arc de cercle (504) comme indiqué sur la figure 8, chaque position du vecteur fréquence d'éclairage correspond à un ensemble de fréquences $f_t$ formant une portion de sphère. La Fig. 9 montre en coupe un ensemble de tels arcs de sphère (505) (506) et autres, engendrés lorsque le vecteur fréquence d'éclairage se déplace sur l'arc de cercle (504).

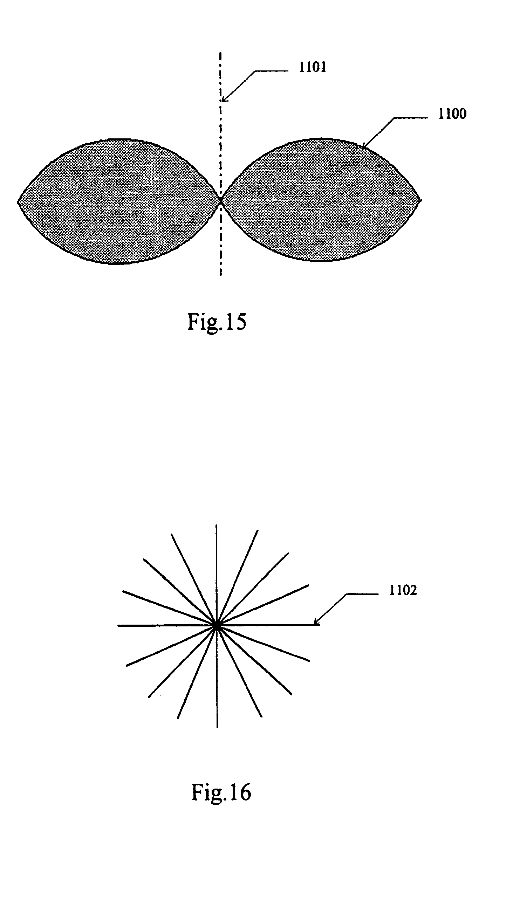

Lorsque le déplacement du vecteur fréquence d'éclairage sur l'arc de cercle (504) devient continu, un volume est engendré dont la vue en coupe est représentée sur la Fig.15. En vue de dessus, l'arc de cercle (504) est représenté par le segment (1102) de la Fig. 16. Lorsque l'extrémité du vecteur fréquence d'éclairage parcourt plusieurs arcs de cercle de manière à générer une trajectoire représentée en vue de dessus par la Fig.16, le volume engendré est à peu près celui qui serait engendré par rotation de la surface (1100) autour de l'axe vertical (1101). On obtient donc une représentation fréquentielle tridimensionnelle (et non plus bidimensionnelle comme dans le cas ou un seul enregistrement est utilisé). A partir de cette représentation tridimensionnelle dans l'espace des fréquences, on peut générer la fonction $u(r)$ par transformation de Fourier inverse.

Pour obtenir la représentation fréquentielle de $u(r)$ à partir de l'ensemble des représentations fréquentielles bidimensionnelles on calculera en chaque point la valeur moyenne des représentations fréquentielles bidimensionnelles atteignant ce point

Le calcul de la représentation fréquentielle de $u(r)$ puis finalement de $u(r)$ peut par exemple être effectué en 6 étapes:

*étape* 1: pour chaque onde d'éclairage, on détermine la représentation fréquentielle bidimensionnelle de l'onde reçue, qui est une portion de sphère d'un espace tridimensionnel.
A partir d'un point du capteur CCD de coordonnées $(i,j)$ on obtient un point de la représentation de l'onde issue de l'objet, ce point ayant la fréquence

$$f_c(i,j) = \frac{1}{K\lambda}\left(i-C_x, j-C_y, \sqrt{K^2-\left(i-C_x\right)^2-\left(j-C_y\right)^2}\right)$$

et ayant comme valeur complexe la valeur complexe obtenue au point considéré du capteur CCD par la formule

$$s\frac{\bar{r}}{|r|} = \frac{1}{6|r|}\left(2|s_0|^2-|s_1|^2-|s_2|^2\right)+j\frac{1}{2\sqrt{3}|r|}\left(|s_1|^2-|s_2|^2\right).$$

*étape* 2: pour chaque onde d'éclairage, on détermine la fréquence $f_e$ de l'onde d'éclairage en déterminant les coordonnées $(imax, jmax)$ du point d'intensité maximale sur le capteur CCD et en appliquant la formule:

$$f_e = \frac{1}{K\lambda}\left(imax-C_x, jmax-C_y, \sqrt{K^2-\left(imax-C_x\right)^2-\left(jmax-C_y\right)^2}\right)$$

*étape* 3: pour chaque onde d'éclairage, on translate la représentation obtenue à l'issue de l'étape 1, d'un vecteur $-f_e$ ou $f_e$ est la fréquence de l'onde d'éclairage, obtenue à l'issue de l'étape 2.
*étape* 4: pour chaque onde d'éclairage, on divise la représentation fréquentielle bidimensionnelle obtenue à l'issue de l'étape 3 par sa valeur au point de coordonnées (0,0). Cette étape constitue l'opération de recalage en phase décrite en 3.5.3. et est indispensable pour que les représentations fréquentielles bidimensionnelles se superposent de manière cohérente.
*étape* 5: on superpose l'ensemble des représentations fréquentielles bidimensionnelles obtenues à l'issue de l'étape 4, obtenant la représentation fréquentielle de $u(r)$ . La valeur affectée à un point non atteint est 0 et la valeur affectée à un point atteint est la moyenne des valeurs en ce point de chaque représentation fréquentielle bidimensionnelle atteignant ce point.
*étape* 6: on effectue une transformation de Fourier tridimensionnelle inverse de la représentation fréquentielle, obtenant finalement la fonction $u(r)$ en représentation spatiale.

En pratique, les étapes seront effectuées dans un ordre différent et sous une forme modifiée, afin d'optimiser le temps de calcul et de limiter la place mémoire requise. La méthode effectivement utilisée comporte deux phases, équivalentes aux 6 étapes précédentes:

*phase d'acquisition*: pour chaque onde d'éclairage, détermine l'image plane en fréquence obtenue sur le capteur CCD en appliquant en chaque point la formule

$$s\frac{\bar{r}}{|r|} = \frac{1}{6|r|}\left(2|s_0|^2 - |s_1|^2 - |s_2|^2\right) + j\frac{1}{2\sqrt{3}|r|}\left(|s_1|^2 - |s_2|^2\right).$$

On détermine également les coordonnées (*imax,jmax*) du point d'intensité maximale sur le capteur CCD et on divise l'ensemble de l'image plane en fréquence obtenue sur le capteur CCD par sa valeur au point de coordonnées (*imax,jmax*).

*phase de calcul tridimensionnel:* A partir de chaque onde d'éclairage caractérisée par les valeurs (*imax,jmax*), et à partir de chaque point de coordonnées (*i,j*) du capteur, on obtient un point de la représentation fréquentielle tridimensionnelle de fréquence

$$f_t = \frac{1}{K\lambda}\left(i - C_x, j - C_y, \sqrt{K^2 - (i - C_x)^2 - (j - C_y)^2}\right)$$

$$- \frac{1}{K\lambda}\left(imax - C_x, jmax - C_y, \sqrt{K^2 - (imax - C_x)^2 - (jmax - C_y)^2}\right)$$

Lorsqu'un point n'est pas atteint on y affecte la valeur nulle. Lorsqu'il est atteint plusieurs fois on y affecte la moyenne des valeurs obtenues à chaque fois. Lorsque cette opération a été effectuée pour toutes les ondes d'éclairage et tous les points du capteur, la transformation de Fourier tridimensionnelle inverse peut être effectuée.

Cette méthode pose un problème pratique qui est que le point éclairé directement par le faisceau traversant l'échantillon est illuminé de manière beaucoup plus intense que les points correspondant à l'onde diffractée. La représentation tridimensionnelle générée lors d'une prise d'image contient essentiellement des fréquences proches de celle du faisceau d'éclairage, les autres fréquences étant noyées dans le bruit. Pour remédier à cet inconvénient, on utilise un dispositif d'atténuation contrôlée du faisceau. La partie de la représentation fréquentielle correspondant aux fréquences sur lesquelles l'intensité est élevée est obtenue avec une forte atténuation et celle correspondant aux autres fréquences est obtenue avec une faible atténuation. Les valeurs obtenues sous forte atténuation sont ensuite multipliées par un coefficient complexe caractéristique du décalage de phase et du rapport d'amplitude de l'onde d'éclairage entre les deux positions du dispositif d'atténuation contrôlée. Ce dispositif d'atténuation contrôlée est constitué du rotateur de polarisation (104) et du polariseur (105).

La représentation tridimensionnelle obtenue à partir d'images de taille *hpix* x *vpix* correspond à des tailles de fichiers importantes. Afin de limiter la taille des fichiers et le temps de calcul, la taille des images sera divisée par deux par moyennage lors de la procédure d'acquisition de la représentation tridimensionnelle. Ceci équivaut à grouper les pixels 4 par 4, un groupe de 4 pixels sur l'image originale étant équivalent à un pixel effectif utilisé pour le calcul. La taille de l'objet observable est bien sûr réduite en conséquence. Les valeurs de $C_x, C_y$ et K sont divisées par 2 pour tenir compte du nouveau système de coordonnées. Cette limitation de la taille d'image observée est bien entendu facultative.

L'utilisation du microscope proprement dite comporte:

- une phase de focalisation sur l'échantillon décrite au paragraphe 5.17.
- un ajustement de position du condenseur, qui est décrit au paragraphe 5.18.
- un réglage des filtres décrit au paragraphe 5.19.
- la *phase d'acquisition* des représentations fréquentielles bidimensionnelles normalisées décrite ci-dessus et détaillée au paragraphe 5.20.
- *la phase de calcul tridimensionnel* décrite ci-dessus et détaillée au paragraphe 5.21.
- une phase de visualisation décrite au paragraphe 5.22.

Avant de pouvoir utiliser ce microscope, divers réglages doivent être effectués:

- Les réglages des positionneurs manuels, décrits aux paragraphes 5.6, 5.7, 5.8, 5.9, permettent de régler correctement la trajectoire du faisceau, de s'assurer que l'image d'une onde plane sur la caméra soit effectivement ponctuelle, et que le condenseur forme bien à sa sortie un faisceau parallèle. En particulier, le réglage décrit au paragraphe 5.8. permet un premier ajustement de la position du condenseur.
- Le réglage décrit au paragraphe 5.10. permet l'obtention du nombre de pas par pixel, utile à la commande du miroir de déviation du faisceau (109).

- Le niveau de l'onde de référence est ajusté comme indiqué au paragraphe 5.11.
- Le réglage décrit au paragraphe 5.12. permet l'obtention de tensions de commande appropriées de l'actuateur piézoélectrique.
- Le réglage décrit au paragraphe 5.13. permet le réglage de l'atténuateur de faisceau et l'obtention des constantes d'atténuation et de déphasage le caractérisant.
- Le réglage décrit au paragraphe 5.14. permet l'obtention de la constante $K$.
- L'ouverture des diaphragmes et la position du miroir semi-transparent (116) doivent être réglés de manière à obtenir une image centrée sans repliement de spectre. Ce réglage est décrit en partie au paragraphe 5.14 et est complété au paragraphe 5.15.
- L'onde de référence doit être enregistrée, ce qui est décrit au paragraphe 5.16.

### 5.4.Manipulation des filtres

Les opérations de réglage nécessitent des manipulations permanentes des filtres pour ajuster l'intensité reçue sur le capteur. Ces manipulations ne sont pas systématiquement rappelées dans la suite du texte.

Le filtre en (120) détermine l'intensité de l'onde de référence. Sa valeur est déterminée dans une étape particulière du réglage. Par la suite, lorsqu'une onde de référence est nécessaire, le filtre ainsi déterminé est inséré. Lorsque l'onde de référence doit être supprimée, on insère un élément opaque en (120).

Le filtre en (103) détermine l'intensité de l'onde d'éclairage. Sa valeur dépend des opérations de réglage en cours. Pour la plupart des opérations, le filtre est ajusté de manière à ce que l'intensité reçue sur le capteur (118) soit élevée, sans atteindre la saturation. Pour certaines opérations le capteur est saturé. Pour d'autres l'onde d'éclairage doit être supprimée, ce qui se fait par insertion d'un élément opaque.

Le filtre en (101) est utilisé uniquement pour les opérations de réglage nécessitant un suivi visuel du faisceau, repéré par sa tache de diffusion sur un morceau de papier blanc. Le filtre est alors réglé pour que la tache de diffusion soit visible sans être dangereuse pour l'oeil.

Dans les cas ou seule l'onde d'éclairage est présente, on appellera intensité relative de l'image reçue sur le capteur CCD le rapport de l'intensité reçue sur le capteur à l'intensité en sortie du filtre (103). Dans une opération ou on cherche à maximiser l'intensité relative reçue sur le capteur, on est amené à changer de filtre régulièrement pour maintenir l'intensité à un niveau mesurable par le capteur.

### 5.5.Programmes d'usage courant

Certains programmes simples sont utilisés fréquemment pendant le réglage, sans que cela soit rappelé:

- déplacement du miroir (109): ce miroir étant motorisé, un programme est nécessaire pour en modifier la position. Ce programme demande à l'utilisateur un nombre de pas et un numéro d'axe correspondant soit au moteur (213) soit au moteur (208), puis fait effectuer le nombre de pas demandé à ce moteur.
- Visualisation de l'image reçue sur le capteur: un programme permet l'affichage direct sur l'écran de l'ordinateur de l'image reçue sur le capteur (118).
- Visualisation de l'image et caractéristiques du maximum: ce programme effectue l'affichage direct sur l'écran de l'ordinateur de l'image reçue sur le capteur (118). Il affiche en plus la valeur maximale détectée par le capteur, les coordonnées du point correspondant, et le rapport entre l'intensité de ce point et la somme des intensités de ses 8 voisins. Ce programme est utilisé pour vérifier l'apparence d'une image, pour vérifier la non-saturation du capteur (valeur maximale inférieure à 255), pour connaître les coordonnées et la valeur du maximum, pour apprécier le caractère ponctuel de ce maximum par observation directe de l'image et par utilisation des valeurs affichées: l'intensité (relative) du maximum doit être aussi élevée que possible, ainsi que le rapport de son intensité à celle de ses voisins.

### 5.6. réglage de la position du laser (100) et du miroir (121)

Dans un premier temps l'onde d'éclairage est supprimée et la position du laser (100) est réglée de façon à viser effectivement le centre du miroir (121), ce qui se vérifie en suivant le trajet du faisceau à l'aide d'un morceau de papier permettant de le visualiser. La position du miroir (121) est ensuite ajustée de manière à ce que le faisceau de référence traverse effectivement la lentille (123) et parvienne à la caméra. Le faisceau de référence doit être centré sur le capteur (118).

### 5.7. réglage en translation de la position de la caméra et réglage du miroir (102)

La position de la caméra est réglée en translation en envoyant directement un faisceau parallèle sur l'objectif de microscope. A cet effet, les éléments (106)(108)(111)(105)(104) sont provisoirement enlevés, l'onde de référence est supprimée, l'objectif de microscope est positionné en position à peu près focalisée sur l'objet. L'objet (112) utilisé est une lame transparente et de l'huile optique est interposée entre (112) et (113). La position angulaire de (102) est alors ajustée pour que le faisceau parvienne directement au centre du miroir (109). La position du miroir (109) est réglée de sorte que le faisceau parallèle entre directement dans l'objectif (113) et est affinée de manière à maximiser l'intensité relative du signal reçu sur le capteur CCD. La position du capteur CCD est alors réglée en translation dans la direction de l'axe optique de manière à ce que l'image produite soit parfaitement ponctuelle, puis est réglée en translation dans les directions orthogonales à l'axe optique de sorte que ce point soit au centre de la zone utile du capteur. Il est enfin réajusté en translation dans le sens de l'axe optique.

### 5.8. réglage de la position du condenseur (111) et obtention de la position du centre optique

Les éléments (106)(108)(111) sont remis en place. De l'huile pour microscope est interposée entre (111) et (112) et entre (112) et (113). Un morceau de carton blanc est posé sur le miroir (109) pour diffuser la lumière. Le diaphragme (107) est ouvert au maximum et l'ouverture du diaphragme (114) est d'environ 6 mm. L'objectif de microscope est mis en position à peu près focalisée. La position du condenseur (111) est alors réglée de manière à obtenir sur le CCD un disque clair légèrement granuleux de rayon aussi élevé que possible et d'intensité à peu près constante sur l'ensemble du disque. Sur la Fig. 17, la zone utile du CCD (1200) est représentée, et le disque clair (1201) se détache sur ce fond noir. Un programme spécifique est alors utilisé pour déterminer les coordonnées $C_x$, $C_y$ du centre optique et le rayon $R$ du disque. Ce programme détermine:

- les droites (1206) et (1205) constituant les limites droite et gauche du disque (1201).
- la droite (1207) définie comme le milieu des droites (1206) et (1205).
- les droites (1202) et (1203) constituant les limites basse et haute du disque (1201).
- la droite (1204) définie comme le milieu des droites (1202) et (1203).
- le centre optique, intersection des droites (1204) et (1207)
- le rayon R du disque, égal à la moitié de la distance entre les droites (1205) et (1206).

### 5.9. réglage de la position de la lentille (106)

Le morceau de carton blanc posé sur le miroir (109) est supprimé. La position du miroir est modifiée de manière à amener le point éclairé sur le bord du disque précédemment obtenu. La position de la lentille (106) est alors ajustée selon son axe de manière à avoir sur le capteur CCD l'image la plus ponctuelle possible.

### 5.10.Détermination du nombre de pas par pixel.

Le morceau de papier occultant le miroir est alors enlevé. Le moteur est déplacé suivant un axe d'un nombre de pas connu. La position en pixels du point d'intensité maximale est notée avant et après le déplacement, et le nombre de pixels parcourus en est déduit. On calcule alors le rapport $pas\_par\_pixel = \dfrac{\text{nombre de pas}}{\text{nombre de pixels}}$. On effectue de même sur l'autre axe et on retient le plus petit rapport obtenu.

### 5.11. réglage du niveau de l'onde de référence

Si on considère une onde de référence et une onde d'éclairage ayant même intensité maximale à leur arrivée sur le capteur, s'additionnant en amplitude lorsqu'elles sont en phase, la condition de non-saturation du capteur est que l'amplitude commune des deux ondes soit la moitié de l'amplitude saturant le capteur, ou de manière équivalente que l'intensité commune des deux ondes soit le quart de l'intensité saturant le capteur. Pour régler le niveau de l'onde de référence à cette valeur, l'onde d'éclairage est supprimée et la valeur du filtre (120) est ajustée pour obtenir une image dont le niveau maximal est d'environ le quart du niveau maximal autorisé par la carte d'acquisition, soit dans le cas d'un échantillonnage sur 8 bits du signal vidéo, un niveau d'environ 64. Avant la prise d'images, le niveau maximal de l'onde d'éclairage devra être réglé de la même façon.

### 5.12. réglage des tensions de commande de l'actuateur piézoélectrique

Cette calibration de l'actuateur piézoélectrique peut se faire à l'extérieur du système par une méthode interférométrique connue. Trois positions de l'actuateur sont utilisées. Le déplacement du miroir entre chaque position doit être de

$$\frac{\lambda}{3\sqrt{2}}.$$

Les tensions de commande correspondant à chaque position doivent être déterminées, l'actuateur ayant un cycle régulier pour éviter les effets d'hystérésis.

Cependant, il est également possible d'effectuer ce réglage pendant que l'actuateur est en place. Ceci permet de compenser l'imprécision sur l'orientation du miroir et d'avoir une procédure simple de calibrage n'utilisant pas de matériel spécifique.

Ceci est fait en utilisant un programme qui fait varier les tensions de commande et qui est décrit par l'algorithme de la figure 10. Avant de lancer le programme, la position du miroir (109) doit être réglée de manière à ce que le point produit sur le capteur CCD en utilisant pour objet une lame complètement transparente soit au centre du capteur. Pour utiliser ce programme, l'objet utilisé doit être fortement diffusant. On pourra par exemple utilisé un morceau de papier blanc trempé dans de la gélatine puis placé entre lame et lamelle. Le papier doit être suffisamment épais pour arrêter le faisceau direct et suffisamment fin pour laisser passer un faisceau diffusé. Le diaphragme (107) est ouvert au maximum et le diaphragme (114) est réglé pour une ouverture d'environ 0,8 mm. L'onde de référence interfère alors sur le capteur CCD avec le disque clair produit par l'onde issue de l'objet. L'intensité de l'onde d'éclairage doit être réglée pour que le capteur soit en limite de saturation.

Si la tension maximale appliquée à l'actuateur est *Umax,* les tensions correspondant aux décalages de phase de $-\frac{2\pi}{2},0,\frac{2\pi}{3}$ seront respectivement *Umax/2-diff_bas,Umax/2, Umax/2+ diff_haut*, ou *diff_haut* et *diff_bas* sont choisis pour produire les décalages de phase indiqués. Afin d'éviter tout effet d'hystérésis, à chaque acquisition la tension est initialisée à 0, les différentes images sont acquises dans l'ordre croissant des tensions appliquées à l'actuateur et une tension finale *Umax* est finalement appliquée, de sorte que le même cycle est toujours utilisé. Ce cycle devra également être utilisé en phase normale de fonctionnement. Les images prises avec les décalages de phase indiqués plus haut permettent de calculer une représentation fréquentielle en appliquant à chaque pixel *P* la formule

$$S(P)=\left[\frac{1}{6}\left(2I(P,0)-I\left(P,\frac{2\pi}{3}\right)-I\left(P,-\frac{2\pi}{3}\right)\right)+j\frac{1}{2\sqrt{3}}\left(I\left(P,\frac{2\pi}{3}\right)-I\left(P,-\frac{2\pi}{3}\right)\right)\right]$$

dans laquelle l'onde de référence a été remplacée par une constante et l'expression *I(P,α)* désigne l'intensité enregistrée au point *P* pour un décalage de phase α.

Le réglage des tensions de commande de l'actuateur consiste à évaluer *diff_haut* et *diff_bas*. Le principe est d'obtenir deux représentations fréquentielles décalées entre elles de $\frac{\pi}{3}$. La deuxième image peut être recalée en phase en la multipliant par

$$e^{-j\frac{\pi}{3}}$$

et l'écart moyen entre la première image et cette image recalée peut être calculé. Cet écart est minimal lorsque les tensions *diff_haut* et *diff_bas* sont correctement réglées. Les décalages de phase permettant l'acquisition de la 2eme image élémentaire en fréquence sont donc $-\frac{2\pi}{3}+\frac{\pi}{3},\frac{\pi}{3},\frac{2\pi}{3}+\frac{\pi}{3}$ et correspondent respectivement, en première approximation, aux tensions *Umax/2-diff_bas+diff_bas/2, Umax/2+(diff_bas+diff_haut)/2, Umax/2+ diff_haut +diff_haut/2*. Le programme de réglage calcule l'écart moyen pour des séries de valeurs de *diff_haut* et *diff_bas* et choisit celles qui correspondent à un écart moyen minimal. Son algorithme est détaillé sur la figure 10.

Les étapes essentielles de cet algorithme sont:

(600): acquisition des images. La procédure d'acquisition est précisée sur la Fig.11. Par 'les images' on entend içi 6 figures d'interférences reçues consécutivement par le capteur CCD. Cette procédure effectue toujours le même cycle commençant par la tension 0 et finissant par la tension *Umax*. Le temps d'attente après l'application d'une tension nulle au piézoélectrique permet à celui-ci de se stabiliser. Le temps d'attente avant le lancement de l'acquisition évite d'acquérir une trame qui aurait été exposée avant l'application des conditions d'exposition voulues. La fin de l'exposition d'une image est signalée sur les cartes d'acquisition par le début du transfert de l'image correspondante. L'utilisation d'un temps d'exposition inférieur au temps de transfert de l'image permet à l'image de ne pas être affectée par les états transitoires. La mise du processus en priorité maximale évite la perturbation de l'acquisition par d'autres tâches système sous un système d'exploitation multitâches. Les 6 images sont acquises successivement et en temps réel (pas d'image perdue) par la carte d'acquisition afin de minimiser le temps pendant lequel des vibrations peuvent affecter le résultat. Chaque image a pour dimension horizontale *hpix* et pour dimension verticale *vpix*. Pendant l'acquisition, les images sont transférées automatiquement par la carte d'acquisition dans le tableau qui leur est réservé en mémoire centrale de l'ordinateur. A l'issue de la procédure d'acquisition, on dispose d'un tableau *I*[*a,b,i,j*], l'indice *a* correspondant à la différence de phase, l'indice *b* correspondant à l'image (décalée ou non décalée en phase), les indices *i* et *j* étant les coordonnées en pixels et variant respectivement de 0 à *hpix*-1 et de 0 à *vpix*-1.

(601) calcul des deux représentations fréquentielles. Celles -ci sont stockées dans des tableaux de complexes *S0*[*i,j*] et *S1*[*i,j*], en appliquant les formules:

$$S0[i,j] = \frac{1}{6}\left(2I[0,0,i,j] - I[1,0,i,j] - I[2,0,i,j]\right) + \tilde{j}\frac{1}{2\sqrt{3}}\left(I[1,0,i,j] - I[2,0,i,j]\right)$$

$$S1[i,j] = \frac{1}{6}\left(2I[0,1,i,j] - I[1,1,i,j] - I[2,1,i,j]\right) + \tilde{j}\frac{1}{2\sqrt{3}}\left(I[1,1,i,j] - I[2,1,i,j]\right)$$

(602) Le programme modifie le tableau *S1* en multipliant chacun de ses éléments par

$$e^{-j\frac{\pi}{3}}.$$

(603): le programme calcule la valeur maximale

$$mod\_max = \max_{\substack{0 \le i \le hpix-1 \\ 0 \le j \le vpix-1}} |S0[i,j]|$$

du module sur *S0*.

(604): Le programme calcule l'écart moyen entre les deux tableaux de la manière suivante:

Le programme initialise ecart et *nombre_valeurs* à 0 et parcourt l'ensemble des points *i,j* en testant la condition (605): $|S0[i,j]| \ge 0,5 \, mod\_max$. Chaque fois que cette condition est réalisé, il effectue les opérations suivantes (606):

$$ecart += |S0[i,j] - S1[i,j]|$$

$$nombre\_valeurs += 1$$

Lorsque le programme a terminé de parcourir les indices (*i,j*) il divise *ecart* par *nombre_valeurs* (607), ce qui lui donne l'écart moyen. Cet écart n'intègre donc que des valeurs pour lesquelles l'onde d'éclairage est suffisamment forte, afin d'éviter un résultat trop bruité. Il est stocké dans un tableau.

(608): le programme passe à la valeur suivante du couple (*diff_haut,diff_bas*) et réitère les opérations jusqu'à ce que la série d'écarts ait été calculée.

(609): le programme applique un filtre passe-bas au tableau obtenu pour limiter le bruit dû aux vibrations du système. Le filtre passe-bas utilisé est représenté dans le domaine fréquentiel par une 'marche d'escalier' passant d'une valeur de 1 en basse fréquences à une valeur de 0 en hautes fréquences, et sa bande passante est déterminée empiriquement pour avoir une bonne limitation du bruit sans trop déformer la courbe.

(610): le tableau est représenté graphiquement pour en vérifier l'allure.

(611): la valeur du couple (*diff_bas,diff_haut*) correspondant au minima est affichée.

Les séries de valeurs du couple(*diff_bas,diff_haut*) sont déterminées comme suit:

Dans un premier temps le programme fait varier les valeurs de *diff_haut* et *diff_bas* en les laissant égales entre elles. Par exemple elles peuvent varier entre 0 et $\frac{Umax}{4}$ par pas de $\frac{Umax}{4096}$ si on utilise 12 bits de conversion. Il en résulte un tableau de 1024 éléments (les écarts calculés pour chaque valeur de (*diff_haut,diff_bas*) ) que le programme filtre pour éliminer le bruit (609) et qu'il représente graphiquement (610). La valeur d'indice du tableau correspondant à l'écart minimal correspond alors à la valeur correcte du couple (*diff_bas,diff_haut*) et ce couple est affiché (611).

Dans un deuxième temps, le programme est relancé en fixant *diff_bas* à la valeur précédemment obtenue et en faisant varier uniquement *diff_haut*. Un nouveau minima est ainsi obtenu, qui correspond à une valeur plus précise de *diff_haut*.

Dans un troisième temps, le programme est relancé en fixant *diff_haut* à la valeur précédemment obtenue et en faisant varier uniquement *diff_bas*, obtenant une valeur plus précise de *diff_bas*.

L'opérateur peut réitérer ces étapes en faisant varier séparément et alternativement *diff_bas* et *diff_haut*, mais le maximum de précision sur ces valeurs est obtenu assez rapidement.

### 5.13. réglage du polariseur (105) et du rotateur de polarisation (104)

L'étape suivante consiste à régler la position du rotateur de polarisation (104) et du polariseur (105). Ce dispositif est destiné à réaliser une atténuation contrôlée du faisceau d'éclairage par commande du rotateur de phase, et on appellera l'ensemble 'commutateur optique'. Il a une position fermée correspondant à une intensité faible le traversant et une position ouverte correspondant à une intensité plus élevée.

L'objet utilisé est le même que dans l'étape précédente, le réglage du miroir (109) et des diaphragmes est également le même.L'onde de référence est d'abord supprimée. Dans un premier temps, le polariseur est mis en place et réglé pour maximiser l'intensité le traversant et reçue sur le capteur (118). Dans un deuxième temps, le rotateur de polarisation est mis en place. Une tension correspondant à un état arbitrairement défini comme fermé lui est appliquée et il est positionné en rotation pour minimiser l'intensité traversant l'ensemble du commutateur. Dans un troisième temps, l'onde de référence est rétablie et on utilise un programme calculant le rapport des intensités et la différence de phase entre les deux positions du rotateur de polarisation, rapport qui sera nécessaire pendant les phases d'acquisition d'image pour combiner les ondes correspondant aux états ouvert et fermé du commutateur. L'algorithme de ce programme est sur la figure 12. Les étapes sont les suivantes:

(800) : Le programme acquiert d'abord les images en utilisant la procédure *acquiert_images* décrite Fig.13. Par 'les images' on entend içi 6 figures d'interférences reçues consécutivement par le capteur CCD. Cette procédure effectue toujours le même cycle commençant par la tension 0 et finissant par la tension *Umax.* Le temps d'attente après l'application d'une tension nulle au piézoélectrique permet à celui-ci de se stabiliser. Le temps d'attente avant le lancement de l'acquisition évite d'acquérir une trame qui aurait été exposée avant l'application des conditions d'exposition voulues. La fin de l'exposition d'une image est signalée sur les cartes d'acquisition par le début du transfert de l'image correspondante. L'utilisation d'un temps d'exposition inférieur au temps de transfert de l'image permet à l'image de ne pas être affectée par les états transitoires. La mise du processus en priorité maximale évite la perturbation de l'acquisition par d'autres tâches système sous un système d'exploitation multitâches. Les 6 images sont acquises successivement et en temps réel (pas d'image perdue) par la carte d'acquisition afin de minimiser le temps pendant lequel des vibrations peuvent affecter le résultat. Chaque image a pour dimension horizontale *hpix* et pour dimension verticale *vpix.* Pendant l'acquisition, les images sont transférées automatiquement par la carte d'acquisition dans le tableau qui leur est réservé en mémoire centrale de l'ordinateur.

(801): le programme calcule les deux représentations fréquentielles *S0* et *S1* qui different par l'état du commutateur. *S0* correspond au commutateur ouvert et *S1* au commutateur fermé.

$$S0[i,j] = \frac{1}{6}\left(2I[0,0,i,j] - I[1,0,i,j] - I[2,0,i,j]\right) + \widetilde{j}\,\frac{1}{2\sqrt{3}}\left(I[1,0,i,j] - I[2,0,i,j]\right)$$

$$S1[i,j] = \frac{1}{6}\left(2I[0,1,i,j] - I[1,1,i,j] - I[2,1,i,j]\right) + \widetilde{j}\,\frac{1}{2\sqrt{3}}\left(I[1,1,i,j] - I[2,1,i,j]\right)$$

(802):Le programme calcule la valeur maximale

$$mod\_max = \max_{\substack{0 \le i \le hpix-1 \\ 0 \le j \le vpix-1}} \left| S0[i,j] \right|$$

atteinte par le module des éléments du tableau S0.

(803): le programme calcule le rapport moyen entre les deux représentations fréquentielles. Il initialise *rapport* et *nombre_valeurs* à 0 puis parcourt l'ensemble des indices (*i,j*) en testant la condition (804):

$$|S0[i,j]| \ge 0,5 \, mod\_max$$

Lorsque la condition est vérifiée, il effectue (805):

$$rapport+ = \frac{S0[i,j]}{S1[i,j]}$$

$$nombre\_valeurs+=1$$

Lorsque l'ensemble des indices *i,j* a été parcouru, le programme divise *rapport* par *nombre_valeurs* (806) ce qui donne le rapport recherché.

(807) le programme calcul la moyenne *rapport_moy* des valeurs de *rapport* obtenues depuis son lancement.

(808): le programme affiche les parties réelles et imaginaires ainsi que le module de *rapport* et *rapport_moy*.

(809) Le programme réitère continument cette procédure pour permettre le réglage en continu. Le programme se termine sur instruction de l'opérateur.

La position angulaire du rotateur de polarisation doit être réglée pour que le module de *rapport* soit à peu près égal à 30. Le programme est alors arrêté et relancé, et au bout d'un nombre d'itération suffisant la valeur moyenne complexe *rapport_moy* est notée et servira de base dans la suite des opérations.

### 5.14. obtention de la constante *K* et réglage du diaphragme (114) et du miroir (116)

K est la valeur maximale en pixels correspondant à la fréquence spatiale maximale de l'onde $\frac{1}{\lambda_v}$ ou $\lambda_v$ est la longueur d'onde dans le milieu observé, supposé être d'indice égal à l'indice nominal $n_v$ de l'objectif. L'indice nominal de l'objectif est l'indice pour lequel il a été conçu et pour lequel il ne crée pas d'aberration sphérique. C'est aussi l'indice de l'huile optique devant être utilisée avec l'objectif.

Il y a *K* pixels entre les fréquences 0 et $\frac{1}{\lambda_v}$. Le pas en fréquence suivant un axe est donc $\frac{1}{K\lambda_v}$. Les fréquences varient au total de $-\frac{1}{\lambda_v}$ à $\frac{1}{\lambda_v}$ par pas de $\frac{1}{K\lambda_v}$.

Si *N* est le nombre total de pixels suivant chaque axe pris en compte pour la transformée de Fourier, *N* valeurs de fréquences sont prises en comptes, allant de $-\frac{N}{2K\lambda_v}$ à $\frac{N}{2K\lambda_v}$.

Après transformation on obtient *N* valeurs de position avec un pas en position égal à la moitié de l'inverse de la fréquence maximale avant transformation.

Le pas en position est donc

$$\frac{1}{2\frac{N}{2K\lambda_v}} = \frac{K\lambda_v}{N}.$$

Si on considère deux points entre lesquels la distance en pixels est $D_{pix}$ et la distance réelle est $D_{reel}$, on a donc: $D_{reel} = \frac{K\lambda_v}{N} D_{pix}$ d'ou $K = \frac{N}{\lambda_v} \frac{D_{reel}}{D_{pix}}$. La longueur d'onde à considérer ici est la longueur d'onde dans le matériau, supposé être d'indice égal à l'indice nominal $n_v$ de l'objectif soit: $\lambda_v = \frac{\lambda}{n_v}$. On a finalement:

$$K = \frac{n_v}{\lambda} \frac{N}{D_{pix}} D_{reel} \; .$$

Pour obtenir la constante $K$, on réalise l'image d'un micromètre objectif pour lequel les distances réelles sont connues, puis on applique la formule ci-dessus.

Ceci est réalisé en utilisant un programme de focalisation qui sera réutilisé ultérieurement à chaque fois qu'une focalisation sur un échantillon est nécessaire avant la prise d'image tridimensionnelle. L'algorithme de ce programme se trouve sur la figure 14. Ses étapes principales sont:

(1000): Le programme acquiert une image par la procédure *acquiert_images* de la Fig.13. On obtient donc un tableau d'entiers (type unsigned char pour 8 bits) $I[p,c,i,j]$ ou l'indice $p$ variant de 0 à 2 correspond à l'état de phase, l'indice $c$ variant de 0 à 1 correspond à l'état du commutateur (0=ouvert, 1=fermé) et les indices i et $j$ variant de 0 à $hpix$-1 et de 0 à $vpix$-1 correspondent aux coordonnées du pixel.

(1001): Un tableau de booléens $H[i,j]$ est généré: il est initialisé à 0, puis pour chaque pixel, la valeur maximale atteinte par $I[p,0,i,j]$ sur les trois images correspondant à la position ouverte du commutateur est calculée. Si cette valeur est égale à 255 (valeur la plus élevée du numériseur), les images correspondant à la position fermée du commutateur doivent être utilisées dans le calcul de la fréquence associée au pixel et à ses 8 voisins immédiats, et le tableau $H[i,j]$ est mis à 1 pour ces 9 pixels.

(1002): la représentation fréquentielle $S[i,j]$ de nombres complexes est générée: pour chaque pixel, la valeur est générée selon les équations suivantes:

$$S[i,j] = \left[ \frac{1}{6} \big( 2I[0,H[i,j],i,j] - I[1,H[i,j],i,j] - I[2,H[i,j],i,j] \big) \right.$$

$$\left. + \tilde{j} \frac{1}{2\sqrt{3}} \big( I[1,H[i,j],i,j] - I[2,H[i,j],i,j] \big) \right] \big( 1 + (rapport\_moy - 1)H[i,j] \big)$$

Si $H[i,j]$ vaut 1, la valeur complexe ainsi obtenue est donc multipliée par le nombre complexe *rapport_moy* obtenu lors de l'opération de calibration du commutateur pour donner la valeur finale de l'élément de tableau $S[i,j]$, afin de tenir compte du décalage de phase et de l'absorption induits par le commutateur.

(1003): Le programme limite le tableau $S$ à des dimensions de 512x512. Le programme effectue ensuite optionnellement l'une ou l'autre, ou aucune, des deux opérations suivantes: - un moyennage sur une largeur de 2, qui ramène le tableau S à un tableau S' de dimensions 256x256 avec $S'[i,j] = S[2i,2j] + S[2i + 1,2j] + S[2i,2j + 1] + S[2i + 1,2j + 1]$. Ce moyennage, couplé à une réduction de l'ouverture du diaphragme (114), permet de diminuer le diamètre de la zone observée et de réduire le temps de calcul. Il est équivalent à un filtrage passe-bas suivi d'un sous-échantillonnage.

- une limitation de l'ensemble des fréquences observées à un carré de 256x256 pixels avec $S'[i,j] = S[128 + i,128 + j]$. Ceci permet de diminuer le temps de calcul au prix d'une réduction de la résolution. Toutefois dans le cas présent le programme n'effectue aucune de ces deux opérations.

(1004): Le programme effectue alors la transformée de Fourier inverse du tableau ainsi obtenu.

(1005): Il affiche le résultat sur l'écran, en extrayant le module, la partie réelle ou la partie imaginaire.Dans le cas présent il affichera le module. Quelle que soit la variable affichée, le tableau de nombre réels correspondant est d'abord normalisé, soit par rapport à la valeur moyenne, soit par rapport à la valeur maximale. Le programme écrit également sur disque le fichier de réels correspondant. Lorsque la partie réelle ou la partie imaginaire sont représentées, il est essentiel que le point d'impact du faisceau direct soit bien en (256,256) sur l'image de taille 512 x 512, faute de quoi une modulation devient visible. Lorsque le module est représenté, le point d'impact exact du faisceau direct n'influence pas notablement le résultat.

(1006):Le programme recommence alors l'acquisition d'une nouvelle image, opérant donc en continu. Il s'arrête sur instruction de l'opérateur.

Pour obtenir l'image du micromètre, l'objectif est d'abord mis en position à peu près focalisée, le micromètre ayant été introduit comme objet. Dans un premier temps l'onde de référence est supprimée, les diaphragmes sont ouverts au maximum, et le programme de visualisation directe en temps réel de l'image reçue sur le capteur est lancé, les filtres en (103) et le rotateur de polarisation étant réglés pour laisser passer suffisamment d'intensité pour saturer assez largement le capteur au point d'impact direct du faisceau. L'objet est alors déplacé à dans le plan horizontal à l'aide du positionneur correspondant jusqu'à ce que l'image constituée de nombreux points intenses alignés, caractéristique du micromètre, apparaisse. Le micromètre est alors correctement positionné sous l'objectif.

Les diaphragmes en (107) et (114) sont alors réglés pour une ouverture d'environ 8 mm. Les filtres en (103) sont alors réglés pour que le maximum d'intensité sur le CCD soit à un niveau d'environ le quart de la valeur maximale du digitaliseur, soit 256/4=64. L'onde de référence est réintroduite. Le programme de focalisation est alors lancé. Le diaphragme (114) doit être ajusté de manière à être clairement visible sur l'image affichée, tout en étant aussi ouvert que possible. Si l'image n'est pas bien centrée, on peut améliorer le centrage soit en modifiant l'orientation du miroir (116), auquel cas il peut être nécessaire de réajuster l'orientation du miroir (121), soit en modifiant la position du diaphragme (114). Le diaphragme en (107) doit être ajusté pour que la zone observée apparaisse uniformément éclairée. Le programme de focalisation est alors arrêté, l'onde de référence est supprimée et l'intensité du faisceau est réajustée comme précédemment. L'onde de référence est alors réintroduite et le programme de focalisation relancé.

L'objectif de microscope est alors déplacé par le dispositif de focalisation de manière à obtenir une bonne image du micromètre. Pour faciliter la focalisation, on a intérêt à visualiser une partie du micromètre ou des traits de différentes longueurs sont présents. Ceci limite les 'fausses focalisations' dues à des phénomènes d'interférences en avant du micromètre. Entre deux déplacements il est nécessaire de lâcher le dispositif de focalisation manuel pour obtenir une image non perturbée par les vibrations. Lorsqu'une bonne image a été obtenue, le programme est arrêté et l'image obtenue est utilisée pour obtenir la distance en nombre de pixels entre deux traits, la distance métrique entre ces traits étant connue. Si la distance entre deux graduations séparées par $D_{reel}$ micromètres est sur l'image ainsi obtenue de $D_{pix}$ pixels, si l'indice nominal de l'objectif est $n_v$ (en général, $n_v$ =1,5) et si la longueur d'onde du laser dans le vide est λ (λ =0,633 micromètres) et si le nombre de points de la transformée de Fourier est $N$ ($N$=512) alors on a: $K = \dfrac{n_v}{\lambda} \dfrac{N}{D_{pix}} D_{reel}$, ou bien entendu $D_{reel}$ et λ sont dans la même unité.

### 5.15. réglage des diaphragmes

L'image tridimensionnelle que l'on calculera a un coté de taille 256 pixels, ce qui permet de limiter les tailles de fichiers et les temps de calcul. Le réglage du diaphragme consiste à réutiliser le programme de focalisation, cette fois avec l'option de moyennage intermédiaire, et régler le diaphragme (114) de manière à ce que son image soit clairement visible tout en étant aussi grande que possible. Le diaphragme (107) est alors réglé pour qu'il soit légèrement plus ouvert que le minimum permettant un éclairage régulier de la partie observée de l'échantillon.

### 5.16. enregistrement de l'onde de référence

La connaissance de l'onde de référence est indispensable au calcul précis des valeurs complexes de l'onde parvenant au capteur. Celle-ci doit donc être enregistrée indépendamment de la valeur constante de bruit moyen qui caractérise chaque pixel. A cet effet un programme spécifique est utilisé. Dans un premier temps, les ondes d'éclairage et de référence sont supprimées et le programme enregistre l'image de 'noir optique' qui en résulte sur le capteur CCD. Il moyenne l'intensité obtenue sur 100 images pour avoir un noir optique débruité. Dans un deuxième temps l'onde de référence est rétablie et l'onde d'éclairage reste supprimée. Le programme enregistre l'image résultante, la moyenne sur 100 images pour débruiter. Puis le programme calcule la différence entre l'image de l'onde de référence seule et l'image de noir optique, et enregistre l'image résultante dans un tableau *Iref*[*i,j*] ou *i* varie de 0 à *hpix*-1 et *j* varie de 0 à *vpix*-1.

### 5.17. Focalisation sur l'objet étudié

Cette étape doit être réitérée pour chaque échantillon dont on souhaite obtenir une image. L'onde d'éclairage est rétablie. L'échantillon à étudier est mis en place. Le miroir (109) est réglé pour que le point d'impact direct du faisceau d'éclairage soit au centre du capteur. Les filtres en (103) sont réglés pour qu'en l'abscence d'onde de référence l'intensité maximale reçue sur le capteur CCD soit d'environ 64. L'onde de référence est alors rétablie. Le programme de focalisation est lancé avec l'option de moyennage intermédiaire, et la position de l'objectif est ajustée à l'aide du dispositif de focalisation pour obtenir une image nette de la zone d'intérêt de l'échantillon.

### 5.18. Ajustement de la position du condenseur et réglage du diaphragme (107)

Après la phase de focalisation la position du condenseur doit être ajustée pour que l'image, dans l'échantillon, de la partie illuminée du miroir, soit confondue avec la partie observée de l'échantillon. L'onde de référence est supprimée, le dispositif d'atténuation du faisceau d'éclairage est mis en position ouverte, les filtres se trouvant sur le trajet du faisceau d'éclairage sont supprimés, et un morceau de papier blanc mouillé est plaqué sur la surface du miroir (109) de manière à constituer une surface diffusante de faible épaisseur que l'on peut considérée comme confondue avec la surface du miroir. Un programme spécifique de visualisation de l'image reçue sur le CCD est utilisé. Ce programme moyenne l'image, par exemple sur 8 acquisitions successives, et représente à l'écran la racine de la valeur obtenue en chaque point, de manière à rendre l'image d'avantage visible même en l'abscence d'une forte luminosité. Le diaphragme (107) est d'abord largement ouvert, et la position du condenseur est ajustée pour obtenir un disque clair homogène de rayon élevé. Il est ensuite refermé progressivement jusqu'à la limite de visibilité de l'image, la position du condenseur étant elle-même réajustée au fur et à mesure. L'ouverture finale du diaphragme (107) doit être nettement inférieure à celle déterminée en 5.15.

Les filtres sont alors réintroduits, l'onde de référence est également réintroduite, et le programme de focalisation est lancé. On doit voir l'image du diaphragme (114) avec une tache lumineuse centrale correspondant à l'image défocalisée (donc floue) du diaphragme (107). La position du condenseur peut alors être ajustée dans un plan orthogonal à l'axe optique de manière à ce que la tache lumineuse centrale soit centrée.

Le diaphragme (107) est alors réglé de manière à être légèrement plus ouvert que le minimum permettant un éclairage régulier de la zone observée.

### 5.19. Réglage des filtres

Les filtres en (103) sont réglés pour qu'en l'abscence d'onde de référence et en position ouverte de l'atténuateur de faisceau l'intensité maximale mesurée sur le capteur CCD soit d'environ 64. Il peut également être utile, juste avant l'acquisition, de régler à nouveau la position du rotateur de polarisation (104) et du polariseur (101). Ce réglage peut être effectué en utilisant le même programme qu'en 5.13, mais en laissant en place l'échantillon observé et sans modifier le réglage des diaphragmes et des filtres. Ce réglage permet de compenser la dérive temporelle des caractéristiques du rotateur de polarisation.

### 5.20. étape d'acquisition

Cette étape permet d'acquérir les représentations fréquentielles bidimensionnelles à partir desquelles sera calculée la représentation tridimensionnelle. Le point d'impact direct du faisceau d'éclairage est déplacé suivant une série de rayons partant du centre optique et de longueur $Rb$ légèrement inférieur à $R$, par exemple $Rb = R - 6$, le centre optique et le rayon $R$ ayant été déterminés dans l'étape 5.8. On note $nbangles$ le nombre total de rayons qui seront parcourus, par exemple $nbangles$=9. $nbim$ est le nombre de représentations fréquentielles bidimensionnelles à acquérir et a pour valeur $nbim = \frac{Rb}{2} nbangles$. A chaque étape, le programme calcule et enregistre dans un fichier $fich\_acquis$ une représentation fréquentielle qui sera utilisée dans la phase de calcul tridimensionnel. La taille de l'image acquise depuis la caméra est $hpix$ x $vpix$, mais cette taille est divisée par deux pour obtenir des représentations fréquentielles de dimension $hel$ x $vel$, selon le principe de moyennage intermédiaire déjà utilisé dans le programme de focalisation.

Le programme d'acquisition est détaillée par l'algorithme de la Fig.18 dont les étapes sont les suivantes:

(1300): Les données de base de l'acquisition sont enregistrées dans le fichier $fich\_acquis$:

$nbim$: nombre de représentations fréquentielles bidimensionnelles
$hel$=$hpix$ /2 : nombre final de points dans le sens horizontal
$vel$=$vpix$/2: nombre final de points dans le sens vertical

(1301): temps d'attente permettant l'absorption des vibrations créées par le mouvement du positionneur (110). Un temps d'attente de 2s environ peut convenir.

(1302): Le programme acquiert les images par la procédure $acquiert\_images$ de la Fig.13. On obtient donc un tableau d'entiers (type unsigned char pour 8 bits) $I[p,c,i,j]$ ou l'indice $p$ variant de 0 à 2 correspond à l'état de phase, l'indice $c$ variant de 0 à 1 correspond à l'état du commutateur (0=ouvert, 1=fermé) et les indices $i$ et $j$ variant respectivement de 0 à $hpix$-1 et de 0 à $vpix$-1 correspondent aux coordonnées du pixel.

(1303):Un tableau de booléens $H[i,j]$ est généré: il est initialisé à 0, puis pour chaque pixel, la valeur maximale atteinte sur les trois images correspondant à la position ouverte du commutateur est calculée. Si cette valeur est égale à 255 (valeur la plus élevée du numériseur), les images correspondant à la position fermée du commutateur doivent être utilisées dans le calcul de la fréquence associée au pixel et à ses 8 voisins immédiats, et le tableau $H$ est mis à 1 pour ces 9 pixels.

(1304): calcul de $rapport\_moy$. Le calcul de $rapport\_moy$, déjà effectué lors de l'opération de calibration du commutateur, doit être refait à chaque image de manière à compenser les dérives temporelles. Le programme détermine d'abord:

$$Vmax = \max_{(i,j)\in E1}\left|\frac{1}{6\sqrt{Iref[i,j]}}\big(2I[0,0,i,j]-I[1,0,i,j]-I[2,0,i,j]\big)+\tilde{j}\,\frac{1}{2\sqrt{3Iref[i,j]}}\big(I[1,0,i,j]-I[2,0,i,j]\big)\right|$$

ou $E1$ est l'ensemble des couples $(i,j)$ vérifiant $H[i,j] = 0$
Le programme calcule ensuite:

$$rapport\_moy = \frac{1}{N2}\sum_{(i,j)\in E2}\frac{\frac{1}{6}\big(2I[0,0,i,j]-I[1,0,i,j]-I[2,0,i,j]\big)+\tilde{j}\,\frac{1}{2\sqrt{3}}\big(I[1,0,i,j]-I[2,0,i,j]\big)}{\frac{1}{6}\big(2I[0,1,i,j]-I[1,1,i,j]-I[2,1,i,j]\big)+\tilde{j}\,\frac{1}{2\sqrt{3}}\big(I[1,1,i,j]-I[2,1,i,j]\big)}$$

$E2$ est l'ensemble des couples $(i,j)$ vérifiant $H[i,j] = 0$ et

$$\left|\frac{1}{6\sqrt{Iref[i,j]}}\big(2I[0,0,i,j]-I[1,0,i,j]-I[2,0,i,j]\big)+\tilde{j}\,\frac{1}{2\sqrt{3Iref[i,j]}}\big(I[1,0,i,j]-I[2,0,i,j]\big)\right|\geq coef\cdot Vmax$$

avec par exemple $coef=0,5$. Le coefficient coef peut être ajusté pour que E2 contienne suffisamment de points. N2 est le nombre d'éléments de E2.
(1305): la représentation fréquentielle $S[i,j]$ de nombres complexes est générée: pour chaque pixel, la valeur est générée selon les équations suivantes:

$$S[i,j]=\left[\frac{1}{6\sqrt{Iref[i,j]}}\big(2I[0,H[i,j],i,j]-I[1,H[i,j],i,j]-I[2,H[i,j],i,j]\big)\right.$$

$$\left.+\tilde{j}\,\frac{1}{2\sqrt{3Iref[i,j]}}\big(I[1,H[i,j],i,j]-I[2,H[i,j],i,j]\big)\right]\big(1+(rapport\_moy-1)H[i,j]\big)$$

Si $H[i,j]$ vaut 1, la valeur complexe ainsi obtenue est donc multipliée par le nombre complexe $rapport\_moy$ obtenu lors de l'opération de calibration du commutateur pour donner la valeur finale de l'élément de tableau $S[i,j]$, afin de tenir compte du décalage de phase et de l'absorption induites par le commutateur.
(1306)-Le point de module maximal du tableau S est déterminé. Ses coordonnées $(i\_max,j\_max)$ sont enregistrées.
(1307) La position 'objectif' est calculée, l'angle valant $k.pas$:

$$i\_obj = G_x + \left(k\%\left(\frac{Rb}{2}\right)\right)\cdot\cos\left(E\left(\frac{2k}{Rb}\frac{2\pi}{nbangles}\right)\right)$$

$$j\_obj = G_x + \left(k\%\left(\frac{Rb}{2}\right)\right)\cdot\sin\left(E\left(\frac{2k}{Rb}\frac{2\pi}{nbangles}\right)\right)$$

ou $i\_obj$ et $j\_obj$ sont les coordonnées de la position objectif en pixels, et ou le signe % désigne le modulo, et ou E(x) désigne la partie entière de $x$.
Le déplacement des moteurs est calculé:

$$pas\_i=(i\_obj-i\_max).pas\_par\_pixel$$

$$pas\_j=(j\_obj\text{-}j\_max).pas\_par\_pixel$$

ou *pas_par_pixel* est le nombre de pas des moteurs par pixel de déplacement, déterminé expérimentalement pendant les réglages.

(1308)- Un des moteurs permet de déplacer le point d'impact direct du faisceau dans la direction de l'axe *i*. Il doit effectuer un nombre de pas *pas _i* dans la direction correspondant à un indice i croissant pour la position du point d'impact direct du faisceau d'éclairage (pour *pas_i*<0, il doit effectuer un nombre de pas *-pas_i* dans la direction opposée). L'autre moteur permet de déplacer le point d'impact direct du faisceau dans la direction de l'axe *j*. De même, il doit effectuer un nombre de pas *pas_j*.

(1309)- Un tableau de fréquences moyennées est généré:

Chaque dimension du tableau initial *S* est divisée par deux pour donner un tableau $M_k$ avec

$$M_k[i,j] = \sum_{\substack{0 \le p \le 1 \\ 0 \le q \le 1}} S[2i+p, 2j+q]$$

(1310)-Le point de module maximal du tableau $M_k$ est déterminé, ses coordonnées $imax_k, jmax_k$ et la valeur en ce point $max\_moy = M_k[imax_k, jmax_k]$ sont enregistrées.

(1311) -Les éléments du tableau $M_k$ sont normalisés en les divisant par *max_moy*:

$$M_k[i,j] = \frac{M_k[i,j]}{max\_moy}$$

(1312)- $imax_k$, $jmax_k$ et la représentation fréquentielle $M_k$ sont enregistrés dans le fichier *fich_acquis*.

(1313)- L'algorithme se termine quand l'angle vaut $2\pi$. Le moteur revient alors à sa position initiale et le fichier d'acquisition *fich_acquis* est fermé.

### 5.21. calcul tridimensionnel

La procédure d'acquisition a généré des représentations fréquentielles bidimensionnelles $M_k$ , ou l'indice *k* représente le numéro d'ordre de chaque représentation . Ces représentations ayant été moyennées sur une largeur de 2, les valeurs de $C_x, C_y$ et *K* doivent être divisées par 2 pour correspondre au nouveau système de coordonnées. Ce sont ces valeurs divisées qui sont utilisées dans la suite. L'ensemble des représentations bidimensionnelles peut être considéré une représentation à trois dimensions (*i,j,k*) dans lequel l'indice *k* représente l'indice image et les indices *i* et *j* représentent les coordonnées cartésiennes de chaque représentation. Dans la *k* - ième représentation fréquentielle bidimensionnelle:

la relation entre les coordonnées et la fréquence caractéristique est:

$$K\lambda f_c = \left( i - C_x, j - C_y, \sqrt{K^2 - \left(i - C_x\right)^2 - \left(j - C_y\right)^2} \right)$$

La relation entre les coordonnées et la fréquence d'éclairage est:

$$K\lambda f_e = \left( imax_k - C_x, jmax_k - C_y, \sqrt{K^2 - \left(imax_k - C_x\right)^2 - \left(jmax_k - C_y\right)^2} \right)$$

La relation entre les coordonnées et la fréquence totale est donc:

$$K\lambda f_t = \left( i - imax_k, j - jmax_k, \sqrt{K^2 - (i - C_x)^2 - (j - C_y)^2} - \sqrt{K^2 - (imax_k - C_x)^2 - (jmax_k - C_y)^2} \right)$$

La procédure de calcul tridimensionnel consiste en principe à générer dans un premier temps une représentation tridimensionnelle sous forme d'un tableau *F* de *dimensions fdim* x *fdim* x *fdim* avec *fdim*=512, puis à en effectuer la transformée de Fourier pour obtenir un tableau U de mêmes dimensions correspondant à la représentation *u(r)*, et dans lequel les indices correspondent donc au rayon-vecteur. La représentation F est un tableau dont les indices représentent les coordonnées de $K\lambda f_t$, le zéro étant ramené par translation au point de coordonnées (*fdim*/2,*fdim*/2,*fdim*/2). On obtient donc, à partir de chaque point de coordonnées *i,j* d'une représentation bidimensionnelle $M_k$, un point de la représentation tridimensionnelle par:

$$F[ni,nj,nk] = M_k[i,j]$$

avec:

$$ni = i - imax_k + \frac{fdim}{2}$$

$$nj = j - jmax_k + \frac{fdim}{2}$$

$$nk = \sqrt{K^2 - (i - C_x)^2 - (j - C_y)^2} - \sqrt{K^2 - (imax_k - C_x)^2 - (jmax_k - C_y)^2} + \frac{fdim}{2}$$

Lorsque un point du tableau *F*, de coordonnées (*ni,nj,nk*), est obtenu successivement à partir de plusieurs représentations bidimensionnelles distinctes, la valeur de *F* retenue en ce point est la moyenne des valeurs obtenues à partir de chacune de ces représentations bidimensionnelles. Lorsque ce point n'est jamais obtenu, on y affecte une valeur nulle.

Lorsque le tableau *F* a été généré, le tableau *U* peut être obtenu par transformée de Fourier tridimensionnelle inverse.

Cette méthode peut être appliquée directement si le programme dispose d'une mémoire vive suffisante. Le programme dont l'algorithme est décrit Fig.19 permet cependant d'effectuer les calculs sur un système dont la mémoire vive est limitée, les fichiers étant stockés sur un support à accès séquentiel (disque dur).

Pour des raisons pratiques, une partie de la transformation de Fourier sera effectuée au fur et à mesure de la génération du tableau *F*, qui ne sera donc jamais véritablement généré.

Le programme opère en cinq étapes. Chaque étape utilise un fichier d'entrée stocké sur le disque dur de l'ordinateur et génère un fichier de sortie également stocké sur le disque dur, dont le nom est en italique sur la figure. Le programme pourrait théoriquement effectuer de manière plus directe les opérations nécessaires à la génération de l'image tridimensionnelle, mais la taille des fichiers impliqués est trop élevée pour qu'ils puissent être entièrement contenus dans la mémoire d'un ordinateur. Il est donc nécessaire de gérer leur stockage sur disque. La lecture/écriture d'éléments de fichiers sur disque se faisant plus rapidement si les éléments sont stockés de manière contigue, le programme doit être conçu pour ne lire et écrire sur le disque que des blocs d'une taille suffisante. C'est ce que permet l'algorithme décrit, alors qu'une méthode directe nécessiterait des lectures/écritures à des addresses non contigues et ne serait pas praticable en raison du temps perdu en accès disque. Les étapes de l'algorithme sont les suivantes:

(1400)-centrage des représentations fréquentielles bidimensionnelles:

Cette procédure consiste à translater les représentations bidimensionnelles pour passer d'une représentation dans le système de coordonnées (*i,j,k*) à une représentation dans le système (*ni,nj,k*) avec *ni=i-imax+fdim*/2,*nj=j-jmax+fdim*/2, les dimensions suivant *ni et nj* du tableau ainsi généré étant de *fdim* x *fdim*. L'algorithme de cette partie est représenté figure 21. Les étapes sont les suivantes:

(1600): les valeurs de *hel,vel,nbim* sont lues dans le fichier *fich_acquis*.

(1601): la représentation fréquentielle $M_k$ correspondant à l'indice *k* est transférée en mémoire centrale avec les valeurs correspondantes $imax_k$ et $jmax_k$.

(1602): Une représentation fréquentielle translatée $T_k$ de dimensions *fdim* x *fdim* est générée avec:

.

$$T_k[ni,nj] = M_k[ni - fdim/2 + imax_k, nj - fdim/2 + jmax_k]$$

lorsque $0 \leq ni - fdim/2 + imax_k \leq hel\text{-}1$ et $0 \leq nj - fdim/2 + jmax_k \leq hel\text{-}1$.

.
$$T_k[ni,nj] = 0$$

dans les autres cas

La Fig. (20) montre une image d'origine avec son point de coordonnées ($imax_k,jmax_k$) et un dessin arbitraire autour de ce point, et la nouvelle image translatée.

(1603): Les valeurs de $imax_k,jmax_k$, et la représentation $T_k$ sont enregistrées dans le fichier *fich_centré* dans l'ordre suivant:

$imax_k$, $jmax_k$, $T_k$ [0,0], $T_k$ [1,0],..... $T_k[fdim - 1,0]$,

$imax_k$, $jmax_k$, $T_k$ [0,1], $T_k$ [1,1],..... $T_k$ [fdim - 1,1],

......

$imax_k$, $jmax_k$, $T_k$ [0, fdim]$T_k$ [1, fdim],..... $T_k$ [fdim-1, fdim-1],

Notons que $imax_k$ et $jmax_k$ sont répétés à chaque ligne de $T_k$ dans le fichier *fich_centré*. Ceci permet que ces données, indispensables au changement d'indice k $\rightarrow$ *nk* , restent disponible après l'opération d'échange des axes.

(1604): le processus est recommencé tant que k est inférieur à *nbim*.

(1401)-Echange des axes 'plan' et 'ligne'

Le changement d'indices $i \rightarrow ni$ et $j \rightarrow nj$ ayant été effectué, il reste à faire le changement d'indice $k \rightarrow nk$ Pour effectuer ce changement d'indice en un temps raisonnable il est nécessaire de pouvoir charger en mémoire centrale, rapidement un plan (*ni,k*). Pour que cette opération soit possible, il faut préalablement échanger les axes *k* et *nj*. C'est ce que fait cet algorithme.

Le fichier *fich_centré* précédemment créé est relu, l'ordre des données est modifié et un fichier *fich_echl* est écrit dans lequel les données sont dans l'ordre suivant:

$imax_0$, $jmax_0$, $T_0[0,0]$, $T_0[1,0]$,.....$T_0[fdim\text{-}1,0]$,

$imax_1$, $jmax_1$, $T_1[0,0]$, $T_1[1,0]$,.....$T_1[fdim - 1,0]$,

....

$imax_{nbim\text{-}1}$, $jmax_{nbim\text{-}1}$,$T_{nbim\text{-}1}$ [0,0], $T_{nbim\text{-}1}$ [1,0],.....$T_{nbim\text{-}1}[fdim\text{-}1,0]$,

$imax_0$, $jmax_0$, $T_0[0,1]$, $T_0[1,1]$,.....$T_0[fdim\text{-}1,1]$,

$imax_1$, $jmax_1$, $T_1[0,1]$, $T_1[1,1]$,.....$T_1[fdim\text{-}1,1]$,

....

$imax_{nbim\text{-}1}$, $jmax_{nbim\text{-}1}$, $T_{nbim\text{-}1}[0,1]$, $T_{nbim\text{-}1}[1,1]$,.....$T_{nbim\text{-}1}[fdim\text{-}1,1]$,

.........

.........

$imax_0$, $jmax_0$, $T_0[0, fdim - 1]$, $T_0[1, fdim \text{-}1]$,.....$T_0[fdim - 1, fdim - 1]$.

$imax_1$, $jmax_1$, $T_1[0, fdim - 1]$, $T_1[1, fdim\text{-}1]$,.....$T_1[fdim\text{-}1,fdim\text{-}1]$.

....

$imax_{nbim\text{-}1}$, $jmax_{nbim\text{-}1}$, $T_{nbim\text{-}1}[0, fdim\text{-}1]$, $T_{nbim\text{-}1}[1,fdim\text{-}1]$,.....$T_{nbim\text{-}1}[fdim\text{-}1,fdim\text{-}1]$

C'est-à-dire que les axes *nj* et *k* sont échangés. Cette opération d'échange des axes est effectuée bloc par bloc. La Fig. (22) représente symboliquement (1700) le contenu d'un fichier tridimensionnel correspondant à des indices *i,j,k*, rangé en mémoire plan horizontal par plan horizontal et chaque plan étant rangé ligne par ligne, une ligne étant dans le sens de la profondeur sur le dessin. Les axes *i,j,k* et l'origine O du repère sont précisés sur le dessin. Le contenu du fichier obtenu par inversion des axes *j* et *k* est représenté en (1702). Le transfert des données d'un fichier à l'autre se fait bloc par bloc, le bloc (1701) étant copié en mémoire centrale puis transféré en (1703). La lecture et l'écriture des blocs se fait plan horizontal par plan horizontal, un plan horizontal dans le fichier lu ne correspondant pas à un plan horizontal dans le fichier écrit. La taille du bloc est la taille maximum qui puisse tenir dans la mémoire interne disponible de l'ordinateur. L'opération est répétée pour tous les blocs, les blocs situés 'au bord' n'ayant pas en général la même dimension que les autres. Cette manière d'opérer permet d'effectuer l'échange des axes avec un ordinateur dont la mémoire interne a une taille inférieure à celle des fichiers utilisés.

La procédure en language C (Microsoft C/C++ sous Windows 95) qui permet cette opération est la suivante:

```
void echange_axes(FILE* read_file,FILE* write_file,int ktot,int jtot,int itot,int memory_limit )
{
int knum,jnum,bknum,bjnum,keff,jeff,k,j,bk,bj;
char* buff;

knum=(int)sqrt(((double)memory_limit)/((double)itot));
jnum=knum;
buff=(char*)malloc(itot*knum*jnum);
bknum=ktot/knum;
if (knum*bknum!=ktot) bknum+=1;
bjnum=jtot/jnum;
if (jnum*bjnum!=jtot) bjnum+=1;

for (bk=0;bk<=bknum-1;bk++)
for (bj=0;bj<=bjnum-1;bj++)
{
        if (bk==(bknum-1)) keff=ktot-knum*(bknum-1); else keff=knum;
        if (bj==(bjnum-1)) jeff=jtot-jnum*(bjnum-1); else jeff=jnum;

        for (k=0;k<=keff-1;k++)
        for (j=0;j<=jeff-1;j++)
        {
                fseek(read_file,(bk*knum+k)*jtot*itot+(bj*jnum+j)*itot,SEEK_SET);
                fread(buff+k*jeff*itot+j*itot, 1, itot, read_file);
        }

        for (j=0;j<=jeff-1;j++)
        for (k=0;k<=keff-1;k++)
        {
                fseek(write_file,(bj*jnum+j)*ktot*itot+(bk*knum+k)*itot,SEEK_SET);
```

```
fwrite(buff+k*jeff*itot+j*itot, 1, itot, write_file);

            }

        }

    free(buff);

    }
```

---------------------------------------------------------------------------------------

Les paramètres à passer lors de l'appel de la procédure sont:

read_file: pointeur sur le fichier *fich_centré*
write_file: pointeur sur le fichier *fich_ech1*
ktot: nombre total d'images *nbim*
jtot: nombre total de lignes dans une représentation fréquentielle: *fdim*
itot: taille en octets d'une ligne: *fdim*\*sizeof(complexe)+2\*sizeof(int), ou sizeof(complexe) désigne la taille en octets d'un nombre complexe ($T_k$ [*i,j*] par exemple) et sizeof(int) la taille en octets d'un nombre entier (*imax$_k$* par exemple).
memary_limit: taille maximale en octets de la mémoire à accès aléatoire (RAM) dont dispose la procédure pour stocker les blocs.

Les fichiers doivent être ouverts en mode 'commited' c'est-à-dire que les opérations de lecture/écriture sont effectuées directement depuis ou vers le disque dur, sans bufferisation intermédiaire en mémoire centrale.

(1402)- phase de calcul.

Cette phase de calcul a pour objet de remplacer l'indice 'image' *k* par l'indice *nk* donné par la formule:

$$nk = \frac{fdim}{2} + \sqrt{K^2 - (i - C_x)^2 - (j - C_y)^2} - \sqrt{K^2 - (imax_k - C_x)^2 - (jmax_k - C_y)^2}$$

ou *i,j* sont les coordonnées dans le repère d'origine (avant centrage). Dans le repère centré on a donc:

$$nk = \sqrt{K^2 - (ni - fdim/2 + imax_k - C_x)^2 - (nj - fdim/2 + jmax_k - C_y)^2}$$
$$-\sqrt{K^2 - (imax_k - C_x)^2 - (jmax_k - C_y)^2} + \frac{fdim}{2}$$

Lorsque les mêmes indices (*i,j,k*) sont obtenus plusieurs fois par remplacement de l'indice image, la valeur retenue pour l'élément correspondant de la représentation fréquentielle tridimensionnelle est la moyenne des valeurs pour lesquelles les indices (*i,j,k*) sont obtenus.
Un point de la représentation fréquentielle tridimensionnelle, de coordonnées (*ni,nj,nk*), ne peut être obtenu par ce changement de coordonnées qu'à partir d'un plan (*ni,k*) donné et correspondant à son indice *n$_j$*. Les plans (*ni, k*) peuvent donc être traités indépendamment les uns des autres. Lorsque dans un plan (*ni,k*) on a remplacé l'indice *k* par l'indice *nk*, il est donc possible d'effectuer directement la transformée de Fourier bidimensionnelle inverse de ce plan avant de passer au plan suivant. C'est ce que fait cette partie du programme, dont l'algorithme est détaillé sur la Fig.23. Ses étapes principales sont:

(1800) les éléments suivants sont lus dans le fichier *fich_ech1* et transférés en mémoire interne:
*imax$_0$,jmax$_0$,T$_0$[0,nj],T$_0$[1,nj],......T$_0$[fdim - 1,nj]*,
*imax$_1$, jmax$_1$,T$_1$[0,nj],T$_1$[1,nj],.....T$_1$[fdim - 1,nj]*,
.....

$imax_{nbim-1}jmax_{nbim-1},T_{nbim-1}[0,nj],T_{nbim-1}[1,nj],.....T_{nbim-1}[fdim - 1,nj]$

(1801) les tableaux $D_{nj}$ et *Poids*, de dimensions *fdim* x *fdim*, sont initialisés à 0.

(1802) La condition suivante est testée:

$$\left(ni - fdim/2 + imax_k - C_x\right)^2 + \left(nj - fdim/2 + jmax_k - C_y\right)^2 < \left(K\frac{o}{n}\right)^2$$

ou *o* est l'ouverture du microscope, et *n* l'indice de l'huile optique et de la lamelle utilisés, soit à peu près: $\frac{o}{n} = \frac{1,25}{1,51}$. Si la condition est vraie, le point correspond à un vecteur fréquence ne sortant pas de l'ouverture de l'objectif et est donc dans la zone observable.

(1803) La valeur *nk* est calculée par la formule:

$$nk = \sqrt{K^2 - \left(ni - fdim/2 + imax_k - C_x\right)^2 - \left(nj - fdim/2 + jmax_k - C_y\right)^2}$$

$$-\sqrt{K^2 - \left(imax_k - C_x\right)^2 - \left(jmax_k - C_y\right)^2} + fdim/2$$

(1804) La valeur correspondante de fréquence est additionnée au tableau $D_{nj}$. L'élément correspondant du tableaux des poids, qui sera utilisé pour calouler la valeur moyenne, est incrémenté.

$$D_{nj}[ni,nk]+=T_k[ni,nj]$$

$$Poids[ni,nk]+=1$$

(1805)Lorsque l'ensemble des indices *ni,nk* a ainsi été parcouru, le programme parcourt l'ensemble des *indices ni* et nk en testant la condition $Poids[ni,nk] \neq 0$ et à chaque fois que cette condition est réalisée il effectue:

$$D_{nj}[ni,nk] = \frac{D_{nj}[ni,nk]}{Poids[ni,nk]}$$

(1806)le programme effectue une transformée de Fourier bidimensionnelle inverse du tableau $D_{nj}$.

(1807) il stocke le tableau transformé dans le fichier de sortie *fich_calc* dans l'ordre suivant:

$D_{nj}[0,0,]D_{nj}[1,0],.....D_{nj}[fdim-1,0],$
$D_{nj}[0,1],D_{nj}[1,1],.....D_{nj}[fdim-1,1],$
......
$D_{nj}[0,fdim-1],D_{nj}[1,fdim-1],.....D_{nj}[fdim-1,fdim-1]$

(1403)-2eme échange des axes:

Il reste à ce niveau à effectuer une transformée de Fourier inverse à une dimension suivant l'axe *nj*. Afin de pouvoir effectuer cette transformation en un temps raisonnable, il est nécessaire d'échanger préalablement les axes *nj* et *nk.* Le programme pourra ensuite charger en mémoire centrale des plans (*ni,nj*) complets pour les traiter.

Dans le fichier *fich_calc* les données sont rangées dans l'ordre suivant:

$D_0[0,0],D_0[1,0],.....D_0[fdim-1,0],$
$D_0[0,1],D_0[1,1],.....D_0[fdim-1,1],$
......
$D_0[0,fdim-1],D_0[1,fdim-1],.....D_0[fdim-1,fdim-1],$
$D_1[0,0],D_1[1,0],.....D_1[fdim-1,0],$
$D_1[0,1],D_1[1,1],.....D_1[fdim-1,1],$
......
$D_1[0,fdim-1],D_1[1,fdim-1],.....D_1[fdim-1,fdim-1],$

$D_{fdim-1}[0,0],D_{fdim-1}[1,0],.....D_{fdim-1}[fdim-1,0],$

..........

........

$D_{fdim-1}[0,1],D_{fdim-1}[1,1],.....D_{fdim-1}[fdim-1,1],$

......

$D_{fdim-1}[0,fdim-1],D_{fdim-1}[1,fdim-1],.....D_{fdim-1}[fdim-1,fdim-1]$

Ce fichier est relu, et un fichier *fich_ech2* est généré, dans lequel les données sont réécrites dans l'ordre suivant:

$D_0[0,0],D_0[1,0],.....D_0[fdim-1,0],$

$D_1[0,0],D_1[1,0],.....D_1[fdim-1,0],$

......

$D_{fdim-1}[0,0],D_{fdim-1}[1,0],.....D_{fdim-1}[fdim-1,0],$

$D_0[0,1],D_0[1,1],.....D_0[fdim-1,1],$

$D_1[0,1],D_1[1,1],.....D_1[fdim-1,1],$

......

$D_{fdim-1}[0.1],D_{fdim-1}[1,1],.....D_{fdim-1}[fdim-1,1],$

..........

..........

$D_0[0,fdim-1],D_0[1,fdim-1],.....D_0[fdim-1,fdim-1],$

$D_1[0,fdim-1],D_1[1,fdim-1],.....D_1[fdim-1,fdim-1],$

.....

$D_{fdim-1}[0,fdim-1],D_{fdim-1}[1,fdim-1],.....D_{fdim-1}[fdim-1,fdim-1]$

Cet échange des axes *nj* et *nk* est effectué par blocs comme le précédent échange d'axes. La même procédure est utilisée, les paramètres à passer étant: read_file: pointeur sur le fichier *fich_calc*

write_file: pointeur sur le fichier *fich_ech2*

ktot: *fdim*

jtot: *fdim*

itot: taille en octets d'une ligne:*fdim*\*sizeof(complexe) ou sizeof(complexe) désigne la taille en octets d'un nombre complexe.

memory_limit: comme précédemment, la taille en octets de la mémoire disponible.

<u>(1404)-Dernière transformation de Fourier</u>

Cette procédure consiste à effectuer la transformation de Fourier inverse suivant l'axe *nj.* Il s'agit d'un traitement itératif sur l'indice *nk.* L'algorithme de cette partie de programme se trouve Fig.24. Ses étapes essentielles sont les suivantes:

(1900): le programme charge en mémoire interne les valeurs:

$D_0[0,nk], D_0[1,nk],.....D_0[fdim-1, nk],$

$D_1[0,nk], D_1[1,nk],.....D_1[fdim - 1, nk],$

....

$D_{fdim-1}[0,nk],D_{fdim-1}[1,nk],.....D_{fdim-1}[fdim-1,nk]$

(1901):Le programme génère le tableau $E_{nk,ni}$ à une dimension:

$$E_{nk,ni}[nj] = D_{nj}[ni,nk]$$

Il effectue la transformée de Fourier inverse de ce tableau, générant le tableau $\tilde{E}_{nk,ni}$

(1902): il enregistre les résultats dans le fichier fich_rep, dans l'ordre suivant:

**53**

$$\widetilde{E}_{nk,0}[0], \widetilde{E}_{nk,1}[0], \ldots \widetilde{E}_{nk,fdim-1}[0],$$

$$\widetilde{E}_{nk,0}[1], \widetilde{E}_{nk,1}[1], \ldots \widetilde{E}_{nk,fdim-1}[1],$$

$$\ldots\ldots\ldots\ldots$$

$$\widetilde{E}_{nk,0}[fdim-1], \widetilde{E}_{nk,1}[fdim-1], \ldots \widetilde{E}_{nk,fdim-1}[fdim-1]$$

Le fichier ainsi généré contient alors la représentation tridimensionnelle de l'objet au format $U[ni,nj,nk]$ ou l'élément complexe $U[ni,nj,nk]$ est rangé dans le fichier *fich_rep* à l'addresse ($nk*fdim*fdim+nj*fdim+ni$) comptée à partir du début du fichier, l'addressage se faisant par éléments de type 'nombre complexe'.

### 5.22. visualisation

Le tableau $U$ ayant été généré, on peut en visualiser le contenu.

La visualisation la plus simple consiste à en extraire une coupe, un des indices étant fixé à une valeur constante. Sur cette coupe, on peut visualiser la partie réelle, la partie imaginaire ou le module. Par exemple pour extraire une coupe en partie imaginaire à $nk$ constant, le programme génère d'abord le tableau $V[ni,nj]$ = Re($U[n,nj,nk]$) ou $nk$ a une valeur fixée, et ou Re(x) désigne la partie réelle de $x$. Il détermine ensuite les valeurs minimales et maximales du tableau $V$ soit

$$V_{\min} = \min_{ni,nj}\left(V[ni,nj]\right), \; V_{\min} = \min_{ni,nj}\left(V[ni,nj]\right).$$

. Il génère alors un tableau de pixels à afficher sur l'écran (bitmap), le niveau de gris d'un pixel donné de coordonnées $ni,nj$ étant:

$$val[ni,nj] = \frac{V[ni,nj]-V_{min}}{V_{max} - V_{min}}.$$

Un autre mode de visualisation consiste à en extraire des projections. L'image visualisée dépend fortement du type de projection utilisée.

Par exemple pour une projection de la partie réelle selon l' axe $nk$, par intégration, on représentera le tableau $V$ avec

$$V[ni,nj] = \sum_k \mathrm{Re}\left(U[ni,nj,nk]\right),$$

ou Re($x$) désigne la partie réelle de $x$, la somme sur $nk$ étant prise entre deux plans 'limite' selon ce que l'on veut représenter, et le tableau V étant représenté comme précédemment.

Pour une projection de la partie réelle selon l' axe $nk$, par extraction du maximum en valeur absolue, on représentera le tableau $V$ avec:

$$V[ni,nj] = \max_{nk}\left(\left|\mathrm{Re}\left(U[ni,nj,nk]\right)\right|\right)$$

Dans ces deux cas on peut représenter le tableau $V$ à l'écran selon la méthode déjà utilisée pour la représentation d'une coupe, soit $val[ni,nj] = \dfrac{V[ni,nj]-V_{min}}{V_{max} - V_{min}}$ ou $V_{\min}$ et $V_{\max}$ sont respectivement les valeurs minimales et maximales de $V$.

Bien que l'exemple pris ait été des coupes à $nk$ fixé et des projections selon $nk$, ces coupes et projections peuvent être effectuées selon n'importe quelle direction, y compris des directions obliques.

Une partie importante de la représentation fréquentielle n'étant pas acquise, il s'ensuit certains défauts des images obtenues en représentation spatiale, qui dépendent du type d'image représentées. En général, les défauts seront moins importants pour une vue de dessus. Dans le cas particulier de la projection par intégration, l'image produite restera de bonne qualité jusqu'à un angle limite de la direction de projection par rapport à la verticale: la direction de projection doit faire avec la verticale un angle suffisamment inférieur à Arc

$$\sin\left(\frac{ouv}{n_v}\right).$$

Dans le cas de la projection par extraction du maximum, des défauts seront présents quelque soit l'angle d'observation. Par contre, la projection par extraction du maximum est moins sensible au bruit gaussien que la projection par intégration.

Dans le cas de la projection par intégration, une méthode rapide peut être obtenue pour réaliser la projection. Cette méthode nécessite le stockage en mémoire de la représentation fréquentielle de l'objet. Celle-ci peut par exemple avoir été obtenue comme indiqué en 5.21 mais en n'effectuant pas les transformations de Fourier prévues en (1806) et en (1901). La méthode rapide comporte deux étapes:

> *étape 1*: extraction, en représentation fréquentielle, d'un plan passant par l'origine et orthogonal à la direction de projection.
> *étape 2*: transformation de Fourier inverse de ce plan.
> Le tableau bidimensionnel ainsi obtenu constitue une projection suivant la direction ayant servi à extraire le plan de fréquence.

Il est possible de générer une vue stéréoscopique en extrayant deux projections suivant des directions appropriées et en utilisant par exemple la méthode anaglyphe pour les visualiser. Dans ce cas, l'utilisation de la méthode rapide permet, si l'ordinateur dispose d'une mémoire suffisante pour le stockage de la représentation tridimensionnelle, de modifier en « temps réel » l'angle d'observation d'une image précalculée sous forme de représentation fréquentielle.

### 6.Description d'un second mode de réalisation.

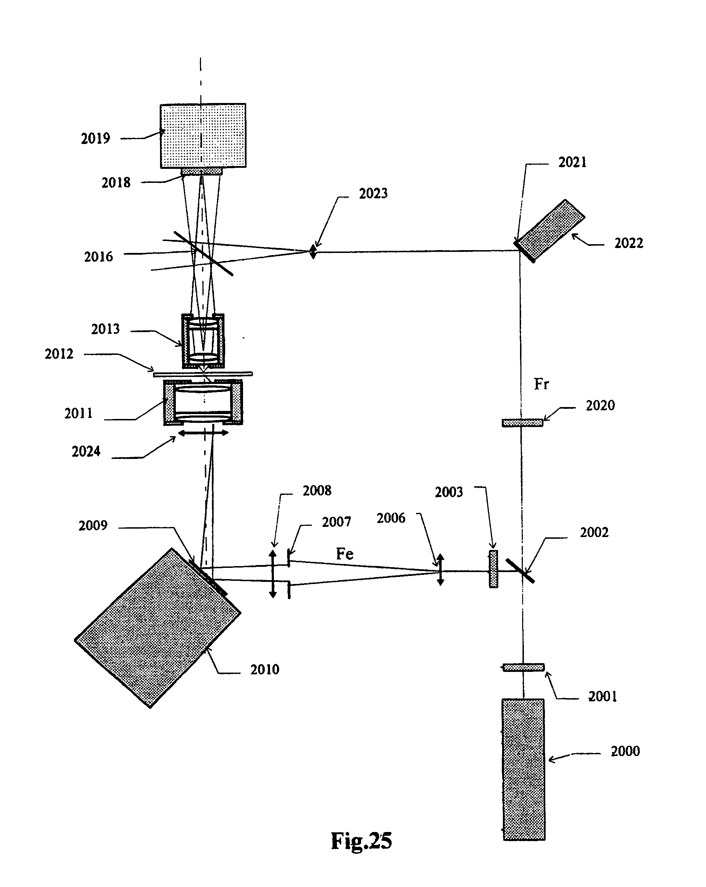

Ce mode de réalisation est une variante simple du premier et est représenté Fig.25.

### 6.1. Principe

Dans le premier mode de réalisation, le capteur (118) est dans le plan focal image de l'ensemble optique constitué de l'objectif (113) et des lentilles (115) et (117). L'onde d'éclairage plane a donc une image ponctuelle dans ce plan, et une onde de référence sphérique centrée virtuellement sur l'objet doit être utilisée pour obtenir sur le capteur (118) un éclairage homogène. Dans ce second mode de réalisation, le capteur (2018) est placé directement dans le plan image de l'objectif. Une onde d'éclairage plane n'a donc plus une image ponctuelle. L'onde de référence doit être l'image par l'objectif d'une onde plane virtuelle traversant l'objet.

Une image en nombres complexes est obtenue sur le CCD (2018) à partir de trois images différant par la phase de l'onde de référence, en utilisant comme dans le premier mode de réalisation la formule

$$s\frac{\bar{r}}{|r|} = \frac{1}{6|r|}\left(2|s_0|^2 - |s_1|^2 - |s_2|^2\right) + j\frac{1}{2\sqrt{3}|r|}\left(|s_1|^2 - |s_2|^2\right)$$

La transformée de Fourier bidimensionnelle de cette image donne une image en nombres complexes équivalente à celle qui, dans le premier mode de réalisation, était obtenue directement dans le plan du capteur CCD. Cette image remplace donc l'image directement obtenue sur le capteur dans le premier mode de réalisation. Pour le reste, ce mode de réalisation utilise les mêmes principes que le premier.

**6.2. Description matérielle.**

Le système est représenté Fig.25. Les éléments de cette figure, identiques à ceux de la Fig.1, sont numérotés en remplaçant le premier chiffre 1 des éléments de la Fig.1 par le chiffre 20. Par exemple (116) devient (2016). Ce système est semblable à celui utilisé dans le premier mode de réalisation, à ceci près que:

- le dispositif d'atténuation contrôlée du faisceau, constitué des éléments (104) et (105) est supprimé.
- le CCD (2018) est placé dans le plan ou se trouvait précédemment le diaphragme (114). Par conséquence les éléments (114) (117) (115) sont supprimés.
- L'image virtuelle, après réflexion sur le miroir semi-transparent (2016), du point de focalisation du faisceau issu de la lentille (2023), doit être située sur l'axe optique et dans le plan focal image de l'objectif (2013). Les éléments (2023)(2022)(2021)(2016) sont donc déplacés de manière à satisfaire cette condition.
- Sur le capteur CCD (2018), la taille de cellule de base (distance entre les points centraux de deux pixels voisins) doit être inférieure à $\frac{\lambda}{2}\frac{g}{ouv}$, ou *ouv* désigne l'ouverture numérique de l'objectif , $\lambda$ la longueur d'onde dans le vide du laser utilisé, *g* le grandissement. Par exemple, pour un objectif x100 d'ouverture 1,25 on trouve 25 micromètres. On peut utiliser un objectif modifié pour avoir un grandissement x50, de manière à obtenir 12 micromètres, ce qui permet d'utiliser une caméra courante de pas 10 micromètres de manière plus optimale qu'avec un objectif x100.
- La lentille (2023) est montée sur un positionneur permettant une translation suivant l'axe du faisceau entrant dans cette lentille.

**6.3. réglages: vue d'ensemble**

Dans le mode de réalisation précédent, l'image reçue sur le capteur était dans le domaine fréquentiel. Une imagé dans le domaine spatial pouvait si nécessaire être obtenue à partir de celle-ci par transformée de Fourier bidimensionnelle inverse, ce qui était réalisé par le programme de focalisation décrit Fig.14. Dans ce second mode de réalisation. l'image reçue sur le capteur est dans le domaine spatial et une image dans le domaine fréquentiel peut être obtenue par transformée de Fourier.

A chaque fois que l'image bidimensionnelle en fréquence reçue directement sur le capteur CCD (118) était utilisée, il faut maintenant utiliser la transformée de Fourier bidimensionnelle de l'image reçue sur le capteur CCD (2018), qui constitue une image en fréquences qui peut par exemple avoir une dimension de 256x256 pixels carrés. Inversement, le programme de focalisation doit être remplacé par un programme de visualisation directe de l'image reçue sur le capteur CCD.

Le dispositif d'atténuation du faisceau étant supprimé, une seule image doit être utilisée au lieu de deux dans les étapes ou ce dispositif était utilisé.

La caméra (2019) est fixe. Le réglage de position de cette caméra selon l'axe optique est remplacé par un réglage de position de la lentille (2023) suivant l'axe du faisceau entrant dans cette lentille. Le réglage de position de la caméra dans le plan orthogonal à l'axe optique est remplacé par un réglage angulaire du miroir (2016).

Pour le reste, le mode opératoire est semblable au système précédent. Les étapes de réglage et les programmes utilisés sont détaillées ci-après:

**6.4. Programme d'usage courant:**

En plus des programmes décrits en 5.5. on utilise un programme de visualisation de l'image en fréquence. Ce programme remplace en général le programme de visualisation directe utilisé dans le premier mode de réalisation, qui permettait d'observer une image dans le domaine fréquentiel. Pour utiliser ce programme, une onde de référence doit être utilisée, alors que dans le programme de visualisation directe utilisé dans le premier mode de réalisation, elle n'était pas nécessaire. Lorsque ce programme est utilisé, il faut éviter les vibrations et donc lâcher au moins provisoirement le dispositif de focalisation s'il est utilisé, ou attendre l'absorption des vibrations avant chaque image lorsque les moteurs pas à pas sont utilisés.

Ce programme est semblable au programme de focalisation décrit en 5.14 et dont l'algorithme se trouve Fig. 14. Il est modifié comme suit:

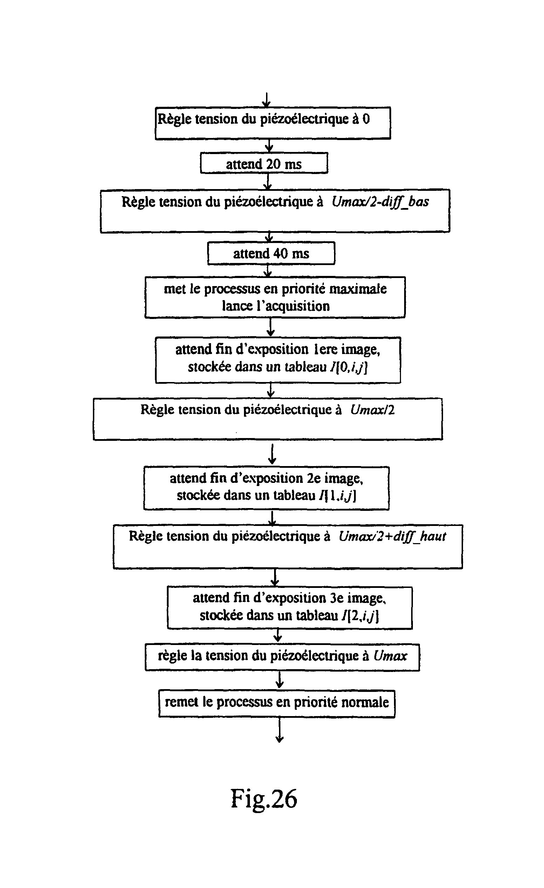

L'étape (1000) d'acquisition d'image, détaillée Fig.13, est modifiée comme indiqué Fig.26, afin de tenir compte de l'abscence du dispositif d'atténuation de faisceau.

L'étape (1001) est supprimée.

L'étape (1002) est modifiée pour tenir compte de l'abscence du tableau *H*. Pour chaque pixel, la valeur est générée selon les équations suivantes:

$$S[i,j] = \left[ \frac{1}{6} \left( 2I[0,i,j] - I[1,i,j] - I[2,i,j] \right) + \tilde{j} \frac{1}{2\sqrt{3}} \left( I[1,i,j] - I[2,i,j] \right) \right]$$

Lors de l'étape (1002) le programme limite le tableau *S* à des dimensions de *hpix* x *hpix* mais n'effectue pas de moyennage.
L'étape (1004) est remplacée par une transformée de Fourier directe.
Lors de l'étape (1005), le programme affiche l'intensité, correspondant au carré du module des éléments du tableau *S* transformé, ainsi que la valeur maximale de cette intensité, les coordonnées du point correspondant et le rapport entre l'intensité de ce point et la somme des intensités de ses huit voisins.

Ce programme permet d'apprécier la ponctualité et l'aspect général d'une image en fréquence. Par contre, pour apprécier la non-saturation (qui doit être vérifiée dans presque toutes les étapes, ce qui ne sera plus rappelé) on continue d'utiliser les programmes décrits en 5.5., la non-saturation devant être vérifiée directement sur le capteur CCD (2018).

## 6.5. réglage de la position du laser (2000) et du miroir (2021)

Cette étape est semblable à l'étape décrite en 5.6.

## 6.6. réglage des tensions de commande de l'actuateur piézoélectrique

Le procédé est identique à celui décrit en 5.12. , à ceci près qu'il n'y a pas de réglage du diaphragme (114) supprimé et que la position de (2009) est réglée de manière à maximiser l'intensité reçue sur le capteur. Le fait que l'image reçue directement par le capteur soit dans le domaine spatial n'affecte pas le résultat.

## 6.7. réglage du niveau de l'onde de référence.

Cette étape est identique à celle décrite en 5.11, le niveau de l'onde de référence étant mesuré sur l'image directe.

## 6.8. réglage de la position de (2023) (2002) (2016):

Ce réglage est semblable à celui décrit en 5.7. Le programme de visualisation directe est remplacé par le programme de visualisation de l'image en fréquence décrit en 6.4., pour lequel la présence de l'onde de référence est nécessaire. Le réglage de position de la caméra selon l'axe optique est remplacé par un réglage de position de la lentille (2023) suivant l'axe du faisceau entrant dans cette lentille. Le réglage de position de la caméra dans le plan orthogonal à l'axe optique est remplacé par un réglage angulaire du miroir (2016).

## 6.9. réglage de la position du condenseur (2011).

Ce réglage est semblable à celui décrit en 5.8. mais c'est l'image en fréquence qui doit être observée en présence de l'onde de référence, et non l'image directe en l'abscence d'onde de référence.

## 6.10. réglage de la position de la lentille (2006).

Il est semblable à celui décrit en 5.9. mais c'est l'image en fréquence qui permet d'apprécier la ponctualité.

## 6.11. détermination du nombre de pas par pixel.

Cette étape est semblable à celle décrite en 5.10, mais le pixel d'intensité maximale est observé sur l'image en fréquence.

## 6.12. obtention de la constante K.

Cette étape est effectuée sur le même principe que celle décrite en 5.14. mais elle est modifiée pour tenir compte de l'inversion entre image directe et image en fréquence.

Pour obtenir l'image du micromètre, l'objectif est d'abord mis en position à peu près focalisée, le micromètre ayant été introduit comme objet. Le programme de visualisation directe de l'image reçue sur le CCD est lancé, en l'abscence d'onde de référence. Le diaphragme en (2007) doit être ajusté pour que la zone observée apparaisse uniformément éclairé. Le micromètre est déplacé sous l'objectif jusqu'à ce qu'on obtienne une image de celui-ci.

L'objectif de microscope est alors déplacé par le dispositif de focalisation de manière à obtenir une image correctement focalisée. Pour faciliter la focalisation, on a intérêt à visualiser une partie du micromètre ou des traits de différentes longueurs sont présents. Ceci limite les 'fausses focalisations' dues à des phénomènes d'interférences en avant du micromètre.

Lorsque une bonne image a été obtenue, le programme est arrêté et l'image obtenue est utilisée pour obtenir la distance en nombre de pixels entre deux traits, de la même manière qu'en 5.14. Si la distance entre deux graduations séparées par $D_{reel}$ micromètres est sur l'image ainsi obtenue de $D_{pix}$ pixels, si l'indice nominal des objectifs est $n_v$ (en général, $n_v$ est proche de 1,5) et si la longueur d'onde du laser dans le vide est $\lambda$ ($\lambda$ =0,633 micromètres) et si le nombre de points de la transformée de Fourier qui sera utilisée pour l'acquisition d'image est $N$ ($N$=256) alors on a: $K = \frac{n_v}{\lambda}\frac{N}{D_{pix}} D_{reel}$, ou $D_{reel}$ et $\lambda$ sont dans la même unité.

### 6.13. réglage du diaphragme:

Cette étape est semblable à celle décrite en 5.15. mais le programme de focalisation est remplacé par une visualisation directe de l'image reçue sur le capteur en l'abscence d'onde de référence.

### 6.14. enregistrement de l'onde de référence:

Cette étape est semblable à celle décrite en 5.16. L'onde de référence seule est enregistrée sur l'image directe.

### 6.15. focalisation sur l'objet étudié.

Cette étape est simplifiée, le programme spécifique de focalisation étant remplacé par un programme de visualisation directe de l'image reçue sur le capteur CCD en l'abscence d'onde de référence.

### 6.16. ajustement de la position du condenseur et réglage des diaphragmes

Cette étape est semblable à celle décrite en 5.18 mais:

- l'image en fréquence est maintenant obtenue en présence de l'onde de référence par transformation de Fourier de l'image reçue directement sur le capteur CCD, et non directement comme en 5.18.
- au contraire, l'image de l'objet dans le domaine spatial est maintenant obtenue directement et non par transformation de Fourier de l'image reçue sur le capteur CCD.

### 6.17. réglage des filtres.

Les filtres sont réglés pour que l'image formée sur le CCD par l'onde d'éclairage seule ait une intensité maximale de 64.

### 6.18. acquisition de l'image.

Cette étape est semblable à celle décrite en 5.20 mais les modifications suivantes doivent être prise en compte:

- étape (1302): est remplacée par l'acquisition d'images décrite Fig.26
- étape (1303) supprimée.
- étape (1304) modifiée:

la représentation $S[i,j]$ de nombres complexes est générée en affectant à chaque point la valeur suivante:

$$S[i,j] = \left[ \frac{1}{6\sqrt{Iref[i,j]}}\left(2I[0,i,j] - I[1,i,j] - I[2,i,j]\right) + \tilde{j}\,\frac{1}{2\sqrt{3Iref[i,j]}}\left(I[1,i,j] - I[2,i,j]\right) \right]$$

puis en effectuant la transformée de Fourier du tableau *S*.

### 6.19. étape de calcul:

Cette étape est identique à celle décrite en 5.21.

### 6.20. visualisation:

cette étape est identique à celle décrite en 5.22

### 7. Description d'un troisième mode de réalisation.

Ce mode de réalisation est plus complexe et plus coûteux que les précédents mais il permet des performances supérieures en termes de définition et de rapidité.

### 7.1. Principe.

Ce mode d'acquisition permet une amélioration des performances du mode 1 de la manière suivante:

-    augmentation de la vitesse d'acquisition d'images:
     Dans le premier mode de réalisation, cette vitesse est limitée par le mouvement mécanique des moteurs pas à pas et la nécessité d'attendre jusqu'à absorption des vibrations induites après chaque mouvement. Le mode de réalisation présent permet d'accélérer cette prise d'images en remplaçant ce système mécanique par un système optique de déflection du faisceau, basé sur des cristaux liquides et n'induisant pas de déplacements mécaniques dans le système.
-    amélioration de la précision:
     Dans le premier mode de réalisation, la précision est limitée par l'impossibilité d'adopter toutes les directions possibles pour le faisceau d'éclairage et par la non prise en compte de l'onde réfléchie. Le mode de réalisation présent utilise un système à deux objectifs. L'éclairage se fait alors par l'intermédiaire d'un objectif, ce qui permet au vecteur fréquence de l'onde d'éclairage de varier sur l'ensemble des deux portions de sphère limitées par l'ouverture de chaque objectif. De plus, l'onde réfléchie retraverse l'objectif d'éclairage et peut être prise en compte.
     Dans le premier mode de réalisation, les variations d'intensité de l'onde diffractée en fonction de la direction de polarisation de l'onde d'éclairage ne sont pas pris en compte, ce qui entraîne des erreurs dans la mesure des fréquences élevées. Dans le mode de réalisation présent, des rotateurs de polarisation permettent de faire varier la direction de polarisation de l'onde d'éclairage et la direction d'analyse de l'onde diffractée. Un algorithme prend en compte l'ensemble des mesures ainsi obtenues pour obtenir des représentations fréquentielles dans lesquelles la dépendance de l'onde diffractée par rapport à la polarisation de l'onde d'éclairage a été supprimée.
-    compensation de l'aberration sphérique:
     Dans les modes de réalisation précédents l'indice moyen dans l'échantillon observé doit être proche de l'indice nominal de l'objectif. Dans le cas contraire, la différence entre l'indice moyen de l'échantillon et l'indice nominal de l'objectif se traduit par une aberration sphérique qui limite fortement l'épaisseur de l'échantillon observable. Dans ce nouveau mode de réalisation, la configuration matérielle et les algorithmes employés permettent de compenser les différences de phase induites par l'indice moyen de l'échantillon et d'annuler cette aberration sphérique.

Le paragraphe 7.2. décrit matériellement le microscope utilisé.
Ce microscope fait l'objet d'un ensemble de réglages préliminaires effectués en l'absence de l'échantillon observé et qui n'ont normalement pas à être répétés lorsque l'échantillon observé est modifié:

-    Le réglage de position des différents éléments du système est effectué comme décrit au paragraphe 7.4.
-    Le module de l'onde de référence est déterminé comme décrit au paragraphe 7.4.
-    Les paramètres $K_p$, équivalents au paramètre $K$ utilisé dans le premier mode de réalisation, sont déterminés de la manière décrite au paragraphe 7.6.
-    Les caractéristiques des faisceaux d'éclairage utilisés sont déterminées comme décrit au paragraphe 7.9.

- Les tableaux d'indices de commande sont déterminés comme décrit au paragraphe 7.13.

Après introduction de l'échantillon, le microscope fait l'objet d'un second ensemble de réglages:

- La position des objectifs est réglée comme décrit au paragraphe 7.10.
- Les coordonnées relatives *x,y,z* des points d'origine des faisceaux de référence associés à chaque objectif, ainsi que l'indice moyen $n_o$ de l'échantillon et son épaisseur *L*, sont détermminés comme décrit au paragraphe 7.11. Cette détermination suppose l'utilisation d'un algorithme spécifique décrit au paragraphe 7.8., utilisant des équations établies au paragraphe 7.7. Une version simplifiée de cet algorithme est également utilisée au paragraphe 7.9.
- La valeur $w_0$ caractérisant la position de l'échantillon est calculée comme décrit au paragraphe 7.15. La détermination de cette valeur fait appel à une procédure d'acquisition d'images décrite au paragraphe 7.12. et à des équations établies au paragraphe 7.14. Simultanément, un premier réglage de la position de l'échantillon est effectué comme indiqué au paragraphe 7.15.3.
- La fonction de compensation des aberrations, sous la forme de tableaux $D_p$ , est obtenue comme décrit au paragraphe 7.16.

Lorsque ces réglages préliminaires ont été effectués, la procédure d'obtention de représentations tridimensionnelles peut être lancée. Cette procédure est décrite en 7.17. Elle fait appel à la procédure d'acquisition d'images décrite en 7.12. et utilise le tableau $D_p$ déterminé en 7.16. En répétant indéfiniment cette procédure, on peut obtenir une succession de représentations tridimensionnelles caractérisant l'évolution temporelle de l'échantillon observé. Il est nécessaire de régler de position de l'échantillon pour que la représentation obtenue soit celle d'une zone d'intérêt de l'échantillon. Ce réglage est effectué comme indiqué en 7.17.3. et peut impliquer une répétition des étapes préliminaires de calcul de $w_0$ et $D_p$ décrites respectivement en 7.15.2. et en 7.16.

Diverses variantes des algorithmes et des réglages effectués sont décrites en 7.18. Beaucoup de réglages peuvent être supprimés si les conditions y sont favorables, par exemple si l'indice et l'épaisseur de l'échantillon sont connus à l'avance.

Un mode de conception des objectifs de microscope, spécifiquement adapté à ce microscope, est décrit au paragraphe 7.19.

## 7.2. description matérielle.

### 7.2.1. vue d'ensemble

Les Fig. 27 et 28 constituent une vue d'ensemble du système. La plus grande partie du système, représentée sur la Fig.27, se trouve dans un plan horizontal et est supportée par une table optique. Cependant, les deux objectifs de microscope utilisés doivent être positionnés sur un axe vertical (2263) pour pouvoir utiliser un échantillon (2218) positionné horizontalement. L'axe (2263) est à l'intersection de deux plans verticaux définis en outre par leurs axes horizontaux (2261) et (2262). Ces axes horizontaux peuvent faire entre eux un angle de 0 degrés, 90 degrés ou 180 degrés. La figure 28 représente en partie une coupe selon le plan vertical défini par (2261) et en partie une coupe selon le plan vertical défini par (2262).

Le faisceau issu d'un laser (2200) polarisé dans le sens vertical va être dérivé en quatre faisceaux alimentant les chaînes optiques droite et gauche associés aux deux objectifs du microscope. Ces quatre faisceaux sont désignés sur le schéma et dans le texte par les sigles suivants:

- FRD faisceau de référence droit.
- FRG: faisceau de référence gauche.
- FED: faisceau d'éclairage droit.
- FEG: faisceau d'éclairage gauche.

Chacun de ces faisceaux sera divisé par la suite en un faisceau principal, que l'on notera comme le faisceau d'origine, et un faisceau indicateur inverse. Les faisceaux indicateurs inverse seront notés FRDI,FRGI,FEDI,FEGI.

Le faisceau est issu du laser (2200) et a son vecteur champ électrique dirigé selon un axe orthogonal au plan de la figure. Il traverse un élargisseur de faisceau (2201) puis est séparé en un faisceau d'éclairage et un faisceau de référence par un miroir semi-transparent (2202). Le faisceau d'éclairage traverse un diaphragme (2248), un filtre (2203) puis un dispositif d'atténuation de faisceau (2204), un dispositif de décalage de phase (2205), un dispositif de déviation du faisceau.(2206) qui permet de faire varier la direction de ce faisceau parallèle. Il est ensuite dévié par un miroir semi-transparent (2207) qui sépare un faisceau d'éclairage droit et un faisceau d'éclairage gauche, destinés à éclairer l'échantillon dans deux sens opposés. Le faisceau d'éclairage droit FED est dévié par un miroir (2208), traverse un dispositif de déviation de faisceau et de commutation (2209), un rotateur de phase (2210), et est séparé par un miroir semi-transparent (2211) en un faisceau d'éclairage principal et un faisceau indicateur inverse. Le faisceau d'éclairage principal traverse ensuite un achromat (2212), un diaphragme (2213), est réfléchi sur un miroir (2214) le renvoyant vers le haut, puis sur des miroirs (2215) et (2216), et traverse l'objectif (2217) pour aller éclairer l'échantillon (2218). Après traversée de l'échantillon, il traverse l'objectif (2219), est réfléchi par les miroirs (2220) (2221) (2222), puis traverse le diaphragme (2223), l'achromat (2224), le miroir semi-transparent (2225), le rotateur de phase (2226), l'achromat (2227), le miroir semi-transparent (2228) et le polariseur (2253) et est reçu par le capteur CCD (2229).

Les deux objectifs (2217) et (2219) doivent avoir leur axe optique (2263) vertical pour que l'huile optique nécessaire pour les utiliser ne coule pas. Les miroirs (2214) (2215) (2216) (2220) (2221) (2222) ont pour utilité de dévier le faisceau pour que celui-ci puisse traverser les objectifs dans un sens vertical. La Fig.28 représente une coupe selon les axes (2262) et (2263), articulée autour de l'axe optique (2263).

La Fig.29 est une représentation du trajet optique des rayons lumineux entre l'objectif (2219) désigné par 'OM' et le capteur CCD (2229) désigné par 'CCD'. Les miroirs, miroirs semi-transparents et rotateur de phase ont été omis sur la figure mais influent sur la position des divers éléments. Les rayons se propagent le long d'un axe optique représenté 'droit',qui en réalité cesse d'être rectiligne entre les plans P2 et P1, zone ou il est défléchi par des miroirs (2220) (2221) (2222) pour aborder l'objectif dans un plan vertical. La partie gauche de la figure représente le trajet optique de rayons qui sont parallèles dans l'échantillon étudié, et la partie droite en vis-à-vis le trajet optique de rayons issus d'un point dans la zone observée. L'achromat (2224) est désigné par 'L1', le diaphragme (2223) par 'D', l'achromat (2227) par 'L2'. $f_1$ est la distance focale de L1, $f_2$ est la distance focale de L2. P1 est le plan dans lequel focalisent des rayons entrant parallèles dans l'objectif (plan focal image). Ce plan doit coincider avec le plan focal objet de l'achromat (L1) pour qu'un rayon parallèle en entrée de l'objectif soit également parallèle entre les achromats L1 et L2. P2 est le plan dans lequel se forme l'image de l'échantillon observé. C'est dans ce plan que doit être positionné le diaphragme (D). P3 est l'image virtuelle du plan P2 par l'achromat L1. P3 doit coincider avec le plan focal objet de L2 de manière à ce qu'un rayon issu d'un point central de l'objet observé, formant une image ponctuelle dans P2, parvienne au CCD sous la forme d'un rayon parallèle. P6 est le plan focal image de L2. C'est dans ce plan que doit être placé le CCD, de manière à ce qu'un rayon parallèle en entrée de l'objectif forme une image ponctuelle sur le CCD.

Le trajet optique des rayons entre l'objectif (2217) et le capteur (2239) est symétrique du précédent.

Le faisceau de référence séparé par le miroir (2202) est réfléchi par (2233), traverse un filtre (2234), et un miroir semi-transparent (2235) le transformant en une partie gauche et une partie droite. La partie gauche est réfléchie par les miroirs (2254) (2236) , traverse le filtre complémentaire (2255), le dispositif de décalage de phase (2251) et le diaphragme (2250) puis atteint le miroir semi-transparent (2228) qui la sépare en un faisceau principal et un faisceau indicateur inverse. Le faisceau principal est dirigé vers le CCD (2229).

Le faisceau d'éclairage et le faisceau de référence ont tous deux des faisceaux indicateurs inverse ayant mêmes caractéristiques que le faisceau principal mais se dirigeant dans le sens opposé. L'indicateur inverse FRGI du faisceau de référence FRG, issu du miroir semi-transparent (2228), traverse l'achromat (2281) et est focalisé sur un miroir (2282) qui le réfléchit. Il retraverse alors l'achromat (2281) qui le rend à nouveau parallèle puis il est à nouveau réfléchi par le miroir semi-transparent (2228). Il a alors la même direction (mais en sens opposé) que le faisceau de référence dirigé vers le capteur CCD (2229). De même, l'indicateur inverse FRDI du faisceau d'éclairage FRD, issu du miroir semi-transparent (2211), est focalisé par l'achromat (2231) sur le miroir (2232). Celui-ci le réfléchit, et après une nouvelle réflection sur le miroir semi-transparent (2211) il a la direction opposée à celle du faisceau d'éclairage principal dirigé vers l'objectif (2217).

L'ensemble du dispositif est symétrique sur le plan optique par rapport à l'objet observé. Il existe donc un faisceau d'éclairage gauche ayant un rôle symétrique par rapport au faisceau d'éclairage droit, et un faisceau de référence droit ayant un rôle symétrique de celui du faisceau de référence gauche.

Le faisceau d'éclairage gauche FEG, issu du miroir semi-transparent (2207), est réfléchi sur les miroirs (2280) et (2283) puis traverse le dispositif de déviation et de-commutation (2240) équivalent à (2209). Il traverse ensuite le rotateur de polarisation (2241) puis est séparé par le miroir semi-transparent (2225) en un faisceau principal qui se dirige vers l'objectif de microscope (2219), et un faisceau indicateur inverse FEGI qui traverse l'achromat (2242), est focalisé sur le miroir (2243) et finalement réfléchi à nouveau sur (2225).

Le faisceau de référence droit FRD, issu du miroir semi-transparent (2235), est réfléchi par le miroir (2244) et traverse le filtre complémentaire (2256). Le miroir semi-transparent (2245) le sépare en un faisceau principal qui traverse le polariseur (2252) et atteint le CCD (2239), et un faisceau indicateur inverse FRDI qui traverse l'achromat (2246) et est focalisé sur le miroir (2247), puis retourne vers le miroir semi-transparent (2245) qui le réfléchit en direction de l'objectif (2217).

Les polariseurs (2252) et (2253) sont des plaques peu épaisses constituées d'une feuille dichroïque maintenue entre deux vitres de verre.

Les zones (2274) (2275) (2276) (2277), délimitées par des pointillés sur le dessin, correspondent à des parties du système entièrement immergées dans de l'huile optique. Une telle zone constitue donc un récipient étanche contenant les éléments optiques visibles sur le dessin. L'entrée et la sortie du faisceau dans ce récipient se font par des fenêtres traitées antiréfléchissant sur leur face externe. Ceci permet de limiter les défauts liés à la taille des verres utilisés dans les différents dispositifs y étant inclus.

Les CCD (2239) et (2229) sont intégrés à des caméras (2284) et (2230) elles-mêmes fixées à des positionneurs trois axes permettant d'en ajuster la position suivant l'axe (2264) et suivant les deux axes orthogonaux à (2264), ainsi qu'en rotation autour de l'axe (2264). Les achromats (2227) (2224) (2212) (2237) (2246) (2231) (2242) (2281) sont fixés à des positionneurs un axe permettant un réglage fin de la position dans le sens de l'axe (2264). Les miroirs (2282) (2243) (2232) (2247) sont fixés à des positionneurs permettant un ajustement de leur orientation. Les diaphragmes (2213) et (2223) sont réglables et fixés à des positionneurs deux axes permettant d'en régler la position dans le plan orthogonal à (2264). Les miroirs semi-transparents (2225) (2228) (2211) (2245) sont fixés à des positionneurs permettant d'en régler l'orientation. Les miroirs (2214) et (2222) sont fixés à des positionneurs permettant d'en régler l'orientation. L'objectif de microscope (2219) est fixé à un positionneur 2 axes permettant de le déplacer dans un plan orthogonal à l'axe (2263). L'objectif (2217) est fixé à un dispositif de focalisation permettant de le déplacer suivant l'axe (2263). L'ensemble du système est fabriqué avec la plus grande précision possible dans le positionnement des divers éléments.

Les miroirs (2247) (2232) (2243) (2282) sont équipés d'obturateurs manuels (2257) (2258) (2259) (2260) permettant de supprimer les faisceaux réfléchis par ces miroirs. Les faisceaux FRD et FRG peuvent être supprimés en utilisant des filtres complètement opaques.

L'échantillon (2218) est constitué de deux lamelles d'épaisseur stantard (150 μm) entre lesquelles se trouve en fine couche (50 à 100 μm) la substance à observer. Cet échantillon est fixé à une lame plus épaisse de manière à ce que celle-ci n'empêche pas l'accès de l'échantillon par les objectifs. L'ensemble est fixé à un positionneur 3 axes en translation.

Les objectifs utilisés peuvent par exemple être des objectifs planapochromatiques d'ouverture numérique $ouv$=1,4 et de grandissement $g$=100 formant l'image à 160mm du col de l'objectif. Il est également possible d'utiliser d'autres types d'objectifs, décrits aux paragraphes 7.19 à 7.21.

Les achromats (2212) (2237) (2224) (2227) (2246) (2231) (2242) (2281) peuvent avoir par exemple la même distance focale $f = f_1 = f_2 = 200$mm.

Les capteurs CCD utilisés doivent avoir des pixels carrés et une zone utile carrée dont le coté a pour longueur $D = 2f_2\frac{ouv}{g}$, le nombre de pixels étant $N_{pix}$ x $N_{pix}$ avec par exemple $N_{pix}$ =256 Les dispositifs de contrôle du faisceau (2204) (2205) (2206) (2209) (2240) (2251) (2210) (2241) (2226) (2238) sont tous pilotés par des rotateurs de phase commandés par des tensions bipolaires. La commande de ces dispositifs doit être synchronisée avec l'acquisition des images par la caméra. La caméra peut être une caméra rapide de type analyseur de mouvement, dotée d'une mémoire suffisante, disponible par exemple chez Kodak. Le système de calcul est un ordinateur doté d'une mémoire suffisante pour stocker les tableaux tridimensionnels nécessaires. Des machines ayant par exemple 8Go de mémoire sont disponibles chez Digital Equipment.

Les filtres en (2203) (2234) (2255) (2256) permettent de régler l'intensité des différents faisceaux. Comme dans le premier mode de réalisation, leurs valeurs doivent être fréquemment ajustés pendant les différents réglages et pendant l'utilisation du microscope. Ces ajustements se font de manière similaire à ce qui était fait dans le premier mode de réalisation et ne seront pas rappelés. Ils ont également pour rôle de limiter l'intensité des faisceaux qui se dirigent en sens opposé à la normale et tendent à retourner vers le laser (2200), pendant certaines opérations de réglage.

## 7.2.2.Dispositif d'atténuation de faisceau:

Le dispositif d'atténuation est représenté Fig.30. Il est constitué d'un rotateur de phase (2501) désigné 'R1' sur la figure, d'un polariseur Glan-Thomson (2502) désigné 'POL1', d'un second rotateur (2503) désigné 'R2', et d'un second polariseur (2504) désigné 'POL2'. Le faisceau entrant dans le dispositif est polarisé verticalement. L'angle de l'axe neutre de (2501) avec la verticale est θ pour une tension bipolaire appliquée aux bornes du dispositif de -5V et est tourné d'un angle α par application d'une tension de +5V, avec α = 22 degrés environ. L'axe neutre du rotateur (2503) est caractérisé par les mêmes angles, mais par rapport à l'horizontale et non à la verticale. Le polariseur (2502) sélectionne le sens de polarisation horizontal. Le polariseur (2504) sélectionne le sens de polarisation vertical.

La Fig.31 illustre le fonctionnement de la partie du dispositif constituée de (2501) et (2502) pour une tension appliquée de -5V. Elle représente en trait gras le vecteur champ électrique (2505) du faisceau en entrée du dispositif, dans un repère constitué de l'axe de polarisation vertical (2506) et de l'axe de polarisation horizontal (2507). Le passage par le rotateur R1 (2501) fait tourner ce vecteur d'un angle 2θ et il est donc transformé en (2508). Le passage par le polariseur POL1 (2502) constitue une projection sur l'axe horizontal. En sortie de ce polariseur, le vecteur champ électrique (2509) du faisceau est donc horizontal et son amplitude a été multipliée par un facteur sin(2θ).

La figure 32 illustre le fonctionnement de la partie du dispositif constituée de (2501) et (2502) pour une tension appliquée de +5V. L'axe neutre de R1 ayant été tourné d'un angle $\alpha$, le vecteur champ électrique est tourné d'un angle total $2(\alpha + \theta)$ et l'amplitude du champ électrique en sortie est multipliée par $\sin(2\theta+2\alpha)$. Le facteur d'atténuation entre les positions 'ouverte' (+5V) et 'fermée' (-5V) est donc de $a_1 = \dfrac{\sin(2\theta)}{\sin(2\alpha + 2\theta)}$. expression qui s'inverse en:

$$\theta = \frac{1}{2} \operatorname{Arc\,tan}\left(\frac{\sin(2\alpha)}{\dfrac{1}{a_1} - \cos(2\alpha)}\right)$$

Par exemple pour $a_1 = \dfrac{1}{16}$ et $\alpha = 22°$ on trouve $\theta = 1{,}30°$

La seconde partie du dispositif , constituée de (2503) et (2504), fonctionne exactement comme la première, à ceci près qu'elle prend en entrée un faisceau polarisé horizontalement et délivre en sortie un faisceau polarisé verticalement. Le facteur d'atténuation $a_2$ de cette seconde partie est donc donné par la même formule que $a_1$ et on règlera les deux parties du dispositif de façon à avoir dans chaque partie la même atténuation (ou à peu près). Du fait de disparités de réglage entre les deux parties du dispositif, $a_2$ et $a_1$ ne sont cependant pas rigoureusement égaux en pratique.

La commande d'atténuation se fait selon la table ci-dessous, ou $V_1$ désigne la tension bipolaire appliquée à (2501) et $V_2$ celle appliquée à (2503).

| V1 | V2 | atténuation |
|----|----|-------------|
| -5V | -5V | $a_1\,a_2$ |
| -5V | +5V | $a_1$ |
| +5V | -5V | $a_2$ |
| +5V | +5V | 1 |

### 7.2.3. Dispositif de décalage de phase:

Ce dispositif est constitué de deux unités identiques placées l'une à la suite de l'autre. Une unité est constituée comme indiquée Fig.33.

Le faisceau polarisé verticalement en entrée du dispositif traverse d'abord un rotateur de phase (2601) désigné par 'R1' puis une lame biréfringente uniaxe (2602) désignée par 'LP', puis un second rotateur de phase (2603) désigné par 'R2' et un polariseur (2604) désigné par 'POL'. Les deux positions de l'axe neutre de chaque rotateur sont disposées de manière symétrique par rapport à un axe vertical. Les positions des deux rotateurs correspondant à une même tension de commande sont du même coté de l'axe vertical: pour une tension de -5V elles sont représentées en traits pointillés, pour une tension de +5V elles sont représentées en traits pleins. De même, les deux axes de la lame biréfringente sont disposés symétriquement par rapport à cet axe vertical (le troisième axe étant dans le sens de propagation du faisceau). La Fig. 34 montre l'état du vecteur champ électrique du faisceau à chaque étape de la traversée du dispositif, pour une tension de -5V appliquée à chaque rotateur.

La Fig.35 reprend la Fig.34 en précisant les valeurs des angles entre les différents vecteurs et les déphasages entre ces vecteurs et le vecteur en entrée du dispositif. La Fig. 36 reprend la Fig.34 en précisant les valeurs des angles entre les différents vecteurs et l'atténuation sur chaque vecteur.

Le vecteur champ électrique (2605) en entrée du dispositif est vertical. Après traversée du rotateur R1 (2601) il est symétrisé par rapport à l'axe neutre (2606) de ce rotateur, ce qui donne le vecteur (2607). Après traversée de la lame biréfringente, le vecteur (2607), représenté en pointillés, est décomposé en deux composantes (2608) et (2609) correspondant à chaque axe neutre de la lame. La composante (2609) est affectée d'un décalage de phase $\dfrac{\varphi}{2}$ et est réduite en amplitude d'un facteur

$$\cos\left(\frac{\pi}{4} - \alpha\right).$$

La composante (2608) est affectée d'un décalage de phase $-\dfrac{\varphi}{2}$ et est réduite en amplitude d'un facteur

$$\sin\left(\frac{\pi}{4} - \alpha\right).$$

Après traversée du rotateur (2603) l'ensemble est symétrisé par rapport à l'axe neutre (2612) de ce rotateur. (2608) est transformé en (2611), (2609) est transformé en (2610). Après traversée du polariseur (2604), ces deux composantes sont projetées sur un axe vertical. La composante (2610) est multipliée par un facteur

$$\cos\left(\frac{\pi}{4} - \alpha\right)$$

et a donc été affectée globalement par un facteur

$$\cos^2\left(\frac{\pi}{4} - \alpha\right).$$

La composante (2611) est multipliée par un facteur

$$\sin\left(\frac{\pi}{4} - \alpha\right)$$

et a donc été affectée globalement par un facteur

$$\sin^2\left(\frac{\pi}{4} - \alpha\right).$$

. Les deux sont ensuite ajoutées pour donner une composante unique (2615) de valeur:

$$v = \cos\left(\omega t - \frac{\varphi}{2}\right)\cos^2\left(\alpha - \frac{\pi}{4}\right) + \cos\left(\omega t + \frac{\varphi}{2}\right)\sin^2\left(\alpha - \frac{\pi}{4}\right)$$

ou $\omega$ est la pulsation de l'onde, $t$ est le temps. On vérifie :

$$v = \cos(wt)\cos\frac{\varphi}{2} + \sin(wt)\sin\frac{\varphi}{2}\sin(2\alpha)$$

soit en représentation complexe:

$$c = \cos\frac{\varphi}{2} + j\sin\frac{\varphi}{2}\sin(2\alpha)$$

Si $\theta$ est l'argument de c alors on a:

$$\cos\theta = \frac{\cos\frac{\varphi}{2}}{\sqrt{\sin^2(2\alpha) + \cos^2\frac{\varphi}{2}\left(1 - \sin^2(2\alpha)\right)}}$$

$$\sin\theta = \frac{\sin\frac{\varphi}{2}\sin(2\alpha)}{\sqrt{1 + \sin^2\frac{\varphi}{2}\left(-1 + \sin^2(2\alpha)\right)}}$$

Ces formules s'inversent en:

$$\sin\frac{\varphi}{2} = \frac{\sin\theta}{\sqrt{\sin^2\theta + \cos^2\theta\,\sin^2(2\alpha)}}$$

$$\cos\frac{\varphi}{2} = \frac{\cos\theta\sin(2\alpha)}{\sqrt{\sin^2\theta + \cos^2\theta\,\sin^2(2\alpha)}}$$

On cherche a créer un décalage de phase de $\theta$ = 60° dans une position des rotateurs et $\theta$ = -60° dans la position symétrique, ce qui correspond à un décalage de phase total de 120 degrés. L'équation ci-dessus permet de déterminer la valeur du décalage de phase total $\varphi$ créé par la lame entre ses deux axes neutres.

Avec $\theta$ = 60° et $\alpha$ = 40° degrés on obtient: $\varphi$=120,7566 degrés. Il faut donc utiliser une lame uniaxe créant pour la longueur d'onde considérée une différence de phase de 120,75 degrés entre ses deux axes.

Les deux axes de la lame n'ont pas un rôle symétrique. Si $\Delta\varphi_i$ est le décalage de phase à la traversée de la lame pour un rayon polarisé suivant l'axe i, il n'existe qu'un seul choix des axes 1 et 2 tel que $\Delta\varphi_1 - \Delta\varphi_2 \cong$ +120 degrés. La lame uniaxe doit être orientée de manière à ce que le rotateur (2601) fasse tourner la polarisation du rayon incident vers l'axe 2 quant il est soumis à une tension bipolaire de -5V.

Le dispositif de décalage de phase étant constitué de deux unités de ce type, soit $V_{ij}$ la tension appliquée au i-ième rotateur du j-ième dispositif (i et j variant de 1 à 2). La commande du système de décalage de phase se fait selon le tableau suivant:

| $V_{11}$ | $V_{12}$ | $V_{21}$ | $V_{22}$ | décalage |
|---|---|---|---|---|
| -5V | -5V | -5V | -5V | 0° |
| 5V | 5V | -5V | -5V | +120° |
| -5V | -5V | 5V | 5V | +120° |
| 5V | 5V | 5V | 5V | -120° |
| les autres combinaisons étant inusitées. | | | | |

### 7.2.4. Déviateur de faisceau

Le déviateur de faisceau est représenté sur les Fig. 37 et 38. Son unité de base est un bloc élémentaire de variation constitué des éléments (2801) à (2804).

Un bloc élémentaire de variation est constitué d'un premier rotateur (2801) noté 'R1' suivi d'un prisme biréfringent (2802) noté 'PD' (prisme de déviation) puis d'un second rotateur (2803) noté 'R2' et d'un polariseur de Glan-Thomson (2804) noté 'POL'. Le rotateur (2801) a son axe neutre dans le sens vertical pour une tension appliquée de -5V. Pour la même tension appliquée, le rotateur (2803) a son axe neutre dans le sens horizontal. Le prisme (2802) est constitué d'un matériau biréfringent, calcite ou quartz. La direction de polarisation du rayon extraordinaire (premier axe neutre) est par exemple dans le sens vertical, et la direction de polarisation du rayon ordinaire (second axe neutre) est dans le sens horizontal. Un rayon incident sur ce prisme est donc divisé en un rayon ordinaire polarisé dans le sens vertical et un rayon extraordinaire polarisé dans le sens horizontal. Le rayon ordinaire et le rayon extraordinaire ont une inclinaison différente en sortie du prisme (angle de leur direction de propagation avec celle du faisceau entrant).

Les Fig. 39 et 40 illustrent le fonctionnement de ce bloc élémentaire de variation. La Fig.39 correspond à une déviation dans un sens et la Fig.40 à une déviation dans l'autre sens. Les flèches en gras représentent les vecteurs champ électrique des faisceaux considérés.

Dans le cas de la Fig. 39, les tensions appliquées aux deux rotateurs sont respectivement -5V pour (2801) et +5V pour (2803). Le vecteur champ électrique du faisceau entrant est vertical (2901). Après traversée du premier rotateur dont l'axe neutre (2902) est vertical, il reste vertical (2903). Après traversée du prisme de déviation il est constitué du seul rayon extraordinaire (2904). Après traversée du second rotateur il est symétrisé par rapport à l'axe (2906) de ce rotateur, qui fait lui-même un angle de 40 degrés avec l'horizontale (on a supposé pour le dessin que $\alpha=40°$ mais le résultat ne dépend pas de l'exactitude de cette valeur). Il est donc transformé en un vecteur (2905) faisant un angle de 10 degrés avec l'horizontale. Le polariseur projette ce vecteur sur l'horizontale pour obtenir le vecteur (2907) dont la déviation correspond au seul rayon extraordinaire.

Dans le cas de la Fig. 40, les tensions appliquées aux deux rotateurs sont respectivement +5V pour (2801) et -5V pour (2803). Le vecteur champ du faisceau entrant est vertical (2911). Après traversée du premier rotateur il est symétrisé par rapport à l'axe (2912) de ce rotateur, qui fait lui-même un angle de 40° avec la verticale. Il est donc transformé en un vecteur (2913) faisant un angle de 10 degrés avec l'horizontale. Après traversée du prisme de déviation, le faisceau est décomposé en un faisceau extraordinaire de vecteur champ (2914) et un faisceau ordinaire de vecteur champ (2915). Après traversée du second rotateur, d'axe horizontal, le vecteur champ du faisceau extraordinaire est symétrisé par rapport à l'horizontale et devient (2916). Le polariseur sélectionne alors la seule composante horizontale et le vecteur sortant (2917) correspond donc au seul rayon ordinaire.

Un bloc élémentaire complet est représenté par le rectangle (2805), la direction du champ du faisceau entrant étant représentée par la flèche (2806). Le bloc (2807) est identique mais tourné de 90 degrés par rapport à un axe horizontal de sorte que la direction du champ du faisceau entrant est horizontale (2808). L'ensemble des deux blocs dorme un doublet élémentaire (2809) permettant une déviation élémentaire du faisceau dans les directions horizontale et verticale. Comme indiqué sur la Fig.38, l'ensemble du déviateur est constitué de huit doublets élémentaires successifs. Cependant, afin de disposer d'un système de commutation efficace, le dernier doublet (numéroté 0) est placé sur la partie du faisceau ou les faisceau d'éclairage gauche et droit ont déjà été séparés. Deux doublets identiques (D0) et (D0b) sont donc utilisés, un sur chaque branche du faisceau. Lorsqu'une tension de -5 V est appliquée à ses deux rotateurs, un bloc élémentaire agit comme un commutateur fermé. Le dernier doublet peut donc commuter efficacement le faisceau, une tension de -5V devant être appliquée à tous ses rotateurs pour avoir un commutateur fermé.

Le bloc (2209) sur la Fig.27 représente donc le doublet D0b. Le bloc (2240) représente le doublet D0. Le bloc (2206) représente les doublets D1 à D7.

Le type de cristal dans lequel est fabriqué le prisme et l'angle entre ses deux faces déterminent l'angle de variation de l'inclinaison du faisceau entre les deux positions d'un doublet élémentaire.

On adopte les notations suivantes:

$n_l$ : indice du liquide d'immersion utilisé pour le dispositif de déviation de faisceau.

$o$ : ouverture de l'objectif

$A$ : ouverture du faisceau en entrée du dispositif de déviation, à peu près égale à sa valeur au niveau du diaphragme ou se forme l'image. A est défini comme le sinus du demi-angle au sommet du cône formé par les rayons provenant de l'objectif.

$g$ : grandissement de l'objectif.

$d$ : distance entre les plans P2 et P4 de la Fig.29.

$f_1$ : distance focale de la lentille L1 sur la Fig.29.

La relation d'Abbe et la résolution des équations optiques donne:

$$A = \frac{o}{n_l g}\left(1 - \frac{d}{f_1}\right)$$

La Fig.41 montre le principe du calcul de la déviation par le prisme des rayons ordinaires. Le rayon (2922) pénètre dans le prisme (2921) et en ressort en (2923).

$\theta_d$ est l'angle au sommet du prisme de déviation.

$\theta_e$ est l'angle du faisceau extraordinaire sortant avec la face extérieure du prisme.

$\theta_o$ est l'angle du faisceau ordinaire sortant avec la face extérieure du prisme.

$n_e$ est l'indice extraordinaire du prisme de déviation.

$n_o$ est l'indice ordinaire du prisme de déviation.

On a: $\sin \theta_o = \dfrac{n_o}{n_l} \sin \theta_d$ et de même pour le rayon extraordinaire: $\sin \theta_e = \dfrac{n_o}{n_l} \sin \theta_d$ d'ou:

$$\sin\theta_e - \sin\theta_o = \frac{n_e - n_o}{n_l} \sin\theta_d$$

soit au premier ordre en $(\theta_e - \theta_o)$:

$$(\theta_e - \theta_o) \cos\theta_d = \frac{n_e - n_o}{n_l} \sin\theta_d$$

Le i-ième doublet doit créer une variation de l'inclinaison d'amplitude:

$$\theta_e - \theta_o = \frac{A}{2^i}$$

Le demi-angle au sommet du i-ième prisme vaut donc:

$$\theta_d = \operatorname{Arctan}\left(\frac{A}{2^i} \frac{n_l}{n_e - n_o}\right)$$

soit avec la valeur de $A$ précédemment obtenue:

$$\theta_d = \operatorname{Arctan}\left(\frac{1}{2^i} \frac{1}{g} \frac{o}{n_e - n_o}\left(1 - \frac{d}{f_1}\right)\right)$$

Dans cette équation il faut prendre en compte les valeurs suivantes:

quartz: $n_e - n_o = 0{,}009$
calcite: $n_e - n_o = -0{,}172$

Pour chaque prisme:

- inverser les axes ordinaire et extraordinaire permet d'inverser le sens dans lequel sont déviés les rayons lorsque on passe d'un couple de tensions (-5V,5V) à un couple de tension (5V,-5V) appliqué aux rotateurs du bloc élémentaire concerné. Ce sens étant inversé entre le quartz et la calcite pour un même choix des axes ordinaire et extraordinaire, ces axes doivent être inversés dans un prisme en calcite par rapport à leur position dans un prisme en quartz.
- Inverser l'orientation du prisme (sommet orienté vers le bas au lieu du haut) permet également d'inverser le sens dans lequel sont déviés les rayons lorsque on passe d'un couple de tensions (-5V,5V) à un couple de tension (5V,-5V) appliqué aux rotateurs du bloc élémentaire concerné. Mais en même temps cette opération inverse le sens de déviation des rayons lorsqu'un couple de tensions fixe est appliqué. Afin d'avoir une déviation 'fixe' minimale des rayons le prisme à plus forte déviation de chaque série, calcite ou quartz, doit être inversé par rapport aux autres. Afin de maintenir la déviation dans le sens souhaité, ses axes ordinaire et extraordinaire doivent être inversés.

Pour chaque prisme on choisit la matière, quartz ou calcite, qui permet d'obtenir le plus facilement cet angle au sommet. On choisit ensuite l'orientation du prisme pour qu'à tension fixe appliquée aux rotateurs, les variations de direction induits se compensent au mieux entre les prismes. On choisit la position des axes ordinaire et extraordinaire pour que les rayons soient toujours déviés dans le même sens lorsqu'on passe d'un couple de tensions (-5V,5V) à un couple de tension (5V,-5V) appliqué aux rotateurs du bloc élémentaire concerné. Pour chaque doublet, il faut préciser pour les deux prismes inclus dans le doublet, qui ont les mêmes caractéristiques: l' angle au sommet, l'orientation du sommet (normale ou inversée par rapport à la Fig.37 sur laquelle il est orienté vers le haut), la position des axes ordinaires ou extraordinaires (normale ou inversée par rapport à la figure 37 sur laquelle l'axe extraordinaire est vertical). Par exemple pour un objectif $o$=1,25 $g$=100 et avec $f_1$=200 mm, $d$=20 mm on obtient le tableau suivant ou les angles sont en degrés:

| indice du prisme | $\theta_d$ (calcite) | $\theta_d$ (quartz) | choix | orientation du sommet | position des axes ordinaire et extraordinaire |
|---|---|---|---|---|---|
| 0 | 3.742 | 51.340 | calcite | inversée | normale |
| 1 | 1.873 | 32.005 | calcite | normale | inversée |
| 2 | 0.937 | 17.354 | calcite | normale | inversée |
| 3 | 0.468 | 8.881 | quartz | inversée | inversée |
| 4 | 0.234 | 4.467 | quartz | normale | normale |
| 5 | 0.117 | 2.237 | quartz | normale | normale |
| 6 | 0.058 | 1.119 | quartz | normale | normale |
| 7 | 0.029 | 0.559 | quartz | normale | normale |

Une déviation du faisceau est une variation de sa direction. Mais à grande distance du doublet créant la déviation elle se traduit également par un décalage spatial de la zone éclairée. Afin que ce phénomène ne soit pas pénalisant, les distances entre les éléments du déviateur doivent être réduites au minimum et ces éléments doivent avoir une section suffisante pour que, quelle que soit l'orientation choisie, le faisceau 'remplisse complètement' la zone délimitée par le diaphragme. Par exemple cette section peut être de 12 mm, les polariseurs de Glan-Thomson étant alors de dimension 12 x 30 mm. Toutes les parties du déviateur qui ne transmettent pas directement le faisceau doivent être aussi absorbantes que possible, afin de limiter le bruit.

Afin de supprimer les déviations constantes par les prismes de déviation, l'indice du liquide optique dans lequel un prisme est immergé doit être égal à la valeur moyenne des indices ordinaire et extraordinaire du prisme soit:
Pour la calcite:

$$n_l = \frac{1.658 + 1.486}{2} = 1.572.$$

Pour le quartz:

$$n_l = \frac{1.544 + 1.553}{2} = 1.5485$$

La partie du déviateur de faisceau dont les prismes sont en calcite doit donc être immergée dans un liquide d'indice 1.572, et la partie dont les prismes sont en quartz doit donc être immergée dans un liquide d'indice 1.5485. La cuve contenant le déviateur et le liquide optique doit donc être séparée en deux parties, une fenêtre en verre permettant le passage du faisceau entre ces deux parties qui contiennent des liquides optiques d'indices différents.

La commande du dispositif se fait par commande des 36 rotateurs. Dans chaque doublet les rotateurs de phase sont numérotés de 0 à 3, le numéro 0 étant le rotateur le plus 'à gauche ' sur la Fig.28. Si $i$ est l'indice du doublet, variant de 0 à 7 et $j$ est l'indice du rotateur dans un doublet, variant de 0 à 3, alors on affecte au rotateur l'indice global $k = i + 1 + j * 9$, sauf pour le doublet numéroté 0b pour lequel on a $k = j*9$. On utilise un mot de commande 36 bits dans lequel le bit numéro k correspond au rotateur d'indice global k. Pour chaque bit, une valeur de 0 correspond à une tension appliquée de -5V et une valeur de 1 correspond à une tension de +5V.

Un éclairage est caractérisée par le capteur sur lequel parvient le faisceau d'éclairage direct et par des coordonnées symboliques sur ce capteur. Le capteur sera indicé par l'entier $p$ et les coordonnées symboliques seront $i,j$ ou $i$ et $j$ varient entre 0 et 255. Les coordonnées symboliques ne correspondent pas nécessairement à des coordonnées en pixels sur le capteur. Lorsqu'on souhaite obtenir un éclairage caractérisé par les indices $p,i,j$, le mot de commande est donné par le tableau ci-dessus:

| capteur | coor-données | mot de commande $COM[p,i,j]$ |
|---|---|---|
| (2239): $p=0$ | $(i,j)$ | $\left(0_1, i_8, 0_1, \bar{i}_8, 0_1, j_8, 0_1, \bar{j}_8\right)$ |
| (2229): $p=1$ | $(i,j)$ | $\left((i\%2)_1, 0_1, (i/2)_7, \overline{(i\%2)}_1, 0_1, \overline{(i/2)}_7, (j\%2)_1, 0_1, (j/2)_7, \overline{(j\%2)}_1, 0_1, \overline{(j/2)}_7\right)$ |

Dans ce tableau:

*a%b* signifie *a* modulo *b*

*a*/2 représente le produit de la division entière de *a* par 2, c'est-à-dire *a* décalé vers la droite

(*a,b,c*..) représente *a* concaténé avec *b* puis avec *c* etc...

$a_i$ représente *a* exprimé sur *i* bits.

Si *a* est un nombre entier, son expression en binaire est une suite de 0 et de 1. En transformant les 0 en 1 et vice-versa on obtient son complémentaire que l'on note $\bar{a}$. Cette notation sera maintenue par la suite.

Lorsqu'on souhaite supprimer les deux faisceaux d'éclairage, le mot de commande à utiliser est 0.

### 7.3.Réglage de l'ensemble.

### 7.3.1.Première mise en place du système

Le système, à l'exeption des éléments (2204)(2205)(2206)(2209)(2240) (2210) (2241) (2238)(2226), est mis en place géométriquement avec une précision maximale. Le trajet du faisceau est contrôlé par utilisation d'un morceau de papier diffusant interposé sur sa trajectoire. La position des miroirs, miroirs semi-transparents, ainsi que de (2200) et (2201) est ajustée en contrôlant ainsi la trajectoire du faisceau.

### 7.3.2.Mise en place des systèmes de contrôle des faisceaux.

Pour la mise en place des systèmes de contrôle des faisceaux il est nécessaire de disposer d'un photomètre de précision suffisante, qui sera utilisé pour mesurer des atténuations ou détecter des extinctions de faisceau. Ces systèmes sont composés d'éléments optiques (prismes, rotateurs,polariseurs,lames biréfringentes) qui doivent être positionnés avec précision par rapport à l'axe optique et être montés sur des positionneurs permettant un réglage fin en rotation autour de cet axe.

### 7.3.2.1.Marquage des rotateurs

L'ensemble du système de modification du faisceau d'éclairage est basé sur l'utilisation de rotateurs de phase. Il est essentiel que l'axe de chaque rotateur tourne dans le sens prévu à l'application d'une tension opposée à celle utilisée lors de sa mise en place. La position du rotateur doit être définie à sa mise en place et le réglage ne se fait que sur quelques degrés. Pour préciser la position des axes du rotateur avant mise en place on procède à un test entre polariseurs croisés, en deux étapes.

*Etape 1*, décrite par la Fig.42. le rotateur (3001) est mis en place entre le polariseur d'entrée de direction de polarisation (3002) et le polariseur de sortie de direction de polarisation (3003). Une tension de +5V est appliquée. Le rotateur est réglé en rotation de manière à annuler le rayon sortant. La position correspondante, correspondant au polariseur d'entrée, est marquée d'un point rouge (3004).

*Etape 2*: une tension -5V est appliquée. Le polariseur de sortie est réglé pour annuler le rayon. On marque un point vert correspondant au milieu des deux positions de polariseurs, du coté ou l'angle est le plus faible. Les Fig. 43 et 44 décrivent cette étape dans les deux cas possibles définis par la nouvelle position du polariseur de sortie, respectivement (3005) et (3006). Dans le cas de la Fig.43 le point vert est marqué en (3007) et dans le cas de la Fig. 44 il est marqué en (3008).

Le point rouge marque alors la position de l'axe pour une tension de +5V et le point vert marque sa position pour une tension de -5V. Ces points permettent ensuite de prépositionner correctement leséléments lors de la procédure de réglage.

### 7.3.2.2.Mise en place de l'atténuateur de faisceau

On met d'abord en place le polariseur (2502) et on effectue un réglage fin en rotation de manière à avoir extinction du faisceau sortant. On met ensuite en place le rotateur (2501) et on effectue un réglage fin de sa position en rotation de manière à avoir l'atténuation $a_1^2$ recherchée lors du passage de la position ouverte (tension de +5V appliquée à (2501)) à la position fermée (tension appliquée de -5V).

On commute alors (2501) en position ouverte ( tension de +5V ) et on met en place le polariseur (2504) que l'on ajuste en rotation de manière à avoir extinction du faisceau sortant. On met alors en place le rotateur (2503) et on effectue un réglage fin de sa position en rotation de manière à avoir l'atténuation $a_2^2$ recherchée lors du passage de la position ouverte (tension de +5V appliquée à (2503)) à la position fermée (tension appliquée de -5V). Par exemple on peut utiliser $a_1 = a_2 = \frac{1}{16}$ ce qui donne comme atténuations mesurables par le photomètre: $a_1^2 = a_2^2 = \frac{1}{256}$

On mesure alors les valeurs exactes obtenues des coefficients $a_1^2$ et $a_2^2$. Les coefficients $a_1$ et $a_2$ ainsi obtenus seront utilisés par la suite.

### 7.3.2.3. Mise en place des dispositifs de décalage de phase

Ces dispositifs (2205) et (2251) sont mis en place avec la meilleure précision possible compte tenu des marquages effectués précédemment.

### 7.3.2.4. Mise en place du dispositif de déviation du faisceau et de commutation.

Chaque bloc élémentaire est mis en place successivement en partant du bloc le plus proche du dispositif de décalage de phase. L'atténuateur de faisceau doit être en position ouverte. Un bloc élémentaire est mis en place dans l'ordre suivant:

- Mise en place du polariseur POL (2804). Réglage fin en rotation pour annuler le rayon sortant.
- mise en place du rotateur R2 (2803). Réglage fin en rotation pour maintenir le rayon sortant à une valeur nulle, une tension de -5V étant appliquée à R2.
- mise en place du rotateur R1(2801). Réglage fin en rotation pour maintenir le rayon sortant à une valeur nulle, une tension de -5V étant appliquée à R2 et R1.
- mise en place du prisme de déviation PD (2802). Réglage fin en rotation pour maintenir le rayon sortant à une valeur nulle, une tension de -5V étant appliquée à R1 et R2.

Les blocs D0 et D0b sont mis en place de la même manière que les autres.

### 7.3.2.5.Mise en place des rotateurs de phase (2210) (2241) (2238)(2226).

Ces rotateurs doivent avoir leur axe neutre vertical pour une tension appliquée de -5V (point vert vers le haut). L'axe de (2210) doit tourner vers la droite de la Fig.27 lorsqu'une tension de +5V est appliquée (point rouge à droite). L'axe de (2241) doit tourner vers la gauche de la Fig.27 lorsqu'une tension de +5V est appliquée (point rouge à gauche). L'axe de (2238) et de (2226) doit tourner vers le haut de la Fig.27 lorsqu'une tension de +5V est appliquée (point rouge en haut).

### 7.3.2.6. Mise en place des polariseurs:

Les polariseurs (2252) et (2253) sont mis en place avec leur axe passant orienté suivant la verticale.

### 7.3.3. Réglage de géométrie

Dans un deuxième temps on effectue un réglage de géométrie visant à positionner correctement les caméras, les lentilles achromatiques et certains miroirs. Certains de ces réglages utilisent un capteur CCD auxilliaire, dont le pas (distance entre les centres de deux pixels voisins) doit être aussi réduit que possible. A partir de l'image reçue soit sur un des capteurs du système, soit sur le capteur auxilliaire, on utilise un algorithme permettant l'appréciation de la ponctualité de l'image et la localisation du maximum. L'image reçue sur un capteur est obtenue en faisant interférer sur ce capteur une onde de référence et l'onde dont la ponctualité doit être évaluée.

### 7.3.3.1.Obtention d'une image bidimensionnelle et appréciation de la ponctualité:

On a vu dans le premier mode de réalisation comment une image bidimensionnelle en nombres complexes peut être générée à partir de trois images différant entre elles par la différence de phase entre l'onde d'éclairage et l'onde de référence. Cette image dans le domaine fréquentiel peut être transposée dans le domaine spatiale par transformée de Fourier. Dans les phases de réglage qui suivent, on sera amené à apprécier le caractère ponctuel et le centrage de telles images, dans le domaine spatial ou fréquentiel. Ces images seront soit reçue sur un des capteurs CCD du dispositif, soit reçues sur un capteur auxilliaire. Les décalages de phase seront réalisés soit à l'aide de (2205) soit à l'aide de (2251). Dans certains cas, l'onde d'éclairage jouera le rôle d'onde de référence et vice-versa. Dans tous les cas, le système réalise donc trois images successives avec des décalages successifs, indicés par l'entier $d$, de +120 ($d$=0), 0 ($d$=1), -120 ($d$=2) degrés. Ceci donne un tableau de pixels $I[d,i,j]$ ou l'indice $d$ variant de 0 à 2 indice le déphasage. L'image en nombre complexes en est déduite par:

$$S[i,j] = \left[\frac{1}{6}\left(2I[0,i,j] - I[1,i,j] - I[2,i,j]\right) + \tilde{j}\frac{1}{2\sqrt{3}}\left(I[1,i,j] - I[2,i,j]\right)\right]$$

Si on cherche à évaluer la ponctualité dans le domaine spatial, une transformation de Fourier inverse est appliquée à cette image.

Dans les deux cas (qu'il y ait eu ou non transformation de Fourier), à partir de cette image de dimensions $N_{pix}$ x $N_{pix}$ correspondant au nombre de pixels utiles du capteur concerné (par exemple 256), on évalue la ponctualité par un programme comportant les étapes suivantes:

*Etape 1:* le programme calcule le maximum *max* du module de $S[i,j]$ et détermine ses coordonnées (*imax1,jmax1*).
*Etape* 2: la partie du tableau $S[i,j]$ située autour de (*imax1,jmax1*) est extraite. On crée ainsi un tableau $Sa[i,j]$ de dimensions $N_a$ x $N_a$ avec par exemple $N_a$=16:

$$Sa[i,j] = S\left[i - \frac{N_a}{2} + imax1, j - \frac{N_a}{2} + jmax1\right]$$

*Etape 3*: une transformée de Fourier directe est effectuée sur le tableau $Sa$
*Etape 4*: le tableau $Sa$ est complété par des zéros et on obtient un tableau $Sb$ de dimensions $N_b$ x $N_b$.

$$Sb[i,j] = Sa\left[i - \frac{N_b}{2} + \frac{N_a}{2}, j - \frac{N_b}{2} + \frac{N_a}{2}\right]$$

quand

$$N_a - 1 \geq i - \frac{N_b}{2} + \frac{N_a}{2} \geq 0 \text{ et } N_a - 1 \geq j - \frac{N_b}{2} + \frac{N_a}{2} \geq 0$$

et $Sb[i,j]$ = 0 sinon.
*Etape 5*: la transformation de Fourier inverse du tableau $Sb$ est effectuée. On obtient ainsi une version suréchantillonnée de la partie du tableau $S$ initial située autour du point de module maximal.
*Etape 6*: *imax,jmax,max* sont calculés par les formules:

$$imax2 = \frac{\sum_{i,j} \left\| Sb[i,j] \right\|^2 i}{\sum_{i,j} \left\| Sb[i,j] \right\|^2}$$

$$jmax2 = \frac{\sum_{i,j} \left\| Sb[i,j] \right\|^2 j}{\sum_{i,j} \left\| Sb[i,j] \right\|^2}$$

$$max = \| Sb[imax2, jmax2] \|$$

$$imax = imax1 + \frac{N_a}{N_b}\left( imax2 - \frac{N_b}{2} \right)$$

$$jmax = jmax1 + \frac{N_a}{N_b}\left( jmax2 - \frac{N_b}{2} \right)$$

Les valeurs réelles *max,imax,jmax* ainsi obtenues caractérisent respectivement la valeur et la position du maximum. La ponctualité est d'autant meilleure que la valeur *max* est plus élevée. Le programme visualise en outre le module du tableau *S* et le module du tableau *Sb* pour avoir une appréciation visuelle de la ponctualité.

### 7.3.3.2. appareils utilisés

Un diffuseur est utilisé, par exemple un morceau de papier qui permet de suivre visuellement la trajectoire du faisceau.

Un CCD auxiliaire est utilisé pour un suivi du faisceau plus précis qu'avec le diffuseur. Son pas doit être aussi faible que possible.

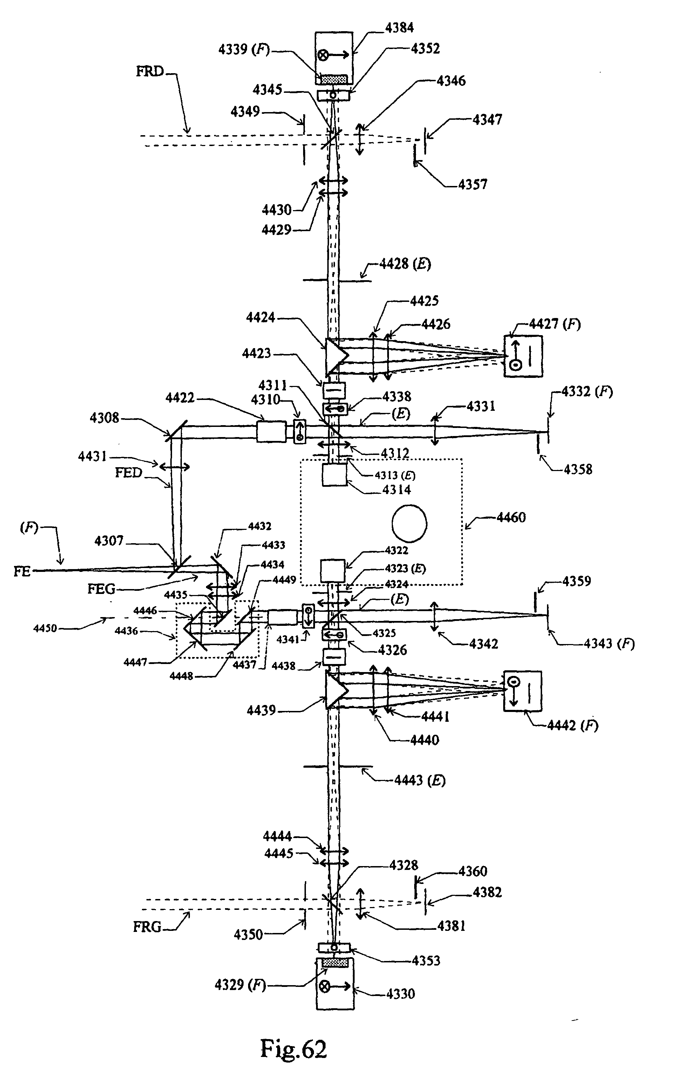

Un fréquencemètre est également utilisé. Ce terme désignera l'appareil décrit par la Fig. 71, qui est destiné à la mesure des fréquences spatiales d'un faisceau paraxial. Il est constitué d'un miroir (5000) qui réfléchit un faisceau parallèle entrant vers une lentille (5001), laquelle focalise ce faisceau vers un CCD (5002) monté sur une caméra (5003). Un polariseur optionnel (5004) peut être inséré entre le miroir et la lentille. L'utilisation du miroir (5000) permet au fréquencemètre d'avoir un encombrement minimal dans le plan horizontal qui est celui des Fig. 61 et 62. L'axe optique de la lentille et du CCD est toujours vertical lors des opérations de mesure.

Compte tenu des choix de dimensionnement effectués, l'angle maximal sous lequel les faisceaux entrent dans le fréquencemètre est $\frac{o}{g}$. Si la largeur totale du CCD (5002) est *l*, alors la distance focale de (5001) est calculée pour que les rayons arrivant sous des angles compris entre $-\frac{o}{g}$ et $\frac{o}{g}$ puissent être pris en compte. Elle vaut donc: $f = \frac{g}{o}\cdot\frac{l}{2}$. Une valeur légèrement intérieure peut être adoptée pour garder une marge de sécurité.

Avant utilisation du fréquencemètre, la distance entre la lentille (5001) et le CCD (5002) doit être réglée pour que l'image d'un faisceau parallèle soit aussi ponctuelle que possible, ce qui se fait simplement en envoyant vers le fréquencemètre un faisceau dont le parallélisme a été préalablement vérifié par une méthode interférométrique et en ajustant en conséquence la distance entre la lentille et le CCD.

La ponctualité de l'image obtenue sur le CCD (5002) permet de vérifier le parallélisme d'un faisceau entrant. La position relative de plusieurs points sur ce CCD caractérise l'angle entre les faisceaux correspondants.

En l'abscence d'autres précision dans la description d'un réglage, le polariseur (5004) n'est pas utilisé.

### 7.3.3.3. Cycle de réglage

Les réglages visent à s'assurer que:

(1) les faisceaux suivent la trajectoire prévue. Ceci peut en général se vérifier à l'aide d'un simple diffuseur. Ces vérifications de trajectoire du faisceau ne sont pas décrites mais doivent être effectuées préalablement aux autres réglages. Par exemple l'orientation du miroir (2247) doit être réglée pour que le faisceau réfléchi se superpose effectivement au faisceau incident, occupant la même zone de l'espace que celui-ci au niveau du miroir semi-transparent (2245).

(2) les faisceaux d'éclairage et leurs indicateurs inverses ont une image ponctuelle sur les capteurs CCD.

(3) les faisceaux de référence ont une image ponctuelle dans le plan des diaphragmes (2213) et (2223).

(4) un faisceau entrant parallèle dans l'objectif (2217) et dirigé suivant l'axe optique a une image ponctuelle et centrée sur le capteur (2239).

(5) lorsque un mot de commande COM[1,*i*,*j*] est utilisé, les coordonnées du point illuminés par le faisceau FED se déduisent de celles du point illuminé par FEDI par une homothétie de rapport proche de 1.

Les réglages à effectuer découlent de ces conditions. La description des étapes de réglage est donnée à titre indicatif et constitue un exemple d'ordonnancement des étapes de réglage.

Pendant l'ensemble du réglage à l'exception de l'étape 14, le mot de commande utilisé pour le déviateur de faisceau est *COM*[1,128,128],*COM*[0,128,128] ou 0 selon que l'on génère le faisceau d'éclairage droit FED, le faisceau d'éclairage gauche FEG ou aucun des deux. Les obturateurs (2257) (2258) (2259) (2260) et des obturateurs non représentés sur la trajectoire des faisceaux FRG et FRD permettent de choisir les faisceaux utilisés.

Pendant certaines phases de réglage, on mesure sur un capteur un faisceau donné à l'aide d'un second faisceau servant de référence. Le programme décrit en 7.3.3.1. est alors utilisé pour évaluer la ponctualité du faisceau mesuré. Les variations de phase entre le faisceau servant de référence et le faisceau à mesurer sont obtenues à l'aide de (2205) ou (2251). Lorsqu'aucun faisceau n'est utilisé comme référence, par exemple si le CCD est celui du fréquencemètre, l'image utilisée est celle directement reçue sur le CCD. Une image ponctuelle est considérée comme centrée sur un capteur de taille $N_{pix}$ x $N_{pix}$ si ses coordonnées son

$$\left(\frac{N_{pix}}{2}, \frac{N_{pix}}{2}\right).$$

étape 1: réglage en translation de la lentille (2231)
Le fréquencemètre est positionné entre le miroir semi-transparent (2211) et le rotateur de polarisation (2238). La lentille (2231) est réglée pour que l'image du faisceau FEDI sur le CCD du fréquencemètre soit ponctuelle.

étape 2: réglage en translation de la lentille (2246)
Le fréquencemètre est positionné entre le miroir semi-transparent (2245) et la lentille (2237). La lentille (2246) est réglée pour que l'image du faisceau FRDI sur le CCD du fréquencemètre soit ponctuelle.

étape 3: réglage en translation de la lentille (2242)
Le fréquencemètre est positionné entre le miroir semi-transparent (2225) et le rotateur de polarisation (2226). La lentille (2242) est réglée pour que l'image du faisceau FEGI sur le CCD du fréquencemètre soit ponctuelle.

étape 4: réglage en translation de la lentille (2281)
Le fréquencemètre est positionné entre le miroir semi-transparent (2228) et la lentille (2227) . La lentille (2281) est réglée pour que l'image du faisceau FRGI sur le CCD du fréquencemètre soit ponctuelle.

étape 5: réglage en translation de la lentille (2212)
Un faisceau d'éclairage provisoire FEP est introduit. Celui-ci est dérivé directement de la sortie de l'élargisseur de faisceau (2201) à l'aide d'un miroir semi-transparent et est redirigé par un jeu de miroirs vers l'objectif (2217) dans lequel il pénètre par le coté ou se trouve normalement l'échantillon, et en étant dirigé selon l'axe optique de l'objectif. L'objectif (2217) doit être à peu près en position focalisée, c'est-à-dire dans la position ou il sera lors de l'utilisation normale du microscope. L'objectif (2219) doit être provisoirement supprimé pour pouvoir introduire FEP.
Le fréquencemètre est positionné entre la lentille (2212) et le miroir semi-transparent (2211). La lentille (2212) est réglée pour que l'image du faisceau FEP sur le CCD du fréquencemètre soit ponctuelle.

étape 6: réglage en translation de la lentille (2237) et réglage de l'orientation du miroir semi-transparent (2245):
Un CCD auxiliaire est placé à l'emplacement du diaphragme (2213). La lentille (2237) est réglée pour que l'image du faisceau FRDI sur ce CCD auxiliaire soit ponctuelle. Le miroir semi-transparent (2245) est réglé pour que l'image du faisceau FRDI sur ce CCD auxiliaire soit centrée.

étape 7: réglage du CCD (2239) en translation.

La position du CCD (2239) est ajustée pour que l'image du faisceau FEP obtenue par la procédure décrite en 7.3.3.1. à partir du CCD (2239) soit ponctuelle et centrée.

étape 8: réglage du miroir semi-transparent (2211)

La position de ce miroir est ajustée pour que l'image du faisceau FEDI obtenue par la procédure décrite en 7.3.3.1. à partir du CCD (2239) soit ponctuelle et centrée.

étape 9: réglage de position des objectifs.

Le faisceau FEP est supprimé et l'objectif (2219) est remis en place. Un CCD auxiliaire est placé à l'emplacement du diaphragme (2223). L'échantillon est par exemple une lame transparente, de l'huile optique étant utilisée de chaque coté de la lame. La position des objectifs est réglée pour que l'image du faisceau FRDI sur ce CCD auxiliaire soit ponctuelle et centrée.

étape 10: réglage en translation de la lentille (2224)

Le fréquencemètre est positionné entre la lentille (2224) et le miroir semi-transparent (2225). La lentille (2224) est réglée pour que l'image du faisceau FED sur le CCD du fréquencemètre soit ponctuelle.

étape 11: réglage en translation de la lentille (2227) et réglage de l'orientation du miroir semi-transparent (2228):

Un CCD auxiliaire est placé à l'emplacement de (2223). La lentille (2227) est réglée pour que l'image du faisceau FRGI sur ce CCD auxiliaire soit ponctuelle. Le miroir semi-transparent (2228) est réglé pour que l'image du faisceau FRGI sur ce CCD auxiliaire soit centrée.

étape 12: réglage du CCD (2229) en translation.

La position du CCD (2229) est ajustée pour que l'image du faisceau FED obtenue par la procédure décrite en 7.3.3.1. à partir du CCD (2229) soit ponctuelle et centrée.

étape 13: réglage du miroir semi-transparent (2225)

La position de ce miroir est ajustée pour que l'image du faisceau FEGI obtenue par la procédure décrite en 7.3.3.1. à partir du CCD (2229) soit ponctuelle et centrée.

étape 14: réglage des CCD (2229) et (2239) en rotation et translation

Cette étape consiste à régler en rotation la position de (2229) et (2239) de sorte que leurs systèmes d'axes soient confondus. A cette fin, les mots de commande COM[1,128,128] , COM[1,250,128] , COM[1,128,250] sont utilisés alternativement. Les deux capteurs sont réglés en translation dans un plan orthogonal à l'axe (2264) et en rotation autour de ce même axe. Sur chaque capteur on définit un système de coordonnées ($i,j$) ou les indices pixels $i$ et $j$ vont de 0 à $N_{pix}$-1 avec $N_{pix}$=256, et qui repère la zone utile du capteur qui sera utilisée par la suite. Le point origine du système de coordonnées, de coordonnées (0,0), peut être un quelconque des quatre coins de la zone utile du capteur. En même temps qu'on effectue le réglage, on choisit le point origine du système de coordonnées. Les critères de réglage et de choix du point origine sont les mêmes pour les deux capteurs et sont les suivants:

- quand COM[1,128,128] est utilisé, le point d'impact du faisceau d'éclairage, c'est-à-dire du faisceau d'éclairage direct sur (2229) ou de son indicateur inverse sur (2239), doit être au point de coordonnées (128,128).
- quand COM[1,250,128] est utilisé, le point d'impact du faisceau d'éclairage doit être en un point de coordonnées ($x$,128) ou $x$ est positif.
- quand COM[1,128,6] est utilisé, le point d'impact du faisceau d'éclairage doit être en un point de coordonnées (128,$x$) ou $x$ est positif.

Les systèmes de coordonnées ainsi déterminés sont définis par leur point origine $O_p$ et leurs vecteurs de base unitaires $\vec{i}_p, \vec{j}_p$, c'est-à-dire par les repères

$$\left(O_p, \vec{i}_p, \vec{j}_p\right)$$

ou $p$ est l'indice du capteur ($p$=0 pour (2239) et $p$=1 pour (2229)).

Ces systèmes de coordonnées seront systématiquement utilisés par la suite.

### 7.4. Détermination du module de l'onde de référence.

Comme dans le premier mode de réalisation, les filtres (2255) et (2256) sont réglés pour que le niveau de l'onde de référence soit d'environ le quart du niveau maximal autorisé par le digitaliseur, soit un niveau de 256/4=64 dans le cas d'un échantillonnage sur 8 bits du signal vidéo, et ce sur les deux capteurs.

Cette onde de référence est ensuite déterminée comme dans le premier mode de réalisation, mais du fait que deux capteurs sont présents on obtient un tableau $Iref[p,i,j]$ ou $i,j$ sont les indices pixels comme dans le premier mode de réalisation, et ou $p$ est l'indice capteur soit $p$=0 pour (2239) et $p$=1 pour (2229). $Iref[0,i,j]$ est l'intensité reçue sur le capteur (2239) lorsque seul le faisceau FRD est présent et $Iref[1,i,j]$ est l'intensité reçue sur le capteur (2229) lorsque seul le faisceau FRG est présent.

### 7.5. Prise d'image bidimensionnelle simple.

On a vu dans le premier mode de réalisation comment une représentation fréquentielle bidimensionnelle en nombres complexes peut être générée à partir de trois images différant entre elles par la différence de phase entre l'onde d'éclairage et l'onde de référence. Dans les phases de réglage qui suivent on sera amené à générer ce type de représentation fréquentielle. Pour générer une telle représentation, le système réalise trois images successives avec des décalages successifs de

+120, 0,-120 degrés appliqués à l'onde d'éclairage. L'ordre des déphasages est inversé par rapport à celui utilisé dans le premier mode de réalisation car ils sont appliqués à l'onde d'éclairage et non à l'onde de référence. Ceci donne un tableau de pixels $I[d,p,i,j]$ ou l'indice $d$ variant de 0 à 2 indice le déphasage et ou l'indice $p$ désigne le capteur. La représentation fréquentielle en est déduite par:

$$S[p,i,j] = \left[ \frac{1}{6\sqrt{Iref[p,i,j]}} \left( 2I[0,p,i,j] - I[1,p,i,j] - I[2,p,i,j] \right) \right.$$

$$\left. + \tilde{j} \frac{1}{2\sqrt{3Iref[p,i,j]}} \left( I[1,p,i,j] - I[2,p,i,j] \right) \right]$$

On obtient, à chaque acquisition, une image pour chaque capteur, et le tableau $S[p,i,j]$ comporte donc un sous-tableau pour chaque capteur, l'indice $p$ désignant le capteur. Toutefois dans la phase de réglage on n'utilisera en général qu'une seule de ces deux images.

### 7.6.Obtention des paramètres $K_p$ et réglage des diaphragmes.

Ces paramètres correspondent au paramètre $K$ du premier mode de réalisation, mais du fait des dissymétries de réalisation le paramètre n'est pas forcément le même pour chaque capteur. On définit donc deux paramètres $K_0$ et $K_1$ correspondant aux deux capteurs. Ces paramètres sont obtenus comme dans le premier mode de réalisation, par prise d'image simple en utilisant un micromètre objectif. Le micromètre objectif utilisé doit cependant être conçu pour cet usage: les marques doivent être faites sur une lamelle fine, une lame épaisse ne pouvant être utilisée avec ce microscope.

Dans un premier temps les objectifs doivent être correctement focalisés. A cette fin, les faisceaux parallèles FED et FEG sont supprimés. Seules les ondes de référence FRD et FRG sont présentes. Les miroirs (2282) et (2247) sont utilisés pour obtenir des ondes centrées à double sens de propagation. Les miroirs (2243) et (2232) sont obturés. Le décaleur de phase (2251) est utilisé pour modifier la phase des ondes. Le micromètre est déplacé pour que les marques soient hors du champ des objectifs. L'onde mesurée d'un coté des objectifs est l'équivalent de l'onde de référence utilisée de l'autre coté. Le programme décrit en 7.3.3.1. avec transformation de Fourier permettant de passer du domaine fréquentiel au domaine spatial, est utilisé pour évaluer la ponctualité de l'image. La position des objectifs est ajustée pour obtenir un point centré au milieu de l'image.

Dans un deuxième temps, l'échantillon doit être correctement positionné. Les miroirs (2282) (2247) (2243) (2232) sont obturés. Seul le faisceau FEG est utilisé, avec un mot de commande du déviateur de faisceau *COM* [0,128,128]. La position de l'échantillon dans le plan horizontal est modifiée jusqu'à ce que l'on obtienne une modification caractéristique de l'onde reçue sur les capteurs en l'absence d'onde de référence, comme dans le premier mode de réalisation.

L'onde de référence FRD est alors réintroduite et un programme de focalisation semblable à celui utilisé dans le premier mode de réalisation, et utilisant l'image obtenue sur le capteur (2239) , est lancé. Ce programme diffère cependant de celui utilisé dans le premier mode de réalisation en ce que les modifications de phase et d'amplitude de l'onde d'éclairage sont maintenant commandées par les dispositifs (2204) et (2205) et en ce que la valeur *rapport_moy* caractéristique de l'atténuation est réelle et est celle qui a été mesurée en 7.3.2.2. entre deux positions de l'atténuateur de faisceau qui sont seules utilisées içi.

La position du diaphragme (2213) est alors ajustée dans un plan perpendiculaire à (2264) de manière à ce que son image soit correctement centrée. Son ouverture est ajustée de manière à être aussi élevée que possible, le diaphragme devant toutefois rester entièrement visible sur l'image obtenue. La position du micromètre est alors ajustée dans le sens vertical de manière à en obtenir une image nette. Sur cette image, on mesure alors la distance $(D_{pix})_0$ entre deux graduations séparées par une distance réelle $D_{reel}$.

Les faisceau FEG et FRD sont alors supprimés. Le faisceau FED est introduit avec le mot de commande du déviateur de faisceau *COM*[1,128,128]. Le faisceau de référence FRG est également introduit. On relance le programme de focalisation, qui cette fois utilise l'image reçue sur le capteur (2229). La position du diaphragme (2223) est alors ajustée dans un plan perpendiculaire à (2264) de manière à ce que son image soit correctement centrée. Son ouverture est ajustée de manière à être aussi élevée que possible, le diaphragme devant toutefois rester entièrement visible sur l'image obtenue. Sur l'image obtenue, on mesure la distance

$$\left( D_{pix} \right)_1$$

entre les mêmes graduations que précédemment.

On a alors

$$K_p = \frac{n_v}{\lambda} \frac{N_{pix}}{\left( D_{pix} \right)_p} D_{reel}$$

ou :

$$\left( D_{pix} \right)_p$$

est la distance en pixels mesurée sur l'image issue du capteur indicé *p*, avec *p*=0 pour (2239) et *p*=1 pour (2229)
$D_{reel}$ est la même pour chaque mesure.
$N_{pix}$ est le nombre de pixels de la zone utile de capteur et de la transformée de Fourier utilisée dans le programme de focalisation soit par exemple $N_{pix}$ =256.

Les ouvertures de diaphragmes obtenues à l'issue de cette procédure seront maintenues par la suite.

### 7.7.Différence de marche induite sur un faisceau parallèle.

L'échantillon observé n'a pas nécessairement pour indice moyen l'indice nominal des objectifs. Cette différence d'indice peut entraîner une abberration sphérique importante. Il est nécessaire, pour corriger cette abberration, de prendre en compte l'indice moyen $n_o$ dans l'échantillon et l'épaisseur *L* de l'échantillon compris entre deux lamelles à l'indice nominal.

La reconstitution ultérieure d'une image tridimensionnelle nécessite également la connaissance de la position relative des points d'origine virtuels des faisceaux de référence utilisés de chaque coté du système. On définit cette position relative par *x,y,z* qui sont les coordonnées du point d'origine du faisceau de référence utilisé dans la partie gauche par rapport au point d'origine du faisceau utilisé dans la partie droite.

Les paramètres *x,y,z,L, $n_o$* entraînent des déphasages d'une onde parallèle traversant l'échantillon. Le calcul de ces déphasages est exposé ci-après:

- **correspondance entre la direction d'un faisceau parallèle dans l'objet et les coordonnées du point correspondant sur le capteur:**
*i* et *j* sont les coordonnées d'un pixel par rapport au centre optique, exprimées en pixels, sur le captew *p*, dans le repère défini à l'étape 14 du cycle de réglage décrit en 7.3.3.2. Un vecteur unitaire parallèle au vecteur fréquence dans l'objet a pour coordonnées, dans un repère orthonormé $\vec{a}_p, \vec{b}_p, \vec{c}_p$ ou $\vec{c}_p$ est parallèle à (2263) et ou $\vec{a}_p, \vec{b}_p$ se déduisent simplement des vecteurs $\vec{i}_p \vec{j}_p$ définis en 7.3.3.3.:

$$u = \left( \frac{i}{K_p}, \frac{j}{K_p}, \frac{1}{K_p} \sqrt{K_p^2 - i^2 - j^2} \right)$$

et il fait avec l'axe (2263) un angle de:

$$\sin \alpha = \frac{1}{K_p} \sqrt{i^2 + j^2}$$

Si le faisceau issu de l'objectif n'était pas dévié par les miroirs (2214) (2215) (2216) ou (2222) (2221) (2220) les vecteurs $\vec{a}_p, \vec{b}_p$ seraient égaux aux vecteurs $\vec{i}_p \vec{j}_p$. Bien que ce ne soit pas réellement le cas, les vecteurs de base $\vec{a}_p, \vec{b}_p, \vec{c}_p$ seront notés dans la suite de l'exposé $\vec{i}_p, \vec{j}_p, \vec{k}_p$, sans différencier les vecteurs $\vec{a}_p, \vec{b}_p$ des vecteurs correspondants $\vec{i}_p \vec{j}_p$ définis en 7.3.3.3. sur les capteurs.

- **différence de marche induite par la présence de l'objet:**
La Fig.45 montre le principe de calcul de cette différence de marche. On a: A = $l_o n_o$ - $l_v n_v$ ou $n_v$ désigne l'indice nominal des objectifs, c'est-à-dire l'indice pour lequel ils ont été conçus et qui doit être celui de l'huile optique employée.

$$\Delta = Ln_o \cos \beta - Ln_v \cos \alpha$$

$$\Delta = L \left( n_o \sqrt{1 - \left( \frac{n_v}{n_o} \sin \alpha \right)^2} - n_v \sqrt{1 - \sin^2 \alpha} \right)$$

soit:

$$\Delta = L \left( n_o \sqrt{1 - \left( \frac{n_v}{n_o} \right)^2 \frac{i^2 + j^2}{K_p^2}} - n_v \sqrt{1 - \frac{i^2 + j^2}{K_p^2}} \right)$$

- **Différence de marche induite par un déplacement du point éclairé:**
La grandeur accessible à la mesure est la différence de marche entre le faisceau inversé issu de FRG et le faisceau de référence FRD. Si ces deux faisceaux sont confondus et si le milieu séparant les objectifs a pour indice l'indice nominal des objectifs, la différence de marche est nulle. Cependant, si le point d'origine virtuel du faisceau de référence FRD a pour coordonnées (*x,y,z*) par rapport au point d'origine virtuel du faisceau de référence FRG, matérialisé par le point de focalisation de son faisceau inversé, alors cette différence de marche est calculée comme suit:

On utilise le vecteur *v=(x,y,z)* et le vecteur u défini plus haut. La Fig.46 montre le principe géométrique de calcul. La différence de marche induite est:

$$\Delta = u.v = \left(\frac{i}{K_p}, \frac{j}{K_p}, \frac{1}{K_p}\sqrt{K_p^2 - i^2 - j^2}\right).(x,y,z)$$

$$\Delta = x\frac{i}{K_p} + y\frac{j}{K_p} + z\frac{1}{K_p}\sqrt{K_p^2 - i^2 - j^2}$$

**différence de marche totale:**

c'est la somme de la différence de marche dûe à la présence de l'objet et de celle dûe à la non-coincidence des points source.

$$\Delta = n_v\left(x\frac{i}{K_p} + y\frac{j}{K_p} + z\frac{1}{K_p}\sqrt{K_p^2 - i^2 - j^2}\right) + L\left(n_o\sqrt{1 - \left(\frac{n_v}{n_o}\right)^2 \frac{i^2+j^2}{K_p^2}} - n_v\sqrt{1 - \frac{i^2+j^2}{K_p^2}}\right)$$

En l'abscence de diaphragme, l'onde mesurée sur l'onde mesurée au point du capteur de coordonnées (*i,j*) vaut donc:

$$e^{\tilde{j}2\pi\frac{\Delta}{\lambda}} = \exp\left\{\tilde{j}\frac{2\pi}{\lambda}\left[n_v\left(x\frac{i}{K_p} + y\frac{j}{K_p} + z\frac{1}{K_p}\sqrt{K_p^2 - i^2 - j^2}\right) + L\left(n_o\sqrt{1 - \left(\frac{n_v}{n_o}\right)^2\frac{i^2+j^2}{K_p^2}} - n_v\sqrt{1 - \frac{i^2+j^2}{K_p^2}}\right)\right]\right\}$$

### 7.8. Programme de maximisation.

### 7.8.1. Principe.

Dans le cas 'idéal' ou l'échantillon est simplement une lame d'épaisseur *L* et d'indice $n_o$ , on peut utiliser une méthode simple pour déterminer les valeurs de *x,y,z,L, $n_o$* . Pour ce réglage les faisceaux d'éclairage FED et FEG sont supprimés et les faisceaux de référence FRD et FRG sont introduits en utilisant les miroirs (2282) et (2247) pour renvoyer des faisceaux symétriques vers les objectifs. Le faisceau FRG réfléchi par (2282) et se dirigeant vers l'objectif (2219) est centré sur un point central du diaphragme (2224). Il est focalisé par l'objectif (2219) en un point de l'objet (2218). Il traverse ensuite l'objectif (2217) et parvient au CCD (2239) sur lequel il se superpose au faisceau de référence FRD réfléchi par le miroir semi-transparent (2245) en direction du CCD (2239). Le décaleur de phase (2251) est utilisé pour générer un décalage de phase entre les deux faisceaux, ce qui permet de mesurer en valeur complexe le faisceau issu de FRG et reçu sur (2239), en utilisant la procédure de prise d'image simple décrite en 7.5. L'onde ainsi reçue est stockée dans un tableau $F_{rec}$ de dimensions $N_{pix}$ x $N_{pix}$.

En pratique la méthode d'acquisition diffèrera souvent du cas idéal mais permettra toujours l'acquisition d'un tableau $F_{rec}$ de dimensions $N_{pix}$ x $N_{pix}$ équivalent à celui qui serait obtenu dans le cas idéal.

Du fait des décalages de phase induits par l'échantillon, la valeur de l'onde en un point en l'abscence de diaphragme, et dans un repère centré sur le centre optique, est donnée par la formule établie en 7.7.:

$$e^{\tilde{j}2\pi\frac{\Delta}{\lambda}} = \exp\left\{\tilde{j}\frac{2\pi}{\lambda}\left[n_v\left(x\frac{i}{K_0} + y\frac{j}{K_0} + z\sqrt{1 - \frac{i^2+j^2}{K_0^2}}\right) + L\left(n_o\sqrt{1 - \left(\frac{n_v}{n_o}\right)^2\frac{i^2+j^2}{K_0^2}} - n_v\sqrt{1 - \frac{i^2+j^2}{K_0^2}}\right)\right]\right\}$$

La présence du diaphragme a en outre un effet de filtrage qui peut également être simulé.

Le programme utilisé a pour objectif de calculer *x,y,z,L, $n_o$* en minimisant la différence entre l'onde ainsi simulée et l'onde réellement reçue.

Cette différence peut être caractérisée par l'écart-type σ(*x,y,z, L,$n_o$*) entre l'onde simulée et l'onde reçue. L'onde reçue étant enregistrée dans un tableau $F_{rec}$ de dimensions $N_{pix}$ x $N_{pix}$ , cet écart-type peut-être calculé de la manière suivante, en 6 étapes, pour une valeur donnée du quintuplet $(x,y,z,L,n_o)$:

*étape* 1-la représentation fréquentielle suivante, de dimensions $N_c \times N_c$ avec par exemple $N_c$ =4096, est calculée:

$$F_c[i,j] = \exp\left\{\tilde{j}\frac{2\pi}{\lambda}\left[n_v\left(x\frac{ic}{R_c} + y\frac{jc}{R_c} + z\sqrt{1 - \frac{ic^2 + jc^2}{R_c^2}}\right) + L\left(n_o\sqrt{1 - \left(\frac{n_v}{n_o}\right)^2\frac{ic^2 + jc^2}{R_c^2}} - n_v\sqrt{1 - \frac{ic^2 + jc^2}{R_c^2}}\right)\right]\right\}$$

avec $R_c = \frac{N_c}{N}K_0$ et ou $ic$ et $jc$ sont les indices centrés soit: $ic = i - \frac{N_c}{2}$, $jc = j - \frac{N_c}{2}$

*étape* 2-la transformée de Fourier inverse de $F_c$ est calculée.

*étape* 3-$F_c$ étant maintenant en représentation spatiale, la présence du diaphragme constitue une simple limitation dans ce domaine. Le programme calcule donc le tableau $F_d$ de dimensions $N_{pix} \times N_{pix}$ en l'initialisant à 0 puis en effectuant:

$$F_d[i,j] = F_c\left[i - \frac{N_{pix}}{2} + \frac{N_c}{2}, j - \frac{N_{pix}}{2} + \frac{N_c}{2}\right]$$

pour tous les couples $(i,j)$ tels que

$$\left(i - \frac{N_{pix}}{2}\right)^2 + \left(j - \frac{N_{pix}}{2}\right)^2 \leq \left(\frac{N_{pix}}{2}\right)^2$$

*étape* 4- le programme effectue une transformation de Fourier du tableau $F_d$

*étape* - Le programme calcule la valeur

$$rapport = \frac{\sum_{(i,j)\in E} F_{rec}[i,j]\overline{F_d[i,j]}}{\sum_{(i,j)\in E} |F_d[i,j]|^2}$$

ou $E$ est un ensemble défini de manière à éviter les valeurs trop atténuées, qui permet de recaler en phase et en intensité le tableau $F_d$ avant de le comparer à $F_{rec}$.

*étape* 6- Le programme calcule alors l'écart-type

$$\sigma^2(x,y,z,L,n_o) = \sum_{i,j} |F_{rec}[i,j] - rapport.F_d[i,j]|^2$$

Le programme de calcul de $x,y,z,L,\ n_o$ détermine la valeur de $x,y,z,L,\ n_o$ qui permet de minimiser l'écart-type ainsi calculé. Tout programme de minimisation de la grandeur $\sigma^2(x,y,z,L,n_o)$ peut être utilisé de manière équivalente. L'algorithme décrit en 7.8.2. constitue un exemple d'un tel programme mais peut être remplacé par tout programme de minimisation équivalent.

Pour simplifier les calculs et faciliter la convergence, la minimisation de $\sigma^2(x,y,z,L,n_o)$ est remplacée dans l'algorithme décrit en 7.8.2. par la maximisation d'une grandeur caractéristique qui varie selon une variable *mode* qui augmente au fur et à mesure que l'algorithme converge vers la solution. 3 valeurs de *mode* sont utilisées:

*mode*=1: l'image réellement reçue est corrigée en phase par multiplication par

$$e^{-\tilde{j}2\pi\frac{\Delta}{\lambda}}.$$

Une transformée de Fourier inverse permet d'obtenir une représentation spatiale. La grandeur choisie est le maximum du module sur l'ensemble de la représentation spatiale.

*mode*=2: identique au cas *mode*=1, mais la partie centrale de la représentation spatiale est suréchantillonnée et la grandeur choisie est la valeur du module au barycentre des points de la représentation spatiale.

*mode*=3: l'onde devant être reçue sur le capteur pour les valeurs considérées de $x,y,z,L$, $n_o$ est calculée en tenant compte du filtrage par le diaphragme. La grandeur choisie est l'opposé de l'écart-type entre l'onde ainsi simulée et l'onde réellement reçue soit $-\sigma^2(x,y,z,L,n_o)$

### 7.8.2. Algorithme.

L'algorithme de ce programme est décrit par les Fig. 47 à 50 et la Fig.60

La Fig.47 décrit le niveau le plus élevé du programme. Ce niveau consiste en une double boucle de variation de l'indice $n_o$. Le programme calcule *nopixels* valeurs de *maxb*, plus grande valeur atteinte par la grandeur caractéristique pour l'indice $n_o$ , entre *nomin* et *nomax*. Ceci correspond à la boucle interne (3201). Le programme détermine la nouvelle valeur de *nocentre*, qui doit correspondre à la valeur maximale de *maxb.* Il commence alors une nouvelle itération du type (3201) ou les valeurs de $n_o$ sont centrées autour de la nouvelle valeur de *nocentre* et ou la largeur *nolarg=nomax-nomin* de l'intervalle de recherche a été divisée par 2. Ceci constitue la boucle externe (3202) qui est réitérée jusqu'à ce que la largeur de l'intervalle de recherche corresponde à la précision recherchée sur l'indice $n_o$. Cette méthode évite d'avoir à tester trop de valeurs de $n_o$ pour parvenir à un résultat de précision donnée.

Le programme doit disposer en entrée des valeurs suivantes:

- valeurs minimales et maximales de chaque valeur recherchée compte tenu des informations disponibles. *nomin_ini, nomax_ini* (indice $n_o$), *Lmin,Lmax* (largeur *L), zmin,zmax* (profondeur *z*). Le programme n'a pas besoin d'une valeur maximale et minimale des coordonnées *x* et *y*.
- paramètres de fonctionnement, par exemple *nopixels*= 5 et *pixels*=50
- image obtenue par exemple de la manière décrite en 7.8.1., sous la forme d'un tableau de nombres complexes $F_{rec}[i,j]$ de dimensions $N_{pix}$ x $N_{pix}$.

Les étapes principales du programme sont:

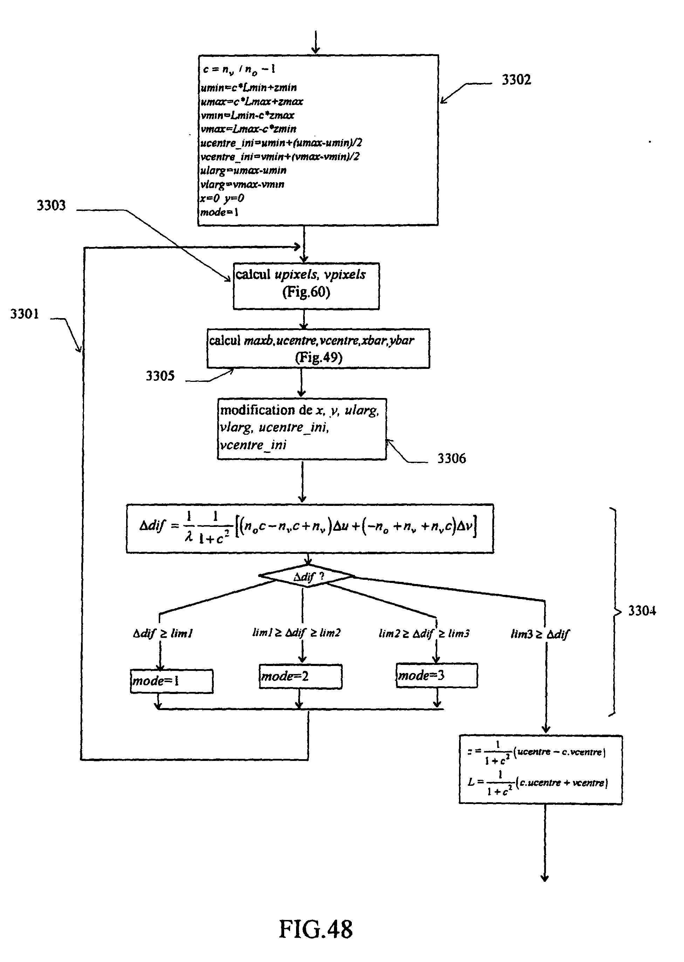

- (3203): la valeur courante de $n_o$ est calculée.
- (3204): cette procédure calcule la valeur maximale *maxb* atteinte par la grandeur caractéristique pour l'indice $n_o$ courant, ainsi que les valeurs correspondantes de *x,y,z,L*. Elle est détaillée Fig.48
- (3205): Lorsque la valeur *maxb* correspondant à l'itération courante est supérieure à *max_no*, les valeurs courantes de *x,y,z,L*, (calculées par la procédure (3204)), et $n_o$ sont stockées et constituent l'approximation courante du résultat recherché.
- (3206): La largeur est comparée à une certaine limite pour déterminer la condition de-convergence. On peut par exemple avoir lim = $0.05 \frac{\lambda}{L}$ *nopixels*
- (3207): Le programme se termine. Les valeurs $x_f, y_f, z_f, L_f, nocentre$ correspondent à la meilleure approximation des valeurs réelles de $x,y,z,L, n_o$. Elles sont affichées et enregistrées pour être réutilisées ultérieurement.

Pour chaque indice $n_o$ la procédure (3204) calcule une valeur maximale de la grandeur caractéristique et les valeurs associées de *x,y,z,L*. Toutefois un changement de variables est effectué et les variables réellement utilisées dans la procédure sont *x,y,u,v* avec:

$$u = cL+z$$

$$v = L - cz$$

$$c = \frac{n_v}{n_o} - 1$$

ou $n_v$ est l'indice nominal des objectifs.

La procédure consiste à faire varier *u* et *v* et pour chaque couple (*u,v*) à calculer *x,y,* et la valeur *max* de la grandeur caractéristique.

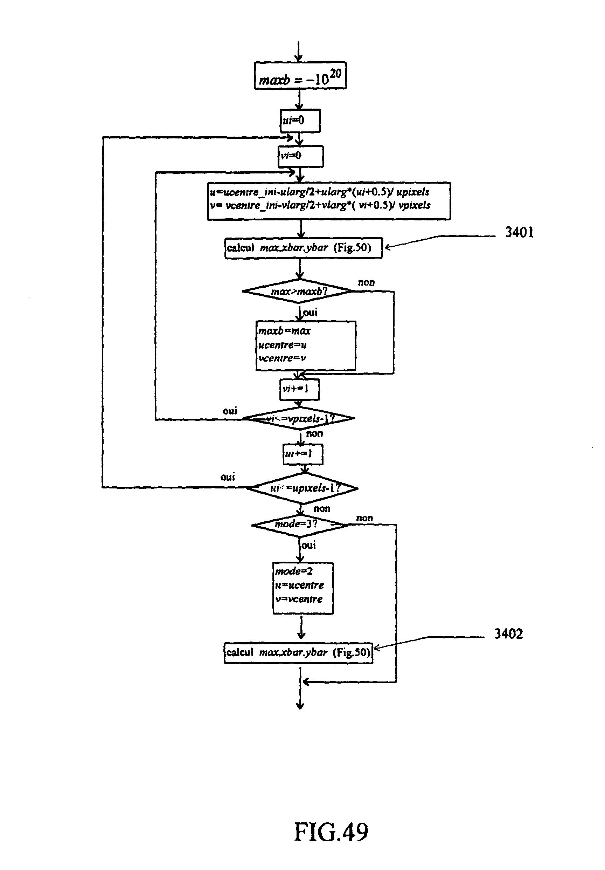

Le couple (*u,v*) varie dans un premier temps sur un ensemble discret de points de taille *upixels* x *vpixels*. *u* et *v* variant respectivement sur des intervalles de largeur *ularg* et *vlarg* centrés autour des points *ucentre_ini* et *vcentre_ini*. Le programme détermine la valeur nouvelle de (*ucentre,vcentre*) qui correspond au couple (*u,v*) pour lequel la valeur max est la plus élevée. Il détermine également des valeurs *xbar* et *ybar* qui correspondent à l'écart entre les valeurs de *x,y* utilisées pour le calcul et la valeur de *x,y* affinée à l'issue du calcul. Ces opérations constitue la procédure (3305) détaillée Fig. 49

Lorsque une nouvelle valeur de (*ucentre,vcentre*) a été obtenue, le programme diminue la largeur *ularg* et *vlarg* des intervalles de recherche, ainsi que leurs centres *ucentre_ini, vcentre_ini* et les valeurs de *x* et *y*, puis calcule la valeur Δ*dif*.Si la valeur obtenue est inférieure à une limite fixée comme critère de convergence, le programme calcule *z* et *L* par inversion du changement de variables, ce qui termine la procédure (3204). Sinon, il modifie éventuellement le choix de grandeur caractéristique (modification de *mode*), puis répète la procédure (3305). Ceci constitue la boucle (3301). L'ensemble de ces opérations constitue la procédure (3204) décrite Fig. 48

La Fig.48 décrit la procédure (3204). Ses étapes essentielles sont:

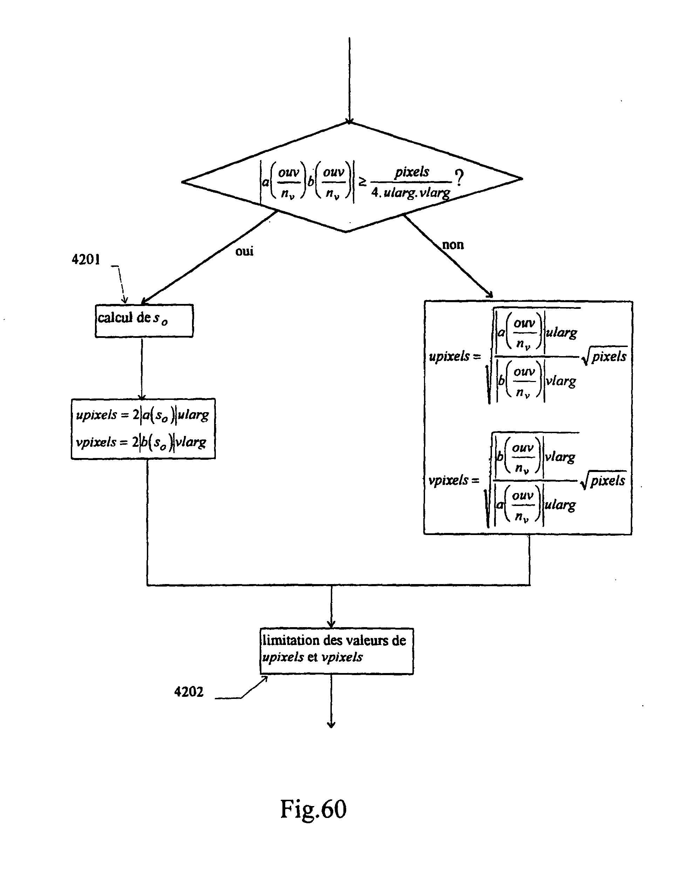

- (3302): les intervalles de variation de *u* et *v* sont déterminés.
- (3303): Cette procédure a pour objet de déterminer *upixels* et *vpixels* d'une manière optimale. Son algorithme est décrit par la Fig.60.
- (3304): L'écart de (phase/2π) causé par la traversée de la lame et le déplacement suivant z du point d'impact à un faisceau de direction parallèle à *z* est:

$$dif = \frac{1}{\lambda}\left((n_o - n_v)L + n_v z\right).$$

On considère que l'algorithme a convergé quant cette grandeur est connue avec une précision suffisante. L'incertitude sur cette grandeur vaut:

$$\Delta dif = \frac{1}{\lambda}\,\frac{1}{1+c^2}[(n_o c - n_v c + n_v)\Delta u + (-n_o + n_v + n_v c)\Delta v]$$

ou

$$\Delta u = \frac{ularg}{upixels} \text{ et } \Delta v = \frac{vlarg}{vpixels}$$

Le programme modifie *mode* et détermine la fin de convergence en fonction la valeur obtenue de Δ*dif* On peut par exemple avoir *lim1*=2, *lim2*=0.25,*lim3*=0.01

- (3305): cette procédure calcule la grandeur caractéristique pour un ensemble de couples (*u,v*) et détermine le couple *ucentre, vcentre* correspondant à la plus grande valeur caractéristique, la valeur *maxb* de cette grandeur caractéristique, et les valeurs *xbar,ybar* qui représentent l'écart entre la nouvelle approximation de *x,y* et les valeurs courantes de *x,y*. Elle est détaillée Fig.49.
- (3306): modification de *x,y,ularg,vlarg,ucentre_ini,vcentre_ini* le programme effectue les modifications suivantes:

$$x=x+xbar$$

$$y=y+ybar$$

si *upixels* ≤ 4 alors *ucentre_ini, ularg* ne sont pas modifiés.

si *upixels* ≥ 5 alors: *ucentre_ini=ucentre* et *ularg* = $\dfrac{4}{upixels}$ *ularg*

si *vpixels* ≤ 4 alors *vcentre_ini, vlarg* ne sont pas modifiés.

si *vpixels* ≥ 5 alors: *vcentre_ini=vcentre* et *vlarg* = $\dfrac{4}{vpixels}$*vlarg*

La Fig.49 décrit la procédure (3305). Ses étapes essentielles sont:

- (3401): cette procédure calcule la grandeur caractéristique max pour les valeurs courantes de *u,v, $n_o$* . En mode 1 et 2 elle calcule également xbar et *ybar* qui représentent l'écart entre la nouvelle approximation de *x,y* et la valeur en entrée de la procédure.
- (3402): dans le cas du mode 3, la procédure (3401) n'a pas calculé *xbar* et *ybar*. Elle est relancée en mode 2 pour effectuer ce calcul.

La Fig.50 décrit la procédure (3401). Ses étapes essentielles sont:

- (3501): calcul de la représentation fréquentielle corrigée. A partir du tableau $F_{rec}[i,j]$ le programme calcule une représentation corrigée en utilisant:

$$a[i,j] = \frac{1}{\lambda}\left\{ \frac{c}{1+c^2}n_o\left(\sqrt{1-\left(\frac{n_v}{n_o}\right)^2\frac{ic^2+jc^2}{K_0^{\ 2}}}-1\right) + \frac{1-c}{1+c^2}n_v\left(\sqrt{1-\frac{ic^2+jc^2}{K_0^{\ 2}}}-1\right)\right\}$$

$$b[i,j] = \frac{1}{\lambda}\left\{ \frac{1}{1+c^2}n_o\left(\sqrt{1-\left(\frac{n_v}{n_o}\right)^2\frac{ic^2+jc^2}{K_0^{\ 2}}}-1\right) - \frac{1+c}{1+c^2}n_v\left(\sqrt{1-\frac{ic^2+jc^2}{K_0^{\ 2}}}-1\right)\right\}$$

ou *ic* et *jc* sont les indices centrés soit: $ic = i - \dfrac{N_{pix}}{2}$, $jc = j - \dfrac{N_{pix}}{2}$.

On vérifie alors, à une constante près indépendante de *i* et *j*:

$$\frac{\Delta}{\lambda} = \frac{n_v}{\lambda}\left( x\frac{ic}{K_0} + y\frac{jc}{K_0}\right) + a[i,j]u + b[i,j]v$$

Le programme génère la représentation fréquentielle corrigée de la manière suivante:

$$F_{cor}[i,j] = F_{rec}[i,j]\ \gamma\big(a[i,j]\Delta u\big)\ \gamma\big(b[i,j]\Delta v\big)\ \exp\left\{-\tilde{j}2\pi\left[\frac{n_v}{\lambda}\left( x\frac{i-\frac{N_{pix}}{2}}{K_0} + y\frac{j-\frac{N_{pix}}{2}}{K_0}\right) + a[i,j]u + b[i,j]v\right]\right\}$$

ou γ(x) = 0 quand $|x|\geq\frac{1}{2}$ et γ(x) = 1 quand $|x| < \frac{1}{2}$, et $\Delta u = \dfrac{ularg}{upixels}$, $\Delta v = \dfrac{vlarg}{vpixels}$

*a[i,i]* et *b[i,j]* représentent respectivement les fréquences suivant *u* et *v* de la fonction corrigée obtenue. On vérifie que ces fréquences ont toutes deux un signe constant. La multiplication par les fonctions γ permet d'annuler les éléments pour lesquels ces fréquences sont trop élevées et d'éviter ainsi les repliements de spectre qui empêcheraient la convergence de l'algorithme.

- (3502): une transformation de Fourier inverse du tableau $F_{cor}$ est effectuée.
- (3503): max est la valeur maximale du module sur le tableau $F_{cor}[i,j]$
  On note *imax* et *jmax* les coordonnées du pixel en lequel le maximum est atteint. On a alors:

$$xbar = \frac{K_0 \lambda}{n_v N_{pix}} \left( imax - \frac{N_{pix}}{2} \right)$$

$$ybar = \frac{K_0 \lambda}{n_v N_{pix}} \left( jmax - \frac{N_{pix}}{2} \right)$$

- (3504): la partie centrale du tableau $F_{cor}[i,j]$ est extraite. On crée ainsi un tableau $F_a[i,j]$ de dimensions $N_a$ x $N_a$ avec par exemple $N_a$=16:

$$F_a[i,j] = F_{cor} \left[ i - \frac{N_a}{2} + \frac{N_{pix}}{2}, j - \frac{N_a}{2} + \frac{N_{pix}}{2} \right]$$

- (3505): une transformée de Fourier directe est effectuée sur le tableau $F_a$
- (3506): le tableau $F_a$ est complété par des zéros et on obtient un tableau $F_b$ de dimensions $N_b$ x $N_b$ avec par exemple $N_b$ =512.

$$F_b[i,j] = F_a \left[ i - \frac{N_b}{2} + \frac{N_a}{2}, j - \frac{N_b}{2} + \frac{N_a}{2} \right]$$

quand $N_a$ -1$\geq i - \frac{N_b}{2} + \frac{N_a}{2} \geq 0$ et $N_a$ -1$\geq j - \frac{N_b}{2} + \frac{N_a}{2} \geq 0$
et $F_b[i,j]$ = 0 sinon.

- (3507): la transformation de Fourier inverse du tableau $F_b$ est effectuée.
- (3508): *xbar,ybar,max* sont calculés par les formules:

$$imax = \frac{\sum_{i,j} |F_b[i,j]|^2 \, i}{\sum_{i,j} |F_b[i,j]|^2}$$

$$jmax = \frac{\sum_{i,j} |F_b[i,j]|^2 \, j}{\sum_{i,j} |F_b[i,j]|^2}$$

$$max = |F_b[imax, jmax]|$$

$$xbar = \frac{K_0 \lambda}{n_v N_{pix}} \frac{N_a}{N_b} \left( imax - \frac{N_b}{2} \right)$$

$$ybar = \frac{K_0 \lambda}{n_v N_{pix}} \frac{N_a}{N_b} \left( jmax - \frac{N_b}{2} \right)$$

- (3509):la représentation fréquentielle suivante, de dimensions $N_c$ x $N_c$ avec par exemple $N_c$ =4096, est calculée:

$$F_c[i,j] = \exp\left\{ \tilde{j} \frac{2\pi}{\lambda} \left[ n_v \left( x \frac{ic}{R_c} + y \frac{jc}{R_c} + z \sqrt{1 - \frac{ic^2 + jc^2}{R_c^2}} \right) + L \left( n_o \sqrt{1 - \left(\frac{n_v}{n_o}\right)^2 \frac{ic^2 + jc^2}{R_c^2}} - n_v \sqrt{1 - \frac{ic^2 + jc^2}{R_c^2}} \right) \right] \right\}$$

avec $R_c = \frac{N_c}{N_{pix}} K_0$ et ou $ic$ et $jc$ sont les indices centrés soit: $ic = i - \frac{N_c}{2}$ , $jc = j - \frac{N_c}{2}$

- (3510): la transformée de Fourier inverse de $F_c$ est calculée.
- (3511): $F_c$ étant maintenant en représentation spatiale, la présence du diaphragme constitue une simple limitation dans ce domaine. Le programme calcule donc le tableau $F_d$ de dimensions $N_{pix}$ x $N_{pix}$ en l'initialisant à 0 puis en effectuant:

$$F_d[i,j] = F_c\left[ i - \frac{N_{pix}}{2} + \frac{N_c}{2}, j - \frac{N_{pix}}{2} + \frac{N_c}{2} \right]$$

pour tous les couples ($i,j$) tels que

$$\left( i - \frac{N_{pix}}{2} \right)^2 + \left( j - \frac{N_{pix}}{2} \right)^2 \le \left( \frac{N_{pix}}{2} \right)^2$$

- (3512): le programme effectue une transformation de Fourier du tableau $F_d$
- (3513): Le programme calcule la valeur

$$rapport = \frac{\sum_{(i,j) \in E} F_{rec}[i,j] \overline{F_d[i,j]}}{\sum_{(i,j) \in E} |F_d[i,j]|^2}$$

ou E est l'ensemble des couples ($i, j$) vérifiant:

$$F_{rec}[i,j] \overline{F_d[i,j]} \ge Coef \cdot \max_{\substack{0 \le a \le N_{pix}-1 \\ 0 \le b \le N_{pix}-1}} \left| F_{rec}[a,b] \overline{F_d[a,b]} \right| ,$$

avec par exemple $Coef$ = 0,5 . La justification de cette formule peut être trouvée en 7.17.1.2.
- (3514): Le programme calcule alors la grandeur caractéristique $max$:

$$max = - \sum_{i,j} \left| F_{rec}[i,j] - rapport . F_d[i,j] \right|^2$$

La Fig. 60 décrit la procédure (3303). Cette procédure vise à déterminer *upixels* et *vpixels* suivant les principes explicités ci-après:

On peut exprimer la grandeur $\frac{\Delta}{\lambda}$ calculée en 7.7. , à une constante près, sous la forme:

$$\frac{\Delta}{\lambda} = \frac{n_v}{\lambda}\left(x\,\frac{i}{K_0} + y\,\frac{j}{K_0}\right) + a(s)u + b(s)v$$

avec:

$$a(s) = \frac{1}{\lambda}\left\{\frac{c}{1+c^2}n_o\left(\sqrt{1-\left(\frac{n_v}{n_o}\right)^2 s^2}-1\right) + \frac{1-c}{1+c^2}n_v\left(\sqrt{1-s^2}-1\right)\right\}$$

$$b(s) = \frac{1}{\lambda}\left\{\frac{1}{1+c^2}n_o\left(\sqrt{1-\left(\frac{n_v}{n_o}\right)^2 s^2}-1\right) - \frac{1+c}{1+c^2}n_v\left(\sqrt{1-s^2}-1\right)\right\}$$

$$s = \sqrt{\frac{i^2 + j^2}{K_0^2}}$$

*i* et *j* étant des indices centrés.

La méthode de génération de la grandeur caractéristique, dans les cas *mode*=1 ou *mode*=2, consiste à multiplier la représentation fréquentielle $F_{rec}$ par le facteur de correction de phase

$$e^{-j2\pi\frac{\Delta}{\lambda}}$$

puis à effectuer une transformée de Fourier. La représentation ainsi obtenue est dans le domaine spatial. La grandeur caractéristique est à peu près la valeur de cette représentation au point origine. Elle est donc obtenue comme somme d'éléments de la forme

$$e^{-j2\pi\frac{\Delta}{\lambda}.}$$

Cette grandeur caractéristique peut être considérée comme une fonction *fonc(u,v)* de *u* et *v*. Si on fixe la valeur de *v*, elle devient simplement fonction de *u*. Si on limite la représentation $F_{rec}$ à un disque de rayon (en pixels) $K_0 s_o$ cette fonction de *u* a comme fréquence maximale

$$a(s_o) \cdot a(s_o)$$

est donc la fréquence maximale de *fonc* suivant *u*. De même,

$$b(s_o)$$

est la fréquence maximale de *fonc* suivant *v. upixels* et *vpixels* doivent être déterminés de manière à ce que pour une valeur donnée de $s_0$ aussi élevée que possible, les pas d'échantillonnage suivant *u* et *v* soient suffisamment précis pour éviter le repliement de spectre. Cette condition s'écrit:

$$\left|a(s_o)\right|\frac{ularg}{upixels} = \left|b(s_o)\right|\frac{vlarg}{vpixels} = \frac{1}{2}$$

Par ailleurs le nombre total de pixels est limité à une valeur *pixels,* ce qui s'écrit:

$$upixels.vpixels = pixels$$

En combinant ces équations on obtient l'équation E1:

$$\left|a(s_o)b(s_o)\right| = \frac{pixels}{4.ularg.vlarg}$$

Deux cas se présentent alors:

$$\textbf{premier cas:} \quad \left|a\left(\frac{ouv}{n_v}\right)b\left(\frac{ouv}{n_v}\right)\right| \geq \frac{pixels}{4.ularg.vlarg}$$

L'équation E1 a une solution $s_o$ que le programme peut déterminer par dichotomie. Les valeurs de *upixels* et *vpixels* sont alors déterminées par:

$$upixels = 2|a(s_o)|ularg$$

$$vpixels = 2|b(s_o)|vlarg$$

$$\textbf{Deuxième cas:} \quad \left|a\left(\frac{ouv}{n_v}\right)b\left(\frac{ouv}{n_v}\right)\right| < \frac{pixels}{4.ularg.vlarg}$$

L'équation E1 n'a pas de solution. Les valeurs de *upixels* et *vpixels* sont alors déterminées pour être proportionnelles à celles obtenues pour la valeur $s_o = \frac{ouv}{n_v}$ soit:

$$upixels = \alpha\left|a\left(\frac{ouv}{n_v}\right)\right|ularg$$

$$vpixels = \alpha\left|b\left(\frac{ouv}{n_v}\right)\right|vlarg$$

Par ailleurs la condition *upixels. vpixels = pixels* doit toujours être vérifiée. La résolution de ces équations donne:

$$\alpha^2 = \frac{pixels}{\left|a\left(\dfrac{ouv}{n_v}\right)b\left(\dfrac{ouv}{n_v}\right)\right|ularg.\,vlarg}$$

et on obtient donc finalement:

$$upixels = \sqrt{\frac{\left|a\left(\dfrac{ouv}{n_v}\right)\right|ularg}{\left|b\left(\dfrac{ouv}{n_v}\right)\right|vlarg}}\,\sqrt{pixels}$$

$$vpixels = \sqrt{\frac{\left|b\left(\dfrac{ouv}{n_v}\right)\right|vlarg}{\left|a\left(\dfrac{ouv}{n_v}\right)\right|ularg}}\,\sqrt{pixels}$$

Dans les deux cas, les valeurs ainsi déterminées sont des nombres réels qui peuvent être inférieurs à 1 ou supérieurs à *pixels*. Une dernière étape consiste donc à les traduireen nombres entiers dans l'intervalle [1,*pixels*]. L'algorithme résultant, qui permet de déterminer upixels et vpixels, est représenté sur la Fig.60.
Les étapes suivantes doivent être détaillées:

(4201): $s_o$ est la solution de l'équation $|a(s_o)b(s_o)| = \dfrac{pixels}{4.\,ularg.vlarg}$. Le programme résout cette équation par dichotomie entre 0 et $\dfrac{ouv}{n_v}$.

(4202):le programme prend pour *upixels* et *vpixels* le nombre entier le plus proche de la valeur réelle obtenue, puis il limite ces valeurs de la manière suivante:

- si *upixels*<1 le programme effectue *upixels*=1
- si *vpixels*<1 le programme effectue *vpixels*=1
- si *upixels*>*pixels* le programme effectue *upixels*=*pixels*
- si *vpixels*>*pixels* le programme effectue *vpixels*=*pixels*

### 7.9. Obtention des caractéristiques des faisceaux parallèles.

Chaque faisceau parallèle généré par le système de contrôle du faisceau d'éclairage a une phase indépendante. Cette procédure a pour objet de déterminer les phases et les coordonnées de ces faisceaux parallèles. Elle se décompose en deux parties:

### 7.9.1. Réglage des objectifs et obtention de la position relative des points de focalisation.

L'objectif de la présente étape est de déterminer la position relative des points d'origine des faisceaux de référence FRD et FRG. Cet objectif peut être atteint en réglant la position des objectifs de manière à ce que l'image produite par le faisceau FRGI sur le capteur (2239) soit parfaitement ponctuelle.
Dans ce but, seuls sont utilisés les faisceaux FRGI et FRD. Le miroir (2282) est utilisé pour obtenir une onde centrée à double sens de propagation. Les miroirs (2243) (2232) (2247) sont obturés. Le décaleur de phase (2251) est utilisé pour modifier la phase de cette onde. L'espace entre les deux objectifs est occupé par de l'huile optique à l'indice nominal des objectifs. L'onde mesurée du coté droit des objectifs sur le capteur (2239) indicé par *p*=0 est l'équivalent de l'onde de référence utilisée de l'autre coté. Sa ponctualité est évaluée par la procédure décrite en 7.3.3.1., avec utilisation d'une transformée de Fourier dans ladite procédure. La position des objectifs est ajustée pour obtenir un point centré au milieu de l'image.

Si ce réglage de position des objectifs est effectué avec le plus grand soin et avec des positionneurs suffisamment précis, de précision sub-micrométrique, par exemples des dispositifs de focalisation de microscope d'une qualité suffisante, ou des positionneurs avec contrôle piézoélectrique, alors les points d'origine des images obtenues de chaque coté du microscope sont confondus.

Toutefois ceci nécessite un positionnement extrêmement précis des objectifs. La procédure de réglage décrite en 7.3.3.2. permet cependant d'obtenir cette qualité de réglage en utilisant des positionneurs de précision moyenne pour les objectifs. En effet, les réglages fins sont effectués, dans cette procédure, par déplacement des caméras et non des objectifs. Si la procédure de réglage décrite en 7.3.3.2. est effectuée avec soin, les points d'origine des représentations fréquentielles finalement obtenues sont confondus. Leurs coordonnées relatives sont donc $(x,y,z)=(0,0,0)$. Il est alors préférable de ne pas modifier les positions obtenues pour les objectifs.

Cependant, les réglages obtenus par la procédure 7.3.3.2. ou par un nouveau réglage de position des objectifs sont en général imparfaits. Il est possible d'utiliser $(x,y,z)=(0,0,0)$ mais une meilleure superposition des images provenant de chaque capteur sera obtenue si un algorithme adapté est utilisé pour calculer une valeur plus précise de ces paramètres.

L'onde mesurée sur le capteur (2239), obtenue selon la procédure décrite en 7.5. avec $p=0$, est alors enregistrée en un tableau $F_{rec}[i,j]$. Les coordonnées $x,y,z$ du point d'origine de l'onde de référence issue de FRD par rapport au point d'origine de l'onde de référence issue de FRG sont alors déterminées à partir de $F_{rec}[i,j]$ en utilisant le programme décrit en 7.8. Toutefois, afin de tenir compte de l'absence d'échantillon, la procédure (3303) est remplacée par les deux affectations suivantes:

$$upixels=pixels$$

$$vpixels=1$$

Par ailleurs les variables utilisées sont:

$nomax\_ini= nomin\_ini=n_v$, $n_v$ étant l'indice nominal des objectifs.
$Lmin=Lmax=0$
$nopixels=1$
$pixels=20$
$zmin = -20\lambda$ et $zmax = 20\lambda$ (par exemple)

### 7.9.2. Obtention des valeurs complexes et des coordonnées des faisceaux d'éclairage.

Cette procédure a pour objectif de déterminer, pour chaque faisceau parallèle défini par les indices $p,i,j$ du mot de commande $COM[p,i,j]$ du déviateur de faisceau:

- les coordonnées du point d'impact direct du faisceau d'éclairage sur le capteur $p$. Ces coordonnées seront stockées dans les tableaux $Ia[p,0,i,j],Ja[p,0,i,j]$.
- les coordonnées du point d'impact direct du faisceau d'éclairage sur le capteur $\bar{p}$. Ces coordonnées seront stockées dans les tableaux $Ia[p,1,i,j],Ja[p,1,i,j]$.
- la valeur complexe du faisceau d'éclairage correspondant, sa phase étant mesurée au point d'origine de l'onde de référence utilisée sur le capteur $\bar{p}$. Cette convention de mesure de la phase assure en effet que la valeur complexe ainsi obtenue soit indépendante de la position des objectifs, à un facteur global de phase près affectant l'ensemble des faisceaux caractérisés par le même indice $p$. Cette valeur complexe sera stockée dans un tableau $Ra[p,i,j]$. Comme la mesure directe des faisceaux donne des coordonnées relatives au point d'origine de l'onde de référence utilisée sur le capteur $p$, cette valeur doit être corrigée en fonction des valeurs de position déterminées en 7.9.1.

Pendant cette procédure, les faisceaux de référence FRD et FRG sont utilisés, ainsi qu'un faisceau d'éclairage défini par un mot de commande variable $COM[p,i,j]$ du déviateur de faisceau. Les miroirs (2243) et (2232) sont utilisés pour créer un faisceau indicateur inverse du faisceau d'éclairage qui va frapper le capteur opposé au capteur normalement éclairé par ce faisceau. Les miroirs (2247) et (2282) sont obturés. La procédure décrite en 7.5. est utilisée pour obtenir sur chaque capteur des images bidimensionnelles en nombres complexes. Les décalages de phase sont effectués à l'aide de l'élément (2205).

Un programme permet d'obtenir ces paramètres sous forme des tableaux $Ia[p,q,i,j]$, $Ja[p,q,i,j]$, $Ra[p,i,j]$. Par une méthode de suréchantillonnage il détermine $Ia[p,q,i,j]$, $Ja[p,q,i,j]$ avec une précision inférieure au pixel. Ces tableaux sont donc des tableaux de nombres réels.

Le système de coordonnées utilisé sur le capteur $p$ est celui déterminé dans l'étape 14 du cycle de réglage 7.3.3.2., défini par les vecteurs directeurs

$$\left(\vec{i}_p, \vec{j}_p\right).$$

Cette convention de repérage sera maintenue par la suite.

Le programme est constitué de trois boucles parcourues successivement.

*Boucle 1*: il s'agit d'une boucle sur l'indice $p$, qui prend successivement les valeurs 0 et 1.

Pour chacun de ces indices le programme utilise le mot de commande

$$COM\left[p, \frac{N_{pix}}{2}, \frac{N_{pix}}{2}\right].$$

Il détermine alors les coordonnées entières $imax0_p, jmax0_p$ du maximum de l'image résultante sur le capteur $p$.

*Boucle 2:* Il s'agit d'une boucle sur l'ensemble des triplets $p_0, i_0, j_0$. Pour chacun de ces triplets, le programme génère les valeurs $Ia[p_0,q,i_0,j_0]$ $Ja[p_0,q,i_0,j_0]$ $Ra[p_0,i_0,j_0]$. A chaque itération, correspondant à un triplet donné $p_0, i_0, j_0$ le programme effectue les 8 étapes suivantes:

*Etape 1*: le mot de commande

$$COM\left[p_0, \frac{N_{pix}}{2}, \frac{N_{pix}}{2}\right]$$

est utilisé et les images résultantes sur chaque capteur sont enregistrée dans deux tableaux de nombres complexes $M0_q[i,j]$ ou $q=0$ pour l'image obtenue sur le capteur $p_0$ et $q=1$ pour l'image obtenue sur le capteur opposé.

*Etape 2:* le mot de commande $COM[p_0,i_0,j_0]$ est utilisé et les images résultantes sont enregistrées dans les tableaux $M1_q[i,i]$

*Etape 3*: Le programme détermine les coordonnées $imax_q$, $jmax_q$ du point de module maximum du tableau $M1_q[i,j]$ pour chaque valeur de $q$.

*Etape 4*: Le programme extrait une image de taille $N_a$ x $N_a$, avec par exemple $N_a$ =16, autour du point de coordonnées $imax_q$ $jmax_q$:

$$M2_q[i,j] = M1_q\left[i - \frac{N_a}{2} + imax_q, j - \frac{N_a}{2} + jmax_q\right]$$

quand: $N_{pix}$ -1$\geq i - \frac{N_a}{2} + imax_q \geq 0$ et $N_{pix}$ -1$\geq j - \frac{N_a}{2} + jmax_q \geq 0$ et $M2_q[i,j] = 0$ sinon.

*Etape 5*: le programme effectue une transformée de Fourier directe des tableaux $M2_q$.

*Etape* 6: le programme complète les tableaux $M2_q$ par des zéros, générant les tableaux $M3_q$ de dimensions $N_b$ x $N_b$ avec par exemple $N_b$ =512. Le tableau $M3_q$ est initialisé à zéro puis le programme effectue pour tous les indices *i,j* allant chacun de 0 à $N_a$ -1 et pour les deux indices *q*:

$$M3_q\left[i - \frac{N_a}{2} + \frac{N_b}{2}, j - \frac{N_a}{2} + \frac{N_b}{2}\right] = M2_q\left[i, j\right]$$

*Etape 7*: le programme effectue la transformée de Fourier inverse du tableau *M3*.

*Etape 8*: le programme calcule les coordonnées et la valeur complexe au barycentre du tableau *M3*.

$$imax3_q = \frac{\sum_{i,j}\left|M3_q[i,j]\right|^2 i}{\sum_{i,j}\left|M3_q[i,j]\right|^2}$$

$$jmax3_q = \frac{\sum_{i,j}\left|M3_q[i,j]\right|^2 j}{\sum_{i,j}\left|M3_q[i,j]\right|^2}$$

$$Ia\left[p_0, q, i_0, j_0\right] = imax_q + \frac{N_a}{N_b}\left(imax3_q - \frac{N_b}{2}\right)$$

$$Ja\left[p_0, q, i_0, j_0\right] = jmax_q + \frac{N_a}{N_b}\left(jmax3_q - \frac{N_b}{2}\right)$$

$$Ra[p_0, i_0, j_0] = \frac{M3_0[imax3_0, jmax3_0]}{M0_0[imax0_{p_0}, jmax0_{p_0}]}$$

$$\exp\left(-\tilde{j}\frac{2\pi}{\lambda}n_v\left(x\frac{Ia[p_0, 0, i_0, j_0]}{K_{p_0}} + y\frac{Ja[p_0, 0, i_0, j_0]}{K_{p_0}} + z\sqrt{1 - \frac{Ia[p_0, 0, i_0, j_0]^2 + Ja[p_0, 0, i_0, j_0]^2}{K_{p_0}^2}}\right)\right)$$

ou *x,y,z* sont les coordonnées calculées en 7.9.1.

*Boucle 3*: Le programme effectue une dernière opération consistant à annuler les valeurs de *Ra* et à affecter des valeurs élevées à *Ja* et *Ia* à chaque fois que le point d'impact direct du faisceau est hors de la zone limitée par l'ouverture de l'objectif, ce qui se traduit par une disparition de ce point. A cette fin le programme parcourt à nouveau les indices $p_0, i_0, j_0$, en testant à chaque fois la condition $\left|\frac{Ra[p_0, i_0, j_0]}{Ra[p_0, 127, 127]}\right| \leq \frac{1}{8}$. Lorsque cette condition est satisfaite, le programme effectue:

$$Ra[p_0, i_0, j_0] = 0$$

$$Ia[p_0, 0, i_0, j_0] = -1000$$

$$Ja[p_0, 0, i_0, j_0] = -1000$$

## 7.10. Réglage de position des objectifs.

L'échantillon à étudier est mis en place. Pendant cette étape, seuls sont utilisés les faisceaux FRGI et FRD. Le miroir (2282) est utilisé pour obtenir une onde centrée à double sens de propagation. Les miroirs (2243) (2232) (2247) sont obturés. Le décaleur de phase (2251) est utilisé pour modifier la phase de cette onde. De l'huile optique à l'indice nominal des objectifs est utilisée. L'onde mesurée du coté droit des objectifs sur le capteur (2239) indicé par $p=0$ est l'équivalent de l'onde de référence utilisée de l'autre coté. Un programme génère deux images par la procédure décrite en 7.3.3.1.: une image spatiale obtenue avec transformation de Fourier, et une image fréquentielle obtenue sans transformation de Fourier. Le programme extrait sur chacune de ces images l'intensité (carré du module des nombres complexes constituant l'image obtenue en 7.3.3.1.). Le programme affiche les images résultantes.
L'image spatiale doit être centrée.
Sur l'image en fréquence, on doit observer un disque clair. Le réglage doit être effectué pour que l'intensité soit la plus élevée possible pour les fréquences élevées (points éloignés du centre). Le disque observé doit rester relativement homogène.
Si un anneau sombre apparaît entre le bord extérieur et la zone centrale, l'échantillon est trop épais et la totalité des fréquences ne pourra pas être prise en compte. Le réglage doit alors être effectué de manière à avoir un disque relativement homogène, de rayon aussi élevé que possible. Le disque n'atteint pas sa taille maximum et les fréquences élevées ne peuvent pas être prises en compte. La résolution de l'image, principalement en profondeur, est diminuée. La seule solution à ce problème consiste à utiliser un objectif spécialement conçu, décrit au paragraphe 7.19.
Cette méthode de réglage des objectifs est adaptée au cas ou l'indice de l'échantillon diffère notablement de l'indice nominal des objectifs. Dans le cas contraire, et en particulier si on veut utiliser une fonction $D_p$ définie en 7.16 égale à 1, le réglage doit être effectué à partir de l'image spatiale seule et de manière à ce que cette image soit ponctuelle et centrée.

## 7.11. Détermination de $x,y,z,L,n_0$.

Il est nécessaire de connaître ces paramètres pour pouvoir compenser l'aberration sphérique et les effets de la non-coïncidence des points d'origine des ondes de référence. Ces paramètres peuvent être déterminés en n'effectuant pas l'étape 7.10. et en laissant donc les objectifs dans la position ou ils étaient à l'issue de l'étape décrite en 7.9.1. Les valeurs $x,y,z$ sont alors celles qui ont été déterminées en 7.9.1. Les valeurs de $L$ et $n_0$ peuvent avoir été mesurées préalablement par un moyen extérieur au microscope proprement dit. Cependant cette méthode présente le désavantage de ne pas permettre un mouvement des objectifs lors de la mise en place de l'échantillon, et de nécessiter l'utilisation d'un système de mesure externe coûteux. Il est donc préférable de déterminer à nouveau l'ensemble de ces paramètres. Cette deuxième méthode permet le déplacement des objectifs lors de la mise en place de l'échantillon et l'étape 7.10. peut donc être effectuée.
Pour appliquer cette deuxième méthode, on pourrait en principe utiliser la procédure théorique décrite en 7.8.1. et utilisant une seule prise d'image, mais les variations locales des caractéristiques de l'échantillon au voisinage du point de focalisation fausseraient le résultat. C'est pourquoi on utilise une série de prises d'images et on mesure sur chaque image la variation de phase et d'intensité au point d'impact direct du faisceau d'éclairage. A partir de cette série de valeurs, on peut générer un tableau équivalent au tableau $F_{rec}$ utilisé en 7.8. mais dans lequel on s'est affranchi des variations locales.

### 7.11.1. Acquisition

Les miroirs (2282) (2247) (2243) (2232) sont obturés de manière à supprimer tous les faisceaux indicateurs inverses, qui ne seront plus utilisés par la suite. La procédure décrite en 7.9.2. est recommencée, avec les modifications suivantes:

- L'échantillon est maintenant présent.
- La boucle 1, qui consiste à déterminer $imax0_p, jmax0_p$, est supprimée. Les valeurs précédemment obtenues de $imax0_p, jmax0_p$ sont réutilisées.
- Dans la boucle 2, les indices $p_0$ et $q$ sont fixés à 0. Les étapes 1 à 8 ne sont donc effectuées que pour l'ensemble

des indices $i_0, j_0$ ($p_0$ étant fixé à 0). Dans chacune de ces étapes, seuls les éléments correspondant à l'indice $q=0$ sont acquis ou calculés.

- L'étape 8 de la boucle 2 est modifiée comme suit:

$Ia[p_0,q,i_0,j_0]$, $Ja[p_0,q,i_0,j_0]$, $Ra[p_0,i_0,j_0]$ ne sont pas recalculés et leurs valeurs précédemment obtenues sont maintenues.
la quantité $Rb[p_0,i_0,j_0]$ est calculée comme suit:

- si $Ra[p_0,i_0,j_0]=0$ alors $Rb[p_0,i_0,j_0]=0$
- sinon:

$$Rb[p_0,i_0,j_0] = \frac{M3_0[imax3_0,jmax3_0]}{M0_0[imax0_{p_0},jmax0_{p_0}]} \frac{1}{Ra[p_0,i_0,j_0]}$$

Cette quantité correspond à la variation du faisceau d'éclairage dûe à la présence de l'échantillon et au déplacement des objectifs, sur le capteur 0, pour l'éclairage caractérisé par les indices $i_0, j_0$, par rapport à une position des objectifs ou le point d'origine des ondes de référence utilisées sur chaque objectif seraient confondus. - La boucle 3 est supprimée.

### 7.11.2.génération de l'image en fréquence.

Un second programme est alors lancé. Celui-ci a pour objectif de générer, à partir des mesures précédentes, un tableau $F_{rec}$ utilisable dans l'algorithme décrit en 7.8. Comme les coordonnées $Ia[p_0,q,i_0,j_0]$. $Ja[p_0,q,i_0,j_0]$ des points échantillonnés par le tableau Rb ne correspondent pas à des pixels entiers, une méthode de suréchantillonnage et de filtrage est nécessaire pour générer le tableau $F_{rec}$ . Cette méthode est imparfaite car le pas (par exemple $Ia[p,q,i,j]$-$Ia[p,q,i+1,j]$) séparant deux échantillons adjacents du tableau $Rb$ peut varier. Néanmoins, pour une réalisation de qualité, cette variation est faible et la méthode de suréchantillonnage-filtrage donne de bons résultats. Celle-ci comporte les étapes successives suivantes:

*Etape 1*: génération d'une représentation fréquentielle suréchantillonnée, de dimensions $N_c$ x $N_c$ avec par exemple $N_c$ =4096. Le tableau $Fs$ est initialisé à 0 puis le programme parcourt l'ensemble des indices $i,j$ en testant la condition $Ra[0,i,j] \neq 0$. Lorsque la condition est vraie, il effectue:

$$Fs\left[E\left(Ia[0,0,i,j]\frac{N_c}{N_{pix}}\right), E\left(Ja[0,0,i,j]\frac{N_c}{N_{pix}}\right)\right] = Rb[0,i,j]$$

ou $E(x)$ désigne le nombre entier le plus proche de $x$.
*Etape 2*: une transformée de Fourier inverse est appliquée au tableau $Fs$
*Etape 3*: la partie centrale du tableau, de dimensions $N_{pix}$ x $N_{pix}$, est extraite et la présence du diaphragme simulée.

$$F_{rec}[i,j] = Fs\left[i - \frac{N_{pix}}{2} + \frac{N_c}{2}, j - \frac{N_{pix}}{2} + \frac{N_c}{2}\right]$$

pour tous les couples $(i,j)$ tels que

$$\left(i - \frac{N_{pix}}{2}\right)^2 + \left(j - \frac{N_{pix}}{2}\right)^2 \leq \left(\frac{N_{pix}}{2}\right)^2$$

ou *ouv* est l'ouverture des objectifs.
*Etape 4*: la transformée de Fourier du tableau $F_{rec}$ obtenu est effectuée.

### 7.11.3.calcul des paramètres.

Le tableau $F_{rec}$ obtenu à l'issue de l'étape 4 constitue l'image en fréquence, équivalente à celle dont l'acquisition est décrite en 7.8.1., mais acquise d'une manière moins sensible aux variations locales de l'indice. Il est possible de simuler cette image en fréquence à partir d'un quintuplet ($x,y,z,L,n_0$) et de calculer une grandeur caractéristique *max*. C'est ce que fait la partie de programme décrite sur la Fig.50 et comprenant les étapes (3509) à (3514), qui calcule finalement une grandeur caractéristique *max* que l'on notera $max(x,y,z,L,n_0)$. La détermination de la valeur du quintuplet ($x,y,z,L,n_0$) consiste à utiliser un programme de maximisation qui fait varier ($x,y,z,L,n_0$) de manière à déterminer le point correspondant à la valeur la plus élevée de $max(x,y,z,L,n_0)$. En principe, tout algorithme de maximisation convient. Cependant, le nombre de variables et la complexité des calculs sont tels qu'il est nécessaire d'utiliser un algorithme spécifique et optimisé. Le programme décrit en 7.8. est donc utilisé pour calculer les paramètres à partir du tableau $F_{rec}$ qui constitue l'image en fréquence.

### 7.12. Prise d'image bidimensionnelle.

### 7.12.1.Principe:

On a vu dans le premier mode de réalisation comment on peut réaliser une représentation fréquentielle bidimensionnelle à partir de plusieurs images élémentaires différant entre elles par la différence de phase entre le faisceau d'éclairage et le faisceau de référence, ainsi que par le niveau d'atténuation du faisceau d'éclairage. Dans ce mode on ajoute des rotateurs de phase (2210) (2238) (2241) (2226) qui permettent de faire varier la direction de polarisation de l'onde et la direction d'analyse. En effet, la diffraction de l'onde d'éclairage n'est pas homogène dans toutes les directions. Pour une direction donnée, l'onde diffractée dépend fortement de la polarisation du faisceau incident.
On rappelle que si *a* et *b* sont deux vecteurs, alors:

a ^ b est le produit vectoriel de *a* et *b*
a.b est le produit scalaire de *a* et *b*
‖*a*‖ est la norme de *a*.

On appelle:

$f_c$ : fréquence caractéristique d'un point
$f_e$ : fréquence d'éclairage
$f_o$ : fréquence associée au centre optique du capteur

La Fig.51 montre l'arrangement de ces fréquences.

$\beta_c$ est l'angle entre le vecteur $f_c$ ^ $f_e$ et le vecteur $f_c$ ^ $f_o$
$\beta_e$ est l'angle entre le vecteur $f_e$ ^ $f_c$ et le vecteur $f_e$ ^ $f_o$
$\alpha_c$ est l'angle entre le vecteur $\vec{i}$ et le vecteur $f_c$ ^ $f_o$ (on omet l'indice p pour les vecteurs $\vec{i},\vec{j},\vec{k}$)
$\alpha_e$ est l'angle entre le vecteur $\vec{i}$ et le vecteur $f_e$ ^ $f_o$
$\theta$ est l'angle entre le vecteur $f_e$ et le vecteur $f_c$

Si le vecteur champ électrique du faisceau d'éclairage est parallèle, dans l'objet, au vecteur $f_c$ ^ $f_e$ alors le faisceau diffracté par l'objet dans la direction $f_c$ n'est pas atténué. S'il est orthogonal à ce vecteur, le faisceau diffracté est atténué d'un facteur $\cos\theta$.
Le vecteur champ électrique d'un faisceau, lorsqu'il parvient au capteur, est dans le plan du capteur, qui est un plan orthogonal à $f_o$. Le mode de passage du vecteur champ électrique dans l'objet au vecteur champ électrique sur le capteur est une rotation autour du vecteur $f_c \wedge f_o$ pour l'onde de fréquence $f_c$. Cette rotation conserve l'angle $\beta_c$. On note

$$\left(f_c \wedge f_e\right)_{rc}{}^{|}$$

le vecteur ainsi obtenu à partir du vecteur $f_c$ ^ $f_e$. Dans le cas de l'onde de fréquence $f_e$ polarisée parallèlement à $f_e \wedge f_c$ la rotation se fait autour de $f_e \wedge f_o$ et on note le vecteur résultant

$$\left(f_e \wedge f_c\right)_{re}$$

On note:

$$\bar{x}_c = \frac{\left(f_c \wedge f_e\right)_{rc}}{\|f_c \wedge f_e\|}$$

$$\bar{x}_e = \frac{\left(f_e \wedge f_c\right)_{re}}{\|f_c \wedge f_e\|}$$

$$\varphi_c = \alpha_c + \beta_c$$

$$\varphi_e = \alpha_e + \beta_e$$

Dans le plan du capteur, on a donc la configuration indiquée Fig.52, ou les points $O,E,C$ sont respectivement le centre optique (fréquence $f_o$), le point d'impact direct de l'onde d'éclairage (fréquence $f_e$), et le point ou est mesurée l'onde diffractée (fréquence $f_c$).

Lorsque le vecteur champ électrique du faisceau d'éclairage (au point $E$) est $A_0\vec{i} + A_1\vec{j}$ le vecteur champ électrique résultant au point $C$ est

$$\left(C_{00}A_0 + C_{01}A_1\right)\vec{i} + \left(C_{10}A_0 + C_{11}A_1\right)\vec{j}.$$

Lors des mesures, on utilisera:

- une onde d'éclairage dirigée selon $\vec{i}$. Pour cette onde d'éclairage, on mesurera des composantes diffractées polarisées selon les axes orientés par $\vec{i}$ et $\vec{j}$, obtenant les facteurs $C_{00}$ et $C_{10}$
- une onde d'éclairage dirigée selon $\vec{j}$. Pour cette onde d'éclairage, on mesurera des composantes diffractées polarisées selon les axes orientés par $\vec{i}$ et $\vec{j}$, obtenant les facteurs $C_{01}$ et $C_{11}$

Les facteurs $C_{kl}$ sont donc les grandeurs mesurées.

On néglige içi le fait que les directions de polarisation et d'analyse obtenues ne sont pas rigoureusement orthogonales.

Si le vecteur champ électrique du faisceau d'éclairage au point $E$ est parallèle au vecteur $\vec{x}_e$ et le vecteur champ électrique du faisceau reçu au point $C$ est parallèle au vecteur $\vec{x}_c$, il n'y a pas d'atténuation. Ce cas correspond à un vecteur champ électrique au point E de valeur

$$A\bar{x}_e = A\left(\vec{i}\,\cos\varphi_e + \vec{j}\,\sin\varphi_e\right)$$

et donc un vecteur champ électrique résultant au point $C$:

$$A\left[\left(C_{00}\cos\varphi_e + C_{01}\sin\varphi_e\right)\vec{i} + \left(C_{10}\cos\varphi_e + C_{11}\sin\varphi_e\right)\vec{j}\right].$$

La projection de ce vecteur sur l'axe orienté par $-\vec{x}_c$ a pour valeur:

$$-A\left[\left(C_{00}\cos\varphi_e + C_{01}\sin\varphi_e\right)\cos\varphi_c + \left(C_{10}\cos\varphi_e + C_{11}\sin\varphi_e\right)\sin\varphi_c\right].$$

. La valeur que l'on cherche à intégrer dans les calculs est le rapport de la valeur algébrique du faisceau diffracté à celle du faisceau incident-en l'abscence d'atténuation dûe à l'angle θ, qui correspond donc au cas ci-dessus et vaut:

$$M = -\cos\varphi_e, \cos\varphi_c C_{00} - \sin\varphi_e \cos\varphi_c C_{01} - \cos\varphi_e \sin\varphi_c C_{10} - \sin\varphi_e \sin\varphi_c C_{11}.$$

Afin de calculer cette valeur il est nécessaire de calculer préalablement les fonctions $\cos\varphi_e$, $\cos\varphi_c$, $\sin\varphi_e$, $\sin\varphi_c$. Ceci se fait en utilisant d'une part les relations trigonométriques:

$$\cos\varphi_c = \cos\alpha_c \cos\beta_c - \sin\alpha_c \sin\beta_c$$

$$\sin\varphi_c = \cos\alpha_c \sin\beta_c + \sin\alpha_c \cos\beta_c$$

$$\cos\varphi_e = \cos\alpha_e \cos\beta_e - \sin\alpha_e \sin\beta_e$$

$$\sin\varphi_e = \cos\alpha_e \sin\beta_e + \sin\alpha_e \cos\beta_e$$

et d'autre part les relations suivantes:

$$\cos\beta_c = \frac{f_c \wedge f_e}{\|f_c \wedge f_e\|} \cdot \frac{f_c \wedge f_o}{\|f_c \wedge f_o\|}$$

$$\sin\beta_c = \left(\frac{f_c \wedge f_o}{\|f_c \wedge f_o\|} \wedge \frac{f_c \wedge f_e}{\|f_c \wedge f_e\|}\right) \cdot \frac{f_c}{\|f_c\|}$$

$$\cos\beta_e = \frac{f_e \wedge f_c}{\|f_e \wedge f_c\|} \cdot \frac{f_e \wedge f_o}{\|f_e \wedge f_o\|}$$

$$\sin\beta_e = \left(\frac{f_e \wedge f_o}{\|f_e \wedge f_o\|} \wedge \frac{f_e \wedge f_c}{\|f_e \wedge f_c\|}\right) \cdot \frac{f_e}{\|f_e\|}$$

$$\cos\alpha_c = \vec{i} \cdot \frac{f_c \wedge f_o}{\|f_c \wedge f_o\|}$$

$$\sin\alpha_c = \vec{j} \cdot \frac{f_c \wedge f_o}{\|f_c \wedge f_o\|}$$

$$\cos\alpha_e = \vec{i} \cdot \frac{f_e \wedge f_o}{\|f_e \wedge f_o\|}$$

$$\sin \alpha_e = \vec{j} \cdot \frac{f_e \wedge f_o}{\|f_e \wedge f_o\|}$$

Si on utilise les valeurs normalisées des vecteurs fréquence:

$$f_o = \vec{k}$$

$$f_e = x_e \vec{i} + y_e \vec{j} + z_e \vec{k} \text{ avec } x_e^2 + y_e^2 + z_e^2 = 1$$

$$f_c = x_c \vec{i} + y_c \vec{j} + z_c \vec{k} \text{ avec } x_c^2 + y_c^2 + z_c^2 = 1$$

on obtient:

$$\cos \varphi_c = \frac{1}{M_c^2 M_{ce}} \left( y_c^2 V_{yz} - x_c y_c V_{xz} + x_c V_{xy} \right)$$

$$\sin \varphi_c = \frac{1}{M_c^2 M_{ce}} \left( -x_c y_c V_{yz} + x_c^2 V_{xz} + y_c V_{xy} \right)$$

$$\cos \varphi_e = -\frac{1}{M_e^2 M_{ce}} \left( y_e^2 V_{yz} - x_e y_e V_{xz} + x_e V_{xy} \right)$$

$$\sin \varphi_e = -\frac{1}{M_e^2 M_{ce}} \left( -x_e y_e V_{yz} + x_e^2 V_{xz} + y_e V_{xy} \right)$$

avec:

$$V_{yz} = y_c z_e - z_c y_e$$

$$V_{xz} = -x_c z_e + z_c x_e$$

$$V_{xy} = -x_c y_e + y_c x_e$$

$$M_c^2 = x_c^2 + y_c^2$$

$$M_e^2 = x_e^2 + y_e^2$$

$$M_{ce} = \sqrt{V_{yz}^2 + V_{xz}^2 + V_{xy}^2}$$

Toutefois, lorsque les dénominateurs sont nuls, les expressions ci-dessus doivent être remplacées par des valeurs limites.

**7.12.2. Algorithme:**

Une représentation fréquentielle bidimensionnelle est un tableau $M_{k,p,q}[i,j]$ de nombres complexes, de dimensions $N_{pix}$ x $N_{pix}$. $k$ est l'indice de l'image dans sa série, $p$ est l'indice du capteur sur lequel parvient le faisceau d'éclairage direct (0 ou 1) et $q$ a les valeurs suivantes:

$q$=0: image reçue sur le capteur ou parvient l'éclairage direct
$q$=1: image reçue sur l'autre capteur.

Outre l'image elle-même, ce programme génère également les tableaux:

$B_{k,p,q}[i,j]$ : indicateur de bruit
$H_{k,p,q}[i,j]$ : image de référence, correspondant à une représentation fréquentielle bidimensionnelle obtenue pour une direction fixe du faisceau. Cette image de référence a pour objet de pouvoir ultérieurement compenser les modifications de trajet optique dûes aux vibrations des miroirs inclus dans le système. Si ces vibrations sont faibles, l'image de référence peut n'être acquise que périodiquement. L'image de référence peut aussi être une image simplifiée, les critères de précision étant inférieurs à ceux de l'image « utile » $M_{k,p,q}[i,j]$. Pour simplifier la présentation, on suppose qu'une image de référence $H_{k,p,q}[i,j]$ de mêmes caractéristiques que l'image utile (excepté la direction du faisceau d'éclairage) est acquise pour chaque image utile $M_{k,p,q,}[i,j]$.

$BH_{k,p,q}[i,j]$ :indicateur de bruit de l'image de référence.
Une série de représentations fréquentielles bidimensionnelles est obtenue par calcul à partir d'une série d'images élémentaires correspondant à des figures d'interférences formées sur les capteurs CCD. Le programme d'acquisition des représentations fréquentielles bidimensionnelles se décompose donc en une phase d'acquisition d'images élémentaires et une phase de calcul. Ces deux phases peuvent être séparées, ou bien chaque image peut faire l'objet d'un calcul au fur et à mesure de l'acquisition. On se place ici dans le cas ou les deux phases sont séparées.

**7.12.2.1. acquisition des images élémentaires.**

La série d'images élémentaires peut être acquise en une seule fois par la caméra rapide, sans que des calculs quelconques soient effectués, les commandes des éléments de modification du faisceau devant être synchronisées avec l'acquisition d'images. Il s'agit d'une itération sur l'entier $k$ et l'entier $p$. La succession d'éclairages parallèles devant être utilisée doit être précisée par les tableaux $Ic[k,p]$,$Jc[k,p]$déterminant les indices 'symboliques' permettant de calculer pour chaque couple $(k,p)$ le mot de commande du déviateur de faisceau

$$COM\big[\,p, Ic[k,p], Jc[k,p]\big].$$

Pendant cette procédure les faisceaux FRG et FRD sont présents en permanence, chaque image élémentaire étant formée sur un capteur par l'interférence de l'onde de référence et de l'onde diffractée par l'échantillon, lui-même éclairé par des ondes d'éclairage de caractéristiques variables. Les miroirs (2282) (2243) (2232) (2247) sont obturés.
Pour chaque couple $(k,p)$, la prise d'images se décompose en deux phases:

*phase 1:* elle consiste en l'acquisition de 36 couples d'images élémentaires, un couple d'images comprenant une image provenant de chaque capteur, et les 36 couples différant entre eux par l'état de tous les systèmes de contrôle du faisceau excepté le déviateur de faisceau qui garde un état constant pour un couple $(k,p)$ donné. Ces 36 couples d'images élémentaires seront utilisés par la suite pour générer une représentation fréquentielle bidimensionnelle utile $M_{k,p,q}[i,j]$. On note une de ces images élémentaires $M0[k,p][c,d,r_1,r_2][q,i,j]$. Avant chaque prise d'image élémentaire les rotateurs de phase permettant le contrôle du faisceau d'éclairage (atténuation, décalage de phase, déviation et polarisation) doivent être commandés de manière appropriée.

L'indice c est déterminé par le tableau suivant, ou $att[c]$ constitue un tableau contenant l'atténuation correspondant à l'indice, et ou les valeurs $a_1$ et $a_2$ sont celles explicitées en 7.2.2., mesurées en 7.3.2.2., et ou l'atténuateur de faisceau est commandé comme explicité en 7.2.2.

| indice $c$ | atténuation $att[c]$ |
|---|---|
| 0 | 1 |
| 1 | $a_1$ |
| 2 | $a_1 \, a_2$ |

Les indices $d,r_1,r_2$ sont déterminés par les tableaux suivants:

| indice $d$ | décalage de phase (degrés) |
|---|---|
| 0 | +120 |
| 1 | 0 |
| 2 | -120 |

| indice $r_2$ | tension appliquée aux rotateurs (2210) et (2241) |
|---|---|
| 0 | 5V |
| 1 | -5V |

| indice $r_1$ | tension appliquée aux rotateurs (2238) et (2226) |
|---|---|
| 0 | 5V |
| 1 | -5V |

Un couple d'images élémentaires (correspondant aux deux valeurs de l'indice $q$) est obtenu pour chaque combinaison des indices $c,d,r_1,r_2$ et pour chaque direction d'éclairage définie par les indices $(k,p)$. Pour chaque direction d'éclairage $(k,p)$, on obtient donc 36 couples d'images élémentaires notés $M0[k,p][c,d,r_1,r_2][q,i,j]$.

Le filtre (2203) doit être réglé de manière à ce que le capteur ne soit jamais saturé, mais se rapproche autant que possible de la limite de saturation. De manière équivalente, il peut être réglé en l'abscence d'onde de référence pour que l'intensité maximale de l'onde parvenant au capteur en l'abscence d'atténuation du faisceau soit du quart du niveau maximal autorisé par la digitalisation du signal vidéo, soit 64 pour un digitaliseur 8 bits.

- *phase 2:* Elle consiste en l'acquisition de 36 images élémentaires de plus, qui seront utilisées pour générer l'image de référence. Cette phase est identique à la phase 1 mais:

- on notera

$$MR0[k,p][c,d,r_1,r_2][q,i,j]$$

une image élémentaire obtenue.

- le mot de commande utilisé pour obtenir

$$MR0[k,p][c,d,r_1,r_2][q,i,j] \text{ est } COM[p,Id[p,i_r,j_r],Jd[p,i_r,j_r]]$$

ou $i_r,j_r$ sont les coordonnées d'un point constant situé sur le coté du capteur, par exemple le point (3905) sur la Fig.56. représentant un capteur et sur laquelle le contour (3902) représente la limite correspondant à l'ouverture de l'objectif, qui ne peut pas être dépassée par les faisceaux d'éclairage. Ce mot de commande ne dépend donc pas de $k$. Les coordonnées $i_r,j_r$ peuvent être choisies de manière relativement arbitraire. Toutefois le choix d'un point (3905) fortement excentré permet que des points correspondant à des vecteurs fréquence totale ($f_t$ suivant les notations utilisées en 5.3.) de norme comparable puissent être obtenus à partir de chaque capteur. Pour des échantillons ne présentant pas de structures régulières spécifiques, de tels points correspondent à des valeurs complexes comparables sur les deux capteurs, ce qui améliore la fiabilité des résultats.

### 7.12.2.2. Calcul des représentations fréquentielles bidimensionnelles.

Après la phase d'acquisition, un programme spécifique doit être utilisé pour générer à partir de ces images élémentaires des images en nombres complexes et les indicateurs de bruit associés. Pour générer $M_{k,p,q}[i,j]$ et $B_{k,p,q}[i,j]$ le programme parcourt les indices $(k,p)$ en effectuant pour chaque couple $(k,p)$ les 3 étapes suivantes:

*étape 1:* génération du tableau indicateur d'atténuation.
ce tableau est un tableau d'entiers $M1[q,i,j]$ généré de la manière suivante: il est initialisé à 0, puis le programme parcourt l'ensemble des indices $q,i,j$ deux fois.

- premier parcours: le programme calcule

$$max\_pix = \max_{d,r_1,r_2}\left(M0[k,p][0,d,r_1,r_2][q,i,j]\right).$$

Si pour une valeur donnée de $q,i,j$ $max\_pix$ est égal à la valeur maximale du digitaliseur, alors le programme met à 1 ce pixels et ses voisins immédiats:

$$M1[q,i + iadd,j + jadd] = 1$$

pour *iadd* et *jadd* variant de -1 à 1, et à condition de ne pas sortir des limites du tableau.
- second parcours: le programme calcule

$$max\_pix = \max_{d,r_1,r_2}\left(M0[k,p][1,d,r_1,r_2][q,i,j]\right).$$

Si pour une valeur donnée de $q,i,j$ $mar\_pix$ est égal à la valeur maximale du digitaliseur, alors le programme met à 2 ce pixels et ses voisins immédiats:

$$M1[q,i + iadd, j + jadd] = 2$$

pour *iadd et jadd variant* de -1 à 1, et à condition de ne pas sortir des limites du tableau.

A l'issue de cette étape le tableau $M1[q,i,j]$ contient l'indice correspondant à l'atténuation devant être utilisée pour atténuer l'image.
*étape 2:* génération des images complexes correspondant à chaque position des rotateurs.

$$M2[r_1,r_2][q,i,j] = \frac{1}{att[M1[q,i,j]]}\left[\frac{1}{6\sqrt{Iref[\bar{p}q + p\bar{q},i,j]}}\left(2M0[k,p][M1[q,i,j],0,r_1,r_2][q,i,j]\right.\right.$$

$$\left.- M0[k,p][M1[q,i,j],1,r_1,r_2][q,i,j] - M0[k,p][M1[q,i,j],2,r_1,r_2][q,i,j]\right)$$

$$\left.+ \tilde{j}\frac{1}{2\sqrt{3Iref[\bar{p}q + p\bar{q},i,j]}}\left(M0[k,p][M1[q,i,j],1,r_1,r_2][q,i,j] - M0[k,p][M1[q,i,j],2,r_1,r_2][q,i,j]\right)\right]$$

*étape* 3: combinaison des images obtenues pour les diverses positions des rotateurs.

L'objet de cette étape 3 est de calculer $M_{k,p,q}[i,j]$ en fonction de

$$M2[r_1,r_2][q,i,j].$$

Ceci peut être réalisé simplement sans utiliser les variations de polarisation en effectuant :

$$M_{k,p,q}[i,j] = M2[1,1][q,i,j]$$

le bruit étant alors donné par:

$$B_{k,p,q}[i,j] = \frac{1}{att[M1[q,i,j]]}$$

La grandeur $M_{k,p,q}[i,j]$ ainsi générée correspond à celle qui était utilisée dans le premier mode de réalisation. Néanmoins, cette méthode induit des imprécisions sur les fréquences élevées et il est préférable d'utiliser le principe décrit en 7.12.1., ou $M2[r_1,r_2][q,i,j]$ correspond à la grandeur mesurée, qui était notée $C_{r_1,r_2}$ en 7.12.1. D'autres variantes de cette méthode seront décrites en 7.18.

L'étape 3 est donc içi réalisée comme suit:

Pour chaque valeur des indices $q,i,j$ le programme calcule:

$$po = p\bar{q} + \bar{p}q$$

$$x_c = \frac{i - \dfrac{N_{pix}}{2}}{\dfrac{n_o}{n_v}K_{po}}, \; y_c = \frac{j - \dfrac{N_{pix}}{2}}{\dfrac{n_o}{n_v}K_{po}}, \; z_c = \sqrt{1 - x_c^2 - y_c^2}$$

$$x_e = \frac{Ia[q,p,Ic[k,p],Jc[k,p]] - \dfrac{N_{pix}}{2}}{\dfrac{n_o}{n_v}K_{po}}, \; y_e = \frac{Ja[q,p,Ic[k,p],Jc[k,p]] - \dfrac{N_{pix}}{2}}{\dfrac{n_o}{n_v}K_{po}}, \; z_e = \sqrt{1 - x_e^2 - y_e^2}$$

$$V_{yz} = y_c z_e - z_c y_e$$

$$V_{xz} = -x_c z_e + z_c x_e$$

$$V_{xy} = -x_c y_e + y_c x_e$$

$$M_c^2 = x_c^2 + y_c^2$$

$$M_e^2 = x_e^2 + y_e^2$$

$$M_{ce} = \sqrt{V_{yz}^2 + V_{xz}^2 + V_{xy}^2}$$

Les valeurs de sin $\varphi_c$ cos $\varphi_c$ sin $\varphi_e$ cos $\varphi_e$ sont déterminées selon les tableaux d'affectation suivants:

| $M_{ce}$ | 0 | autre | |
|---|---|---|---|
| $M_c$ | | 0 | autre |
| $\cos\varphi_c$ | 1 | $-\dfrac{y_e}{M_e}$ | $\dfrac{1}{M_c^2 M_{ce}}\left(y_c^2 V_{yz} - x_c y_c V_{xz} + x_c V_{xy}\right)$ |
| $\sin\varphi_c$ | 0 | $\dfrac{x_e}{M_e}$ | $\dfrac{1}{M_c^2 M_{ce}}\left(-x_c y_c V_{yz} + x_c^2 V_{xz} + y_c V_{xy}\right)$ |

| $M_{ce}$ | 0 | autre | |
|---|---|---|---|
| $M_e$ | | 0 | autre |
| $\cos\varphi_e$ | -1 | $-\dfrac{y_c}{M_c}$ | $-\dfrac{1}{M_e^2 M_{ce}}\left(y_e^2 V_{yz} - x_e y_e V_{xz} + x_e V_{xy}\right)$ |
| $\sin\varphi_e$ | 0 | $\dfrac{x_c}{M_c}$ | $-\dfrac{1}{M_e^2 M_{ce}}\left(-x_e y_e V_{yz} + x_e^2 V_{xz} + y_e V_{xy}\right)$ |

puis les coefficients sont calculés:

$$coef[k,p,q,i,j][0,0] = -\cos\varphi_e \cos\varphi_c$$

$$coef[k,p,g,i,j][0,1] = -\sin\varphi_e \cos\varphi_c$$

$$coef[k,p,q,i,j][1,0] = -\cos\varphi_e \sin\varphi_c$$

$$coef[k,p,q,i,j][1,1] = -\sin\varphi_e \sin\varphi_c$$

Ces coefficients ne dépendent pas du résultat des prises d'images et dans le cas ou on répète toujours la même série ils peuvent être stockés dans un tableau plutôt que recalculés à chaque fois. C'est pourquoi on les a içi exprimé sous cette forme. Le programme utilise ensuite ces valeurs pour combiner les images obtenues avec les différentes positions des rotateurs de la manière suivante:

$$M_{k,p,q}[i,j] = \sum_{r_1,r_2} M2[r_1,r_2][q,i,j] coef[k,p,q,i,j][r_1,r_2]$$

$$M2[r_1, r_2][q, i, j]$$

correspond à la grandeur mesurée, qui était notée $C_{r_1, r_2}$ en 7.12.1
$M_{k,p,q}[i,j]$ correspond à la grandeur qui était notée $M$ en 7.12.1
Par ailleurs le programme calcule une amplitude de bruit:

$$B_{k,p,q}[i,j] = \frac{1}{att[M1[q,i,j]]}$$

Ce qui termine l'étape 3.

Lorsque le programme a calculé $M_{k,p,q}[i,j]$ et $B_{k,p,q}[i,j]$ il calcule également $H_{k,p,q}[i,j]$ et $BH_{k,p,q}[i,j]$. Ce second calcul est effectué de la même manière que le précédent, en trois étapes, mais

$$M0[k,p][c,d,r_1,r_2][q,i,j], \ M_{k,p,q}[i,j] \ \text{et} \ B_{k,p,q}[i,j]$$

sont remplacés respectivement par

$$MR0[k,p][c,d,r_1,r_2][q,i,j], H_{k,p,q}[i,j] \text{et} BH_{k,p,q}[i,j]$$

et dans l'étape 3 les affectations de $x_e$ et $y_e$ sont remplacées par

$$x_e = \frac{i_r - \frac{N_{pix}}{2}}{\frac{n_o}{n_v}K_{po}}, \ y_e = \frac{j_r - \frac{N_{pix}}{2}}{\frac{n_o}{n_v}K_{po}}$$

La procédure ci-dessus est celle qui permet le maximum de précision. Toutefois, en raison du nombre élevé d'images élémentaires requises, il peut être nécessaire d'utiliser une procédure plus rapide. Il est possible de ne pas utiliser les quatre images générées par la combinaison des indices $r_1, r_2$,comme dans le premier mode de réalisation dans lequel une seule image est générée. Il est également possible de ne pas utiliser l'atténuation de faisceau. La méthode la plus rapide consiste donc à n'utiliser que trois images élémentaires différant entre elles par leur phase. L'image de référence peut également être acquise seulement une fois sur dix (par exemple) de manière à limiter la perte de temps liée à son acquisition, et à condition que les vibrations ne soient pas trop importantes. L'image de référence peut être simplifiée de la même manière que l'image utile, mais cette simplification aura en général moins de conséquences sur la qualité des résultats. Il peut donc être utile de la simplifier d'avantage que l'image utile.

**7.13. Calcul des indices de commande.**

Le tableau d'indices de commande est le tableau *Id* qui permet d'associer à des coordonnées en pixels

$$(i,j)$$

et à un capteur *p* des indices de commande virtuels

$$(Id[p,i,j], Jd[p,i,j])$$

tels que le mot de commande

$$COM\big(p, Id[p,i,j], Jd[p,i,j]\big)$$

génère un éclairage éclairant un point aussi proche que possible du point de coordonnées ($i,j$) sur le capteur $p$. Ce tableau est généré par l'algorithme de la Fig.53. Dans cette algorithme, $E(x)$ désigne l'entier le plus proche de $x$. Avant de lancer cet algorithme, le tableau $D$ doit être initialisé à une valeur élevée, par exemple 100000. A l'issue de ce programme le tableau $D$ contient pour chaque point la distance entre ce point et le point le plus proche obtenu pour le point d'impact direct d'une onde d'éclairage. La double boucle de l'algorithme,

$$\big(i_0, j_0\big) \text{ et sur } \big(i_1, j_1\big)$$

permet de définir des valeurs

$$Id[p,i,j], Jd[p,i,j]$$

y compris pour des points qui ne correspondent pas exactement au point d'impact du faisceau direct.

Une trajectoire du point d'impact direct peut être définie par les tableaux

$$\big(Io[k], Jo[k]\big)$$

définissant en fonction de l'indice k les coordonnées du point d'impact direct souhaité. Par exemple si la trajectoire est un cercle de rayon R pixels on peut avoir: $Io[k] = R\cos\frac{k}{R}$, $Jo[k] = R\sin\frac{k}{R}$ pour k allant de 0 à $2\pi R$.

Les tableaux définissant les indices de commande en fonction de k et $p$ sont obtenus à partir de $Io[k]$ et $Jo[k]$ par:

$$Id[k, p] = Id\big[p, Io[k], Jo[k]\big] \text{ et } Jd[k, p] = Jd\big[p, Io[k], Jo[k]\big]$$

### 7.14. Différence de marche induite sur les ondes issues de l'objet.

La Fig.54 illustre le calcul de la différence de marche d'une onde issue d'un point $O$ de l'objet par rapport à l'onde de référence issue virtuellement d'un point $A$ d'un milieu d'indice $n_v$ (indice nominal des objectifs). On a:

$$\Delta = n_0 l_0 - n_v l_v$$

$$\Delta = n_0 d_0 \cos\beta - n_v d_v \cos\alpha$$

avec

$$n_0 \sin\beta = n_v \sin a$$

d'ou finalement:

$$\Delta = n_0 d_0 \sqrt{1 - \left(\frac{n_v}{n_0}\sin\alpha\right)^2} - n_v d_v \sqrt{1 - \sin^2\alpha}$$

La Fig. 55 illustre le calcul de la différence de marche entre une onde issue d'un point $O$ de l'objet et l'onde de référence issue virtuellement du point $A_p$ ou $p$ est l'indice du capteur considéré. Les coordonnées de $A_p$ par rapport à un repère centré en $O$ et de vecteurs directeurs $\vec{i}_p, \vec{j}_p, \vec{k}_p$ sont $x_p, y_p, z_p$ et la distance entre $O$ et le bord de l'objet du coté du capteur $p$ est $w_p$. Les vecteurs $\vec{i}_p, \vec{j}_p, \vec{k}_p$ sont définis comme indiqué en 7.7. On vérifie que conformément à l'orientation des axes sur la Fig.55, les vecteurs de base des repères utilisés dans chaque demi-espace repéré par l'indice capteur $p$ vérifient: $\vec{i}_0 = -\vec{i}_1, \vec{j}_0 = -\vec{j}_1, \vec{k}_0 = -\vec{k}_1$.

Lorsque $x_p = y_p = 0$ on peut appliquer la formule précédente:

$$\Delta = n_0 d_0 \sqrt{1 - \left(\frac{n_v}{n_0}\sin\alpha\right)^2} - n_v d_v \sqrt{1 - \sin^2\alpha}$$

avec

$$d_0 = w_p$$

$$d_v = w_p - z_p$$

$$\sin^2\alpha = \frac{i^2 + j^2}{K_p^2}$$

ou $i,j$ sont des coordonnées en pixels prises à partir du centre optique du capteur.

Si on tient compte également de $x_p, y_p$ il faut ajouter à cette différence de marche la quantité :

$$n_v\left(x_p\frac{i}{K_p} + y_p\frac{j}{K_p}\right)$$

et on obtient finalement pour la différence de marche totale:

$$\Delta_p = n_0 w_p \sqrt{1 - \left(\frac{n_v}{n_0}\right)^2 \frac{i^2 + j^2}{K_p^2}} - n_v(w_p - z_p)\sqrt{1 - \frac{i^2 + j^2}{K_p^2}} + n_v\left(x_p\frac{i}{K_p} + y_p\frac{j}{K_p}\right)$$

En particulier on peut positionner le point O de manière à avoir

$$\left(x_p, y_p, z_p\right) = \left(\frac{x}{2}, \frac{y}{2}, \frac{z}{2}\right)$$

ou $x,y,z$ sont les coordonnées déterminées en 7.11. On a alors:

$$\Delta_p = n_0 w_p \sqrt{1 - \left(\frac{n_v}{n_0}\right)^2 \frac{i^2+j^2}{K_p{}^2}} - n_v\left(w_p - \frac{z}{2}\right)\sqrt{1 - \frac{i^2+j^2}{K_p{}^2}} + n_v\left(\frac{x}{2}\frac{i}{K_p} + \frac{y}{2}\frac{j}{K_p}\right)$$

Pour obtenir une représentation fréquentielle de l'objet, les représentations fréquentielles bidimensionnelles devront être corrigées pour compenser cette différence de marche. Dans cette expression, seules les valeurs de $w_p$ n'ont pas encore été déterminées.

### 7.15. Calcul de $w_p$:

### 7.15.1. Principe:

Pour corriger les représentations fréquentielles bidimensionnelles du facteur de phase détermine en 7.14., il est nécessaire de déterminer préalablement les valeurs $w_p$, c'est-à-dire en fait la seule valeur $w_0$ puisque $w_1$ s'en déduit par $w_1 = L - w_0$.
Si l'indice moyen de l'objet est proche de l'indice nominal des objectifs, l'effet de $w_p$ sur la valeur $\Delta_p$ est négligeable et on peut par exemple adopter la valeur $w_p = \frac{L}{2}$ et positionner l'échantillon entre les deux objectifs visuellement, en ajustant cette position ultérieurement pour obtenir une image de la zone d'intérêt de cet échantillon.
Il est également possible d'ajouter une couche réfléchissante sur le coté d'une des lamelles qui est en contact avec l'objet, par exemple celle qui se trouve du coté de l'objectif (2217), sur une zone de dimensions réduite. Lorsque le faisceau FRD et son indicateur inverse sont utilisés seuls et lorsque la partie réfléchissante est positionnée de manière à réfléchir le faisceau indicateur inverse de FRD, alors la figure d'interférences formée sur le capteur (2239) doit être une constante. La position de l'échantillon doit alors être ajustée pour obtenir effectivement une telle constante. Lorsque cet ajustement a été opéré, on a $w_0 = \frac{z}{2}$. Si un positionneur suffisamment précis est utilisé, la position de l'échantillon peut alors être modifiée dans le sens de l'axe optique pour obtenir $w_0 = \frac{L}{2}$. La position de l'échantillon doit enfin être modifiée dans le sens orthogonal à l'axe optique de manière à ce que la zone réfléchissante de la lamelle se trouve hors du champ d'observation.
Cependant les deux méthodes précédentes imposent des contraintes pratiques qui peuvent être gênantes. Une solution permettant d'éviter cette difficulté est d'effectuer la détermination de $w_p$ à partir de mesures effectuées sur l'échantillon dans sa position définitive.
Une représentation fréquentielle *Fa* peut être obtenue à partir de l'ensemble des représentations fréquentielles bidimensionnelles issues du capteur 0 (2239) lorsque le point d'impact direct de l'onde d'éclairage est sur ce même capteur, et parcourt sur ce capteur, par exemple, la trajectoire représentée en pointillés Fig.56. Cette représentation est obtenue de manière très semblable à la méthode utilisée dans le premier mode de réalisation, avec cependant les différences suivantes:

- La représentation fréquentielle bidimensionnelle doit être multipliée par le facteur de correction

$$e^{-j2\pi\frac{\Delta_p}{\lambda}}$$

pour annuler le déphasage produit par l'aberration sphérique.
- la valeur du coefficient *K* pris en compte doit être multipliée par un facteur $\frac{n_o}{n_v}$ pour prendre en compte l'indice moyen dans l'échantillon.
- Afin de limiter les phénomènes de repliement de la fonction de correction, la représentation fréquentielle est suréchantillonnée.
- Lorsqu'un point de l'espace des fréquences est obtenu plusieurs fois, la valeur retenue est une des valeurs obtenues et non la moyenne des valeurs obtenues.

En principe, la représentation fréquentielle ainsi obtenue ne dépend pas du choix de la valeur retenue quand un point de l'espace des fréquences est obtenu plusieurs fois. Toutefois, ceci n'est vrai que si le facteur de correction a une valeur correcte.
Dans ces conditions, et compte tenu de l'expression de la fonction de correction

$$e^{-j2\pi\frac{\Delta_p}{\lambda}},$$

la valeur de la représentation fréquentielle bidimensionnelle *Fa* ainsi obtenue, en un point de l'espace des fréquences de coordonnées *ni,nj,nk*, peut s'écrire sous la forme:

$$Fa[ni,nj,nk] = Fs[ni,nj,nk]\exp\left(-j2\pi G[ni,nj,nk]w_0\right)$$

Lorsqu'un point de l'espace des fréquences est obtenu plusieurs fois, les valeurs *Fs*[*ni,nj,nk*] et *G*[*ni,nj,nk*] obtenues sont à chaque fois différentes. Pour chaque point, on définit *Gmin*[*ni,nj,nk*] et *Gmax*[*ni,nj,nk*], valeurs minimale et maximale obtenues pour *G* en ce point. *Fsmin*[*ni,nj,nk*] et *Fsmax*[*ni,nj,nk*] sont alors les valeurs obtenues pour *Fs* [*ni,nj,nk*] lorsque *G*[*ni,nj,nk*] vaut respectivement *Gmin*[*ni,nj,nk*] et *Gmax*[*ni,nj,nk*].
On obtient alors les deux représentations fréquentielles:

$$Famin[ni,nj,nk] = Fsmin[ni,nj,nk]\exp\left(-j2\pi Gmin[ni,nj,nk]w_0\right)$$

$$Famax[ni,nj,nk] = Fsmax[ni,nj,nk]\exp\left(-j2\pi Gmax[ni,nj,nk]w_0\right)$$

Lorsque la valeur de $w_0$ est correcte, ces deux représentations sont égales. Le calcul de $w_0$ consiste à minimiser l'écart-type entre les deux représentations fréquentielles *Famin* et *Famax*. L'écart-type à minimiser est en principe:

$$ecart = \sum_{ni,nj,nk}\left|Famax[ni,nj,nk] - Famin[ni,nj,nk]\right|^2$$

Toutefois, le bruit n'étant pas constant sur l'ensemble de la représentation fréquentielle, chaque élément de cette somme doit être pondéré par l'inverse du bruit au point considéré et on obtient:

$$ecart = \sum_{ni,nj,nk}\left|\frac{Famax[ni,nj,nk] - Famin[ni,nj,nk]}{Btot[ni,nj,nk]}\right|^2$$

ou *Btot*[*ni,nj,nk*] est une amplitude de bruit définie en chaque point.
En développant l'expression de cet écart-type on obtient une expression simplifiée qui facilite le calcul de minimisation.

### 7.15. 2. Algorithme:

Le calcul de $w_p$ se fait à l'aide d'un programme dont l'algorithme est décrit Fig.57. Ce programme doit disposer au départ des informations suivantes:

- valeurs établies en 7.11.: *x,y,z,L,* $n_0$
- paramètre de fonctionnement *wpixels,* par exemple *wpixels*=5.

Les étapes essentielles de ce programme sont les suivantes:

- (4001): acquisition des images. Une série d'images est obtenue en faisant parcourir au point d'impact direct du faisceau d'éclairage la trajectoire représentée en pointillés sur la Fig. 56, ou (3901) représente la limite de la zone utile du capteur, (3902) représente la limite correspondant à l'ouverture maximale des objectifs, (3903) représente une partie circulaire de la trajectoire et (3904) représente une partie rectiligne de la trajectoire. Comme indiqué en 7.13. on génère les tableaux $Io[k]$ $Jo[k]$ selon cette trajectoire et le programme calcule les indices de commande correspondants $Ic[k,p]$ $Jc[k,p]$. Le programme effectue alors l'acquisition de la série d'images selon la procédure indiquée en 7.12. La procédure d'acquisition génère les tableaux $M_{k,p,q}[i,j]$. Toutefois, seuls les tableaux correspondant à des indices $q,p$ nuls seront utilisés ici, soit $M_{k,0,0}[i,j]$.

- (4002): calcul de *Fsmin, Gmin, Fsmax, Gmax, Btot*

*Etape 1:* Chaque tableau $M_{k,0,0}[i,j]$ obtenu lors de la phase d'acquisition est d'abord suréchantillonné de la manière suivante, en 3 étapes:

*Etape 1.1.*: le programme effectue la transformée de Fourier bidimensionnelle inverse du tableau $M_{k,0,0}$
*Etape 1.2.*: le programme complète ce tableau par des zéros pour obtenir un tableau $Ms_k$ de dimensions $N_d$ x $N_d$ (par exemple $N_d$ =512). $Ms_k$ est initialisé à 0 puis le programme parcourt les indices $i,j$ du tableau $M_{k,0,0}$ en effectuant:

$$Ms_k\left[\frac{N_d}{2}+i-\frac{N_{pix}}{2}\right] = M_{k,0,0}[i,j]$$

*Etape 1.3.*: une transformée de Fourier directe du tableau $Ms_k$ est effectuée, ce qui termine la phase de sutéchantillonnage.

*Etape 2*: Les éléments de chaque tableau $Ms_k$ sont rapportés à la valeur obtenue au point d'impact direct de l'onde d'éclairage:

$$Ms_k[i,j] = \frac{Ms_k[i,j]}{Ms_k[imax_k, jmax_k]}$$

ou on note:

$$imax_k = E\left(\frac{N_d}{N_{pix}} Ia[0,0, Ic[k,0], Jc[k,0]]\right)$$

$$jmax_k = E\left(\frac{N_d}{N_{pix}} Ja[0,0, Ic[k,0], Jc[k,0]]\right)$$

ou E(x) désigne l'entier le plus proche de x.

*Etape* 3: Lorsque le programme a ainsi généré l'ensemble des tableaux suréchantillonnés $Ms_k$ il calcule une amplitude de bruit suréchantillonnée sous forme d'un ensemble de tableaux de réels positifs $Bs_k$ de dimensions $N_d$ x $N_d$. A cette fin il parcourt les indices $i,j,k$ ou $i$ et $j$ varient entre 0 et $N_d$-1 en effectuant:

$$Bs_k[i,j] = \max_{\substack{i/r-2\leq i_1\leq i/r+2 \\ j/r-2\leq j_1\leq j/r+2}} \left(B_{k,0,0}[i_1,j_1]\right) \quad \text{avec: } r = \frac{N_d}{N_{pix}}$$

Dans cette équation, lorsque le couple $i_1, j_1$ est en dehors des limites du tableau $B_{k,0,0}$ le coefficient $B_{k,0,0}[i_1, j_1]$ est supposé égal à 0.

*Etape 4*: Le programme initialise à 0 les tableaux *Fsmin, Fsmax,* il initialise respectivement à $10^{20}$ et $-10^{20}$ les tableaux *Gmin* et *Gmax*, et il initialise à $10^{20}$ les tableaux *Bmin,Bmax*. Ces tableaux ont chacun pour dimensions $2 N_d$ x $2 N_d$ x $2 N_d$.

Le programme parcourt ensuite les indices *i,j,k* où *i* et *j* varient de 0 à $N_d$ -1 en effectuant pour chaque triplet (*i,j,k*) les étapes suivantes, numérotées de 4.1 à 4.3:

*étape 4.1.*: calcul des indices de la représentation fréquentielle tridimensionnelle. Le programme effectue les opérations suivantes:

$$ni = i - imax_k + N_d$$

$$nj = j - jmax_k + N_d$$

$$nk = \sqrt{\left(r\frac{n_o}{n_v}K_0\right)^2 - \left(i - \frac{N_d}{2}\right)^2 - \left(j - \frac{N_d}{2}\right)^2} - \sqrt{\left(r\frac{n_o}{n_v}K_0\right)^2 - \left(imax_k - \frac{N_d}{2}\right)^2 - \left(jmax_k - \frac{N_d}{2}\right)^2} + N_d$$

avec:

$$r = \frac{N_d}{N_{pix}}$$

Les valeurs *ni,nj,nk* correspondent à des coordonnées dans un espace tridimensionnel de fréquences comme dans le premier mode de réalisation. Leur calcul menant à des valeurs non entières, on leur affecte l'entier le plus proche de la valeur obtenue. La valeur de *K* doit être corrigée pour tenir compte de l'indice de l'échantillon et on utilise donc $\frac{n_o}{n_s}K_0$. Le coefficient r permet la prise en compte du suréchantillonnage.

*étape 4.2.*: calcul des valeurs de *G* et *Fs* au point courant:

$$Gval = \frac{1}{\lambda}\left\{\left(n_0\sqrt{1 - \left(\frac{n_v}{n_0}\right)^2\frac{ic^2 + jc^2}{r^2 K_0^2}} - n_v\sqrt{1 - \frac{ic^2 + jc^2}{r^2 K_0^2}}\right) - \left(n_0\sqrt{1 - \left(\frac{n_v}{n_0}\right)^2\frac{imc^2 + jmc^2}{r^2 K_0^2}} - n_v\sqrt{1 - \frac{imc^2 + jmc^2}{r^2 K_0^2}}\right)\right\}$$

$$Fsval = Ms_k[i,j]e^{-\tilde{j}\frac{2\pi}{\lambda}n_v\left\{\left(\frac{z}{2}\sqrt{1 - \frac{ic^2 + jc^2}{r^2 K_0^2}} + \frac{x}{2}\frac{ic}{rK_0} + \frac{y}{2}\frac{jc}{rK_0}\right) - \left(\frac{z}{2}\sqrt{1 - \frac{imc^2 + jmc^2}{r^2 K_0^2}} + \frac{x}{2}\frac{imc}{rK_0} + \frac{y}{2}\frac{jmc}{rK_0}\right)\right\}}$$

avec: $ic = i - \frac{N_d}{2}$, $jc = j - \frac{N_d}{2}$, $imc = imax_k - \frac{N_d}{2}$, $jmc = jmax_k - \frac{N_d}{2}$

Dans les équations ci-dessus, *ic,jc,imc,jmc* correspondent à des coordonnées ramenées au centre optique et *r* a la même valeur que dans l'étape précédente.

*étape 4.3.*: modification éventuelle des valeurs de *Gmin,Fsmin,Gmax,Fsmax*.

Le programme teste la valeur de *Gval*.

Si $Gval \leq Gmin[ni,nj,nk]$ le programme effectue:

$$Gmin[ni,nj,nk] = Gval$$

$$Fsmin[ni,nj,nk] = Fsval$$

$$Bmin[ni,nj,nk] = Bs_k[i,j]$$

Si $Gval \geq Gmax[ni,nj,nk]$ le programme effectue:

$$Gmax[ni,nj,nk] = Gval$$

$$Fsmax[ni,nj,nk] = Fsval$$

$$Bmax[ni,nj,nk] = Bs_k[i,j]$$

*Etape 5*: Le programme génère une amplitude globale de bruit. A cet effet il parcourt les indices *ni,nj,nk* en effectuant pour chacun de ces triplets l'opération

$$Btot[ni,nj,nk] = \sqrt{|Bmax[ni,nj,nk]|^2 + |Bmin[ni,nj,nk]|^2}$$

(4003): La fonction calculée est en principe égale à:

$$ecart = \sum_{(ni,nj,nk)\in Es} \left| \frac{Fsmin[ni,nj,nk]e^{-\tilde{j}2\pi Gmin[ni,nj,nk]w_0} - Fsmax[ni,nj,nk]e^{-\tilde{j}2\pi Gmax[ni,nj,nk]w_0}}{Btot[ni,nj,nk]} \right|^2$$

ou *Es* est l'ensemble des points en lesquels les valeurs de *Gmin* et *Gmax* diffèrent, soit:

$$Es = \{ni,nj,nk \,|\, Gmax[ni,nj,nk] \neq Gmin[ni,nj,nk]\}$$

Soit en développant l'expression:

$$ecart = \sum_{(ni,nj,nk)\in Es} \left| \frac{Fsmin[ni,nj,nk]}{Btot[ni,nj,nk]} \right|^2 + \left| \frac{Fsmax[ni,nj,nk]}{Btot[ni,nj,nk]} \right|^2$$

$$-2 \sum_{(ni,nj,nk)\in Es} \mathrm{Re}\left( \frac{Fsmin[ni,nj,nk]\overline{Fsmax[ni,nj,nk]}}{|Btot[ni,nj,nk]|^2} e^{-\tilde{j}2\pi(Gmin[ni,nj,nk]-Gmax[ni,nj,nk])w_0} \right)$$

La première partie de l'expression ne dépend pas de $w_0$. Minimiser l'écart-type revient donc à maximiser la fonction suivante ou Re() désigne la partie réelle:

$$\sum_{(ni,nj,nk)\in Es} \mathrm{Re}\left( \frac{Fsmin[ni,nj,nk]\overline{Fsmax[ni,nj,nk]}}{|Btot[ni,nj,nk]|^2} e^{-\tilde{j}2\pi(Gmin[ni,nj,nk]-Gmax[ni,nj,nk])w_0} \right)$$

Toutefois cette fonction présente des fréquences élevées causant des repliements de spectre qui perturbent la convergence de l'algorithme. Ceux-ci sont supprimés en utilisant la fonction:

$$f\left(w,\Delta w\right) = \sum_{(ni,nj,nk)\in Es}\left\{\mathrm{Re}\left[\left(\frac{Fsmin[ni,nj,nk]\,\overline{Fsmax[ni,nj,nk]}}{\left\|Btot[ni,nj,nk]\right\|^2}\right)\exp\left(-\tilde{j}\,2\pi\left(Gmin[ni,nj,nk]-Gmax[ni,nj,nk]\right)w_0\right)\right]\right.$$
$$\left.\gamma\left(\left(Gmin[ni,nj,nk]-Gmax[ni,nj,nk]\right)\Delta w\right)\right\}$$

ou $\gamma(x) = 0$ quand $|x| \geq \frac{1}{2}$ et $\gamma(x) = 1$ quand $|x| < \frac{1}{2}$

(4004): l'algorithme itère la boucle sur *wlarg* jusqu'à ce qu'une précision suffisante soit atteinte. Par exemple on peut avoir $lim = \frac{\lambda}{8} wpixels$

(4005): La valeur $w_f$ affichée correspond à $w_0$. On a: $w_1 = L\text{-}w_f$ et $w_0 = w_f$
La valeur *rapport* affichée correspond à:

$$rapport = \frac{2f\left(w_f,\dfrac{wlarg}{wpixels}\right)}{\displaystyle\sum_{(ni,nj,nk)\in Es}\left(\dfrac{\left\|Fsmin[ni,nj,nk]\right\|^2 + \left\|Fsmax[ni,nj,nk]\right\|^2}{\left\|Btot[ni,nj,nk]\right\|^2}\right)}$$

La valeur *rapport* affichée caractérise la qualité du recoupement obtenu entre les images calculées à partir des représentations fréquentielles *Famin* et *Famax.* Plus elle est proche de 1 meilleur ce recoupement est. Lorsque l'échantillon est hors de la zone d'observation cette valeur se rapproche de 0.

### 7.15.3. Focalisation

Le réglage de focalisation consiste à positionner correctement l'échantillon dans la zone d'observation des objectifs. Lors de ce réglage, les valeurs de *rapport* et $w_f$ doivent être recalculées en permanence. La position de l'échantillon doit être ajustée selon l'axe (2263) de manière à obtenir une valeur suffisamment élevée de *rapport,* puis elle peut être ajustée plus finement de manière à obtenir par exemple $w_f = \frac{L}{2}$.
Ce réglage permet en général une première focalisation. Toutefois, si par exemple l'indice $n_o$ est proche de $n_v$, cette focalisation est très imprécise.
Dans tous les cas, ce réglage doit ultérieurement être complété par une focalisation plus précise sur la zone d'intérêt, comme indiqué en 7.17.3.

### 7.16. Obtention de la fonction de compensation des aberrations.

La fonction

$$e^{-j2\pi\frac{\Delta}{\lambda}}$$

permettant en principe de corriger les déphasages introduits par l'objet et correspondant à l'aberration sphérique comporte des fréquences élevées qui sont filtrées par le diaphragme. Elle ne peut donc pas être utilisée directement et il est nécessaire de la filtrer pour obtenir sous forme d'un tableau de dimensions $N_{pix}$ x $N_{pix}$ une fonction de correction utilisable.
La fonction de compensation des aberrations, qui sera utilisée dans la phase d'imagerie, est obtenue de la manière suivante:

*Etape 1:* génération des tableaux $Ds_p$ de dimensions $N_c$ x $N_e$ avec par exemple $N_e = 4096$:

$$Ds_p[i,j] = \exp\left[-\tilde{j}\,\frac{2\pi}{\lambda}\left(n_0 w_p \sqrt{1-\left(\frac{n_\nu}{n_0}\right)^2 \frac{ic^2+jc^2}{r^2 K_p{}^2}} - n_\nu\left(w_p - \frac{z}{2}\right)\sqrt{1-\frac{ic^2+jc^2}{r^2 K_p{}^2}} + n_\nu\left(\frac{x}{2}\frac{ic}{rK_p} + \frac{y}{2}\frac{jc}{rK_p}\right)\right)\right]$$

avec $ic = i - \dfrac{N_c}{2}$, $jc = j - \dfrac{N_c}{2}$, $r = \dfrac{N_c}{N_{pix}}$
le tableau $Ds_p$ correspond à la fonction

$$e^{-j2\pi\frac{\Delta}{\lambda}}$$

échantillonnée avec un pas suffisamment fin pour éviter le repliement de spectre.

*Etape* 2: transformation de Fourier inverse des tableaux $Ds_p$

*Etape* 3: extraction de la partie centrale du tableau, de dimensions $N_{pix}$ x $N_{pix}$ avec simulation du diaphragme. Le programme effectue:

$$D_p[i,j] = Ds_p\left[i - \frac{N_{pix}}{2} + \frac{N_c}{2}, j - \frac{N_{pix}}{2} + \frac{N_c}{2}\right]$$

pour tous les couples (*i,j*) tels que

$$\left(i - \frac{N_{pix}}{2}\right)^2 + \left(j - \frac{N_{pix}}{2}\right)^2 \le \left(\frac{N_{pix}}{2}\right)^2$$

ou *ouv* est l'ouverture des objectifs.

*Etape 4*: transformation de Fourier du tableau $D_p$.

On obtient alors sous la forme du tableau $D_p$ la fonction de correction utilisable.

### 7.17. Réalisation d'images tridimensionnelles.

### 7.17.1. principe

### 7.17.1.1. Superposition des représentations fréquentielles.

On a vu que pour un faisceau d'éclairage donné (indice *k,p*) on obtient deux images bidimensionnelles correspondant aux deux capteurs et repérées par l'indice *q*. Lorsqu'on fait parcourir au point d'impact direct la trajectoire de la Fig. 56 sur le capteur numéro 0, on peut générer à partir des images bidimensionnelles obtenues sur les deux capteurs une représentation fréquentielle. La Fig.58 montre comment un ensemble de représentations fréquentielles bidimensionnelles engendre une représentation tridimensionnelle. Une représentation bidimensionnelle est composée d'une portion de sphère (4101) obtenue sur le capteur numéro 0 et d'une portion de sphère (4102) obtenue sur le capteur numéro 1. Lorsque le point d'impact direct se déplace sur une trajectoire transverse (3904) le mouvement de ces portions de sphères engendre un volume. Sur la figure 58, on a représenté un ensemble de telles portions de sphères, obtenues pour diverses positions du point d'impact direct sur une trajectoire transverse. Lorsque le point d'impact direct se déplace sur le cercle (3903) le volume (4104) délimité par (4105) est engendré en plus. Lorsque le point d'impact direct est sur le capteur numéro 1, un volume symétrique est généré.

On distingue quatre représentations fréquentielles tridimensionnelles partielles que l'on notera $F_{p,q}$ ou le couple (*p,q*) désigne un couple (capteur recevant l'onde d'éclairage directe, capteur dont les représentations bidimensionnelles permettant de générer $F_{p,q}$ sont issues) avec *p*=0 pour le capteur (2239), *p*=1 pour (2229), *q*=0 quand il désigne le même capteur que *p* et *q*=1 quand il désigne le capteur opposé. La représentation tridimensionnelle finale est obtenue par superposition de ces représentations tridimensionnelles partielles.

La représentation fréquentielle complète obtenue est représentée en coupe sur la Fig.59 Elle est composée:

- d'une partie (4111) obtenue par le capteur 0 ou 1 recevant le point d'impact direct du faisceau, et correspondant aux représentations $F_{0,0}$ et $F_{1,0}$ qui occupent la même partie de l'espace des fréquences.
- d'une partie (4113) obtenue par le capteur 1 lorsque le point d'impact direct du faisceau est sur le capteur 0, et correspondant donc à la représentation $F_{0,1}$.
- d'une partie (4112) obtenue par le capteur 0 lorsque le point d'impact direct du faisceau est sur le capteur 1, et correspondant donc à la représentation $F_{1,1}$.

Pour obtenir exactement ce volume il faut en principe parcourir toutes les valeurs de fréquence possibles, c'est-à-dire $N_{pix}$ x $N_{pix}$ valeurs sur chaque capteur, moins les valeurs se trouvant hors de la zone limitée par l'ouverture de l'objectif. Néanmoins en utilisant la trajectoire réduite de la Fig. 56 on obtient un volume peu différent de celui dessiné.

La trajectoire de la Fig.56 constitue toutefois un simple exemple et divers types de trajectoire pourront être utilisées en pratique. On donne ci-dessous quelques exemples:

- Un cercle comme dans le premier mode de réalisation.
- La trajectoire de la Fig.56, qui permet l'obtention d'images de meilleure définition.
- La trajectoire de la Fig.56 rendue moins dense. On peut par exemple utiliser un pixel sur deux le long de cette trajectoire. Ceci a pour effet de limiter l'épaisseur des échantillons pouvant être observés dans de bonnes conditions.
- Une trajectoire complète, c'est-à-dire définie par les tableaux $Io[k]$ et $Jo[k]$ tels que le point de coordonnées ($Io[k]$, $Jo[k]$) parcoure l'ensemble du disque limité par l'ouverture de l'objectif. Ceci signifie que chaque pixel compris dans le disque limité par le cercle (3902) de la Fig.56 doit être atteint une et une seule fois. Cette trajectoire n'apporte qu'une faible amélioration de la définition par rapport à celle de la Fig.56 et augmente considérablement le temps d'acquisition. Par contre, les conditions normales d'utilisation de ce microscope nécessitent que le faisceau diffracté reste de faible intensité par rapport au faisceau d'éclairage. L'utilisation d'une trajectoire complète rend le système plus robuste quand on ne respecte pas ces conditions d'utilisation.

### 7.17.1.2. Référence de phase et d'intensité

Afin de pouvoir combiner les représentations fréquentielles bidimensionnelles pour obtenir les représentations fréquentielles tridimensionnelles partielles, il est nécessaire de leur établir une référence commune de phase et d'intensité.

- les valeurs complexes des ondes reçues sur le capteur éclairé directement peuvent être rapportées à la valeur de l'onde d'éclairage en son point d'impact direct, comme dans le premier mode de réalisation ou dans le calcul de $w_p$.
- Une méthode plus élaborée est nécessaire pour les ondes reçues sur le capteur opposé. Les éclairages de référence sont utilisés pour établir un rapport caractéristique de la variation de phase sur chaque capteur et ce rapport est pris en compte pour annuler ces variations avant de se rapporter à la valeur de l'onde d'éclairage en son point d'impact direct. Ceci permet de rendre cohérentes entre elles toutes les représentations bidimensionnelles correspondant à un couple $p,q$ donné, indépendamment des vibrations affectant le système, et donc d'établir pour chaque couple $p,q$ une représentation fréquentielle tridimensionnelle.

Cependant, ceci ne permet pas d'établir la relation de phase entre chacune de ces représentations fréquentielles tridimensionnelles, qu'il est nécessaire de connaître pour les combiner en une représentation fréquentielle unique. La relation de phase entre, par exemple, les représentations fréquentielles tridimensionnelles $F_{0,0}$ et $F_{0,1}$, qui correspondent respectivement aux parties (4111) et (4113) de la représentation tridimensionnelle de l'ensemble, peut être établie lorsque ces deux parties ont une zone commune (4114). Il suffit de choisir la différence de phase qui fait coincider au mieux ces deux représentations sur leur zone commune. Pour qu'il y ait une zone commune il est nécessaire que l'ouverture de l'objectif soit suffisante. La condition d'existence de cette zone commune se détermine géométriquement et est:

$$n_0 < \frac{3}{2\sqrt{2}} ouv$$

ou $ouv$ est l'ouverture de l'objectif. Par exemple pour une ouverture de 1.4 on obtient un indice maximal de l'échantillon de $n_0 = 1,48$.

Lorsque les deux représentations $F_{0,0}$ et $F_{0,1}$ ne se recoupent pas, il est à priori impossible de déterminer leur relation de phase: en effet toute relation de phase correspond à une représentation fréquentielle possible. Une représentation de l'objet en absorptivité et indice peut toutefois être obtenue à partir de $F_{0,0}$ seule, ou une représentation de l'objet ne différenciant pas l'indice et l'absorptivité peut être obtenue à partir de $F_{0,1}$ seule en extrayant le module de la représentation spatiale obtenue en utilisant seulement $F_{0,1}$.

### 7.17.1.2. Décalage de phase entre deux tableaux bruités.

On considère deux tableaux à une dimension $A[i]$ et $B[i]$ ou $i$ varie de 0 à $N$-1. Les éléments de $A$ (resp.$B$) sont affectés chacun par un bruit gaussien indépendant dont l'écart-type est contenu dans un tableau $GA[i]$ (resp.$GB[i]$). Ces tableaux $A$ et $B$ étant supposés égaux à un rapport constant de phase et d'intensité près et au bruit près, on cherche à déterminer ce rapport de phase et d'intensité, que l'on notera x, et qui vaudrait en l'abscence de bruit $x_{(sans\ bruit)} = \frac{B[i]}{A[i]}$.

La valeur recherchée pour $x$ est celle qui maximise la quantité

$$P\left(x \middle| A, B\right),$$

représentant la probabilité d'une valeur de $x$ connaissant les tableanx $A$ et $B$. Maximiser cette quantité revient à maximiser

$$P\left(B \middle| A, x\right).$$

Pour une valeur donnée de x, et dans le cas ou les valeurs de $B[i]$ et $A[i]$ sont suffisamment au-dessus du niveau de bruit, la loi donnant $B[i]$ à partir de $A[i]$ est la composée de deux lois gaussiennes d'écart-types respectifs $|x|GA[i]$ et $GB[i]$. C'est donc une loi gaussienne d'écart-type

$$\sqrt{|x|^2 \left(GA[i]\right)^2 + \left(GB[i]\right)^2} \ .$$

On a donc:

$$P\left(B \middle| A, x\right) = \prod_i \exp\left\{-\frac{\left|B[i] - xA[i]\right|^2}{|x|^2 \left(GA[i]\right)^2 + \left(GB[i]\right)^2}\right\}$$

Dans les cas qui nous intéresseront par la suite $|x|$ est toujours proche de 1. On a donc:

$$P\left(B \middle| A, x\right) \approx \prod_i \exp\left\{-\frac{\left|B[i] - xA[i]\right|^2}{\left(GA[i]\right)^2 + \left(GB[i]\right)^2}\right\}$$

Maximiser cette quantité revient à minimiser la quantité:

$$\sum_i \frac{\left|B[i] - xA[i]\right|^2}{\left(GA[i]\right)^2 + \left(GB[i]\right)^2}$$

qui vaut, après division par le facteur

$$\frac{|A[i]|^2}{(GA[i])^2 + (GB[i])^2}$$

indépendant de $x$:

$$\frac{\sum_i \frac{|B[i]|^2}{(GA[i])^2 + (GB[i])^2}}{\sum_i \frac{|A[i]|^2}{(GA[i])^2 + (GB[i])^2}} - x\frac{\sum_i \frac{A[i]\overline{B[i]}}{(GA[i])^2 + (GB[i])^2}}{\sum_i \frac{|A[i]|^2}{(GA[i])^2 + (GB[i])^2}} - \bar{x}\frac{\sum_i \frac{\overline{A[i]}B[i]}{(GA[i])^2 + (GB[i])^2}}{\sum_i \frac{|A[i]|^2}{(GA[i])^2 + (GB[i])^2}} + |x|^2$$

On vérifie que cette quantité est égale à:

$$\left| x - \frac{\sum_i \frac{\overline{A[i]}B[i]}{(GA[i])^2 + (GB[i])^2}}{\sum_i \frac{|A[i]|^2}{(GA[i])^2 + (GB[i])^2}} \right|^2 + \frac{\sum_i \frac{|B[i]|^2}{(GA[i])^2 + (GB[i])^2}}{\sum_i \frac{|A[i]|^2}{(GA[i])^2 + (GB[i])^2}} - \left| \frac{\sum_i \frac{\overline{A[i]}B[i]}{(GA[i])^2 + (GB[i])^2}}{\sum_i \frac{|A[i]|^2}{(GA[i])^2 + (GB[i])^2}} \right|^2$$

La solution minimisant cette quantité est donc:

$$x = \frac{\sum_i \frac{\overline{A[i]}B[i]}{(GA[i])^2 + (GB[i])^2}}{\sum_i \frac{|A[i]|^2}{(GA[i])^2 + (GB[i])^2}}$$

Cette formule simple n'est cependant valable que si les valeurs de $B[i]$ et $A[i]$ sont suffisamment au-dessus du niveau de bruit. Une manière d'éviter les valeurs ne respectant pas cette conditions est de limiter les sommations de la manière suivante:

$$x = \frac{\sum_{i \in E} \frac{\overline{A[i]}B[i]}{(GA[i])^2 + (GB[i])^2}}{\sum_{i \in E} \frac{|A[i]|^2}{(GA[i])^2 + (GB[i])^2}}$$

avec

$$E = \left\{ i \left| \frac{\left|\overline{A[i]}B[i]\right|}{\left(GA[i]\right)^2 + \left(GB[i]\right)^2} \geq Coef \cdot \max_j \left( \frac{\left|\overline{A[j]}B[j]\right|}{\left(GA[j]\right)^2 + \left(GB[j]\right)^2} \right) \right. \right\}$$

c'est-à-dire que les sommations sont limitées à l'ensemble *E* des valeurs de *i* telles que

$$\frac{\left|\overline{A[i]}B[i]\right|}{\left(GA[i]\right)^2 + \left(GB[i]\right)^2}$$

soit supérieur au produit de sa valeur maximale par un coefficient *Coef* qui peut par exemple être égal à 0,5.
On fera fréquemment usage de cette méthode par la suite, généralisée à 2 ou 3 dimensions, pour déterminer l'écart de phase entre deux représentations fréquentielles se recoupant partiellement.

### 7.17.1.3. Combinaison d'une série d'éléments bruités.

On considère un tableaux à une dimension $A[i]$ ou $i$ varie de 0 à $N$-1. Les éléments de *A* sont affectés chacun par un bruit gaussien indépendant dont l'écart-type est contenu dans un tableau $GA[i]$. En l'abscence de bruit les éléments de *A* sont tous égaux à une valeur *x* que l'on veut déterminer. *x* est la grandeur qui maximise

$$P(x|A).$$

Maximiser cette quantité revient à maximiser

$$P(A|x).$$

Or on a:

$$P(A|x) = \prod_i \left\{ -\frac{\left|x - A[i]\right|^2}{\left(GA[i]\right)^2} \right\}$$

Maximiser cette quantité revient à minimiser la quantité suivante:

$$\sum_i \frac{\left|x - A[i]\right|^2}{\left(GA[i]\right)^2}$$

Qui vaut, après division par la quantité

$$\sum_i \frac{1}{\left(GA[i]\right)^2}$$

indépendante de $x$:

$$\frac{\sum_i \frac{|A[i]|^2}{\left(GA[i]\right)^2}}{\sum_i \frac{1}{\left(GA[i]\right)^2}} - x \frac{\sum_i \frac{\overline{A[i]}}{\left(GA[i]\right)^2}}{\sum_i \frac{1}{\left(GA[i]\right)^2}} - \bar{x} \frac{\sum_i \frac{A[i]}{\left(GA[i]\right)^2}}{\sum_i \frac{1}{\left(GA[i]\right)^2}} + |x|^2$$

On vérifié que cette quantité est égale à:

$$\left| x - \frac{\sum_i \frac{A[i]}{\left(GA[i]\right)^2}}{\sum_i \frac{1}{\left(GA[i]\right)^2}} \right|^2 + \frac{\sum_i \frac{|A[i]|^2}{\left(GA[i]\right)^2}}{\sum_i \frac{1}{\left(GA[i]\right)^2}} - \left| \frac{\sum_i \frac{A[i]}{\left(GA[i]\right)^2}}{\sum_i \frac{1}{\left(GA[i]\right)^2}} \right|^2$$

La solution x qui la minimise est donc:

$$x = \frac{\sum_i \frac{A[i]}{\left(GA[i]\right)^2}}{\sum_i \frac{1}{\left(GA[i]\right)^2}}$$

Le bruit sur $x$ est alors donné par l'addition en valeur quadratique des bruits sur chaque $A[i]$:

$$\sigma_x^2 = \frac{\sum_i \frac{\left(GA[i]\right)^2}{\left(GA[i]\right)^4}}{\left(\sum_i \frac{1}{\left(GA[i]\right)^2}\right)^2}$$

On vérifie que ceci équivaut à:

$$\frac{1}{\sigma_x^2} = \sum_i \frac{1}{\left(GA[i]\right)^2}$$

On fera également usage de ce résultat, pour déterminer une représentation fréquentielle à partir de plusieurs représentations partielles se recoupant en certains points.

**7.17.2 algorithme.**

Une série d'images est d'abord acquise comme indiqué en 7.12., le point d'impact direct du faisceau d'éclairage parcourant sur chaque capteur une trajectoire définie comme indiqué en 7.17.1.1. Pour simplifier l'exposé, on sépare içi la phase d'acquisition et la phase de calcul. Cependant, les représentations fréquentielles tridimensionnelles $F_{p,q}$ peuvent également être générées au fur et à mesure de l'acquisition. Par exemple, si une trajectoire complète est utilisée, la séparation des phases d'acquisition et de calcul nécessite une mémoire très importante et il est donc préférable d'effectuer le calcul au fur et à mesure de l'acquisition.

La phase d'acquisition génère les tableaux suivants:

$M_{k,p,q}[i,j]$, correspondant à la prise de vue principale

$B_{k,p,q}[i,j]$ indicateur de bruit

$H_{k,p,q}[i,j]$ prise de vue de référence pour la k-ième acquisition,

$BH_{k,p,q}[i,j]$ indicateur de bruit de l'image de référence

$k$ indiciant la prise de vue, $p$ le capteur éclairé par le faisceau direct, $q$ indiquant:

$q$=0: capteur éclairé par le faisceau direct

$q$=1: capteur opposé.

La série d'indices de commande utilisée étant définie par les tableaux $Ic$ et $Jc$, le programme génère aussi la série des coordonnées des points d'impact direct et inversé des faisceaux d'éclairage.

$$imax_{k,p,q} = Ia\big[p,q,Ic[k,p],Jc[k,p]\big]$$

$$jmax_{k,p,q} = Ja\big[p,q,Ic[k,p],Jc[k,p]\big]$$

A partir de cet ensemble de données un programme génère une représentation tridimensionnelle spatiale de l'objet étudié. Ce programme comporte les étapes suivantes:

*Etape 1*. Cette étape consiste à calculer le rapport caractéristique du décalage de phase et d'amplitude dû aux vibrations et aux fluctuations d'intensité du laser, entre une prise de vue de référence d'indice $k$=0 et la prise de vue de référence courante d'indice $k$. Ce décalage est caractérisé par les variations de la fonction $H_{k,p,q}[i,j]$ qui en l'abscence de vibrations devrait être constante. Pour tous les triplets ($k,p,q$) le programme calcule donc, selon la méthode vue en 7.17.2., le rapport:

$$R_{k,p,q} = \cfrac{\displaystyle\sum_{(i,j)\in E_{k,p,q}} \cfrac{H_{0,p,q}[i,j]\overline{H_{k,p,q}[i,j]}}{\big|BH_{k,p,q}[i,j]\big|^2 + \big|BH_{0,p,q}[i,j]\big|^2}}{\displaystyle\sum_{(i,j)\in E_{k,p,q}} \cfrac{\big|H_{k,p,q}[i,j]\big|^2}{\big|BH_{k,p,q}[i,j]\big|^2 + \big|BH_{0,p,q}[i,j]\big|^2}}$$

avec:

$$E_{k,p,q} = \left\{ (i,j) \left| \frac{\left| H_{0,p,q}[i,j] \overline{H_{k,p,q}[i,j]} \right|}{\left| BH_{k,p,q}[i,j] \right|^2 + \left| BH_{0,p,q}[i,j] \right|^2} \geq Coef \cdot \max_{\substack{0 \leq a \leq N_{pix}-1 \\ 0 \leq b \leq N_{pix}-1}} \left( \frac{\left| H_{0,p,q}[a,b] \overline{H_{k,p,q}[a,b]} \right|}{\left| BH_{k,p,q}[a,b] \right|^2 + \left| BH_{0,p,q}[a,b] \right|^2} \right) \right. \right\}$$

et par exemple $Coef=0,5$.

*Etape 2*: cette étape consiste à effectuer l'opération consistant à:

- normaliser chaque représentation bidimensionnelle pour compenser les variations de décalages de phase et d'amplitude dûs aux vibrations, caractérisés par la quantité $R_{k,p,q}$
- compenser l'aberration sphérique et le mauvais positionnement relatif des objectifs, caractérisés par

$$D_{p\vec{q}+\vec{p}q}[i,j]$$

- se ramener à la valeur de l'onde d'éclairage en son point d'impact direct.

Le programme parcourt donc les indices $k,p,q,i,j$ en effectuant:

$$M_{k,p,q}[i,j] = \frac{M_{k,p,q}[i,j] D_{p\bar{q}+\bar{p}q}[i,j] R_{k,p,q}}{M_{k,p,0}\left[ imax_{k,p,0}, jmax_{k,p,0} \right] D_p\left[ imax_{k,p,0}, jmax_{k,p,0} \right] R_{k,p,0}}$$

$$B_{k,p,q}[i,j] = B_{k,p,q}[i,j] \left| \frac{D_{p\bar{q}+\bar{p}q}[i,j] R_{k,p,q}}{M_{k,p,0}\left[ imax_{k,p,0}, jmax_{k,p,0} \right] D_p\left[ imax_{k,p,0}, jmax_{k,p,0} \right] R_{k,p,0}} \right|$$

L'utilisation du tableau $D_p$, qui est le résultat des étapes 7.11, 7.15, et 7.16., permet d'améliorer nettement les résultats lorsque l'indice moyen de l'objet diffère de l'indice nominal des objectifs. Toutefois, il est également possible de ne pas effectuer les étapes 7.11, 7.15. et 7.16.. Le réglage de position des objectifs décrit en 7.10 doit alors être effectué de manière à obtenir une image spatiale centrée et ponctuelle. Le tableau $D_p$ doit alors être mis à 1.

L'utilisation des valeurs $R_{k,p,q}$ permet de compenser d'éventuelles vibrations de la table optiquè. Toutefois, si la table optique est parfaitement stable, cette compensation n'est pas nécessaire. Les valeurs $R_{k,p,q}$ doivent alors être mises à 1.

*Etape 3*: Cette étape consiste à calculer pour chaque couple $(p,q)$ une représentation fréquentielle tridimensionnelle $F_{p,q}$, assortie d'un tableau $IB_{p,q}$ de réels, contenant l'inverse du carré de l'écart-type du bruit gaussien affectant chaque élément du tableau $F_{p,q}$. Ces tableaux sont de dimensions $2 N_{pix}$ x $2 N_{pix}$ x $2 N_{pix}$. Chaque point d'une représentation fréquentielle bidimensionnelle correspond à un point de la représentation fréquentielle tridimensionnelle $F_{p,q}$, dont les coordonnées doivent être déterminées. Lorsqu'un point est obtenu plusieurs fois, la valeur la plus probable est déterminée.

Le programme initialise les tableaux $F_{p,q}$, $IB_{p,q}$ à zéro puis parcourt l'ensemble des indices $p,q,k,i,j$ en effectuant pour chaque quintuplet $(p,q,k,i,j)$ les opérations suivantes, numérotées de 1 à 3:

*opération 1*: calcul des indices de la représentation fréquentielle tridimensionnelle. Le programme effectue:

$$ni = a_p \left( i - imax_{k,p,q} \right) + N_{pix}$$

$$nj = a_p \left( j - jmax_{k,p,q} \right) + N_{pix}$$

$$nk = \sqrt{K_m^2 - a_p^2\left(i - \frac{N_{pix}}{2}\right)^2 - a_p^2\left(j - \frac{N_{pix}}{2}\right)^2} - \sqrt{K_m^2 - a_p^2\left(imax_{k,p,q} - \frac{N_{pix}}{2}\right)^2 - a_p^2\left(jmax_{k,p,q} - \frac{N_{pix}}{2}\right)^2} + N_{pix}$$

Une distance d'un pixel, mesurée sur le capteur $p$, correspond à un écart de fréquence réel proportionnel à $\frac{1}{K_0}$. Les pixels ne représentent donc pas les mêmes écarts de fréquence sur les deux capteurs. On se ramène à une unité commune et proportionnelle aux écarts de fréquence en multipliant les distances obtenues sur le capteur $p$ par le coefficient $a_p = \frac{K_0 + K_1}{2K_p}$.

La valeur de K devient alors commune aux deux capteurs et vaut $\frac{K_0 + K_1}{2}$. Elle doit être corrigée pour tenir compte de l'indice de l'échantillon et on obtient donc $K_m = \frac{n_o}{n_x}\frac{K_0 + K_1}{2}$.

*opération 2:* modification des indices de la représentation fréquentielle tridimensionnelle dans le cas *q=1*.

Si *q=1*, la fréquence correspondant aux coordonnées $imax_{k,p,q}$, $jmax_{k,p,q}$ n'est pas la fréquence nulle. En effet on a en ce point, en reprenant les notations utilisées en 5.3. : $f_c = -f_e$ et donc $f_t = f_c - f_e = -2f_e$. La fréquence obtenue par la méthode précédente doit donc être translatée d'un vecteur $-2f_e$ ce qui se traduit par les opérations supplémentaires suivantes, effectuées seulement dans le cas *q=1*:

$$ni+ = 2a_p imax_{k,p,l}$$

$$nj+ = 2a_p jmax_{k,p,l}$$

$$nk+ = 2\sqrt{K_m^2 - a_p^2\left(imax_{k,p,l} - \frac{N_{pix}}{2}\right)^2 - a_p^2\left(jmax_{k,p,l} - \frac{N_{pix}}{2}\right)^2}$$

Le calcul des indices *ni,nj,nk* menant à des valeurs non entières, on leur affecte l'entier le plus proche de la valeur calculée.

*opération 3*: modification des éléments de tableaux.

Les indices modifiés ayant été générés, le programme modifie les éléments de tableaux:

$$IB_{p,q}[ni,nj,nk]+ = \frac{1}{\left|B_{k,p,q}[i,j]\right|^2}$$

$$F_{p,q}[ni,nj,nk]+ = \frac{M_{k,p,q}[i,j]}{\left|B_{k,p,q}[i,j]\right|^2}$$

*Etape 4*: Il reste une opération à effectuer pour obtenir la valeur la plus probable sur chaque fréquence. Le programme parcourt donc les indices *p,q,ni,nj,nk* en effectuant, à chaque fois que $IB_{p,q}[ni,nj,nk] \neq 0$, l'opération:

$$F_{p,q}[ni,nj,nk] = \frac{F_{p,q}[ni,nj,nk]}{IB_{p,q}[ni,nj,nk]}$$

*Etape 5*: Les repères dans lesquels ont été évalués les indices *i,j* et donc *ni,nj,nk* sont inversés entre les deux capteurs. Il est donc nécessaire d'effectuer un changement de repère des représentations correspondant au capteur indicé 1 pour les exprimer dans le même repère que les représentations correspondant au capteur indicé 0. Le programme effectue donc le changement de variables $ni \rightarrow 2N_{pix} - ni$, $nj \rightarrow 2N_{pix} - nj$, $nk \rightarrow 2N_{pix} - nk$ dans les tableaux correspondant au capteur indicé 1 afin d'exprimer l'ensemble des fréquences dans le même repère.

Les tableaux correspondant à une représentation fréquentielle issue du capteur 1 ont un indice $p$ égal à 1 ou 0 et un indice $q$ égal à $\bar{p}$ .

Pour effectuer ces changements de variable le programme parcourt l'ensemble des indices $p,ni,nj,nk$ en effectuant:

$$F_{p,\bar{p}}[ni,nj,nk] = F_{p,\bar{p}}\left[2N_{pix} - ni, 2N_{pix} - nj, 2N_{pix} - nk\right]$$

$$IB_{p,\bar{p}}[ni,nj,nk] = IB_{p,\bar{p}}\left[2N_{pix} - ni, 2N_{pix} - nj, 2N_{pix} - nk\right]$$

*Etape 6*: Le programme calcule le rapport caractéristique du décalage de phase et d'amplitude entre l'onde reçue sur le capteur éclairé directement et celle reçue sur le capteur non éclairé. Il parcourt donc les indices $p=0$, $p=1$ en effectuant, conformément au principe vu en 7.17.1.2.:

$$Rb_p = \frac{\sum\limits_{(ni,nj,nk)\in E_p}\left[\dfrac{F_{p,0}[ni,nj,nk]\overline{F_{p,1}[ni,nj,nk]}}{\dfrac{1}{IB_{p,0}[ni,nj,nk]} + \dfrac{1}{IB_{p,1}[ni,nj,nk]}}\right]}{\sum\limits_{(ni,nj,nk)\in E_p}\left[\dfrac{\left|F_{p,1}[ni,nj,nk]\right|^2}{\dfrac{1}{IB_{p,0}[ni,nj,nk]} + \dfrac{1}{IB_{p,1}[ni,nj,nk]}}\right]}$$

Dans cette expression les sommes sont restreintes à un ensemble $E_p$ constitué des triplets ($ni,nj,nk$) vérifiant

$$IB_{p,0}[ni,nj,nk]\,IB_{p,1}[ni,nj,nk] \neq 0$$

et

$$\frac{\left|F_{p,0}[ni,nj,nk]\overline{F_{p,1}[ni,nj,nk]}\right|}{\dfrac{1}{IB_{p,0}[ni,nj,nk]} + \dfrac{1}{IB_{p,1}[ni,nj,nk]}} \geq Coef \cdot \max_{\substack{0\leq a\leq 2N_{pix}-1 \\ 0\leq b\leq 2N_{pix}-1 \\ 0\leq c\leq 2N_{pix}-1}}\left(\frac{\left|F_{p,0}[a,b,c]\overline{F_{p,1}[a,b,c]}\right|}{\dfrac{1}{IB_{p,0}[a,b,c]} + \dfrac{1}{IB_{p,1}[a,b,c]}}\right)$$

avec par exemple *Coef* = 0,5

*Etape 7*: Le programme modifie les représentations tridimensionnelles obtenues à partir de capteurs non éclairés directement. Il parcourt les *indices p, ni,nj,nk* en effectuant:

$$F_{p,1}[ni,nj,nk] = F_{p,1}[ni,nj,nk].Rb_p$$

*Etape 8*: Le programme calcule la représentation fréquentielle finale, contenue dans un tableau F de dimensions $2N_{pix}$ x $2N_{pix}$ x $2N_{pix}$. Il initialise à 0 ce tableau puis parcourt les indices $ni,nj,nk$ en testant la condition:

$$\sum_{p,q} IB_{p,q}[ni,nj,nk] \neq 0$$

Lorsque la condition est réalisée il effectue:

$$F[ni,nj,nk] = \frac{\sum_{p,q} F_{p,q}[ni,nj,nk] IB_{p,q}[ni,nj,nk]}{\sum_{p,q} IB_{p,q}[ni,nj,nk]}$$

*Etape 9*: Le programme effectue une transformation de Fourier tridimensionnelle inverse de la représentation fréquentielle ainsi obtenue pour obtenir une représentation spatiale.

*Etape 10*: Comme dans le premier mode de réalisation, le programme peut alors visualiser la représentation ainsi obtenue sous forme de coupes ou de projections éventuellement stéréoscopiques.

### 7.17.4. Focalisation

L'algorithme décrit en 7.17.2. permet l'obtention de représentations tridimensionnelles de l'échantillon. Le réglage de focalisation consiste à régler la position de l'objet de manière à ce que ces représentations soient celles d'une zone d'intérêt de l'échantillon. Ceci peut être réalisé par l'opérateur qui déplace l'échantillon tout en observant par exemple une projection plane ou une coupe de cette représentation tridimensionnelle, et déplace l'objet pour obtenir une image de la zone d'intérêt. Si un déplacement de l'échantillon dans la direction de l'axe optique est effectué, celui-ci modifie les valeurs de $w_p$, et la procédure décrite en 7.15.2. doit être réitérée pour obtenir une valeur correcte de $w_p$.

### 7.18. Variantes.

Les algorithmes utilisés dans le présent mode de réalisation admettent de nombreuses variantes dont certaines sont exposées ci-après.

### 7.18.1. Utilisation des valeurs préenregistrées du faisceau d'éclairage direct

Cette variante consiste à modifier l'étape 2 de l'algorithme décrit en 7.17.2. de manière à utiliser les valeurs préenregistrées de l'éclairage direct. On a en effet, à un facteur de phase près qui est constant sur l'ensemble des valeurs de *k,p, imax*$_{k,p,0}$*jmax*$_{k,p,0}$:

$$M_{k,p,0}\left[imax_{k,p,0}, jmax_{k,p,0}\right] = \frac{Ra[p, Ic[k,p], Jc[k,p]] Rb[p, Ic[k,p], Jc[k,p]]}{R_{k,p,0}}$$

Cette valeur peut être introduite dans la formule utilisée à l'étape 2, qui est donc remplacée par:

$$M_{k,p,q}[i,j] = \frac{M_{k,p,q}[i,j] D_{p\bar{q}+\bar{p}q}[i,j] R_{k,p,q}}{Ra[p, Ic[k,p], Jc[k,p]] Rb[p, Ic[k,p], Jc[k,p]] D_p[imax_{k,p,0}, jmax_{k,p,0}]}$$

### 7.18.2. Utilisation des valeurs précalculées du faisceau d'éclairage direct

*Rb[p, Ic[k, p], Jc[k, p]]* est en principe égal à la fonction obtenue en 7.7. :

$$e^{\tilde{j}2\pi\frac{\Delta}{\lambda}} = \exp\left\{\tilde{j}\frac{2\pi}{\lambda}\left[n_v\left(x\frac{i}{K_p}+y\frac{j}{K_p}+z\frac{1}{K_p}\sqrt{K_p^2-i^2-j^2}\right)+L\left(n_o\sqrt{1-\left(\frac{n_v}{n_o}\right)^2\frac{i^2+j^2}{K_p^2}}-n_v\sqrt{1-\frac{i^2+j^2}{K_p^2}}\right)\right]\right\}$$

cette fonction étant toutefois filtrée par le diaphragme. Il est donc possible de remplacer

$$Rb\left[p,Jc[k,p],Jc[k,p]\right]$$

par

$$RB_p\left[imax_{k,p,0},jmax_{k,p,0}\right]$$

ou la fonction $RB_p[i,j]$ est obtenue de la manière suivante (cette méthode d'obtention est similaire à celle utilisée pour $D_p[i,j]$ en 7.16.)

*Etape 1*: génération des tableaux $RB_p$ de dimensions $N_e$ x $N_e$ avec par exemple $N_e$ =4096:

$$RB_p[i,j] = \exp\left\{\tilde{j}\frac{2\pi}{\lambda}\left[n_v\left(x\frac{ic}{K_p}+y\frac{jc}{K_p}+z\frac{1}{K_p}\sqrt{K_p^2-ic^2-jc^2}\right)+L\left(n_o\sqrt{1-\left(\frac{n_v}{n_o}\right)^2\frac{ic^2+jc^2}{K_p^2}}-n_v\sqrt{1-\frac{ic^2+jc^2}{K_p^2}}\right)\right]\right\}$$

avec $ic = i - \frac{N_e}{2}$, $jc = j - \frac{N_e}{2}$, $r = \frac{N_e}{N_{pix}}$
*Etape 2*: transformation de Fourier inverse des tableaux $RB_p$
*Etape 3*: extraction de la partie centrale du tableau, de dimensions $N_{pix}$ x $N_{pix}$ avec simulation du diaphragme. Le programme effectue:

$$RB_p[i,j] = RB_p\left[i-\frac{N_{pix}}{2}+\frac{N_c}{2},j-\frac{N_{pix}}{2}+\frac{N_c}{2}\right]$$

pour tous les couples $(i,j)$ tels que

$$\left(i-\frac{N_{pix}}{2}\right)^2+\left(j-\frac{N_{pix}}{2}\right)^2\leq\left(\frac{N_{pix}}{2}\right)^2$$

*Etope 4*: transformation de Fourier du tableau $RB_p$.
On obtient alors sous la forme du tableau $RB_p$ la fonction équivalente au tableau $Rb$
L'étape 2 de l'algorithme décrit en 7.17.2. est alors remplacée par:

$$M_{k,p,q}[i,j] = \frac{M_{k,p,q}[i,j]D_{p\bar{q}+\bar{p}q}[i,j]R_{k,p,q}}{Ra\left[p,Jc[k,p],Jc[k,p]\right]RB_p\left[imax_{k,p,0},jmax_{k,p,0}\right]D_p\left[imax_{k,p,0},jmax_{k,p,0}\right]}$$

Ce remplacement est équivalent à un « lissage » de la fonction définie par le tableau *Rb* et peut dans certains cas améliorer les résultats, en particulier si l'onde diffractée est forte, sortant des conditions d'utilisation normales de

ce microscope. Dans ce cas on combinera cette formule avec l'utilisation d'une trajectoire complète comme définie en 7.17.1.1.

### 7.18.3. Obtention de représentations confocales

Un microscope confocal permet l'obtention de représentations spatiales tridimensionnelles, que l'on appellera représentations confocales. Le présent microscope permet l'obtention d'une représentation confocale strictement équivalente à celle qui seraient obtenue à l'aide d'un microscope confocal.

En effet, l'onde d'éclairage utilisée par un microscope confocal est la somme des ondes planes utilisées dans le cas ou on utilise pour l'acquisition une trajectoire complète, chaque onde plane devant se voir affecter une phase dépendant du point éclairé. L'onde équivalente à l'onde reçue par un microscope confocal de même ouverture que le présent microscope, lorsque le point central est éclairé, peut donc être générée en sommant les représentations bidimensionnelles d'ondes diffractées obtenues pour l'ensemble des ondes d'éclairage formant une trajectoire complète.

On peut montrer que la représentation confocale de l'objet est la transformée de Fourier inverse d'une représentation fréquentielle tridimensionnelle obtenue en sommant les représentations fréquentielles bidimensionnelles partielles obtenues à partir de chaque onde d'éclairage, l'ensemble des ondes d'éclairage parcourant une trajectoire complète.

En outre, un microscope confocal n'acquiert des images que sur un seul objectif et n'éclaire l'échantillon que par un seul coté. De plus il génère une valeur qui est l'intensité de l'onde ayant traversé l'objet et non sa valeur complexe. La représentation confocale en intensité s'obtient donc à partir des ondes reçues par un seul objectif, et en extrayant le carré du module de la représentation confocale précédemment obtenue. Enfin, le microscope confocal ne corrige pas l'aberration sphérique dûe à l'indice de l'objet.

Une représentation confocale peut donc être obtenue par le présent microscope, en utilisant pour l'acquisition une trajectoire complète comme définie en 7.17.1.1. et en modifiant la procédure décrite au paragraphe 17.2. de la manière suivante:

(1) L'étape 2 est modifiée de la manière suivante:

$$M_{k,p,q}[i,j] = \frac{M_{k,p,q}[i,j]D_{p\bar{q}+\bar{p}q}[i,j]R_{k,p,q}}{Ra[p,Ic[k,p],Jc[k,p]]RB_p[imax_{k,p,0},jmax_{k,p,0}]D_p[imax_{k,p,0},jmax_{k,p,0}]}$$

ou les tableaux $D_p$ peuvent être mis à 1 si on ne souhaite pas corriger l'aberration sphérique et ou $RB_p$ est défini comme en 7.17.3.2.

(2)- l'opération 3 de l'étape 3 est remplacée par $F_{p,q}[ni,nj,nk] += M_{k,p,q}[i,j]$

(3)- les étapes 4,5,6,7 ne sont pas effectuées.

(4)- l'étape 8 est remplacée par $F[ni,nj,nk] = F_{po,qo}[ni,nj,nk]$ ou le choix des indices ($po,qo$) dépend du type de représentation confocale que l'on cherche à générer.

- si ($po,qo$) = (0,0) ou ($po,qo$) = (1,0) on génère une représentation correspondant à celle qui serait obtenue par un microscope confocal par réflexion.
- si ($po,qo$) = (0,1) ou ($po,qo$) = (1,1) on génère une représentation correspondant à celle qui serait obtenue par un microscope confocal par transmission.

(5)- le carré du module de la représentation spatiale obtenue à l'issue de l'étape 9 correspond alors à la représentation confocale en intensité.

Le fait de remplacer le calcul de la valeur la plus probable de la représentation fréquentielle en chaque point a pour conséquences une surévaluation des basses fréquences par rapport aux hautes fréquences, ce qui équivaut à un filtrage des fréquences élevées et donc à une perte de définition.

Il est également possible d'obtenir une représentation confocale à partir de la représentation fréquentielle tridimensionnelle obtenue conformément au paragraphe 17 non modifié: en effet, la représentation tridimensionnelle de l'objet constitue l'information la plus complète possible qui puisse être obtenue avec des objectifs d'ouverture donnée et peut être utilisée pour simuler tout type d'image qui pourrait être générée à partir de tout type de microscope utilisant le même objectif et la même longueur d'onde.

Cependant, l'utilisation d'une trajectoire complète rend le système plus robuste, conformément à ce qui a été dit en 7.17.1.1. Si une représentation confocale est obtenue en utilisant une trajectoire comme celle de la Fig.56, elle sera perturbée dans le cas ou une partie importante de l'onde d'éclairage est diffractée, et ce de manière plus importante que la représentation confocale obtenue à l'aide d'un microscope confocal ou par utilisation d'une trajectoire complète. Elle ne peut donc pas être considérée comme rigoureusement équivalente à celle générée par un microscope confocal.

### 7.18.4. Réalisation d'images tridimensionnelles avec contrôle de l'onde de référence.

Dans les méthodes décrites précédemment, le dispositif de décalage de phase (2205) est commandé pour générer des déphasages $\theta_d$ de l'onde d'éclairage dépendants de l'indice $d$ conformément au tableau indiqué en 7.12.2.1.

Pour réaliser la présente variante, ce dispositif de décalage de phase discret doit être remplacé par un dispositif permettant un décalage de phase continu. Un tel dispositif peut être un dispositif à cristaux liquides placé entre deux polariseurs, commercialisé par exemple par la société Newport. Moyennant une modification de la trajectoire du faisceau, ce dispositif peut également être un miroir piézoélectrique comme dans le premier mode de réalisation.

La présente variante consiste, lors de l'acquisition d'image prévue en 7.17.2. et effectuée comme indiqué en 7.12.2.1., à commander le dispositif de décalage de phase de manière à remplacer le décalage de phase $\theta_d$ par un décalage de phase

$$\Theta_d = \theta_d - \mathrm{Arg}\left(\frac{Ra\big[p,Ic[k,p],Jc[k,p]\big]Rb\big[p,Ic[k,p],Jc[k,p]\big]}{R_{k,p,0}}\right)$$

ou Arg désigne l'argument d'un nombre complexe. Ceci permet d'annuler la phase de l'onde d'éclairage en son point d'impact direct et rend non nécessaire la compensation de cette phase. Pendant la phase de calcul décrite en 7.17.2., dans l'étape 2, la formule utilisée peut alors être remplacée par:

$$M_{k,p,q}[i,j] = \frac{M_{k,p,q}[i,j]D_{p\bar{q}+\bar{p}q}[i,j]R_{k,p,q}}{D_p\big[imax_{k,p,0},jmax_{k,p,0}\big]R_{k,p,0}}$$

Ce mode revient à contrôler le déphasage des faisceaux d'éclairage par le dispositif de décalage de phase au lieu de le compenser par calcul après l'acquisition.

### 7.18.5. Obtention de représentations fréquentielles sans calcul de l'onde reçue sur la surface de réception.

Si la table optique est de qualité suffisante pour supprimer les vibrations, la formule utilisée en 7.18.4. devient:

$$M_{k,p,q}[i,j] = \frac{M_{k,p,q}[i,j]D_{p\bar{q}+\bar{p}q}[i,j]}{D_p\big[imax_{k,p,0},jmax_{k,p,0}\big]}$$

Pour simplifier les explications, on peut supposer que l'atténuateur de faisceau et les rotateurs de polarisation ne sont pas utilisés. On vérifie alors que chaque représentation fréquentielle $F_{p,q}$ obtenue dans la procédure décrite en 7.17. peut s'exprimer sous la forme:

$$F_{p,q}[ni,nj,nk] = \frac{1}{6}\Big(2F_{p,q,0}[ni,nj,nk] - F_{p,q,1}[ni,nj,nk] - F_{p,q,2}[ni,nj,nk]\Big)$$

$$+\tilde{j}\frac{1}{2\sqrt{3}}\Big(F_{p,q,1}[ni,nj,nk] - F_{p,q,2}[ni,nj,nk]\Big)$$

ou $F_{p,q,d}[ni,nj,nk]$ est obtenu comme $F_{p,q}$ dans la procédure 7.17. non modifiée, mais en remplaçant $M_{k,p,q}[i,j]$ par la valeur réelle $M0[k,p][0,d,0,0][q,i,j]$ obtenue dans la procédure décrite en 7.12. pour une valeur correspondante de l'indice d indiçant le décalage de phase. Il est donc possible de calculer pour chaque indice $d$ une représentation fréquentielle séparée $F_{p,q,d}$, ces représentations étant ensuite superposées pour obtenir la représentation fréquentielle $F_{p,q}$, au lieu d'effectuer directement dans la procédure 7.12. la superposition des valeurs correspondant à chaque indice $d$.

Il est également possible d'effectuer la superposition des tableaux correspondant à chaque indice $d$ après passage dans le domaine spatial par transformation de Fourier inverse.

Enfin, il est possible de ne pas utiliser les mêmes points d'impact de l'onde d'éclairage en fonction du décalage de phase appliqué. Dans ce cas, à chaque décalage de phase correspond une trajectoire distincte et les tableaux $Io[k]$, $Jo[k]$ doivent être remplacés par des tableaux $Io[k,d]$, $Jo[k,d]$. On peut alors calculer comme précédement des tableaux $F_{p,q,d}$ séparés avant de les superposer pour obtenir les tableaux $F_{p,q}$.

Ce mode de calcul n'est pas particulièrement avantageux mais montre qu'il n'est pas indispensable de calculer dans une phase intermédiaire les représentations bidimensionnelles complexes, ni même d'effectuer une acquisition des données correspondant à ces représentations bidimensionnelles complexes.

### 7.18.6. Réalisation d'images avec une seule valeur du décalage de phase.

La présente variante consiste à modifier la procédure décrite en 7.12. de manière à n'acquérir que la partie réelle du nombre complexe normalement acquis de la manière décrite en 7.12. Cette partie réelle peut être acquise en une seule étape, ce qui permet d'utiliser une seule valeur de l'indice d caractérisant le décalage de phase. Du fait que seule la partie réelle est acquise, la représentation fréquentielle obtenue, en supposant que le tableau de compensation de l'aberration sphérique $D_p$ est mis à 1, est la partie réelle de la représentation complexe. La représentation spatiale obtenue par transformation de Fourier inverse est alors la superposition de l'image normale avec une image conjuguée symétrique par rapport au point d'origine de l'onde de référence. Pour que l'image normale ne soit pas superposée à sa symétrique, le point d'origine de l'onde de référence doit être placé sur le coté du diaphragme, légèrement hors de l'ouverture du diaphragme, et non au centre de celui-ci. L'ouverture du diaphragme doit être réduite de moitié de manière à éviter le repliement de spectre induit par ce déplacement du point d'origine de l'onde de référence. L'image obtenue finalement comporte alors l'image normale et l'image symétrique, non superposées et donc utilisables. Toutefois, pour que la partie réelle puisse être acquise en une seule étape, il est nécessaire que l'intensité de l'onde de référence soit suffisamment supérieure à l'intensité de l'onde diffractée, de manière à ne pas induire d'erreurs du second ordre. La qualité de l'image finalement obtenue dépend donc de l'intensité de l'onde de référence. Une intensité trop faible induit des distortions du second ordre et une intensité trop forte augmente le bruit gaussien.

Afin de respecter au mieux la condition d'intensité suffisante de l'onde de référence, l'intensité de l'onde de référence seule doit être ajustée non au quart de la valeur maximale du digitaliseur comme indiqué en 7.4. mais par exemple à 80% de cette valeur.

Pour que la partie réelle soit effectivement acquise à chaque prise d'image, le décalage de phase unique utilisé doit permettre l'obtention directe d'une référence de phase constante. Ce décalage sera donc, de manière similaire à ce qui a été fait en 7.18.4.:

$$\Theta_0 = -Arg\Big(Ra\big[p, Ic[k,p], Jc[k,p]\big]Rb\big[p, Ic[k,p], Jc[k,p]\big]\Big)$$

Malgré l'application de ce décalage de phase, la référence de phase peut ne pas être constante en présence de vibrations de la table optique. Ceci détruirait l'image et il est donc nécessaire d'utiliser une table optique de très bonne qualité de manière à supprimer ces vibrations.

L'indice $d$ ne prend donc plus qu'une seule valeur au lieu de trois et l'étape 2 de la procédure décrite en 7.12.2.2. est remplacée par:

$$M2[r_1, r_2][q,i,j] = \frac{M0[k,p][M1[q,i,j],0,r_1,r_2][q,i,j] - Iref[\bar{p}q + p\bar{q}, i, j]}{att[M1[q,i,j]]\sqrt{Iref[\bar{p}q + p\bar{q}, i, j]}}$$

Comme en 7.18.4., mais en tenant compte de l'abscence de vibrations, l'étape 2 de la procédure décrite en 7.17.2. est remplacée par:

$$M_{k,p,q}[i,j] = \frac{M_{k,p,q}[i,j]D_{p\bar{q}+\bar{p}q}[i,j]}{D_p\left[imax_{k,p,0}, jmax_{k,p,0}\right]}$$

Cette variante peut être d'avantage simplifiée en n'utilisant qu'une seule position des rotateurs de phase et qu'une seule position de l'atténuateur de faisceau, moyennant quoi les 36 couples d'images élémentaires acquis en 7.12.2.1. peuvent se réduire à un seul, au prix d'une forte diminution de la qualité de l'image. Dans ce cas de « simplification extrême », les indices $c, d, r_1, r_2$ ne prennent plus qu'une seule valeur et l'ensemble de la procédure décrite en 7.12.2. se réduit à:

$$M_{k,p,q}[i,j] = \frac{M0[k,p][0,0,0,0][q,i,j] - Iref[\bar{p}q + p\bar{q}, i,j]}{\sqrt{Iref[\bar{p}q + p\bar{q}, i,j]}}$$

### 7.18.7. Méthode simplifiée d'obtention des images tridimensionnelles.

On peut se limiter, pour générer l'image tridimensionnelle de l'objet, à la représentation $F_{0,0}$ définie en 7.17. Ceci revient, dans la procédure décrite en 7.17.2., à adopter des tableaux $IB_{p,q}$ nuls pour tout couple $(p,q) \neq (0,0)$. La présente méthode est la méthode définie en 7.18.4. mais simplifiée de cette manière, et adaptée au cas ou l'indicé moyen de l'échantillon est proche de l'indice nominal des objectifs, et ou la table peut être considérée comme parfaitement stable.

Dans ces conditions, on a $R_{k,0,0} = 1$ et $D_0[i,j] = 1$. La formule:

$$M_{k,p,q}[i,j] = \frac{M_{k,p,q}[i,j]D_{p\bar{q}+\bar{p}q}[i,j]R_{k,p,q}}{D_p\left[imax_{k,p,0}, jmax_{k,p,0}\right]R_{k,p,0}}$$

qui était employée en 7.18.4. se simplifie donc et on obtient:
$M_{k,0,0}[i,j] = M_{k,0,0}[i,j]$ c'est-à-dire que le tableau $M_{k,0,0}$ n'est pas modifié avant d'être utilisé pour générer la représentation tridimensionnelle de l'objet.

Dans ce cas particulier, aucune compensation algorithmique du déphasage du faisceau de référence n'est nécessaire, parce que le dispositif utilisé permet la génération de faisceaux d'éclairage ayant un déphasage constant par rapport à l'onde de référence.

Dans ce cas particulier, on peut également éviter les étapes 7.10, 7.11, 7.15, 7.16. La position des objectifs peut être réglée comme en 7.9.1, de manière à avoir une image ponctuelle et centrée. La commande du dispositif de décalage de phase est alors définie par:

$$\Theta_d = \theta_d - Arg\left(Ra[p, Ic[k,p], Jc[k,p]]\right)$$

c'est-à-dire qu'elle ne dépend pas de mesures effectuées préalablement sur l'objet lui-même. Si un objectif de microscope ayant pour indice nominal celui du vide est employé, les mesures préalables peuvent être effectuées en l'abscence de tout objet (en considérant comme un objet la lame transparente).

### 7.18.8. Réalisation d'une image avec une seule position des polariseurs.

La présente variante consiste à ne pas utiliser la possibilité de variation des indices $r_1$ et $r_2$. Si des images selon la présente variante sont seules générées, les rotateurs de polarisation (2210) (2241) (2238) (2226) peuvent être supprimés. La présente variante implique une modification de l'étape 3 de la boucle sur $k,p$ décrite en 7.12.2.2., ainsi qu'une modification de l'étape 8 de l'algorithme décrit en 7.17.2.

### 7.18.8.1. Modification de l'étape 3 de la boucle sur *k,p* décrite en 7.12.2.2.

Lorsque les rotateurs de polarisation ne sont pas utilisés, la direction du vecteur champ électrique du faisceau d'éclairage et la direction d'analyse du faisceau reçu sont orientées suivant le vecteur $\vec{j}$ de la Fig.52.

On note $\vec{y}_e$ et $\vec{y}_c$ les vecteurs déduits respectivement des vecteurs $\vec{x}_e$ et $\vec{x}_c$ par rotation de $\frac{\pi}{2}$ dans le plan de la Fig.52

On a: $\vec{j} = \vec{x}_e \sin\varphi_e + \vec{y}_e \cos\varphi_e$

Lors de la diffraction vers le point C:

-   la composante suivant $\vec{x}_e$ est transmise sans atténuation, devenant la composante sur le vecteur $-\vec{x}_c$
-   la composante suivant $\vec{y}_e$ est transmise, devenant la composante sur le vecteur $-\vec{y}_c$, mais est atténuée d'un facteur $\cos\theta$ ou $\theta$ est l'angle entre le vecteur $f_e$ et le vecteur $f_c$.

Pour un vecteur champ électrique $\vec{j}$ de l'onde d'éclairage, le vecteur champ électrique de l'onde reçue au point C est donc proportionnel à $\vec{t} = -\vec{x}_c \sin\varphi_e - \vec{y}_c \cos\varphi_e \cos\theta$. On peut prendre en compte les relations $\vec{x}_c = \vec{i} \cos\varphi_c + \vec{j} \sin\varphi_c$, $\vec{j}_c = -\vec{i} \sin\varphi_c + \vec{j} \cos\varphi_c$. La composante de $\vec{t}$ suivant $\vec{j}$ est alors proportionnelle à $Br$ =$-\cos\varphi_c \cos\varphi_e \cos\theta - \sin\varphi_c \sin\varphi_e$. Ceci constitue un facteur d'atténuation qui affecte le faisceau diffracté mesuré au point C suivant une direction d'analyse orientée suivant $\vec{j}$ lorsque le faisceau d'éclairage est dirigé sur le point E et a son vecteur champ électrique orienté suivant $\vec{j}$. Si la diffusion pouvait être considérée comme isotrope, ce coefficient serait constant. Pour compenser l'effet de l'anisotropie il suffit donc de diviser les valeurs mesurées par ce coefficient Br de manière à se ramener à un coefficient constant caractérisant la diffusion isotrope. La division par *Br* fait remonter le bruit affectant les points ou Br est faible, ce qui doit également être pris en compte.

Le facteur $\cos\theta$ vaut

$$\cos\theta = \frac{f_e . f_c}{\|f_e\| \cdot \|f_c\|}.$$

Ceci se traduit, en utilisant les valeurs normalisées des vecteurs fréquence, par:

$$\cos\theta = x_c x_e + y_c y_e + z_c z_e.$$

L'étape 3 de la procédure 7.12.12. est donc modifiée da la manière suivante:

-   le programme calcule, en plus des valeurs déjà calculées en 7.12., $\cos\theta = x_c x_e + y_c y_e + z_c z_e$
-   le programme calcule le facteur *comp[k,p,q]* de compensation de l'atténuation :
    si $- \cos\varphi_c \cos\varphi_e \cos\theta - \sin\varphi_c \sin\varphi_e \leq lim$ alors $comp[k,p,q] = \frac{1}{lim}$, ou *lim* est une valeur très faible, par exemple $lim = 10^{-10}$

    sinon, $comp[k,p,q] = \frac{1}{-\cos\varphi_c \cos\varphi_e \cos\theta - \sin\varphi_c \sin\varphi_e}$

    Comme les valeurs

$$coef[k, p, q, i, j][r_1, r_2]$$

utilisées en 7.12., les valeurs *comp[k,p,q]* constituent un tableau qui peut être prérdlculé.

-   le programme calcule finalement:

$$M_{k,p,q}[i,j] = M2[1,1][q,i,j] comp[k,p,q]$$

$$B_{k,p,q}[i,j] = \frac{\sigma_{acq}}{\sqrt{6}} \frac{comp[k,p,q]}{atl[M1[q,i,j]]\sqrt{Iref[\overline{p}q + p\overline{q}, i, j]}}$$

ou $\sigma_{acq}$ est l'écart-type du bruit des capteurs. Les capteurs sont en général conçus pour que $\sigma_{acq}$ soit de l'ordre de 1.

On a:

$$\sigma_{acq} = 10^{-\frac{SNR_{db}}{20}} 2^N$$

ou $SNR_{dB}$ est le rapport signal sur bruit en décibels et $N$ est le nombre de bits d'échantillonnage du signal.

### 7.18.8.2. Modification de l'étape 8 de l'algorithme décrit en 7.17.2.

La multiplication par $comp[k,p,q]$ peut faire remonter considérablement le niveau de bruit, ce qui peut fausser l'image obtenue. Pour éviter ce problème on modifie l'étape 8 de la procédure décrite en 7.17 de manière à annuler les composantes de la représentation fréquentielle qui sont inférieures en module au bruit multiplié par une constante *const* donnée.

L'annulation de certains éléments de la représentation fréquentielle est elle-même génératrice de bruit. Pour obtenir une représentation fréquentielle de qualité comparable à celle obtenue suivant la procédure normale, un échantillonnage plus précis ou un niveau d'atténuation supplémentaire peuvent être nécessaires.

L'étape 8 de la procédure décrite en 7.17 est modifiée de la manière suivante:

*étape 8 modifiée*: Le programme calcule la représentation fréquentielle finale, contenue dans un tableau $F$ de dimensions $2N_{pix}$ x $2N_{pix}$ x $2N_{pix}$. Il initialise à 0 ce tableau puis parcourt les indices $ni,nj,nk$ en testant la condition:

$$\sum_{p,q} IB_{p,q}[ni,nj,nk] \neq 0$$

Lorsque la condition est réalisée il effectue:

$$F[ni,nj,nk] = \frac{\sum_{p,q} F_{p,q}[ni,nj,nk] IB_{p,q}[ni,nj,nk]}{\sum_{p,q} IB_{p,q}[ni,nj,nk]}$$

Il teste alors la condition

$$F[ni,nj,nk] \leq \frac{const}{\sqrt{\sum_{p,q} IB_{p,q}[ni,nj,nk]}}$$

Lorsque cette condition est réalisée il effectue: $F[ni,nj,nk] = 0$

*const* est une constante choisie pour qu'en l'abscence de signal (bruit seul) la condition soit toujours vérifiée. On peut par exemple utiliser *const*=4

Une multiplication par une constante du niveau global de bruit modifie les résultats de cette étape 8 modifiée. C'est pourquoi en 7.18.8.1. on détermine un niveau de bruit absolu, alors qu'en 7.12 le niveau de bruit était défini à une constante près.

### 7.18.9. Obtention d'une image d'un cristal biréfringent uniaxe.

On considère un cristal uniaxe d'indice ordinaire $n_o$ taillé de manière à former une lame d'épaisseur réduite, le plan de la lame étant orthogonal à l'axe optique du cristal. Cette lame constitue l'échantillon observé et est placée entre les deux objectifs, de l'huile optique étant utilisée entre les objectifs et l'échantillon, l'objectif étant conçu pour utiliser des lamelles d'indice égal à celui de l'huile optique. L'axe optique du cristal est donc confondu avec l'axe optique des objectifs.

Cette lame est supposée ne pas être « parfaite ». Elle peut être affectée par exemple de défauts de cristallisation ponctuels. La présente procédure a pour objectif d'obtenir une image tridimensionnelle de ces défauts de cristallisation. Il peut également s'agir d'une mémoire optique dont les variations locales d'indice caractérisent les bits enregistrés. La présente procédure permet l'obtention d'une image tridimensionnelle caractéristique des variations de de l'indice ordinaire $n_o$ de l'échantillon.

L'indice ordinaire moyen $n_o$ est supposé connu, ainsi que l'épaisseur de la lame. L'échantillon est introduit sans déplacement des objectifs, de sorte que $x,y,z$ soient également connus. Il est également possible d'obtenir $n_o$, $L, x,y,z$ par une version modifiée de la procédure décrite en 7.11. Une telle version modifiée, applicable dans le cas du mode de réalisation 4, sera décrite en 8.4.3.2.

L'obtention de l'image de l'indice ordinaire suppose une modification de l'étape 8 de la procédure 7.17. , qui est celle déjà décrite en 7.18.8.2. Elle suppose également une modification de l'étape 3 de la boucle sur $k,p$ décrite en 7.12.2.2., décrite ci-après en reprenant les notations utilisées en 7.12.

### 7.18.9.1. Principe

On note:

$$\vec{u}_e = \frac{f_e \wedge f_o}{\|f_e \wedge f_o\|}, \; \vec{u}_c = \frac{f_c \wedge f_o}{\|f_c \wedge f_o\|}$$

$\vec{u}_e$ et $\vec{u}_c$ sont donc définis d'après les vecteurs de la Fig.51. Ils sont tous deux dans le plan de la Fig.52 (non représentés). $\vec{u}_e$ est orienté selon la direction de polarisation ordinaire de l'onde d'éclairage parvenant en E. $\vec{u}_c$ est orienté selon la direction de polarisation ordinaire de l'onde diffractée parvenant au point C.

On note $\vec{v}_e$ et $\vec{v}_c$ les vecteurs déduits respectivement des vecteurs $\vec{u}_e$ et $\vec{u}_c$ par rotation de $\frac{\pi}{2}$ dans le plan de la Fig.52

On note $\vec{y}_e$ et $\vec{y}_c$ les vecteurs déduits respectivement des vecteurs $\vec{x}_e$ et $\vec{x}_c$ par rotation de $\frac{\pi}{2}$ dans le plan de la Fig.52

On note $\varepsilon$ l'angle entre le vecteur $\vec{i}$ et le vecteur $\vec{a}$ obtenu à partir de $\vec{j}$ par une symétrie dont l'axe est la position de l'axe neutre des rotateurs de polarisation lorsque cet axe neutre n'est pas parallèle à $\vec{j}$. On a typiquement $\varepsilon \approx 10$ degrés.

Lorsque le vecteur champ électrique du faisceau d'éclairage (au point E) est $A_0\vec{i} + A_1\vec{j}$ le vecteur champ électrique mesuré au point C est

$$\left(C_{00}A_0 + C_{01}A_1\right)\vec{i} + \left(C_{10}A_0 + C_{11}A_1\right)\vec{j} \; .$$

Lorsque un vecteur champ électrique $\vec{u}_e = \vec{i}\cos \alpha_e + \vec{j}\sin \alpha_e$ est utilisé pour l'onde d'éclairage, le vecteur champ électrique mesuré au point C est donc:

$$\vec{w}_m = \left(C_{00} \cos\alpha_e + C_{01} \sin\alpha_e\right)\vec{i} + \left(C_{10} \cos\alpha_e + C_{11} \sin\alpha_e\right)\vec{j}$$

On peut utiliser:

$$\vec{i} = \vec{u}_c\cos\alpha_c - \vec{v}_c\sin\alpha_c$$

$$\vec{j} = \vec{u}_c\sin\alpha_c + \vec{v}_c\cos\alpha_c$$

d'ou:

$$\bar{w}_m = \left(C_{00}\cos\alpha_e\cos\alpha_c + C_{01}\sin\alpha_e\cos\alpha_c + C_{10}\cos\alpha_e\sin\alpha_c + C_{11}\sin\alpha_e\sin\alpha_c\right)\bar{u}_c$$

$$+\left(-C_{00}\cos\alpha_e\sin\alpha_c - C_{01}\sin\alpha_e\sin\alpha_c + C_{10}\cos\alpha_e\cos\alpha_c + C_{11}\sin\alpha_e\cos\alpha_c\right)\bar{v}_c$$

La valeur mesurée au point C suivant la direction du vecteur $\vec{u}_c$ est donc:

$$B_m = C_{00}\cos\alpha_e\cos\alpha_c + C_{01}\sin\alpha_e\cos\alpha_c + C_{10}\cos\alpha_e\sin\alpha_c + C_{11}\sin\alpha_e\sin\alpha_c$$

On note $Q_{r_1,r_2}$ la valeur mesurée au point C pour la combinaison $r_1,r_2$ des indices de commande des rotateurs de polarisation. Lorsque le vecteur champ électrique du faisceau d'éclairage (au point E) est $A_0\vec{a} + A_1\vec{j}$ le vecteur champ électrique mesuré au point C est

$$\left(Q_{00}A_0 + Q_{01}A_1\right)\vec{a} + \left(Q_{10}A_0 + Q_{11}A_1\right)\vec{j}$$

avec

$$\vec{a} = \vec{i}\cos\varepsilon + \vec{j}\sin\varepsilon.$$

La relation définissant $\vec{a}$ s' inverse en: $\vec{i} = \vec{a}\,\dfrac{1}{\cos\varepsilon} - \vec{j}\,\tan\varepsilon$
Lorsque le vecteur champ électrique du faisceau d'éclairage est

$$A_0\vec{i} + A_1\vec{j} = \vec{a}A_0\,\frac{1}{\cos\varepsilon} + \vec{j}\left(-A_0\tan\varepsilon + A_1\right)$$

le vecteur reçu au point C est donc:

$$\left(Q_{00}A_0\,\frac{1}{\cos\varepsilon} + Q_{01}\left(-A_0\tan\varepsilon + A_1\right)\right)\vec{a} + \left(Q_{10}A_0\,\frac{1}{\cos\varepsilon} + Q_{11}\left(-A_0\tan\varepsilon + A_1\right)\right)\vec{j}$$

soit:

$$\left(Q_{00}A_0 + Q_{01}\left(-A_0\sin\varepsilon + A_1\cos\varepsilon\right)\right)\vec{i}$$

$$+\left(Q_{00}A_0\tan\varepsilon + Q_{01}\left(-A_0\sin\varepsilon\tan\varepsilon + A_1\sin\varepsilon\right) + Q_{10}A_0\,\frac{1}{\cos\varepsilon} + Q_{11}\left(-A_0\tan\varepsilon + A_1\right)\right)\vec{j}$$

Cette expression est l'équivalent de $(C_{00}A_0 + C_{01}A_1)\vec{i} + (C_{10}A_0 + C_{11}A_1)\vec{j}$, avec:

$$C_{00} = Q_{00} - Q_{01}\sin\varepsilon$$

$$C_{01} = Q_{01}\cos\varepsilon$$

$$C_{10} = Q_{00}\tan\varepsilon - Q_{01}\sin\varepsilon\tan\varepsilon + Q_{10}\,\frac{1}{\cos\varepsilon} - Q_{11}\tan\varepsilon$$

$$C_{11} = Q_{01} \sin \varepsilon + Q_{11}$$

L'expression de *Bm* se transforme donc comme suit:

$$Bm = \left(Q_{00} - Q_{01}\sin\varepsilon\right)\cos\alpha_e \cos\alpha_c + Q_{01}\cos\varepsilon\sin\alpha_e \cos\alpha_c + \left(Q_{01}\sin\varepsilon + Q_{11}\right)\sin\alpha_e \sin\alpha_c$$

$$+\left(Q_{00}\tan\varepsilon - Q_{01}\sin\varepsilon\tan\varepsilon + Q_{10}\frac{1}{\cos\varepsilon} - Q_{11}\tan\varepsilon\right)\cos\alpha_e \sin\alpha_c$$

soit:

$$Bm = \left(\cos\alpha_e \cos\alpha_c + \cos\alpha_e \sin\alpha_c \tan\varepsilon\right)Q_{00}$$

$$+\left(-\sin\varepsilon\cos\alpha_e \cos\alpha_c + \cos\varepsilon\sin\alpha_e \cos\alpha_c + \sin\varepsilon\sin\alpha_e \sin\alpha_c - \sin\varepsilon\tan\varepsilon\cos\alpha_e \sin\alpha_c\right)Q_{01}$$

$$+\left(\frac{1}{\cos\varepsilon}\cos\alpha_e \sin\alpha_c\right)Q_{10}$$

$$+\left(\sin\alpha_e \sin\alpha_c - \tan\varepsilon\cos\alpha_e \sin\alpha_c\right)Q_{11}$$

Cette valeur *Bm* est la valeur mesurée au point C selon la direction du vecteur $\vec{u}_c$ lorsque le vecteur champ électrique de l'onde d'éclairage est orienté selon $\vec{u}_e$. Du fait de la définition des vecteurs $\vec{u}_e$ et $\vec{u}_c$, *Bm* est la valeur du rayon diffracté ordinaire pour un faisceau d'éclairage ordinaire. La mesure de *Bm* est indirecte au sens ou ce sont les valeurs $Q_{ij}$ qui sont mesurées, la valeur de *Bm* en étant déduite.

On peut exprimer le vecteur $\vec{u}_e$ sous la forme:

$$\vec{u}_e = \vec{x}_e \cos\beta_e - \vec{y}_e \sin\beta_e$$

Lors de la diffraction vers le point C, sur le même principe qu'en 7.18.8.1.:

- la composante suivant $\vec{u}_e$ est transmise sans atténuation, devenant la composante sur le vecteur $-\vec{x}_c$
- la composante suivant $\vec{y}_e$ est transmise, devenant la composante sur le vecteur $-\vec{y}_c$, mais est atténuée d'un facteur $\cos\theta$ ou $\theta$ est l'angle entre le vecteur $f_e$ et le vecteur $f_c$.

Le vecteur reçu au point C est donc:

$$\vec{w}_r = -\vec{x}_c \cos\beta_e + \vec{y}_c \sin\beta_e \cos\theta$$

On peut utiliser:

$$\vec{x}_c = \vec{u}_c \cos\beta_c + \vec{v}_c \sin\beta_c$$

$$\vec{y}_c = -\vec{u}_c \sin\beta_c + \vec{v}_c \cos\beta_c$$

On en tire donc:

$$\vec{w}_r = \left(-\cos\beta_c \cos\beta_e - \sin\beta_c \sin\beta_e \cos\theta\right)\vec{u}_c + \left(-\sin\beta_c \cos\beta_e + \cos\beta_c \sin\beta_e \cos\theta\right)\vec{v}_c$$

La valeur reçue au point C suivant la direction du vecteur $\bar{u}_c$ est donc:

$$Br = -\cos\beta_c \cos\beta_e - \sin\beta_c \sin\beta_e \cos\theta$$

Cette valeur Br est le coefficient d'atténuation qui affecte le faisceau diffracté ordinaire reçu au point C lorsque le faisceau d'éclairage est ordinaire. Dans un modèle de diffusion isotrope, le coefficient $Br$ serait constant. De même qu'en 7.18.8.1., cette atténuation peut être compensée en divisant la valeur mesurée $Bm$ par le coefficient $Br$.

### 7.18.9.2. Algorithme

L'étape 3 de la boucle sur $k,p$ décrite en 7.12.12. est donc modifiée de la manière suivante:

- le programme calcule les quantités suivantes, en plus de celles calculées en 7.12.12.:

$$\cos\theta = x_c x_e + y_c y_e + z_c z_e$$

$$\sin\beta_c = \frac{1}{M_c M_{ce}} V_{xy} \qquad \cos\beta_c = \frac{1}{M_c M_{ce}}\left(y_c V_{yz} - x_c V_{xz}\right)$$

$$\sin\alpha_c = -\frac{1}{M_c}x_c \qquad \cos\alpha_c = \frac{1}{M_c}y_c$$

$$\sin\beta_e = -\frac{1}{M_e M_{ce}} V_{xy} \qquad \cos\beta_e = \frac{1}{M_e M_{ce}}\left(-y_e V_{yz} + x_e V_{xz}\right)$$

$$\sin\alpha_e = -\frac{1}{M_e}x_e \qquad \cos\alpha_e = \frac{1}{M_e}y_e$$

Pour l'ensemble de ces valeurs, on utilise des valeurs limites appropriées lorsque les dénominateurs sont nuls:

si $M_c = 0$ on utilise $\alpha_c = -\alpha_e$ et $\beta_c = \beta_e = 0$

si $M_e = 0$ on utilise $\alpha = -\alpha_c$ et $\beta_c = \beta_e = 0$

si $M_{ce} = 0$ on utilise $\beta_c = \beta_e = 0$

si $M_c = 0$ et $M_e = 0$ et $M_{ce} = 0$ on utilise $\alpha_c = \alpha_e = \beta_c = \beta_e = 0$

- le programme calcule le facteur $comp[k,p,\ q]$ de compensation de l'atténuation :

si $-\cos\beta_c \cos\beta_e - \sin\beta_c \sin\beta_e \cos\theta \leq lim$ alors $comp[k,p,q] = \frac{1}{lim}$, ou $lim$ est une valeur très faible, par exemple $lim = 10^{-10}$
sinon, $comp[k,p,q] = \frac{1}{-\cos\beta_c \cos\beta_e - \sin\beta_c \sin\beta_e \cos\theta}$

Le programme calcule les valeurs:

$$coef[k,p,q,i,j][0,0] = (\cos\alpha_e \cos\alpha_c + \cos\alpha_e \sin\alpha_c \tan\varepsilon)comp[k,p,q]$$

$$coef[k,p,g,i,j][0,1] = (-\sin\varepsilon\cos\alpha_e \cos\alpha_c + \cos\varepsilon\sin\alpha_e \cos\alpha_c + \sin\varepsilon\sin\alpha_e \sin\alpha_c$$

$$- \sin\varepsilon\tan\varepsilon\cos\alpha_e \, \sin\alpha_c)comp[k,p,q]$$

$$coef[k,p,q,i,j][1,0] = \left(\frac{1}{\cos\varepsilon}\cos\alpha_e \, \sin\alpha_c\right)comp[k,p,q]$$

$$coef[k,p,q,i,j][1,1] = (\sin\alpha_e \, \sin\alpha_c - \tan\varepsilon\cos\alpha_e \, \sin\alpha_c)comp[k,p,q]$$

Comme en 7.12. les valeurs $coef[k,p,q,i,j][r_1,r_2]$ et $comp[k,p,q]$ constituent des tableaux qui peuvent être précalculés.

- le programme calcule finalement:

$$M_{k,p,q}[i,j] = \sum_{r_1,r_2} M2[r_1,r_2][q,i,j]coef[k,p,q,i,j][r_1,r_2]$$

$$B_{k,p,q}[i,j] = \frac{\sigma_{acq}}{\sqrt{6}} \frac{comp[k,p,q]}{att[M1[q,i,j]]\sqrt{Iref[\bar{p}q+p\bar{q},i,j]}}$$

ou $\sigma_{acq}$ est l'écart-type du bruit des capteurs défini comme en 7.18.8.1.
$M2[r_1,r_2][q,i,j]$ correspond à la valeur mesurée qui était notée $Q_{r_1,r_2}$ en 7.18.9.1.
le calcul de $M_{k,p,q}[i,j]$ équivaut au calcul du rapport $\frac{Bm}{Br}$ défini en 7.18.9.1.

### 7.18.10. Etude d'échantillons par réflexion uniquement

Lorsque les deux représentations $F_{0,0}$ et $F_{0,1}$ ne se recoupent pas, il est à priori impossible de déterminer leur relation de phase: en effet toute relation de phase correspond à une représentation fréquentielle possible. Une solution possible est alors d'obtenir la représentation de l'objet à partir de $F_{0,1}$ seule. Cependant, la seule donnée de $F_{0,1}$ ne permet pas de différencier de manière fiable l'indice et l'absorptivité. En effet, une représentation différenciant valablement l'indice et l'absorptivité doit occuper une zone de l'espace des fréquences symétrique par rapport à l'origine. Une représentation de bonne qualité, comparable à celle obtenue en microscopie confocale par réflexion mais de précision plus élevée, peut être obtenue en extrayant le module de la représentation spatiale obtenue en utilisant seulement $F_{0,1}$.

Cette méthode peut également être appliquée à l'étude de la zone superficielle d'échantillons épais à travers lesquels le faisceau se transmet mal. Dans ce cas, l'approximation comme quoi l'éclairage est à peu près constant dans la zone observée de l'échantillon n'est respectée que dans la zone superficielle adjacente aux objectifs de microscope, et lorsque le faisceau d'éclairage et l'onde issue de l'objet sont transmis par le même objectif. La seule partie fiable de la représentation fréquentielle obtenue est donc $F_{0,1}$ si la face supérieure de l'objet est observée, ou $F_{1,1}$ si la face inférieure de l'objet est observée. De même que précédemment, on peut extraire le module de la représentation spatiale obtenue en utilisant seulement $F_{0,1}$ ou $F_{1,1}$.

De manière similaire, cette méthode peut être utilisée pour l'étude de surface d'objets fortement opaques.

Il est également possible de construire selon ce principe une version dégradée du microscope, n'ayant qu'un seul objectif et fonctionnant donc uniquement par réflexion. La phase de réglage doit alors être adaptée pour ne pas nécessiter de second objectif. Il est également possible d'utiliser un système complet pendant la phase de réglage et de ne supprimer qu'ensuite le second objectif.

### 7.19. Utilisation d'objectifs de microscope d'indice nominal adapté

Dans l'ensemble des modes de réalisation il est possible d'utiliser des objectifs de microscope standard. Ces objectifs ont un indice nominal $n_v$ proche de celui du verre. Ils sont prévus pour fonctionner avec un liquide d'immersion et une lamelle couvre-objet d'indice $n_v$. Ces objectifs donneront de bons résultats si l'échantillon observé a un indice moyen proche de $n_v$ ou est peu épais. Si l'échantillon observé est constitué essentiellement d'eau, d'indice 1,33 , et si l'ouverture de l'objectif est de 1,4 , alors l'épaisseur totale de l'échantillon doit être suffisamment inférieure à la largeur totale de l'image générée. Si elle est trop élevée, la représentation tridimensionnelle obtenue peut être faussée. En effet, l'aberration sphérique causée par l'épaisseur de l'échantillon peut alors devenir telle que l'onde provenant d'un objectif ne puisse être reçue par l'objectif en vis-à-vis que pour une faible partie des fréquences utilisées.

Un objectif de microscope est conçu pour utiliser un liquide optique d'indice donné, l'indice du liquide optique ayant içi été appelé « indice nominal » de l'objectif. Il est conçu également pour utiliser une lame couvre-objet d'indice et d'épaisseur donnés, l'indice de la lame n'étant pas nécessairement égal à l'indice nominal de l'objectif. Si on suppose l'indice moyen de l'objet égal à l'indice nominal de l'objectif, l'objectif permet une compensation de l'aberration sphérique dûe à la lame couvre-objet, qui est indépendante de la position de l'objet.

Si par contre l'indice nominal de l'objectif diffère de l'indice moyen de l'objet, les variations de position de l'objet entraînent une variation de l'épaisseur des couches correspondant respectivement à l'objet et au liquide optique. L'aberration sphérique induite dépend donc de la position de l'objet et ne peut donc pas être compensée par l'objectif, une compensation valable pour une position de l'objet ne l'étant plus pour une autre position. Ce problème est sans effet sur l'obtention d'images bidimensionnelles, qui est usuelle avec les microscopes classiques, et dans laquelle l'indice de l'échantillon n'intervient pas. Par contre, il est gênant pour l'observation d'images en trois dimensions d'un échantillon épais.

Une solution à ce problème consiste à utiliser un objectif dont l'indice nominal est proche de l'indice moyen de l'échantillon observé.

Si l'échantillon observé est constitué essentiellement d'eau, le liquide optique peut être de l'eau ou un liquide d'indice stabilisé proche de celui de l'eau. L'objectif peut être conçu par des méthodes usuelles de calcul optique, en prenant en compte l'indice du liquide optique et la nécessité de compenser l'aberration dûe à la lame. Cette conception peut être facilitée par l'utilisation d'une lamelle couvre-objet en Teflon (polymère fabriqué par la société DuPont), dont l'indice est proche de celui de l'eau et qui induit donc une faible aberration.

Si l'échantillon observé est un cristal biréfringent d'indice élevé comme dans le cas des mémoires optiques, l'indice nominal de l'objectif devra être proche de celui du cristal, ce qui implique l'emploi d'un liquide optique d'indice élevé, la lame couvre-objet devant être d'indice proche de celui du cristal observé ou pouvant éventuellement être supprimée.

Des objectifs à immersion dans l'eau sont par exemple fabriqués par la société Zeiss.

### 7.20. Utilisation d' objectifs de microscope affectés par l'aberration sphérique.

La Fig.90 représente le plan (6105) dont l'image est formée par l'objectif de microscope en (6107) et le plan focal image (6106) de l'objectif. On note $B(\alpha)$ le point image, dans le plan focal image de l'objectif, d'un faisceau faisant dans l'objet un angle $\alpha$ avec l'axe optique.

La présente variante consiste à utiliser des objectifs conçus de manière à vérifier uniquement les contraintes suivantes:

(1)- L'aberration sphérique affectant l'image formée dans le plan image de l'objectif doit rester inférieure à une fraction du diamètre de cette image.
(2)- L'image, dans le plan focal image, d'un faisceau qui est parallèle dans l'objet observé, doit être ponctuelle.
(3)- La distance entre le point $B(\alpha)$ et le point $B(0)$ doit être proportionnelle à $\sin\alpha$.

Un objectif respectant uniquement ces contraintes est d'une conception plus aisée qu'un objectif classique. Cette simplification des contraintes imposées à l'objectif permet d'augmenter la distance de travail, ce qui permet de placer l'objet entre des lames épaisses. Elle peut également permettre d'augmenter l'ouverture des objectifs, facilitant ainsi le respect de la condition de recoupement des représentations fréquentielles partielles. Un objectif de ce type peut être constitué par exemple par un condenseur aplanétique/achromatique Nikon d'ouverture 1,4 associé à un achromat permettant d'en régler le grandissement. La Fig.89 montre le principe d'une telle association. Le condenseur Nikon est prévu pour une lumière incidente parallèle. Le faisceau issu d'un point (6104) de l'objet observé est donc parallèle à la sortie du condenseur (6102). Un achromat (6101) est utilisé pour le faire converger à nouveau vers un point (6103). Si la distance focale du condenseur est $f_c$ et si la distance focale de l'achromat est $f_a$ alors le grandissement de l'ensemble est $\frac{f_a}{f_c}$ et la distance entre l'achromat et le plan image, ou doit être placé le diaphragme, est $f_a$ .

Les conditions (2) et (3) doivent s'interpréter comme signifiant que les écarts à la ponctualité ou les erreurs de position du point dans le plan focal image sont d'une amplitude inférieure au diamètre de la tache de diffraction correspondante, qui est d'environ $\frac{D}{N_{pix}}$ avec:

- $N_{pix}$ le nombre de pixels d'échantillonnage des images planes en fréquence utilisées.

- *D* le diamètre de l'image formée dans le plan focal image de l'objectif.

Un objectif respectant les contraintes (1) à (3) peut être conçu à l'aide d'un programme de calcul optique. Dans ce cas, le programme détermine les trajets optiques. Il peut en particulier déterminer la longueur du chemin optique du rayon entre le point A et le point

$$B(\alpha).$$

Cette longueur sera notée

$$chem(\sin \alpha).$$

Le déphasage, dans le plan focal image, du faisceau correspondant, est alors

$$2\pi \frac{chem(\sin \alpha)}{\lambda}.$$

Ce décalage de phase peut être compensé en multipliant le point de coordonnées

$$(i, j)$$

de l'image plane en fréquence par:

$$\exp\left(-\tilde{j}\frac{2\pi}{\lambda}chem\left(\frac{1}{K}\sqrt{\left(i-\frac{N_{pix}}{2}\right)^2+\left(j-\frac{N_{pix}}{2}\right)^2}\right)\right)$$

Ce qui peut être réalisé en prenant en compte ce déphasage dans la fonction de compensation des aberrations obtenue en 7.16. Si la grandeur *chem*(sin α) ne peut pas être connue par un calcul optique, elle peut également être déterminée par un processus de mesure.

Dans les explications qui suivent, la grandeur *chem*(sin α) sera toujours utilisée sous forme fonctionnelle. Toutefois il est clair qu'elle peut en pratique se présenter sous forme de tableaux, des méthodes de suréchantillonnage / sous-échantillonnage pouvant être utilisées pour l'obtenir sous forme de tableaux de différentes dimensions ou ayant des pas d'échantillonnage différents. Les objectifs (2217) et (2219) doivent dans tous les cas être identiques entre eux.

L'utilisation d'objectifs vérifiant uniquement les conditions (1)(2)(3) implique certaines modifications de la méthode utilisée.

### 7.20.1. Modification de la méthode de calcul des coefficients $K_p$ décrite en 7.6.

Du fait qu'il existe une aberration sphérique importante, il n'est pas possible de focaliser l'image sur le micromètre comme indiqué en 7.6. La procédure de focalisation et la formule de calcul de $K_p$ à partir de l'image du micromètre sont donc supprimées et les coefficient $K_p$ sont calculés directement à partir de l'image en fréquence.

L'objet est un micromètre éclairé par une onde plane et caractérisé par la distance $D_{reel}$ entre deux graduations successives. L'onde issue de l'objet est d'intensité maximale pour des angles par rapport à l'axe optique vérifiant sinα = $\frac{n\lambda_v}{D_{reel}}$ ou *n* est un entier. Les fréquences spatiales correspondantes ont donc comme composante suivant l'axe horizontal: $\frac{n}{D_{reel}}$. Par ailleurs le pas en fréquence sur l'image S[*p,i,j*] est $\frac{1}{K_p\lambda_v}$.

Pour mesurer le coefficient $K_0$ on utilise comme objet le micromètre objectif et on utilise les faisceaux FEG et FRD. A partir du capteur (2239) une image S[0,*i,j*] est obtenue par la procédure décrite en 7.5. Cette image est constituée d'un point central constitué par l'onde d'éclairage directe et d'une série de points alignés correspondant aux différentes fréquences pour lesquelles l'onde issue de l'objet est maximale. Ces points alignés sont mieux visibles si on laisse le capteur saturer pour la fréquence centrale. Sur cette image, on mesure la distance en pixels $D_{fr}$ entre deux points séparés par $N_{fr}$ intervalles.

On a, compte tenu des considérations précédentes: $\dfrac{D_{fr}}{K_0 \lambda_v} = \dfrac{N_{fr}}{D_{reel}}$ soit avec $K_0 = \dfrac{D_{reel} D_{fr}}{\lambda_v N_{fr}}$. La longueur d'onde à considérer ici est la longueur d'onde dans le matériau, supposé être d'indice égal à l'indice nominal $n_v$ de l'objectif soit: $\lambda_v = \dfrac{\lambda}{n_v}$. On a donc finalement:

$$K_0 = \frac{n_v}{\lambda}\ \frac{D_{reel} D_{fr}}{N_{fr}}$$

$K_1$ est mesuré par un processus symétrique à partir du capteur (2229).

### 7.20.2. Modification de la procédure d'obtention des coordonnées relatives des objectifs, décrite en 7.9.1.

Lorsque la procédure décrite en 7.9.1. est appliquée, l'image obtenue sur le CCD (2239) est affectée d'un décalage de phase double de celui qui affecterait l'onde provenant d'un point de l'échantillon. En effet, le faisceau FRGI traverse deux objectifs au lieu d'un. Ce décalage, qui serait inexistant si les objectifs étaient dépourvus d'aberration sphérique, doit être compensé pour obtenir une fonction $F_{rec}$ à partir de laquelle on puisse appliquer le programme décrit en 7.8.

Avant de déterminer les coordonnées $x,y,z$ à l'aide du programme décrit en 7.8., le tableau $F_{rec}$ obtenu doit donc être modifié de la façon suivante:

$$F_{rec}[i,j] = F_{rec}[i,j] \exp\left(-2\,\frac{2\pi}{\lambda}\,chem\left(\frac{1}{K_0}\sqrt{\left(i-\frac{N_{pix}}{2}\right)^2 + \left(j-\frac{N_{pix}}{2}\right)^2}\right)\right)$$

### 7.20.3. Modification de la procédure de calcul de $w_p$ décrite en 7.15.2.

Afin de pouvoir calculer $w_p$, il est indispensable de compenser, pour chaque image plane en fréquence, les décalages de phase dûs aux aberrations sphériques des objectifs de microscope.

Dans le bloc (4002) de la Fig. 57, une étape supplémentaire 1.4. doit être rajoutée après l'étape 1.3.

*Etape 1.4.* : le programme parcourt les indices $i,j$ en effectuant:

$$Ms_k[i,j] = Ms_k[i,j] \exp\left(-\frac{2\pi}{\lambda}\,chem\left(\frac{N_{pix}}{K_0 N_d}\sqrt{\left(i-\frac{N_d}{2}\right)^2 + \left(j-\frac{N_d}{2}\right)^2}\right)\right)$$

### 7.20.4. Modification du calcul de la fonction de compensation des aberrations décrit en 7.16.

La compensation de l'aberration sphérique des objectifs se fait par une modification correspondante de la fonction $D_p$ de compensation des aberrations.

Après l'étape 1 de la procédure décrite en 7.16. il est nécessaire d'ajouter une étape supplémentaire:

*étape 1 bis:* le programme parcourt l'ensemble des indices $i,j$ en effectuant l'opération :

$$Ds_p[i,j] = Ds_p[i,j] \exp\left(-\frac{2\pi}{\lambda}\,chem\left(\frac{N_{pix}}{K_p N_e}\sqrt{\left(i-\frac{N_e}{2}\right)^2 + \left(j-\frac{N_e}{2}\right)^2}\right)\right)$$

### 7.20.5. Mesure de la fonction *chem*

Si la fonction *chem* n'est pas connue par utilisation d'un programme de calcul optique, elle peut être mesurée par le microscope. Cette mesure doit être effectuée immédiatement après la mesure des coefficients $K_p$. Pour réaliser cette mesure on utilise les faisceaux FRGI et FRD. On utilise d'abord la procédure décrite en 7.3.3.1. pour calculer l'image dans le domaine spatial et évaluer sa ponctualité et la position de son centre. La position des objectifs est alors réglée pour avoir l'image la plus ponctuelle possible et pour que cette image soit parfaitement centrée. On détermine alors l'image reçue sur le capteur (2239) à l'aide de la procédure décrite en 7.5. Comme en 7.20.2., l'image est affectée d'un décalage de phase double de celui qui affecterait l'image d'un point de l'objet et on a donc à peu près :

$$S[0,i,j] = \exp\left\{ 2\,\frac{2\pi}{\lambda}\,chem\left( \frac{1}{K_0} \sqrt{\left(i - \frac{N_{pix}}{2}\right)^2 + \left(i - \frac{N_{pix}}{2}\right)^2} \right) \right\}$$

A partir du tableau *S* mesuré il est possible de reconstituer la fonction *chem.* Une manière simple d'obtenir cette fonction, pour un ensemble de points d'échantillonnage indicés par l'entier $p \leq K$, par l'équation :

$$chem\left( \frac{p}{K_0} \right) = \frac{1}{2}\,\frac{\lambda}{2\pi}\,\sum_{i=1}^{p} \text{Arg}\left\{ \frac{S\left[0, i + \dfrac{N_{pix}}{2}, 0\right]}{S\left[0, i - 1 + \dfrac{N_{pix}}{2}, 0\right]} \right\}$$

pour $1 \leq p \leq K$ et *chem*(0)=0, ou Arg désigne l'argument et prend des valeurs entre -π et π.

Les valeurs de *chem* sont içi obtenues uniquement à partir des mesures effectuées sur une droite horizontale. Il est possible d'utiliser des méthodes plus élaborées pour diminuer par filtrage l'effet des perturbations locales, en prenant en compte l'ensemble des points et non seulement ceux situés sur une telle droite.

La fonction *chem* ainsi obtenue peut être présentée sous forme d'un tableau et suréchantillonnée ou sous-échantillonnée comme il a été dit plus haut.

### 7.21. Utilisation d'objectifs présentant de l'aberration sphérique et de la distortion en fréquence.

La présente variante consiste à utiliser des objectifs vérifiant uniquement les propriétés (1) et (2) vues en 7.20 soit :

(1)-L'aberration sphérique affectant l'image formée dans le plan image de l'objectif doit rester inférieure à une fraction du diamètre de cette image.

(2)- L'image, dans le plan focal image, d'un faisceau qui est parallèle dans l'objet observé, doit être ponctuelle.

Un tel objectif peut être constitué de la mème manière que le précédent, mais il peut alors être utilisé dans des conditions plus larges, par exemple avec un nombre de pixels $N_{pix}$ plus élevé. Il peut également être constitué de manière plus simple que le précédent.

Le fait que l'on se soit affranchi de la propriété (3) permet de faciliter encore la construction de l'objectif. Par contre, la compensation des aberrations induites par le non-respect de la propriété (3) entraîne une complexité supplémentaire des algorithmes. Le non-respect de la propriété (3) se traduit par le fait que le coefficient de proportionnalité entre les coordonnées en pixels et les composantes horizontales de la fréquence spatiale n'est pas constant. Les coordonnées *i* et *j* en pixels des points obtenus sur le capteur CCD doivent être multipliées par un coefficient.

$$A(r)$$

dépendant de la distance en pixels r entre le point considéré et le centre optique. La méthode utilisée diffère donc de celle décrite en 7.20. par les points suivants :

- une procédure spécifique est utilisée pour déterminer

$$A(r).$$

- l'image plane en fréquence qui était obtenue directement à partir des intensités reçues en chaque point du capteur CCD doit être modifiée avant de pouvoir être utilisée, ce dans chaque étape de la procédure ou elle est utilisée.

### 7.21.1. calcul de

$$\underline{A(r)}.$$

Pour déterminer le coefficient

$$A(r)$$

on utilise comme objet un micromètre objectif. Le point d'impact direct du faisceau d'éclairage doit impérativement être confondu avec le centre optique. Comme représenté sur la Fig.91 l'image obtenue sur le capteur CCD en l'abscence d'onde de référence est constituée d'un point central $P_0$ confondu avec le centre optique et d'une série de points alignés d'intensité inférieure à $P_0$. On note $P_n$ ceux de ces points qui sont sur une demi-droite donnée originaire de $P_0$, la valeur maximale de l'indice n étant notée $N$. On note $D_n$ la distance en pixels entre le point $P_n$ et le centre optique. On a alors:

$$A\left(\frac{D_n + D_{n+1}}{2}\right) = \frac{N}{D_N}\left(D_{n+1} - D_n\right).$$

Cette équation donne les valeurs de $A$ en un nombre limités de points et une méthode de suréchantillonnage doit être utilisée pour obtenir la valeur de $A$ en un nombre suffisant de points.

### 7.21.2. Modification des images planes en fréquence obtenues.

On note $S_{brut}[i,j]$ le tableau représentant une image plane en fréquence obtenue par exemple comme indiqué en 7.5. $S_{brut}[i,j]$ doit être modifié pour générer un tableau $S_{fin}[i,j]$ qui correspondra véritablement à l'image plane en fréquence. Cette médication peut être effectuée comme suit:

- génération d'un tableau $S1$, de dimensions $N_{sur}$x$N_{sur}$ avec par exemple $N_{sur}$ = 2048. Ce tableau est initialisé à 0 puis le programme effectue, pour $i$ et $j$ allant de 0 à $N_{pix}$-1:

$$S1\left[A\left(i\frac{N_{sur}}{N_{pix}}\right), A\left(j\frac{N_{sur}}{N_{pix}}\right)\right] = S_{brut}[i,j]$$

- Transformation de Fourier inverse du tableau $S1$ menant à un tableau $S2$.
- Extraction de la partie centrale du tableau $S2$, pour obtenir un tableau $S3$ de dimensions $N_{pix}$ x $N_{pix}$. Le programme effectue, pour $i$ et $j$ allant de 0 à $N_{pix}$ -1:

$$S3[i, j] = S2\left[ i - \frac{N_{pix}}{2} + \frac{N_{sur}}{2}, j - \frac{N_{pix}}{2} + \frac{N_{sur}}{2} \right]$$

- transformation de Fourier du tableau $S3$. Le tableau ainsi obtenu est le tableau $S_{fin}[i,j]$ qui constitue l'image plane en fréquence devant être utilisée dans l'ensemble des opérations.

Toutes les images planes en fréquences brutes obtenues dans chaque étape de la procédure de réglage et de calcul d'image tridimensionnelle doivent être modifiées de cette manière avant d'être intégrées dans les calculs.

## 8. Quatrième mode de réalisation (mode préféré)

Ce mode de réalisation est considéré comme le meilleur mode de réalisation car dans le domaine du visible c'est celui qui permet les meilleures performances en termes de rapidité et de qualité d'image.

## 8.1. Principes

Le quatrième mode de réalisation diffère du troisième

- par l'utilisation d'un dispositif de déviation du faisceau différent
- par l'introduction d'un dispositif supplémentaire permettant de supprimer l'onde directe parvenant sur les CCD pour éviter ou limiter l'effet de saturation.
- par le fait que l'échantillonnage est 'régulier', c'est-à-dire que l'image ponctuelle d'un faisceau d'éclairage sur le CCD coïncide avec le centre d'un pixel du CCD.

Les dispositifs de déviation du faisceau et de suppression de l'onde directe sont basés sur l'emploi d'un modulateur spatial (SLM: spatial light modulator) commercialisé par la société Displaytech. Celui-ci est constitué d'une matrice de 256x256 éléments fonctionnant chacun comme un rotateur de polarisation indépendant. Il fonctionne en réflection, c'est-à-dire que la lumière incidente sur le SLM est réfléchie avec une polarisation modifiée, ladite modification de polarisation étant différente en chaque point de la matrice. Il existe en deux versions: l'une destinée à la modulation d'amplitude, dans laquelle pour une des tensions de-commande, l'axe neutre du cristal liquide ferroélectrique (FLC: ferroelectric liquid crystal) est orienté dans la direction définie par un des axes de la matrice, et une autre destinée à la modulation de phase, dans laquelle les deux positions possibles de l'axe neutre du FLC sont symétriques par rapport à un des axes de la matrice.

La réalisation d'un échantillonnage régulier et la bonne maîtrise de la trajectoire du faisceau supposent également une utilisation appropriée des lentilles.

## 8.1.1. Maîtrise de la trajectoire du faisceau.

Lorsqu'un faisceau plan mais non dirigé selon l'axe optique s'éloigne de son point d'origine, il s'éloigne de l'axe optique et peut devenir inexploitable. La fig.67 illustre une méthode permettant de maîtriser la position d'un tel faisceau par rapport à l'axe optique. Un faisceau parallèle (4800) issu d'un plan (4801) doit être utilisé dans un plan (4804) éloigné de (4801). S'il se propage en ligne droite, il s'éloigne de l'axe optique et devient inexploitable (4805).

Les lentilles (4802) et (4803) ont même distance focale $f$. Le plan (4801) est le plan focal objet de (4802). (4804) est le plan focal image de (4803). Le plan focal objet de (4803) est confondu avec le plan focal image de (4802) et représenté par les pointillés (4806).

Dans le plan (4801) le faisceau (4800) est parallèle et centré sur l'axe optique, c'est-à-dire que son intersection avec ce plan forme un disque centré sur l'axe optique. Un tel plan sera appelé « plan d'espace » et noté par la lettre E.

Dans le plan (4806) le faisceau est ponctuel, c'est-à-dire que son intersection avec le plan est pratiquement réduite à un point. Un tel plan sera appelé « plan de fréquences » et noté par la lettre $F$.

Dans le plan (4804) le faisceau est à nouveau centré et parallèle. Ce plan est donc un nouveau plan d'espace. Il est l'image du plan (4801) par le système optique constitué des lentilles (4802) et (4803).

Le dispositif permet de reformer dans le plan (4804) un faisceau équivalent à celui présent dans le plan (4801), mais symétrisé par rapport à l'axe optique.

En modifiant la distance focale de la deuxième lentille comme sur la Fig.68, on peut modifier l'angle du faisceau par rapport à l'axe optique et sa section. La distance focale de la première lentille est $f_1$, celle de la deuxième lentille est $f_2$, la distance entre les deux lentilles est $f_1 + f_2$. L'angle du faisceau par rapport à l'axe optique est multiplié par $\frac{f_1}{f_2}$ et la section du faisceau est multipliée par $\frac{f_2}{f_1}$.

### 8.1.2. Dispositif de déviation de faisceau

Une direction en sortie du dispositif de déviation équivaut à une fréquence spatiale donnée et on utilisera dans la suite les termes 'fréquence' ou 'angle' pour définir une déviaion.

Le dispositif de déviation de faisceau utilise un SLM de phase dont toute la surface est éclairée par un faisceau plan. Lorsque un profil de phase (4601) en créneaux comme celui indiqué Fig. 64 est appliqué sur une telle surface, l'intensité diffractée à longue distance est maximale pour les angles $\alpha$ et $-\alpha$ ou $\alpha$ est tel que $h = \frac{\lambda}{2}$ soit $d \sin \alpha = \frac{\lambda}{2}$. Ces deux angles définissent deux faisceaux diffiactés symétriques (4602) et (4603) issus du SLM. Le nombre de pixels du SLM utilisé étant de $N_s$ et le pas (distance entre deux pixels) de $p_s$, sina varie de 0 à $\frac{\lambda}{2p_s}$ par pas de $\frac{\lambda}{N_s p_s}$ soit au total $\frac{N_s}{2}$ valeurs possibles en excluant le zéro. Ce principe est appliqué pour générer un faisceau de direction donnée. Cependant ce dispositif simple n'est pas suffisant pour les raisons suivantes:

- On cherche a générer une seule fréquence et il faut donc ensuite supprimer un des deux faisceaux générés, par exemple (4602)
- Le faisceau issu de ce système de modulation simple est bruité, en ce sens qu'en plus de la fréquence correspondant au maximum d'éclairement de nombreuses fréquences parasites sont présentes.

Pour supprimer les fréquences parasites et le faisceau symétrique, on utilise un système dont le schéma de principe est utilisé Fig.65. Sur ce schéma, on a représenté les SLM comme s'ils fonctionnaient par transmission, et on n'a pas représenté les polariseurs associés à ces SLM. Un faisceau plan (4611) incident sur un SLM de phase (4612) fonctionnant comme indiqué ci-dessus est diffracté dans deux directions représentées en traits pleins et en pointillés. (4612) est dans le plan focal objet d'une lentille (4613) . Dans le plan focal image de (4613), un faisceau d'angle donné en sortie de (4612) donne une image ponctuelle. Le plan focal objet de la lentille (4612) est un plan d'espace, et le plan focal image de (4612) est un plan de fréquence. Dans le plan de fréquence, on place:

- un diaphragme (4615) dont la fonctionnalité est d'arrêter le faisceau symétrique (en pointillé).
- un SLM (4614) dont la fonctionnalité est de supprimer les fréquences parasites. Lorsque le SLM (4612) est commandé pour générer une fréquence donnée, cette fréquence correspond à un point du SLM (4614). Ce point est commandé pour laisser passer le faisceau, et les autres points du SLM (4614) sont commandés pour arrêter le faisceau. Les fréquences parasites sont donc supprimées.
  Une seconde lentille (4616) transforme ensuite à nouveau le point obtenu dans le plan de fréquence en une direction correspondante en sortie du dispositif.

### 8.1.3. Dispositif de suppression de l'onde directe.

L'onde ayant traversé l'objectif et parvenant au CCD présente des fréquences de forte intensité autour du point d'impact direct du faisceau. Dans le mode de réalisation précédent, ceci entraînait une saturation du CCD lorsqu'une faible atténuation de faisceau était utilisée.

Pour supprimer ou atténuer cet effet de saturation on utilise un dispositif dont le principe est indiqué sur la Fig. 66, sur laquelle le SLM est représenté comme s'il fonctionnait en transmission, et sur laquelle le polariseur associé au SLM n'est pas représenté.

L'onde issue de l'objet et ayant traversé l'objectif est filtrée dans un plan image par le diaphragme (4700). Une lentille (4703) permet de former dans son plan focal image, qui constitue un plan de fréquence, une image en fréquence de cette onde. Dans le mode de réalisation précédent, on plaçait directement un CCD dans ce plan de fréquence. Dans le mode de réalisation présent, on y place un SLM (4704). Le faisceau direct (4702), non dévié par l'échantillon, est représenté en traits pointillés. Son image sur le SLM est ponctuelle. En obscurcissant le pixel correspondant, et éventuellement quelques pixels proches, on supprime ce point d'éclairage intense. Les autres pixels du SLM sont laissés en position passante, ce qui permet à un rayon (4701) de fréquence autre de traverser le SLM.

Toutefois, le SLM n'est pas un système 'parfait' en ce sens que dans la zone ou il est laissé transparent, il constitue en fait une 'grille', chaque pixel étant passant mais un certain espace obscurci étant laissé entre deux pixels. Cette grille diffracte les rayons la traversant, générant des rayons diffractés indésirables qui se superposent au faisceau utile. On a représenté en pointillé (4710) une direction possible de ce faisceau en sortie du SLM (4704). Une lentille (4705) permet à partir du faisceau ayant traversé (4704) de reformer un plan d'espace identique à celui dans lequel est placé (4700). Dans ce plan d'espace les rayons indésirables diffracté par (4704) se trouvent hors de l'image du diaphragme (4700). Un diaphragme (4706) placé dans un plan d'espace et dont l'ouverture coïncide avec l'image de l'ouverture du diaphragme (4700) permet donc de supprimer ces rayons diffractés.

Une dernière lentille (4708) permet de reformer un plan fréquence dans lequel est placé le CCD (4709).

### 8.1.4. Obtention d'un échantillonnage régulier.

Dans le troisième mode de réalisation, les valeurs de *ni,nj,nk* obtenues à l'issue de l'opération 1 de l'étape 3 de la procédure d'imagerie décrite en 7.17.2 ne sont pas entières. Des entiers étant nécessaires dans la suite de l'algorithme, on prend pour chacune de ces valeurs l'entier le plus proche. Néanmoins, ceci constitue une approximation qui peut se traduire par des perturbations sur l'image tridimensionnelle générée. Dans le présent mode de réalisation, le système optique est prévu pour que lesdites valeurs de *ni* et *nj* soient pratiquement entières, c'est-à-dire pour qu'il y ait échantillonnage régulier suivant les axes *ni* et *nj*. L'échantillonnage suivant *nk* reste non régulier, néanmoins cette méthode réduit fortement les perturbations.

Une onde d'éclairage donnée produite par le système de déviation du faisceau produit d'une part un faisceau direct allant frapper un des capteurs et d'autre part un faisceau indicateur inverse allant frapper l'autre capteur. Réciproquement, un pixel donné d'un capteur peut être atteint par un faisceau direct produit par une onde d'éclairage ou par un faisceau indicateur inverse produit par une autre onde d'éclairage.

Pour qu'il y ait échantillonnage régulier, chaque onde d'éclairage utilisée doit produire un faisceau direct et un faisceau inverse parvenant chacun au centre d'un pixel correspondant du CCD correspondant, les coordonnées du pixel atteint par le faisceau direct sur un CCD étant les mêmes que celles du pixel atteint par le faisceau indicateur inverse sur l'autre CCD. A chaque pixel du CCD qui se trouve dans la zone délimitée par l'ouverture des objectifs doivent correspondre deux faisceaux d'éclairage pour lesquels le pixel est atteint respectivement par le faisceau direct et le faisceau indicateur inverse.

La représentation fréquentielle obtenue sur le CCD peut être transformée de diverses manières du fait des imprécisions dans les caractéristiques du système.

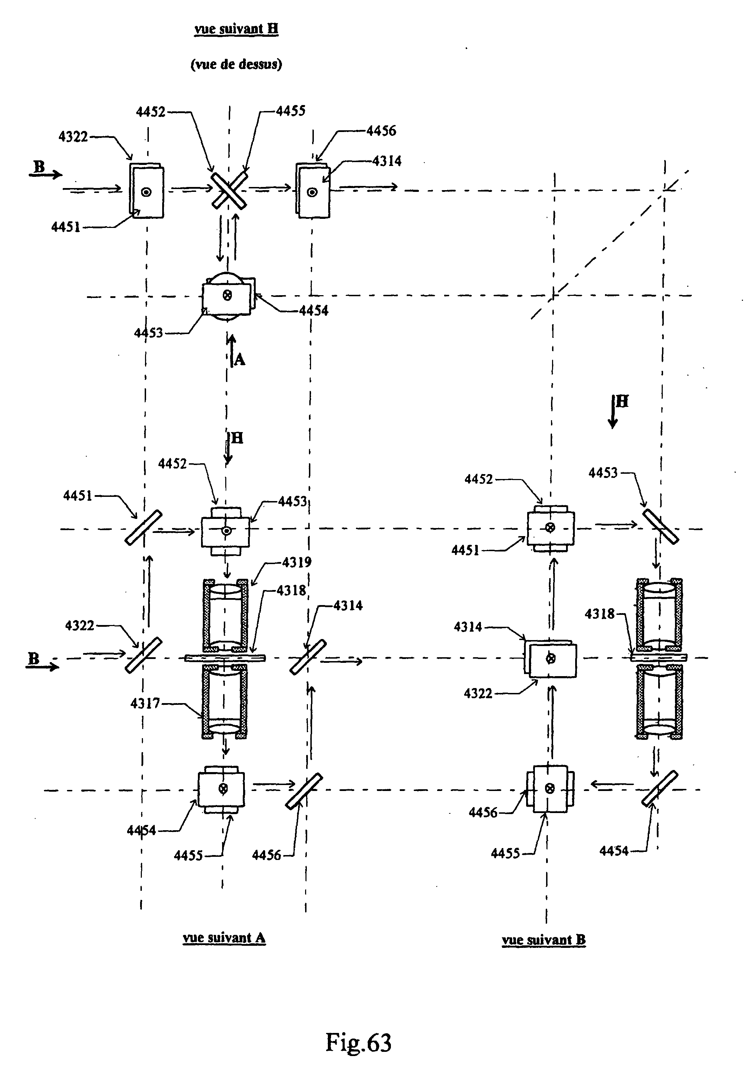

- par translation. Cette translation peut être compensée par des déplacements correspondants de miroirs.
- par homothétie. Une variation de la distance focale de la lentille formant l'image sur le CCD se traduit par une homothétie sur cette image
- par rotation. La partie du système comprenant les deu objectifs, consistant en l'ensemble (4460) de la Fig.62, détaillé Fig.63, si elle n'est pas parfaitement construite, entraîne une rotation de l'image produite sur le CCD.

Une homothétie appliquée à l'image produite sur le CCD invalide la correspondance exacte entre un pixel du CCD, qui est fixe, et les points d'impact du faisceau direct ou inversé, qui sont modifiés par l'homothétie. Pour éviter une telle homothétie, il est nécessaire de maîtriser avec précision la distance focale de la lentille formant l'image. Un système approprié permet le réglage de cette distance focale.

La rotation produite par (4460) est appliquée seulement au faisceau direct. Elle peut être compensée par une rotation correspondante du CCD. Mais cette opération décale les pixels du CCD par rapport aux points d'impact du faisceau inverse. Il est donc nécessaire d'effectuer une rotation correspondante du faisceau indicateur inverse pour annuler cet écart. Un système approprié permet cette rotation.

### 8.1.4.1. Réglage de la distance focale.

Pour obtenir un élément optique dont la distance focale soit ajustée avec précision autour d'une valeur centrale $f_c$, on associe deux lentilles de distance focale $f$ séparées par une distance $d$.
La distance focale de l'ensemble est alors

$$f_c = \frac{f}{2}\left(\frac{1}{1-\dfrac{d}{2f}}\right)$$

Si on veut régler $f_c$ sur une largeur de +-1%, soit $r$=0,01, alors il faut avoir $\dfrac{d}{2f} = r$ avec à peu près $f_c = \dfrac{f}{2}$. La valeur de d adoptée est donc: $d = 4\, f_c r$
La valeur de f est alors

$$f = f_c + \sqrt{f_c(f_c - d)}$$

Une ensemble de focale $f_c$ réglable à +-$r$ est donc constitué de deux lentilles de focale $f$ séparées par une distance $d$ avec:

$$d = 4\ f_c r$$

$$f = f_c + \sqrt{f_c(f_c - d)}$$

La distance focale de l'ensemble est ajustée en faisant varier la distance d.
De tels doublets sont utilisés en divers points du dispositif pour des raisons similaires.

### 8.1.4.2. Réglage en rotation.

Pour régler en rotation un faisceau d'éclairage on utilise un dispositif décrit par la Fig. 69, inséré sur la trajectoire du faisceau d'éclairage dans une zone ou ce faisceau est parallèle et donc défini par son vecteur d'onde. Ce dispositif est constitué d'un ensemble de miroirs (4901) à (4906). Les miroirs (4901) (4902) sont fixes. Les miroirs (4903) (4904) (4905) (4906) sont solidaires entre eux et l'ensemble (4910) constitué par ces miroirs est mobile en rotation autour d'un axe (4909). Les flèches représentées dans le plan de la figure représentent les vecteurs d'onde du faisceau en chaque point du dispositif.
La transformation d'un vecteur d'onde par un miroir comporte une symétrisation vectorielle par rapport à un axe orthogonal au plan du miroir et une inversion du sens du vecteur. Le nombre de miroirs étant pair les inversions s'annulent et on s'intéresse içi à la partie symétrisation. Le couple de miroirs (4901) (4902) effectue deux symétrisations successives d'axes orthogonaux entre eux, ce qui équivaut à une symétrie unique d'axe (4907). De la même manière, le couple de miroirs (4903)(4904) effectue une symétrie d'axe (4908). Les miroirs (4905) (4906) effectuent deux symétries vectorielles de même axe, qui s'annulent l'une l'autre. L'opération effectuée par l'ensemble du dispositif est donc la composée d'une symétrie vectorielle d'axe (4907) et d'une symétrie vectorielle d'axe (4908). La Fig.70 représente, en vue suivant *A*, les axes (4907) et (4908). Lorsque aucune rotation de (4910) n'a été effectuée, ces axes sont confondus et la composée des deux symétries est l'identité. Le vecteur d'onde du faisceau n'est pas modifié par le dispositif.
Lorsque une rotation d'angle $\alpha$ est appliquée à l'ensemble (4910), les deux axes sont décalés d'un angle $\alpha$ comme indiqué sur la Fig.70. La composition des deux symétries est alors une rotation vectorielle d'angle $2\alpha$.
Le système permet donc d'appliquer à une onde d'éclairage une rotation vectorielle compensant celle dûe à l'ensemble (4460).

### 8.2. Description physique.

Un schéma d'ensemble du système est constitué par les Fig. 61,62,63. Sur ces figures, les éléments directement équivalents à des éléments correspondants des figures 27 et 28 sont numérotés en prenant le numéro de l'élément correspondant sur les figures 27 et 28 et en remplaçant les deux premiers chiffres par 43. Par exemple 2204 donne 4304. Les éléments n'ayant pas d'équivalents directs sur les figures 27 et 28 ont des numéros commençant par 44. Le plan des Fig. 61 et 62 est un plan horizontal, les figures constituant une vue de dessus. Les éléments du système sont fixés sur une table optique convenablement isolée des vibrations. La Fig. 63 représente en plusieurs vues la partie du microscope contenant les objectifs, qui constitue une structure tridimensionnelle.
Un laser (4300) polarisé dans le sens vertical génère un faisceau dont le vecteur champ électrique est donc dirigé selon un axe orthogonal au plan de la figure. Ce faisceau traverse un élargisseur de faisceau (4301). Le faisceau issu de l'élargisseur est ensuite divisé en faisceau de référence et faisceau d'éclairage par un miroir semi-transparent (4302).
Le faisceau d'éclairage traverse un diaphragme (4348), un filtre (4303) permettant d'en ajuster l'intensité, puis un dispositif de décalage de phase (4304) et un dispositif d'atténuation de faisceau (4305).
Il traverse ensuite une lentille (4401). Cette lentille focalise le faisceau dans un plan ou est placé un trou (4402) (« pinhole » en anglais) suffisamment large pour ne pas perturber le faisceau, qui a pour fonction d'arrêter en partie les faisceaux réfléchis revenant en sens inverse sur le laser. Le faisceau est ensuite réfléchi sur un des cotés d'un double miroir (4403). Les deux cotés réfléchissants de (4403) forment un angle droit. Le faisceau traverse ensuite une lentille (4404) dont le plan focal objet coïncide avec le plan focal image de (4401), puis se dirige vers un SLM de phase (4405). Le SLM de phase (4405) est placé au foyer image de (4404). Le faisceau réfléchi par (4405) retraverse (4404) et est réfléchi par la deuxième face du double miroir (4403). Le faisceau traverse alors un diaphragme (4406) placé au foyer image de (4404) pour le faisceau réfléchi par (4405), que l'on appellera second foyer image de (4404). Il traverse ensuite une lentille (4407) dont le foyer objet coïncide avec le foyer image de (4404). Le faisceau traverse ensuite un polariseur (4408). Il est ensuite réfléchi sur un miroir (4409) placé un peu derrière le plan focal image de (4407). Il traverse ensuite un doublet de lentilles (4411)(4410) du type décrit en 8.1.4.1. Le plan focal objet de ce doublet coïncide avec le plan focal image de (4407). Le SLM d'amplitude (4412) est placé dans le plan focal image de ce doublet. Le faisceau ayant traversé ce doublet se dirige vers (4412) qui le réfléchit. Il retraverse alors le doublet, puis traverse un polariseur (4413) et un diaphragme (4414) placé dans le second plan focal image du doublet (4410) (4411). Il traverse alors un doublet formé de (4415) et (4416). Le plan focal objet du doublet (4415)(4416) coïncide avec le plan focal image du doublet (4410)(4411). Il est alors dirigé vers le SLM d'amplitude (4417) qui le réfléchit. Il retraverse alors le doublet (4415)(4416). Il est réfléchi par un miroir (4418), traverse un diaphragme (4419) placé au second foyer image du doublet (4415)(4416), puis traverse un polariseur (4420) et une lentille (4421) dont le plan focal objet coïncide avec le second plan focal image du doublet (4415)(4416). Il parvient alors à un miroir semi-réfléchissant (4307) qui le sépare en un faisceau d'éclairage droit FED et un faisceau d'éclairage gauche FEG.

Le faisceau FEG est alors réfléchi par un miroir (4432) et traverse un doublet de lentilles (4433)(4434) qui peut, en fonction des conditions d'encombrement, se trouver avant ou après le miroir (4432). Le plan focal objet du doublet (4433)(4434) coïncide avec le plan focal image de (4421). Le faisceau est ensuite réfléchi par un miroir (4435) puis par un ensemble (4436) équivalent à l'ensemble (4910) de la Fig.69, mobile autour d'un axe (4450) et constitué des miroirs (4446)(4447)(4448)(4449). Le faisceau traverse ensuite un extincteur de faisceau (4437). Cet extincteur de faisceau est construit comme l'atténuateur de faisceau décrit en 7.2.2. mais avec un angle θ nul . Le faisceau traverse ensuite un rotateur de polarisation (4341) puis est séparé par le miroir semi-transparent (4325) en un faisceau d'éclairage principal dirigé vers (4324), que l'on notera encore FEG, et un faisceau indicateur inverse dirigé vers (4342), que l'on notera FEGI. Le doublet (4433)(4434) a donc deux plans focaux image, l'un dans la direction du faisceau principal et l'autre dans la direction du faisceau indicateur inverse.

La lentille (4324) est placée en avant du plan focal image du doublet (4433)(4434) de sorte que le plan focal image de ce doublet dans la direction du faisceau principal reste virtuel. La lentille (4324) forme une image de ce plan focal, et cette image doit être dans le plan du diaphragme (4323).

Le plan focal image de ce doublet dans la direction du faisceau FEGI coïncide avec le plan focal objet d'une lentille (4342). Le faisceau FEGI traverse cette lentille qui le focalise sur un miroir (4343) pouvant optionellement être obturé par un obturateur (4359). Le faisceau réfléchi par ce miroir retraverse la lentille (4342) puis est à nouveau réfléchi par (4325). Le faisceau FEGI traverse alors un rotateur de polarisation (4326) puis un polariseur (4438). Il est alors réfléchi par une face du double miroir (4439). Il traverse alors le doublet (4440)(4441) et se dirige vers le SLM d'amplitude (4442). Le plan focal objet du doublet (4440)(4441) doit être confondu avec un plan focal image du doublet (4433)(4434). Le SLM d'amplitude (4442) est placé dans le plan focal image du doublet (4440)(4441). Le faisceau réfléchi par le SLM (4442) retraverse le doublet (4440)(4441), est réfléchi par la seconde face de (4439), et se dirige vers un diaphragme (4443) placé dans le second plan focal image du doublet (4440)(4441). Le faisceau traverse (4443) puis un doublet (4444)(4445), un polariseur (4353), et parvient au CCD (4329) monté sur la caméra (4330). Le plan focal objet de (4444)(4445) coïncide avec le second plan focal image du doublet (4440)(4441). Le CCD (4329) est placé dans le plan focal image de (4444)(4445).

Le faisceau FEG traverse la lentille (4324) et le diaphragme (4323). Il est alors successivement réfléchi par les miroirs (4322)(4451)(4452)(4453). Il traverse l'objectif (4319) puis l'échantillon (4318), puis l'objectif (4317). Il est alors successivement réfléchi par les miroirs (4454)(4455)(4456)(4314) et parvient au diaphragme (4313). Le diaphragme (4323) doit être placé dans le plan ou l'objectif (4319) forme normalement l'image de l'échantillon, soit à 160 mm du col de l'objectif pour un objectif standard. Le diaphragme (4313) doit être placé dans le plan ou l'objectif (4317) forme normalement l'image de l'échantillon.

Le faisceau FEG traverse alors la lentille (4312) qui est placée de telle manière que, dans le cas ou une lame transparente est utilisée (abscence de perturbations par l'objet), et en sortie de cette lentille, le faisceau soit parallèle. Le faisceau traverse alors le rotateur de polarisation (4338), le polariseur (4423), est réfléchi sur une face de (4424), traverse le doublet (4425)(4426), est réfléchi sur le SLM d'amplitude (4427), retraverse le doublet (4425)(4426), est réfléchi sur la deuxième face de (4424), traverse le diaphragme (4428), le doublet (4429)(4430), le polariseur (4352), et parvient au CCD (4339) monté sur la caméra (4384). L'image du diaphragme (4313) par la lentille (4312) est confondue avec le plan focal objet du doublet (4425)(4426). Le SLM (4427) est dans le plan focal image du doublet (4425)(4426). Le diaphragme (4428) est dans le second plan focal image du doublet (4425)(4426). Le plan focal objet du doublet (4430)(4429) coïncide avec le second plan focal image du doublet (4425)(4426).Le CCD (4339) est placé dans le plan focal image du doublet (4430)(4429).

Le faisceau d'éclairage droit FED traverse une lentille (4431) et est réfléchi par un miroir (4308). En fonction des conditions d'encombrement la position de la lentille et du miroir peut être inversée. Le faisceau FED traverse ensuite l'extincteur de faisceau (4422) identique à (4437), puis le rotateur de polarisation (4310). Il est séparé par un miroir semi-transparent (4311) en un faisceau d'éclairage principal que l'on notera encore FED et un faisceau indicateur inverse que l'on notera FEDI.

Le faisceau FEDI traverse ensuite la lentille (4331), est réfléchi par le miroir (4332), retraverse (4331), est réfléchi en direction de (4338) par le miroir semi-transparent (4311). (4332) peut optionellement être obturé par l'obturateur (4358). (4332) est dans un plan focal de (4331), et l'autre plan focal de (4331) coïncide avec l'image de (4313) par (4312). Le faisceau FEDI suit ensuite entre (4311) et (4339) un parcours symétrique de celui suivi par le faisceau FEGI entre (4325) et (4329).

Le faisceau d'éclairage principal FED suit entre (4311) et (4329) un parcours symétrique de oelui suivi par le faisceau d'éclairage principal FEG entre (4325) et (4339).

Le faisceau de référence, séparé du faisceau d'éclairage par le miroir partiellement transparent (4302), est séparé en faisceau de référence droit FRD et faisceau de référence gauche FRG par le miroir semi-transparent (4335).

Le faisceau de référence droit FRD est ensuite réfléchi par le miroir (4344), puis traverse le filtre (4356) et le diaphragme (4349). Il est ensuite séparé par le miroir semi-transparent (4345) en un faisceau de référence dirigé vers le CCD (4339), que l'on notera encore FRD, et un faisceau indicateur inverse que l'on notera FRDI. Le faisceau FRDI traverse la lentille (4346), est focalisé sur le miroir (4347) qui le réfléchit, retraverse la lentille (4346) et est partiellement réfléchi en direction de (4430). L'obturateur (4357) permet optionellement de supprimer ce faisceau indicateur inverse.

Le faisceau de référence gauche FRG est réfléchi par les miroirs (4354)(4336) puis traverse un filtre (4355), un dispositif de décalage de phase (4351), un diaphragme (4350). Il est alors séparé par le miroir semi-transparent (4328) et un faisceau de référence dirigé vers (4329), que l'on notera encore FRG, et un faisceau indicateur inverse que l'on notera FRGI. Le faisceau FRGI traverse la lentille (4381), est focalisé sur le miroir (4382) qui le réfléchit, retraverse en sens inverse (4381), et est partiellement réfléchi par (4328). L'obturateur (4360) permet optionellement de supprimer ce faisceau indicateur inverse.

Pour aider à la compréhension du schéma le faisceau d'éclairage a été représenté en traits pleins. Il passe alternativement par des plans de fréquence et des plans d'espace, au sens défini en 8.1.1. Dans un plan de fréquence, le faisceau est concentré en un point. Dans un plan d'espace, il est parallèle et 'centré', au sens il éclaire une zone circulaire symétrique par rapport à l'axe optique, ne dépendant pas de son orientation. La lettre (*E*) adjointe au numéro d'un élément signifie que cet élément est dans un plan d'espace. En l'abscence d'élément optique, la lettre (*E*) seule peut également désigner un plan d'espace. De même la lettre (*F*) désigne un plan de fréquence. On a mis une lettre (*E*) sur le diaphragme (4313), bien que ce diaphragme ne soit pas exactement un plan d'espace: c'est l'image de ce diaphragme par la lentille (4312) qui est un plan d'espace virtuel et qui doit être compris comme désigné par la lettre *E*. De même, le diaphragme (4323) ne correspond pas exactement à un plan d'espace.

Inversement, le faisceau de référence a été représenté en traits pointillés. Le faisceau de référence est concentré en un point dans les plans d'espace. Il est parallèle et centré dans les plans de fréquence.

Les plans d'espace et de fréquence alternent sur la trajectoire du faisceau. Un plan d'espace et un plan de fréquence successifs sont toujours séparés par une lentille ou un doublet. Leur succession suit la logique exposée en 8.1. Un plan d'espace et un plan de fréquence séparés par une lentille (ou un doublet) occupent toujours deux plans focaux de cette lentille (ou de ce doublet).

Le dispositif de déviation du faisceau dont le principe a été décrit en 8.1.2. est mis en oeuvre par des éléments correspondant à ceux de la Fig.65. Les SLM (4612) et (4614) sont respectivement matérialisés par les SLM (4405) et (4412). Le diaphragme (4615) est matérialisé par (4406). Le dispositif a été adapté pour tenir compte du fait que les SLM fonctionnent en réflexion, pour inclure les polariseurs, et pour positionner le diaphragme (4406) dans un plan différent du SLM (4412). Le SLM (4417) a été rajouté pour effectuer un filtrage supplémentaire de l'onde d'éclairage, améliorant ainsi la suppression des fréquences parasites.

Le dispositif de suppression de l'onde directe décrit en 8.1.3. est mis en oeuvre par des éléments correspondant à ceux de la Fig. 66. Le SLM (4704) correspond au SLM (4427). Les diaphragmes (4700) et (4706) correspondent respectivement à (4313) et (4428). Le CCD (4709) correspond à (4339). La lentille (4703) correspond au doublet (4425)(4426). La lentille (4705) correspond au même doublet traversé en sens inverse. La lentille (4708) correspond au doublet (4430)(4429). Des correspondances symétriques sont valables pour la partie symétrique du microscope.

Les doublets utilisés permettent une application du principe décrit en 8.1.4.1. Ils sont constitués de deux lentilles qui peuvent être déplacées conjointement, une des lentilles pouvant également être déplacée par rapport à l'autre.

Le système constitué par (4436) réalise le principe décrit en 8.1.4.2.

Sur chaque polariseur, l'axe passant est indiqué par un trait, représentant un axe dans le plan de la figure, ou un rond, représentant un axe dans un plan orthogonal au plan de la figure.

Sur chaque SLM, un repère est représenté qui constitue celui dans lequel les coordonnées des pixels sont évaluées. Sur chaque SLM d'amplitude, on a représenté en plus la position de l'axe neutre qui correspond à une extinction du faisceau, avec la même convention que pour l'axe passant des polariseurs. L'autre position possible de l'axe neutre est obtenue à partir de la position d'extinction par une rotation d'environ 40 degrés dans un sens ou un autre. Sur le SLM de phase (4405) les deux positions de l'axe neutre sont symétriques par rapport à un axe vertical.

Sur les rotateurs de polarisation, on a indiqué un repère. Une position de l'axe neutre, correspondant à une tension appliquée de -5V, est l'axe horizontal du repère. Dans l'autre position, l'axe neutre est approximativement dirigé suivant un vecteur de coordonnées égales sur les deux axes.

Les polariseurs (4408)(4413)(4420) peuvent être des prismes de Glan-Thomson, qui présentent l'avantage d'une faible absorption. Ils entraînent toutefois une aberration sphérique trop importante pour être utilisés sur le chemin de l'onde issue de l'objet. Les polariseurs (4423) (4352) (4438) (4353) sont de préférence des polariseurs dichroïques constitués d'un film dichroïque maintenu entre deux plaques de verre suffisamment fines.

Les objectifs utilisés peuvent être des objectifs classiques ou des objectifs tels que décrits dans les paragraphes 7.19 à 7.21. Le « mode de réalisation préféré » consiste à utiliser des objectifs du type décrit en 7.20., qui permettent d'améliorer la distance de travail et/ou l'ouverture.

L'ensemble des lentilles utilisées dans le système sont des achromats ou des lentilles composées, minimisant l'aberration sphérique.

La plupart des éléments sont montés sur des positionneurs permettant un réglage précis de leur position. Les caractéristiques de ces positionneurs seront indiquées en 8.5. en même temps que la procédure de réglage. L'échantillon, dont les caractéristiques de positionnement ne sont pas explicitées en 8.5., est monté sur un positionneur trois axes en translation.

### 8.3. Dimensionnement

Il est nécessaire de préciser la distance focale de chaque lentille et l'ouverture de chaque diaphragme pour dimensionner le système. Pour les doublets on précisera la distance focale du doublet.

$f_i$ désigne la distance focale de la lentille (ou du doublet) numéro $i$. les lentilles étant numérotées comme suit:

| indice $i$ | numéro de la lentille sur le schéma, ou , entre parenthèses, des deux lentilles constituant un doublet |
|---|---|
| 1 | 4401 |
| 2 | 4404 |
| 3 | 4407 |
| 4 | (4410,4411) |
| 5 | (4415,4416) |
| 6 | 4421 |
| 7 | 4431 ou (4433,4434) |
| 8 | (4425,4426) ou (4440,4441) |
| 9 | (4430,4429) ou (4444,4445) |
| 10 | 4312 ou 4324 |
| 11 | 4331 ou 4342 |
| 12 | 4346 ou 4381 |

$l_i$ désigne la largeur du diaphragme numéro $i$, les diaphragmes étant numérotés comme suit:

| indice $i$ | numéro du diaphragme sur le schéma |
|---|---|
| 0 | 4349 ou 4350 |
| 1 | 4348 |
| 2 | 4406 |
| 3 | 4414 |

(suite)

| indice $i$ | numéro du diaphragme sur le schéma |
|---|---|
| 4 | 4419 |
| 5 | 4313 ou 4323 |
| 6 | 4428 ou 4443 |

En outre on adopte les notations suivantes:

$p_c$ distance entre les centres de deux pixels adjacents, sur les capteurs CCD
$p_s$ distance entre les centres de deux pixels adjacents, sur le SLM de phase
$p_f$ distance entre les centres de deux pixels adjacents, sur les SLM d'amplitude
$N_{pix}$ nombre de pixels sur un capteur CCD ou sur un SLM d'amplitude (ces nombres sont égaux).
$N_s$ nombre de pixels sur le SLM de phase. Idéalement on devrait avoir $N_s = 2N_{pix}$ mais les SLM ne sont pas disponibles en n'importe quelle taille et on peut aussi se contenter de $N_s = N_{pix}$ moyennant une atténuation supplémentaire du faisceau d'éclairage.
$o$: ouverture numérique d'un objectif de microscope
$g$: grandissement d'un objectif de microscope
$f_o$: distance focale d'un objectif de microscope.
$d_o$: distance entre la lentille (4312) et le diaphragme (4313).

La largeur du faisceau de référence doit être au minimum de: $l_0 = p_c N_{pix}$
La largeur d'illumination sur (4405) est: $p_s N_s = \frac{f_2}{f_1} l_1$, d'ou on tire: $\frac{f_2}{f_1} = \frac{p_s N_s}{l_1}$
Pour éviter une perte de puissance inutile il est préférable d'avoir $l_0 = l_1$ et donc $\frac{f_2}{f_1} = \frac{p_s N_s}{p_c N_{pix}}$
La largeur du diaphragme (4406), qui laisse passer la moitié des fréquences provenant du SLM (4405) sous un angle $\alpha_{max}$ est : $l_2 = f_2 \sin\alpha_{max}$ soit avec la valeur de $\sin\alpha_{max}$ qui résulte de 8.1.2., $l_2 = f_2 \frac{\lambda}{2p_s}$
La partie utile du SLM (4412) doit être l'image du diaphragme (4406) ce qui implique: $\frac{f_4}{f_3} l_2 = p_f N_{pix}$
A partir des deux équations précédentes on obtient: $\frac{f_4}{f_3} f_2 = \frac{2p_s}{\lambda} p_f N_{pix}$
L'onde issue de (4412) présente un angle maximal $\sin\beta_{max} = \frac{\lambda}{2p_f}$. Le diaphragme (4414) doit laisser passer la totalité de ces ondes et vérifie donc : $l_3 = 2 \sin\beta_{max} f_4$ soit $l_3 = \frac{\lambda}{p_f} f_4$.
La largeur du diaphragme (4419) est égale à celle du diaphragme (4413) soit $l_4 = l_3$
Sa largeur est transformée en la largeur du diaphragme objet (4312) par: $l_5 = \frac{f_7}{f_6} l_3$
La largeur du diaphragme objet (4312) vaut: $l_5 = \frac{\lambda}{2} \frac{g}{o} N_{pix}$
Des équations précédentes on tire: $f_4 \frac{f_7}{f_6} = \frac{1}{2} \frac{g}{o} p_f N_{pix}$
La taille d'image sur le SLM (4427) doit être la même que sur le SLM (4417) d'ou: $\frac{f_6 f_8}{f_9 f_7} = 1$
La taille d'image sur la caméra est liée à celle sur le SLM (4427) par: $p_c N_{pix} = \frac{f_9}{f_8} p_f N_{pix}$ soit: $\frac{f_9}{f_8} = \frac{p_c}{p_f}$
Les SLM (4412 et 4417) étant de mêmes caractéristiques, on a: $f_4 = f_5$
La lentille (4312) doit avoir son plan focal objet confondu avec le plan focal image de l'objectif de microscope, et se trouve à une distance $d_o$ de l'image de l'objectif. On vérifie que ceci implique:

$$f_{10} = g f_o + d_o$$

La distance focale de (4331) ou de (4346) doit être suffisante pour éviter l'aberration sphérique.
Tout ensemble de valeurs satisfaisant aux équations ci-dessus peut en principe convenir. Une solution particulièrement simple consiste à poser:

$$f = \frac{p_f N_{pix}}{2} \frac{g}{o}$$

et à imposer:

$$f_2 = f_4 = f_5 = f_6 = f_7 = f_8 = f_{11} = f_{12} = f$$

On obtient alors facilement les autres distances focales:

$$f_3 = \frac{g}{o} \frac{\lambda}{4p_s} f$$

$$f_1 = \frac{p_c N_{pix}}{p_s N_s} f$$

$$f_9 = \frac{p_c}{p_f} f$$

$$f_{10} = gf_o + d_o$$

et les ouvertures de diaphragmes:

$$l_0 = l_5 = l_3 = l_4 = \frac{\lambda}{2} \frac{g}{o} N_{pix}$$

$$l_2 = f \frac{\lambda}{2p_s}$$

$$l_0 = l_1 = p_c N_{pix}$$

La largeur du faisceau en sortie de l'élargisseur de faisceau (4301) doit être légèrement supérieure à $l_0$, la limitation étant effectuée plus loin par les diaphragmes.

### 8.4. Mode de fonctionnement

Le mode de fonctionnement est essentiellement le même que dans le troisième mode de réalisation. Il est donc décrit par les paragraphes 7.4. à 7.17. et par les variantes exposées en 7.18. Dans le cas ou des objectifs tels que décrits en 7.20 ou 7.21 sont utilisés, les modifications décrites dans ces paragraphes doivent être appliquées. Le « mode préféré » doit être compris comme utilisant les algorithmes décrit par les paragraphes 7.4. à 7.17. sans le variantes exposées en 7.8. Toutefois, certaines des solutions décrites par les variantes présentent des avantages propres et le qualificatif de « mode préféré » ne doit pas être compris de manière trop absolue. Un certain nombres de différences doivent cependant être prises en compte par rapport aux algorithmes décrits dans le 3e mode de réalisation:

### 8.4.1. Commande du déviateur de faisceau

L'état du SLM (4405) est donné par un tableau de commande $A[k,l]$ dans lequel k et $l$ varient de 0 à $N_s$ -1, l'élément $A[k,l]$ correspondant au pixel de coordonnées $k,l$ et ayant la valeur 0 pour un pixel de phase négative et la valeur 1 pour un pixel de phase positive. L'état des SLM (4412) et (4417) est donné par un tableau de commande $B[k,l]$ dans lequel $k$ et $l$ varient de 0 à $N_{pix}$ -1, l'élément $B[k,l]$ correspondant au pixel de coordonnées $k,l$ et ayant la valeur 0 pour un pixel éteint et la valeur 1 pour un pixel allumé.
Pour obtenir une fréquence caractérisée par les indices $(i,j)$:

- on allume le pixel de coordonnées $i,j$ sur les SLM (4412) et (4417) c'est-à-dire qu'on utilise un tableau $B_{ij}$ avec $B_{ij}[k,l] = 0$ en tout point sauf en $i,j$ ou on a $B_{ij}[i,j] = 1$
- on applique au SLM (4405) un tableau $A_{ij}$ approprié, soit :

$$A_{ij}[k,l] = E\left(\left\{\frac{1}{N_{pix}}\left(k(i+1)+l(j+1)\right)\right\}\%2\right)$$

ou E désigne la partie entière et %2 signifie modulo 2.

Le 'mot de commande' utilisé dans le troisième mode de réalisation est donc içi constitué par la concaténation des tableaux de commande des SLM (4405)(4412)(4417) et des bits de commande des rotateurs de phase de (4422) et (4437). Comme précédemment le capteur éclairé directement est désigné par l'indice p avec $p$=0 pour (4339) et $p$=1 pour (4329). Pour la commande des rotateurs de phase inclus dans les extincteurs de faisceau (4422) et (4437) un bit de commande nul correspond à une tension appliquée de 5V (position ouverte) et un bit de commande à 1 correspond à une tension appliquée de -5V (position fermée).

| mot de commande COM[$p,i,j$] | tableau de commande du SLM (4405) | $A_{ij}[k,l] = E\left(\left\{\frac{1}{N_{pix}}\left(k(i+1)+l(j+1)\right)\right\}\%2\right)$ |
|---|---|---|
| | tableau de commande du SLM (4412) | $B_{ij}[i,j] = 1$<br>$B_{ij}[k,l] = 0$ si $(k,l) \neq (i,j)$ |
| | tableau de commande du SLM (4417) | $B_{ij}[i,j] = 1$<br>$B_{ij}[k,l] = 0$ si $(k,l) \neq (i,j)$ |
| | bits de commande des rotateurs de (4422) | $\bar{p}, \bar{p}$ |
| | bits de commande des rotateurs de (4437) | $p,p$ |

Le mot de commande ainsi constitué se substitue dans l'ensemble des procédures 7.4. à 7.17. à celui qui était constitué comme indiqué en 7.2.4.

## 8.4.2. Utilisation du système de suppression de l'onde directe.

Les SLM (4427) et (4442) sont respectivement associés aux capteurs (4339) et (4329) et indicés par les mêmes indices $p$=0 et $p$=1. Dans la procédure décrite en 7.12.2.1., phase 1, lors de l'acquisition d'un couple d'images élémentaires, il est nécessaire de commander également ces SLM. La valeur d'un élément $C[k,l]$ du tableau de commande utilisé pour un tel SLM dépend de l'indice du SLM, des indices $c$ et $p$ de l'image en cours d'acquisition, et des indices $i$ et $j$ correspondant au point du capteur éclairé directement par le faisceau d'éclairage soit $i=Ia[q,p,Ic[k,p],Jc[k,p]],j=Ja[q,p,Ic[k,p],Jc[k,p]]$. Il est donné par le tableau suivant, ou $r$ désigne un 'rayon d'extinction' que l'on peut par exemple prendre égal à 2.

| indice $c$ | 2 | autre (atténuation non maximale) | | |
|---|---|---|---|---|
| indice du SLM | | $\bar{p}$ | $p$ | |
| indices $k,l$ | | | $(k-i)^2+(l-j)^2 > r^2$ | $(k-i)^2+(l-j)^2 \leq r^2$ |
| valeur de l'élément du tableau $C[k,l]$ | 1 | 1 | 1 | 0 |

### 8.4.3. Utilisation de l'échantillonnage régulier.

### 8.4.3.1.Modification de la procédure 7.9.2.

les coordonnées des faisceaux d'éclairage sont connues à l'avance et sont:

$$Ia\big[q,p,i,j\big] = i\widehat{p} + \big(N_{pix} - i - 1\big)p$$

$$Ja[q,p,i,j]=j$$

Il suffit donc de déterminer le tableau $Ra[p,i,j]$

On utilise les tableaux $Io$ et $Jo$ caractérisant une trajectoire parcourant l'ensemble des points accessibles, c'est-à-dire que

$$\big(Io\big[k\big], Jo\big[k\big]\big)$$

doit parcourir l'ensemble des valeurs telles que

$$\left(Io\big[k\big] - \frac{N_{pix}}{2}\right)^2 + \left(Jo\big[k\big] - \frac{N_{pix}}{2}\right)^2 \leq R_{ouv}^2 \quad \text{ou} \ R_{ou}$$

est le rayon du disque limité par l'ouverture de l'objectif sur un capteur, et correspond par exemple au rayon de la zone illuminée sur (4339) lorsque le faisceau FRGI est utilisé seul. Cette trajectoire sera nommée par la suite « trajectoire complète ».

Un programme effectue l'acquisition définie par ces tableaux, selon la procédure décrite en 7.12. L'indice $n_o$ n'étant pas connu, il est pris égal à $n_v$ dans la procédure 7.12. Toutefois, lors de cette acquisition, il suffit d'enregistrer les valeurs

$$M_{k,p,q}\big[Io\big[k\big], Jo\big[k\big]\big] \text{ et } H_{k,p,q}\big[i_r, j_r\big].$$

Le programme initialise à 0 le tableau $Ra$ puis il parcourt la série des indices $k,p$ en effectuant pour chaque couple $k,p$:

$$Ra\big[p, Io\big[k\big], Jo\big[k\big]\big] = \frac{M_{k,p,0}\big[Io\big[k\big], Jo\big[k\big]\big]}{H_{k,p,0}\big[i_r, j_r\big]} \exp\left(-\widetilde{j}\,\frac{2\pi}{\lambda}n_v\left(x\,\frac{Io\big[k\big]}{K} + y\,\frac{Jo\big[k\big]}{K} + z\sqrt{1 - \frac{Io\big[k\big]^2 + Jo\big[k\big]^2}{K}}\right)\right)$$

ou $i_r, j_r$ sont les coordonnées du maximum de l'image de référence, comme définies en 7.12. et ou $x,y,z$ sont les coordonnées déterminées en 7.9.1.

### 8.4.3.2. Modification de la procédure 7.11.

Le programme effectue la série d'acquisitions définie par les tableaux $Io$ et $Jo$ définissant une trajectoire complète, déjà utilisés en 8.4.3.1., selon la procédure décrite en 7.12. Il génère ainsi les séries d'images $M_{k,p,q}[i,j]$ et $H_{k,p,q}[i,j]$. Toutefois, lors de cette acquisition, il suffit d'enregistrer les valeurs

$$M_{k,p,q}\big[Io[k],Jo[k]\big] \text{ et } H_{k,p,q}\big[i_r,j_r\big].$$

Le programme parcourt alors la série des indices k. Pour chaque valeur k il effectue:

$$F_{rec}\big[Io[k],Jo[k]\big] = \frac{M_{k,0,0}\big[Io[k],Jo[k]\big]}{H_{k,0,0}\big[i_r,j_r\big]} \frac{1}{Ra\big[0,Io[k],Jo[k]\big]}$$

Le programme décrit en 7.8. est alors utilisé pour calculer les paramètres $x,y,z,L,\ n_0$ à partir du tableau $F_{rec}$ ainsi constitué.

La procédure 7.11. ainsi reformulée peut être utilisée directement pour calculer $x,y,z,L,\ n_0$ dans le cas du cristal uniaxe décrit en 7.18.9., évitant ainsi d'avoir à effectuer des mesures préliminaires et rendant possible le mouvement des objectifs. Dans ce cas, le mode d'acquisition de la série d'images permettant le calcul de $x,y,z,L,n_0$ correspond à la procédure décrite en 7.12 et modifiée comme indiqué en 7.18.9.

### 8.4.3.3. Modification de la procédure 7.13.

En 7.13, on obtient directement sans utiliser le programme de la fig. 53:

$$Id\big[p,i,j\big] = i\overline{p} + \big(N_{pix} - i - 1\big)p$$

$$Jd[p,i,j]=j$$

$$Ic\big[k,p\big] = \overline{p}Io[k] + \big(N_{pix} - Io[k] - 1\big)p$$

$$Jc[k,p] = Jo[k]$$

### 8.4.3.4. modification de la procédure 7.6.

Les valeurs des coefficients $K_1$, $K_2$ déterminés en 7.6. vérifient:

$$K_1 = K_2$$

### 8.5. Réglage:

La position de chaque élément du système doit être réglée avec précision avant toute utilisation.

### 8.5.1. appareils utilisés

Les appareils déjà décrits en 7.3.3.2. sont utilisés.

### 8.5.2. Types d'images utilisés

Pendant le réglage on peut utiliser divers types d'images:

- images obtenues sur un CCD auxiliaire: un CCD auxiliaire placé par exemple dans un plan d'espace peut permettre de déterminer le centre d'un faisceau d'éclairage dans ce plan, ou la ponctualité dans ce plan d'un faisceau de référence.

- images obtenues sur un des CCD du microscope: ces images peuvent être obtenues et analysées comme indiqué en 7.3.3.1. en présence d'un faisceau de référence. On peut également observer directement les images reçues en l'abscence de faisceau de référence.
- images obtenues sur le CCD du fréquencemètre: observées directement, elles permettent de vérifier la planéité d'une onde ou l'angle séparant deux ondes planes.
- images de la surface d'un SLM: en plaçant le fréquencemètre derrière la lentille qui transforme en onde plane l'onde provenant d'un point donné du SLM, on forme sur le CCD du fréquencemètre une image de la surface du SLM, qui peut être utilisée par exemple pour vérifier que le SLM-est éclairé correctement. Pour visualiser des figures formées en commandant le SLM, un polariseur doit en outre être présent entre le SLM et le CCD du fréquencemètre. S'il n'est pas déjà présent dans le système, on peut utiliser le polariseur du fréquencemètre.
- images pixel par pixel de la surface d'un SLM: une telle image est constituée d'un tableau à deux dimensions contenant l'éclairement de chaque pixel. Pour l'obtenir, on place le fréquencemètre comme précédemment, en présence d'un polariseur. On met l'ensemble du SLM en position absorbante (image 'noire'). Puis on allume un à un chaque pixel, en enregistrant à chaque fois l'intensité du point correspondant sur le fréquencemètre. Les intensités ainsi mesurés pour chaque pixel du SLM sont stockées dans un tableau, qui constitue l'image pixel par pixel du SLM. Ce type d'image peut être utilisé par exemple pour vérifier la correspondance point par point entre les divers SLM, nécessaire pour obtenir un éclairage correct et un échantillonnage régulier.

### 8.5.3. Critères de réglage.

Les réglages visent à s'assurer que:

(1) les faisceaux suivent la trajectoire prévue. Ceci peut en général se vérifier à l'aide d'un simple diffuseur.
(2) les faisceaux d'éclairage sont parallèles dans les plans d'espace. Ceci se vérifie à l'aide du fréquencemètre.
(3) les faisceaux de référence sont ponctuels dans les plans d'espace et les faisceaux d'éclairage sont ponctuels dans les plans de fréquence. Ceci se vérifie par exemple à l'aide d'un CCD auxiliaire.
(4) les polariseurs sont bien réglés. Les extinctions du faisceau peuvent par exemple être observées sur le fréquencemètre.
(5) un faisceau entrant parallèle dans l'objectif (4317) et dirigé suivant l'axe optique a une image ponctuelle et centrée sur le capteur (4339).
(6) lorsque le mot de commande $A_{i,j}$ est utilisé pour le SLM (4405) et lorsque le mot de commande $B_{i,j}$ est utilisé pour les SLM (4412) et (4417), les conditions suivantes sont respectées:

(i) le point de coordonnées $i,j$ doit être effectivement illuminé sur les SLM (4412) et (4417)
(ii) lorsque les faisceaux FEG et FEGI sont utilisés, les points illuminés sur les SLM (4427) et (4442) et sur les capteurs (4339) et (4329) doivent avoir pour coordonnées ($i,j$)
(iii) lorsque les faisceaux FED et FEDI sont utilisés, les points illuminés sur les SLM (4427) et (4442) et sur les capteurs (4339) et (4329) doivent avoir pour coordonnées

$$\left( N_{pix} - 1 - i, j \right)$$

Cette condition (6) peut se vérifier à l'aide d'images obtenues sur les capteurs ou à l'aide d'images pixel par pixel obtenues sur les CCD.

Les réglages à effectuer découlent de ces conditions. La description des étapes de réglage est donnée à titre indicatif et constitue un exemple d'ordonnancement des étapes de réglage.

### 8.5.4. Etapes de réglage

Dans la description des étapes de réglage, il sera fait fréquemment référence à l'axe optique. Du fait des nombreuses réflexions, l'axe optique ne peut être défini que localement. C'est donc à cet axe optique défini localement qu'il sera fait référence.
Préalablement à tout réglage fin, l'ensemble du système est mis en place avec toute la précision possible par des méthodes géométriques, à l'exception des éléments (4304) (4305) (4422) (4437) (4351) qui seront mis en place en cours de réglage.

Pendant tout le réglage, la position de l'axe neutre des rotateurs de polarisation (4310) (4338) (4341) (4326) est maintenue dans le plan de la figure 62. Un point sera dit centré sur un des capteurs (4339) ou (4329) si ses coordonnées sont

$$\left(\frac{N_{pix}}{2}, \frac{N_{pix}}{2}\right).$$

Lors de la première étape de réglage d'un élément donné, le type de positionneur sur lequel cet élément est monté est indiqué.

*Etape* 1. Réglage d'orientation de l'ensemble laser (4300)-élargisseur de faisceau (4301)

Cet ensemble est monté sur un positionneur angulaire permettant d'ajuster la direction du faisceau. Un diffuseur est utilisé pour vérifier la trajectoire du faisceau. La position de l'ensemble (4300,4301) est ajustée pour que le faisceau suive la trajectoire prévue.

*Etape* 2. Mise en place du dispositif de décalage de phase (4304).

Ce dispositif de décalage de phase est identique à celui décrit en 7.2.3. et mis en place comme indiqué en 7.3.2.3.

*Etape* 3. Mise en place du dispositif d'atténuation de faisceau (4305).

Ce dispositif d'atténuation de faisceau est identique à celui décrit en 7.2.2. et est mis en place comme indiqué en 7.3.2.2.

*Etape* 4.: Réglage en translation 2 axes du 'trou' (4402)

Ce trou est monté sur un positionneur deux dimensions permettant un déplacement dans le plan orthogonal à l'axe optique.
Il est réglé de manière à maximiser l'intensité du faisceau ayant traversé le 'trou'.

*Etape* 5. Réglage de l'orientation du miroir à deux faces (4403)

Ce miroir est monté sur un positionneur angulaire permettant d'en ajuster l'orientation. Un diffuseur est utilisé pour vérifier la trajectoire du faisceau et la position du miroir est réglée de sorte que le faisceau incident sur le SLM (4405) occupe toute la surface utile de ce SLM.

*Etape* 6. réglage de l'orientation du SLM (4405)

Ce SLM est monté sur un positionneur angulaire permettant d'en ajuster l'orientation, couplé avec un positionneur deux axes en translation permettant un ajustement de sa position dans un plan orthogonal à l'axe optique.
Le SLM est mis en position totalement réfléchissante. Un diffuseur est utilisé pour vérifier que l'onde réfléchie sur le SLM parvienne au point prévu sur le miroir (4403) et se dirige dans la direction prévue.

*Etape* 7. Réglage fin de l'orientation du miroir à deux faces (4403), réglage en translation du SLM (4405), réglage de l'ouverture du diaphragme (4348), et réglage en translation de la lentille (4404).

La lentille (4404) est montée sur un positionneur un axe en translation permettant un ajustement en translation dans le sens de son axe optique.
Cette étape a pour objectif:

- de régler la position de la lentille (4404) de manière à ce que le SLM (4405) soit dans un plan d'espace.
- de régler l'orientation du miroir à deux faces (4403) et la position en translation de (4405) de manière à ce que le faisceau parvenant à (4405) soit centré.
- de régler l'ouverture de (4348) de manière à ce que le faisceau incident sur (4405) soit aussi large que possible, sans toutefois déborder de la surface active du SLM.

Il est possible, sur un SLM, de commander indépendamment la zone active et une zone périphérique appelée 'apron'. L'ensemble de la zone active est içi commandé pour effectuer une rotation de polarisation dans un sens donné, et l'apron est commandé pour effectuer une rotation de polarisation dans le sens opposé. La zone active est ensuite modifiée pour qu'une croix centrée au milieu de la zone active soit mise dans le même état que l'apron.

Le fréquencemètre est positionné derrière (4406), qui est largement ouvert.

L'ouverture du diaphragme (4348) est légèrement supérieure (de 20% par exemple) à son ouverture nominale calculée en 8.4.

Le fréquencemètre est d'abord positionné en l'abscence de son polariseur pour que se forme sur son CCD une image de la zone éclairée de (4405).

Le polariseur du fréquencemètre est alors introduit et réglé en rotation de manière à faire apparaître sur l'image un contraste maximal entre la zone périphérique ('apron') et la zone centrale active du SLM.

La position de (4403) est alors ajustée de manière à ce que l'ensemble de la zone active et de la frontière avec l'apron soit visible sur l'image. On doit voir une zone active carrée illuminée entourée d'une zone sombre (l'apron) et barrée d'une croix centrée.

La position de (4404) est réglée de manière à avoir le meilleur contraste possible.

Le diaphragme (4348) est alors réduit en ouverture. On doit voir sur l'image une disque illuminé de diamètre réduit, interceptant la croix sombre. La position de (4403) et celle de (4405) en translation sont ajustées pour que le centre du disque et le centre de la croix coïncident.

La position de (4404) est à nouveau réglée de manière à avoir le meilleur contraste possible.

L'ouverture du diaphragme (4348) est alors aggrandie au maximum sans toutefois que le disque illuminé n'atteigne la zone de l'apron.

*Etape* 8. Réglage en translation de la lentille (4407)

Cette lentille est montée sur un positionneur en translation un axe dans le sens de l'axe optique.

Ce réglage a pour objectif de s'assurer qu'un faisceau parallèle issu du laser et entièrement réfléchi par (4405) est à nouveau parallèle après passage de (4407).

Le fréquencemètre est positionné derrière (4407). (4406) est largement ouvert. Le tableau de commande de (4405) est entièrement mis à 0. La position de (4407) est ajustée pour avoir une image aussi ponctuelle que possible sur le fréquencemètre.

*Etape* 9. Réglage en rotation du polariseur (4408).

Le polariseur (4408) est fixé à un positionneur permettant un réglage en rotation autour de l'axe optique.

Lorsque le mot de commande $A_{00}$ est utilisé, le SLM (4405) réfléchit le faisceau dans une direction D0. Lorsque $A_{N_{pix}-1,0}$ est utilisé, la direction du faisceau est modifié et la composante sur la fréquence correspondant à la direction D0 doit être annulée. Le polariseur (4408) est réglé de manière à produire effectivement une annulation de cette composante.

Le fréquencemètre est positionné derrière (4408). Le diaphragme (4406) est largement ouvert. Le tableau $A_{00}$ est d'abord appliqué à (4405). Le point $P$ illuminé sur le CCD du fréquencemètre est repéré. Le tableau $A_{N_{pix}-1,0}$ est alors utilisé et la position de (4408) est ajustée pour annuler l'intensité reçue au point $P$.

*Etape* 10. Réglage en translation 2 axes et ouverture du diaphragme (4406)

Le diaphragme (4406) a une ouverture réglable et est réglable en translation suivant deux axes orthogonaux à l'axe optique.

Sa position et son ouverture doivent être réglées pour qu'il laisse passer les fréquences utiles et arrête les fréquences symétriques, son rôle étant celui du diaphragme (4615) décrit en 8.1.2.

Le fréquencemètre est utilisé et positionné derrière (4408). Les axes du CCD du fréquencemètre doivent être orientés comme indiqué par le repère (4470). Un programme spécifique est utilisé.

Ce programme applique successivement au SLM (4405) les tableaux :

$$A_{0,0} \quad A_{0,\frac{N_{pix}}{2}} \quad A_{\frac{N_{pix}}{2},0} \quad A_{\frac{N_{pix}}{2},N_{pix}-1} \quad A_{N_{pix}-1,\frac{N_{pix}}{2}}$$

Le programme somme les intensités obtenues dans chaque cas par le capteur CCD et affiche l'image correspondante. Il superpose sur cette image des symboles indiquant le maximum obtenu dans chacun de ces cas. Il itère indéfiniment cette procédure pour que cette image soit mise à jour en permanence pendant le réglage du diaphragme.

Le diaphragme doit être réglé en position et ouverture pour que le point obtenu pour les indices (0,0) ne soit pas visible (obturé par le diaphragme) et pour que que les quatre autres points soient visibles (en limite de diaphragme), aux positions indiquées par la Fig. 72 ou (5010) représente la limite du diaphragme.

*Etape* 11. Réglage de l'orientation du miroir (4409)

Le miroir (4409) est fixé sur un positionneur permettant d'en ajuster l'orientation.
On applique à (4405) le tableau

$$A_{\frac{N_{pix}}{2}, \frac{N_{pix}}{2}}.$$

Un diffuseur est utilisé pour contrôler la trajectoire du faisceau. La position angulaire de (4409) est ajustée pour que le faisceau parvienne au centre de (4412).

*Etape* 12. Réglage de l'orientation du SLM (4412)

Le SLM (4412) est fixé à un positionneur trois axes en rotation permettant d'en ajuster l'orientation (axes dans le plan du capteur) et la position en rotation (axe orthogonal au plan du capteur), couplé avec un positionneur deux axes en translation permettant un déplacement dans un plan orthogonal à l'axe optique.
Le tableau

$$A_{\frac{N_{pix}}{2}, \frac{N_{pix}}{2}}$$

reste appliqué à (4405). Le tableau de commande de (4412) est mis à 1. Un diffuseur est utilisé pour contrôler la trajectoire du faisceau. (4412) est ajusté pour que l'onde se réfléchisse vers (4414) et soit centrée au milieu de ce diaphragme.

*Etape* 13. Réglage en rotation du polariseur (4413)

Le tableau de commande de (4412) est mis à 1. Le fréquencemètre est positionné derrière (4413) de manière à ce que soit formée sur son CCD l'image de (4412). Le tableau de commande de (4412) est alors mis à 0. (4413) est alors réglé en rotation de manière à annuler l'intensité reçue sur le CCD du fréquencemètre.

*Etape* 14. Réglage fin de l'orientation du miroir (4409), réglage de la position et de la focale du doublet (4410) (4411), et réglage en rotation et translation du SLM (4412).

La lentille (4410) est montée sur un positionneur un axe dans le sens de l'axe optique. Ce positionneur et la lentille (4411) sont eux-mêmes montés sur un second positionneur un axe dans le sens de l'axe optique. Il est donc possible soit de déplacer conjointement l'ensemble (4410)(4411) soit de déplacer (4410) seule pour faire varier la distance entre les deux lentilles du doublet (4410)(4411).
Le SLM (4405) permet de contrôler la direction dans laquelle est diffractée l'onde issue de ce SLM. A une direction du faisceau en sortie du SLM (4405) correspond un point dans un plan de fréquence et en particulier un point dans le plan du SLM (4412).
La position de (4410)(4411) doit être réglée de manière à ce que l'image du faisceau provenant du SLM (4405) soit effectivement ponctuelle dans le plan de fréquence ou se trouve (4412). La position de (4409) et (4412) doit être réglée pour que la fréquence générée lorsque le tableau de commande

$$A_{\frac{N_{pix}}{2}, \frac{N_{pix}}{2}}$$

est appliqué à (4405) corresponde à un point de coordonnées

$$\left( \frac{N_{pix}}{2}, \frac{N_{pix}}{2} \right)$$

sur le SLM (4412). La position de (4410)(4411)(4412) doit en outre être réglée pour qu'il y ait une correspondance point à point entre les fréquences générées par les tableaux $A_{i,j}$ appliqués à (4405) et les pixels de (4412), c'est-à-dire pour que lorsque le tableau de commande $A_{i,j}$ est appliqué à (4405) le pixel de coordonnées ($i$, $j$) soit illuminé sur le SLM (4412), quels que soient les entiers $i$ et $j$.

La série des opérations o1 à o3 est répétée un nombre suffisant de fois, de manière à converger vers la position correcte de chaque élément.

o1. Réglage de la position conjointe de (4410) et (4411) pour obtenir une image en fréquence ponctuelle.

Le fréquencemètre est positionné derrière (4414). Le diaphragme (4414) est largement ouvert. Le tableau

$$A_{\frac{N_{pix}}{2}, \frac{N_{pix}}{2}}$$

est appliqué à (4405) et le tableau de commande appliqué à (4412) est à 1. La position conjointe de l'ensemble (4410) (4411) est ajustée pour avoir sur le capteur CCD du fréquencemètre une image aussi ponctuelle que possible.

o2. Réglage angulaire de (4409) et réglage en translation de (4412) pour obtenir une image en fréquence centrée.

$$A_{\frac{N_{pix}}{2}, \frac{N_{pix}}{2}}$$

reste appliqué à (4405). (4409) et (4412) sont alors réglés pour que la fréquence centrale générée soit au milieu du SLM (4412). Ce réglage se fait avec le fréquencemètre et un programme de localisation du maximum, que l'on appellera programme *PA*.

Le programme *PA* allume tour à tour chaque pixel du SLM (4412) et mesure l'intensité correspondante sur le fréquencemètre. Le pixel générant la plus forte intensité correspond au maximum.

La procédure de base du programme *PA*, que l'on appellera *PB*, parcourt l'ensemble des coordonnées ($i,j$) des pixels sur le SLM (4412), $i$ et $j$ variant de 0 à $N_{pix}$-1. Pour chaque couple ($i,j$) cette procédure effectue les étapes suivantes:

- elle applique le tableau de commande $B_{ij}$ défini comme en 8.4.1. au SLM (4412).
- elle acquiert alors une image sur le CCD du fréquencemètre.
- elle détermine la valeur maximale de l'intensité mesurée sur l'ensemble des points de cette image.
- elle enregistre cette valeur dans un tableau *M* en *M*[*i,j*]

Lorsque elle a ainsi parcouru l'ensemble des indices *i,j* la procédure détermine le point d'intensité maximale du tableau M et ses indices $i_0, j_0$ qui correspondent au maximum. Elle affiche sur l'écran l'image bidimensionnelle correspondant au tableau M, éventuellement aggrandie autour du maximum, ainsi que les valeurs de $i_0, j_0$ et la valeur *M* [$i_0, j_0$].

Le programme *PA* consiste à itérer indéfiniment la procédure *PB* de manière à pouvoir effectuer le réglage correspondant.

La position de (4409) doit être ajustée pour avoir

$$r\left(i_0, j_0\right) = \left(\frac{N_{pix}}{2}, \frac{N_{pix}}{2}\right) \text{ et pour maximiser } M\left[i_0, j_0\right].$$

o3. Réglage de focale du doublet (4410)(4411) et réglage de (4412) en rotation.

Le fréquencemètre, réglé comme précédemment, est utilisé. Un programme d'affichage des caractéristiques du système est utilisé, que l'on appellera programme *PC*.

Le programme *PC* utilise successivement quatre tableaux de commande

$$A_{c,\frac{N_{pix}}{2}} \quad A_{\frac{N_{pix}}{2},c} \quad A_{\frac{N_{pix}}{2},Npix-1-c} \quad A_{Npix-1-c,\frac{N_{pix}}{2}}$$

appliqués à (4405). Ces tableaux de commande sont numérotés dans cet ordre. *c* est une constante, par exemple *c*=20, introduite pour éviter que les points illuminés sortent de la zone active du SLM en cas de mauvais réglage initial.

Pour le n-ième mot de commande, le programme utilise la procédure *PB* déjà décrite et stocke les coordonnées du maximum obtenu en $X[n]$ et $Y[n]$. Lorsque cette opération a été effectuée pour les quatre mots de commande, le programme a donc obtenu les tableaux $X$ et $Y$ à quatre éléments, correspondant aux coordonnées en pixels des maximums successifs. Lorsque le système est bien réglé, on doit avoir:

$$(X[1], Y[1]) = \left(c, \frac{N_{pix}}{2}\right) \quad (X[2], Y[2]) = \left(\frac{N_{pix}}{2}, c\right) \quad (X[3], Y[3]) = \left(\frac{N_{pix}}{2}, N_{pix} - 1 - c\right)$$

$$(X[4], Y[4]) = \left(N_{pix} - 1 - c, \frac{N_{pix}}{2}\right)$$

Le réglage a donc pour objectif d'obtenir effectivement ces égalités. Le réglage de la focale du doublet (4410) (4411) permet d'ajuster l'échelle et le réglage en rotation de (4412) permet d'ajuster la position en rotation.

Le programme calcule le rapport des distances effectives aux distances qui devraient être obtenues avec un réglage correct:

$$r = \frac{1}{N_{pix} - 1 - 2c} \frac{1}{2} \left\{ \sqrt{(X[1] - X[4])^2 + (Y[1] - Y[4])^2} + \sqrt{(X[2] - X[3])^2 + (Y[2] - Y[3])^2} \right\}$$

Si $f$ est la distance focale de chaque lentille et si $d_1$ est la distance entre ces lentilles avant réglage, la distance focale effective de l'ensemble de deux lentilles avant réglage est:

$$f_1 = \frac{f}{2}\left(\frac{1}{1 - \frac{d_1}{2f}}\right)$$

de même la distance focale de l'ensemble après réglage est:

$$f_2 = \frac{f}{2}\left(\frac{1}{1 - \frac{d_2}{2f}}\right)$$

Le grandissement étant proportionnel à la distance focale, celle-ci doit être ajustée de sorte que:

$$\frac{f_2}{f_1} = \frac{1}{r}$$

ce qui mène, en développant les calculs, à:

$$d_2 - d_1 = 2f(1-r)\left(1 - \frac{d_1}{2f}\right)$$

Dans cette équation $f$ et $d_1$ sont mal connus mais on peut utiliser la distance focale 'de conception' du doublet (4410) (4411). Cette distance est celle pour laquelle le doublet a été prévue. On la notera $f_c$ et elle vaut à peu près $\frac{f}{2}$. On obtient alors:

$$d_2 - d_1 = 4f_c(1 - r)$$

Le programme PC affiche:

- la valeur $d_2 - d_1$, qui permet de corriger en conséquence la distance entre lentilles.

- les droites reliant respectivement les points 1 et 4 et les points 2 et 3

- l' écart $\frac{X[1] - X[4]}{N_{pix} - 2c}$, qui donne à peu près l'angle en radians dont il faut corriger la position en rotation.

- le rapport $\frac{X[1] - X[4]}{Y[2] - Y[3]}$, qui doit être égal à $\pm 1$.

Le SLM (4412) est réglé en rotation de manière à annuler l'écart affiché $\frac{X[1] - X[4]}{N_{pix} - 2c}$, et la distance entre les lentilles du doublet (4410)(4411) est modifiée conformément à la valeur affichée de $d_2 - d_1$.

*Etape* 15. Réglage du diaphragme (4414) en translation.

Le diaphragme (4414) est monté sur un positionneur 2 axes en translation permettant de le déplacer dans un plan orthogonal à l'axe optique.

L'ouverture de (4414) est connue. Il doit être réglé en translation. Un CCD auxiliaire est placé juste derrière (4414). Le tableau de commande

$$B_{\frac{N_{pix}}{2}, \frac{N_{pix}}{2}}$$

est utilisé pour le SLM (4405), c'est-à-dire que seul un point central de ce SLM est « allumé », le faisceau réfléchi direct étant arrêté par (4406). Le tableau de commande du SLM (4412) est mis à 1 (position passante). L'image du point allumé de (4405) se forme alors dans le plan du diaphragme (4414). (4414) est alors réglé en translation de manière à ce que son centre coïncide avec l'image du point allumé de (4405).

*Etape* 16. Réglage en translation 2 axes du SLM (4417)

Ce SLM est monté sur un positionneur deux axes en translation dans le plan du SLM, couplé avec un positionneur trois axes en rotation permettant d'en ajuster l'orientation (axes dans le plan du capteur) et la position en rotation (axe dans un plan orthogonal au capteur).

Les tableaux de commande

$$A_{\frac{N_{pix}}{2}, \frac{N_{pix}}{2}}$$

et

$$B_{\frac{N_{pix}}{2}, \frac{N_{pix}}{2}}$$

sont utilisés respectivement pour les SLM (4405) et (4412). Un diffuseur est utilisé pour suivre le faisceau arrivant sur (4417) et (4417) est réglé en translation pour que le faisceau parvienne en son centre.

*Etape* 17. Réglage de l'orientation du SLM (4417).

Les mêmes tableaux de commande que précédemment sont utilisés pour les SLM (4405)(4412). Le tableau de commande du SLM (4417) est mis à 1. (4417) est réglé pour que le faisceau réfléchi parvienne au point prévu sur (4419), ce qui est vérifié à l'aide d'un diffuseur.

*Etape* 18. Réglage de l'orientation du miroir (4418)

Le miroir (4418) est monté sur un positionneur angulaire permettant d'en ajuster l'orientation.
(4418) est réglé de manière à renvoyer effectivement le faisceau dans la direction prévue, ce qui est vérifié avec un diffuseur.

*Etape* 19. Réglage en translation du diaphragme (4419)

Le diaphragme (4419) est monté sur un positionneur deux axes en translation permettant un déplacement dans un plan orthogonal à l'axe optique.
L'ouverture de (4419) est connue. Il doit être réglé en translation. Le tableau de commande

$$B_{\frac{N_{pix}}{2}, \frac{N_{pix}}{2}}$$

est utilisé pour le SLM (4405), c'est-à-dire que seul un point central de ce SLM est « allumé », le faisceau réfléchi direct étant arrêté par (4406). Les tableaux de commande des SLM (4412) et (4417) sont mis à 1 (position passante). L'image du point allumé de (4405) se forme alors dans le plan du diaphragme (4419). (4419) est alors réglé en translation de manière à ce que son centre coïncide avec l'image du point allumé de (4405).

*Etape* 20. Réglage en rotation du polariseur (4420)

Le polariseur (4420) est monté sur un positionneur permettant son réglage en rotation par rapport à l'axe optique.
Les tableaux de commande

$$A_{\frac{N_{pix}}{2}, \frac{N_{pix}}{2}}$$

et

$$B_{\frac{N_{pix}}{2}, \frac{N_{pix}}{2}}$$

sont appliqués respectivement à (4405) et (4412). Le tableau de commande de (4417) est mis à 1. Le fréquencemètre est placé juste derrière (4420). L'image sur son CCD est à peu près ponctuelle. Le tableau de commande de (4417) est alors mis à 0. La position de (4420) est ajustée pour annuler l'intensité reçue sur le fréquencemètre.

*Etape* 21. Réglage en translation 2 axes et en rotation du SLM (4417), réglage de la position et de la focale du doublet (4415) (4416).

Les lentilles (4415)(4416) sont montées sur un positionneur en translation permettant soit leur déplacement simultané dans le sens de l'axe optique soit le déplacement de (4415) seule.

La position de (4415)(4416) doit être réglée de manière à ce que l'image du faisceau provenant du SLM (4412) lorsque les tableaux de commande

$$A_{\frac{N_{pix}}{2}, \frac{N_{pix}}{2}}$$

et

$$B_{\frac{N_{pix}}{2}, \frac{N_{pix}}{2}}$$

sont appliqués respectivement à (4405) et (4412) soit effectivement ponctuelle dans le plan de fréquence ou se trouve (4417). La position de (4417) doit être réglée pour que dans ces conditions le point illuminé sur le SLM (4417) ait pour coordonnées

$$\left( \frac{N_{pix}}{2}, \frac{N_{pix}}{2} \right).$$

La position de (4415)(4416)(4417) doit en outre être réglée pour qu'il y ait une correspondance point à point entre les pixels de (4412) et ceux de (4417), c'est-à-dire pour que lorsque les tableaux de commande $A_{i,j}$ et $B_{i,j}$ sont appliqués respectivement à (4405) et (4412) le point éclairé sur (4417) soit le pixel de coordonnées

$$(i, j),$$

quels que soient les entiers *i* et *j*.

Le fréquencemètre est positionné derrière (4420). La série des opérations o11 à o13 est répétée un nombre suffisant de fois.

o11. Réglage de la position conjointe de (4415) et (4416) pour obtenir une image en fréquence ponctuelle.

Les tableaux de commande

$$A_{\frac{N_{pix}}{2}, \frac{N_{pix}}{2}}$$

et

$$B_{\frac{N_{pix}}{2},\ \frac{N_{pix}}{2}}$$

sont appliqués respectivement aux SLM (4405) et (4412). Le tableau de commande appliqué à (4417) est mis à 1. La position de l'ensemble (4415) (4416) est ajustée pour avoir sur le capteur CCD du fréquencemètre une image aussi ponctuelle que possible.

o12. Réglage en translation de (4417) pour obtenir une image en fréquence centrée.

$$A_{\frac{N_{pix}}{2},\ \frac{N_{pix}}{2}}$$

et

$$B_{\frac{N_{pix}}{2},\ \frac{N_{pix}}{2}}$$

restent appliqués respectivement aux SLM (4405) et (4412). (4417) est alors réglé pour que la fréquence centrale générée soit au milieu du SLM (4417). Ce réglage se fait avec le fréquencemètre et le programme *PA* de localisation du maximum défini plus haut. Toutefois, dans ce programme de localisation du maximum, le SLM (4412) est içi remplacé par le SLM (4417).

o13. Réglage de (4415) pour obtenir le bon grandissement en fréquence et réglage en rotation de (4417).

Le programme *PC* est utilisé. Toutefois, dans ce programme:

- le SLM (4412) est remplacé par le SLM (4417)
- lorsque un mot de commande $A_{i,j}$ est appliqué au SLM (4405), le mot de commande $B_{i,j}$ correspondant est appliqué au SLM (4412).

La correction de distance inter-lentilles obtenue est appliquée à la distance entre (4415) et (4416) et le réglage en rotation est effectué sur (4417) en rotation par rapport à un axe orthogonal au plan du capteur.

*Etape* 22. Réglage de l'orientation du miroir semi-transparent (4307)

Le miroir semi-transparent (4307) est monté sur un positionneur angulaire permettant d'en ajuster l'orientation.
Les SLM (4405)(4412)(4417) sont commandés pour générer une fréquence centrale: le tableau de commande de (4405) est

$$A_{\frac{N_{pix}}{2},\ \frac{N_{pix}}{2}}$$

et le tableau de commande de (5512) et (4417) est

$$B_{\frac{N_{pix}}{2},\ \frac{N_{pix}}{2}}\ .$$

La position de (4407) est ajustée à l'aide d'un diffuseur de manière à renvoyer le faisceau dans la direction prévue.

*Etape* 23. Réglage de l'orientation du miroir (4308)

Le miroir (4308) est monté sur un positionneur angulaire permettant d'en ajuster l'orientation.
La commande des SLM est inchangée. La position de (4308) est ajustée à l'aide d'un diffuseur de manière à renvoyer le faisceau dans la direction prévue.

*Etape* 24. Mise en place de l'extincteur de faisceau (4422)

La commande des SLM est inchangée. Cet extincteur de faisceau est mis en place selon la procédure indiquée en 7.3.2.2.

*Etape* 25. Réglage en translation de la lentille (4431)

La commande des SLM est inchangée. Le fréquencemètre est positionné derrière (4431). La position de (4431) est ajustée pour obtenir une image ponctuelle.

*Etape* 26. Réglage de l'orientation du miroir (4332)

Ce miroir est monté sur un positionneur deux axes permettant d'en ajuster l'orientation.
La commande des SLM est inchangée. Entre (4311) et (4331), deux faisceaux se propageant en sens opposé sont superposés. Un diffuseur introduit sur le coté du faisceau sera illuminé des deux cotés. Les parties illuminées de chaque coté du diffuseur doivent être les mêmes: les deux faisceaux sont alors exactement superposés. Un mauvais réglage de (4332) a pour conséquence un décalage entre la position de ces deux faisceaux. (4332) est réglé pour qu'entre (4311) et (4331) les faisceaux se propageant dans les deux sens soient exactement superposés.

*Etape* 27. Réglage en translation de la lentille (4331)

La lentille (4331) est montée sur un positionneur un axe en translation permettant un déplacement dans le sens de l'axe optique.
Le fréquencemètre est positionné entre (4311) et (4338). La commande des SLM (4405)(4412)(4417) est définie par les tableaux

$$A_{\frac{N_{pix}}{2},\ \frac{N_{pix}}{2}}$$

et

$$B_{\frac{N_{pix}}{2},\ \frac{N_{pix}}{2}}.$$

La position de (4332) est réglée de manière à ce que FEDI ait une image aussi ponctuelle que possible sur le fréquencemètre.

*Etape* 28. Réglage de l'orientation du miroir semi-transparent (4311).

Ce miroir semi-transparent est monté sur un positionneur deux axes en rotation (les deux axes étant dans le plan du miroir semi-transparent) permettant d'en ajuster l'orientation.
Le réglage des SLM n'est pas modifié. Un diffuseur est utilisé pour contrôler la trajectoire du faisceau. (4311) est réglé de manière à ce que que le faisceau FEDI suive la trajectoire prévue.

*Etape* 29. Réglage de l'orientation du miroir à deux faces (4424)

Le miroir double (4424) est monté sur un positionneur deux axes en rotation, les deux axes étant dans le plan de la face non réfléchissante.
(4424) est réglé de manière à ce que FEDI parvienne au centre de (4427), ce qui est vérifié à l'aide d'un diffuseur.

*Etape* 30. Réglage de l'orientation du SLM (4427).

Ce SLM est monté sur un positionneur deux axes en translation dans le plan du SLM, couplé avec un positionneur trois axes en rotation permettant d'en ajuster l'orientation (axes dans le plan du capteur) et la position en rotation (axe dans un plan orthogonal au capteur).

Les tableaux de commande des SLM (4405) (4412) (4417) ne sont pas modifiés. Le tableau de commande du SLM (4427) est mis à 1.

Le trajet du faisceau étant contrôlé à l'aide d'un diffuseur, la position angulaire de (4427) est réglée de manière à ce que le faisceau FEDI vise le point prévu sur (4424).

*Etape* 31. Réglage fin de l'orientation du miroir à deux faces (4424), réglage en rotation et translation de (4427) et réglage de la focale et de la position du doublet (4425)(4426).

La position de (4425)(4426) doit être réglée de manière à ce que l'image du faisceau FEDI, lorsque les tableaux de commande

$$A_{\frac{N_{pix}}{2},\ \frac{N_{pix}}{2}}$$

et

$$B_{\frac{N_{pix}}{2},\ \frac{N_{pix}}{2}}$$

sont appliqués respectivement au SLM (4405) et aux SLM (4412) et (4417), soit effectivement ponctuelle dans le plan de fréquence ou se trouve (4427). La position de (4424) et (4427) doit être réglée pour que dans ces conditions le point illuminé sur le SLM (4427) ait pour coordonnées

$$\left(\frac{N_{pix}}{2}, \frac{N_{pix}}{2}\right).$$

La position de (4425)(4426)(4427) doit en outre être réglée pour qu'il y ait une correspondance point à point entre les pixels de (4417) et ceux de (4427), c'est-à-dire pour que, lorsque les tableaux de commande $A_{i,j}$ et $B_{i,j}$ sont appliqués respectivement au SLM (4405) et aux SLM (4412) et (4417), le point éclairé sur (4427) soit le pixel de coordonnées (*i,j*), quels que soient les entiers *i* et *j*.

Le fréquencemètre est positionné entre (4424) et (4428). Son polariseur est mis en place. Le faisceau FEDI est utilisé. Le tableau de commande de (4427) est mis à 0 et le polariseur du fréquencemètre est réglé pour annuler l'intensité reçue sur le CCD du fréquencemètre. La série des opérations o21 à o23 est alors répétée un nombre suffisant de fois, pour converger vers un réglage correct.

o21. Réglage de la position conjointe de (4425) et (4426) pour obtenir une image en fréquence ponctuelle.

Le tableau de commande

$$A_{\frac{N_{pix}}{2},\ \frac{N_{pix}}{2}}$$

est appliqué au SLM (4405) et le tableau de commande

$$B_{\frac{N_{pix}}{2},\ \frac{N_{pix}}{2}}$$

est appliqué aux SLM (4412) et (4417). Le tableau de commande appliqué à (4427) est mis à 1. La position de l'ensemble (4425) (4426) est ajustée pour avoir sur le capteur CCD du fréquencemètre une image aussi ponctuelle que possible.

o22. Réglage de l'orientation de (4424) et réglage en translation de (4427) pour obtenir une image en fréquence centrée.

(4424) et (4427) sont réglés pour que la fréquence centrale générée soit au milieu du SLM. Ce réglage se fait avec le fréquencemètre et le programme *PA* de localisation du maximum défini plus haut. Toutefois, dans ce programme de localisation du maximum, le SLM (4412) est içi remplacé par le SLM (4427).

o23. Réglage de (4425) pour obtenir le bon grandissement en fréquence et réglage en rotation de (4427).

Le programme *PC* est utilisé. Toutefois, dans ce programme:

- le SLM (4412) est remplacé par le SLM (4427)
- lorsque un mot de commande $A_{i,j}$ est appliqué au SLM (4405), le mot de commande $B_{i,j}$ correspondant est appliqué en plus aux SLM (4412) et (4417).

La correction de distance inter-lentilles obtenue est appliquée à la distance entre (4425) et (4426) et le réglage en rotation est effectué sur (4427).

*Etape* 32. Réglage en translation 2 axes du diaphragme (4428)

(4428) est monté sur un positionneur deux axes en translation permettant des déplacements dans un plan orthogonal à l'axe optique.
L'ouverture de (4428) est connue. Il doit être réglé en translation.
FEDI est utilisé. (4428) est provisoirement supprimé. Un CCD auxiliaire est placé juste derrière (4428). Le tableau de commande

$$A_{\frac{N_{pix}}{2},\ \frac{N_{pix}}{2}}$$

est appliqué au SLM (4405) et le tableau de commande

$$B_{\frac{N_{pix}}{2},\ \frac{N_{pix}}{2}}$$

est appliqué aux SLM (4412) et (4417). Le tableau de commande de (4427) est à 1. Le centre de la zone éclairée est repéré sur le CCD auxiliaire. (4428) est alors mis en place de manière à ce que son centre coïncide avec le centre de la zone éclairée.

*Etape* 33. Réglage en rotation du polariseur (4352)

Ce polariseur est monté sur un positionneur un axe en rotation permettant d'en ajuster la position en rotation autour de son axe optique.
FEDI est utilisé. Le tableau de commande de (4427) est mis à 0. Les tableaux de commande des SLM (4405) (4412)(4417) ne sont pas modifiés. La position en rotation de (4352) est ajustée pour annuler l'intensité reçue sur le CCD (4339).

*Etape* 34.Réglage de l'orientation du miroir (4344)

Ce miroir est monté sur un positionneur permettant un ajustement de son orientation. Le diaphragme (4349) est largement ouvert. Un diffuseur est utilisé pour vérifier que le faisceau FRD parvient au CCD (4339) et est centré sur ce CCD.

*Etape* 35.Réglage de la position et de l'ouverture du diaphragme (4349)

Ce diaphragme est monté sur un positionneur deux axes en translation permettant un déplacement dans le plan de l'axe optique, et a une ouverture réglable.

Sa position est réglée en présence de FRD pour que l'image du diaphragme soit centrée sur le CCD et son ouverture est réglée pour que cette image couvre la totalité du CCD.

*Etape* 36. Réglage de la focale et de la position du doublet (4430)(4429) et réglage en translation et rotation du capteur (4339)

Les lentilles (4430) (4429) sont montées sur un positionneur en translation permettant d'une part de déplacer solidairement les deux lentilles, d'autre part de déplacer (4429) par rapport à (4430).

Le CCD (4339), solidaire de la caméra (4384) est monté sur un positionneur trois axe en rotation permettant d'une part une rotation autour de l'axe optique, d'autre part un réglage de l'orientation du capteur, couplé avec un positionneur trois axes en translation.

Les positionneurs des lentilles (4430) (4429) et de la caméra (4384) sont eux-mêmes montés sur un positionneur permettant un déplacement de l'ensemble dans la direction de l'axe optique.

La position de (4430)(4429) doit être réglée de manière à ce que l'image du faisceau FEDI, lorsque les tableaux de commande

$$A_{\frac{N_{pix}}{2}, \frac{N_{pix}}{2}}$$

et

$$B_{\frac{N_{pix}}{2}, \frac{N_{pix}}{2}}$$

sont appliqués respectivement au SLM (4405) et aux SLM (4412) et (4417) et lorsque le tableau de commande de (4427) est mis à 1, soit effectivement ponctuelle dans le plan de fréquence ou se trouve (4339). La position de (4339) doit être réglée pour que dans ces conditions le point illuminé sur le CCD (4339) ait pour coordonnées

$$\left( \frac{N_{pix}}{2}, \frac{N_{pix}}{2} \right).$$

La position de (4339)(4429)(4430) doit en outre être réglée pour qu'il y ait une correspondance point à point entre les pixels de (4417) et ceux de (4339), c'est-à-dire pour que, lorsque les tableaux de commande $A_{i,j}$ et $B_{i,j}$ sont appliqués respectivement au SLM (4405) et aux SLM (4412) et (4417) et lorsque le tableau de commande de (4427) est à 1, le point éclairé sur (4339) soit le pixel de coordonnées (*i,j*), quels que soient les entiers *i* et *j*.

Les faisceaux FEDI et FRD sont utilisés.

Le tableau C appliqué à (4427) est mis à 1.

La série des opérations o31 à o33 est répétée un nombre suffisant de fois.

o31. Réglage de la position conjointe de (4429) et (4430) pour obtenir une image en fréquence ponctuelle.

Le tableau de commande

$$A_{\frac{N_{pix}}{2}, \frac{N_{pix}}{2}}$$

est appliqué au SLM (4405) et le tableau de commande

$$B_{\frac{N_{pix}}{2}, \frac{N_{pix}}{2}}$$

est appliqué aux SLM (4412) et (4417). La ponctualité de l'image générée sur le CCD (4339) est évaluée selon la procédure décrite en 7.3.3.1. La position de l'ensemble (4429) (4430) est ajustée pour avoir une image aussi ponctuelle que possible.

o32. Réglage en translation de (4339) pour obtenir une image en fréquence centrée.

La position en translation de (4339) est ajustée pour que les coordonnées de l'image ponctuelle, calculées selon la procédure indiquée en 7.3.3.1., soient

$$\left( \frac{N_{pix}}{2}, \frac{N_{pix}}{2} \right).$$

o33. Réglage de (4429) pour obtenir le bon grandissement en fréquence et réglage en rotation de (4339).

Le programme *PC* est utilisé. Toutefois, dans ce programme:

- lorsqu'un mot de commande $A_{i,j}$ est appliqué au SLM (4405), le mot de commande $B_{i,j}$ correspondant est appliqué en plus aux SLM (4412) et (4417).
- les tableaux $X$[i] et $Y$[i] ne sont pas obtenues par la procédure *PB.* Ils correspondent aux coordonnées du maximum déterminées par la procédure décrite en 7.3.3.1., sans action spécifique sur un SLM.

La correction de distance inter-lentilles obtenue est appliquée à la distance entre (4429) et (4430).
Le réglage en rotation est effectué sur (4339)(4384), en rotation autour de l'axe optique.
L'orientation du CCD est réglée pour avoir

$$\frac{X[1] - X[4]}{Y[2] - Y[3]} = \pm 1$$

*Etape* 37. Réglage de la position en translation de l'ensemble constitué du CCD (4339) et du doublet (4430)(4429).

Le faisceau FRDI est utilisé. Un CCD auxiliaire est mis en place à l'emplacement du diaphragme (4313). La position dudit ensemble est ajustée pour que l'image de FRDI sur le CCD auxiliaire soit ponctuelle.

*Etape* 38. Réglage de l'orientation du miroir (4347)

Ce miroir est monté sur un positionneur deux axes permettant d'en ajuster l'orientation.
La commande des SLM est inchangée. Entre (4345) et (4346), deux faisceaux se propageant en sens opposé sont superposés. Un diffuseur introduit sur le coté du faisceau sera illuminé des deux cotés. Les parties illuminées de chaque coté du diffuseur doivent être les mêmes: les deux faisceaux sont alors exactement superposés. (4347) est réglé pour qu'entre (4345) et (4346) les faisceaux se propageant dans les deux sens soient exactement superposés.

*Etape* 39.Réglage en translation de la lentille (4346)

La lentille (4346) est montée sur un positionneur un axe en translation permettant d'en ajuster la position dans le sens de l'axe optique.
FRDI est utilisé. Le fréquencemètre est positionné sur la trajectoire de FRDI entre (4345) et (4430). La position de la lentille (4346) est ajustée pour que l'image sur le CCD du fréquencemètre soit ponctuelle.

*Etape* 40. Réglage de l'orientation du miroir semi-transparent (4345)

Le miroir semi-transparent (4345) est monté sur un positionneur deux axes permettant d'en ajuster l'orientation.

Un capteur auxiliaire est provisoirement mis en place derrière (4313). Le miroir semi-transparent (4313) est réglé pour que l'image sur ce capteur provisoire soit centrée par rapport au diaphragme (4313).

*Etape* 41. réglage de position des objectifs (4317) et (4319) en translation.

L'objectif (4319) est monté sur un dispositif de focalisation. L'objectif (4317) est monté sur un positionneur deux axes en translation permettant un déplacement dans un plan orthogonal à l'axe optique.
Le faisceau FRDI est utilisé. Un capteur CCD provisoire est positionné juste derrière (4323) sur la trajectoire de FRDI. La position des objectifs est réglée pour obtenir une image ponctuelle centrée.

*Etape* 42. Introduction d'un faisceau d'éclairage plan provisoire.

Ce faisceau, que l'on appellera 'FEP', est dérivé du laser par un miroir semi-transparent placé entre (4304) et (4305) et il est amené par un jeu de miroirs vers l'entrée de l'objectif de microscope (4317), du coté de l'échantillon. L'objectif (4319) doit être provisoirement supprimé à cet effet. A l'entrée dans l'objectif, ce faisceau est dirigé suivant l'axe optique de l'objectif.

*Etape* 43. réglage de l'orientation du miroir (4314) et réglage en translation de la lentille(4312).

Le miroir (4314) est monté sur un positionneur angulaire permettant d'en ajuster l'orientation. La lentille (4312) est montée sur un positionneur un axe en translation dans le sens de l'axe optique.
FEP et FRD sont utilisés. Une image est obtenue à partir du capteur (4339). La ponctualité et les coordonnées du point image de FEP sont évaluées par la procédure décrite en 7.3.3.1.
La lentille (4312) est réglée pour que l'image soit ponctuelle.
Le miroir (4314) est réglé pour que l'image soit centrée.

*Etape* 44. réglage de position des objectifs.

Le faisceau FEP est supprimé et l'objectif (4317) est remis en place. Le faisceau FRDI est utilisé. Un capteur CCD provisoire est mis en place derrière (4323) sur la trajectoire de FRDI. Les objectifs sont réglés pour que l'image soit ponctuelle et centrée par rapport au diaphagme (4323).

*Etape* 45. Réglage en translation de la lentille (4324).

FED est utilisé. Il traverse successivement les objectifs (4317) et (4319), puis la lentille (4324) et parvient au fréquencemètre, qui est positionné derrière (4324). La position de (4324) est réglée de manière à obtenir une image aussi ponctuelle que possible sur le CCD du fréquencemètre.

*Etape* 46. Réglage de l'orientation des miroirs (4432) (4435), premier réglage en rotation de (4436) et premier réglage de l'orientation du miroir semi-transparent (4325)

Les SLM (4405)(4412)(4417) sont commandés de manière à générer une fréquence centrale. Le faisceau FEG est utilisé. (4325) est en position normale. Le trajet du faisceau est contrôlé avec un diffusevr. Chaque miroir est ajusté de manière à avoir la trajectoire prévue. Le faisceau doit en particulier occuper toute l'ouverture de (4323).

*Etape* 47. Mise en place de l'extincteur de faisceau (4437)

Cet extincteur de faisceau est mis en place comme indiqué en 7.3.2.2.

*Etape* 48. Réglage de la position et de la focale du doublet (4433)(4434), réglage en rotation de l'ensemble (4436), et réglage de l'orientation du miroir semi-transparent (4325).

La lentille (4434) est montée sur un positionneur en translation suivant l'axe optique. Ce positionneur et la lentille (4433) sont eux-mêmes montés sur second un positionneur en translation un axe suivant l'axe optique.
La position de (4433)(4434) doit être réglée de manière à ce que l'image du faisceau FEG, lorsque les tableaux de commander

$$A_{\frac{N_{pix}}{2},\ \frac{N_{pix}}{2}}$$

et

$$B_{\frac{N_{pix}}{2},\ \frac{N_{pix}}{2}}$$

sont appliqués respectivement au SLM (4405) et aux SLM (4412) et (4417) et lorsque le tableau de commande de (4427) est mis à 1, soit effectivement ponctuelle dans le plan de fréquence ou se trouve (4339). La position de (4325) doit être réglée pour que dans ces conditions le point illuminé sur le CCD (4339) ait pour coordonnées

$$\left( \frac{N_{pix}}{2}, \frac{N_{pix}}{2} \right).$$

La position de (4433)(4434)(4436)(4325) doit en outre être réglée pour qu'il y ait une correspondance point à point entre les pixels de (4417) et ceux de (4339), c'est-à-dire pour que, lorsque les tableaux de commande $A_{i,j}$ et $B_{i,j}$ sont appliqués respectivement au SLM (4405) et aux SLM (4412) et (4417) et lorsque le tableau de commande de (4427) est à 1, le point éclairé sur (4339) soit le pixel de coordonnées ($i,j$), quels que soient les entiers $i$ et $j$.

Les faisceau FRD et FEG sont utilisés. Le tableau de commande appliqué à (4427) est mis à 1.

Ce réglage est effectué en effectuant un nombre suffisant de fois les étapes o41 à o43

o41. Réglage de la position conjointe de (4433) et (4434) pour obtenir une image en fréquence ponctuelle.

Le tableau de commande

$$A_{\frac{N_{pix}}{2},\ \frac{N_{pix}}{2}}$$

est appliqué au SLM (4405) et le tableau de commande

$$B_{\frac{N_{pix}}{2},\ \frac{N_{pix}}{2}}$$

est appliqué aux SLM (4412) et (4417). La ponctualité de l'image générée sur le CCD (4339) est évaluée selon la procédure décrite en 7.3.3.1. La position de l'ensemble (4433) (4434) est ajustée pour avoir une image aussi ponctuelle que possible.

o42. Réglage angulaire de (4325) pour obtenir une image en fréquence centrée.

La position angulaire de (4325) est ajustée pour que les coordonnées de l'image ponctuelle, calculées selon la procédure indiquée en 7.3.3.1., soient

$$\left( \frac{N_{pix}}{2}, \frac{N_{pix}}{2} \right).$$

043. Réglage de (4433) pour obtenir le bon grandissement en fréquence et réglage en rotation de (4436).

Le programme PC est utilisé. Toutefois, dans ce programme:

- lorsque un mot de commande $A_{i,j}$ est appliqué au SLM (4405), le mot de commande $B_{i,j}$ correspondant est appliqué aux SLM (4412) et (4417).
- les valeurs $X$[i] et $Y$[i] ne sont pas obtenues par la procédure PB. Ils correspondent aux coordonnées du maximum déterminées par la procédure décrite en 7.3.3.1., sans action spécifique sur un SLM.

La correction de distance inter-lentilles obtenue est appliquée à la distance entre (4433) et (4434) et le réglage en rotation est effectué sur (4436).

*Etape* 49. Réglage du reste de la partie 'gauche' du microscope

Chaque élément encore non réglé correspond à un élément symétrique dans la partie droite du microscope. Le réglage des éléments encore non réglés est 'symétrique' du réglage des éléments correspondants de la partie droite du microscope. Il est effectué de manière symétrique, le faisceau FEGI remplaçant le faisceau FEDI. Toutefois il doit être tenu compte du fait suivant:

- un point centré en

$$\left( \frac{N_{pix}}{2}, \frac{N_{pix}}{2} \right)$$

sur le capteur (4339) peut être obtenu avec des tableaux de commande

$$A_{\frac{N_{pix}}{2}, \frac{N_{pix}}{2}}$$

et

$$B_{\frac{N_{pix}}{2}, \frac{N_{pix}}{2}}$$

des SLM (4405),(4412),(4417) et avec le faisceau FEG. Il peut être également obtenu avec les tableaux de commande

$$A_{\frac{N_{pix}}{2}1, \frac{N_{pix}}{2}}$$

$$B_{\frac{N_{pix}}{2}1, \frac{N_{pix}}{2}}$$

et avec le faisceau FEDI.
- un point centré en

$$\left( \frac{N_{pix}}{2}, \frac{N_{pix}}{2} \right)$$

sur le capteur (4329) peut être obtenu avec des tableaux de commande

$$A_{\frac{N_{pix}}{2}1, \frac{N_{pix}}{2}}$$

et

$$B_{\frac{N_{pix}}{2}1,\ \frac{N_{pix}}{2}}$$

des SLM (4405),(4412),(4417) et avec le faisceau FED. Il peut être également obtenu avec les tableaux de commande

$$A_{\frac{N_{pix}}{2},\ \frac{N_{pix}}{2}}$$

$$B_{\frac{N_{pix}}{2},\ \frac{N_{pix}}{2}}$$

et avec le faisceau FEGI. Les mots de commande des SLM ne sont donc pas parfaitement équivalents pendant les deux réglages. Le réglage de la partie gauche du microscope comprend en particulier des étapes équivalentes aux étapes 31 et 36. Dans ces étapes, les tableaux de commande

$$A_{\frac{N_{pix}}{2}1,\ \frac{N_{pix}}{2}}$$

et

$$B_{\frac{N_{pix}}{2}1,\ \frac{N_{pix}}{2}}$$

doivent être remplacés par

$$A_{\frac{N_{pix}}{2},\ \frac{N_{pix}}{2}}$$

et

$$B_{\frac{N_{pix}}{2},\ \frac{N_{pix}}{2}}$$

.

*Etape* 50. Mise en place de (4351)

Ce dispositif de décalage de phase est identique à celui décrit en 7.2.3. et mis en place comme indiqué en 7.3.2.3.

A l'issue de cet ensemble de réglages le système est prêt à être employé.

### 8.6. Variante du mode d'utilisation.

On peut se limiter, pour générer l'image tridimensionnelle de l'objet, à la représentation $F_{0,0}$ définie en 7.17. Ceci revient, dans la procédure décrite en 7.17.2., à adopter des tableaux $IB_{p,q}$ nuls pour tout couple $(p,q) \neq (0,0)$.

On suppose également içi que l'objet a un indice moyen proche de l'indice nominal de l'objet observé et que la table optique est totalement exempte de vibrations.

Les étapes 7.9, 7.10, 7.11, 7.13, 7.15, 7.16 peuvent alors être supprimées. La présente méthode diffère en outre de la précédente par la méthode utilisée pour régler la position des objectifs avant utilisation, par les tableaux de commande appliqués au déviateur de faisceau pendant la prise d'image, et par l'algorithme de superposition des images.

### 8.6.1. Réglage des objectifs.

Ce réglage peut être effectué en présence de l'objet. Il peut également être effectué avec une lame transparente à condition de ne pas déplacer les objectif quand on introduit l'objet. Si des objectifs prévus pour fonctionner sans liquide d'immersion ni lame couvre-objet sont prévus (indice nominal égal à 1) et si l'échantillon est peu épais ou d'indice moyen proche de 1, il peut également être effectué en l'abscence d'objet.Pendant ce réglage on utilise les faisceaux FEG et FRD et on effectue les opérations suivantes:

- on met à 0 le tableau de commande du SLM (4405)
- on met à 1 les tableaux de commande des autres SLM.
- on règle le polariseur (4408) en rotation de manière à annuler le faisceau FEG reçu sur (4339).
- on applique au SLM (4405) le tableau de commande

$$B_{\frac{N_{pix}}{2},\ \frac{N_{pix}}{2}}$$

qui est nul en tout point sauf au point de coordonnées

$$\left(\frac{N_{pix}}{2},\ \frac{N_{pix}}{2}\right).$$

- on évalue la ponctualité de l'image reçue sur le capteur (4339) en utilisant la procédure décrite en 7.3.3.1. avec transformation de Fourier.
- on règle la position des objectifs pour que l'image soit parfaitement ponctuelle et centrée.
- on ramène alors le polariseur (4408) a sa position initiale.

### 8.6.2. commande du déviateur de faisceau

Le tableau de commande $A_{ij}$ utilisé en 8.4.1. pour le SLM (4405) est remplacé par:

$$A_{ij}[k,l] = E\left(\left|\frac{1}{N_{pix}}\left(k\left(i - \frac{N_{pix}}{2}\right) + l\left(j - \frac{N_{pix}}{2}\right)\right)\right|\%2\right)$$

### 8.6.3.algorithme de calcul de la représentation tridimensionnelle

Les étapes 1 et 2 de l'algorithme décrit en 7.17.2. peuvent être supprimées. En effet le réglage supplémentaire effectué, le tableau de commande du déviateur de faisceau utilisé, et l'abscence de vibrations permettent d'éviter tout décalage de phase du faisceau d'éclairage. En particulier, si la variante décrite en 7.18.5. est utilisée, le dispositif de décalage de phase (4304) n'est pas utilisé, le déphasage $\Theta_d$ étant-constant et pouvant être choisi comme nul.

### 9. Cinquième mode de réalisation

Ce mode de réalisation ne permet pas une acquisition d'images aussi rapide que le mode précédent et n'est pas, pour cette raison, le mode préféré de réalisation dans le cas général. Néanmoins, dans le domaine particulier des rayonnements UV, il constitue le mode de réalisation préféré. En effet, dans ce domaine, les modes de réalisation 3 et 4 ne sont pas réalisables du fait de la non-disponibilité des cristaux liquides et des polariseurs. Compte tenu du fait qu'il peut fonctionner avec des rayonnements UV de courte longueur d'onde, ce mode de réalisation est également celui qui permet d'obtenir la meilleure définition sur l'image générée.

### 9.1. Principes.

Ce cinquième mode de réalisation se rapproche du deuxième mode de réalisation en ce que l'image est captée dans un plan d'espace et en ce que les variations de direction du faisceau se font à l'aide d'un miroir mobile. Il se rapproche du troisième mode de réalisation en ce que deux objectifs de microscope sont utilisés, et en ce que la plupart des algorithmes sont des formes modifiées de ceux utilisés dans le troisième mode de réalisation. Il diffère de l'ensemble des modes de réalisation précédents en ce que l'onde de référence n'est pas fixe mais est modifiée en même temps que l'onde d'éclairage. Il est décrit par les Fig.73 et 74.

L'objectif de ce cinquième mode de réalisation est d'améliorer la résolution par utilisation d'un laser ultraviolet. Il n'existe pas de cristaux liquides ferroélectriques travaillant en ultraviolet, et par conséquence il est nécessaire d'adopter des solutions à base de composants optiques plus traditionnels. En particulier, le dispositif de déviation du faisceau est un miroir mobile (5113).

Toutefois, l'utilisation d'un miroir mobile dans un système proche du premier ou du deuxième mode de réalisation engendre des vibrations. Après chaque mouvement du miroir, il est nécessaire d'attendre la stabilisation du système avant de procéder à l'acquisition. Afin de s'affranchir des vibrations causées par le miroir mobile, il est nécessaire de positionner celui-ci en dehors de la table optique et de séparer les faisceaux d'éclairage et de référence sur la table optique, après passage du miroir. Il s'ensuit que les mouvements du miroir se traduisent par un mouvement simultané des faisceaux de référence et d'éclairage.

Afin de profiter pleinement de la résolution possible en ultraviolet, il est nécessaire de pouvoir effectuer, comme dans le troisième et le quatrième mode de réalisation, des changements d'orientation du vecteur champ électrique du faisceau d'éclairage. Ces changements se font en séparant l'onde, par un miroir semi-transparent (5102), en deux chemins, une lame de phase (5111) modifiant la polarisation étant insérée sur un des chemins et des obturateurs (5104) et (5109) permettant de choisir le chemin utilisé. Les deux ondes sont ensuite à nouveau superposées par un miroir (5112). Les obturateurs sont placés en un point ou l'onde lumineuse n'occupe qu'une faible extension spatiale et peuvent donc être ouverts ou fermés rapidement.

Pour la même raison il est nécessaire de disposer de plusieurs directions d'analyse. De chaque coté du microscope, deux capteurs CCD sont utilisés, un pour chaque direction d'analyse. Dans la mesure ou il est difficile d'avoir de bons polariseurs dans le domaine UV, la direction d'analyse sera modifiée uniquement par une modification du sens de polarisation de l'onde de référence, par exemple au moyen de lames d'onde (5238) (5239) qui modifient différemment cette polarisation avant chaque capteur.

L'onde de référence est mobile et peut en particulier traverser l'objet avec un angle proche de l'ouverture maximale de l'objectif. Il s'ensuit que la fréquence spatiale reçue sur le capteur peut être deux fois plus élevée qu'avec un système ou l'onde de référence est centrée par rapport à l'axe optique comme dans le deuxième mode de réalisation. A taille d'image égale, un capteur de dimensions en pixels deux fois supérieures est donc nécessaire, par rapport aux autres modes de réalisation.

Pour supprimer l'onde d'éclairage directe, on utilise une vitre (5165) ou (5191) sur laquelle est fixé un point noir, placée dans un plan de fréquences. En déplaçant ce point noir, on modifie la fréquence supprimée. Par contre, cette méthode ne permet pas d'obtenir la valeur de l'onde au point d'impact direct de l'onde d'éclairage, sur laquelle sont basées les reconstructions tridimensionnelles pratiquées dans les autres modes de réalisation. Par ailleurs, le miroir mobile se prête mal à des changements rapides de l'onde d'éclairage entre des fréquences très différentes. Or ces changements étaient nécessaires dans le troisième mode de réalisation pour obtenir les images de référence qui permettaient de recaler en phase les représentations bidimensionnelles obtenues sur le capteur opposé au point d'impact direct de l'onde d'éclairage. C'est pourquoi une méthode de recalage en phase ne nécessitant ni image de référence ni acquisition du point correspondant à l'éclairage direct doit être prévue dans ce mode de réalisation.

Le paragraphe 9.2. décrit matériellement le microscope utilisé et le paragraphe 9.3. donne les principes de dimensionnement applicables. Le microscope étant d'une conception matérielle différant notablement du mode de réalisation 3, son réglage et son utilisation diffèrent également fortement du réglage et de l'utilisation du microscope selon le mode de réalisation 3.

Le microscope fait l'objet d'un ensemble de réglages effectués en l'abscence de l'échantillon:

- Le réglage de position des différents éléments est effectué comme décrit au paragraphe 9.5. Ce réglage fait appel à une procédure d'acquisition d'images décrite au paragraphe 9.4.
- Les tableaux permettant la commande du miroir de déviation du faisceau sont déterminés comme décrit au paragraphe 9.6.
- Les tableaux permettant la commande des vitres (5165) et (5191), utilisées pour supprimer le faisceau d'éclairage direct, sont déterminés comme décrit au paragraphe 9.7.

- La constante *K*, équivalente à celle utilisée dans le premier mode de réalisation, est déterminée comme décrit en 9.8.
- La position des capteurs CCD doit faire l'objet d'un réglage fin décrit au paragraphe 9.10.
- Le tableau caractérisant la réponse fréquentielle des capteurs est déterminé comme décrit au paragraphe 9.11.
- Les coordonnées relatives des points centraux des images obtenues de chaque coté du microscope sont déterminées comme décrit au paragraphe 9.12.
- Les phases de chaque faisceau d'éclairage sont déterminées comme décrit au paragraphe 9.13.

Après mise en place de l'échantillon le microscope fait l'objet d'un ensemble de réglages supplémentaires:

- La position des objectifs est réglée comme décrit au paragraphe 9.14.
- Les coordonnées relatives *x,y,z* des points d'origine des faisceaux de référence associés à chaque objectif, ainsi que l'indice moyen $n_o$ de l'échantillon et son épaisseur *L*, sont déterminés comme décrit au paragraphe 9.15.
- La valeur $w_0$ caractérisant la position de l'échantillon est calculée comme décrit au paragraphe 9.16. La procédure décrite au paragraphe 9.16. est essentiellement semblable à celle décrite au paragraphe 7.15. et comporte en particulier un premier réglage de focalisation.
- La fonction de compensation des aberrations $D_p$ est obtenue comme décrit au paragraphe 9.17.

Lorsque ces réglages ont été effectués, la procédure d'obtention d'images tridimensionnelles est lancée. Une version de cette procédure, analogue à celle décrite pour le troisième mode de réalisation, est décrite en 9.18. Une version spécifiquement adaptée de cette procédure est décrite en 9.19. Dans tous les cas, les représentations fréquentielles bidimensionnelles sont acquises en utilisant une procédure décrite au paragraphe 9.9., qui est également utilisée dans certaines étapes de réglage.

Bien que cela ne soit pas rappelé, un réglage de localisation analogue à celui décrit en 7.17.3. est effectué, ce qui peut impliquer un recalcul de $w_0$ et $D_p$.

Une version très simplifiée du fonctionnement de ce microscope est décrite en 9.20.

Moyennant des modifications algorithmiques similaires à celles décrites en 7.20 et 7.21, ce mode de réalisation peut être adapté à l'utilisation d'objectifs présentant des aberrations.

## 9.2. Description matérielle.

Un schéma d'ensemble du système est constitué par les figures 73,74,63. Le plan des Fig.73 et 74 est horizontal. L'ensemble (5176), entouré en pointillés sur la Fig.74, est identique à l'ensemble correspondant dans le quatrième mode de réalisation et est représenté par la Fig.63.

Un laser polarisé dans le sens vertical (5100) produit un faisceau dont le vecteur champ électrique est donc dirigé selon un axe orthogonal au plan de la figure. Ce faisceau traverse ensuite un élargisseur de faisceau (5101).

Le faisceau est ensuite séparé en deux par un miroir semi-transparent (5102). Un des faisceaux issus de (5102) traverse une lentille (5103) puis un obturateur (5104) placé dans le plan focal de cette lentille. Il traverse alors une seconde lentille (5105) dont le plan focal objet coïncide avec le plan focal image de (5103), puis est réfléchi par un miroir (5106) et un miroir semi-transparent (5112). La partie du faisceau qui n'est pas réfléchie par (5112) va frapper une surface absorbante (5253). Le second faisceau issu de (5102) est réfléchi par un miroir (5107), traverse une lentille (5108) puis un obturateur (5109) placé dans le plan focal de cette lentille. Il traverse alors une seconde lentille (5110) dont le plan focal objet coïncide avec le plan focal image de (5108). Il traverse alors une lame d'onde (5111) puis traverse le miroir (5112). En sortie du miroir (5112) les deux faisceaux issus du miroir semi-transparent (5102) sont à nouveau superposés. Les distances focales des lentilles (5103) (5105) (5108) (5110) sont égales. La lame d'onde (5111) introduit une différence de chemin optique d'une demi-longueur d'onde entre ses deux axes neutres. Elle est positionnée de manière à transformer le faisceau entrant polarisé dans le sens vertical en un faisceau polarisé dans le sens horizontal. La faible extension spatiale du faisceau traversant les obturateurs (5104) (5109) permet l'utilisation d'obturateurs mécaniques rapides, un faible déplacement étant suffisant pour obturer le faisceau.

Le faisceau issu de (5112) se dirige vers le miroir (5113) qui le réfléchit. Ce miroir est monté sur un positionneur deux axes (5114) semblable à celui représenté sur les figures 2 et 3, qui permet de commander son orientation. Il est placé au foyer image des lentilles (5110) et (5105). Le faisceau issu de (5113) traverse ensuite la lentille (5250) dont le foyer objet est sur (5113), puis la lentille (5251) dont le foyer objet coïncide avec le foyer image de (5250). Il est ensuite réfléchi par un miroir partiellement transparent (5115) qui produit un faisceau de référence dirigé vers (5117). Le miroir semi-transparent (5117) sépare ensuite le faisceau de référence en un faisceau de référence droit FRD et un faisceau de référence gauche FRG. Le faisceau ayant traversé (5115) traverse ensuite un miroir partiellement transparent (5116) qui en sépare un faisceau spécifique FS. Le faisceau ayant traversé (5116) est ensuite séparé par un miroir semi-transparent (5118) en un faisceau d'éclairage droit FED et un faisceau d'éclairage gauche FEG.

Le faisceau FRD traverse d'abord une lentille (5120) dont le foyer objet coïncide avec le foyer image de (5251), puis une seconde lentille (5121) dont le foyer objet coïncide avec le foyer image de (5120). Il est ensuite réfléchi par un miroir (5122) placé au foyer image de (5121) et monté sur une 'pile' piézoélectrique (5123) produisant des déplacements de l'ordre de la longueur d'onde, qui constitue le dispositif de décalage de phase, sur le même principe que l'élément (122) de la Fig.1. Il traverse alors un filtre (5124) permettant d'en ajuster l'intensité, puis une lentille (5125) dont le foyer objet est sur le miroir (5122). Il traverse ensuite un doublet de lentilles (5127)(5126) fonctionnant suivant le principe explicité en 8.1.4.1. , le foyer objet du doublet (5127)(5126) étant confondu avec le foyer image de (5125). Il est ensuite séparé en deux faisceaux par un miroir partiellement transparent (5234). Un de ces faisceaux est ensuite réfléchi par le miroir (5235), traverse une lame d'onde (5239), puis est réfléchi en partie vers le CCD (5174) par le miroir partiellement transparent (5236), la partie non réfléchie étant arrêtée par une surface absorbante (5237). L'autre faisceau traverse une lame d'onde (5238), puis est réfléchi en partie vers le CCD (5171) par le miroir partiellement transparent (5232), la partie non réfléchie étant arrêtée par une surface absorbante (5233). Les CCD (5174) et (5171) sont respectivement montés sur les caméras (5175) et (5172). Ils sont chacun dans un plan focal image du doublet (5126)(5127).

Le faisceau FRG est réfléchi par un miroir (5252). Il traverse une lentille (5145) dont le foyer objet coïncide avec le foyer image de (5251), puis une seconde lentille (5146) dont le foyer objet coïncide avec le foyer image de (5145). Il est ensuite réfléchi par un miroir (5147) placé au foyer image de (5146) et monté sur une 'pile' piézoélectrique (5148) qui constitue le dispositif de décalage de phase. Il traverse alors un filtre (5149) permettant d'en ajuster l'intensité, puis une lentille (5150) dont le foyer objet est sur le miroir (5147). Il traverse ensuite un doublet de lentilles (5151) (5152) fonctionnant suivant le principe explicité en 8.1.4.1. , le foyer objet du doublet (5151)(5152) étant confondu avec le foyer image de (5150). Il traverse ensuite un dispositif d'ajustement en rotation du type décrit en 8.1.4.2. , constitué des miroirs (5219) (5220) et de l'ensemble (5221) constitué des miroirs (5214) (5215) (5216) (5217), et mobile en rotation autour d'un axe passant par le centre des miroirs (5220)(5214)(5217). Il est ensuite séparé en deux faisceaux par un miroir partiellement transparent (5244). Un de ces faisceaux est ensuite réfléchi par le miroir (5245), traverse une lame d'onde (5249), puis est réfléchi en partie vers le CCD (5198) par le miroir partiellement transparent (5246), la partie non réfléchie étant arrêtée par une surface absorbante (5247). L'autre faisceau traverse une lame d'onde (5248), puis est réfléchi en partie vers le CCD (5201) par le miroir partiellement transparent (5242), la partie non réfléchie étant arrêtée par une surface absorbante (5243). Les CCD (5198) et (5201) sont respectivement montés sur les caméras (5199) et (5202). Ils sont chacun dans un plan focal image du doublet (5151)(5152).

Le faisceau FED est réfléchi par un miroir (5141), traverse un filtre (5142) permettant d'en ajuster l'intensité, une lentille (5143) dont le foyer objet coïncide avec le foyer image de (5251), un obturateur (5144), et une lentille (5154) dont le plan focal objet coïncide avec le plan focal image de (5143) et dont le plan focal image coïncide avec l'image du diaphragme (5158) par la lentille (5157). Il est réfléchi par des miroirs (5153) et (5155), puis il est séparé en deux faisceaux par un miroir partiellement transparent (5156). L'un des faisceaux, dirigé vers (5157), est le faisceau principal et sera noté FED. L'autre faisceau, dirigé vers (5159), constitue l'indicateur inverse de FED et sera noté FEDI.

Le faisceau FED traverse la lentille (5157), le diaphragme (5158), le dispositif (5176) représenté Fig. 63, traverse le diaphragme (5184) et la lentille (5183). Un plan focal de la lentille (5157) coïncide avec le plan focal image de l'objectif de microscope (4317) [dans le sens conventionnel d'utilisation de l'objectif, içi opposé au sens des rayons]. Un plan focal de la lentille (5183) coïncide avec le plan focal image de l'objectif de microscope (4319). Les diaphragmes (5158) et (5184) sont placés dans les plans ou les objectifs forment normalement les images de l'échantillon. Le faisceau issu de (5183) traverse le miroir semi-transparent (5182). Il traverse la lentille (5188) dont le plan focal objet coïncide avec l'image du diaphragme (5184) par la lentille (5183). Il traverse ensuite une vitre (5191) de faible épaisseur, sur laquelle se trouve un point noir absorbant de quelques dizaines de micromètres de diamètre. Cette vitre est positionnée dans le plan focal image de la lentille (5188) et a pour fonction d'arrêter le faisceau d'éclairage direct. Un diaphragme (5190) placé à peu près dans le même plan permet d'améliorer le filtrage des fréquences spatiales effectué par l'objectif de microscope. Le faisceau traverse ensuite un doublet (5192)(5193) dont le plan focal objet coïncide avec la vitre (5191). Il est ensuite séparé en deux faisceaux par un miroir semi-transparent (5240). Un des faisceaux issus de (5240) parvient au CCD (5198) après avoir traversé le miroir partiellement transparent (5246). L'autre faisceau est réfléchi par le miroir (5241) et parvient au CCD (5201) après avoir traversé le miroir partiellement transparent (5242). Les CCD (5198) et (5201) sont chacun dans un plan focal image du doublet (5192)(5193).

Le faisceau FEDI traverse la lentille (5159) dont un plan focal coïncide avec le plan focal image de la lentille (5154). Il parvient au miroir (5160), optionellement obturé par l'obturateur (5161), qui le réfléchit. Il retraverse alors la lentille (5159) et est réfléchi par le miroir semi-transparent (5156) vers la lentille (5162). Il traverse la lentille (5162) dont le plan focal objet coïncide avec l'image du diaphragme (5158) par la lentille (5157). Il traverse ensuite le miroir partiellement transparent (5163). Il traverse ensuite une vitre (5165) de faible épaisseur, sur laquelle se trouve un point noir absorbant de quelques dizaines de micromètres de diamètre. Cette vitre est positionnée dans le plan focal image de la lentille (5162) et a pour fonction d'arrêter le faisceau d'éclairage direct. Un diaphragme optionnel (5164) placé à peu près dans le même plan permet d'améliorer le filtrage des fréquences spatiales effectué par l'objectif de microscope. Le faisceau traverse ensuite une lentille (5166) dont le plan focal objet coïncide avec le plan focal image de (5162). Il est ensuite séparé en deux faisceaux par un miroir semi-transparent (5230). Un des faisceaux issus de (5230) parvient au CCD (5174) après avoir traversé le miroir partiellement transparent (5236). L'autre faisceau est réfléchi par le miroir (5231) et parvient au CCD (5171) après avoir traversé le miroir partiellement transparent (5232). Les CCD (5174) et (5171) sont chacun dans un plan focal image de la lentille (5166).

Le faisceau FEG est réfléchi par les miroirs (5119) (5204), traverse un filtre (5205) permettant d'en ajuster l'intensité, une lentille (5206) dont le foyer objet coïncide avec le foyer image de (5251), un obturateur (5207), un doublet (5179)(5178) dont le plan focal objet coïncide avec le plan focal image de (5206) et dont le plan focal image coïncide avec l'image du diaphragme (5184) par la lentille (5183). Il traverse ensuite un dispositif d'ajustement en rotation du type décrit en 8.1.4.2., constitué des miroirs (5177) (5180) et de l'ensemble (5181) constitué des miroirs (5210) (5211) (5212) (5213), et mobile en rotation autour d'un axe passant par le centre des miroirs (5180) (5210) (5213). Il est ensuite séparé en deux faisceaux par un miroir partiellement transparent (5182). L'un des faisceaux, dirigé vers (5183), est le faisceau principal et sera noté FEG. L'autre faisceau, dirigé vers (5185), constitue l'indicateur inverse de FEG et sera noté FEGI.

Le faisceau FEGI traverse la lentille (5185) dont un plan focal coïncide avec le plan focal image du doublet (5178) (5179). Il parvient au miroir (5187), optionellement obturé par l'obturateur (5186), qui le réfléchit. Il retraverse alors la lentille (5185) et est réfléchi par le miroir semi-transparent (5182) vers la lentille (5188).

Le faisceau FS traverse d'abord un filtre (5128) puis une lentille (5129) et est réfléchi par un miroir (5130). Il traverse alors un obturateur (5254) puis une lentille (5140) dont le foyer objet est confondu avec le foyer image de (5129). Il est ensuite séparé par un miroir semi-transparent (5163) en un faisceau principal FS dirigé vers (5162) et un faisceau indicateur inverse dirigé vers (5189), qui sera noté FSI. Le faisceau FSI traverse une lentille (5189), est réfléchi sur un miroir placé au foyer objet de (5189) et pouvant être obturé par un obturateur (5209), retraverse la lentille (5189) et est à nouveau réfléchi par le miroir semi-transparent (5163) en direction de (5164).

Chaque lentille utilisée est un achromat ou une lentille composée minimisant les aberrations optiques.

Les principes de contrôle du faisceau indiqués en 8.1.1. et 8.1.4. restent valables et on a indiqué de la même manière que pour le quatrième mode de réalisation les plans d'espace (*E*) et de fréquence (*F*). L'onde de référence est içi parallèle, comme l'onde d'éclairage et comme dans le deuxième mode de réalisation. C'est pourquoi elle est ponctuelle dans les plans de fréquence et parallèle dans les plans d'espace comme l'onde d'éclairage. Le faisceau spécial FS est par contre ponctuel dans les plans d'espace et parallèle dans les plans de fréquence, comme l'était l'onde de référence dans le quatrième mode de réalisation.

Beaucoup d'éléments sont montés sur des positionneurs permettant d'en ajuster la position dans une phase de réglage.

Les ensembles (5181) et (5221) sont montés sur des positionneurs en rotation, conformément à leur mode de fonctionnement explicité en 8.1.4.2.

Les autres miroirs, miroirs partiellement transparents et miroirs piézoélectriques sont montés sur des positionneurs angulaires permettant d'en ajuster l'orientation.

Les lentilles qui seront réglées en 9.5. sont montées sur des positionneurs une dimension permettant un déplacement dans le sens de l'axe optique.

Chaque doublet est constitué de deux lentilles. Il transforme un plan de fréquences situé d'un coté du doublet en un plan d'espace situé de l'autre coté du doublet. La lentille située du coté du plan d'espace est montée sur un positionneur permettant une translation dans le sens de l'axe optique. Ce positionneur est lui-même monté sur un second positionneur permettant également une translation dans le sens de l'axe optique. La seconde lentille est montée directement sur ce second positionneur.

L'objectif (4317) est monté sur un positionneur à deux dimensions permettant un positionnement dans un plan orthogonal à l'axe optique. L'objectif (4319) est monté sur un dispositif de focalisation. L'échantillon (4318) est monté sur un positionneur trois axes en translation.

Les CCD sont montés sur des positionneurs un axe en rotation et trois axes en translation, permettant une rotation autour de l'axe optique et trois degrés de liberté en translation.

Le trait en pointillés (5203) sépare deux zones. Les éléments situés à gauche de ce trait sont montés sur une table directement liée au sol, sans amortissement. Les éléments situés à droite de ce trait ou sur la Fig.74 sont montés sur une table optique convenablement isolée des vibrations. Les deux tables sont au même niveau. Les vitres (5165) et (5191), les diaphragmes (5164) et (5190), et les obturateurs (5144) (5207) sont les seules exceptions à cette règle. Chacune des vitres (5165) et (5191) est montée sur un positionneur deux axes en translation motorisé permettant un déplacement dans un plan orthogonal à l'axe optique, lui-même monté sur un positionneur manuel permettant une translation dans le sens de l'axe optique, lui-même directement lié au sol. Le système de positionnement deux axes en translation doit être précis et ne pas entraîner de déplacements parasites en rotation de la vitre. En effet, de tels déplacements entraîneraient des variations de phase pouvant dans certains cas porter préjudice à la qualité des images produites.

Chacun des obturateurs (5144) (5207) est lié directement au sol. Chacun des diaphragmes (5164) (5190) est lié au sol par l'intermédiaire d'un positionneur 3 axes en translation et 1 axe en rotation autour de l'axe optique.

Afin de pouvoir lier au sol vitres et obturateurs, une construction mécanique rigide est employée pour obtenir un support stable situé au-dessus de la table optique, lié au sol et non à la table optique, et auquel on peut fixer les obturateurs ainsi que les vitres, par l'intermédiaire de leurs positionneurs.

Les diaphragmes (5164) et (5190) sont constitués comme indiqué Fig.82. Le diaphragme (5710) a une ouverture circulaire (5711), une pièce (5712) permettant d'occulter une portion de surface supplémentaire dans cette ouverture.

Sur chaque caméra on a indiqué le repère qui est utilisé pour exprimer les coordonnées des pixels du CCD correspondant. Sur chaque lame d'onde, on a indiqué un repère. Le vecteur directeur de ce repère dans le plan de la figure est noté $\vec{i}$ et le vecteur directeur de ce repère dans le plan orthogonal à celui de la figure est noté $\vec{j}$. La lame d'onde (5111) a un axe neutre dirigé selon $\vec{i} + \vec{j}$. Les autres lames d'onde ont des axes neutres dirigés selon $\vec{i} \cos \frac{\pi}{8} + \vec{j} \sin \frac{\pi}{8}$.

Dans le cas ou ce microscope fonctionne dans le domaine des ultraviolets:

- L'ensemble des composants non polarisants traversés par la lumière, c'est-à-dire les lentilles, y compris celles des objectifs, les vitres, et les substrats de miroirs semi-transparents, peuvent être réalisés en un silice. Des objectifs en silice ou en quartz existent chez divers fabricants.
- Les miroirs et miroirs semi-transparents doivent être prévus spécialement pour l'UV.
- Les lames d'onde sont par exemple en quartz.
- Le laser est par exemple un laser à excimère. En mode pulsé, les pulses doivent être synchronisés avec l'acquisition d'images, par exemple à 1 image par pulse.

### 9.3. Dimensionnement.

On note:

$f_1$ : distance focale de la lentille (5162) ou de la lentille (5188)
$f_2$ : distance focale de la lentille (5166) ou du doublet (5192,5193)
$f_3$: distance focale de la lentille (5157) ou de la lentille (5183)
$p_c$ distance entre les centres de deux pixels adjacents, sur les capteurs CCD
2 $N_{pix}$ : dimension latérale en pixels d'un capteur CCD.
$o$: ouverture numérique d'un objectif de microscope
$g$: grandissement d'un objectif de microscope
$f_o$: distance focale d'un objectif de microscope.
$d_o$ : distance entre la lentille (5157) et le diaphragme (5158).
$l_1$ : largeur du diaphragme (5164) ou (5190)

La lentille (5157) doit avoir son plan focal objet confondu avec le plan focal image de l'objectif de microscope, et se trouve à une distance $d_o$ de l'image de l'objectif. On vérifie que ceci implique:

$$f_3 = gf_o + d_o$$

L'ouverture du faisceau à l'arrivée sur le CCD est: $\alpha = \dfrac{f_1}{f_2} \dfrac{o}{g}$

La période d'échantillonnage nécessaire sur le CCD doit être supérieure à $p_c$ et vaut par application du critère de Nyquist: $\dfrac{\lambda}{2} \dfrac{1}{2\alpha}$

On obtient donc:

$$p_c \leq \frac{\lambda}{4} \frac{f_2 g}{f_1 o}$$

d'ou:

$$\frac{f_1}{f_2} \leq \frac{\lambda}{4}\frac{g}{o}$$

Le rapport $\frac{f_1}{f_2}$ doit donc être égal ou légèrement inférieur à $\frac{\lambda}{4p_c}\frac{g}{o}$, chacune des valeurs $f_1$ et $f_2$ étant par ailleurs suffisante pour éviter l'aberration sphérique.

La largeur $l_1$ du diaphragme (5164) doit filtrer uniquement les fréquences supérieures à l'ouverture nominale de l'objectif. On doit donc avoir $l_1 = 2f_1\frac{o}{g}$.

Le diamètre du faisceau incident sur le miroir (5113) doit être tel que les variations de direction nécessaires puissent effectivement être réalisées de manière reproductible à l'aide du système de positionnement de ce miroir. On note $p_\alpha$ le pas angulaire de déplacement du miroir, c'est-à-dire la plus petite variation de l'angle d'orientation de ce miroir qui puisse être effectuée, de manière reproductible, par le système de positionnement de ce miroir. On note $D_{diaph}$ le diamètre d'ouverture du diaphragme (5158) et $D_{mir}$ le diamètre du faisceau incident sur le miroir (5113). On vérifie alors que la présente condition s'exprime par: $p_\alpha \ll \frac{o}{gN_{pix}}\frac{D_{diaph}}{D_{mir}}$ ou le signe $\ll$ signifie « très inférieur », soit par exemple $p_\alpha < \frac{1}{10}\frac{o}{gN_{pix}}\frac{D_{diaph}}{D_{mir}}$.

En dehors des critères précédents une assez grande liberté existe pour le choix des distances focales des autres lentilles. Les critères de dimensionnement appliqués sur la trajectoire des faisceaux FEG,FED,FRG,FRD sont les suivants:

(1). La succession des plans d'espace et de fréquence doit être telle que précisé sur le schéma. Cette succession de plans d'espace et de fréquence constitue la méthode utilisée pour maîtriser la trajectoire et l'ouverture du faisceau comme précisé en 8.1.1.

(2). Les faisceaux d'éclairage et de référence, en l'abscence de diaphragme utilisé entre le miroir (5113) et les capteurs CCD, doivent avoir le même diamètre à leur arrivée sur les capteurs. De manière équivalente, ils doivent avoir la même ouverture, l'ouverture étant ici l'angle entre les faisceaux parallèles parvenant sur les CCD pour deux positions différentes du miroir (5113).

(3). Les distances focales des lentilles doivent être suffisantes pour éviter l'aberration sphérique.

(4). Les distances focales des différentes lentilles sont adaptées de manière à respecter les contraintes d'encombrement.

Par exemple, si le diamètre du faisceau est D, au niveau de (5122) et doit être $D_2$ à son arrivée sur le capteur CCD, et si la distance entre (5122) et (5174), en suivant la trajectoire prévue pour le faisceau, est L, alors si $f_a$ et $f_b$ sont respectivement les distances focales de la lentille (5125) et du doublet (5126)(5127), et compte tenu des principes exposés en 8.1.1., le critère (1) se traduit par $\frac{D_2}{D_1} = \frac{f_b}{f_a}$ et le critère (4) se traduit par $2f_a + 2f_b = L$, d'ou on tire $f_a = \frac{LD_1}{2D_1 + D_2}$ et $f_b = \frac{LD_2}{2D_1 + D_2}$.

L'ensemble du système sera réglé de manière à ce que lorsque le faisceau FEG pénètre dans l'objectif (4317) en étant dirigé selon l'axe optique, sa direction à l'arrivée sur (5174) ou (5171) soit confondue avec celle de l'onde de référence. Lorsque le miroir (5113) sera déplacé à partir de cette position centrale, la direction du faisceau de référence sera modifiée dans un sens et la direction du faisceau d'éclairage sera modifiée en sens opposé, c'est-à-dire que dans un plan de fréquence les points correspondants aux faisceaux FEG et FRD resteront symétriques par rapport au point correspondant au faisceau d'éclairage lorsque il entre dans l'objectif suivant la direction de l'axe optique. Le maintien de cette symétrie est rendu possible par:

- la configuration générale de l'appareil. En effet, en reprenant le schéma de la Fig.67, lorsque le faisceau passe d'un pian d'espace (4801) à un second plan d'espace (4804), sa direction est inversée. Dans la configuration adoptée, la différence entre le nombre de plans d'espace traversés par le faisceau d'éclairage et le nombre de plans d'espace traversés par le faisceau de référence est un nombre impair, et le faisceau d'éclairage est donc inversé par rapport au faisceau de référence.
- le respect de la condition (3), qui signifie que le déplacement du faisceau de référence et le déplacement du faisceau d'éclairage sont de même amplitude.

Cette symétrie de déplacement permet de simplifier les algorithmes et la procédure de réglage.

Les critères de dimensionnement appliqués sur la trajectoire du faisceau FS sont les suivants:

- le faisceau FS doit être parallèle à son arrivée sur (5163)
- sa largeur à son arrivée sur (5163) doit être égale à celle d'un faisceau qui serait ponctuel dans le plan (5158) et dont l'ouverture serait limitée par l'ouverture de l'objectif. Cette largeur, à l'arrivée du faisceau sur (5163), vaut environ $f_1\frac{o}{g}$.

## 9.4. Obtention d'une représentation fréquentielle bidimensionnelle simple et détermination du maximum

On entend içi par représentation fréquentielle bidimensionnelle simple une représentation pour laquelle il n'a pas été tenu compte des polarisations, qui peut être obtenue sans connaître les valeurs de K et du point d'impact direct de l'onde d'éclairage, à partir d'un seul capteur. Les étapes de réalisation d'une telle représentation, pour une onde d'éclairage donnée, sont les suivantes:

*Etape 1-* acquisition:

(5104) est ouvert et (5109) est fermé, de sorte que la polarisation de l'onde d'éclairage est fixe.
$d$ est défini comme suit, le décalage de phase étant effectué avec les actionneurs piézoélectriques (5123) (5148) préalablement calibrés:

| indice $d$ | décalage de phase (degrés) |
|------------|----------------------------|
| 0 | +120 |
| 1 | 0 |
| 2 | -120 |

L'image est obtenue à partir d'un quelconque des capteurs CCD. Lorsque elle est obtenue à l'aide de (5171) ou (5201) les lames de phase (5238) et (5248) doivent être supprimées. On obtient ainsi le tableaux $MF[d][i,j]$ ou $i$ et $j$ varient de 0 à $2N_{pix}$-1.

*Etape 2-* Calcul des représentation spatiales bidimensionnelles.
Le programme effectue:

$$MG[i,j] = \frac{1}{6}\left(2MF[0][i,j] - MF[1][i,j] - MF[2][i,j]\right) + \tilde{j}\frac{1}{2\sqrt{3}}\left(MF[1][i,j] - MF[2][i,j]\right)$$

*Etape 3-* transformation de Fourier.
La transformée de Fourier du tableau MG suivant les indices $i$ et $j$ est effectuée. Ceci génère la représentation fréquentielle $MH[i,j]$ ou p prend les valeurs 0 ou 1 et ou $i$ et $j$ varient de 0 à $2N_{pix}$ - 1. Dans certains cas, cette transformation de Fourier peut ne pas être effectuée: on obtient alors une représentation spatiale au lieu d'une représentation fréquentielle.
Lorsque l'image est à peu près ponctuelle et que les coordonnées et la valeur du maximum doivent être connus, le programme de calcul du maximum procède comme indiqué en 7.3.3.1., à ceci près que le tableau $S$ a maintenant pour dimensions $2N_{pix}$x$2N_{pix}$ et est le tableau $MH$ calculé comme ci-dessus. Il obtient ainsi les coordonnées *imax,jmax* du maximum sur le capteur concerné. L'image est considérée comme centrée si

$$(imax, jmax) = \left(N_{pix}, N_{pix}\right)$$

et elle est considérée comme parfaitement ponctuelle lorsque la valeur du maximum obtenue est la plus élevée possible.

## 9.5. Réglage des positionneurs manuels

### 9.5.1. Critères de réglage:

On désigne par FEP un faisceau d'éclairage plan entrant dans l'objectif (4317) en étant dirigé selon l'axe optique et parvenant aux capteurs (5174) (5171).
Les réglages visent à s'assurer que:

(1) les faisceaux suivent la trajectoire prévue.

(2) les faisceaux d'éclairage et de référence sont ponctuels dans les plans de fréquence et parallèles dans les plans d'espace.

(3) les faisceaux FS et FSI sont ponctuels dans les plans d'espace

(4) les faisceaux FS et FSI ont des images ponctuelles et centrées sur les capteurs (5171) (5174)(5201)(5198).

(5) un faisceau parallèle FEP entrant dans un objectif de microscope (4317) et dirigé selon l'axe optique ait une image ponctuelle et centrée sur les représentation fréquentielles bidimensionnelles obtenues par la procédure 9.4. à partir des images reçue sur les capteurs (5174) ou (5171).

(6) Lorsque l'image du faisceau FEG sur les représentation fréquentielles bidimensionnelles obtenues par la procédure 9.4. à partir des images reçue sur les capteurs (5174) ou (5171) est ponctuelle et centrée, alors l'image du faisceau FEGI sur les représentation fréquentielles bidimensionnelles obtenues par la procédure 9.4. à partir des images reçue sur les capteurs (5198) ou (5201) est ponctuelle et centrée.

(7) Quelle que soit la position du miroir (5113):

- les points correspondants aux faisceaux FRD,FEDI,FEG,FEP sur les représentation fréquentielles bidimensionnelles obtenues par la procédure 9.4. à partir des images reçue sur les capteurs (5174) ou (5171) sont disposés comme indiqué sur la Fig.78

- les points correspondants aux faisceaux FRG,FEGI,FED sur les représentation fréquentielles bidimensionnelles obtenues par la procédure 9.4. à partir des images reçue sur les capteurs (5198) ou (5201) sont disposés comme indiqué sur la Fig.79.

Pour expliciter d'avantage cette condition on notera de la même manière un faisceau et le point correspondant sur un des capteurs et on note (A,B) le vecteur reliant les points A et B. Cette condition signifie que:

(i) FRD et FEDI sont sur une même droite verticale.

(ii) FEDI et FEG sont sur une même droite horizontale.

(iii) FEP est le milieu de FRD et FEG

(iv) (FRG,FEGI)=(FRD,FEDI)

(v) (FEGI,FED)=(FEG,FEDI)

Les réglages découlent naturellement du respect des conditions (1) à (7) . La suite d'étapes de réglage détaillée ci-après constitue un example d'ordonnancement de ces réglages.

### 9.5.2. Etapes de réglage.

Dans certaines phases de réglage on utilisera un faisceau parallèle provisoire noté FEP. Ce faisceau est dérivé directement du laser (5100) à l'aide d'un miroir semi-transparent et dirigé vers l'entrée de l'objectif (4317), auquel il parvient en étant dirigé selon l'axe optique, et qu'il traverse avant de se diriger vers les capteurs (5171) et (5174).

La mise en place de FEP nécessite la suppression provisoire de l'objectif (4319). Les parties du système dites « liées au sol » sont en réalité liées à un support plan ordinairement posé sur le sol ou sur une table sans précaution particulière, la table optique étant elle-même posée, par l'intermédiaire d'amortisseurs, sur ce support plan. Pendant l'ensemble des réglages décrits dans le présent paragraphe, la table optique sera solidarisée du support plan, c'est-à-dire fixée sans amortissement et sans liberté de mouvement au support plan, dans une position aussi proche que possible de la position de la table optique lorsqu'elle est « libre » sur ses amortisseurs. Le support plan lui-même sera fixé sur une seconde table optique. Ce dispositif permet de générer des figures d'interférence utilisant le faisceau FEP, ce qui serait impossible du fait des vibrations si ledit support plan était fixé directement au sol comme dans la phase de fonctionnement normal du microscope.

L'utilisation des faisceaux FEG,FED,FEGI,FEDI,FS,FSI se commande par les obturateurs (5144) (5207) (5218) (5209) (5161) (5186) (5254). Des obturateurs non représentés permettent également de supprimer les faisceaux FRD et FRG.

Sur une image de dimensions $2N_{pix}x2N_{pix}$ un point sera dit centré si ses coordonnées sont

$$\left(N_{pix}, N_{pix}\right).$$

Les étapes suivantes constituent un exemple d'ordonnancement des réglages:

*Etape* 1: Préréglage

Un préréglage est effectué pendant lequel le miroir est positionné en une position centrale et la trajectoire du faisceau est contrôlée avec un diffuseur. Pendant ce préréglage, la position de l'ensemble des éléments est réglée de manière à ce que le faisceau suive approximativement la trajectoire prévue. Par exemple, à la sortie de (5112) on vérifie la bonne superposition spatiale des faisceaux. Entre (5156) et (5159) on vérifie que le faisceau réfléchi a la même extension spatiale que le faisceau arrivant.

Pendant l'ensemble du réglage qui suit, ce préréglage pourra être constamment vérifié ou affiné, toujours à l'aide du diffuseur, sans que cela soit rappelé. Si on travaille dans le domaine de l'UV, il est dangereux de visualiser directement la lumière. On remplace alors le diffuseur par un CCD auxiliaire, et on observe sur un écran la zone illuminée sur ce CCD au lieu de l'observer directement.

*Etape* 2: Réglage en translation de la lentille (5105)

Le fréquencemètre est positionné derrière la lentille (5105) et la position de celle-ci est réglée pour avoir une image ponctuelle sur le fréquencemètre.

*Etape* 3: Réglage en translation de la lentille (5110)

Le fréquencemètre est positionné derrière la lentille (5110) et la position de celle-ci est réglée pour avoir une image ponctuelle sur le fréquencemètre.

*Etape* 4: Réglage de l'orientation du miroir semi-transparent (5112).

Le fréquencemètre est utilisé et positionné derrière (5112). Les obturateurs (5104) et (5106) étant ouverts et fermés alternativement, l'image intégrée produite sur le capteur du fréquencemètre consiste en deux points issus de chacun des faisceaux superposés. La position angulaire de (5112) est ajustée de manière à superposer ces deux points.

*Etape* 5: réglage en translation de la lentille (5251)

Le fréquencemètre est positionné derrière la lentille (5251) et la position de celle-ci est réglée pour avoir une image ponctuelle sur le fréquencemètre.

*Etape* 6: réglage en translation de la lentille (5121)

Le fréquencemètre est positionné derrière la lentille (5251) et la position de celle-ci est réglée pour avoir une image ponctuelle sur le fréquencemètre.

*Etape* 7-Réglage en translation du doublet (5127) (5126)

Le fréquencemètre est placé derrière (5127) sur la trajectoire du faisceau et le doublet est déplacé de manière à ce que l'image sur le CCD du fréquencemètre soit ponctuelle.

*Etape* 8-Réglage en translation de la lentille (5146).

Ce réglage est effectué à l'aide du fréquencemètre, placé derrière (5146). L'image sur le CCD du fréquencemètre doit être aussi ponctuelle que possible.

*Etape* 9-Réglage en translation du doublet (5151) (5152):

Le fréquencemètre est placé derrière (5152) sur la trajectoire du faisceau et le réglage est effectué de manière à ce que l'image sur le CCD du fréquencemètre soit ponctuelle.

*Etape* 10-Réglage en translation de la lentille (5140)

Le réglage est effectué à l'aide du fréquencemètre placé derrière (5140). L'image sur le CCD du fréquencemètre doit être ponctuelle.

*Etape* II-Réglage en translation de la lentille (5154)

Le fréquencemètre est placé derrière (5154). L'image sur le CCD du fréquencemètre doit être ponctuelle.

*Etape* 12-Réglage en translation du doublet (5178) (5179)

Le fréquencemètre est placé par exemple derrière (5213). L'image sur le CCD du fréquencemètre doit être ponctuelle.

*Etape* 13-Réglage en translation de la lentille (5159)

Le fréquencemètre est placé entre (5156) et (5162). La position de (5159) est réglée pour que l'image de FEDI sur le CCD du fréquencemètre soit ponctuelle.

*Etape* 14-Introduction d'un faisceau d'éclairage provisoire parallèle FEP.

Ce faisceau a les caractéristiques explicitées au début du présent paragraphe.

*Etape* 15-Réglage en translation de la lentille (5157)

Le fréquencemètre est placé entre (5156) et (5162). La position de (5157) est réglée pour que l'image de FEP sur le capteur CCD du fréquencemètre soit ponctuelle.

*Etape* 16-Réglage de l'orientation du miroir semi-transparent (5156)

La position de (5156) est réglée de manière à ce que FEP et FEDI aient des images ponctuelles confondues sur le fréquencemètre.

*Etape* 17-Réglage en translation de la lentille (5162).

Un CCD est provisoirement mis en place à l'emplacement de (5158). FS est utilisé. (5162) est réglé pour que l'image de FS sur ce CCD provisoire soit ponctuelle.

*Etape* 18: Réglage de l'orientation du miroir partiellement transparent (5163)

Le CCD reste utilisé avec le faisceau FS. (5163) est réglé pour que l'image de FS sur ce CCD provisoire soit centrée par rapport à l'emplacement du diaphragme.

*Etape* 19-Réglage en translation de la lentille (5189)

Le fréquencemètre est positionné entre (5163) et (5164). (5189) est réglé de manière à obtenir une image ponctuelle de FSI sur le fréquencemètre.

*Etape* 20-Réglage en translation de la lentille (5166)

FEDI est utilisé. Le fréquencemètre est positionné sur la trajectoire du faisceau derrière (5166) et la position de (5166) est ajustée de manière à ce que l'image de FEDI sur le fréquencemètre soit ponctuelle.

*Etape* 21-Réglage en translation 3 axes des capteurs (5174) et (5171).

On utilise FSI et FRD. Un programme calcule la représentation fréquentielle bidimensionnelle reçue sur chaque CCD (5174) ou (5171) suivant la procédure décrite en 9.4., mais en n'effectuant pas l'étape 3 de transformation de Fourier. La position des CCD est ajustée pour obtenir à partir de chaque CCD une image ponctuelle centrée.

*Etape* 22-Réglage de l'orientation du miroir partiellement transparent (5236)

On utilise FRD et FEDI. Un programme calcule la représentation fréquentielle bidimensionnelle reçue sur le CCD (5174) suivant la procédure décrite en 9.4.

La position de (5236) est réglée de manière à ce que la représentation fréquentielle bidimensionnelle obtenue sur chaque CCD soit centrée.

*Etape* 23-Réglage de l'orientation du miroir partiellement transparent (5232)

On utilise FRD et FEDI. Un programme calcule la représentation fréquentielle bidimensionnelle reçue sur le CCD (5171) suivant la procédure décrite en 9.4.
La position de (5232) est réglée de manière à ce que la représentation fréquentielle bidimensionnelle obtenue sur chaque CCD soit centrée.

*Etape* 24-Réglage de la distance focale du doublet (5126) (5127) et réglage en rotation autour de l'axe optique des capteurs (5174) (5171).

Les faisceaux FRD, FEP sont utilisés. Un programme calcule la représentation fréquentielle bidimensionnelle reçue sur chaque CCD (5174) ou (5171) suivant la procédure décrite en 9.4.
La position initiale du miroir (5113), dans laquelle ont été effectués les réglages précédents, est la position centrée. Elle doit être enregistrée. On l'appellera position C.
Le miroir (5113) est déplacé de manière telle que, sur la représentation fréquentielle bidimensionnelle obtenue sur chaque CCD (5174) ou (5171) le point correspondant à FEP soit excentré au maximum. Cette position du miroir est enregistrée et sera réutilisée par la suite. On l'appellera position E.
Le faisceau FEDI est introduit
Les positions des différents éléments sont ajustées pour que sur chacune des deux représentations obtenues:

-    les coordonnées des points associés à FRD (point central) et FEDI soient correctes par rapport à celles du point associé à FEP, c'est-à-dire symétriques par rapport à l'axe horizontal passant par le point associé à FEP, comme indiqué sur la Fig.78 ou (5501) représente le contour de la zone bidimensionnelle obtenue à l'issue de la procédure décrite en 9.4. et ou (5502) représente la limite définie par l'ouverture de l'objectif.
-    les images de FEP et FEDI restent ponctuelles

Plus précisément:

-    la focale de l'ensemble (5126) (5127) est réglée pour que la distance entre le point associé à FEP et le point associé à FRD soit égale à la distance entre le point associé à FEP et le point associé à FEDI. Comme les changements de position des lentilles du doublet peuvent entraîner une défocalisation, les positions des lentilles du doublet sont également ajustées pour que l'image de FEP et FEDI reste ponctuelle.
-    la position en rotation des capteurs est réglée pour que la droite passant par les points associés respectivement à FRD et FEDI soit verticale.

Du fait de la non-coïncidence de l'axe de rotation des CCD avec le point central de ces capteurs, ce réglage en rotation peut entraîner une perte du réglage en translation des CCD. C'est pourquoi, à l'issue de cette opération, le miroir est ramené en position C et l'étape 21 est à nouveau effectuée. Les étapes 21 et 24 peuvent être ainsi répétées en séquence un certain nombre de fois de manière à converger vers un réglage correct des capteurs en translation et en rotation.

*Etape* 25-Réglage en translation de la position des objectifs (4319) et (4317)

Le miroir (5113) est ramené à sa position d'origine (position C), le faisceau FEP est supprimé, les objectifs sont remis en place. Un CCD provisoire est positionné à l'emplacement de (5184). Le faisceau FS est seul utilisé. Une lame transparente est utilisée comme objet.
La position des objectifs est ajustée pour obtenir une image ponctuelle et centrée.

*Etape* 26-Réglage en translation de la lentille (5183)

Le faisceau FED est utilisé. Le fréquencemètre est positionné derrière (5183) sur la trajectoire de FED. (5183) est réglé pour que FED ait une image ponctuelle sur le fréquencemètre.

*Etape* 27-Réglage en translation du doublet (5178) (5179) et réglage de l'orientation du miroir semi-transparent (5182)

Les faisceaux FEG et FRD sont utilisés. Une représentation fréquentielle bidimensionnelle est obtenue à

La position conjointe du doublet (5178) (5179) est réglée de manière à ce que la représentation obtenue soit ponctuelle. Le miroir semi-transparent (5182) est réglé pour que cette image soit centrée.

*Etape* 28-Réglage de focale du doublet (5178)(5179), réglage en rotation de l'ensemble (5181), et réglage de l'orientation du miroir semi-transparent (5182).

Les faisceaux FRD, FEG sont utilisés. Une représentation fréquentielle bidimensionnelle est obtenue à partir des CCD (5174) ou (5171) par la procédure 9.4. Les opérations o1 et o2 ci-dessus doivent être répétées dans cet ordre un certain nombre de fois pour converger vers un réglage correct.

o1: Le miroir (5113) est mis en position C et le miroir semi-transparent (5182) est réglé pour que le point de la représentation fréquentielle correspondant à FEG soit centré.

o2:Le miroir (5113) est mis en position E (excentrée).

Les différents éléments sont réglés pour que le point correspondant à FEG obtenu sur l'image soit correctement positionné par rapport aux autres. Le point correspondant à FEP est connu par le réglage effectué à l'étape 24. Le point correspondant à FEG doit être symétrique du point correspondant à FRD par rapport au point correspondant à FEP comme indiqué sur la Fig. 78.
Plus précisément:

-    la focale du doublet (5178)(5179) est réglée pour que la distance entre les points correspondant à FRD et FEP soit égale à la distance entre les points correspondant à FEP et FEG. Comme les changements de position des lentilles du doublet peuvent entraîner une défocalisation, les positions des lentilles du doublet sont également ajustées pour que l'image de FEG reste ponctuelle.
-    la position en rotation de l'ensemble (5181) est réglée pour que les points FRD, FEP et FEG soient alignés.

*Etape* 29-Réglage en translation de la lentille (5185)

Le miroir (5113) est ramené en position C. Le fréquencemètre est positionné entre (5182) et (5188). La position de (5185) est réglée pour que l'image de FEGI sur le fréquencemètre soit ponctuelle.

*Etape* 30-Réglage en translation de la lentille (5188)

Le faisceau FS est utilisé. Le fréquencemètre est positionné derrière (5188). La position de (5188) est réglée pour que FS ait une image ponctuelle sur le CCD du fréquencemètre.

*Etape* 31-Réglage en translation du doublet (5192)(5193)

FEGI est utilisé. Le fréquencemètre est positionné derrière (5193). La position conjointe de (5192)(5193) est réglée pour que FEGI ait une image ponctuelle sur le CCD du fréquencemètre.

*Etape* 32-Réglage en translation 3 axes des capteurs (5198) et (5201).

On utilise FS et FRG. Un programme calcule la représentation fréquentielle bidimensionnelle reçue sur chaque CCD (5198) ou (5201) suivant la procédure 9.4. mais en n'effectuant pas l'étape 3 de transformation de Fourier. La position des CCD est ajustée pour obtenir à partir de chaque CCD une image ponctuelle centrée.

*Etape* 33-Réglage de l'orientation du miroir partiellement transparent (5246)

On utilise FRG et FEGI. Un programme calcule la représentation fréquentielle bidimensionnelle reçue sur le CCD (5198) suivant la procédure 9.3.1.
La position de (5246) est réglée de manière à ce que la représentation fréquentielle bidimensionnelle obtenue soit centrée.

*Etape* 34-Réglage de l'orientation du miroir partiellement transparent (5242)

On utilise FRG et FEGI. Un programme calcule la représentation fréquentielle bidimensionnelle reçue sur le CCD (5201) suivant la procédure 9.3.1.

La position de (5242) est réglée de manière à ce que la représentation fréquentielle bidimensionnelle obtenue soit centrée.

*Etape* 35-Réglage

- de la focale du doublet (5151) (5152)
- de la focale du doublet (5192)(5193)
- de l'ensemble (5212) en rotation
- des CCD (5198) et (5201) en rotation autour de l'axe optique

Les faisceaux FRG, FED, FEGI sont utilisés. Le miroir (5113) est remis en position E (excentrée).

Un programme calcule la représentation fréquentielle bidimensionnelle reçue sur les CCD (5198) (5201) suivant la procédure 9.3.1.

Les positions de l'ensemble des éléments sont ajustées de manière à ce que:

- les coordonnées des points associés à FRG, FED, FEGI soient correctes, soit avec les notations utilisées en 9.5.1. : (FRG,FEGI)=(FRD,FEDI) et (FEGI,FED)=(FEG,FEDI) ou les positions des points FRD,FEG,FEDI sont celles qui ont été obtenues lors des étapes 24 et 28, l'ensemble de ces points étant représentés sur les Fig.78 et 79.
- les images de FEP et FEG restent ponctuelles

Plus précisément:

La focale du doublet (5192)(5193) est ajustée pour que la distance entre les points correspondant à FEGI et à FED soit correcte . Comme les changements de position des lentilles du doublet peuvent entraîner une défocalisation, les positions des lentilles du doublet sont également ajustées pour que l'image de FED et FEGI reste ponctuelle.

La position en rotation des CCD (5198) et (5201) est réglée pour que le segment FEGI-FED soit horizontal.

La focale du doublet (5151) (5152) et la position de l'ensemble (5151) (5152) sont réglés pour que la distance entre FRG et FEGI soit correcte et pour que la droite liant ces points soit verticale. Comme les changements de position des lentilles du doublet peuvent entraîner une défocalisation, les positions des lentilles du doublet sont également ajustées pour que l'image de FEGI reste ponctuelle.

A l'issue de ce réglage le miroir (5113) est ramené en position C.

Les étapes 32 à 35 peuvent être recommencées dans cet ordre un certain nombre de fois pour converger vers les positions correctes. En effet l'étape 35 est entraîne un dérèglement de la position centrale des CCD et de l'orientation des faisceaux de référence utilisés en position C.

*Etape* 36: réglage de la position de la vitre (5165) dans le sens de l'axe optique.

Les faisceaux FSI et FRD sont utilisés. Une image en fréquence est obtenue par la procédure 9.4.1. à partir des capteurs (5171) (5174). Sur cette image en fréquence, le point noir de la vitre est visible en sombre sur fond clair. La position de la vitre est réglée pour que le point noir se détache du fond avec le meilleur contraste possible.

*Etape* 37: réglage de la position de la vitre (5191) dans le sens de l'axe optique.

Les faisceaux FS et FRG sont utilisés. Une image en fréquence est obtenue par la procédure 9.4. à partir des capteurs (5201) (5198). Sur cette image en fréquence, le point noir de la vitre est visible en sombre sur fond clair. La position de la vitre est réglée pour que le point noir se détache du fond avec le meilleur contraste possible.

Etape 38: réglage en rotation autour de l'axe optique et translation 2 axes des diaphragmes (5164) et (5190)

Préalablement à ce réglage le miroir (5113) est ramené en position centrale.

Ces diaphragmes ont la forme indiquée Fig.82. Ils sont réglables en translation sur 3 axes et en rotation autour de l'axe optique. Les faisceaux FS,FSI,FRG,FRGI sont utilisés pour leur réglage. Une image en fréquence est obtenue par la procédure 9.4. à partir de chacun des capteurs (5174) (5198).

Ils sont réglés en translation pour avoir une image centrée sur chaque capteur et aussi nette que possible sans toutefois gêner le mouvement de la vitre mobile (5165) ou (5191) qui leur est associée. Ils sont réglés en rotation pour que les coordonnées du point occulté par la pièce mobile (5712) soient les mêmes sur l'image obtenue à partir de chaque capteur. Ces coordonnées seront par la suite notées ($i_o$,$j_o$). A l'issue de ce réglage le programme détermine également le rayon $R_{ouv}$ de l'image obtenue sur chaque capteur, qui caractérise la zone accessible par les faisceaux non arrêtés par l'ouverture de l'objectif. Il est préférable de sous-estimer légèrement $R_{ouv}$.

A la suite de cette procédure de réglage, les objectifs sont positionnés de sorte que FS ait une image ponctuelle et centrée sur chaque capteur. Ce réglage ne sera pas modifié jusqu'à introduction de l'échantillon.

**9.6. Commande du déviateur de faisceau.**

A chaque position du miroir correspond un maximum (point *FE* sur la Fig.75) de l'image en fréquence obtenue par la procédure 9.4. Le point *FR* correspondant à l'onde de référence est au centre de l'image. Le point *FO* correspondant au centre optique est le milieu de *FR* et *FE*. Les coordonnées du point *FE* dans un repère centré sur *FO* sont l'équivalent des coordonnées du point d'impact direct de l'onde de référence par rapport au centre optique dans le troisième mode de réalisation.

L'indice *p* caractérisera le coté droit ou gauche du microscope avec *p*=0 pour les capteurs (5171)(5174) et *p*=1 pour les capteurs (5198)(5201).

Le système de positionnement du miroir de déviation de faisceau est constitué de deux actionneurs ne présentant pas d'hystérésis. Par exemple on peut utiliser un positionnement par moteurs pas à pas comme décrit dans le premier mode de réalisation. Si l'ensemble est réalisé avec suffisamment de soin, un tel système peut présenter une hystérésis très faible. La position du miroir est alors caractérisée par le nombre de pas effectué par chaque moteur depuis un point central. On peut aussi utiliser des positionneurs piézoélectriques équipés d'une boucle de rétroaction permettant un contrôle précis de leur allongement, auquel cas le nombre de pas de chaque moteur est remplacé par l'allongement de chaque actionneur. Il est également possible d'utiliser des positionneurs piézoélectriques sans boucle de rétroaction, toutefois ceux-ci présentent une forte hystérésis qui impose de déterminer les tensions utilisées sur une trajectoire donnée, une détermination point à point des valeurs de position du miroir, comme effectuée ci-dessous, n'étant pas possible.

La commande des moteurs est définie par deux tableaux *tab1* et *tab2* ou *tab1[p,i,j]* ( resp. *tab2[p,i,j]*) est le nombre de pas que doit effectuer l'actionneur 1 (resp.2) pour que le point *FE* ait les coordonnées (*i,j*) sur l'image obtenue par la procédure 9.4. à partir d'un capteur indicé par *p*, dans un repère dans lequel *FO* a pour coordonnées

$$\left( \frac{N_{pix}}{2}, \frac{N_{pix}}{2} \right).$$

. Les actionneurs sont numérotés de sorte que l'actionneur 1 détermine un mouvement selon l'axe i et l'actionneur 2 détermine un mouvement selon l'axe *j*.

La détermination des tableaux *tab1* et *tab2* se fait en l'absence d'objet (lame transparente), par un programme spécifique. Le programme détermine alors, pour chaque point 'objectif', les nombres de pas correspondants de chaque moteur depuis un point origine. La Fig. 77 représente un exemple d'algorithme d'un tel programme. Les étapes principales sont:

(5407) : modification de la commande des obturateurs. Lorsque *p*=0 le faisceau utilisé doit être FEG et lorsque *p*=1 le faisceau utilisé doit être FED.

(5401): imax et *jmax* correspondent aux coordonnées du maximum obtenu par la procédure 9.4. à partir du capteur recevant le point d'impact direct de l'onde d'éclairage. On a alors:

$$x = \frac{imax}{2}$$

$$y = \frac{jmax}{2}$$

(5402): la valeur *lim* utilisée dépend de la précision des actionneurs. On peut par exemple avoir *lim*=0,25.

(5403): le déplacement des moteurs vaut, de manière similaire à ce qui était fait en 5.20.:

$$pas1=(i-x).pas\_par\_pixel/2$$

$$pas2=(j-y).pas\_par\_pixel/2$$

La valeur de position courante est modifiée:

$$pos1+=pas1$$

$$pos2+=pas2$$

*pas_par_pixel* est le rapport (nombre de pas de déplacement du moteur)/(nombre de pixels de déplacement de *FE* sur l'image obtenue en 9.4.). Il doit avoir été préalablement déterminé, de manière similaire à ce qui est fait dans le premier mode de réalisation, mais avec les images maintenant calculées selon la procédure 9.4. et non pas obtenues directement sur le CCD.

(5404): le déplacement des moteurs est effectué, pour un nombre de pas *pas1, pas2* de chaque moteur.

(5405): les valeurs courantes des coordonnées en pas moteurs sont enregistrées dans un tableau:

$$tab1[p,i,j]=pos1$$

$$tab2[p,i,j]=pos2$$

Toutefois, dans le cas

$$\left(i-\frac{N_{pix}}{2}\right)^2+\left(j-\frac{N_{pix}}{2}\right)^2 > R_{ouv}^2$$

les valeurs affectées sont par exemple des valeurs négatives signalant une erreur, comme *tab1*[*p,i,j*]=-10000, *tab2*[*p,i,j*]= -10000

(5406): les moteurs sont déplacés de *-pos1, -pos2* de manière à retourner au point d'origine, qui doit rester constant pour éviter de fausser la trajectoire.

Pour obtenir une onde d'éclairage sur le capteur *p*, au point de coordonnées *i,j*, on déplacera les deux moteurs jusqu'à leurs positions caractérisées respectivement par *tab1*[*p,i,j*] et *tab2*[*p,i,j*], et on actionnera les obturateurs (5144) et (5207) selon le tableau suivant:

| indice *p* | position de (5144) | position de (5207) |
|---|---|---|
| 0 | fermé | ouvert |
| 1 | ouvert | fermé |

### 9.7. Commande des vitres (5165) et (5191)

Chacune de ces vitres est par exemple montée sur un positionneur deux axes en translation commandé par des moteurs pas à pas et permettant de déplacer la vitre dans un plan orthogonal à l'axe optique. Pour chaque position de l'onde d'éclairage, caractérisée par des indices *p,i,j*, il est nécessaire de positionner la vitre de manière à annuler l'éclairage direct. Ceci est fait en commandant les moteurs pas à pas pour déplacer la vitre jusqu'à une

Préalablement à cette utilisation des vitres, un programme est utilisé pour déterminer les tableaux *tabv1*[*p,i,j*], *tabv2*[*p,i,j*]. Un exemple d'un tel programme est décrit par la Fig.77.

Pour utiliser le programme de la Fig.77 les faisceaux FS,FSI,FRD et FRG sont nécessaires et l'objet utilisé est une lame transparente. Le filtre (5128) utilisé sur le chemin du faisceau FS est réglé pour que les capteurs soient saturés sur quelques pixels autour des points d'impact des faisceaux FS et FSI.

Les étapes principales de ce programme sont:

(5107): La position du miroir (5113) est commandée par les tableaux *tab1*[*p,0,0*], *tab2*[*p,0,0*].

(5401): Une image est obtenue par la procédure décrite en 9.4. avec transformation de Fourier à partir d'un capteur situé du coté caractérisé par l'indice p. Le module des éléments de cette image est extrait pour obtenir une image en nombre réels sur laquelle le point occulté par le 'point noir' de la vitre apparaît en clair sur fond noir. L'image ainsi obtenue constitue le tableau S de dimensions $2N_{pix}$ x $2N_{pix}$ à partir duquel on calcule les coordonnées *imax* et *jmax* du maximum, par la procédure décrite en 7.3.3.1. On a alors:

$$x = imax$$

$$y = jmax$$

(5402): la valeur *lim* utilisée dépend de la précision du positionneur. On peut par exemple avoir *lim*=0,25.

(5403): le déplacement des moteurs vaut, de manière similaire à ce qui était fait en 5.20.:

$$pas1=(i-x).pas\_par\_pixel/2$$

$$pas2=(j-y).pas\_par\_pixel/2$$

La valeur de position courante est modifiée:

$$pos1+=pas1$$

$$pos2+=pas2$$

*pas_par_pixel* est le rapport (nombre de pas de déplacement du moteur)/(nombre de pixels de déplacement du point de coordonnées *imax,jmax* sur l'image obtenue en 9.4.). Il doit avoir été préalablement déterminé, par exemple en déplaçant la vitre selon une des directions et en mesurant le nombre de pixels de déplacement du point de coordonnées (*imax,jmax*).

(5404): le déplacement des moteurs est effectué, pour un nombre de pas *pas1, pas2* de chaque moteur.

(5405): les valeurs courantes des coordonnées en pas moteurs sont enregistrées dans un tableau:

$$tabv1[p,i,j]=pos1$$

$$tabv2[p,i,j]=pos2$$

Toutefois, dans le cas

$$\left(i-\frac{N_{pix}}{2}\right)^2+\left(j-\frac{N_{pix}}{2}\right)^2 > R_{ouv}^2$$

les valeurs affectées sont par exemple des valeurs négatives signalant une erreur, comme *tab1*[*p,i,j*]=-10000, *tab2*[*p,i,j*]= -10000

(5406): les moteurs sont déplacés de *-pos1, -pos2* de manière à retourner au point d'origine, qui doit rester constant pour éviter de fausser la trajectoire.

### 9.8. Obtention de la constante *K*.

Le micromètre est introduit comme échantillon. Une image est obtenue en présence des faisceaux FED et FRG par la procédure décrite en 9.4. dans laquelle on n'effectue pas l'étape 3 de transformation de Fourier. Le module des valeurs complexes de cette image est utilisé pour obtenir une image réelle de l'intensité. La position de l'échantillon est ajustée pour que cette image soit correctement focalisée. La distance en pixels $D_{pix}$ entre deux graduations séparées par une distance réelle $D_{reel}$ est mesurée. La valeur de la constante K est alors

$$K = \frac{n_v}{\lambda} \frac{2N_{pix}}{D_{pix}} D_{reel}.$$

### 9.9. Obtention d'une représentation fréquentielle bidimensionnelle complète.

Dans le troisième mode de réalisation, une représentation fréquentielle bidimensionnelle était obtenue par la procédure décrite en 7.12. Dans le présent mode de réalisation le mode d'obtention de cette représentation doit être modifié.

### 9.9.1. Principe

### 9.9.1.1. Acquisition.

Lors de l'acquisition, l'indice *r* désignera l'interrupteur ouvert, selon le tableau suivant:

| indice *r* | obturateur (5109) | obturateur (5104) |
|---|---|---|
| 0 | ouvert | fermé |
| 1 | fermé | ouvert |

L'indice *p* désignera le coté droit (*p*=0) ou gauche (*p*=1) du microscope ou parvient l'onde d'éclairage directe et par conséquence la position des obturateurs (5144) et (5207), selon le tableau suivant:

| indice *p* | obturateur (5207) | obturateur (5144) |
|---|---|---|
| 0 | ouvert | fermé |
| 1 | fermé | ouvert |

L'indice *q* désignera le coté du microscope dont proviennent les données acquises, avec *q*=0 pour des données provenant du coté ou parvient l'onde d'éclairage directe et *q*=1 pour des données provenant du coté opposé.
On pose $s = p\bar{q} + \bar{p}q$. *s* désigne donc le coté du microscope d'ou proviennent les données acquises, avec *s*=0 pour le coté droit et *s*=1 pour le coté gauche.
On indice par (*s,t*) les capteurs, de la manière suivante.

| indice *s* | 0 | | 1 | |
|---|---|---|---|---|
| indice *t* | 0 | 1 | 0 | 1 |
| capteur | (5174) | (5171) | (5198) | (5201) |

les données MA[*k,p*][*d,r,t*][*q,i,j*] proviennent du capteur indicé par $(p\bar{q} + \bar{p}q, t)$
Pour chaque quintuplet (*k,p,q,r,t*) on obtient, à partir d' un capteur correspondant, et à partir de trois acquisitions correspondant à des phases différentes de l'onde de référence, une image sous forme d'un tableau bidimensionnel de nombres complexes de dimensions 2 $N_{pix}$ x 2 $N_{pix}$.

### 9.9.1.2. Passage en fréquences

L'image ainsi obtenue est en représentation spatiale. On effectue une transformation de Fourier pour obtenir une image en représentation fréquentielle. La représentation ainsi obtenue est centrée autour d'un point *FR* correspondant au faisceau de référence. Elle doit être translatée et limitée pour obtenir une représentation de dimensions $N_{pix}$ x $N_{pix}$, centrée autour du point *FO* correspondant au centre optique.

Les Fig.75 et 76 représentent les représentations obtenues respectivement, pour un indice *p* donné, sur les capteurs indicés par *q*=0 et par *q*=1. Sur ces figures, le point noté *FR* est le point central, de coordonnées

$$\left( N_{pix}, N_{pix} \right),$$

, correspondant à la fréquence de l'onde de référence. Le point noté FE correspond à la fréquence de l'onde d'éclairage (*q*=0) ou de son onde inverse (*q*=1). Le point noté *FO* correspond au centre optique du système, c'est-à-dire à la fréquence d'une onde traversant l'objet observé dans le sends de l'axe optique. Les contours (5301) et (5303) délimitent la représentation.

Dans le cas *q*=0, *FR* et *FE* sont symétriques par rapport à *FO*. Dans le cas *q*=1, *FR* et *FE* sont symétriques par rapport à une droite horizontale passant par *FO*.

La représentation fréquentielle limitée et centrée est obtenue à partir de ces figures en extrayant la zone de dimensions $N_{pix}$ x $N_{pix}$ centrée autour du point *FO*, limitée par (5302) ou (5304) sur les figures.

### 9.9.1.3. Combinaison des différentes polarisations.

On note $D_{p,s,r,t}$ la valeur complexe mesurée en un point C d'une représentation fréquentielle obtenue à l'issue de la procédure décrite en 9.9.1.2., à partir du capteur indicé par *s,r* et *t* quand la direction de l'onde d'éclairage est caractérisée par *p*.

On note $\vec{w}_{s,r,t}$ le vecteur champ électrique de l'onde de référence sur le capteur caractérisé par les indices *s, r* et *t.*

Sur la figure 80, les différentes combinaisons des indices *s,r,t* sont représentées sous forme d'un tableau.

Dans chaque case du tableau:

- l'axe neutre de la lame de phase située devant le capteur concerné est représenté en pointillés.
- le vecteur champ électrique de l'onde de référence avant passage de la lame de phase, dirigé selon $\vec{i}$ ou $\vec{j}$, est représenté en traits pleins.
- le vecteur champ électrique $\vec{w}_{s,r,t}$ de l'onde de référence après passage de la lame de phase et réflexion sur le miroir semi-transparent qui le superpose au faisceau venant de l'objet, dirigé selon $\pm\vec{u}$ ou $\pm\vec{v}$, est également représenté en traits pleins. Si *s*=0, ce vecteur se déduit du vecteur champ électrique de l'onde avant passage de la lame par une symétrie dont l'axe est l'axe neutre de la lame. Si *s*=1, une symétrie additionnelle d'axe vertical doit être effectuée.

Les valeurs de $\vec{w}_{s,r,t}$ se déduisent de cette figure. Une formule rassemblant l'ensemble des valeurs obtenues est, à une constante près:

$$\vec{w}_{s,r,t} = \left(-1\right)^{srt+\bar{s}\overline{(rt)}}\vec{i} + \left(-1\right)^{\bar{r}t}\vec{j}$$

La phase de l'onde de référence diffère entre les capteurs (5171) et (5174). On note $\alpha_s$ le rapport caractéristique du décalage de phase et d'intensité entre les capteurs indicés respectivement par (*s, t*=0) et (*s, t*=1).

L'onde détectée sur un capteur donné constitue une projection de l'onde parvenant à ce capteur sur un axe orienté comme le vecteur champ électrique de l'onde de référence. Le vecteur unitaire orientant cet axe sera noté comme le vecteur champ électrique de l'onde de référence.

Pour les mesures on utilise:

- une onde d'éclairage dirigée selon

$$(-1)^p \vec{i}$$

ou p est l'indice du capteur vers lequel est dirigée l'onde d'éclairage direct. Le facteur

$$\tau\,(-1)^p$$

est dû au fait que la composante horizontale de l'onde d'éclairage, symétrisée par les miroirs qui la dirigent dans deux sens opposés en fonction de l'indice p, est inversée quand la direction de l'onde d'éclairage est elle-même inversée. Pour cette onde d'éclairage, on mesurera les composantes de l'onde diffractée polarisées selon les axes orientés par $\vec{w}_{s,0,0}$ et $\vec{w}_{s,0,1}$, obtenant respectivement les facteurs $D_{p,s,0,0}$ et $D_{p,s,0,1}$

- une onde d'éclairage dirigée selon $\vec{j}$. Pour cette onde d'éclairage, on mesurera les composantes de l'onde diffractée polarisées selon les axes orientés par $\vec{w}_{s,1,0}$ et $\vec{w}_{s,1,1}$, obtenant respectivement les facteurs $D_{p,s,1,0}$ et $D_{p,s,1,1}$

Lorsque le vecteur champ électrique du faisceau d'éclairage (au point $E$) est.

$$A_0(-1)^p \vec{i} + A_1 \vec{j}$$

le vecteur champ électrique résultant au point C, sur le coté s du microscope, est donc:

$$\sum_{r,t} A_r D_{p,s,r,t}(\vec{i} + t\alpha_s)\vec{w}_{s,r,t}$$

Lorsque le vecteur champ électrique au point E est $A_0\vec{i} + A_1\vec{j}$ le vecteur champ électrique résultant au point $C$, sur le coté s du microscope, est donc:

$$\sum_{r,t} A_r (-1)^{p\vec{r}} D_{p,s,r,t}(\vec{i} + t\alpha_s)\vec{w}_{s,r,t}$$

$$\text{Soit } \sum_{r,t} (-1)^{p\vec{r}}\left((-1)^{srt+\vec{s}\overline{(rt)}}\vec{i} + (-1)^{\vec{r}t}\vec{j}\right)(\vec{i} + t\alpha_s)A_r D_{p,s,r,t}$$

Ce qui correspond à l'expression

$$C_{p,s,0,0}A_0\vec{i} + C_{p,s,1,0}A_0\vec{j} + C_{p,s,0,1}A_1\vec{i} + C_{p,s,1,1}A_1\vec{j}$$

avec:

$$C_{p,s,d,r} = \sum_{t} (-1)^{p\vec{r}}\left((-1)^{srt+\vec{s}\overline{(rt)}}\vec{d} + (-1)^{\vec{r}t} d\right)(\vec{i} + t\alpha_s)D_{p,s,r,t}$$

soit:

$$C_{p,s,0,0} = (-1)^P (-1)^{\bar{s}} \left( D_{p,s,0,0} + \alpha_s D_{p,s,0,1} \right)$$

$$C_{p,s,1,0} = (-1)^P \left( -D_{p,s,0,0} + \alpha_s D_{p,s,0,1} \right)$$

$$C_{p,s,0,1} = (-1)^s \left( -D_{p,s,1,0} + \alpha_s D_{p,s,1,1} \right)$$

$$C_{p,s,1,1} = D_{p,s,1,0} + \alpha_s D_{p,s,1,1}$$

La même expression qu'en 7.12 peut être utilisée à partir de ces valeurs de $C_{p,s,d,r}$ pour obtenir la grandeur recherchée $M_{p,s}$, les indices $p,s$ qui étaient inutile en 7.12. étant rajoutés:

$$M_{p,s} = -\cos\varphi_e\cos\varphi_c C_{p,s,0,0} - \sin\varphi_e\cos\varphi_c C_{p,s,0,1} - \cos\varphi_e\sin\varphi_c C_{p,s,1,0} - \sin\varphi_e\sin\varphi_c C_{p,s,1,1}$$

soit

$$: M_{p,s} = \sum_{r,t} E_{p,s,r,t} D_{p,s,r,t}$$

avec:

$$E_{p,s,0,0} = (-1)^P \left( (-1)^s \cos\varphi_e \cos\varphi_c + \cos\varphi_e \sin\varphi_c \right)$$

$$E_{p,s,0,1} = (-1)^P \alpha_s \left( (-1)^s \cos\varphi_e \cos\varphi_c - \cos\varphi_e \sin\varphi_c \right)$$

$$E_{p,s,1,0} = (-1)^s \sin\varphi_e \cos\varphi_c - \sin\varphi_e \sin\varphi_c$$

$$E_{p,s,1,1} = \alpha_s \left( -(-1)^s \sin\varphi_e \cos\varphi_c - \sin\varphi_e \sin\varphi_c \right)$$

Auparavant il est nécessaire de déterminer le coefficient $\alpha_s$. Autour du point d'impact de l'onde d'éclairage une valeur comparable est obtenue sur chaque capteur pour un indice *r* donné. On peut donc adopter pour ce coefficient la valeur

$$\alpha_s \approx \frac{\sum D_{p,s,r,0} \overline{D_{p,s,r,1}}}{\sum \left| D_{p,s,r,1} \right|^2}$$

ou les sommes sont sur les indices *r* et sur un nombre de points réduit autour du point d'impact direct de l'onde d'éclairage.

### 9.9.2. Acquisition

Comme dans le troisième mode de réalisation, le point d'impact direct de l'onde d'éclairage parcourt une trajectoire indicée par *k* et caractérisée par les tableaux *Io*[*k*],*Jo*[*k*].

Comme en 7.12.2.1., l'acquisition des images élémentaires est une itération sur les *entiers p et* k désignant respectivement le capteur auquel parvient le faisceau d'éclairage direct et le numéro d'ordre de l'image élémentaire dans la série des images correspondant à un indice *p* donné.

Il n'y a pas içi d'atténuation de faisceau. Pour chaque couple (*k,p*) vérifiant

$$\left(Io[k]-\frac{N_{pix}}{2}\right)^2+\left(Jo[k]-\frac{N_{pix}}{2}\right)^2 \le R_{ouv}^2$$

le programme commande le déplacement du miroir par les tableaux *tab1*[*p,Io*[*k*],*Jo*[*k*]], *tab2*[*p,Io*[*k*],*Jo*[*k*]] et les obturateurs (5144) et (5207) comme indiquée en 9.6. Il déplace la vitre située du coté opposé au point d'impact direct de l'onde d'éclairage de manière à ce que son point noir soit hors du champ de fréquences utilisée.

Il commande le déplacement de la vitre située du coté ou se trouve le point d'impact direct de l'onde d'éclairage de la manière indiquée en 9.7., par les tableaux *tabv1*[*p,Io*[*k*],*Jo*[*k*]], *tabv2*[*p,Io*[*k*],*Jo*[*k*]].

Toutefois, suivant une variante que l'on appellera la variante 2, il n'utilise pas cette vitre et la déplace donc pour que son point noir soit hors du champ de fréquences utilisé.

Pour augmenter la vitesse, il est nécessaire de limiter au maximum le nombre de changements de l'indice *p*, qui impliquent une manipulation des obturateurs (5144) et (5207) qui sont plus lents par exemple que (5104) et (5109). Le programme effectue donc une première itération sur *k*, à *p*=0, suivie d'une seconde itération sur k, à *p*=1.

A chaque valeur de (*k,p*) le programme effectue l'acquisition de 12 couples d'images élémentaires. Un couple d'images élémentaires est comme en 7.12.2.1. un tableau indicé

- d'une part par l'indice q avec *q*=0 si l'image est détectée du même coté que le point d'impact direct de l'onde de référence, et *q*=1 si elle est détectée du coté opposé.
- d'autre part par les indices *i* et *j* caractérisant la position du pixel sur le capteur concerné.

Les indices *p,g,r,t* sont définis comme indiqué en 9.9.1.1. L'indice *d* détermine le déphasage de l'onde de référence et est défini par le tableau suivant:

| indice *d* | décalage de phase $\theta_d$ (degrés) |
|---|---|
| 0 | -120 |
| 1 | 0 |
| 2 | +120 |

L'acquisition d'une série d'images correspondant aux indices *k,p,q,d,r,t* génère ainsi la série des couples d'images élémentaires MA[*k,p*][*d,r,t*][*q,i,j*]

Le programme effectue en plus l'acquisition d'une série d'images correspondant à l'image de référence. Il déplace les moteurs jusqu'aux positions

$$pos1[p,i_r,j_r]\ pos2[p,i_r,j_r]\ \text{ou}\ (i_r,j_r)$$

sont normalement, les coordonnées

$$(i_o,j_o)$$

du point fixe occulté par les diaphragmes, déterminées dans l'étape 38 de la procédure de réglage 9.5. Toutefois, si la variante 2 est utilisée,

$$(i_r, j_r)$$

sont les coordonnées d'un autre point fixe, fortement excentré mais non occulté. Le programme effectue alors l'acquisition d'une série de 6 couples d'images élémentaires, obtenant un tableau MA2[$k,p$][$d,r,t$][$q,i,j$]

Toutefois, selon une variante, que l'on appellera la variante 1, le programme n'effectue pas l'acquisition de cette image de référence.

### 9.9.3. Calculs.

Le calcul de la représentation fréquentielle bidimensionnelle, de l'image de référence, et des tableaux caractéristiques du bruit sur ces deux images est effectué par les étapes 1 à 8 suivantes:

*Etape 1*- Calcul des représentation spatiales bidimensionnelles.
Le programme effectue sur l'ensemble des données obtenues:

$$MB[k,p][r,t][q,i,j] = \frac{1}{6}\left(2MA[k,p][0,r,t][q,i,j] - MA[k,p][1,r,t][q,i,j] - MA[k,p][2,r,t][q,i,j]\right)$$
$$+\tilde{j}\frac{1}{2\sqrt{3}}\left(MA[k,p][1,r,t][q,i,j] - MA[k,p][2,r,t][q,i,j]\right)$$

*Etape 2*- Passage en représentation fréquentielle.
Les indices $i$ et $j$ varient de 0 à 2 $N_{pix}$ -1. Le programme effectue la transformée de Fourier suivant ces deux indices de chacune des représentations spatiales précédemment obtenues. Ceci mène aux représentations transformées:

$$MC[k,p][r,t][q,i,j]$$

*Etape* 3: compensation de la réponse fréquentielle des capteurs.
Cette compensation n'est pas indispensable mais elle améliore sensiblement la précision du microscope.
Le programme calcule le tableau *MD*:

$$MD[k,p][r,t][q,i,j]=RI[i,j]MC[k,p][r,t][q,i,j]$$

Le tableau *RI* représente la réponse fréquentielle inversée des capteurs. Il est déterminé en 9.11. Toutefois, selon une variante que l'on appellera variante 3, utilisée pour certains réglages, le tableau *RI* est mis à 1.

*Etape 4*-Translation et limitation de la représentation fréquentielle bidimensionnelle.
La position du point *FO* indiqué en 9.9.1.2. est stockée sous la forme des tableaux *Io*[$k$] *Jo*[$k$]. Les considérations indiquées en 9.9.1.2. se traduisent alors par les opérations suivantes, effectuées par le programme:

$$ME[k,p][r,t][0,i,j] = MD[k,p][r,t][0, i+Io[k], j+Jo[k]]$$

$$ME[k,p][r,t][1,i,j] = MD[k,p][r,t][1, i-Io[k]+N_{pix}, j+Jo[k]]$$

ou $i$ et $j$ varient maintenant de 0 à $N_{pix}$-1.

*Etape 5:* Calcul des coefficients $\alpha_s$.

Un coefficient $\alpha_s$ est déterminé pour chaque triplet $(k,p,q)$. Il est stocké dans un tableau de complexes *alpha* $[k,p,q]$. Le programme parcourt l'ensemble des triplet $(k,p,q)$. Pour chaque triplet

- il initialise à 0 les nombres *nom* et *denom*.
- il parcourt l'ensemble des triplets *r,i,j* en testant la condition:

$$\left(i - Io[k]\right)^2 + \left(j - Jo[k]\right)^2 \leq lim^2$$

avec par exemple *lim*=20.

Lorsque la condition est vraie il effectue:

$$nom{+}= ME[k,p][r,0][q,i,j]\overline{ME[k,p][r,1][q,i,j]}$$

$$denom{+}= |ME[k,p][r,1][q,i,j]|^2$$

- Lorsque la boucle sur *r,i,j* est terminée il effectue:

$$alpha[k,p,q] = \frac{nom}{denom}$$

*Etape* 6- Combinaison des valeurs correspondant aux indices r et t

Cette étape a pour objet de calculer $M_{k,p,q}[i,j]$ en fonction de $ME[k,p][r,t][q,i,j]$. Ceci peut être réalisé très simplement en effectuant l'opération suivante: $M_{k,p,q}[i,j] = ME[k,p][1,1][q,i,j]$, la valeur affectée au bruit étant alors constante et l'étape 5 étant rendue inutile. Si cette méthode doit être utilisée, il est cependant préférable de supprimer les lames de phase (5111) (5238) (5239) (5248) (5249).

Dans tous les cas, cette méthode, semblable à celle utilisée dans le second mode de réalisation, induit des imperfections dans les fréquences élevées. Il est donc préférable d'utiliser la méthode dont le principe a été indiqué en 9.9.1.3., la quantité $ME[k,p][r,t][q,i,j]$ étant la valeur mesurée notée $D_{p,s,r,t}$ en 9.9.1.3. L'étape 6 est alors effectuée comme suit:

Pour chaque valeur des indices *k,p,q,i,j* le programme calcule:

$$x_c = \frac{i - \dfrac{N_{pix}}{2}}{\dfrac{n_o}{n_v}K}, y_c = \frac{j - \dfrac{N_{pix}}{2}}{\dfrac{n_o}{n_v}K}, z_c = \sqrt{1 - x_c^2 - y_c^2}$$

$$x_e = \frac{Io[k] - \dfrac{N_{pix}}{2}}{\dfrac{n_o}{n_v}K}, y_e = \frac{Jo[k] - \dfrac{N_{pix}}{2}}{\dfrac{n_o}{n_v}K}, z_e = \sqrt{1 - x_e^2 - y_e^2}$$

$$V_{yz} = y_c z_e - z_c y_e$$

$$V_{xz} = -x_c z_e + z_c x_e$$

$$V_{xy} = -x_c y_e + y_c x_e$$

$$M_c^2 = x_c^2 + y_c^2$$

$$M_e^2 = x_e^2 + y_e^2$$

$$M_{ce} = \sqrt{V_{yz}^2 + V_{xz}^2 + V_{xy}^2}$$

Les valeurs de $\sin \varphi_c \cos\varphi_c \sin\varphi_e \cos\varphi_e$ sont déterminées selon les tableaux d'affectation suivants:

| $M_{ce}$ | 0 | autre |
|---|---|---|
|  |  |  |

| $M_c$ |  | 0 | autre |
|---|---|---|---|
| $\cos \varphi_c$ | 1 | $-\dfrac{y_e}{M_e}$ | $\dfrac{1}{M_c^2 M_{ce}}\left(y_c^2 V_{yz} - x_c y_c V_{xz} + x_c V_{xy}\right)$ |
| $\sin \varphi_c$ | 0 | $\dfrac{x_e}{M_e}$ | $\dfrac{1}{M_c^2 M_{ce}}\left(-x_c y_c V_{yz} + x_c^2 V_{xz} + y_c V_{xy}\right)$ |

| $M_{ce}$ | 0 | autre | |
|---|---|---|---|
| $M_e$ |  | 0 | autre |
| $\cos \varphi_e$ | -1 | $-\dfrac{y_c}{M_c}$ | $-\dfrac{1}{M_e^2 M_{ce}}\left(y_e^2 V_{yz} - x_e y_e V_{xz} + x_e V_{xy}\right)$ |
| $\sin \varphi_e$ | 0 | $\dfrac{x_c}{M_c}$ | $-\dfrac{1}{M_e^2 M_{ce}}\left(-x_e y_e V_{yz} + x_e^2 V_{xz} + y_e V_{xy}\right)$ |

puis les coefficients sont calculés:

$$coef[k,p,q,i,j][0,0] = (-1)^p \left((-1)^{p\overline{q}+\overline{p}q} \cos \varphi_e \cos \varphi_c + \cos \varphi_e \sin \varphi_c\right)$$

$$coef[k,p,q,i,j][0,1] = alpha[k,p,q](-1)^p \left((-1)^{p\overline{q}+\overline{p}q} \cos \varphi_e \cos \varphi_c - \cos \varphi_e \sin \varphi_c\right)$$

$$coef[k,p,q,i,j][1,0] = (-1)^{p\overline{q}+\overline{p}q} \sin \varphi_e \cos \varphi_c - \sin \varphi_e \sin \varphi_c$$

$$coef[k,p,q,i,j][1,1] = -alpha[k,p,q]\left(-(-1)^{p\bar{q}+\bar{p}q} \sin\varphi_e \cos\varphi_c - \sin\varphi_e \sin\varphi_c\right)$$

Ces coefficients ne dépendent pas du résultat des prises d'images et dans le cas ou on répète toujours la même série ils peuvent être stockés dans un tableau plutôt que recalculés à chaque fois. Le programme utilise ensuite ces valeurs pour combiner les images obtenues avec les différentes positions des rotateurs de la manière suivante:

$$M_{k,p,q}[i,j] = \sum_{r,t} ME[k,p][r,t][q,i,j]coef[k,p,q,i,j][r,t]$$

$coef[k,p,q,i,j][r,t]$ correspond à la quantité notée $E_{p,s,r,t}$ en 9.9.1.3. avec $s = \bar{p}q + p\bar{q}$ .
$ME[k,p][r,t][q,i,j]$ correspond à la quantité notée $D_{p,s,r,t}$ en 9.9.1.3.
$M_{k,p,q}[i,j]$ correspond à la quantité notée $M_{p,s}$ en 9.9.1.3.

*Etape 7*: L'amplitude de bruit est calculée comme suit:
$B_{k,p,0}[i,j]$ vaut:

- lorsque

$$RI[i+Io[k], j+Jo[k]] \neq 0 : \quad B_{k,p,0}[i,j] = \left| RI[i+Io[k], j+Jo[k]] \right|$$

- sinon: $B_{k,p,0}[i,j] = MAX$ ou $MAX$ est une valeur élevée, par exemple $10^{10}$
  $B_{k,p,1}[i,j]$ vaut:

- lorsque

$$RI[i-Io[k]+N_{pix}, j+Jo[k]] \neq 0 : B_{k,p,1}[i,j] = \left| RI[i-Io[k]+N_{pix}, j+Jo[k]] \right|$$

- sinon: $B_{k,p,1}[i,j] = MAX$

*Etape 8*-Calcul de l'image de référence.
L'image de référence est calculée, exactement de la même manière que l'image principale, mais en utilisant le tableau *MA2* au lieu du tableau *MA* et en remplaçant les valeurs $Io[k],Jo[k]$ par

$$(i_r, j_r) .$$

On notera $H_{k,p,q}[i,j]$ le tableau ainsi généré et $BH_{k,p,q}[i,j]$ l'amplitude de bruit correspondante. Toutefois, dans le cas de la variante 1, cette image de référence n'est pas calculée.

## 9.10. Réglage fin de la position des capteurs.

Cette opération a pour but d'assurer un réglage précis l'un par rapport à l'autre des deux capteurs correspondant au même coté du microscope, en particulier dans la direction de l'axe optique. En l'abscence d'un tel réglage, le point d'origine des représentations fréquentielles générées à partir de chaque capteur peut différer légèrement, ce qui compromet par la suite la bonne superposition des portions des représentations fréquentielles issues de chaque côté du microscope. Le fait de ne pas effectuer ce réglage n'empêche pas la génération de représentations tridimensionnelles de l'échantillon mais limite la précision de ces représentations.
Un déplacement en translation d'un capteur entraîne une modulation dans le domaine fréquentiel et donc un déphasage des valeurs des ondes planes obtenues à partir de ce capteur. Le réglage consiste à vérifier que les ondes planes reçues sur chaque capteur pour diverses directions du faisceau d'éclairage sont en phase.

On indice les capteurs par les indices $s, t$ avec la même convention qu'en 9.9.1.3. Le programme initialise à 0 les tableaux $MF_{s,t}$ de dimensions $N_{pix}$ x $N_{pix}$. Il effectue une boucle sur les indices $s, i$ et $j$. Pour chaque triplet $s, i,j$ vérifiant

$$\left(i-\frac{N_{pix}}{2}\right)^2+\left(j-\frac{N_{pix}}{2}\right)^2 \leq R_{ouv}^2$$

il effectue les opérations suivantes:

- il actionne les obturateurs de manière à utiliser le faisceau FEG pour $s=0$ et le faisceau FED pour $s=1$.
- il déplace le miroir au point correspondant à $tab1[s,i,j]$, $tab2[s,i,j]$
- il génère à partir de chaque capteur indicé par $s$ une image bidimensionnelle suivant la méthode décrite en 9.4., obtenant donc deux images $MH_{s,t}[k,l]$ ou les indices $s$ et $t$ ont été ajoutés pour caractériser le capteur, avec la même convention qu'en 9.9.
- Il déplace le miroir vers un point fixe de coordonnées

$$\left(i_r, j_r\right)$$

- il génère à partir de chaque capteur indicé par $s$ une image bidimensionnelle suivant la méthode décrite en 9.4., obtenant deux images $MHR_{s,t}[k,l]$.
- Il effectue pour le couple d'entiers $(i,j)$:

$$MF_{s,t}[i,j] = \frac{MH_{s,t}[2i,2j]}{MHR_{s,t}[2i,2j]}$$

Après avoir terminé cette boucle sur $s,ij$, le programme calcule les écarts suivants:

$$\sigma_s = \sum_{i,j} \left|MF_{s,0}[i,j] - MF_{s,1}[i,j]\right|^2$$

La position en translation du capteur (5171) doit être ajustée de manière à minimiser $\sigma_0$ et la position du capteur (5201) doit être ajustée de manière à minimiser $\sigma_1$. Le programme doit donc boucler sur le calcul de ces écarts jusqu'à ce que le réglage soit terminé. $\sigma_s$ représente l'écart quadratique moyen dû aux erreurs de phase entre les fréquences reçues sur les deux capteurs se trouvant d'un même coté du microscope.

### 9.11. Détermination de la réponse fréquentielle des capteurs

Les capteurs effectuent un filtrage des fréquences spatiales qui leur parviennent. Ce filtrage est dans le meilleur des cas équivalent à un moyennage sur la surface du pixel, toutefois en général il est plus important du fait des défauts des CCD et des caméras. Dans les modes de réalisation basés sur une réception dans un plan de fréquence, ce filtrage induit simplement un assombrissement de la partie de l'image générée qui est éloignée du centre. Dans ce mode de réalisation, ce filtrage est effectué dans le plan d'espace et pose des problèmes plus importants. Il est préférable d'utiliser des caméras de bonne qualité et de compenser ce filtrage. Ce filtrage en plan d'espace équivaut à une multiplication en fréquence par un tableau RF dont l'inverse $RI$ est utilisé dans la procédure 9.9. pour effectuer la compensation. Pour limiter le bruit sur la réponse fréquentielle, celle-ci est acquise à l'aide d'ondes planes plutôt qu'à partir d'une seule onde sphérique.

### 9.11.1. Acquisition

On utilise des tableaux *Io* et Jo caractérisant une trajectoire parcourant l'ensemble des points accessibles. c'est-à-dire que (*Io*[*k*], *Jo*[*k*]) doit parcourir l'ensemble des points tels que

$$\left(Io[k] - \frac{N_{pix}}{2}\right)^2 + \left(Jo[k] - \frac{N_{pix}}{2}\right)^2 \leq R_{ouv}^2$$

ou $R_{ouv}$ est le rayon limité par l'ouverture des objectifs, qui a été obtenu à l'étape 37 de la procédure de réglage 9.5. Cette trajectoire sera nommée par la suite « trajectoire complète ».

Un programme effectue l'acquisition définie par ces tableaux, selon la procédure décrite en 9.9. avec les variantes 2 et 3, c'est-à-dire sans utiliser les vitres (5165)(5191) et avec un point de coordonnées

$$\left(i_r, j_r\right)$$

non occulté. Il génère ainsi les séries d'images $M_{k,p,q}[i,j]$ et $H_{k,p,q}[i,j]$. L'indice $n_o$ n'étant pas connu, il est pris égal à $n_v$ dans la procédure 9.9. Toutefois, lors de cette acquisition, il suffit d'enregistrer les valeurs

$$M_{k,p,q}\left[Io[k], Jo[k]\right] \text{ et } H_{k,p,q}\left[i_r, j_r\right].$$

### 9.11.2. calcul

Le programme initialise à 0 le tableau *RF1* de dimensions $N_{pix}$ x $N_{pix}$. Il parcourt alors la série des indices k. Pour chaque indice k il effectue:

$$RF1\left[Io[k], Jo[k]\right] = \left|\frac{M_{k,0,0}\left[Io[k], Jo[k]\right]}{H_{k,0,0}\left[i_r, j_r\right]}\right| + \left|\frac{M_{k,1,0}\left[Io[k], Jo[k]\right]}{H_{k,1,0}\left[i_r, j_r\right]}\right|$$

ou $i_r, j_r$ sont les coordonnées du maximum de l'image de référence, comme définies en 9.9.

Il effectue alors la transformée de Fourier bidimensionnelle inverse du tableau *RF1*, obtenant un tableau *RF2*. Il complète ce tableau par des zéros en initialisant à 0 le tableau *RF3* de dimensions $2N_{pix}$ x $2N_{pix}$ puis en effectuant pour *i* et *j* variant de 0 à $N_{pix}$-1:

$$RF3\left[i + \frac{N_{pix}}{2}, j + \frac{N_{pix}}{2}\right] = RF2[i,j]$$

Il effectue alors la transformée de Fourier bidimensionnelle inverse du tableau RF3, obtenant le tableau RF correspondant à la réponse fréquentielle des capteurs.

Le programme calcule alors la réponse fréquentielle inversée des capteurs de la manière suivante:

$$\text{-si } \left(i - N_{pix}\right)^2 + \left(j - N_{pix}\right)^2 \leq 4R_{ouv}^2 \text{ alors: } RI[i,j] = \frac{1}{\left|RF[i,j]\right|}$$

- sinon: *RI*[*i,j*]=0

Le tableau *RI* ainsi déterminé est en particulier utilisé en 9.9.

### 9.12. Détermination des coordonnées relatives des points d'origine des images obtenues de chaque coté du microscope.

Les images en fréquence obtenues de chaque coté du microscope par la procédure 9.9. sont équivalentes aux images en fréquence qui étaient obtenues dans les modes de réalisation précédents. Elles sont, de la même manière, relatives à un point d'origine, qui ne dépend plus du point origine de l'onde de référence, mais de la position du capteur. Pour pouvoir superposer ces représentations il est nécessaire de connaître la position relative des points d'origine des représentations obtenues de chaque coté du microscope.

Ceci est réalisé en utilisant les ondes sphériques FS et FSI. L'onde sphérique FS ou FSI reçue de chaque coté du microscope doit en principe être ponctuelle et centrée sur chaque surface de réception. La position des objectifs peut donc être réglée en présence des faisceaux FS, FSI,FRG,FRD pour que l'image, obtenue sur chaque capteur par la procédure 9.4. utilisée sans transformation de Fourier, soit parfaitement ponctuelle et centrée. Si ce réglage de position des objectifs est effectué avec le plus grand soin et avec des positionneurs suffisamment précis, de précision sub-micrométrique, par exemple des dispositifs de focalisation de microscope d'une qualité suffisante, ou des positionneurs avec contrôle piézoélectrique, alors les points d'origine des images obtenues de chaque coté du microscope sont confondus.

La procédure de réglage décrite en 9.5. permet cependant d'obtenir cette qualité de réglage en utilisant des positionneurs de précision moyenne pour les objectifs. En effet, les réglages fins sont effectués, dans cette procédure, par déplacement des caméras et non des objectifs. Si la procédure de réglage décrite en 9.5. est effectuée avec soin, les points d'origine des représentations fréquentielles finalement obtenues sont confondus. Leurs coordonnées relatives sont donc (*x,y,z*)=(0,0,0).

Cependant, les réglages obtenus par la procédure 9.5. ou par un nouveau réglage de position des objectifs sont en général imparfaits. En particulier ils peuvent être influencés par des imperfections locales des capteurs. Il est possible d'utiliser (*x,y,z*)=(0,0,0) mais une meilleure superposition des images provenant de chaque capteur sera obtenue si un algorithme adapté est utilisé pour calculer une valeur plus précise de ces paramètres. Une détermination précise des positions relatives des points d'origine peut être obtenue par une méthode similaire à celle utilisée en 7.9.1. Cependant:

- L'image du faisceau FS ou FSI dans le plan de réception est ponctuelle et non répartie sur l'ensemble de la surface de réception comme en 7.9.1. Les conséquences sont que l'image obtenue est sensible à des défauts locaux des capteurs et qu'elle est fortement bruitée.
- Le point de focalisation de FS ou FSI ne correspond pas au point caractéristique (avec la terminologie utilisée en 3.16.) de l'un des objectifs, alors qu'en 7.9.1. le point de focalisation du faisceau de référence correspondait au point caractéristique d'un objectif correspondant.

La méthode utilisée est donc modifiée pour pallier, dans la mesure du possible, à ces inconvénients. Les faisceaux utilisés sont FS,FSI,FRD,FRG et l'objet utilisé est une lame transparente. La méthode utilisée se décompose en deux phases:

*Phase d'acquisition*: Elle consiste en une itération sur les indices *k,l* parcourant l'ensemble *E0* des points vérifiant

$$\left(k - \frac{N_{pix}}{2}\right)^2 + \left(l - \frac{N_{pix}}{2}\right)^2 \leq rayon^2$$

avec par exemple *rayon* = 0.8*R_{ouv}*. Le tableau M6 de dimensions $N_{pix}$ x $N_{pix}$ est initialisé à 0 puis le programme effectue, pour chaque couple (*k,l*) de l'ensemble *E0* , les étapes 1 à 7 suivantes:

*étape* 1: positionnement du miroir de déviation du faisceau au point déterminé par *tab1*[*0,k,l*], *tab2*[0,*k,l*]

*étape* 2: Une image est acquise de chaque coté du microscope selon la procédure décrite en 9.4. sans effectuer la transformée de Fourier. On notera ces images *M0_g*[*i,j*] au lieu de *MH*[*i,j*], l'indice *s* caractérisant le capteur avec *s*=0 pour (5174) et *s*=1 pour (5198).

*étape* 3: le programme détermine les coordonnées *imax_s, jmax_s* de la valeur maximale de chaque tableau *M0_s*[*i, j*]. Il calcule alors les tableaux *M1_s*[*i,j*] avec:

- si

$$\left(i - imax_s\right)^2 + \left(j - jmax_s\right)^2 \le R_{niv}^2 \quad M1_s[i,j] = M0_s[i,j]$$

- sinon $M1_s[i,j]=0$

ou $R_{niv}$ est déterminé pour que le disque de rayon $R_{niv}$ centré sur $imax_s, jmax_s$ contienne tous les points dont les valeurs hors bruit sont supérieures au niveau de bruit, tout en étant aussi réduit que possible. En pratique, $R_{niv}$ peut être déterminé empiriquement et valoir une dizaine de pixels.

*étape 4*:le programme effectue la transformée de Fourier bidimensionnelle de chaque tableau $M1_s[i,j]$, obtenant les tableaux $M2_s[i,j]$.

étape 4: le programme applique le filtre *RI* aux tableaux ainsi obtenus:

$$M3_s[i.j] = M2_s[i,j]RI[i,j]$$

*étape 5*: Le programme calcule le tableau *M4* de dimensions $N_{pix}$ x $N_{pix}$ de la manière suivante:

$$- si \left(i - \frac{N_{pix}}{2}\right)^2 + \left(j - \frac{N_{pix}}{2}\right)^2 \le R_{ouv}^2 \text{ alors } M4[i,j] = \frac{M3_0[i+k, j+l]}{M3_1[i-k+N_{pix}, j+l]}$$

- sinon, $M4[i,j] = 0$

Le tableau M4 représente le décalage de phase entre les deux capteurs dû à la non-coïncidence des points d'origine, partiellement débruité.

*étape* 6: le programme effectue la transformée de Fourier inverse du tableau *M4*, obtenant un tableau *M5*.

*étape* 7: le programme modifie le tableau M6 de la manière suivante:

$$M6[i,j] + = \frac{M4[i,j]}{M4[0,0]}$$

*Phase de calcul:* Le programme calcule le tableau *M7* qui est la tranformée de Fourier du tableau *M6*. Le programme calcule les coordonnées *x,y,z* obtenues par la procédure décrite en 7.8. à partir du tableau *M7*, qui remplace le tableau noté $F_{rec}$ en 7.8. Toutefois, pour cette étape, la procédure décrite en 7.8. doit être modifiée comme indiquée en 7.9.1. pour tenir compte du fait que l'indice de l'objet est connu. Elle doit également être modifiée d'une seconde manière pour tenir compte du fait que le mode d'acquisition est différent et que l'écart-type $\sigma^2$ doit être calculé dans le domaine spatial et non dans le domaine fréquentiel comme en 7.8.1. Cette seconde modification consiste à remplacer les étapes (3512) à (3514) de la Fig.50 par les étapes suivantes, qui sont effectuées en représentation spatiale et ou c'est donc le tableau *M6* (et non *M7*) qui est utilisé:

*étape* 1: le programme détermine les coordonnées (*imax,jmax*) du point correspondant à la valeur maximale de $|M6[i,j]|$.Il calcule alors rapport $= \frac{M6[imax,jmax]}{F_d[imax,jmax]}$

*étape* 2: le programme calcule la grandeur caractéristique *max*:

$$max = - \sum_{(i,j) \in Disque} \left|M6[i,j] - rapport.F_d[i,j]\right|^2$$

ou la somme est sur l'ensemble des couples (*i,j*) inclus dans le disque de centre (*imax,jmax*) et de rayon $\frac{R_{niv}}{2}$.

## 9.13.Détermination des phases des faisceaux

Cette procédure est similaire à la procédure 7.9.2. La position des objectifs est celle qui a été utilisée en 9.12.

pour obtenir les coordonnées *x,y,z* et ne doit pas être modifiée au cours de la présente procédure.

On utilise les tableaux *Io* et *Jo* déjà utilisés en 9.11.et caractérisant une trajectoire complète.

Un programme effectue l'acquisition définie par ces tableaux, selon la procédure décrite en 9.9. avec les variantes 2 et 3, c'est-à-dire sans utiliser les vitres (5165)(5191), avec un point de coordonnées $(i_r, j_r)$ non occulté, et sans compensation du filtrage des capteurs. Il génère ainsi les séries d'images $M_{k,p,q}[i,j]$ et $H_{k,p,q}[i,j]$. L'indice $n_o$ n'étant pas connu, il est pris égal à $n_v$ dans la procédure 9.9. Lors de cette acquisition, il suffit d'enregistrer les valeurs

$$M_{k,p,q}\big[Io[k], Jo[k]\big] \text{ et } H_{k,p,q}\big[i_r, j_r\big].$$

Le programme initialise à 0 le tableau *Ra* puis il parcourt la série des indices *k,p* en effectuant pour chaque couple *k,p*:

$$Ra\big[p, Io[k], Jo[k]\big] = \frac{M_{k,p,0}\big[Io[k], Jo[k]\big]}{H_{k,p,0}\big[i_r, j_r\big]} \exp\left(-\tilde{j}\,\frac{2\pi}{\lambda}\,n_v\left(x\,\frac{Io[k]}{K} + y\,\frac{Jo[k]}{K} + z\sqrt{1 - \frac{Io[k]^2 + Jo[k]^2}{K}}\right)\right)$$

ou $i_r, j_r$ sont les coordonnées du maximum de l'image de référence, comme définies en 9.9. et ou *x,y,z* sont les coordonnées déterminées en 9.12.

### 9.14. Réglage de position des objectifs en présence de l'échantillon.

L'échantillon à observer est mis en place. Les faisceaux FS et FRG sont utilisés. Le faisceau FRG utilisé est dans le sens de l'axe optique, donc le miroir de déviation est en poition centrale, définie par

$$tab1\left[0, \frac{N_{pix}}{2}, \frac{N_{pix}}{2}\right], \ tab2\left[0, \frac{N_{pix}}{2}, \frac{N_{pix}}{2}\right].$$

A partir de l'onde reçue sur le capteur (5198) on génère deux images par la procédure décrite en 9.4.: une image spatiale obtenue sans effectuer l'étape 3 et une image fréquentielle obtenue en effectuant l'étape 3. Le module des valeurs complexes est extrait sur chaque image. La position des objectifs est ajustée sur le même principe qu'en 7.10.:

L'image spatiale doit être centrée.

Sur l'image en fréquence, on doit observer un disque clair. Le réglage doit être effectué pour que l'intensité soit la plus élevée possible pour les fréquences élevées (points éloignés du centre). Le disque observé doit rester relativement homogène.

Si un anneau sombre apparaît entre le bord extérieur et la zone centrale, l'échantillon est trop épais et la totalité des fréquences ne pourra pas être prise en compte. Le réglage doit alors être effectué de manière à avoir un disque relativement homogène, de rayon aussi élevé que possible. Le disque n'atteint pas sa taille maximum et les fréquences élevées ne peuvent pas être prises en compte. La résolution de l'image, principalement en profondeur, est diminuée. La seule solution à ce problème consiste à utiliser un objectif spécialement conçu, décrit au paragraphe 7.19.

### 9.15. Détermination de *x,y,z,L, $n_0$*

Cette étape est similaire à celle décrite dans la procédure 7.11. De même que dans la procédure décrite en 7.11., cette étape peut être évitée en effectuant une mesure préalable des grandeurs L et $n_0$ et en introduisant l'échantillon sans déplacer les objectifs, et donc sans effectuer l'étape 9.14., de manière à ne pas modifier les valeurs de *x, y,z* obtenues en 9.12.

Le programme effectue la série d'acquisitions définie par les tableaux *Io* et *Jo* définissant une trajectoire complète, déjà utilisés en 9.11.2, selon la procédure décrite en 9.9. utilisée avec les variantes 2 et 3. Il-génère ainsi les séries d'images $M_{k,p,q}[i,j]$ et $H_{k,p,q}[i,j]$. Toutefois, lors de cette acquisition, il suffit d'enregistrer les valeurs

$$M_{k,p,q}\big[Io[k],Jo[k]\big]\ \text{et}\ H_{k,p,q}\big[i_r,j_r\big].$$

Le programme parcourt alors la série des indices k. Pour chaque vateur *k* il effectue:

$$F_{rec}\big[Io[k],Jo[k]\big]=\frac{M_{k,0,0}\big[Io[k],Jo[k]\big]}{H_{k,0,0}\big[i_r,j_r\big]}\frac{1}{Ra\big[0,Io[k],Jo[k]\big]}$$

Le programme décrit en 7.8. est alors utilisé pour calculer les paramètres *x,y,z,L*,$n_0$ à partir du tableau $F_{rec}$ ainsi constitué.

### 9.16. Calcul de $w_p$ et réglage de focalisation.

Cette étape est effectuée de la manière décrite en 7.15. Elle peut toutefois être évitée si l'indice de l'échantillon est proche de l'indice nominal des objectifs, auquel cas on peut choisir par exemple $w_p=\frac{L}{2}$.

- les tableaux $M_{k,p,q}[i,j]$ obtenus par la procédure 9.9. utilisée sans variante se substituent à ceux précédemment obtenus par la procédure 7.12.
- du fait que l'échantillonnage est régulier, on utilise $K_0=K_1=K$
- les valeurs *imax$_k$,jmax$_k$* sont maintenant données par: $imax_k=\frac{N_d}{N_{pix}}Io[k]$, $jmax_k=\frac{Nd}{N_{pix}}Jo[k]$.
- L'étape 2 de la procédure (4002) de la Fig.57 nécessite l'acquisition de la valeur de l'onde au point (*imax$_k$,jmax$_k$*). Les vitres étant utilisées pour arrêter l'onde d'éclairage directe, cette valeur n'est pas disponible. Cette étape est donc remplacée par les étapes 2.1 et 2.2. suivantes:

*étape 2.1.* Pour chaque valeur de k, le programme calcule:

$$R_{k,0,0}=\frac{\displaystyle\sum_{(i,j)\in E_k}\frac{H_{0,0,0}[i,j]\overline{H_{k,0,0}[i,j]}}{\big(B_{0,0,0}[i,j]\big)^2+\big(B_{k,0,0}[i,j]\big)^2}}{\displaystyle\sum_{(i,j)\in E_k}\frac{\big|H_{k,0,0}[i,j]\big|^2}{\big(B_{0,0,0}[i,j]\big)^2+\big(B_{k,0,0}[i,j]\big)^2}}$$

avec:

$$E_k=\left\{(i,j)\left|\frac{\big|H_{0,0,0}[i,j]\overline{H_{k,0,0}[i,j]}\big|}{\big(B_{0,0,0}[i,j]\big)^2+\big(B_{k,0,0}[i,j]\big)^2}\geq Coef\cdot\max_{\substack{0\leq a\leq N_{pix}-1\\0\leq b\leq N_{pix}-1}}\left(\frac{\big|H_{0,0,0}[a,b]\overline{H_{k,0,0}[a,b]}\big|}{\big(B_{0,0,0}[a,b]\big)^2+\big(B_{k,0,0}[a,b]\big)^2}\right)\right.\right\}$$

et avec par exemple *Coef* = 0,5

*étape 2.2.* Pour chaque valeur de *k,i,j* le programme effectue:

$$Ms_k[i,j]=\frac{Ms_k[i,j]R_{k,0,0}}{Ra\big[0,Io[k],Jo[k]\big]F_{rec}\big[Io[k],Jo[k]\big]}$$

ou $F_{rec}$ est le tableau déterminé en 9.15.

### 9.17. Obtention de la fonction de compensation des aberrations.

Cette étape est effectuée comme décrit en 7.16. avec $K_0 = K_1 = K$

### 9.18. Réalisation d'images tridimensionnelles par la méthode décrite dans le troisième mode de réalisation.

### 9.18.1. sans suppression de l'onde directe

Cette étape est effectuée comme décrit en 7.17.2.

- les tableaux $M_{k,p,q}[i,j]$ $H_{k,p,q}[i,j]$ $B_{k,p,q}[i,j]$ $BH_{k,p,q}[i,j]$ obtenus par la procédure 9.9 utilisée avec la variante 2 se substituent à ceux précédemment obtenus par la procédure 7.12
- du fait que l'échantillonnage est régulier, on utilise $K_0 = K_1 = K$, $a_0 = a_1 = 1$.
- les valeurs $imax_{k,p,q}$, $jmax_{k,p,q}$ sont maintenant données par: $imax_{k,p,q} = Io[k]$, $jmax_{k,p,q} = Jo[k]$.

### 9.18.2. avec suppression de l'onde directe.

Le principe est le même que ci-dessus mais la procédure 9.9. est utilisée sans variante. En outre, l'étape 2 de l'algorithme décrit en 7.17.2. nécessite l'acquisition de la valeur de l'onde au point

$$\left(imax_{k,p,0}, jmax_{k,p,0}\right).$$

Les vitres étant utilisées pour arrêter l'onde d'éclairage directe, cette valeur n'est pas disponible. Cette étape est donc remplacée par l'étape 2 suivante, équivalente à celle indiquée en 7.18.1.
*étape 2*: Pour chaque valeur de $k,p,g,i,j$ le programme effectue:

$$M_{k,p,q}[i,j] = \frac{M_{k,p,q}[i,j]D_{p\bar{q}+\bar{p}q}[i,j]R_{k,p,q}}{Ra[p,Io[k],Jo[k]]F_{rec}[Jo[k],Jo[k]]D_p[Io[k],Jo[k]]}$$

### 9.19. Réalisation d'images tridimensionnelles suivant une méthode rapide avec suppression de l'éclairage direct.

L'utilisation de la méthode décrite précédemment présente le défaut de nécessiter l'acquisition d'images de référence. A chaque acquisition d'image de référence, il est nécessaire d'effectuer un déplacement important du miroir (5113). Il est possible d'utiliser une image de référence pour recaler en phase plusieurs images utiles successives, et donc de ne pas acquérir une image de référence à chaque acquisition d'image élémentaire. Néanmoins, si le système n'est pas parfaitement stable sur une échelle de temps comparable au temps d'acquisition d'une représentation fréquentielle tridimensionnelle complète, les acquisitions d'images de référence doivent être nombreuses. Du fait du déplacement important du miroir qu'elles nécessitent, ces acquisitions constituent une perte de temps importante. Pour éviter l'acquisition d'images de référence, les étapes 1 et 2 du paragraphe 7.17.2. , qui ont pour objectif d'effectuer le recalage en phase des représentations fréquentielles bidimensionnelles, peuvent être remplacées par la méthode décrite ci-dessous. Cette méthode peut également être utilisée avec les autres modes de réalisation mais ne présente alors qu'un intérêt limité.
Cette méthode comporte une phase préliminaire, qui est effectuée avant tout calcul nécessitant le recalage en phase (soit avant la phase d'imagerie proprement dite), puis une modification des étapes utilisées en phase d'imagerie. L'acquisition d'une image devant être traitée par cette méthode peut se faire selon la procédure 9.9. utilisée avec la variante 1, c'est-à-dire sans acquisition d'image de référence et avec utilisation de la vitre pour annuler l'éclairage direct.

### 9.19.1. Phase préliminaire.

La phase préliminaire consiste à déterminer, à partir d'un nombre limité de représentations fréquentielles bidimensionnelles indicées par l'indice *I*, les tableaux $Kn_{p,q}[ni,nj,I]$ $Fh_{p,q}[ni,nj,I]$. Dans ces tableaux:

*p* indice le coté (gauche ou droit) vers lequel parvient l'onde d'éclairage direct

*q* indice le coté d'ou provient la représentation fréquentielle (opposé ou non à celui ou parvient l'onde d'éclairage directe)

*I* indice la position du point correspondant à l'onde d'éclairage directe, sur l'image générée par la méthode décrite en 9.9., à partir du coté indicé par *q*=0.

Les indices (*I,p*) caractérisent donc une onde d'éclairage et les indices (*I,p,q*) caractérisent une représentation fréquentielle bidimensionnelle correspondant à cette onde d'éclairage et au capteur indicé par q.

Les indices *ni,nj* sont les coordonnées sur deux axes de cette représentation fréquentielle, après centrage par rapport au point d'impact direct de l'onde d'éclairage.

Le tableau $Kn_{p,q}[ni,nj,I]$ contient la troisième coordonnée *nk* de la représentation fréquentielle considérée, pour chaque couple *ni, nj*.

Le tableau $Fh_{p,q}[ni,nj,I]$ contient la valeur de cette représentation au point de coordonnées *ni,nj,nk* après recalage en phase par rapport à la représentation définie par *I*=0.

Le tableau $Bh_{p,q}[ni,nj,I]$ contient le bruit sur les éléments correspondants de $Fh_{p,q}[ni,nj,I]$.

Ces tableaux caractérisent donc les valeurs de la représentation fréquentielle tridimensionnelle de l'objet en un certain nombre de points. Le tableau $Kn_{p,q}$ caractérise les points en lesquels des valeurs sont disponibles, et le tableau $Fh_{p,q}$ caractérise ces valeurs elles-mêmes. Les positions de l'onde d'éclairage direct correspondant aux indices *I* sont choisies de telle sorte que toute représentation fréquentielle bidimensionnelle, après recentrage, ait une intersection non vide avec la partie de la représentation fréquentielle tridimensionnelle de l'objet constituée par la superposition des représentations correspondant aux différents indices *I*, et caractérisée par les tableaux $Kn_{p,q}$ et $Fh_{p,q}$.

La phase préliminaire se décompose en trois étapes:

*Etape 1*: La Fig.81 représente les points correspondant à l'onde d'éclairage directe, sur l'image générée par la procédure 9.9. à partir des capteurs ou parvient cette onde d'éclairage directe, pour plusieurs valeurs de *I*. On note *IL[I],JL[I]* les coordonnées du point indicé par *I*, avec par exemple:

| *I* | *IL[I]* | *JL[I]* |
|---|---|---|
| 0 | $\frac{N_{pix}}{2}$ | $\frac{N_{pix}}{2}$ |
| 1 | $N_{pix}$-1-*marge* | $\frac{N_{pix}}{2}$ |
| 2 | $\frac{N_{pix}}{2}$ | $N_{pix}$-1-*marge* |
| 3 | *marge* | $\frac{N_{pix}}{2}$ |
| 4 | $\frac{N_{pix}}{2}$ | *marge* |

ou *marge*=10 par exemple.

Les points indicés par *I* doivent faire partie de la trajectoire définie par les tableaux *Io* et *Jo*. Le programme détermine alors, pour chaque valeur de *I*, la valeur de k telle que *IL[I] = Io[k]* et *JL[I] = Jo[k]* . Il range cette valeur dans le tableau *TK* en *TK[I]*.

*Etape 2*: La seconde étape consiste à déterminer les tableaux $Kn_{p,q}$ et $Fh_{p,q}$

Le programme initialise d'abord ces tableaux, par exemple à une valeur de -10000.

Le programme parcourt ensuite l'ensemble des quintuplets (*I,p,q,i,j*). Il calcule pour chacun d'entre eux

$$k= TK[I]$$

$$ni = i - imax_{k,p,q} + N_{pix}$$

$$nj = j - jmax_{k,p,q} + N_{pix}$$

$$nk = \sqrt{\left(\frac{n_o}{n_v}K\right)^2 - \left(i - \frac{N_{pix}}{2}\right)^2 - \left(j - \frac{N_{pix}}{2}\right)^2} - \sqrt{\left(\frac{n_o}{n_v}K\right)^2 - \left(imax_{k,p,q} - \frac{N_{pix}}{2}\right)^2 - \left(jmax_{k,p,q} - \frac{N_{pix}}{2}\right)^2} + N_{pix}$$

Il prend pour chacun de ces nombres l'entier le plus proche puis il effectue:

$$Kn_{p,q}[ni,nj,l] = nk$$

$$Fh_{p,q}[ni,nj,l] = M_{k,p,q}[i,j]\overline{D_{pq+pq}}[i,j]$$

$$Bh_{p,q}[ni,nj,l] = B_{k,p,q}[i,j]|\overline{D_{pq+pq}}[i,j]|$$

*Etape 3*: cette étape consiste en une modification du tableau $Fh_{p,q}$. Le programme parcourt l'ensemble des (*l,p, q*). Pour chaque valeur de ce triplet, le programme effectue les opérations 1 à 3 suivantes:

*opération* 1: le programme initialise à 0 les nombres *nom* et *denom*
*opération* 2: le programme parcourt l'ensemble des valeurs de (*ni,nj*) en testant la condition $|Kn_{p,q}[ni,nj,l] - Kn_{p,q}[ni,nj,0]|^2 \leq lim$ avec par exemple *lim*=1. Lorsque cette condition est réalisée il effectue:

$$nom_{p,q,l} + = \frac{Fh_{p,q}[ni,nj,0]\overline{Fh_{p,q}[ni,nj,l]}}{\left(Bh_{p,q}[ni,nj,0]\right)^2 + \left(Bh_{p,q}[ni,nj,l]\right)^2}$$

$$denom_{p,q,l} + = \frac{\left|Fh_{p,q}[ni,nj,l]\right|^2}{\left(Bh_{p,q}[ni,nj,0]\right)^2 + \left(Bh_{p,q}[ni,nj,l]\right)^2}$$

*opération* 3: le programme effectue:

$$Fh_{p,q}[ni,nj,l] = \frac{nom_{p,q,l}}{demon_{p,q,l}}Fh_{p,q}[ni,nj,l]$$

### 9.19.2. Phase d'imagerie

La phase d'imagerie diffère de celle utilisée en 7.17.2. par la méthode de recalage de phase. Le recalage en phase est içi effectué par rapport à la partie de la représentation fréquentielle de l'objet caractérisée par les tableaux calculés dans la phase préliminaire, et non par rapport au point image de l'onde d'éclairage, à des valeurs préenregistrées de l'onde d'éclairage ou à des images de référence.
Les étapes 1,2,3 suivantes remplacent les étapes 1 et 2 définies en 7.17.2.

*Etape* 1: le programme effectue, pour toutes les valeurs de *k,p,q,i,j*:

$$M_{k,p,q}[i,j] = M_{k,p,q}[i,j]D_{pq+pq}^{-\;-}[i,j]$$

$$B_{k,p,q}[i,j] = B_{k,p,q}[i,j]|D_{pq+pq}^{-\;-}[i,j]$$

*Etape* 2: Cette étape consiste à établir le coefficient complexe caractérisant, pour chaque représentation bidimensionnelle, le décalage de phase et d'intensité entre cette représentation bidimensionnelle et la portion de représentation tridimensionnelle caractérisée par les tableaux $Kn_{p,q}$ et $Fh_{p,q}$. Ce coefficient complexe, pour la représentation caractérisée par les indices *k,p,q*, s'exprime sous la forme $\frac{nom_{p,q,l}}{demon_{p,q,l}}$. Il est obtenu en effectuant une boucle sur l'ensemble des indices (*k,p,q,i,j,l*). Pour chaque (*k,p,q,i,j,l*) :

- le programme calcule:

$$ni = i - imax_{k,p,q} + N_{pix}$$

$$nj = j - jmax_{k,p,q} + N_{pix}$$

$$nk = \sqrt{\left(\frac{n_o}{n_v}K\right)^2 - \left(i - \frac{N_{pix}}{2}\right)^2 - \left(j - \frac{N_{pix}}{2}\right)^2} - \sqrt{\left(\frac{n_o}{n_v}K\right)^2 - \left(imax_{k,p,q} - \frac{N_{pix}}{2}\right)^2 - \left(jmax_{k,p,q} - \frac{N_{pix}}{2}\right)^2} + N_{pix}$$

- Il teste la condition:
  $|Kn_{p,q}[ni,nj,l] - nk|^2 \leq lim$ avec par exemple *lim*=1.

- Si la condition est vraie, le programme effectue alors les opérations

$$nom_{k,p,q} += \frac{\overline{M_{k,p,q}[i,j]}Fh_{p,q}[ni,nj,l]}{\left(B_{k,p,q}[i,j]\right)^2 + \left(Bh_{p,q}[ni,nj,l]\right)^2}$$

$$denom_{k,p,q} += \frac{\left|M_{k,p,q}[i,j]\right|^2}{\left(B_{k,p,q}[i,j]\right)^2 + \left(Bh_{p,q}[ni,nj,l]\right)^2}$$

*Etape* 3: cette étape constitue le recalage en phase proprement dit. Le programme effectue:

$$M_{k,p,q}[i,j] = \frac{nom_{p,q,l}}{demon_{p,q,l}} M_{k,p,q}[i,j]$$

## 9.20. Réalisation d'images tridimensionnelles suivant une méthode simntifiée.

On peut se limiter, pour générer l'image tridimensionnelle de l'objet, à la représentation $F_{0,0}$ définie en 7.17. Ceci revient, dans la procédure décrite en 7.17.2., à adopter des tableaux $IB_{p,q}$ nuls pour tout couple $(p,q) \neq (0,0)$.
On suppose également içi que l'objet a un indice moyen proche de l'indice nominal de l'objet observé et que la table optique est totalement exempte de vibrations.

Les étapes 9.11. à 9.17 peuvent alors être supprimées. La présente méthode diffère en outre de la précédente par la méthode utilisée pour régler la position des objectifs avant utilisation et par l'algorithme de superposition des images.

### 9.20.1. Réglage des objectifs et du miroir (5113).

Ce réglage peut être effectué avec une lame transparente à condition de ne pas déplacer les objectif après réglage, quand on introduit l'objet. Si des objectifs prévus pour fonctionner sans liquide d'immersion ni lame couvre-objet sont prévus (indice nominal égal à 1) et si l'échantillon est peu épais ou d'indice moyen proche de 1, il peut également être effectué en l'abscence d'objet. Pendant cette étape on utilise les faisceaux FEG et FRD.

Il est nécessaire que le miroir (5113) soit amovible et puisse être remplacé par une plaque absorbante en tout point sauf en un point central ou est placé un réflecteur de faible dimension. La dimension de ce réflecteur doit être d'environ $\frac{D}{2N_{pix}}$ ou $D$ est le diamètre du faisceau incident sur le miroir (5113). Cette plaque doit être provisoirement placée sur le miroir de manière à ce que le réflecteur occupe à peu près le centre du faisceau incident sur le miroir. Le positionneur du miroir doit être lui-même fixé sur un positionneur trois axes en translation.

Ce réglage doit être effectué immédiatement après la série de réglages décrite en 9.5. et les objectifs ne doivent plus être déplacés ensuite. Il comporte les étapes suivantes:

*étape 1*: on remplace le miroir par la plaque absorbante
*étape 2*: en utilisant uniquement le faisceau FRD, on déplace le miroir en translation de manière à ce que l'image produite sur le CCD (4339) soit ponctuelle et centrée.
*étape 3*: en utilisant uniquement le faisceau FEG, on déplace les objectifs de manière à ce que l'image produite sur le CCD (4339) soit ponctuelle et centrée.
*étape 4*: on peut alors remettre en place le miroir.

### 9.20.2. algorithme de calcul de la représentation tridimensionnelle

Les étapes 1 et 2 de l'algorithme décrit en 7.17.2. peuvent être supprimées. En effet, le réglage supplémentaire effectué et l'abscence de vibrations permettent d'éviter tout décalage de phase du faisceau d'éclairage.

### 9.21. Utilisation d'objectifs présentant des aberrations.

Comme dans le troisième mode de réalisation, des objectifs du type décrit en 7.20 ou 7.21 peuvent être utilisés. Les modifications correspondantes des algorithmes sont similaires à celles décrites en 7.20 et 7.21. Il est bien entendu nécessaire de les adapter au mode d'obtention de l'image plane en fréquence, qui diffère notablement du troisième mode de réalisation.

### 10. Dispositif de positionnement des éléments optiques.

Les modes de réalisation décrits, et en particulier le mode de réalisation 4, nécessitent l'utilisation de nombreux positionneurs de bonne précision. Ces positionneurs sont des éléments coûteux peu adaptés à une fabrication en série et susceptibles de se dérégler avec le temps. Ces positionneurs, à l'exception des positionneurs des objectifs et de l'échantillon, ne doivent en principe être réglés qu'une fois, lors de la phase initiale de réglage.

Une solution à ce problème est d'utiliser lors de la fabrication du microscope des positionneurs amovibles. Après positionnement, chaque élément peut être fixé avec une colle appropriée. Par exemple, dans le mode de réalisation 4, on peut fixer les SLM à l'aide du dispositif des Fig.83 à 85. La partie du dispositif de fixation qui est intégrée au microscope comporte trois ensembles mobiles:

ensemble 1: il est constitué des éléments suivants, solidarisés entre eux:

- une plaque de fixation (5801) détaillée Fig.83 et présentant une surface poreuse à encoller (5802).
- le SLM (5804) fixé sur la partie non encollée (5803) de cette plaque.
- une plaque (5808) en matériau magnétisable, par exemple du fer, fixée à l'arrière de la plaque (5801)

ensemble 2: il est constitué des éléments suivants, solidarisés entre eux:

- une plaque (5805) détaillée Fig. 84 présentant une surface poreuse à encoller (5806) et un évidement (5807) en son centre
- une plaque (5809) présentant une surface à encoller (5817)
- une plaque (5810) en matériau magnétisable, par exemple du fer, fixée à la plaque (5809).

ensemble 3: il est constitué d'une plaque (5811) présentant une surface poreuse à encoller (5816)
La partie amovible du dispositif de fixation comporte les ensembles suivants:

ensemble 4: il est composé d'un bras (5815) comportant une partie magnétisable (5814) et lié à un positionneur POS1 non représenté. La partie (5814) comporte un enroulement de fil électrique autour d'un noyau en fer, non représentés. En alimentant cet enroulement on solidarise (5814) et (5810) et en interrompant l'alimentation on désolidarise ces éléments.

ensemble 5: il est composé d'un bras (5813) comportant une partie magnétisable (5812) et lié à un positionneur POS2 non représenté. La partie (5812) comporte un enroulement de fil électrique autour d'un noyau en fer, non représentés. En alimentant cet enroulement on solidarise (5808) et (5812) et en interrompant l'alimentation on désolidarise ces éléments.

La partie fixe du positionneur POS1 et l'élément 3 sont solidaires de la table optique. La partie « fixe » du positionneur POS2 est solidaire de la partie mobile du positionneur POS1. Le positionneur POS1 permet un déplacement un axe dans le sens de l'axe $\vec{i}$ et une rotation autour de l'axe $\vec{j}$. Le positionneur POS2 permet une translation suivant chacun des vecteurs et $\vec{j}$ et $\vec{k}$ une rotation autour de l'axe $\vec{i}$. Il permet également, mais avec une très faible marge de réglage, une rotation autour de l'axe $\vec{k}$ .

Pour effectuer le positionnement du système, on encolle préalablement les surfaces à encoller désignées plus haut. On alimente les aimants des parties (5812) et (5814) de manière à solidariser les parties amovibles et les parties non amovibles. On effectue le réglage normalement avec les positionneurs POS1 et POS2. On laisse le système en place suffisamment longtemps pour que la colle sèche. On cesse alors d'alimenter les aimants de manière à désolidariser les parties amovibles des parties non amovibles. Le réglage est alors définitif et la partie amovible peut être retirée.

La colle utilisée doit avoir un temps de prise suffisamment long pour ne pas gêner le réglage et doit avoir un retrait minimal lors du séchage. Il est également possible de prévoir des orifices dédiés dans les plaques (5811) et (5805) pour injecter la colle après positionnement. Cet exemple est donné pour le positionnement des SLM mais est adaptable simplement à l'ensemble des éléments devant être positionnés dans le système. En fonction du nombre de degrés de liberté requis et du type d'élément à positionner, la forme des plateformes mobiles doit être adaptée. Le principe consistant à utiliser des positionneurs amovibles et à effectuer une fixation définitive par collage reste toutefois valable.

### 11. Support adapté au transport et au maintien des réglages effectués

Les microscopes décrits dans les modes de réalisation 3 à 5 sont constitués d'un ensemble d'éléments fixés à une table optique. Lors d'un éventuel transport, des chocs même légers peuvent entraîner un dérèglement du système. Lors d'une utilisation prolongée, la poussière peut se déposer sur les différents éléments optiques.

Afin de pallier à ces inconvénients, le microscope décrit peut être protégé par un système dont le principe est représenté sur la figure 86. La table optique, qui peut être par exemple en granite, constitue la partie inférieure d'une boîte hermétiquement fermée (5901). Le fait que la boîte (5901) soit hermétiquement fermée protège l'ensemble contre la poussière. La boîte (5901) est incluse dans une boîte plus grande (5902), sans qu'il y ait contact direct entre les deux boîtes. Les deux boîtes sont séparées par des amortisseurs qui peuvent être des ballons en caoutchouc (5903) gonflés de manière appropriée, et qui sont disposés sur les 6 cotés de la boîte (5901). Ce système permet d'amortir les chocs et d'éviter une perte des réglages lors d'un transport, tout en garantissant une bonne suspension de la table optique lors de l'utilisation.

Toutefois, il est nécessaire que la partie du système constituée par les deux objectifs et leurs positionneurs reste accessible. Ceci entraîne certaines adaptations de la forme des boîtes, visibles sur la Fig. 87, adaptées içi à l'exemple constitué par les modes de réalisation 4 et 5. La paroi avant de la boîte (5901) constitue un plan vertical passant sur la Fig.63 entre les miroirs (4451) et (4452). La boîte (5901) présente une excroissance (5903) permettant la fixation des miroirs (4454)(4455)(4456) et de l'objectif (4317) en-dessous du plan de la table optique proprement dite. La boîte (5902) représentée en pointillés présente une échancrure (5904) ménageant un accès aux objectifs et à l'échantillon.

Afin que les miroirs (4453) et (4454) ainsi que les entrées des objectifs restent inaccessibles, et afin d'éviter toute entrée de poussière, la forme de la boîte (5902) doit également être adaptée localement. Cette adaptation est détaillée sur la Fig.88. La boîte présente deux excroissances (5905) et (5906) contenant respectivement les miroirs (4453) et (4454), et présente deux ouvertures liées à l'entrée des objectifs (en fait, aux montures de ces objectifs ) par des manchons en caoutchouc (6001) (6002). Les positionneurs des objectifs et de l'échantillon, non représentés, sont extérieurs à la boîte (5902).

Sur la Fig.87, les amortisseurs (5903) n'ont pas été représentés, mais ils sont présents dans toute la zone comprise entre les deux boîtes.

Un capot de fermeture permettant une protection de la partie accessible (objectifs et échantillon, ainsi que leurs positionneurs) doit également être prévu.

Dans le cas du mode de réalisation 5, la boîte externe (5901) doit comporter un compartiment supplémentaire pour contenir les éléments qui ne sont pas sur la table optique.

## 12.Variantes:

D'autres modes de réalisation sont bien entendu possibles et la description ci-dessus n'est pas limitative. Il est en particulier possible d'utiliser d'avantage d'objectifs, ou d'effectuer d'autres combinaisons des types de récepteur et de déviateur de faisceau, ou de modifier les algorithmes de recalage en phase.

## 13. Possibilités d'application industrielle:

### 13.1. Références

[Thomas]: *4-D imaging software observe living cells*, Chartes Thomas & John White, Scientific Computing World p.31, décembre 1996.
[Holton]: *Under a Microscope: Confocal Microscopy Casts New Light on the Dynamics of Life*, W.Conard Holton, Photonics Spectra p.78, février 1995.
[Pike]: *Phase measuring scanning optical microscope*, J.G. Walker & E.R.Pike, brevet WO 91/07682
[Bertero]: *Analytic inversion formula for confocal scanning microscopy*, B.Bertero, C.De Mol, E.R.Pike, Journal of the Optical Society of America vol.4 no.9, septembre 1987
[Ueki]: *Three-dimensional optical memory with a photorefractive crystal*, Y.Kawata, H.Ueki, Y.Hashimoto, S.Kawata, Applied Optics vol.34 no 20 p.4105, 10 juillet 1995
[Juskaitis]: *Differential phase-contrast microscope with a split detector for the readout system of a multilayered optical memory*, Y.Kawata, R.Juskaitis, T.Tanaka, T. Wilson & S.Kawata, Applied Optics vol.35 no 14 p.2466, 10 mai 1996
[Parthenopoulos]: *Three-dimensional optical storage memory*, D.A.Parthenopoulos & P.M.Rentzepis, Science 245, p. 843, 1989
[Strickler]: *Three dimensional optical data storage in refractive media by two-photon excitation,* J.H.Strickler & W.W. Webb, Optics Letters 16, p. 1780, 1991
[McMichael]: *Compact holographic storage demonstrator with rapid access*, I. McMichael, W. Christian, D.Pletcher, T. Y.Chang & J.H.Hong, Applied Optics vol.35 no 14 p.2375, 10 mai 1996.
[Bashaw]: *Cross-talk considerations for angular and phase-encoded multiplexing in volume holography*, M.C.Bashaw, J.F.Heanue, A.Aharoni, J.F.Walkup & L.Hesselink, Journal of the Optical Society of America B vol.11 no 9 p.1820 septembre 1994
[Barbarstatis]: *Shift multiplexing with spherical reference waves*, G. Barbarstatis. M.Levene,D.Psaltis, Applied Optics vol.35 no 14 p.2403, 10 mai 1996

### 13.2. Discussion

Les microscopes courants forment par un procédé optique une image bidimensionnelle correspondant à une coupe aggrandie de l'objet observé. Cette image peut le cas échéant être enregistrée par une caméra vidéo afin de pouvoir être restituée ultérieurement.

Il est possible de générer une image tridimensionnelle en utilisant un de ces microscopes et en faisant varier le réglage de focalisation. A chaque réglage correspond un plan de coupe différent, et une image en trois dimensions peut être reconstituée à partir de ces plans de coupe. Certains microscopes munis d'un dispositif de focalisation motorisé et d'un logiciel approprié effectuent cette opération automatiquement. De tels microscopes sont décrits par exemple dans [Thomas]. Le défaut majeur de ces microscopes est que l'image d'un plan de coupe est fortement perturbée par le contenu des autres plans.

Il existe également des microscopes confocaux, dans lesquels l'éclairage est focalisé sur un point et l'image tridimensionnelle est générée en balayant tous les points de l'objet. De tels microscopes sont décrits par exemple dans [Holton]. Ces microscopes permettent de résoudre le problème des systèmes décrits dans [Thomas], à savoir que la valeur détectée en un point donné est peu perturbée par la valeur des points proches.

Les microscopes confocaux présentent le défaut de ne pouvoir détecter que l'intensité de l'onde reçue et non sa phase. Comme beaucoup d'objets couramment observés se caractérisent essentiellement par des variations d'indice entraînant des variations de phase de l'onde transmise, ce défaut entraîne une gêne importante pour les utilisateurs qui doivent colorer les échantillons observés. C'est pourquoi des efforts ont été faits pour réaliser des microscopes confocaux sensibles à la phase de l'onde transmise [Pike]. Pour diverses raisons, ces microscopes restent peu efficaces.

L'image générée par les microscopes confocaux n'a pas la définition théorique la meilleure qui puisse en principe être obtenue à partir de l'onde reçue par l'objectif utilisé. Ceci est lié, comme indiqué en 7.18.3., au fait que la méthode de microscopie confocale filtre fortement les hautes fréquences. C'est pourquoi des efforts ont été faits pour améliorer la résolution de ces microscopes confocaux [Bertero].

Le présent microscope remédie aux défauts des microscopes précédents en termes de résolution et en termes de détection de phase. Il peut être avantageusement employé en remplacement de ces microscopes, dans l'ensemble de leurs applications.

Un domaine d'application nouveau des microscopes est la lecture de mémoires optiques tridimensionnelles.

Un premier type de mémoires optiques est celui ou les données sont enregistrées point par point dans un matériau tridimensionnel sous forme de variations des propriétés locales de ce matériau ([Ueki], [Parthenopoulos], [Strickler] ). Ces données doivent donc être lues par un microscope capable de lire des données tridimensionnelles sans que les données enregistrées dans plusieurs couches successives de matériau se perturbent les unes les autres. La perturbation de l'image d'un point par les rayons diffractés par les points voisins se traduit donc içi par une interférence intersymboles. En général les auteurs ont utilisé des couches peu nombreuses à forte distance les unes des autres, ce qui limite ces interférences. Cependant, si une quantité de données plus importante devait être enregistrée dans un volume donné, les méthodes classiques de microscopie se révéleraient insuffisantes. En particulier dans le cas de [Strickler] et [Ueki] les données sont enregistrées sous forme de variations d'indice et le microscope confocal est particulièrement mal adapté à leur lecture. C'est pourquoi des efforts ont été faits pour améliorer le système de lecture de données [Juskaitis].

Le présent microscope constitue la solution de lecture permettant une intégration maximale de ce type de mémoires. En effet l'image qu'il permet d'obtenir prend en compte l'indice et diminue très fortement l'interférence intersymboles. Dans le cas idéal ou l'ensemble du faisceau issu de l'échantillon serait détecté, ce qui peut être réalisé en augmentant le nombre ou l'ouverture des objectifs, l'interférence intersymboles est entièrement supprimée.

Un autre type de mémoires optiques est constitué par les mémoires holographiques. Par exemple, dans le document [McMichael], les données sont lues en illuminant l'objet constitué par la mémoire optique avec un faisceau parallèle de direction variable et en détectant l'onde issue de l'échantillon pour chaque direction du faisceau d'éclairage. Une direction du faisceau d'éclairage correspond à une page de données et chaque point de la représentation fréquentielle bidimensionnelle de l'onde issue de l'objet pour une onde d'éclairage donnée correspond à un bit stocké dans la mémoire optique. Chaque point de la représentation bidimensionnelle de l'onde issue de l'objet correspondant par ailleurs à un point de la représentation tridimensionnelle de l'objet lui-même, un bit stocké dans la mémoire optique correspond donc à un point de la représentation fréquentielle tridimensionnelle de cette mémoire optique. Une analyse de ce type de mémoires en termes de représentations fréquentielles peut être trouvée dans [Bashaw]

Le présent microscope peut donc avantageusement être utilisé pour lire de telles mémoires optiques, les bits stockés en mémoire correspondant directement à des points de la représentation fréquentielle tridimensionnelle obtenue par le présent microscope à partir de l'objet constitué par la mémoire optique. Le système d'écriture de la mémoire optique doit toutefois être prévu pour ne pas utiliser les points de la représentation fréquentielle tridimensionnelle qui ne sont pas obtenus par le présent microscope, sauf à augmenter le nombre d'objectifs utilisés pour éviter la non-détection de certaines fréquences.

D'autres types de mémoires optiques holographiques existent [Barbarstatis] . D'une manière générale, le présent microscope permet l'obtention d'une représentation de l'objet observé qui serait « parfaite » dans le cas idéal ou les objectifs utilisés couvriraient l'ensemble de l'espace autour de l'objet. Dans le cas ou la représentation obtenue est parfaite, les données stockées en mémoire et détectées sous la forme d'une représentation fréquentielle tridimensionnelle de l'objet peuvent être ensuite restituée sous n'importe quelle forme: il est possible de simuler, en utilisant la représentation connue de l'objet constitué par la mémoire optique, l'onde qui serait obtenue à partir de n'importe quel éclairage ou par n'importe quelle autre méthode de lecture (à la longueur d'onde utilisée par le microscope). Tous les type de mémoire optique peuvent donc être lus par le présent microscope, moyennant dans le cas général des opérations supplémentaires permettant la reconstitution des données à partir de la représentation fréquentielle de l'objet constitué par la mémoire optique. Dans le cas ou la représentation n'est pas parfaite, des précautions adéquates doivent être prises pour prendre en compte les « zones d'ombre » de la représentation fréquentielle de l'objet.

**Revendications**

1. Microscope comprenant :

   a) des moyens pour générer un faisceau laser,
   b) des moyens pour séparer le faisceau laser en un faisceau de référence et un faisceau d'éclairage,
   c) des moyens optiques pour rendre parallèle le faisceau d'éclairage et pour le diriger vers un objet observé qui génère une onde diffractée,
   d) des moyens optiques pour superposer l'onde diffractée et l'onde de référence, pour obtenir au moins une figure d' interférences,
   e) au moins un capteur pour détecter et enregistrer la figure d'interférences,
   f) des moyens pour calculer, à partir de la figure d'interférences enregistrée, une représentation fréquentielle de l'onde diffractée, correspondant à la phase et à l'amplitude de chaque composante de la décomposition en ondes planes de l'onde diffractée,
   g) un déflecteur de faisceau dirigeant le faisceau d'éclairage suivant une première direction puis suivant une seconde direction différant de la première dans un repère lié audit capteur, pour obtenir une première représentation fréquentielle de l'onde diffractée correspondant à la première direction de l'onde d'éclairage, et une seconde représentation fréquentielle de l'onde diffractée correspondant à la seconde direction de l'onde d'éclairage,
   h) des moyens pour superposer la première représentation fréquentielle et la seconde représentation fréquentielle pour obtenir une représentation fréquentielle tridimensionnelle de l'objet observé,

   **caractérisé par le fait qu'**il comprend des moyens pour appliquer un premier décalage de phase à la première représentation fréquentielle, ledit premier décalage de phase étant tel que la partie de la représentation fréquentielle tridimensionnelle qui correspond à la première représentation fréquentielle ait sensiblement la même référence de phase que la partie de la représentation fréquentielle tridimensionnelle qui correspond à la deuxième représentation fréquentielle.

2. Microscope selon la revendication 1, dans lequel les moyens pour appliquer le premier décalage de phase sont des moyens de calcul.

3. Microscope selon la revendication 2, dans lequel lesdits moyens de calcul comprennent des moyens pour multiplier la première représentation fréquentielle par un nombre complexe dont la phase correspond au premier déclalage de phase.

4. Microscope selon une des revendications 2 ou 3,

   - dans lequel le déflecteur de faisceau redirige le faisceau d'éclairage vers une troisième direction pour obtenir une troisième représentation fréquentielle de l'onde diffractée, puis redirige le faisceau d'éclairage vers une quatrième direction pour obtenir une quatrième représentation fréquentielle de l'onde diffractée,
   - comprenant des moyens pour superposer la première représentation fréquentielle et la troisième représentation fréquentielle pour obtenir une première sous-représentation de l'objet observé, et des moyens pour superposer la seconde représentation fréquentielle et la quatrième représentation fréquentielle pour obtenir une seconde sous-représentation de l'objet observé,
   - dans lequel lesdits moyens pour appliquer un premier décalage de phase comprennent des moyens pour appliquer un décalage de phase à la première sous-représentation de l'objet observé, ce qui décale la phase de la première représentation fréquentielle incluse dans la première sous-représentation,
   - comprenant des moyens pour superposer la première sous-représentation et la seconde sous-représentation pour obtenir la représentation fréquentielle tridimensionnelle de l'objet, superposant ainsi la première représentation fréquentielle incluse dans la première sous-représentation et la seconde représentation fréquentielle incluse dans la seconde sous-représentation.

5. Microscope selon une des revendications 1 à 4, comprenant des moyens pour rendre reproductible la différence de phase entre l'onde de référence et l'onde d'éclairage.

6. Microscope selon la revendication 5, dans lequel lesdits moyens pour appliquer un premier décalage de phase comprennent un système optoélectronique pour décaler la phase de l'onde d'éclairage et/ou de l'onde de référence, ce qui décale la phase de la première représentation fréquentielle.

**7.** Microscope selon la revendication 5, dans lequel lesdits moyens pour appliquer un premier décalage de phase comprennent des moyens d'ajustement pour ajuster la position d'un élément optique de manière à ajuster simultanément les décalages de phase appliqués à l'onde d'éclairage pour une pluralité de directions de l'onde d'éclairage.

**8.** Microscope selon une des revendications 1 à 7, comprenant également des moyens pour déterminer le premier décalage de phase.

**9.** Microscope selon la revendication 8, dans lequel les moyens pour déterminer le premier décalage de phase comprennent des moyens pour déterminer la différence de phase entre au moins un premier point de la seconde représentation fréquentielle et un second point de la première représentation fréquentielle, lesdits premier et second points étant superposés dans la représentation fréquentielle tridimensionnelle et formant donc un couple de points associés.

**10.** Microscope selon la revendication 9. dans lequel lesdits moyens pour déterminer le premier décalage de phase calculent un nombre complexe dont la phase est une évaluation de ladite différence de phase.

**11.** Microscope selon la revendication 10. dans lequel lesdits moyens pour déterminer le premier décalage de phase calculent une moyenne pondérée. sur une pluralité de couples de premier et second points associés, du produit de la valeur complexe de la seconde représentation fréquentielle au premier point, par le conjugué de la valeur complexe de la première représentation fréquentielle au second point, pour obtenir ledit nombre complexe.

**12.** Microscope suivant une des revendications 1 à 11, comprenant des moyens pour appliquer un second décalage de phase à la seconde représentation fréquentielle de l'onde diffractée.

**13.** Microscope suivant la revendication 12, dans lequel lesdits moyens pour appliquer un premier et un second décalage de phase comprennent des moyens pour diviser la première représentation fréquentielle par la valeur de la première représentation fréquentielle en un premier point, et des moyens pour diviser la seconde représentation fréquentielle par la valeur de la seconde représentation fréquentielle en un second point, ou lesdits premier et second points sont superposés au point d'origine dans la représentation fréquentielle tridimensionnelle.

**14.** Microscope suivant une des revendications 1 à 13, comprenant également des moyens pour multiplier la première et la seconde représentation fréquentielle par un ensemble de valeurs complexes pour annuler l'aberration sphérique.

**15.** Microscope suivant une des revendications 1 à 14, comprenant :

a) un premier objectif de microscope disposé sur le trajet du faisceau d'éclairage dirigé vers l'objet observé pour la première direction de l'onde d'éclairage,
b) un second objectif de microscope disposé sur le trajet du faisceau d'éclairage dirigé vers l'objet observé pour la seconde direction de l'onde d'éclairage.
c) dans lequel ledit récepteur comprend une première unité pour détecter l'onde provenant de l'objet observé et ayant traversé le premier objectif, et une seconde unité pour enregistrer l'onde provenant du second objet observé et ayant traversé le second objectif.

**16.** Microscope suivant une des revendications 1 à 15, comprenant :

a) des moyens pour polariser l'onde d'éclairage suivant deux directions orthogonales entre elles,
b) des moyens pour analyser l'onde diffractée suivant deux directions orthogonales entre elles.

**17.** Microscope suivant une des revendications 1 à 16, comprenant :

a) un déflecteur de faisceau primaire pour générer des faibles variations de direction d'un faisceau parallèle,
b) un condenseur pour transformer ces faibles variations en de larges variations de la direction d'un faisceau d'éclairage.

**18.** Microscope suivant la revendication 17, dans lequel ledit déflecteur de faisceau primaire comprend un premier modulateur spatial contrôlé pour générer à partir d'un faisceau parallèle incident de direction donnée, un faisceau sortant dont la direction est contrôlée par l'état du modulateur.

**19.** Microscope suivant la revendication 18, dans lequel ledit premier modulateur spatial est un modulateur binaire.

**20.** Microscope selon une des revendications 18 ou 19, comprenant :

a) une première lentille intermédiaire située sur le chemin du faisceau sortant,
b) un diaphragme et/ou un second modulateur spatial placé dans le plan focal image de la première lentille intermédiaire, pour éliminer les faisceaux parasites générés par le premier modulateur spatial, et
c) une seconde lentille intermédiaire située après ledit diaphragme sur le chemin du faisceau sortant, pour rendre parallèle le faisceau sortant du diaphragme et/ou du second modulateur spatial.

**21.** Microscope selon une des revendications 1 à 20. dans lequel ladite au moins une figure d'interférences est composée de plusieurs figures d'interférences obtenues chacune pour une phase différente du faisceau de référence.

**22.** Procédé d'utilisation d'un microscope interférométrique laser doté d'un faisceau d'éclairage parallèle éclairant un objet observé et d'un faisceau de référence n'éclairant pas l'objet observé, et comprenant les étapes suivantes :

a) une étape de détection d'au moins une première figure d'interférences produite pour une première direction du faisceau d'éclairage,
b) une étape de calcul, à partir de la première figure d'interférences, d'une représentation fréquentielle de l'onde diffractée, correspondant à la phase et à l'amplitude de chaque composante de la décomposition en ondes planes de l'onde diffractée,
c) une étape consistant à modifier la direction du faisceau d'éclairage, pour obtenir une seconde représentation fréquentielle de l'onde diffractée correspondant à une seconde direction de l'onde d'éclairage,
d) une étape de calcul, à partir de la seconde figure d'interférences, d'une seconde représentation fréquentielle de l'onde diffractée,
e) une étape de superposition de la première représentation fréquentielle et de la seconde représentation fréquentielle, pour obtenir une représentation fréquentielle tridimensionnelle de l'objet observé,

**caractérisé par le fait qu'**il comprend une étape d'application d' un premier décalage de phase à la première représentation fréquentielle, ledit premier décalage de phase étant tel que la partie de la représentation fréquentielle tridimensionnelle qui correspond à la première représentation fréquentielle ait sensiblement la même référence de phase que la partie de la représentation fréquentielle tridimensionnelle qui correspond à la deuxième représentation fréquentielle.

**Patentansprüche**

**1.** Mikroskop mit:

a) Mitteln zur Erzeugung eines Laserstrahls,
b) Mitteln zur Zweiteilung des Laserstrahls in einen Referenzstrahl und einen Beleuchtungsstrahl,
c) optischen Mitteln zur Parallelausrichtung des Beleuchtungsstrahls und zur Lenkung dieses Strahls auf ein beobachtetes Objekt, welches eine gebeugte Welle erzeugt,
d) optischen Mitteln zur Überlagerung der gebeugten Welle und der Referenzwelle, um mindestens eine Interferenzfigur zur erhalten,
e) mindestens einem Sensor zur Messung und Aufzeichnung der Interferenzfigur,
f) Mitteln zur Errechnung, aufgrund der aufgezeichneten Interferenzfigur, einer Frequenzdarstellung der gebeugten Welle, die der Phase und der Amplitude jeder Zerlegungskomponente der gebeugten Welle in ebene Wellen entspricht,
g) einem Strahlablenker zum Lenken des Beleuchtungsstrahls gemäß einer ersten Richtung und dann einer zweiten Richtung, die von der ersten in einem mit besagtem Sensor verbundenen Koordinatensystem abweicht, um so eine erste Frequenzdarstellung der gebeugten Welle entsprechend der ersten Richtung der Beleuchtungswelle und eine zweite Frequenzdarstellung der gebeugten Welle entsprechend der zweiten Richtung der Beleuchtungswelle zu erhalten,
h) Mitteln zur Überlagerung der ersten Frequenzdarstellung und der zweiten Frequenzdarstellung, um eine dreidimensionale Frequenzdarstellung des beobachteten Objektes zu erhalten,

**dadurch gekennzeichnet, dass** es Mittel enthält, um eine erste Phasenverschiebung auf die erste Frequenzdarstellung aufzubringen, wobei besagte erste Phasenverschiebung derartig ist, dass der der ersten Frequenzdarstellung entsprechende Teil der dreidimensionalen Frequenzdarstellung merklich die gleiche Phasenreferenz wie der der zweiten Frequenzdarstellung entsprechende Teil der dreidimensionalen Frequenzdarstellung besitzt.

2. Mikroskop nach Anspruch 1, wobei die Mittel zum Aufbringen der ersten Phasenverschiebung Rechenmittel sind.

3. Mikroskop nach Anspruch 2, wobei besagte Rechenmittel Einrichtungen zur Multiplikation der erste Frequenzdarstellung mit einer komplexen Zahl, deren Phase der ersten Phasenverschiebung entspricht, enthalten.

4. Mikroskop nach einem der Ansprüche 2 oder 3,

- wobei der Strahlablenker den Beleuchtungsstrahl in eine dritte Richtung umlenkt, um eine dritte Frequenzdarstellung der gebeugten Welle zu erhalten, und dann den Beleuchtungsstrahl in eine vierte Richtung umlenkt, um eine vierte Frequenzdarstellung der gebeugten Welle zu erhalten,
- mit Mitteln zur Überlagerung der ersten Frequenzdarstellung und der dritten Frequenzdarstellung, um eine erste Teildarstellung des beobachteten Objektes zu erhalten, und Mitteln zur Überlagerung der zweiten Frequenzdarstellung und der vierten Frequenzdarstellung, um eine zweite Teildarstellung des beobachteten Objektes zu erhalten,
- wobei besagte Mittel zum Aufbringen einer ersten Phasenverschiebung Einrichtungen zum Aufbringen einer Phasenverschiebung auf die erste Teildarstellung des beobachteten Objektes enthalten, was zu einer Phasenverschiebung der ersten, in der ersten Teildarstellung enthaltenen Frequenzdarstellung führt,
- mit Mitteln zur Überlagerung der ersten Teildarstellung und der zweiten Teildarstellung zur Erhaltung der dreidimensionalen Frequenzdarstellung des Objektes, wobei hiermit die in der ersten Teildarstellung enthaltene erste Frequenzdarstellung und die in der zweiten Teildarstellung enthaltene zweite Frequenzdarstellung überlagert werden.

5. Mikroskop nach einem der Ansprüche 1 bis 4 mit Mitteln, um die Phasendifferenz zwischen Referenzwelle und Beleuchtungswelle reproduzierbar zu gestalten.

6. Mikroskop nach Anspruch 5, wobei besagte Mittel zum Aufbringen einer ersten Phasenverschiebung ein optoelektronisches System zur Phasenverschiebung der Beleuchtungswelle und/oder Referenzwelle enthalten, was zur Phasenverschiebung der erste Frequenzdarstellung führt.

7. Mikroskop nach Anspruch 5, wobei besagte Mittel zum Aufbringen einer ersten Phasenverschiebung Einrichtungen zur Lageeinstellung eines optischen Elementes enthalten, so dass die auf die Beleuchtungswelle aufgebrachten Phasenverschiebungen für eine Vielzahl von Richtungen der Beleuchtungswelle gleichzeitig angepasst werden.

8. Mikroskop nach einem der Ansprüche 1 bis 7, das ferner Mittel zur Bestimmung der ersten Phasenverschiebung enthält.

9. Mikroskop nach Anspruch 8, wobei die Mittel zur Bestimmung der ersten Phasenverschiebung Einrichtungen zur Festlegung der Phasendifferenz zwischen mindestens einem ersten Punkt in der zweiten Frequenzdarstellung und einem zweiten Punkt in der ersten Frequenzdarstellung enthalten, wobei besagter erster und zweiter Punkt in der dreidimensionalen Frequenzdarstellung überlagert sind und somit ein verbundenes Punktepaar bilden.

10. Mikroskop nach Anspruch 9, wobei besagte Mittel zur Bestimmung der ersten Phasenverschiebung eine komplexe Zahl, deren Phase eine Schätzung besagter Phasendifferenz ist, errechnen.

11. Mikroskop nach Anspruch 10, wobei besagte Mittel zur Bestimmung der ersten Phasenverschiebung über eine Vielzahl verbundener erster und zweiter Punktpaare einen gewichteten Mittelwert des Produktes des komplexen Wertes der zweiten Frequenzdarstellung am ersten Punkt mit dem konjugierten komplexen Wert der ersten Frequenzdarstellung am zweiten Punkt errechnen, um die besagte komplexe Zahl zu erhalten.

12. Mikroskop nach einem der Ansprüche 1 bis 11 mit Mitteln zum Aufbringen einer zweiten Phasenverschiebung auf die zweite Frequenzdarstellung der gebeugten Welle.

**13.** Mikroskop nach Anspruch 12, wobei besagte Mittel zum Aufbringen einer ersten und einer zweiten Phasenverschiebung Einrichtungen zum Teilen der ersten Frequenzdarstellung durch den Wert der ersten Frequenzdarstellung an einem ersten Punkt und Einrichtungen zum Teilen der zweiten Frequenzdarstellung durch den Wert der zweiten Frequenzdarstellung an einem zweiten Punkt enthalten, wobei sich besagter erster und zweiter Punkt im Nullpunkt der dreidimensionalen Frequenzdarstellung überlagern.

**14.** Mikroskop nach einem der Ansprüche 1 bis 13, das ferner Mittel zur Multiplizierung der ersten und der zweiten Frequenzdarstellung mit einem Satz komplexer Werte zur Unterdrückung der sphärischen Aberration enthält.

**15.** Mikroskop nach einem der Ansprüche 1 bis 14 mit:

a) einem ersten Mikroskopobjektiv auf dem Lichtweg des Beleuchtungsstrahles, welcher auf das beobachtete Objekt für die erste Richtung der Beleuchtungswelle gerichtet ist,
b) einem zweiten Mikroskopobjektiv auf dem Lichtweg des Beleuchtungsstrahles, welcher auf das beobachtete Objekt für die zweite Richtung der Beleuchtungswelle gerichtet ist,
c) wobei der besagte Sensor eine erste Einheit zur Messung der Welle aus dem beobachteten Objekt, die das erste Objektiv durchlaufen hat und eine zweite Einheit zur Aufzeichnung der Weite aus dem zweiten beobachteten Objekt, die das zweite Objektiv durchlaufen hat, enthält.

**16.** Mikroskop nach einem der Ansprüche 1 bis 15 mit:

a) Mitteln zur Polarisierung der Beleuchtungswelle gemäß zweier untereinander orthogonaler Richtungen,
b) Mitteln zur Analyse der gebeugten Welle gemäß zweier untereinander orthogonaler Richtungen.

**17.** Mikroskop nach einem der Ansprüche 1 bis 16 mit:

a) einem primären Strahlablenker zur Erzeugung geringer Richtungsänderungen eines Parallelstrahls,
b) einem Kondensor zur Umwandlung dieser geringen Richtungsänderungen in bedeutende Richtungsänderungen eines Beleuchtungsstrahls.

**18.** Mikroskop nach Anspruch 17, wobei der besagte primäre Strahlablenker mit einem ersten geregelten Raummodulator versehen ist, um aus einem eintretenden Parallelstrahl gegebener Richtung einen austretenden Strahl, dessen Richtung durch den Zustand des Modulators bestimmt wird, zu erzeugen.

**19.** Mikroskop nach Anspruch 18, wobei besagter erster Raummodulator ein binärer Modulator ist.

**20.** Mikroskop nach einem der Ansprüche 18 oder 19 mit:

a) einer ersten Zwischenlinse auf dem Lichtweg des austretenden Strahls,
b) einer Blende und/oder einem zweiten Raummodulator in der fokalen Bildebene der ersten Zwischenlinse, um die vom ersten Raummodulator erzeugten Störstrahlen zu beseitigen, und
c) einer hinter besagter Blende auf dem Lichtweg des austretenden Strahls angeordneten zweiten Zwischen linse zur Parallelausrichtung des aus der Blende und/oder aus dem zweiten Raummodulator austretenden Strahls.

**21.** Mikroskop nach einem der Ansprüche 1 bis 20, wobei die besagte mindestens eine Interferenzfigur aus mehreren Interterenzfiguren besteht, weiche jeweils bei einer verschiedenen Phase des Referenzstrahls erzeugt worden sind.

**22.** Einsatzverfahren eines Interferometrie-Lasermikroskopes mit einem parallelen, ein beobachtetes Objekt beleuchtenden Beleuchtungsstrahl und einem das beobachtete Objekt nicht beleuchtenden Referenzstrahl, bestehend aus folgenden Schritten:

a) einem Erfassungsschritt mit mindestens einer ersten Interferenzfigur, welche für eine erste Richtung des Beleuchtungsstrahls erzeugt wird,
b) einem Schritt zur Berechnung, aufgrund der ersten Interferenzfigur, einer Frequenzdarstellung der gebeugten Welle, die der Phase und der Amplitude jeder Zerlegungskomponente der gebeugten Welle in ebene Wellen entspricht,

c) einem Schritt zur Richtungsänderung des Beleuchtungsstrahles, um eine zweite Frequenzdarstellung der gebeugten Welle entsprechend einer zweiten Richtung der Beleuchtungswelle zu erhalten,

d) einem Schritt zur Berechnung, aufgrund der zweiten Interferenzfigur, einer zweiten Frequenzdarstellung der gebeugten Welle,

e) einem Schritt zur Überlagerung der ersten Frequenzdarstellung und der zweiten Frequenzdarstellung, um eine dreidimensionale Frequenzdarstellung des beobachteten Objektes zu erhalten,

**dadurch gekennzeichnet, dass** es einen Schritt zum Aufbringen einer ersten Phasenverschiebung auf die erste Frequenzdarstellung umfasst, wobei besagte erste Phasenverschiebung derartig ist, dass der der ersten Frequenzdarstellung entsprechende Teil der dreidimensionalen Frequenzdarstellung merklich die gleiche Phasenreferenz wie der der zweiten Frequenzdarstellung entsprechende Teil der dreidimensionalen Frequenzdarstellung besitzt.

## Claims

1. Microscope comprising:

   a) means to generate a laser beam,

   b) means for splitting the laser beam into a reference beam and an illuminating beam,

   c) optical means for rendering the illuminating beam parallel and for directing it towards an observed object which generates a diffracted wave,

   d) optical means to superimpose the diffracted wave and the reference wave, to produce at least an interference pattern,

   e) at least one receiver for receiving and recording the interference pattern,

   f) means for calculating, from the recorded interference pattern, a frequency representation of the diffracted wave, corresponding to phases and amplitudes of plane wave components of the diffracted wave,

   g) a beam deflector for directing the illuminating beam towards a first direction then towards a second direction differing from the first direction in a coordinate system bound to said receiver, for obtaining a first frequency representation of the diffracted wave corresponding to the first direction of the illuminating wave, and a second frequency representation of the diffracted wave corresponding to the second direction of the illuminating wave,

   h) means for superimposing the first frequency representation and the second frequency representation to obtain a three-dimensional frequency representation of the observed object,

   **characterized by** the fact that it comprises means for applying a first phase shift to the first frequency representation, wherein the first phase shift is such that the part of the three-dimensional frequency representation corresponding to the first frequency representation has substantially the same phase reference as the part of the three-dimensional frequency representation corresponding to the second frequency representation.

2. Microscope according to claim 1, in which the means for applying the first phase shift are calculation means.

3. Microscope according to claim 2, wherein said calculation means comprise means for multiplying the first frequency representation by a complex number having a phase corresponding to the first phase shift.

4. Microscope according to one of claims 2 or 3,

   - wherein the beam deflector redirects the illuminating beam towards a third direction for obtaining a third frequency representation of the diffracted wave, and thereafter redirects the illuminating beam towards a fourth direction for obtaining a fourth frequency representation of the diffracted wave,
   - further comprising means for superimposing the first frequency representation and the third frequency representation to obtain a first sub-representation of the observed object, and means for superimposing the second frequency representation and the fourth frequency representation to obtain a second sub-representation of the observed object,
   - wherein said means for applying a first phase shift comprise means for applying a phase shift to the first sub-representation of the observed object, thus shifting the phase of the first frequency representation included in the first sub-representation,
   - comprising means for superimposing the first sub-representation and the second sub-representation to obtain the three-dimensional frequency representation of the object, thus superimposing the first frequency representation included in the first sub-representation and the second frequency representation included in the second sub-representation.

5. Microscope according to one of claims 1 to 4, further comprising means for causing the phase difference between the illuminating wave and the reference wave to be reproducible.

6. Microscope according to claim 5, wherein said means for applying a first phase shift comprise an optoelectronic device for shifting the phase of the illuminating and/or the reference wave, thus shifting the phase of the first frequency representation.

7. Microscope according to claim 5, wherein said means for applying a first phase shift comprise adjustment means for adjusting the position of an optical element, so as to simultaneously adjust the phase shifts applied to the illuminating wave for a plurality of directions of the illuminating wave.

8. Microscope according to one of claims 1 to 7, further comprising means for determining the first phase shift.

9. Microscope according to claim 8, wherein said means for determining the first phase shift comprise means for determining the phase difference between at least a first point of the second frequency representation and a second point of the first frequency representation, said first and second points being superimposed in the three-dimensional frequency representation, and thus being a pair of associated points.

10. Microscope according to claim 9, wherein said means for determining the first phase shift calculate a complex number having a phase which is an evaluation of said phase difference.

11. Microscope according to claim 10, wherein said means for determining the first phase shift calculate a weighted average, over a plurality of the pairs of first and associated second points, of the product of the complex value of the second frequency representation at the second point by the conjugate of the complex value of the first frequency representation at the first point, for obtaining said complex number.

12. Microscope according to one of claims 1 to 11, further comprising means for applying a second phase shift to the second frequency representation of the diffracted wave.

13. Microscope according to claim 12, wherein said means for applying the first and second phase shifts comprise means for dividing the first frequency representation by the value of the first frequency representation at a first point, and means for dividing the second frequency representation by the value of the second frequency representation at a second point, wherein the first and second points are superimposed to the point of origin in the three-dimensional frequency representation.

14. Microscope according to one of claims 1 to 13, further comprising means for multiplying the first and second frequency representations by a set of complex values for cancelling spherical aberration.

15. Microscope according to one of claims 1 to 14, further comprising:

a) a first microscope objective lens disposed along the path of the illuminating beam directed towards the observed object for the first direction of the illuminating wave,
b) a second microscope objective lens disposed along the path of the illuminating beam directed towards the observed object for the second direction of the illuminating wave,
c) said at least one receiver comprising a first unit for recording the wave coming from the observed object after passing through the first objective, and at least a second unit for recording the wave coming from the observed object after passing through the second objective.

16. Microscope following one of claims 1 to 15, further comprising

a) means for polarizing the illuminating wave in two directions orthogonal to each other,
b) means for analyzing the diffracted wave in two directions orthogonal to each other.

17. Microscope according to one of claims 1 to 16, wherein the beam deflector comprises:

a) a primary beam deflector for generating small variations of the direction of a parallel beam,
b) a condenser lens for transforming these small variations into large variations of the direction of an illuminating beam,

18. Microscope according to claim 17, wherein said primary beam deflector comprises a first spatial modulator controlled so as to generate an exiting beam from an incident parallel beam of given direction, the direction of the exiting beam being controlled by the state of the modulator.

19. Microscope according to claim 18, wherein said spatial modulator is a binary modulator.

20. Microscope according to one of claims 18 or 19, further comprising:

a) a first intermediate lens located along the path of the exiting beam,
b) a diaphragm and/or a second spatial modulator placed in the image focal plane of the first intermediate lens to eliminate spurious beams generated by the first spatial modulator, and
c) a second intermediate lens located along the path of the exiting beam downstream of said diaphragm to convert the beam exiting from the diaphragm and/or the second spatial modulator into a parallel beam.

21. Microscope according to one of the claims 1 to 20, wherein said at least one interference pattern is made up of several interference patterns, each of said several interference patterns being obtained for a different phase of the reference beam.

22. Method for using a laser interferometric microscope equipped with a parallel illuminating beam lighting an observed object and with a reference beam not lighting the observed object, comprising the following steps:

a) detection of at least a first interference pattern produced for a first direction of the illuminating beam,
b) calculation, from the first interference pattern, of a frequency representation of the diffracted wave, corresponding to the phases and the amplitudes of each component of the decomposition into plane waves of the diffracted wave,
c) modifying the direction of the illuminating beam to obtain a second frequency representation of the diffracted wave corresponding to one second direction of the illuminating beam,
d) calculation, from the second interference pattern, of a second frequency representation of the diffracted wave,
e) superposition of the first frequency representation and of the second frequency representation, to obtain a three-dimensional frequency representation of the observed object,

**characterized by** the fact that it comprises a step of applying a first phase shift to the first frequency representation, said first phase shift being such that the part of the three-dimensional frequency representation which corresponds to the first frequency representation has substantially the same phase reference as the part of the three-dimensional frequency representation which corresponds to the second frequency representation.

**Fig.1**

**Fig.2**

**Fig.3**

EP 1 071 974 B1

219

**Fig.4**

**Fig.5**

**Fig.6**

501

500

503

502

Fig.7

504

502

Fig.8

505

506

Fig.9

Fig.10

Règle tension du piézoélectrique à 0

attend 20 ms

Règle tension du piézoélectrique à $Umax/2-diff\_bas$

attend 40 ms

met le processus en priorité maximale
lance l'acquisition

attend fin d'exposition 1ere image,
stockée dans un tableau $I[0,0,i,j]$

Règle tension du piézoélectrique à $Umax/2-diff\_bas+diff\_bas/2$

attend fin d'exposition 2e image,
stockée dans un tableau $I[0,1,i,j]$

Règle tension du piézoélectrique à $Umax/2$

attend fin d'exposition 3e image,
stockée dans un tableau $I[1,0,i,j]$

Règle tension du piézoélectrique à $Umax/2+(diff\_bas+diff\_haut)/4$

attend fin d'exposition 4e image,
stockée dans un tableau $I[1,1,i,j]$

Règle tension du piézoélectrique à $Umax/2+diff\_haut$

attend fin d'exposition 5e image,
stockée dans un tableau $I[2,0,i,j]$

Règle tension du piézoélectrique à $Umax/2+diff\_haut+diff\_haut/2$

attend fin d'exposition 6e image,
stockée dans un tableau $I[2,1,i,j]$

règle la tension du piézoélectrique à $Umax$

remet le processus en priorité normale

Fig.11

800 Acquisition des images

801 calcul des représentations fréquentielles

802 calcule valeur maximale de *S0*

*rapport*=0, *nombre_valeurs*=0, *j*=0

*i*=0

804 $|S0[i,j]| \geq 0.5 \; mod\_max$ ?  non

oui

803

805 $rapport+ = \dfrac{S0[i,j]}{S1[i,j]}$

*nombre_valeurs*+ = 1

*i*+= 1

*i<hpix* ?  oui

non

*j*+= 1

*j<vpix* ?  oui

non

806 *rapport=rapport/nombre_valeurs*

807 calcule moyenne *rapport_moy*

808 affiche *rapport* et *rapport_moy*

809 fin de programme ?  non

oui

Fig.12

Règle tension du piézoélectrique à 0

attend 20 ms

Ouvre commutateur
Règle tension du piézoélectrique à *Umax/2-diff_bas*

attend 40 ms

met le processus en priorité maximale
lance l'acquisition

attend fin d'exposition 1ere image,
stockée dans un tableau $I[0,0,i,j]$

ferme commutateur

attend fin d'exposition 2e image,
stockée dans un tableau $I[0.1,i,j]$

Ouvre commutateur
Règle tension du piézoélectrique à *Umax/2*

attend fin d'exposition 3e image,
stockée dans un tableau $I[1.0,i,j]$

ferme commutateur

attend fin d'exposition 4e image,
stockée dans un tableau $I[1.1,i,j]$

Ouvre commutateur
Règle tension du piézoélectrique à *Umax/2+diff_haut*

attend fin d'exposition 5e image,
stockée dans un tableau $I[2.0,i,j]$

ferme commutateur

attend fin d'exposition 6e image,
stockée dans un tableau $I[2.1,i,j]$

règle la tension du piézoélectrique à *Umax*

remet le processus en priorité normale

Fig.13

226

1000 → acquisition de l'image

1001 → génération du tableau *H* indiquant les pixels pour lesquels la position fermée du commutateur doit être utilisée

1002 → calcul de la représentation fréquentielle

1003 → limitation de taille et modifications optionnelles

1004 → Transformation de Fourier inverse

1005 → affichage et enregistrement de l'image

1006 → fin de programme ?

non

oui

# Fig. 14

1101

1100

Fig.15

1102

Fig.16

Fig. 17

enregistrement dans *fich_acquis* de: *nbim,hel,vel*

1300

$k=0$

1301 → Temps d'attente

1302 → acquisition de l'image

1303 → génération du tableau $H$ indiquant les pixels pour lesquels la position fermée du commutateur doit être utilisée

1304 → calcul de *rapport_moy*

1305 → calcul de la représentation fréquentielle $S$

1306 → Calcul *imax,jmax*

$k+= 1$

1307 → calcul de la position objectif et du déplacement des moteurs

1308 → déplacement des moteurs

1309 → calcul du tableau moyenné $M_k$

1310 → calcul de *imax_moy,jmax_moy,max_moy*

1311 → normalisation de $M_k$

1312 → enregistrement dans fichier *fich_acquis*

1313 → $k <nbim$ ?  oui

non

# Fig. 18

fich_acquis

(1400) — Centrage des représentations fréquentielles bidimensionnelles

fich_centré

(1401) — Echange de l'axe $nj$ et de l'axe image $k$

fich_ech1

(1402) — génération de la représentation fréquentielle tridimensionnelle et calcul de transformée de Fourier bidimensionnelle sur les plans ($nk,ni$)

fich_calc

(1403) — Echange de l'axe $nj$ et de l'axe $nk$

fich_ech2

(1404) — calcul de transformée de Fourier monodimensionnelle sur l'axe $nj$

fich_rep

Fig.19

Fig.20

(1600)

lecture de *hel*, *vel*, *nbim*

$k=0$

(1601)

transfert en mémoire centrale depuis *fich_acquis* de la représentation fréquentielle numéro $k$

(1602)

calcul de la représentation fréquentielle centrée

(1603)

Enregistrement dans le fichier *fich_centré*

$k=k+1$

(1604)

$k<nbim$ ?

oui

non

Fig.21

Fig.22

$nj=0$

1800 — transfert d'un plan $(ni,k)$ en mémoire interne.

1801 — initialisations tableaux $D_{nj}$ et *Poids*

$k=0$

$ni=0$

1802 — point $(ni,nj,k)$ dans la zone observable ?　non

1803 — oui　Calcul de $nk$

1804 —
$$D_{nj}[ni,nk]+ = T_k[ni,nj]$$
$$Poids[ni,nk]+ = 1$$

$ni+=1$

$ni<fdim?$　oui

non

$k+=1$

$k<nbim?$　oui

non

1805 — Division par le poids

1806 — Transformée de Fourier bidimensionnelle inverse du tableau $D_{nj}$

1807 — enregistrement du tableau $D_{nj}$ dans le fichier *fich_calc*

$j+=1$

$j<fdim?$　oui

non

Fig.23

Fig.24

**Fig.25**

Règle tension du piézoélectrique à 0

attend 20 ms

Règle tension du piézoélectrique à  $Umax/2-diff\_bas$

attend 40 ms

met le processus en priorité maximale
lance l'acquisition

attend fin d'exposition 1ere image,
stockée dans un tableau $I[0,i,j]$

Règle tension du piézoélectrique à  $Umax/2$

attend fin d'exposition 2e image,
stockée dans un tableau $I[1,i,j]$

Règle tension du piézoélectrique à  $Umax/2+diff\_haut$

attend fin d'exposition 3e image,
stockée dans un tableau $I[2,i,j]$

règle la tension du piézoélectrique à $Umax$

remet le processus en priorité normale

Fig.26

FIG.27

coupe selon (2262)

coupe selon (2261)

2216

2215

2217

2218

2222

2219

2221

2220

2214

2263

FIG.28

FIG.29

FIG.30

FIG.31

FIG.32

2601    2602    2603    2604

R1      LP      R2      POL

FIG.33

2607

2606    2612    2613

2605    2610

2614

R1      LP      R2      POL

2608    2609    2611

2615

FIG.34

FIG.35

FIG.36

2803

2802

2801

2804

R1    PD    R2    POL

2805

2806

2807

2808

D

2809

**FIG.37**

→ D7 → D6 → D5 → D4 → D3 → D2 → D1 → D0 →

D0b →

**FIG.38**

FIG.39

FIG.40

FIG.41:

FIG.42:

3002

3004

3003

3001

FIG.43:

3007

3005

FIG.44:

3008

3006

FIG.45

direction du faisceau

FIG.46

FIG.47

FIG.48

$$maxb = -10^{20}$$

$ui=0$

$vi=0$

$u=ucentre\_ini-ularg/2+ularg*(ui+0.5)/ upixels$
$v= vcentre\_ini-vlarg/2+vlarg*( vi+0.5)/ vpixels$

calcul $max,xbar,ybar$ (Fig.50) — 3401

$max>maxb?$ — non

oui

$maxb=max$
$ucentre=u$
$vcentre=v$

$vi+=1$

oui $vi<=vpixels-1?$

non

$ui+=1$

oui $ui<=upixels-1?$

non

$mode=3?$ — non

oui

$mode=2$
$u=ucentre$
$v=vcentre$

calcul $max,xbar,ybar$ (Fig.50) — 3402

FIG.49

FIG.50

FIG.51

FIG.52

FIG.53

FIG.54

FIG.55

FIG.56

FIG.57

4101

4103

4105

4104

4102

FIG.58

4112

4111

4114

4113

FIG.59

$$\left|a\left(\frac{ouv}{n_v}\right)b\left(\frac{ouv}{n_v}\right)\right| \ge \frac{pixels}{4.ularg.vlarg} ?$$

oui

non

4201

calcul de $s_o$

$$upixels = 2|a(s_o)|ularg$$
$$vpixels = 2|b(s_o)|vlarg$$

$$upixels = \sqrt{\frac{\left|a\left(\dfrac{ouv}{n_v}\right)\right|ularg}{\left|b\left(\dfrac{ouv}{n_v}\right)\right|vlarg}}\sqrt{pixels}$$

$$vpixels = \sqrt{\frac{\left|b\left(\dfrac{ouv}{n_v}\right)\right|vlarg}{\left|a\left(\dfrac{ouv}{n_v}\right)\right|ularg}}\sqrt{pixels}$$

limitation des valeurs de
upixels et vpixels

4202

# Fig.60

Fig.61

Fig.62

Fig.63

Fig.64

Fig.65

Fig.66

4801 (E)    4806 (F)    4803    4804 (E)

4800    4802

4805

Fig.67

(E)    (F)    (E)

Fig.68

Fig.69

Fig.70

FIG.71:

FIG.72

Fig.73

Fig.74

5301

5302

FR
+

FO
+

FE
+

Fig.75

5303

5304

FO
+

FR
+

+
FE

Fig.76

$pos1 = 0$
$pos2 = 0$

$p = 0$ — 5407

commande des éléments mécaniques

$i = 0$

$j = 0$

$\left(i - \dfrac{N_{pix}}{2}\right)^2 + \left(j - \dfrac{N_{pix}}{2}\right)^2 \leq R_{ouv}^2$ ?  — non

oui

Mesure coordonnées courantes $x, y$ — 5401

$(x - i)^2 + (y - j)^2 \leq lim$ ? — oui — 5402

non

calcul du déplacement des moteurs — 5403

déplacement des moteurs — 5404

enregistrement des coordonnées en pas moteurs

$j \mathrel{+}= 1$ — 5405

$j \leq N_{pix} - 1$ ? — oui

non

$i \mathrel{+}= 1$

$i \leq N_{pix} - 1$ ? — oui

non

$p \mathrel{+}= 1$

$p < 2$ ? — oui

non

retour au point d'origine — 5406

Fig.77

Fig.78

Fig.79

| Interrupteur ouvert / Capteur | (5109) $r=0$ | (5104) $r=1$ |
|---|---|---|
| (5174) $t=0$ $s=0$ | $w_{0,0,0} = -\vec{i} - \vec{j}$ | $w_{0,1,0} = -\vec{i} + \vec{j}$ |
| (5171) $t=1$ | $w_{0,0,1} = -\vec{i} + \vec{j}$ | $w_{0,1,1} = \vec{i} + \vec{j}$ |
| (5198) $t=0$ $s=1$ | $w_{1,0,0} = \vec{i} - \vec{j}$ | $w_{1,1,0} = \vec{i} + \vec{j}$ |
| (5201) $t=1$ | $w_{1,0,1} = \vec{i} + \vec{j}$ | $w_{1,1,1} = -\vec{i} + \vec{j}$ |

Fig.80

273

Fig.81

Fig.82

Fig.83

Fig.84

Fig.85

5901    5903    5902

Fig.86

5901    5902

5904

5905

4319

4317

5903

5906

Fig.87

5902

5905

4453

6001

4318

6002

5906

4454

Fig.88

Fig. 89

Fig. 90

Fig. 91